Europäisches Patentamt

European Patent Office

Office européen des brevets

(19)

(11) Publication number: **0 039 227**

A2

# EUROPEAN PATENT APPLICATION

(12)

(21) Application number: 81301836.3

(22) Date of filing: 27.04.81

(51) Int. Cl.³: **G 06 F 13/00**

(30) Priority: 25.04.80 US 143561
25.04.80 US 143651
25.04.80 US 143681
25.04.80 US 143710
25.04.80 US 143974
25.04.80 US 143981
25.04.80 US 143982

(43) Date of publication of application:
04.11.81 Bulletin 81/44

(84) Designated Contracting States:
CH DE FR GB IT LI NL SE

(71) Applicant: DATA GENERAL CORPORATION
Route 9
Westboro Massachusetts 01581(US)

(72) Inventor: Alsing, Carl J.
35 Front Street
Hopkington Massachusetts 01748(US)

(72) Inventor: Coyle, Richard W
166 Ivy Lane
Whitinsville Massachusetts 01588(US)

(72) Inventor: Druke, Michael B.
32 Longmeadow Road
Chelmsford Massachusetts 01824(US)

(72) Inventor: Epstein, David I.
27 Larkspur Way
Natick Massachusetts 01760(US)

(72) Inventor: Guyer, James M.
447 Boston Post Road
Marlboro Massachusetts 01752(US)

(72) Inventor: Henry, Carl
2316 Shakespeare Street
Houston Texas(US)

(72) Inventor: Holberger, Kenneth D.
21 Institute Road
N. Grafton Massachusetts 01536(US)

(72) Inventor: Holland, Charles J.
61 Maple Lane
Northboro Massachusetts 01531(US)

(72) Inventor: Keating, David L.
7 Larkspur Way
Natick Massachusetts 01760(US)

(72) Inventor: Rasala, Edward
3 Nottingham Road
Westboro Massachusetts 01581(US)

(72) Inventor: Reilly, Paul
223 South Street
Foxboro Massachusetts 02035(US)

(72) Inventor: Rosen, Josh
9A Lincoln Street
Westboro Massachusetts(US)

(72) Inventor: Staudaher, Steven M.
10 Monroe Street
Northboro Massachusetts 01532(US)

(72) Inventor: Veres, James E.
8 Greenview Street
208 Framingham Massachusetts 01701(US)

(72) Inventor: Wallach, Steven
5 Lomes Circle
Framingham Massachusetts 01730(US)

(72) Inventor: West, Thomas
Stow Road
Boxboro Massachusetts(US)

(72) Inventor: Ziegler, Michael L.
166 Ivy Lane
Whitinsville Massachusetts 01588(US)

(74) Representative: Pears, David Ashley et al,
REDDIE & GROSE 16 Theobalds Road
London WC1X 8PL(GB)

(54) Data processing system.

./...

Croydon Printing Company Ltd.

(57) The data processing system handles thirty-two bit logical addresses which can be derived from either sixteen bit logical addresses or thirty-two bit logical addresses, the latter being translated into physical addresses by an address translation unit 14. The system includes an instruction processor 12 for decoding macro-instructions of both a basic and an extended instruction set, each macro-instruction containing in itself selected bit patterns which uniquely identify which type of instruction is to be decoded. The decoded macro-instructions provide the starting address of one or more micro-instructions, which address is supplied to a micro-instruction sequencing unit 13 which appropriately decodes a selected field of each micro-instruction to obtain each successive micro-instruction. The system uses hierarchical memory storage using eight storage segments (rings), access to the rings being controlled in a privileged manner according to different levels of privilege. The memory system uses a bank of main memory modules 16 which interface with the central processor system via a dual port cache memory 18, block data transfers between the main memory and the cache memory being controlled by a bank controller unit 18.

FIG.1

## DATA PROCESSING SYSTEM

This invention relates generally to a data processing system of the kind defined in the introductory part of claim 1 and, more particularly, to such a system which can handle 32 bit logical addresses at a size and cost which is not significantly greater than that of systems which at present handle only 16 bit logical addresses.

Presently available data processing systems which are often referred to as belonging to the "mini-computer" class normally handle logical addresses and data words which are 16 bits in length. As used herein, the term "logical" address, sometimes referred to by those in the art as a "virtual" address, is used to denote an address that is programmer visible, an address which the programmer can manipulate. In contrast, a "phusical" address is the address of a datum location in the main memory of a data processing system. Operating data processing systems utilize appropriate translation tables for converting logical addresses to physical addresses.

Such mini-computers have been successfully used in many applications and provide a high degree of data processing capability at reasonable cost. Examples of such systems which have found favor in the marketplace are those known as the "Nova" and the "Eclipse" systems designed and developed by Data General Corporation of Westboro, Massachusetts. The Nova and Eclipse family of mini-computers are described in the publications available from Data General Corporation which are listed as the first four items in Appendix A incorporated as part of this specification.

The Nova system provides a logical address space of 64 kilobytes (the prefix "kilo" more accurately represents 1024, or $2^{10}$) and the Eclipse system also provides a logical address space of 64 kilobytes, both being proven systems for handling many applications at reasonable cost. It is desirable in the development of improved systems to provide for an orderly growth to an even larger logical address space than presently available in Nova and

- 2 -

Eclipse systems. Such an extended logical address base permits a larger set of instructions to be utilized by the system, the enlarged instruction set being capable of including substantially all of the basic instructions now presently available in the prior Nova and Eclipse systems as well as a large number of additional, or extended, instructions which take advantage of the increased or expanded logical address space.

Accordingly, such an improved system should be designed to be responsive to software which has been previously designed for use in Nova and Eclipse systems so that those presently having a library of Nova and Eclipse software, representing a substantial investment, can still use such software in the improved, expanded address system. The improved system also would provide for a greater flexibility in performance at a reasonable cost so as to permit more on-line users at a larger number of on-line terminals to utilize the system. The expanded address space would further permit the system to support more extensive and sophisticated programs devised specifically therefor, as well as to support all of the previous programs supported by the unextended Nova or Eclipse systems.

The invention is defined in the characterising part of claim 1 and further features and aspects of the invention are defined in the further claims.

The preferred embodiment of the invention utilizes a unique combination of central processor and memory units, the processor comprising an address translation unit, an instruction processor unit, an arithmetic logic unit and a microsequencing unit, while the memory unit includes a system cache unit, (i.e. the temporary storage means), a main memory unit and a bank controller unit for controlling data transfers therebetween. The system handles thirty-two bit logical addresses which can be derived from either sixteen bit or thirty-two bit addresses. Unique means are provided for translating the thirty-two bit logical addresses. The system uses hierarchical memory storage, wherein information is stored in different segment storage regions (rings), access to the rings being controlled in a privileged manner so that access to different rings are governed by different levels of privilege.

- 3 -

The memory system uses a main memory comprising a plurality of memory moduels each having a plurality of memory planes. The cache memory unit has two parts and the main memory normally interfaces with the remainder of the system via this dual port system cache memory unit, block data transfers between the main memory and the system cache being controlled by the bank controller unit.

Macro-instructions are decoded using a programmable read-only-memory means which is capable of decoding instructions of two types, i.e., instructions from a first basic instruction set or instructions from a second extended instruction set, the instruction which is being decoded containing in itself selected bit patterns which uniquely identify which type of instruction is to be decoded.

The decoded instructions provide the starting address of one or more incroinstructions, which starting address is supplied to the microinstruction sequencing unit which appropriately decodes a selected field of each microinstruction for determining the address of the next successive microinstruction, such address being suitably selected from a plurality of microaddress sources.

The overall system includes means responding to certain macro-instructions which perform unique operations indigenous to the overall system.

The invention will be described in more detail, by way of example, with reference to the accompanying drawings, in which:

Figure 1 shows a block diagram of the overall data processing system of the invention as described therein;

Figure 2 shows a block diagram of the system cache unit of the system of Figure 1;

Figure 3 shows a block diagram of the bank controller unit of the system of Figure 1;

Figure 4 shows a block diagram of a module of the main memory unit of the system of Figure 1;

Figures 5-44 show specific logic circuitry for implementing the system cache of Figure 2;

Figures 45-63 show specific logic circuitry for implementing the bank controller of Figure 3;

Figures 64-78 show specific logic circuitry for implementing the main memory modules of Figure 4;

Figures 79-81 show block diagrams which represent the address translation unit of the system of Figure 1;

Figures 82-100 show specific logic circuitry for implementing the address translation unit of Figures 79-81;

Figures 101-106 show block diagrams which represent the instruction processor unit of the system of Figure 1;

Figures 107-136 show specific logic circuitry for implementing the instruction processor unit of Figures 101-106;

Figures 137 and 138 show block diagrams of the micro-sequencer unit of the system of Figure 1;

Figures 139-153 show specific logic circuitry for implementing the microsequencer unit of Figures 137 and 138;

Figure 154 shows a block diagram of a representative arithmetic logic unit of the system of Figure 1;

Figure 155 shows a diagrammatic representation of certain memory locations used to explain the operation of a particular macro-instruction used in the system of Figure 1; and

Figure 156 shows a diagrammatic representation of certain operations performed in the macro-instruction discussed with reference to Figure 155.

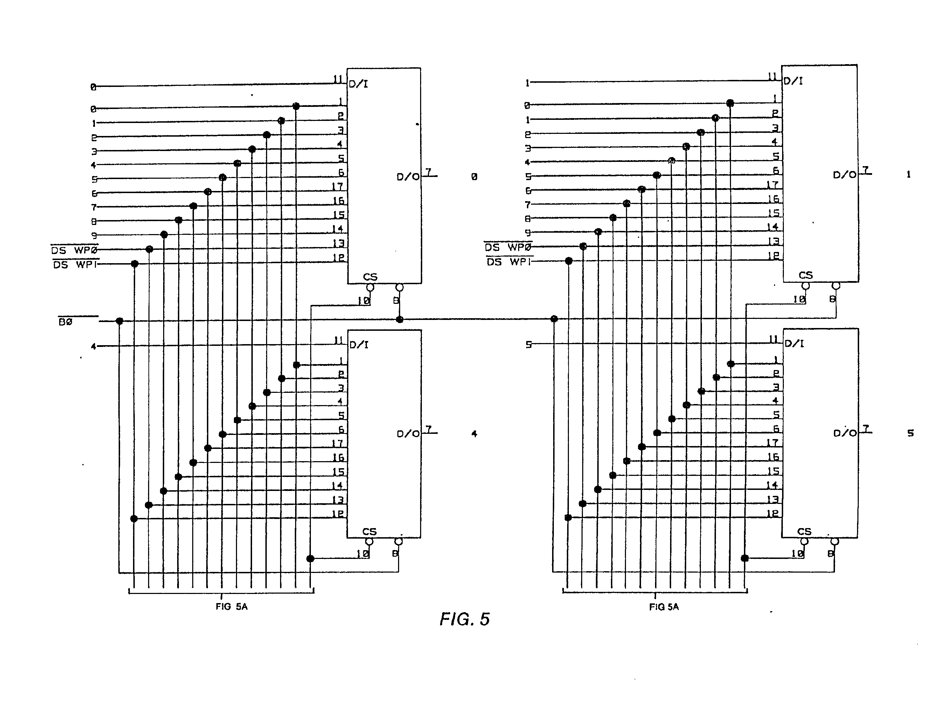

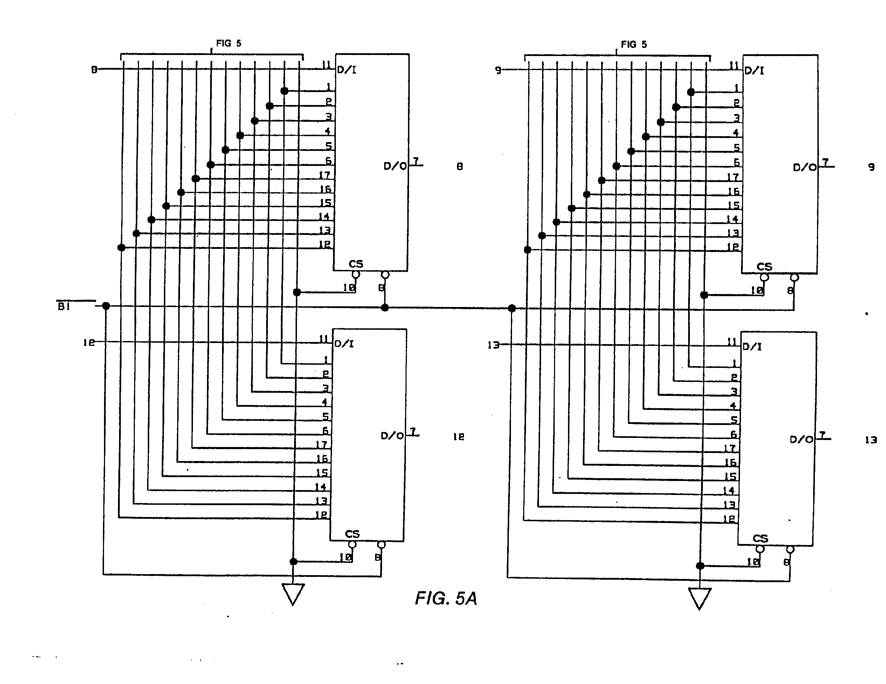

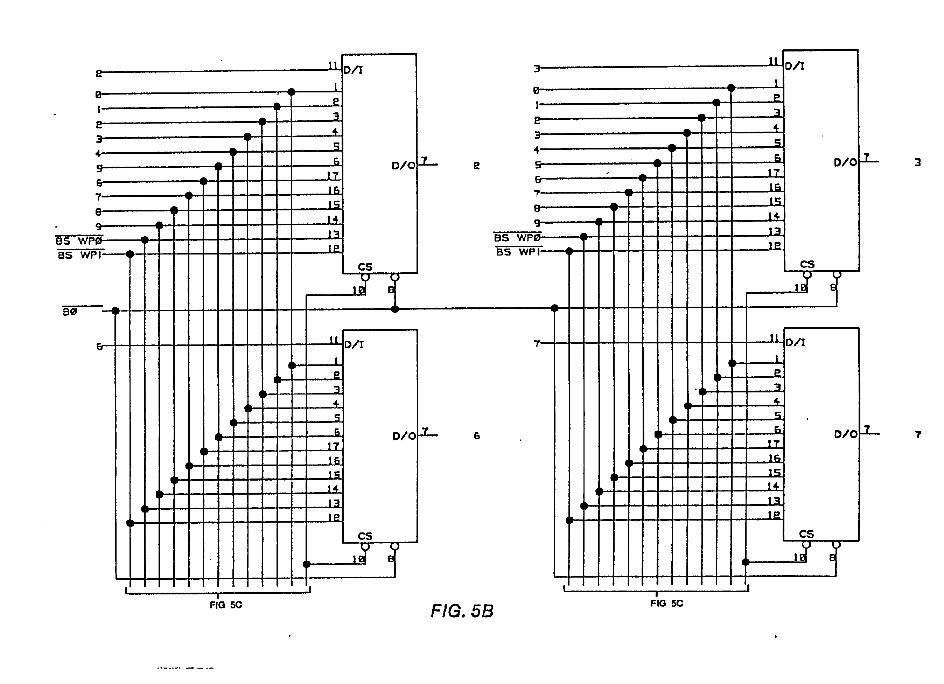

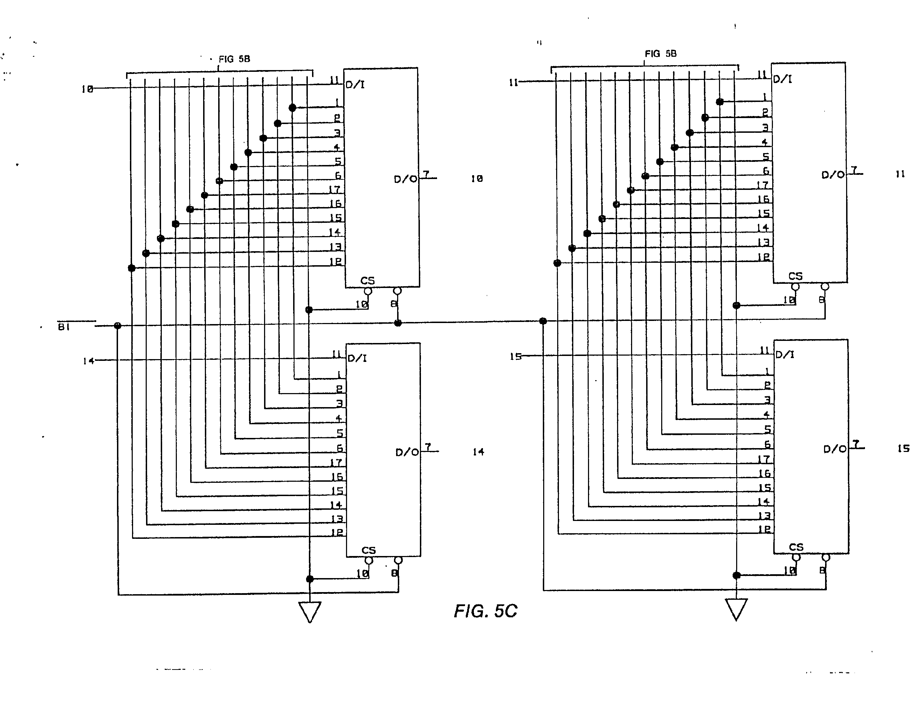

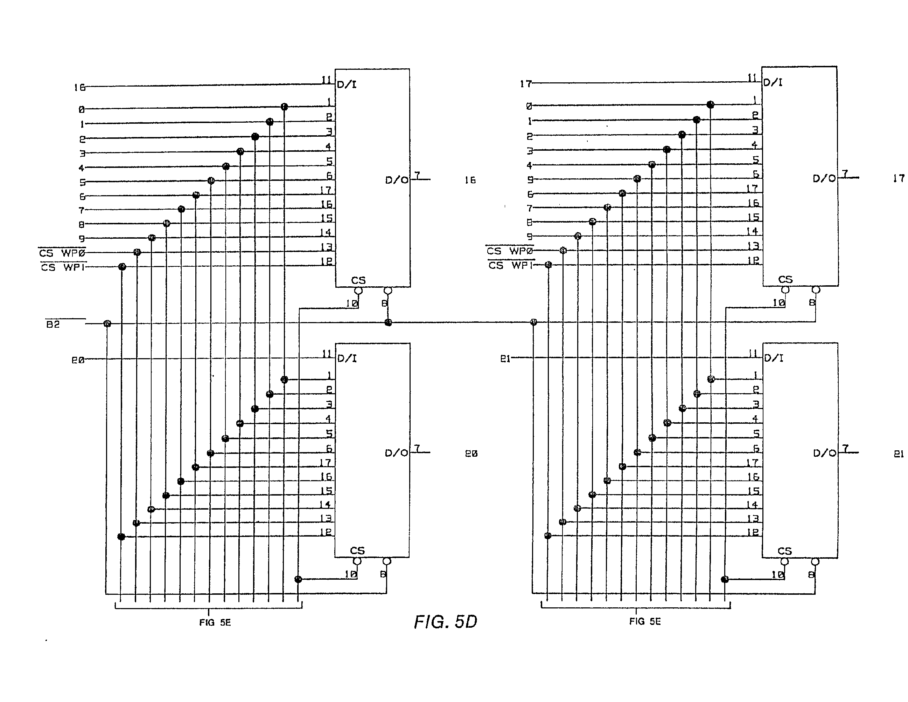

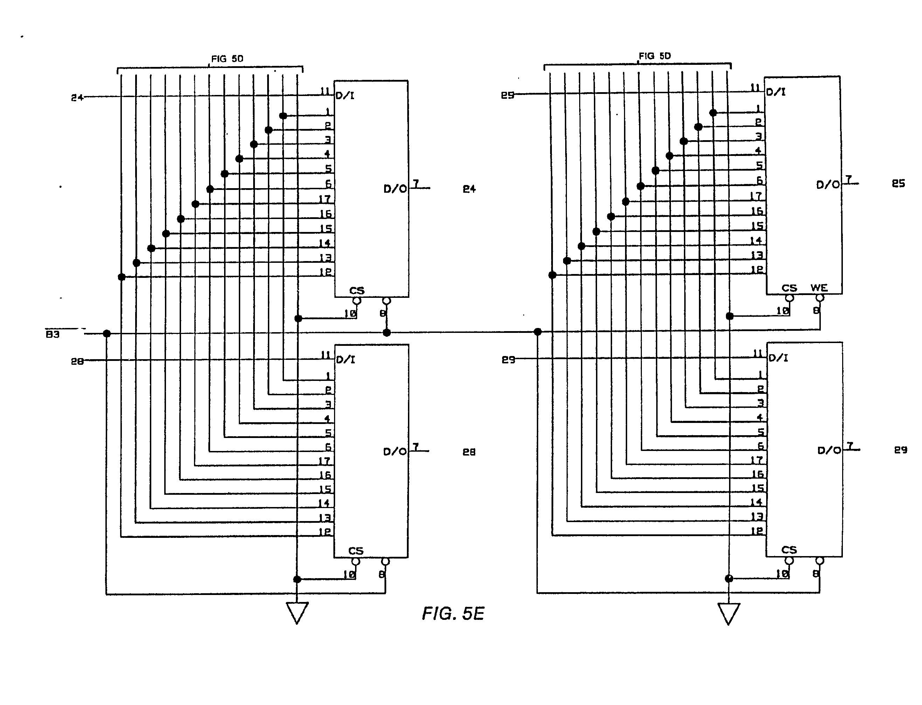

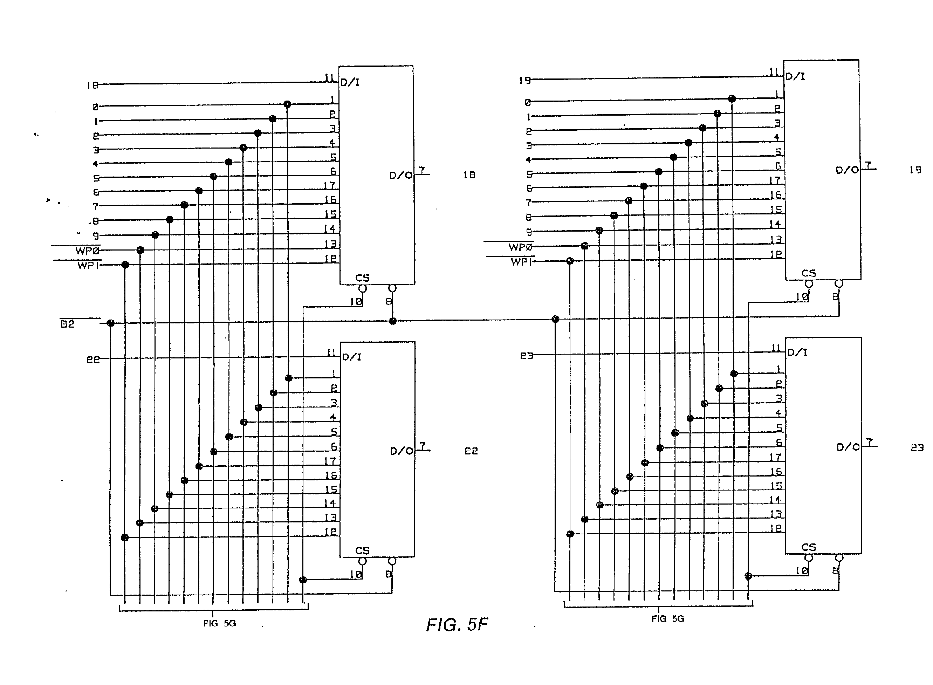

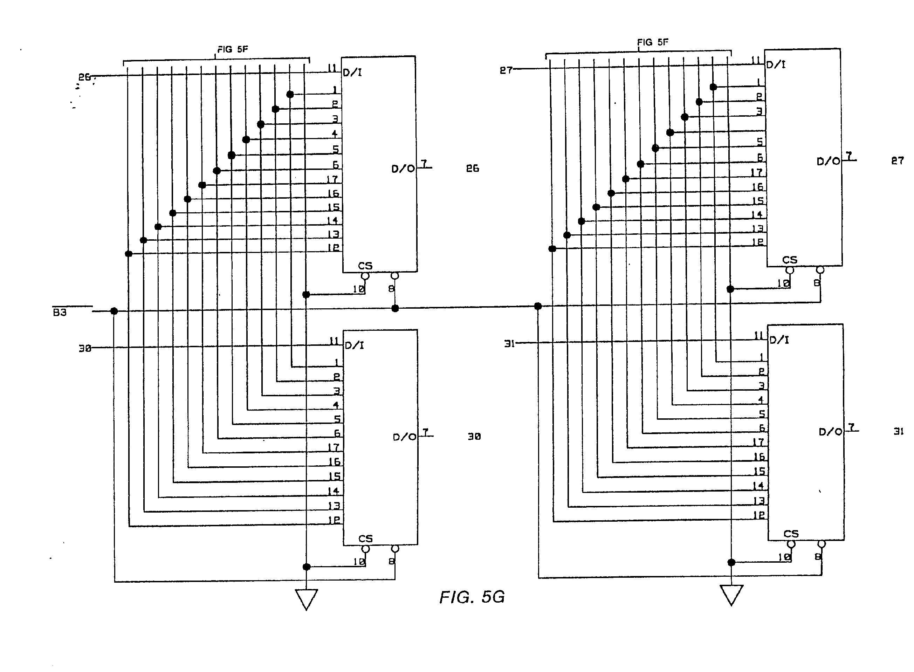

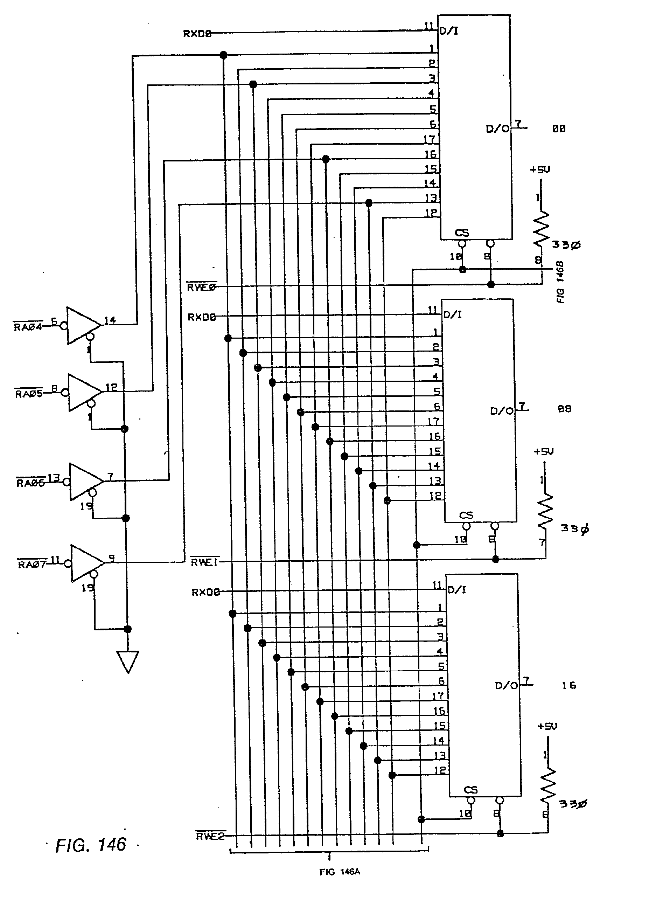

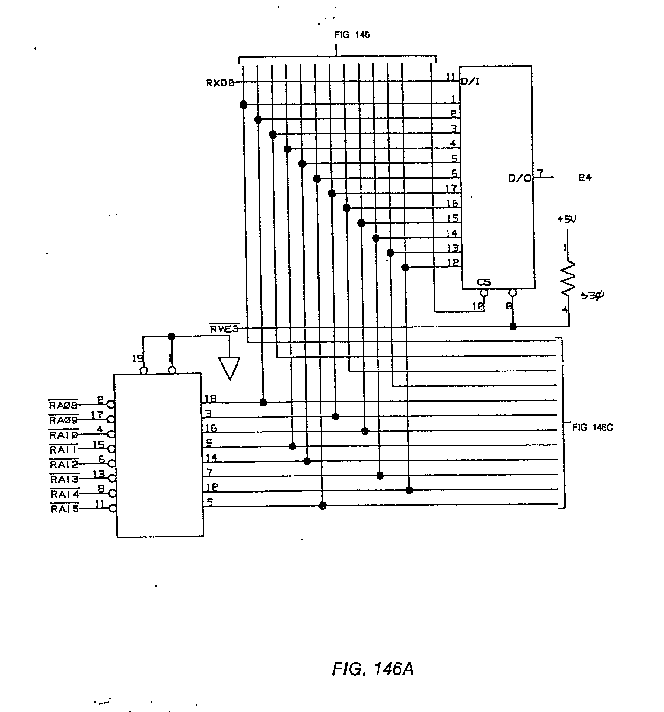

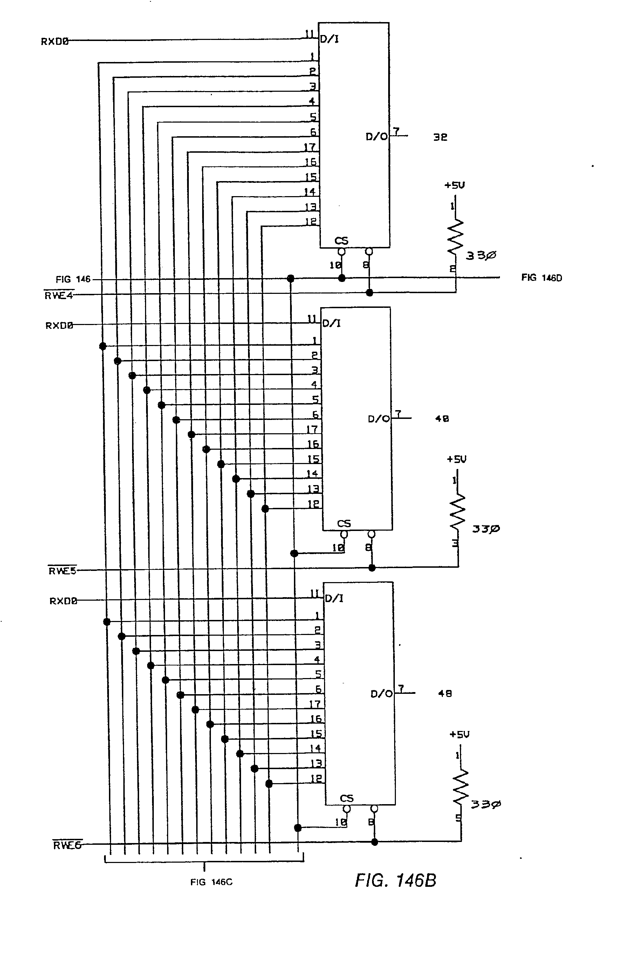

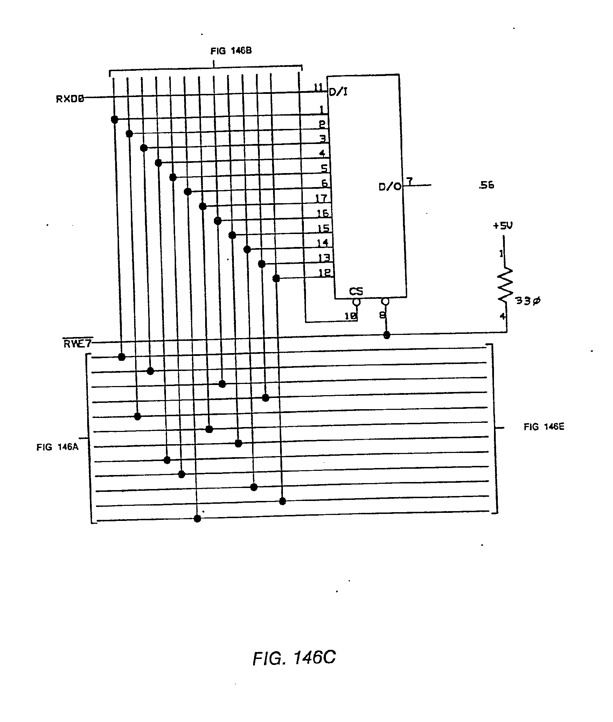

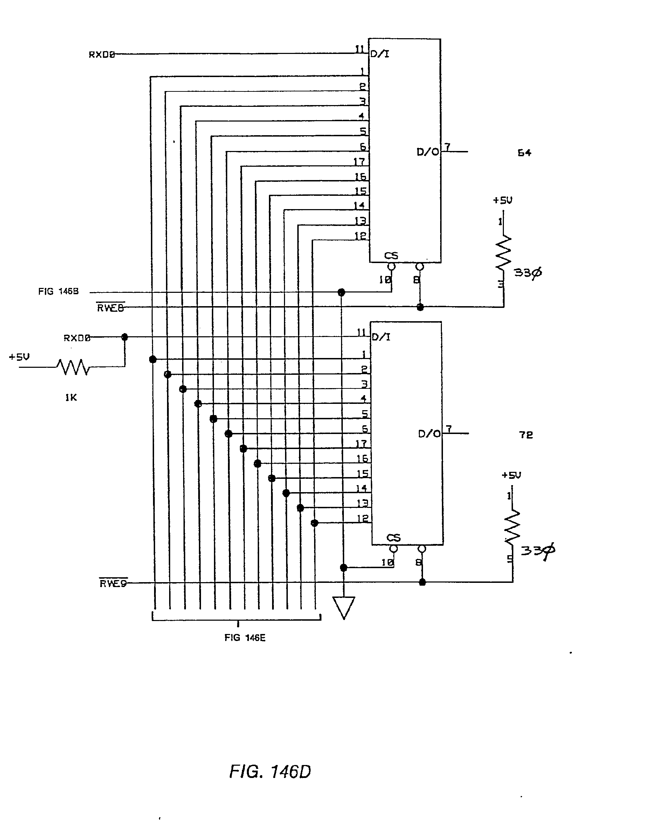

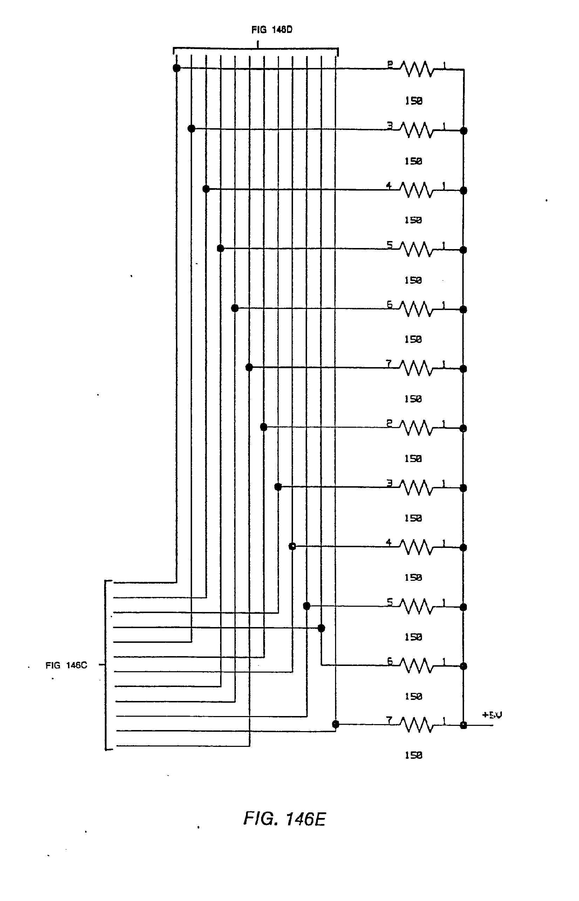

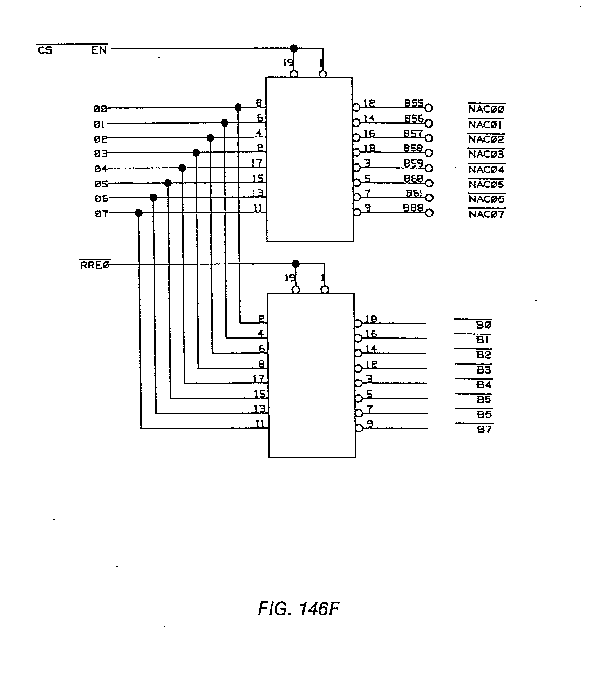

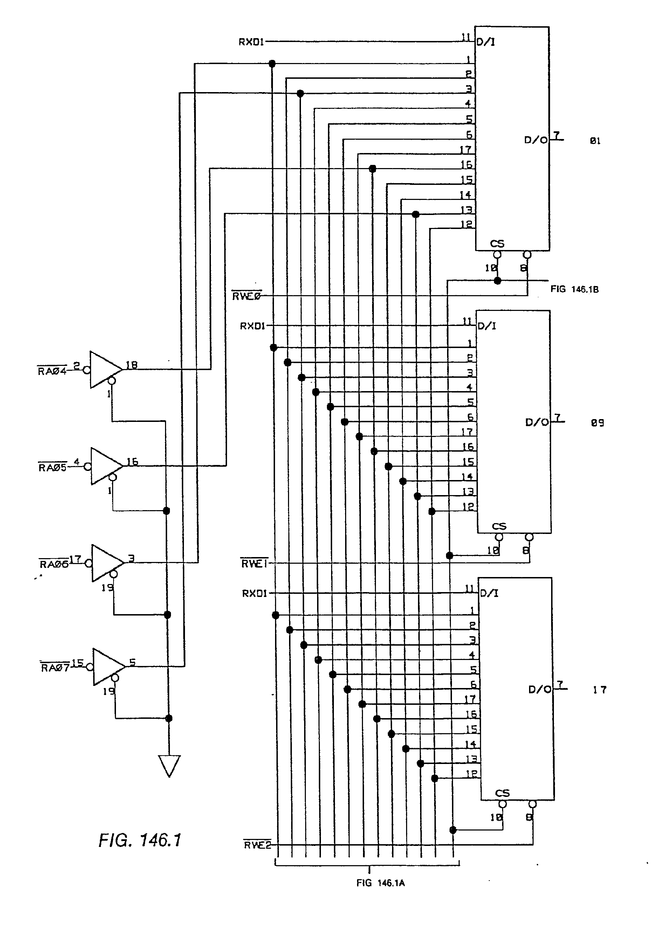

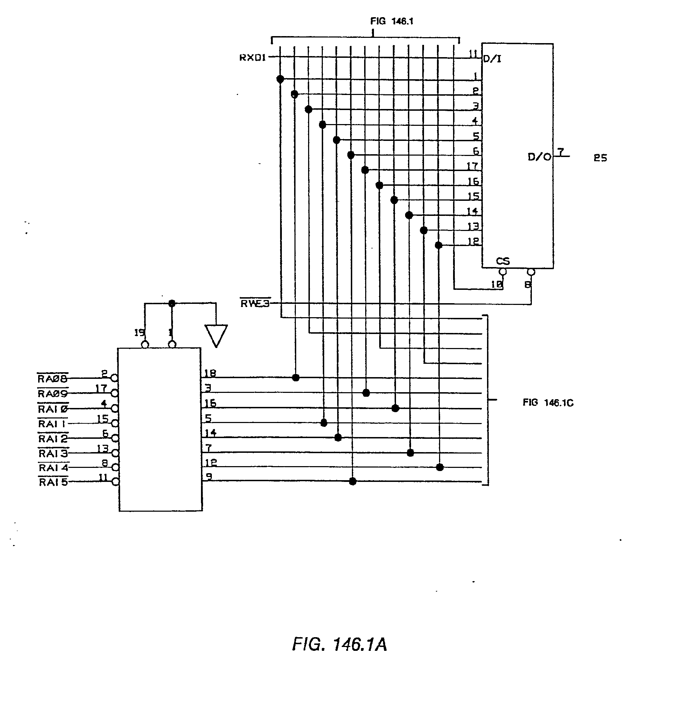

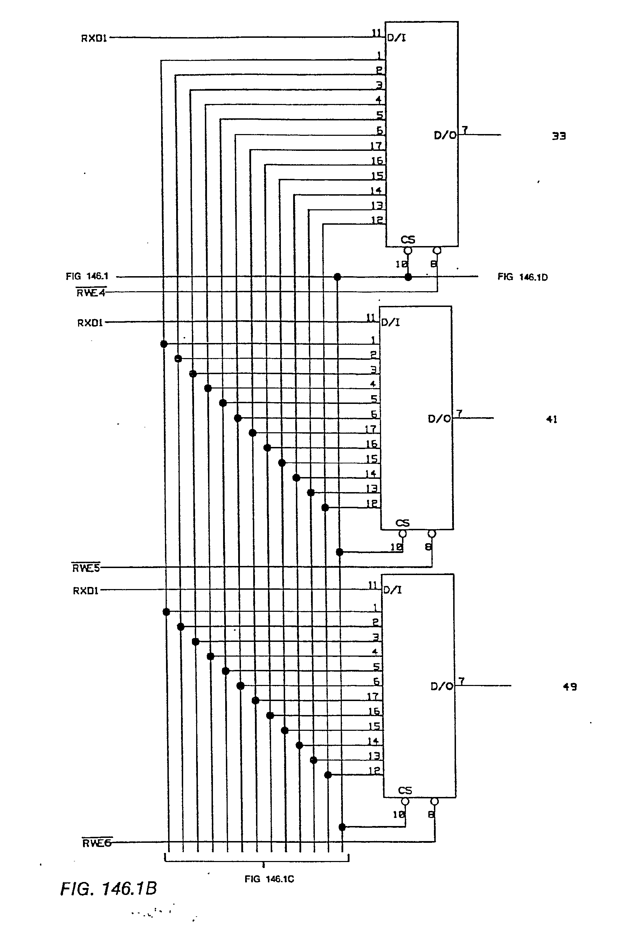

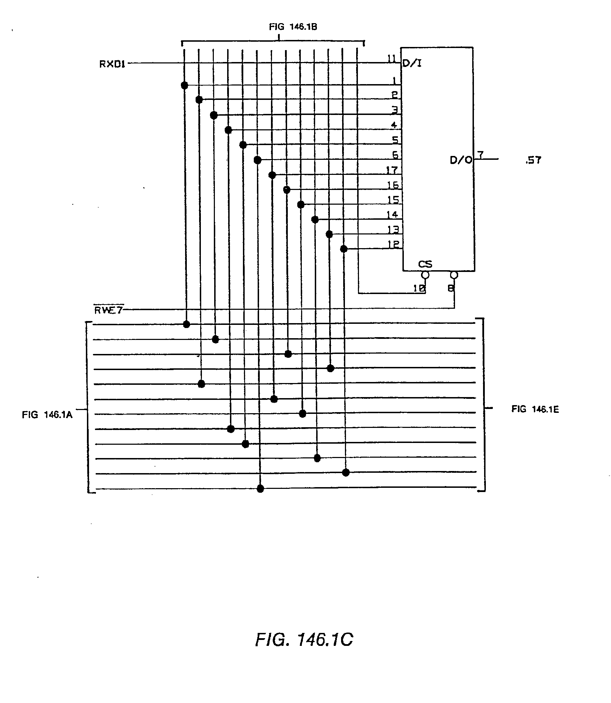

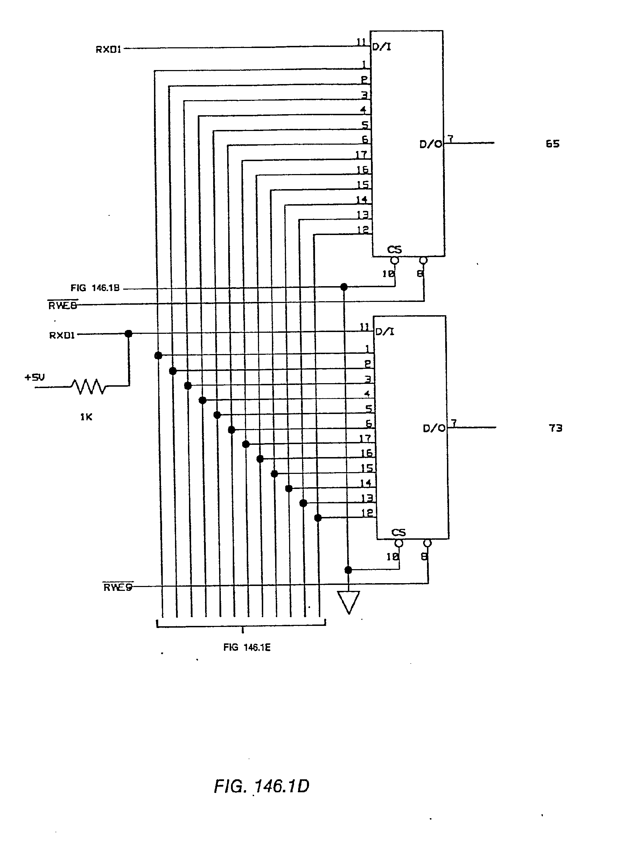

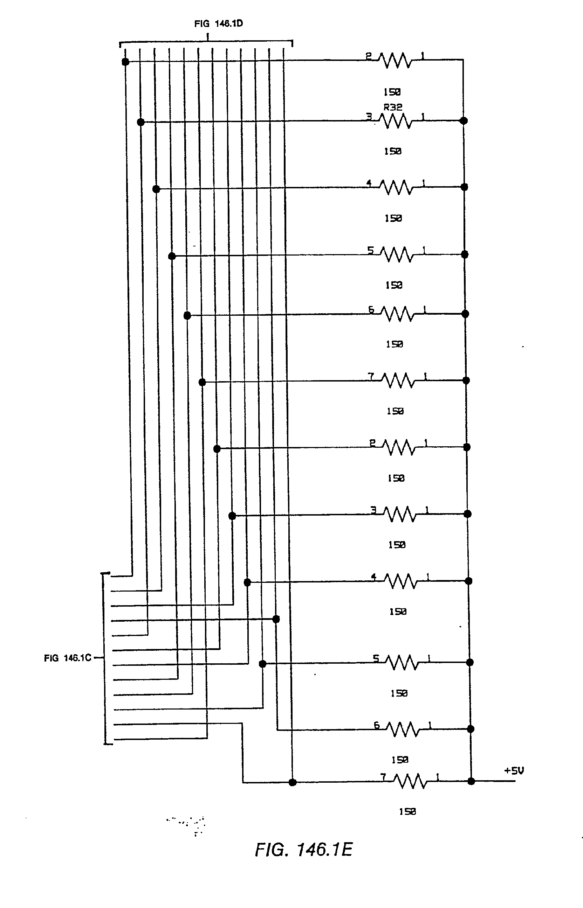

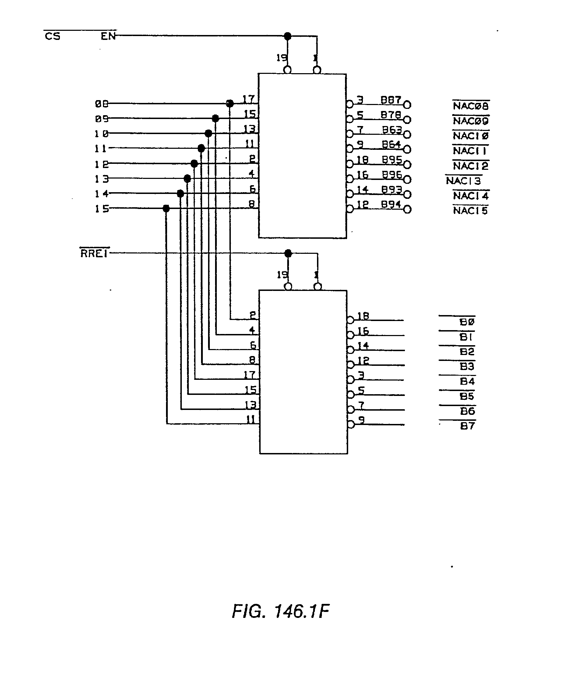

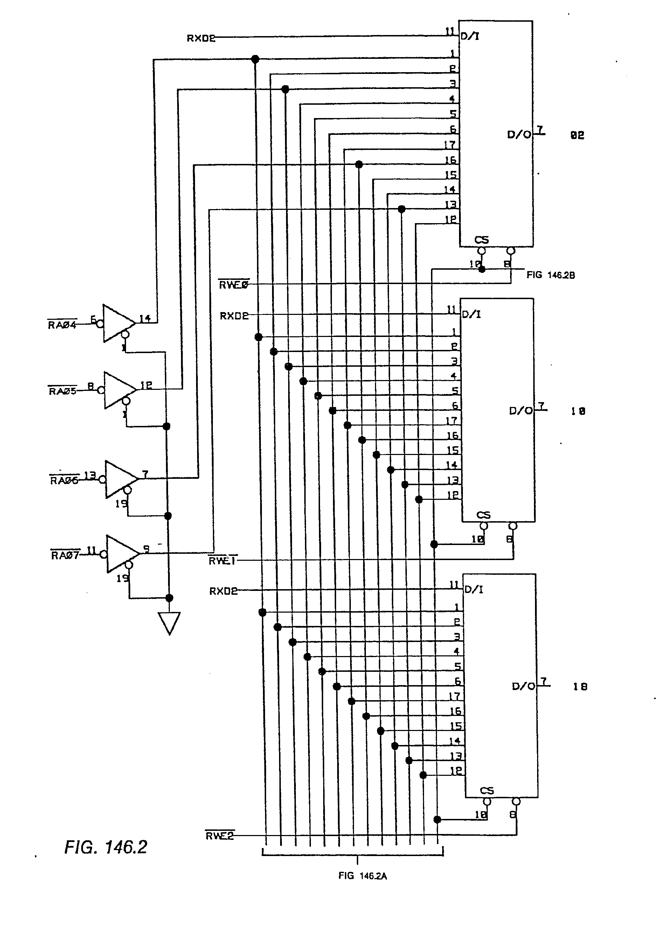

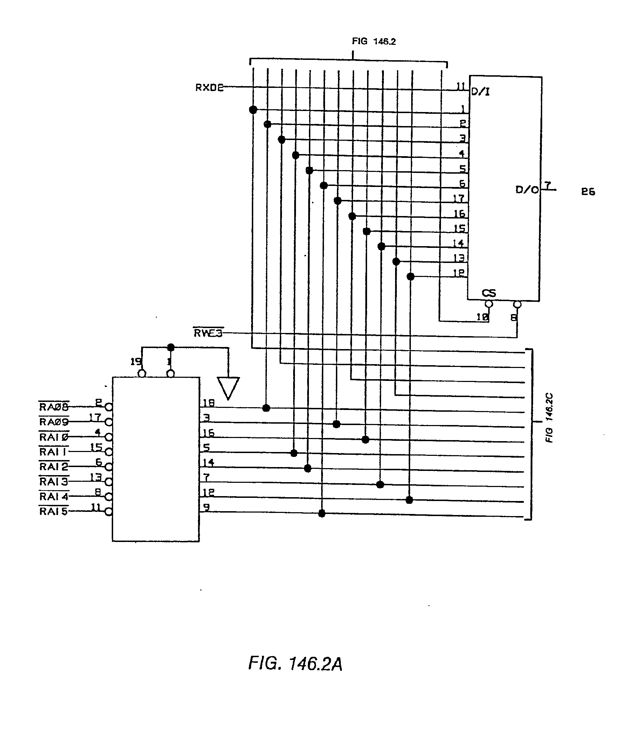

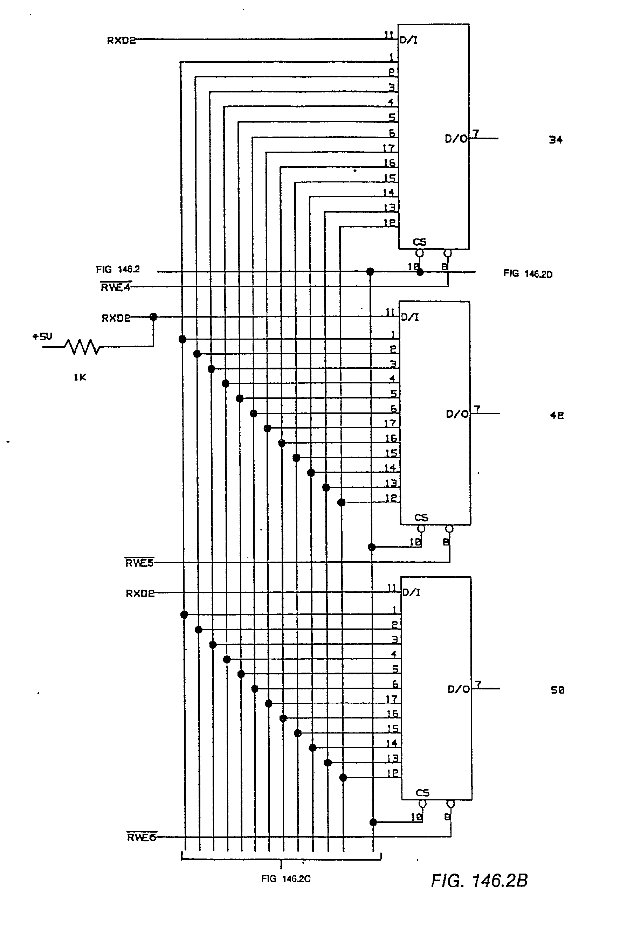

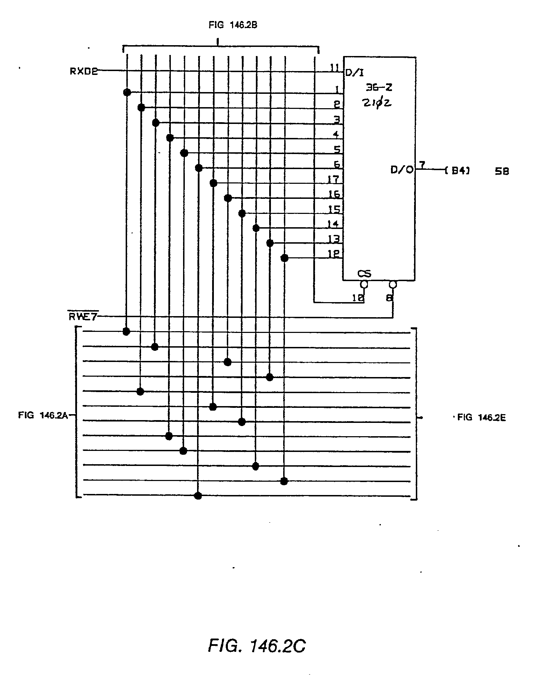

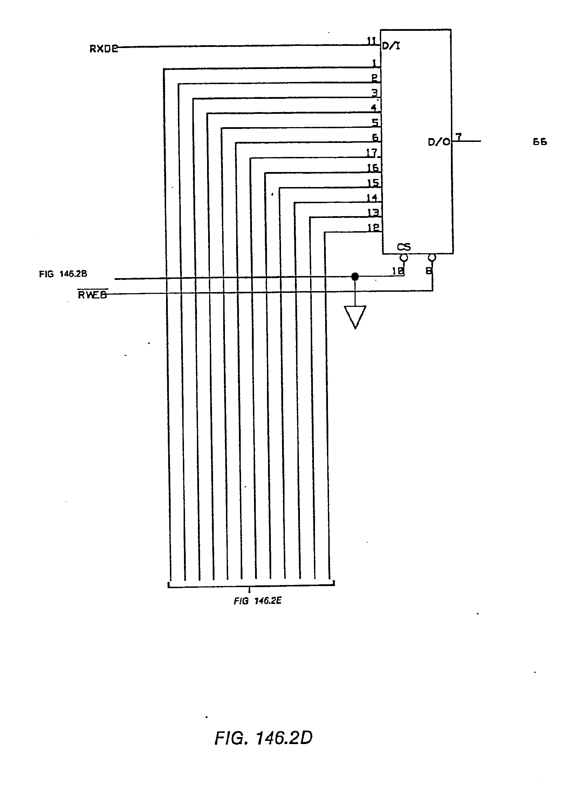

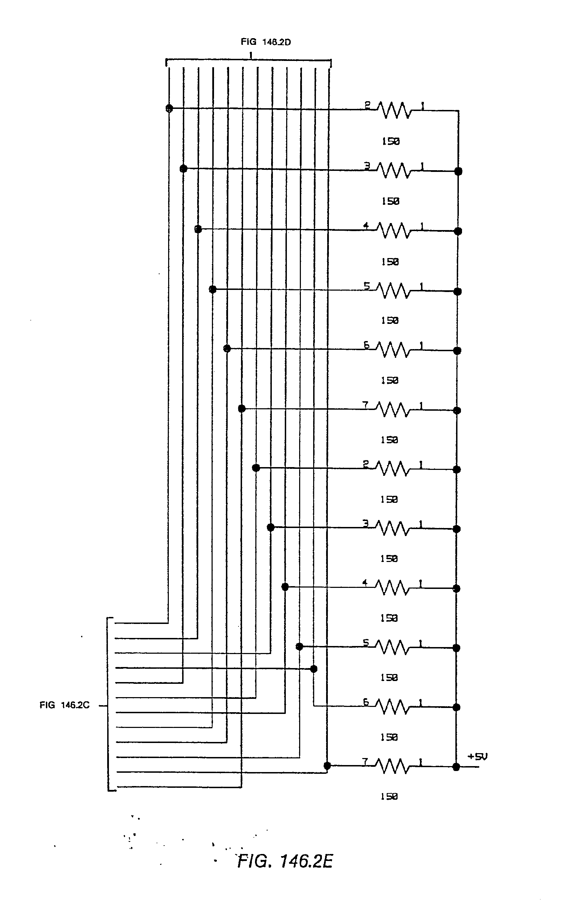

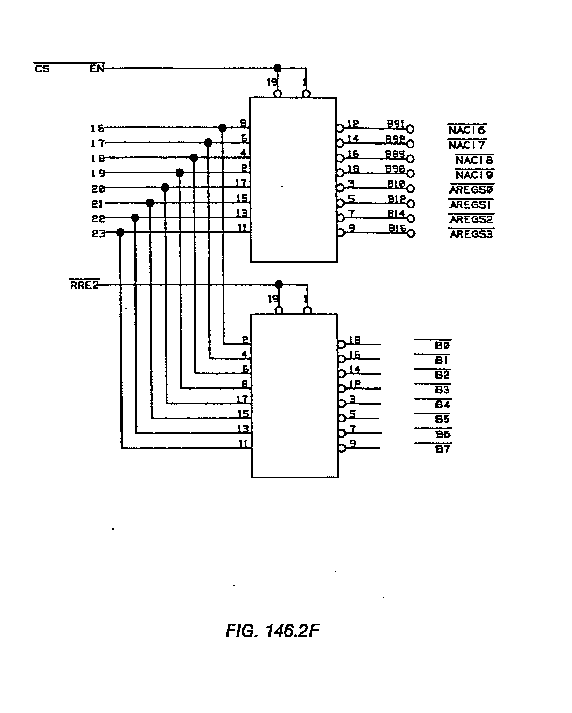

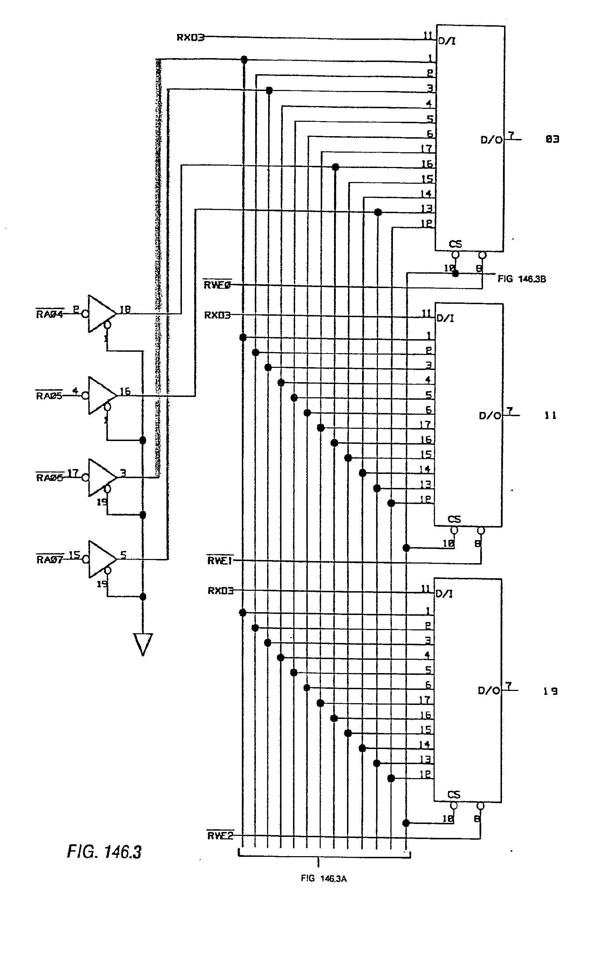

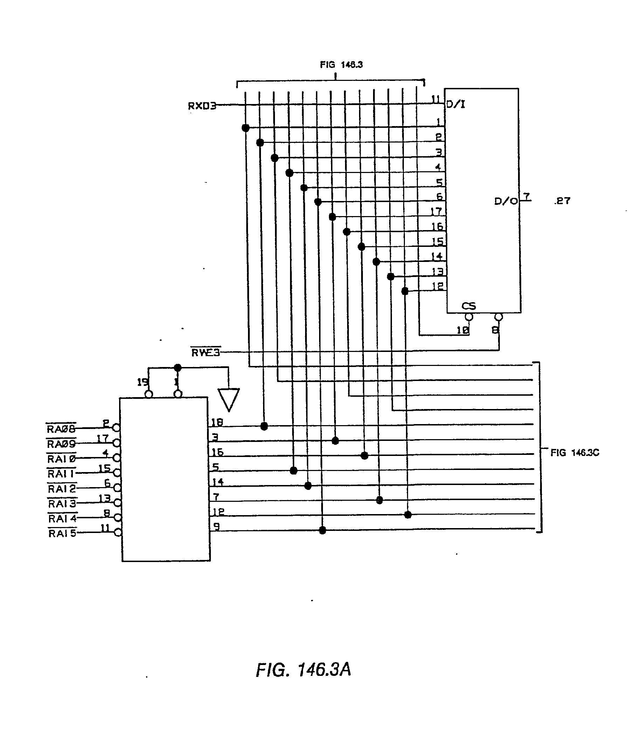

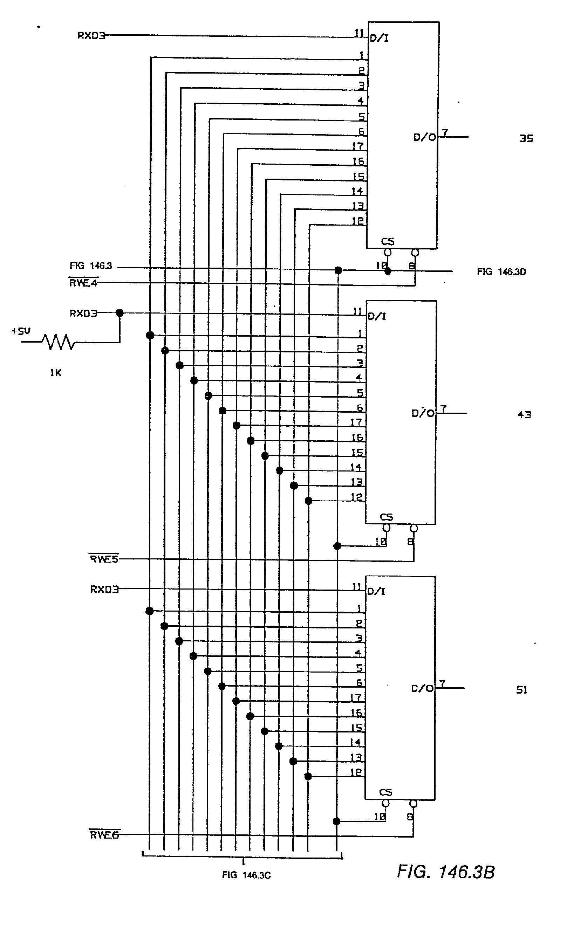

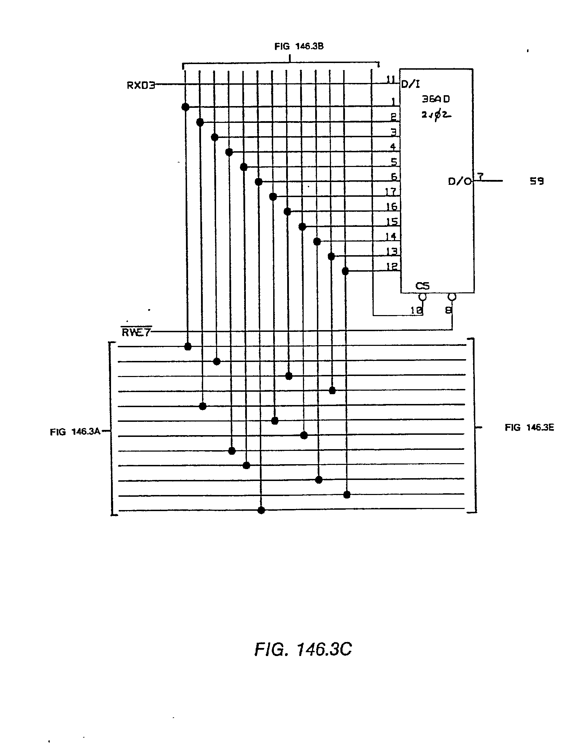

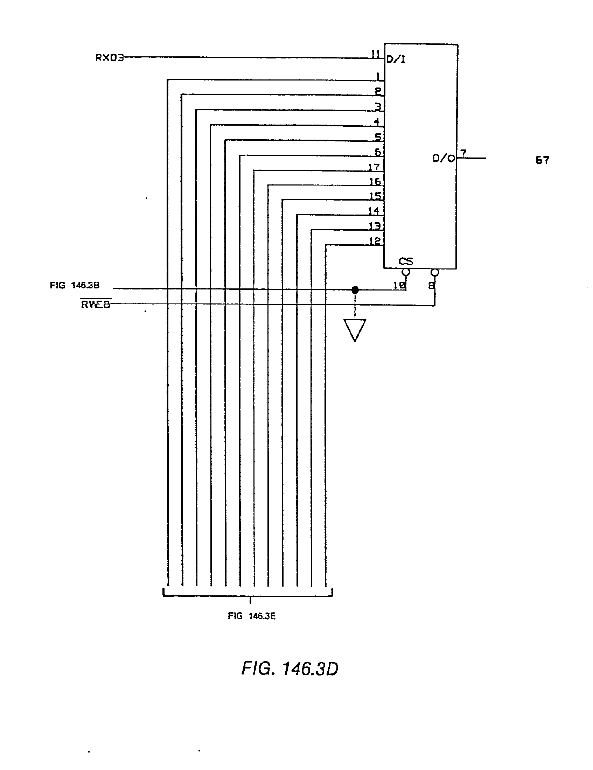

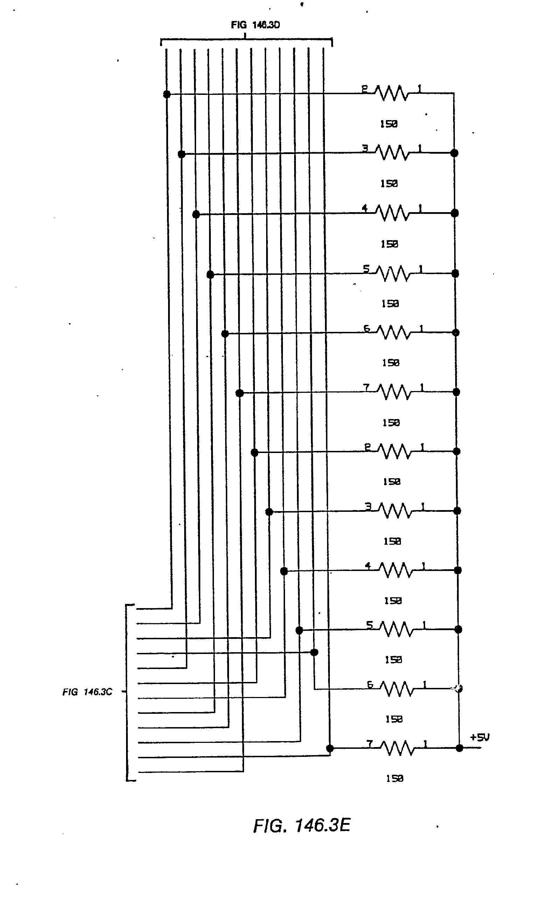

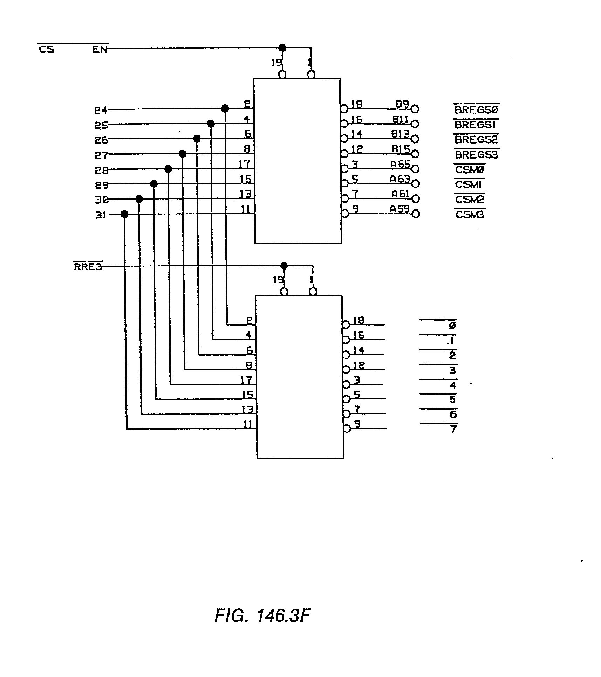

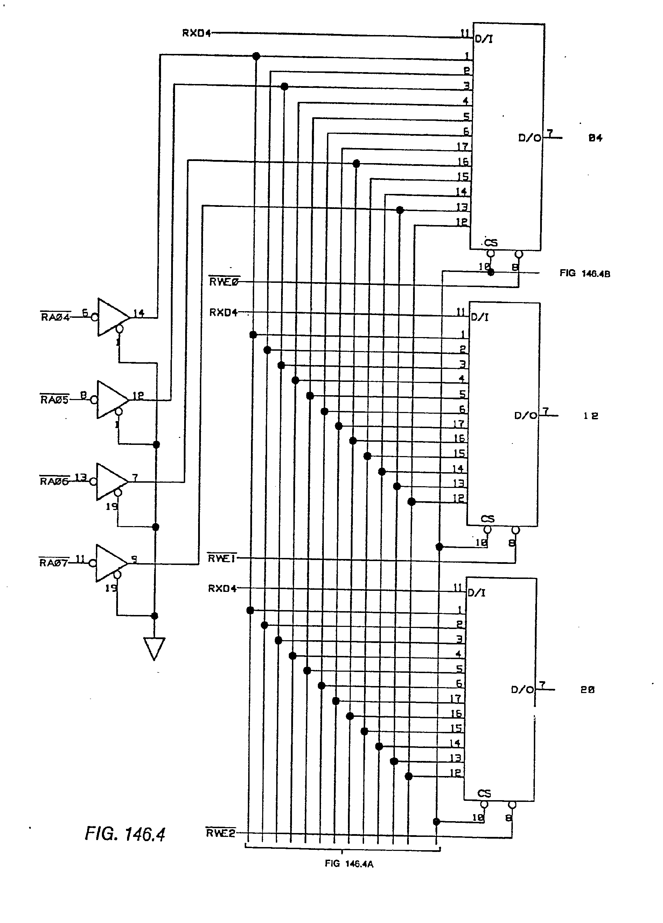

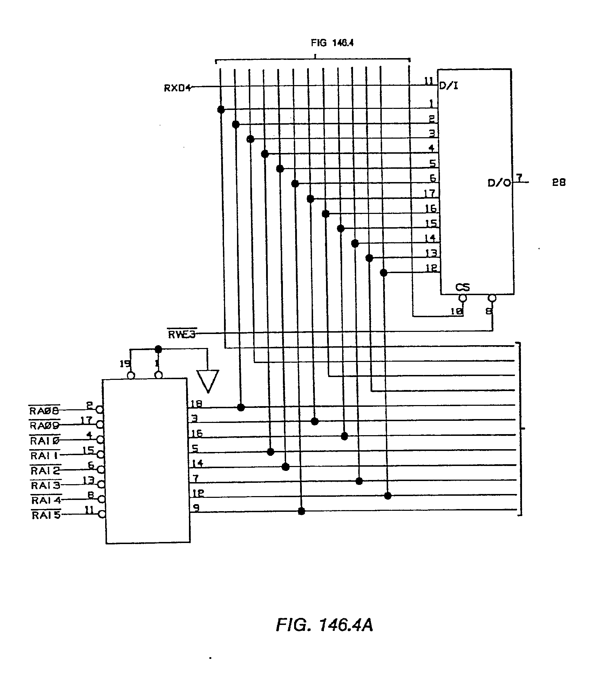

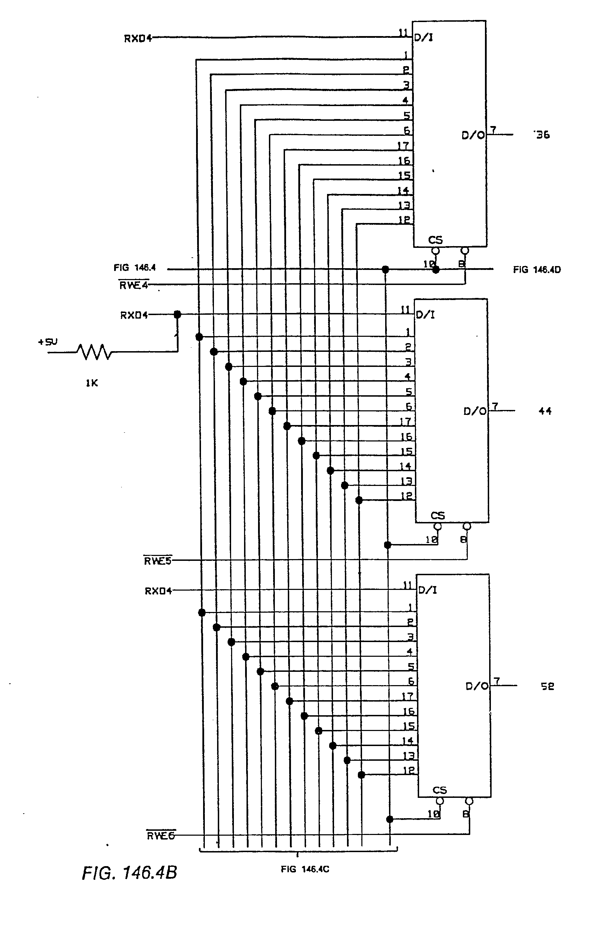

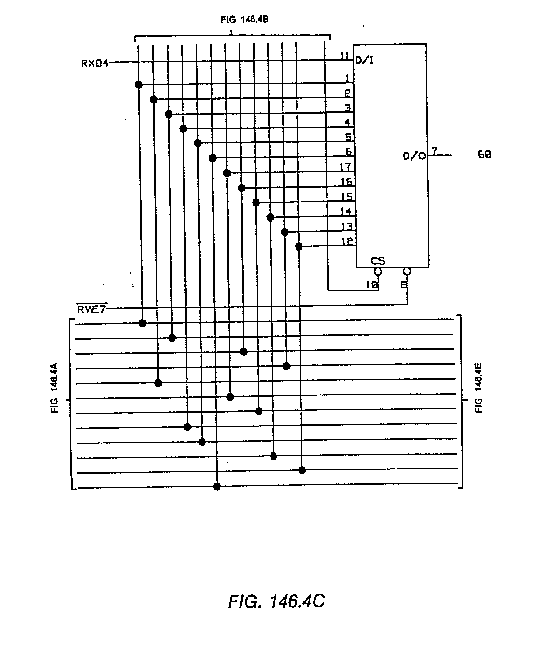

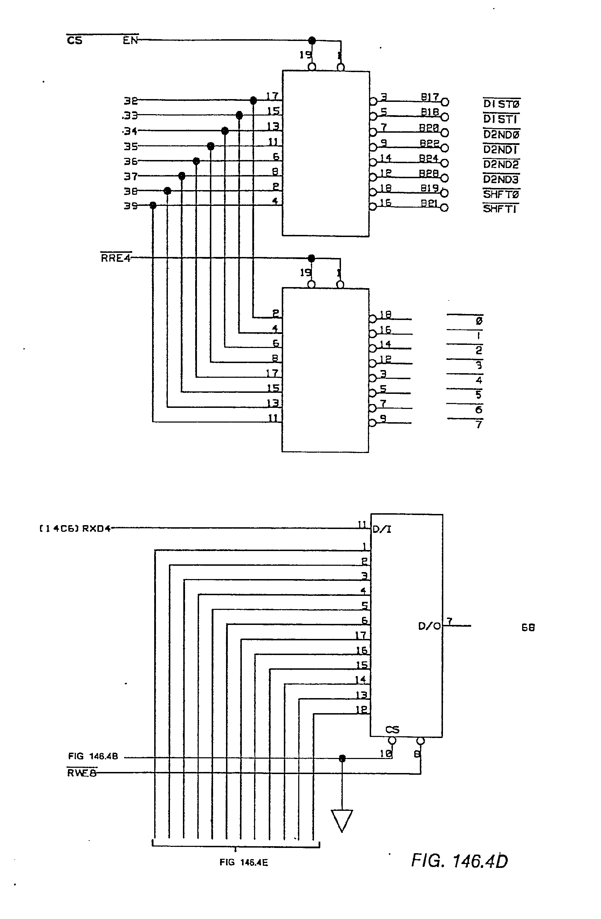

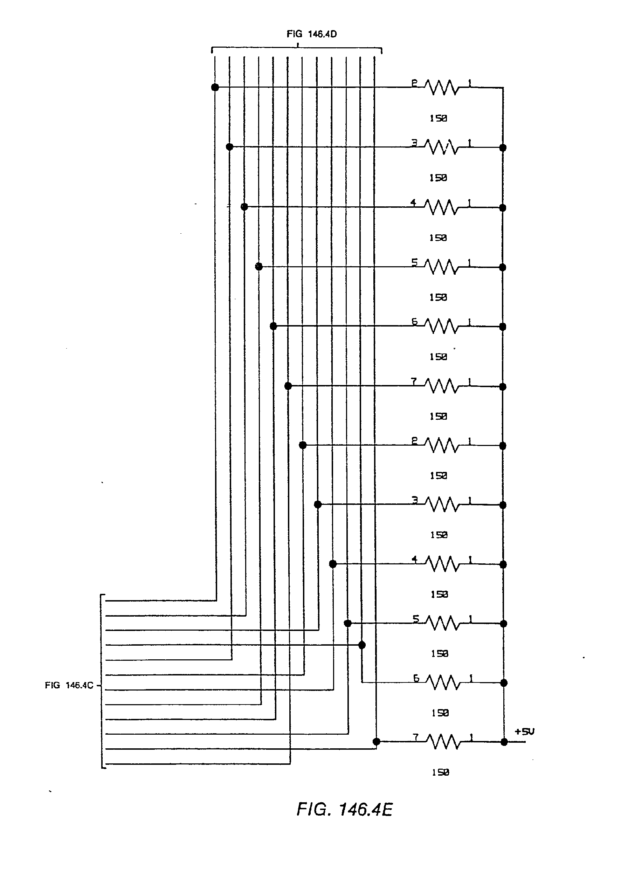

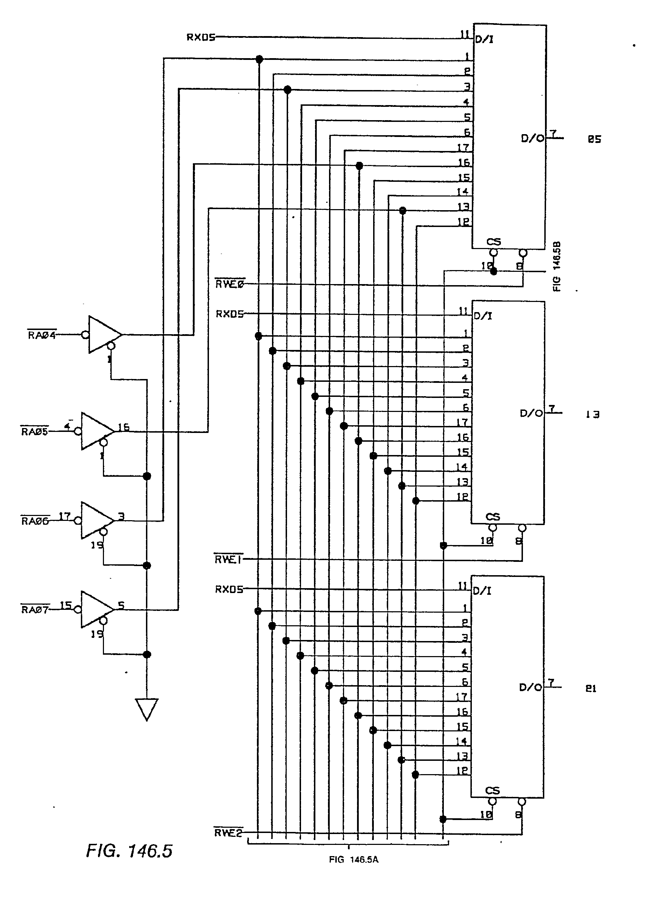

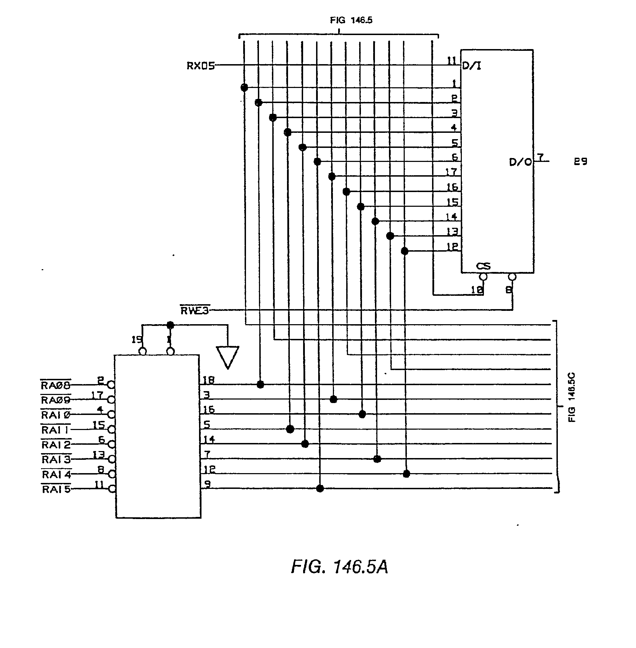

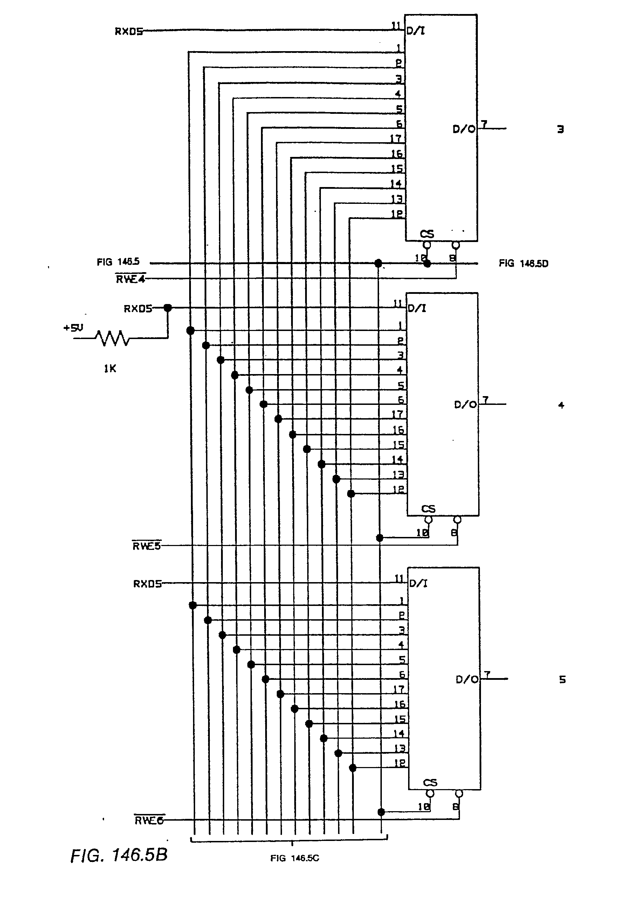

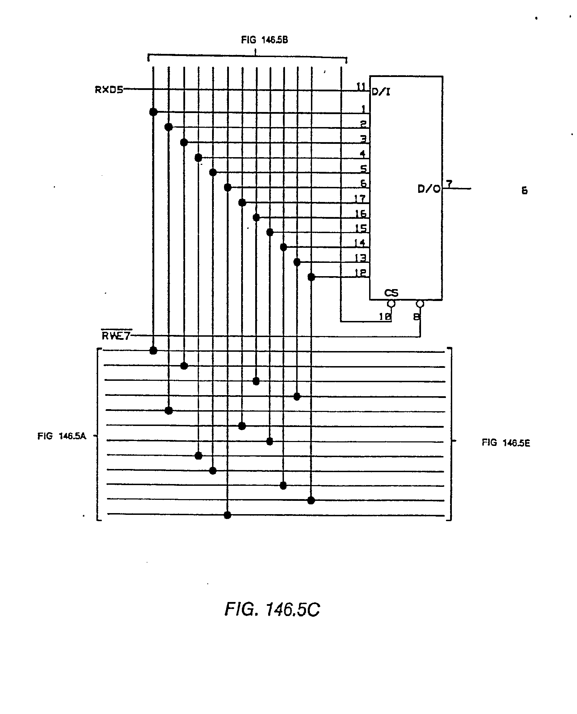

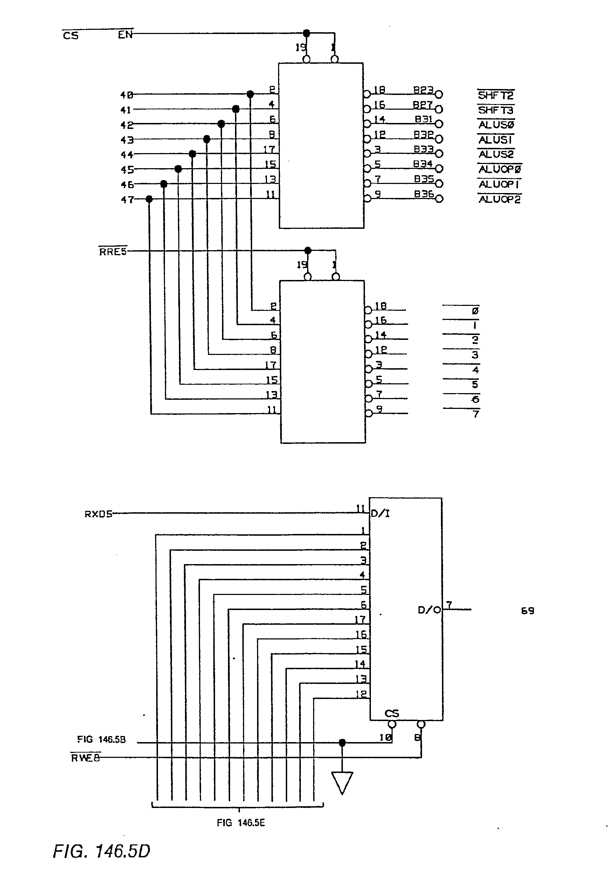

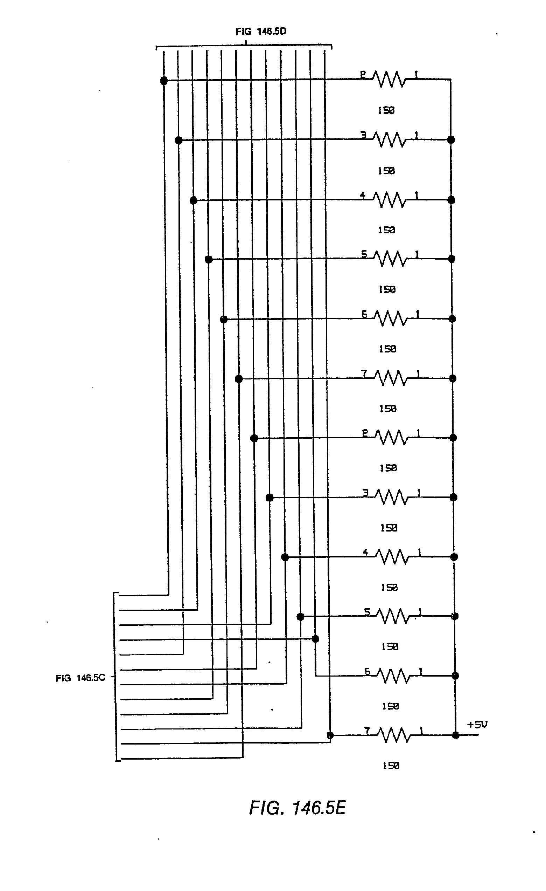

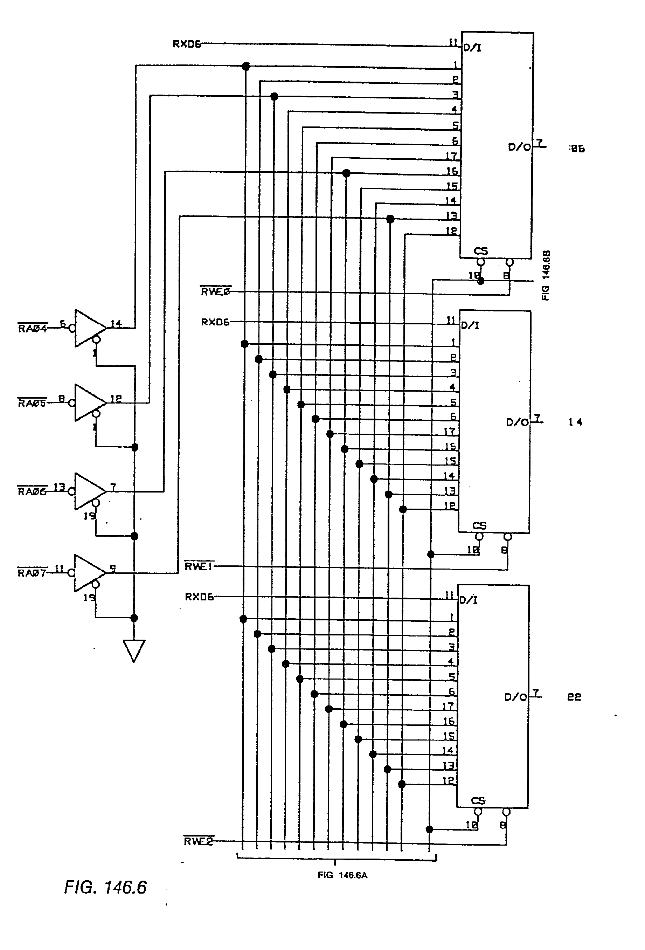

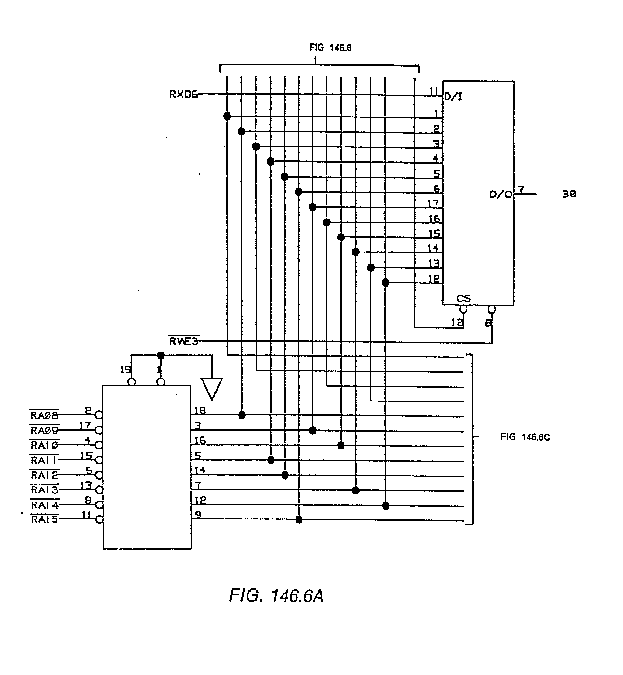

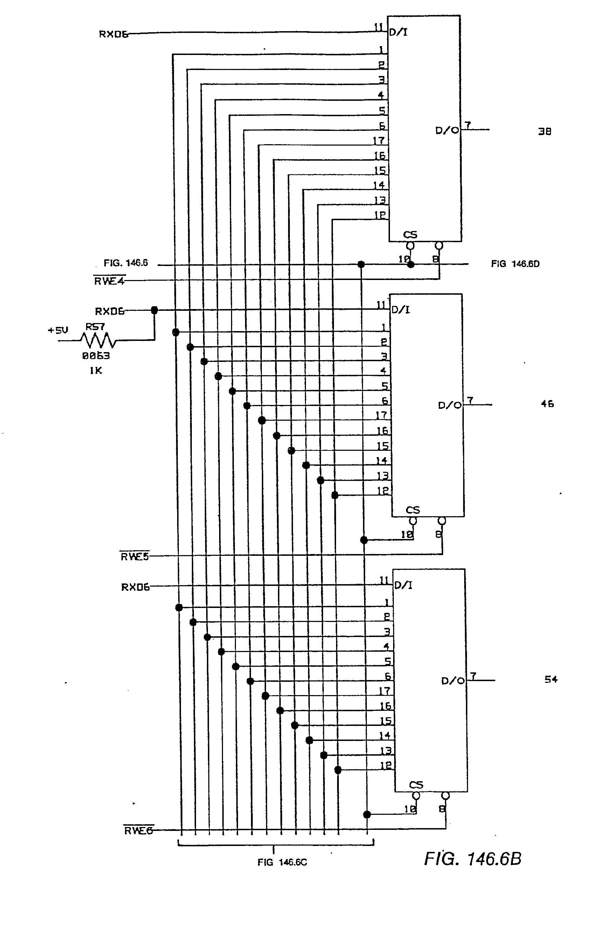

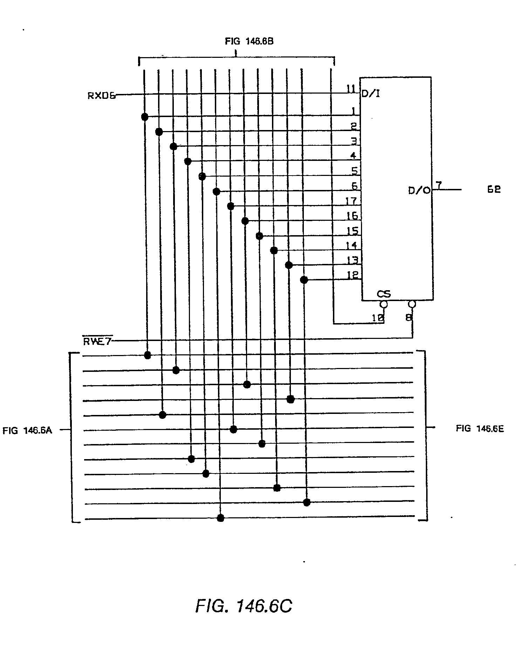

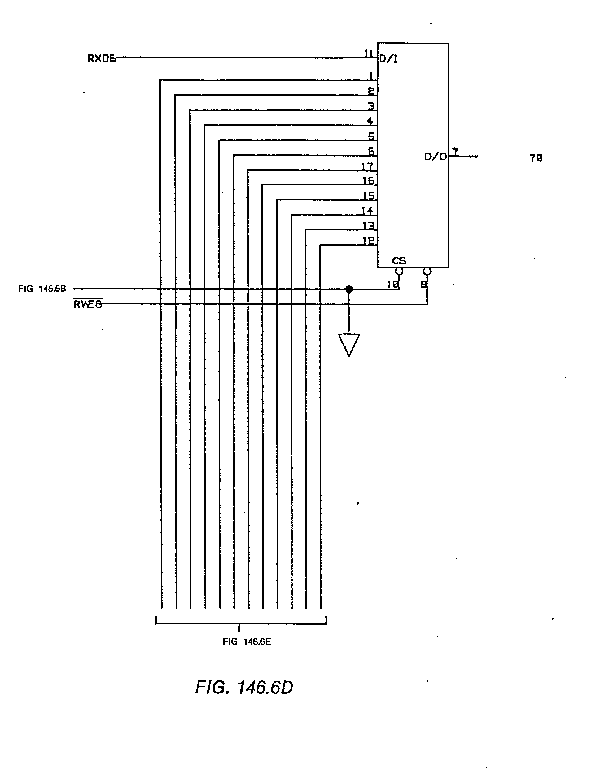

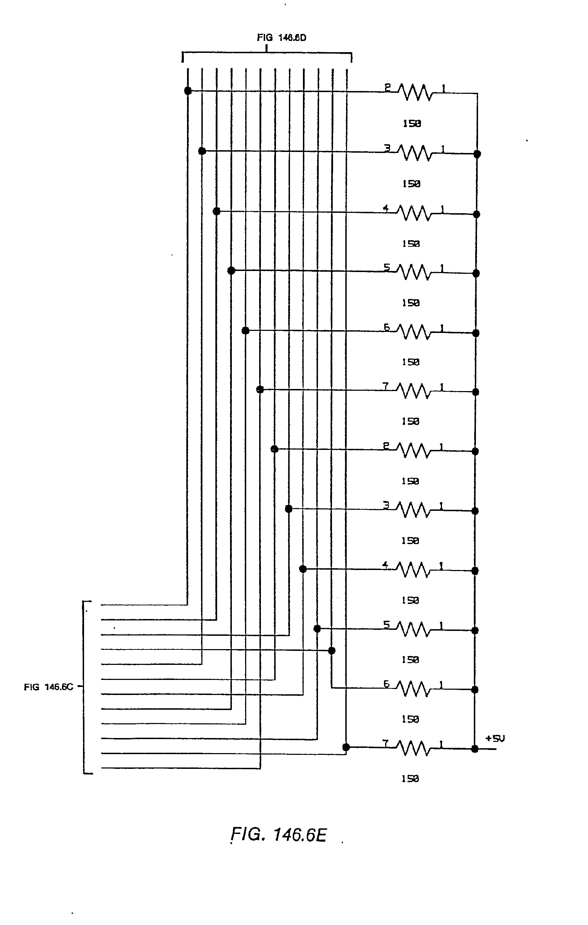

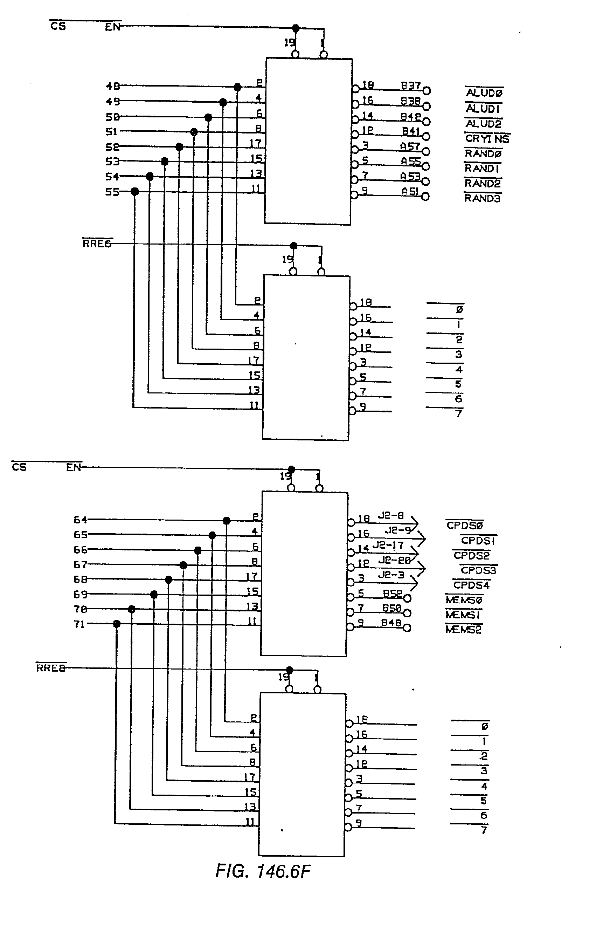

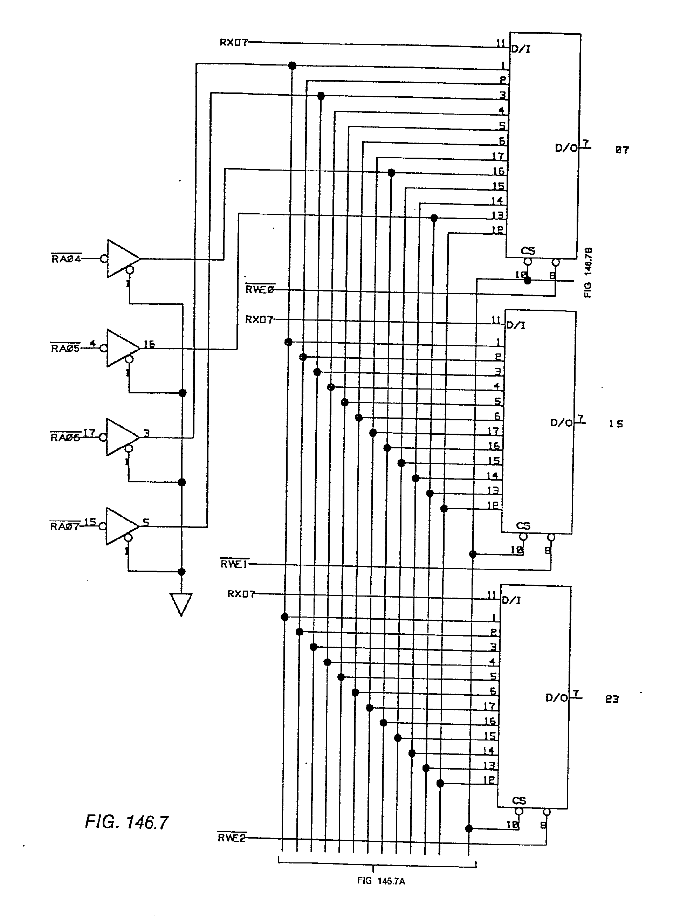

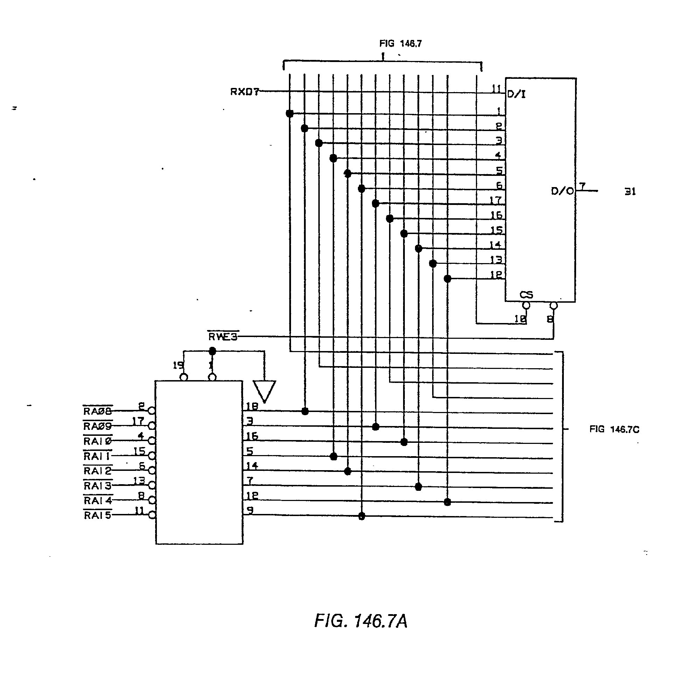

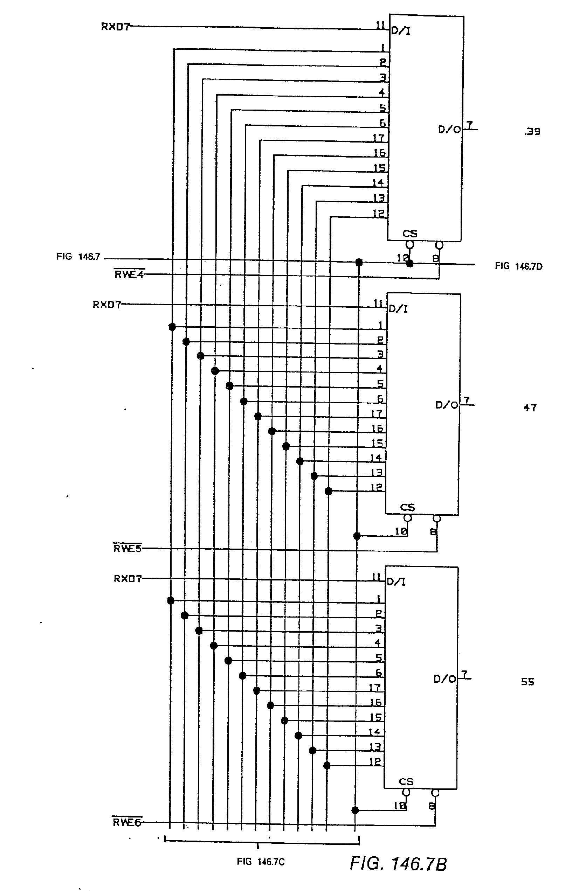

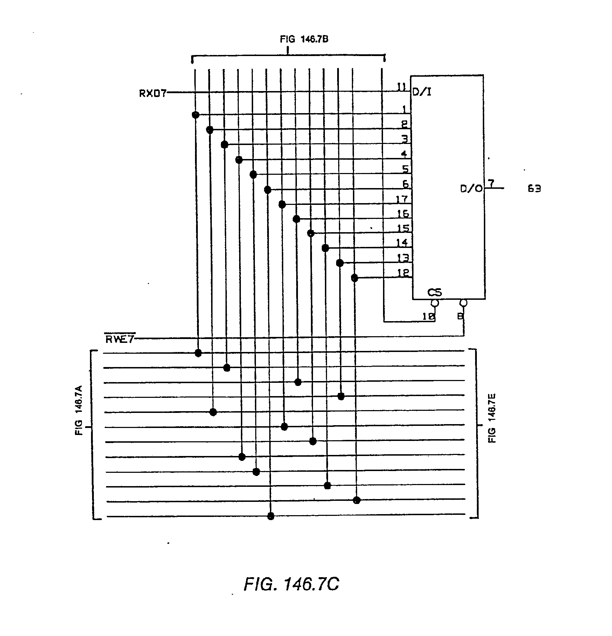

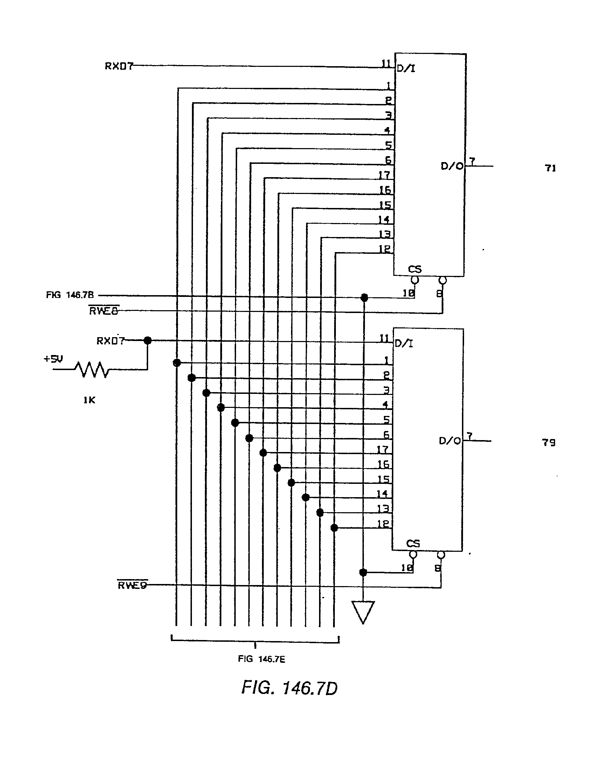

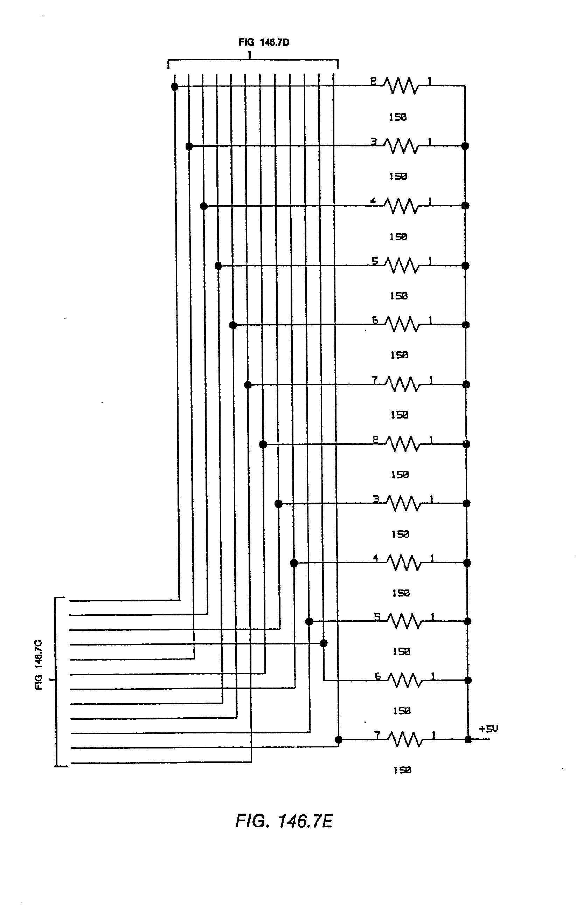

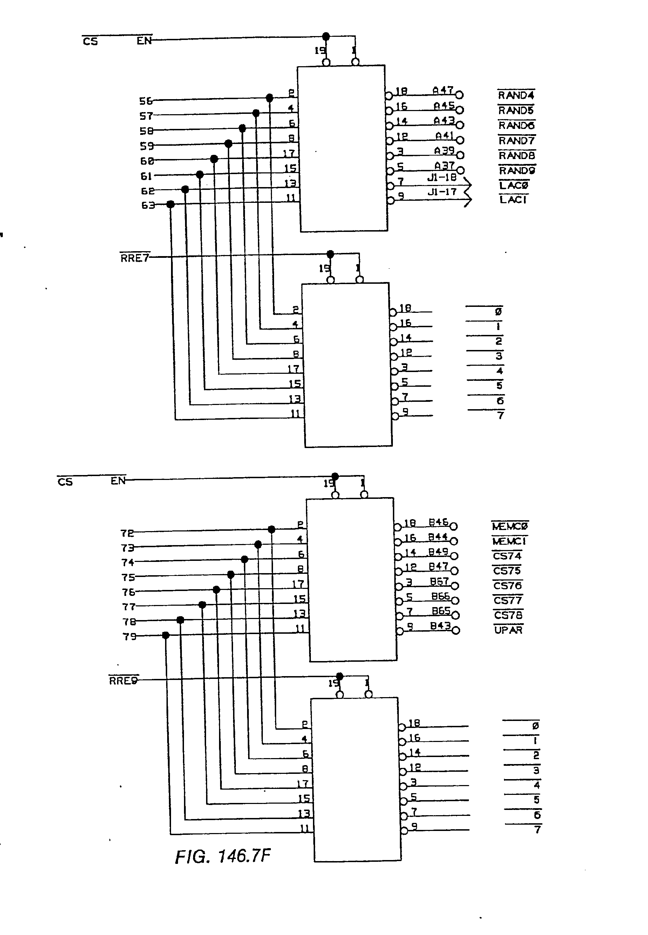

In connection with the above figures, where a particular figure requires more than one sheet of drawings, each subsequent sheet is designated by the same figure number with sequential letters appended thereto (e.g. Figure 5 (for sheet 1); Figure 5A (for sheet 2); Figure 5B (for sheet 3) ... etc). With respect to Figure 146 in particular, which depicts the microcontrol store 170, fifty-six sheets of drawings are used. The sheets are numbered 146, 146A, 146B, 146C, 146D, 146E, 146F; 146.1, 146.1A, 146.1B, 146.1C, 146.1D, 146.1E, 146.1F; 146.2, 146.2A, 146.2B ... etch to 146.8, 146.8A, 146.8B .... 146.8F.

## General Description

Before describing a specific implementation of the system of the invention, it is helpful to discuss the overall concept thereof in more general terms so that the characteristics that are desired can be described and the description of a particular implementation can be better understood.

A significant aspect of the system of the invention, as discussed above, is the size of the logical address apce which is available. For purposes of convenience in distinguishing between the previous NOVA and Eclipse systems, the extended system as discussed herein will sometimes be referred to as the "Eagle" system. In the Eagle system, for example, the logical address space can be as high as 4 gigabytes (more accurately the prefix "giga" is 1,073,741,824, or $2^{30}$, so that 4 gigabytes is, more accurately, 4,294,967,296) where a byte is defined as having 8 bits of precision. As used hereinafter, a "word" is defined as having 16 bits of precision (i.e. equivalent to 2 bytes) and a "double-word" as having 32 bits of precision (equal to two words, or four bytes). Because of the increased logical address space the overall system is able to support an instruction set which is larger than that supported by a Nova system or an Eclipse system having, for example, a much smaller logical address space. The overall capability of the system can be best understood by those in the art by examination of the set of the extended instructions which are capable of being performed by the system. The complete instruction set for the computer described herein is set forth in the last publication listed in Appendix A and available from Data General Corporation. The particular instructions which are of interest to the subject matter of the invention are set forth in Appendix B.

incorporated as a part of this specification. Such instruction set includes the extended instruction set (which can be referred to as the Eagle instruction set) and the Eclipse C-350 instruction set, as well as the Nova instruction set, all of which are capable of being handled by the system, the latter two instruction sets being already disclosed as part of the above publications. All Nova and Eclipse instructions are executed according to the principles and specifications presented in the above-referenced publications.

The binary encodings of the extended instructions which are supported by the system of the invention are shown in Appendix B. A significant difference exists between the systems having extended instructions in accordance with the invention and systems having extended instructions which have been suggested by others. In any system in which an extended instruction set effectively represents a "super" set of a previous, or original, set of instructions, all of the instructions must be suitably decoded for machine operations. Normally, such systems utilize a decoding sub-system for decoding both the original instruction set and for decoding the extended instruction set. The decoder operates so as to permit the decoding of only one of the instruction sets at a time, the original instruction set and the extended instruction set being in effect, mutually exclusive. In order to determine which instruction is to be decoded, a unique instruction must be used to set a "mode bit", i.e., a single bit which in one state indicates that the original instruction set is to be decoded and in the other state indicates that the extended instruction set is to be decoded. However, in neither case can the decoding subsystem be made available to decode either of the both sets simultaneously. Such approach inserts a limitation on the overall machine operation since it is never possible to simultaneously decode instructions from different instruction sets of an overall super set thereof.

The system of the invention, however, avoids such mutual exclusivity and is arranged to be capable of decoding instructions from either set or both sets at any one time. A decoder PROM (programmable read-only-memory) system is utilized for decoding both the extended Eagle instruction set and the original or basic instruction sets as, for example, the original Nova and Eclipse instruction set. Each instruction to be decoded includes the information which determines which decoder is to be utilized, such determination thereby being inherently carried in each instruction word which is to be decoded. As seen in Appendix B, for example, the information is contained in bits $\emptyset$ and 12-15. Thus, in the extended Eagle instruction set, bit $\emptyset$ is always a "1" while bits 12-15 are always "1001" for all instructions of the extended instruction set except for those extended instructions which use a "1" in bit $\emptyset$ and the encoding "011000" in bits 10-15 and a "1" in bit "0", a "0" in bit 5, and the encoding "111000" in bits 10-15. On the other hand, the original Eclipse instructions are such that bit $\emptyset$ is 0 and bits 12-15 are "1000". Further, in cases where the instruction does not carry either the Eagle coded bits or the Eclipse coded bits, such instruction is interpreted as a NOVA instruction.

Because each instruction carries with it an identification as to which instruction set the instruction belongs, the system operates to decode instructions on a non-mutually exclusive basis.

In order to support the extended operations of the system, the configuration thereof requires an augmentation of the registers which were previously available in the original system of which the new system is an extension. The following registers are utilized in the system and are discussed in more detail later with respect to the particular implementation described in connection with specific figures below.

The register set includes fixed point registers, floating point registers, stack management registers and memory management registers.

## Fixed Point Registers

The system includes four fixed point accumulators (ACC 0-3), one program counter (PC) and one processor status register (PSR). Each of the accumulators has 32 bit precision which can accomodate (1) a 16 bit operand which can be sign extended to 32 bits; (2) a 15 bit address which can be zero extended to 28 bits, the higher order 3 bits of the program counter being appended thereto together with a zero bit, all of which can be appended for storage in the accumulator; or (3) an 8 bit byte which can be zero extended to 32 bits before storage in the accumulator.

The program counter has 31 bits of precision, bits 1-3 identifying one of 8 current memory rings (discussed in more detail below) and bits 4-31 of which accomodate an address offset for instruction addresses. For Eclipse operation, for example, which normally requires only a 15 bit program counter,
the bits 1-3 identify the current memory ring as in a 31 bit
extended operation while the 15 least significant bits 17-31
represent the 15 bit Eclipse program counter and bits 4-16 are
all zeros.

The processor status register is a 16 bit register which
provides an overflow mask bit which if set will result in a
fixed point overflow. Additionally the register includes a
fixed point overflow indicator bit and a bit which indicates that
a micro interrupt has occurred. Other bits in the register are
reserved and are thus available for potential future use.

Floating Point Registers

The system includes four floating point accumulators
(FPAC 0-3) and one floating point status register (FPSR). Each
of the floating point accumulators contains 64 bits of precision
which is sufficient to wholly contain a double precision floating
point value. The floating point registers of the extended system
are identical to the Eclipse floating point accumulators (FPAC)
which are discussed in the aforementioned publications.

The floating point status register also has 64 bits of
precision, 32 bits of which act as the floating point program
counter. In the event of a floating point fault the floating
point program counter bits define the address of the floating
point instruction that caused the fault. Four other bits are
utilized, respectively, to indicate an exponent
overflow condition, an exponent underflow condition, a divide-by-zero condition and a mantissa overflow condition.
Another counter bit will result in a floating point fault if
any of the above latter four bits are also set. The floating
point counter also includes a zero bit and negative bit, as
are generally used in status registers, as well as bits for
indicating a floating point rounding mode of operation and an
interrupt resume operations.

## Stack Management Registers

The system of the invention utilizes four 32 bit registers
to manage the memory stack, which registers include a stack
pointer, a stack limit, a stack base, and a frame pointer. The
stack pointer register references the double word entry at the
top of the stack. When a "push" operation occurs, all the bits
of the stack pointer are incremented by 2 and the "pushed"
object is placed in the double word addressed by the new value
of the stack pointer. In a "pop" operation the double word
addressed by the current value of the stack pointer is placed
in a designated register and all 32 bits of the stack pointer
are then decremented by 2.

The frame pointer register references the first
available double word minus two in the current frame. The
stack limit contains an address that·is used to determine stack
overflow. After any stack operation pushes objects onto the
stack, the stack pointer is compared to the stack limit. If the
stack pointer is greater than the stack limit a stack fault is
signaled. The stack base contains an address that is used to
determine the stack underflow. After any stack operation that pops objects from the stack, the stack pointer is compared
to the stack base. If the stack pointer is less than the
stack base a stack fault is signaled.

Memory Management Registers

Eight registers are used to manage memory, such registers
each being designated as a segment base register (SBR) having
32 bits of precision, the memory being divided into eight
segments, or rings, thereof. The SBR's in the system described
herein are formed as part of scratch pad registers on an
address translation unit (ATU) of the system, as discussed in
more detail below. One bit of each SBR indicates whether
or not the segment associated therewith can be referenced
(i.e. is there a valid or an invalid reference to such segment).
Another bit indicates the maximum length of the segment offset
field i.e. whether or not the reference is a one level page
table or a two level page table, as explained in more detail
below. A third bit of each segment base register indicates
whether a Nova/Eclipse instruction for loading an effective
address of a Nova/Eclipse I/0 instruction is being executed.
Another bit represents a "protection" bit which indicates
whether or not an I/0 instruction can be executed or whether
the execution thereof would be a violation of the protection
granted to such segment. Nineteen of the bits contain a physical
address which identifies the physical address in the memory of
the indicated page table. Discussions of the addressing of page
tables in the memory are presented in more detail below including
a discussion of the memory locations in each segment.

Overall System

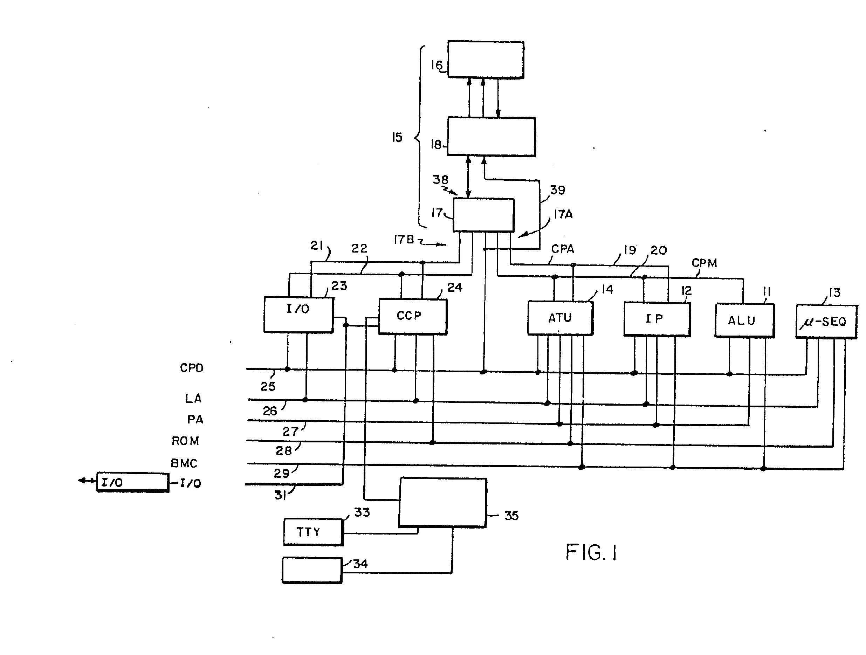

A block diagram of a preferred embodiment of the invention is shown in FIG. 1. The central processor portion of the system comprises an arithmetic logic unit (ALU) 11, an instruction processor unit 12, a micro-sequencer unit 13 and an address translation unit (ATU) 14. The memory system includes a main memory unit 16, an auxiliary cache memory unit 17 and a memory control unit identified as bank controller unit 18. A central processor address bus 19 permits the transfer of addresses among the instruction processor unit 12, the address translation unit 14 and the memory system. A control processor memory (CPM) bus 20 permits the transfer of instructions and operands among arithmetic logic unit 11, instruction processor unit 12, address translation unit 14 and the memory system 15.

I/O address bus 21 and I/O memory/data bus 22 permit the transfers of addresses and data respectively with respect to I/O devices via I/O channel unit 23, as well as the transfers thereof between the memory system and a console control processor unit 24. Suitable control buses for the transfer of control signals among the various units of the overall system are provided as buses 25-31 described in more detail below. Appropriate teletype and floppy disc.systems 33 and 34, respectively, can be utilized with the system, particularly in the diagnostics mode of operation via console control processor unit 24 by way of a suitable micro processor computer 35.

The inventive aspects of the system to be described herein require a more detailed discussion of the memory system, the address translation unit, the instruction processor unit and the micro sequencer unit. The arithmetic logic unit, the console control processor unit and the I/O channel unit with their associated controls need not be described in detail.

Memory System

In accordance with a preferred embodiment of the invention the memory system comprises up to two megabytes of main memory 16 and, if desired, the system can be expanded even further as, for example, to 4. megabytes. It should be noted that sufficient bits are reserved in the physical address fields so as to allow for system expansion to one billion bytes of memory. The interface between the main memory unit 16 and the remainder of the system is via the dual port cache memory unit 17, data being transferred between the main memory and the cache memory unit in blocks of 16 bytes. The cache memory unit herein will usually be referred to as the "system cache" (SYS CACHE) to distinguish it from a separate cache memory in the instruction processor unit which latter memory will normally be referred to as the "instruction cache" (I CACHE) unit. The system cache unit 17 services CPU requests for data transfers on port 17A of its two ports and services requests from the I/O system at port 17B thereof. CPU data transfers can include "byte-aligned-byte" transfers, "word-aligned-word- transfers, and double word transfers. I/O data transfers can include "word-aligned-word" transfers, "double word-aligned-double word" transfers and 16 byte block transfers.

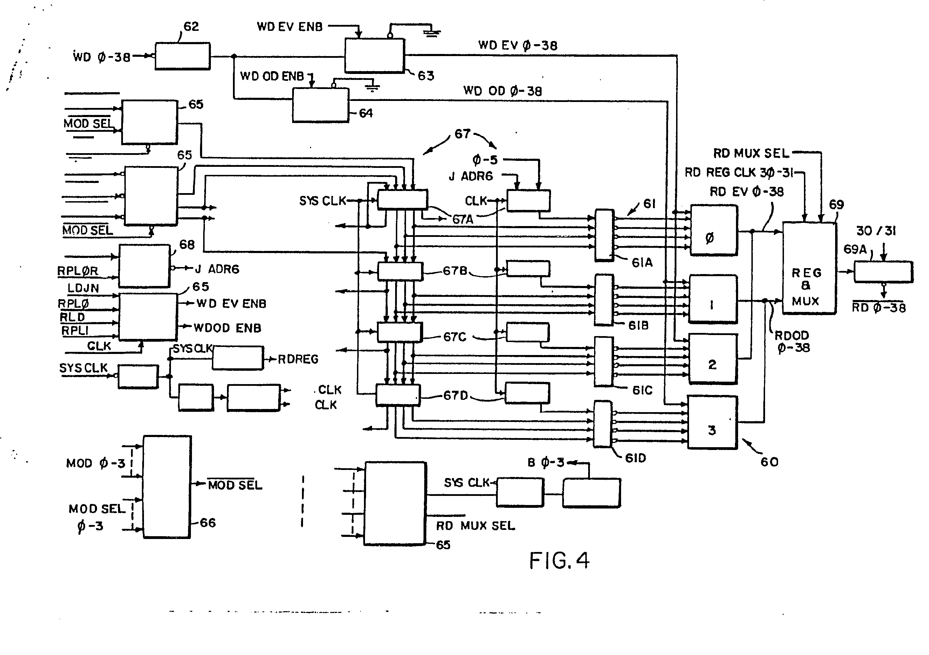

The main memory unit 16 can include from one to eight 256-kilobyte memory modules, as shown in FIG.4. Each memory module contains a memory array of 156 16 K dynamic random access memories (RAMs), organized at each module in the form of four planes ∅-3 of 16K 39-bit words each. Each word comprises 32 bits of data and 7 error correction bits, as discussed in more detail below. Memory timing and control for the RAMs of each memory module is accomplished on the memory bank controller board 18. The control signals from the memory bank controller are clocked into a register on each memory module, the outputs thereof driving the "plane-∅" RAMs. The outputs from such reigister are clocked a fixed time later into another register which drives the "plane-1" RAMs. Such pipe line operation continues through "plane-2" RAMs and "plane-3" RAMs so that all four planes receive the same control signals at fixed intervals (e.g. 110 nanosecond intervals), resulting in the transfer of a block of four consecutive 39-bit words.

Memory bank controller 18 has three main functions. First of all, it provides an interface between the system cache 17 and the memory modules of the main memory unit 16. Secondly, it performs necessary error checking and correction operation and thirdly, it controls the refresh operation of the dynamic RAMs on each of the memory modules. The details of the interface between the system cache and the bank controller are discussed in more detail below.

The error checking and correction logic on the bank controller performs single-bit error correction and double-bit error detection using a 7 bit error correction Hamming code as is well known in the art. The 7 check bits generated for each 32 bit data word are stored with such word in the main memory modules. When the word is subsequently read from memory, all 39 bits are decoded to produce a 7 bit pattern of syndrome bits which pattern identifies which, if any, single bit is in error and indicates when more than one bit is in error. When a correctable single-bit occurs, the console control processor 24 is provided with the address and the syndrome bit pattern of the failing bit. The data is thereupon corrected and sent to the system cache after a fixed time delay equal to a system clock period, e.g. 110 nanoseconds in a particular embodiment, in accordance with well-known error correcting operation, the remaining words in the pipe line operation being prevented from transfer until the corrected signal is made available by the use of a suitable inhibit signal identified as the BC ERROR signal.

Substantially immediate correction of single bit errors is desirable so that such errors do not grow into multiple bit errors. A conventional technique can be used in which the corrected data is written back into memory only when it has been read and found to be in error. Two problems arise with such a technique. First of all, the memory locations which are not often read are not often corrected and, secondly, significant time can be wasted in trying to correct a failure if it occurs in a frequently accessed memory location. The system of the invention can avoid such problems by utilizing a separate process for monitoring all of the main memory locations so that each location therein is checked and corrected, if necessary, once every two seconds. Such checking is performed during the memory refresh cycle and does not reduce the availability of the memory to the system. A detailed description of such a technique is disclosed in U.S. Patent Application, Serial No. 1 43 675 and our corresponding British Patent Application 8112082 (Published under Serial No          ).

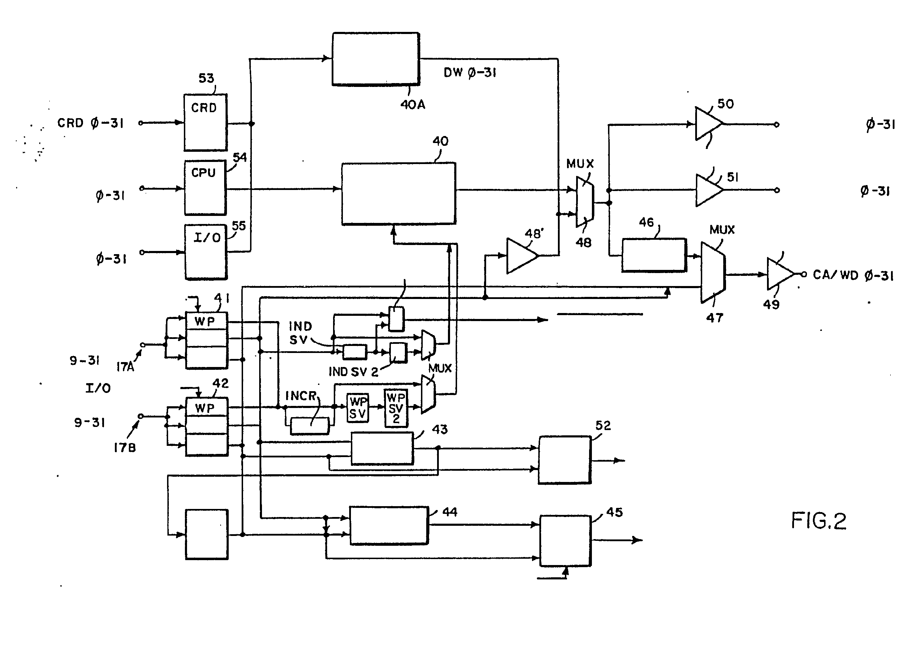

The system cache unit 17 represents the sole connection between the main memory unit 16 and the remainder of the system and consists of a memory system port 38 for connection to the main memory and two requestor ports, 17A and 17B, as discussed above, one intended primarily for handling CPU requests and one intended primarily for handling I/O requests. The system cache board also provides a direct access path 39 between the I/O port and the memory system port providing for direct block transfers therebetween. Cache board 17 also includes a 16-kilobyte, direct mapped high speed cache data store 40 having a block size of 16 bytes which can be accessed from either the I/O or the CPU requestor port. Block diagrams of the logic utilized in the system cache unit 17, the bank controller unit 18 and a typical memory module of the main memory unit 16 are shown in FIGS. 2, 3, and 4.

As can be seen in FIG. 2, the system cache data store 40 receives all requests for data from the memory other than block transfer requests from the I/O port which are serviced by the main memory directly. In the particular embodiment described, the cache data store receives the data address at the address input of either CPORT 17A or IPORT 17B which address is placed in either CPORT address register 41 or IPORT address register 42. The incoming address includes a Tag portion, an Index portion and a word pointer portion as follows:

| 9 | 18 19 | 28 29 31 |
|---|-------|----------|
| TAG · | INDEX | WP |

The three least significant bits 29-31 of the cache data store address specify the word pointer, which identifies the desired word within a block of the 16 byte 8 word block of the data store. The remaining bits 9-28 identify the block address which corresponds exactly to the address which would be used to fetch the desired block from the main memory. The latter bits are divided into Tag bits 9-18 and Index bits 19-28 as shown.

The system cache as depicted in FIG.2 includes a "Tag" Store Unit 43. Data store 40 is a high speed memory array of 4K x 32 bit words (i.e. 1K 16-byte blocks) and holds a copy of a block of words from main memory. The data store is addressed by the index and word pointer bits of the cache data store address word, the index being a 10-bit address of a block within the data store 40 and the three word pointer bits pointing to the desired word within the selected block, as mentioned above. A data store block may be used to buffer any data block of main memory which shares the same index.

The function of the Tag store 43 is to identify which of the many possible blocks from the main memory is buffered in each 16 byte block of the data store 40. Tag store 43 is a high speed array of 1K 12-bit words and is addressed by the 10-bit index portion of the memory address. Each 12-bit word contains ten bits which identify the block from the main memory which is buffered in data store 40. When the main memory is 4 megabytes or less, the first two bits of this tag are needed only for future expansion of the main memory capacity and can be zero. Bits 10 and 11 are flags to indicate the status of the data. Thus a "valid" flag V indicates that the indentifiable data store block contains valid data. For example, if an I/O port operation were to request a block "write" to main memory which modifies the contents of a block which has already been buffered in the data store 40, the valid flag of that block would be reset to indicate that its data is no longer valid.

A "modify" flag M indicates that the contents of the data store block have been modified. Thus, if a data block is removed from the data store 40 to make room for a new data block from main memory, the removed data block is written back to main memory if the modified data flag is set.

A second tag store unit 44 is shown on the system cache board, which latter tag store is a replica of the instruction cache (ICACHE) tag store which is described later. The ICACHE tag store is used on the system cache board to determine when a write to memory would affect the contents of the instruction
cache at the instruction processor. When such an effect would
occur, as indicated by a comparison at comparator 45 of the
incoming address and the ICACHE addresses, the system cache
alerts the instruction processor by asserting an "instruction
cache write" signal, as indicated in FIG. 2, to inform the
instruction cache (ICACHE) at the instruction processor board
of the location of the block which has been so modified.

In the operation of the system cache all requests are
initially assumed to be "read" requests, since even when a
"write" request occurs it is possible that the data to be
written will need to be read and modified (a "read-modify-write"
operation) before the write operation is to be performed. If
the system cache is not busy when a request is received at an
input port, the data store 40 and the tag store 43 are
accessed simultaneously, using the appropriate portions of the
received input address as discussed above. The data from the
location in the data store 40 which has been addressed is
loaded into the cache write data register 46 via multiplexer
48 if the data transfer is a write into memory operation so that
in the next cycle the contents of the write data register 46 can
be enabled onto the bus via multiplexer 47 and bus driver unit
49. If the data is a read operation the data output from data
store 40 is supplied at the CPORT or IPORT, as required, via
multiplexer 48 and driver units 50 and 51, respectively.

The data from the tag store 43 is first examined to
determine if the requested data, is, in fact, in the data
store 40. The tag portion of the word which is read from the
tag store is compared at comparator 52 with the tag portion of the address which has been submitted by the requestor and the valid flag checked to see that it is set. If such comparison is successful (a system cache "hit") the data from data store 40 is the desired data and the requestor is permitted to receive it or to write it into memory. If the comparison fails (a system cache "miss") the data block which has been requested is not in the cache data store 40 and must be brought in from the main memory. Such an occurrence is termed a "cache fault" condition and, when such fault occurs, the requestor is prevented from loading in data until after the fault is resolved.

Once the data is available for the requestor the requestor must signal that it wishes to accept the data and, if the requestor does not do so when the data first becomes available, the read operation will be repeated until the requestor indicates its willingness to accept the data.

Because access to the data in data store 40 requires two system clock cycles to complete, the cache addresses as received from requestors can be "pipe-lined" in a manner such that two accesses can be in progress at any one time. Advantage is taken of this ability to pipe-line access requests by intertwining the accessors of one of the input ports with those of the other input ports. An appropriate clocking signal, which has a frequency one-half that of the basic system clock, is used to indicate which requestor port is allowed to access the cache data store at any given time. As a result there is no interference between CPU and I/O port accesses except during a cache fault. The only exception is that both I/O and CPU ports are not allowed to be in the process of accessing the same data store block at the same time. An example of the intertwining operation between the ports for a read operation is discussed below. In the particular example described the CPU port requestor does not choose to take the data at the first opportunity so that a read repeat occurs.

| | t0 | t1 | t2 | t3 | t4 | t5 |
|---|---|---|---|---|---|---|
| CPU PORT READ | Address and START Signal on bus. | Tag and Data Stores read. | Data ready. Requestor does not assert RT Signal. | Data Store read again. | Data Ready. Requestor asserts RT Signal and loads data. | |
| IO PORT READ | Idle cycle or end of last access. | Address and START Signal on bus. | Tag and Data Stores read. | Data ready. Requestor asserts RT Signal and loads data. | Idle cycle or start of next access. | |

For a cache write operation, the cache, at the time the memory write access is initiated, assumes that a read-modify-write operation will be performed and accordingly does a read as described above. However, even if the transfer is to be a simple write operation, the tag store information must be read to determine the location at which the incoming data will be written so that in actuality no time is lost in performing a superfluous data store read operation. For a simple write operation, or for the write portion of a read-modify-write operation, the requestor asserts a write transfer (WT) signal to indicate completion of the transfer. Instead of driving the data from the output register onto the memory port 38 the system cache loads an input register 53 with the data which is to be written from the data bus at the end of the cycle and writes it into the data store 40 during the next cycle. If a cache fault results from such a write request, the system cache accepts the data to be written into the input register

0039227

- 22 -

but does not write it into the data store 40 until after the fault is resolved. An example of a CPU port write request in a manner similar to that discussed above for a read request is shown below.

| | t0 | t1 | t2 | t3 | t4 | t5 |
|---|---|---|---|---|---|---|
| CPU PORT WRITE | Address and START and WRITE Signals on bus. | Tag and Data Stores read. | Data ready. Requestor asserts WT Signal and sends data. | Data Store written. | Idle cycle. | |
| IO PORT READ | Idle cycle or end of last access. | Address and START Signal on bus. | Tag and Data Stores read. | Data ready. Requestor asserts RT Signal and loads data. | Idle cycle or start of next access. | |

The examples discussed above show single read or single write operations. It is also possible for a requestor to submit a new address and a START signal along with the read transfer (RT) and/or write transfer (WT) signal, so that consecutive read operations or consecutive write operations from a single port can be performed every two cache cycles (a CPU cycle, for example, is equivalent to two cache cycles) unless a cache fault occurs. However, if a read access is initiated at the same time that a write transfer is performed, the data store 40 cannot be read on the next cycle because it is being written into at that time. When this condition happens, the read operation requires an additional two cache cycles for completion. If the requestor is aware that a read operation is following a write transfer and wishes to avoid a wasted cycle, the requestor can either delay starting the read request until the next cycle or it may start the read request to wait an extra cycle before requesting the data transfer. In either case useful work could be done in the otherwise wasted cycle, although initiation of a read followed by a wait for an extra cycle is usually more desirable because it allows a cache fault to be detected at an earlier point in time.

A read-modify-write operation can be accomplished by asserting a START signal and WRITE signal along with the address, followed by a read transfer at a later cycle and a write transfer at a still later cycle. When a WRITE signal is signaled at the start of an access, the system cache will not consider that the access has been completed until a write transfer is performed. During such operation all other requestors are prohibited from accessing the same data. Thus, requestors utilizing the same input port are prevented from access by the fact that the first requestor controls the bus during the entire read-modify-write operation. Requestors on the other port are prevented from access by the fact that both ports are prohibited from accessing the same data store block at the same time. Such prohibition also prevents requestors at another port from removing a block of data from the cache data store when the system cache is in the middle of an operation.

If the system cache board receives a write transfer request when a write operation has not been previously indicated or, if it receives a read transfer and a write transfer request simultaneously, access to the system cache data store is aborted without the transfer of any data. If such simultaneous read and write transfer requests are asserted at the beginning of the next cycle after the START request, the access may be avoided without even initiating an unnecessary cache fault indication.

In addition to the above transfers, the system cache board has the capability of performing direct write transfers between the input ports and the main memory, the bulk of such data traffic being capable of being handled without affecting the contents of the cache data store 40. If the requested transfer is a block write transfer, the data is written directly into the main memory via data write register 40A, MUX 48 and write data register 46. Data transfers at the I/O port are not allowed when the CPU port is in the process of accessing data which has the same Index as the I/O block which is to be transferred. Data read-modify-write transfers are also not permitted by the system.

In the overall system cache block diagram shown in FIG. 2, the input registers for the CPU request port and the I/O request port are shown as data registers 54 and 55. Addresses associated with the data at such registers are supplied to the CPU address register 41 and the I/O address register 42, each address comprising the Index, Tag and Word Pointer as discussed above.

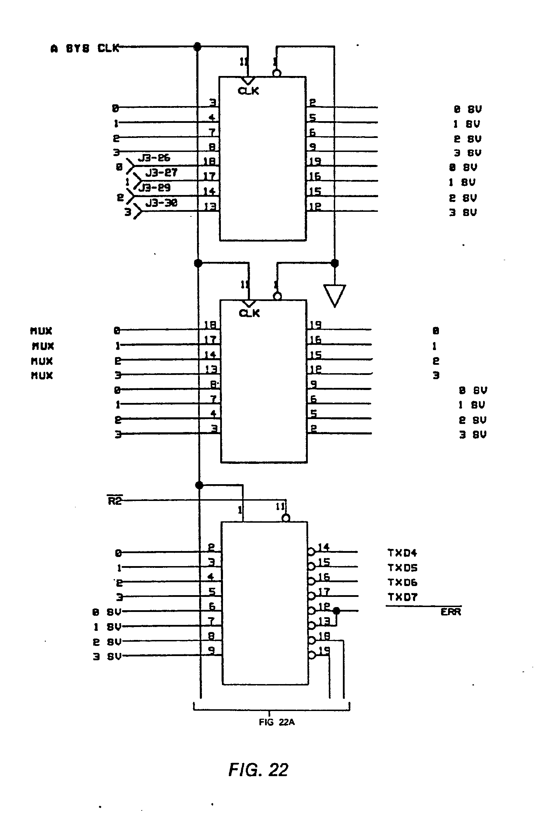

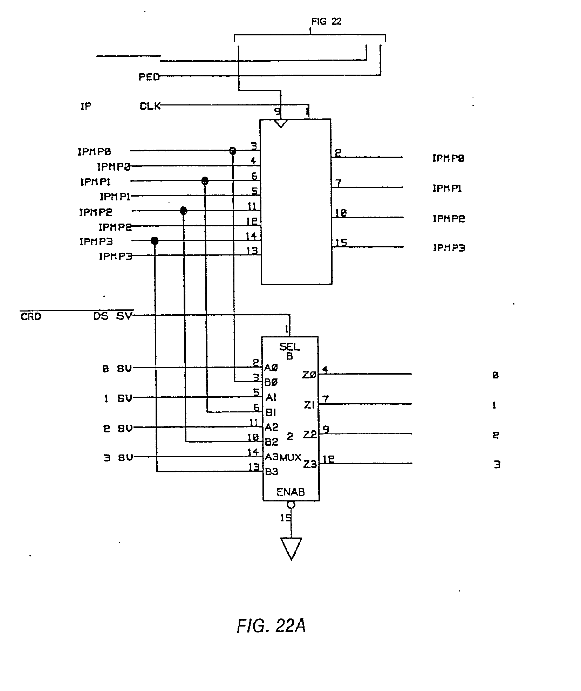

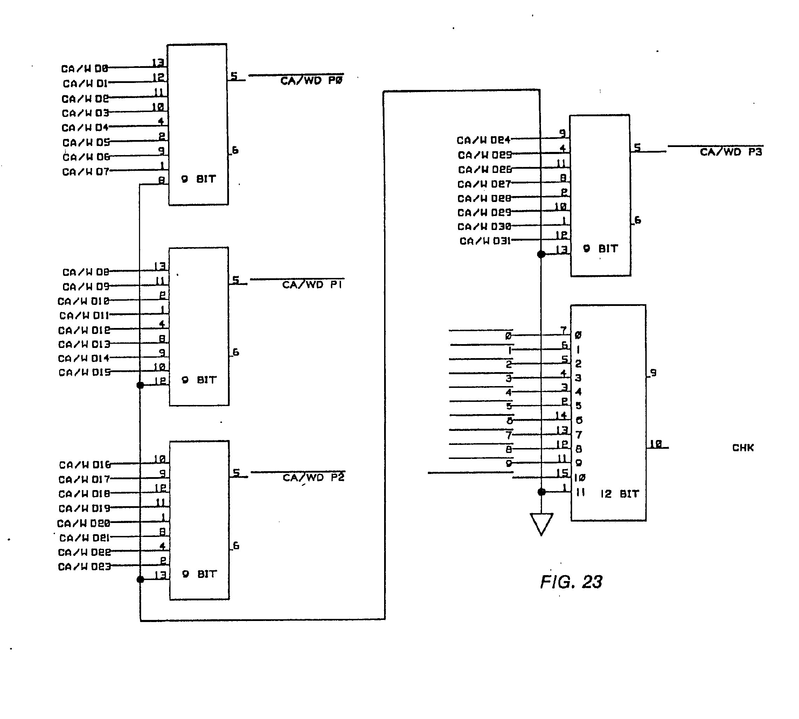

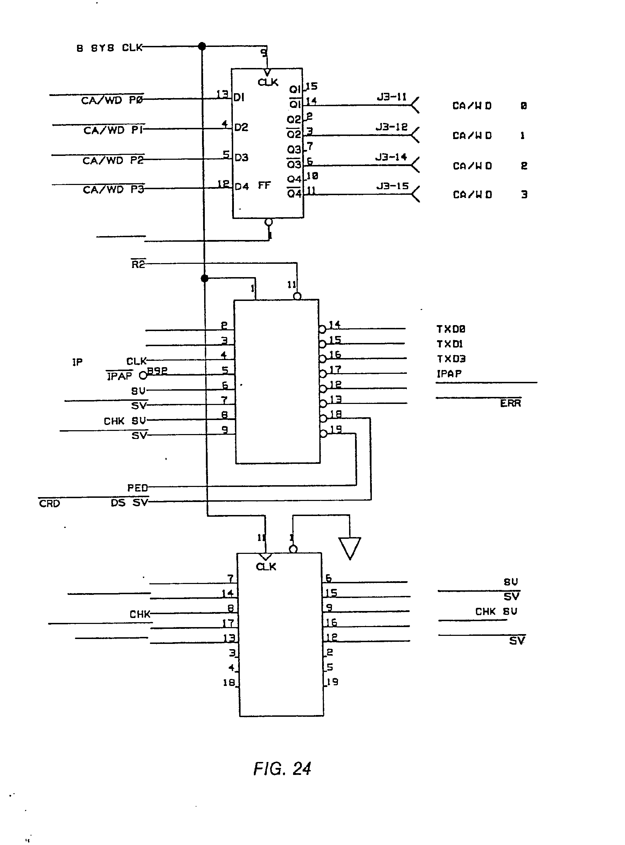

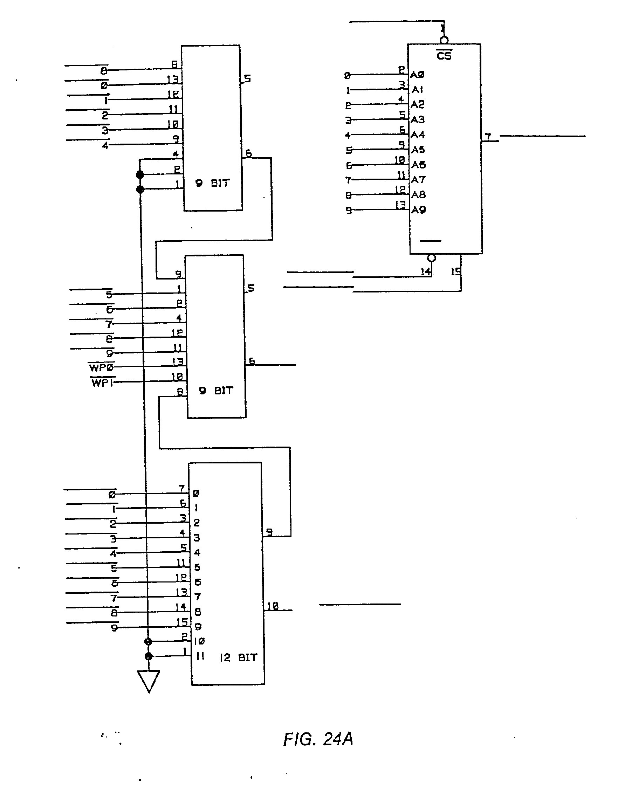

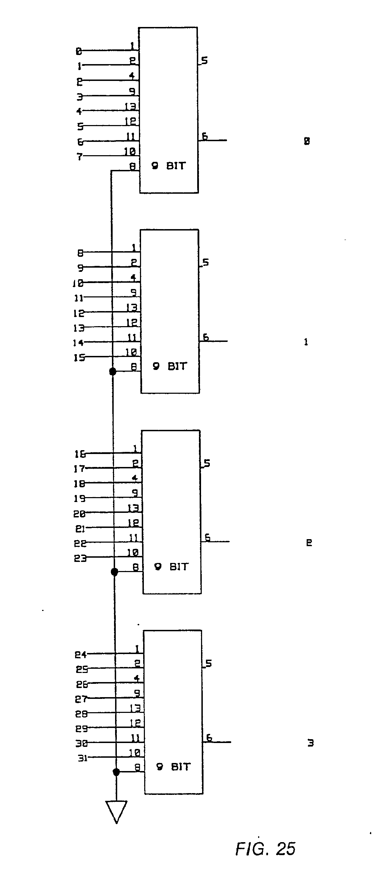

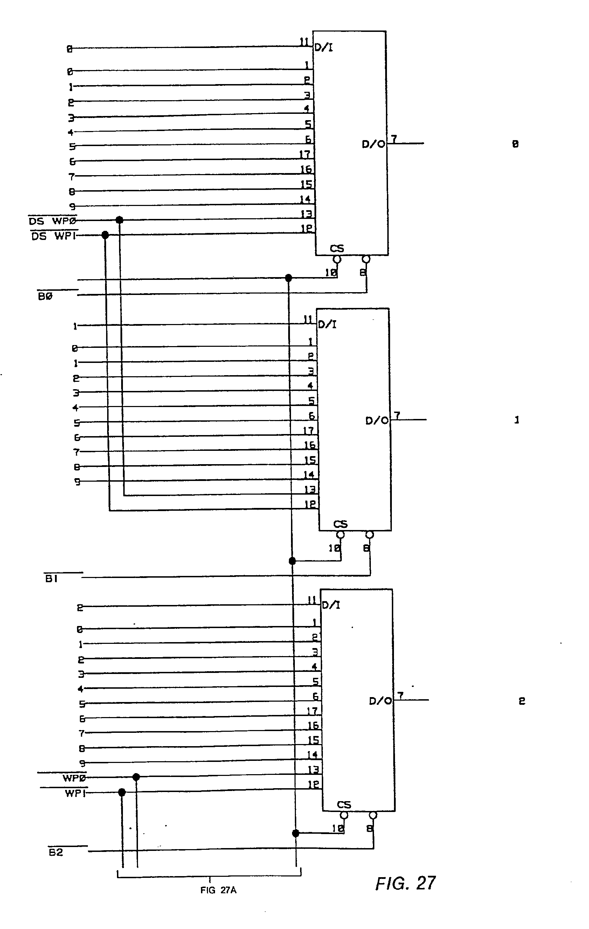

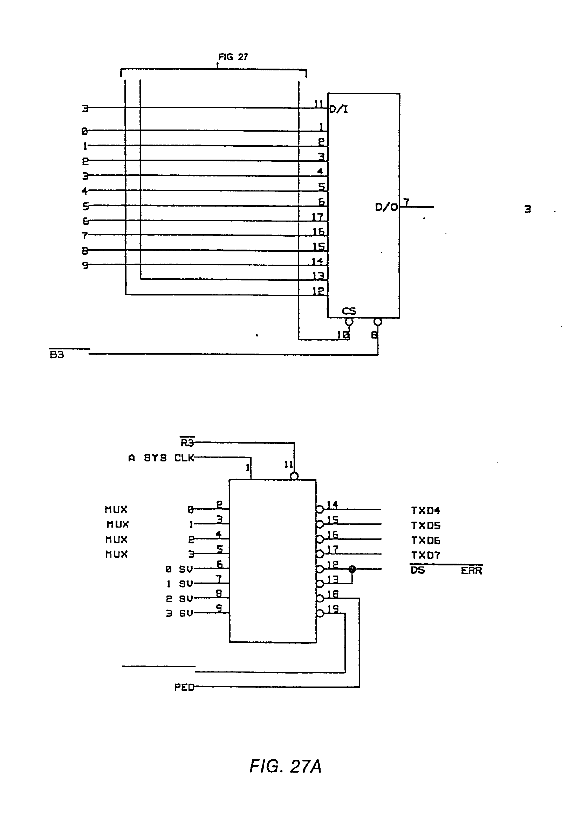

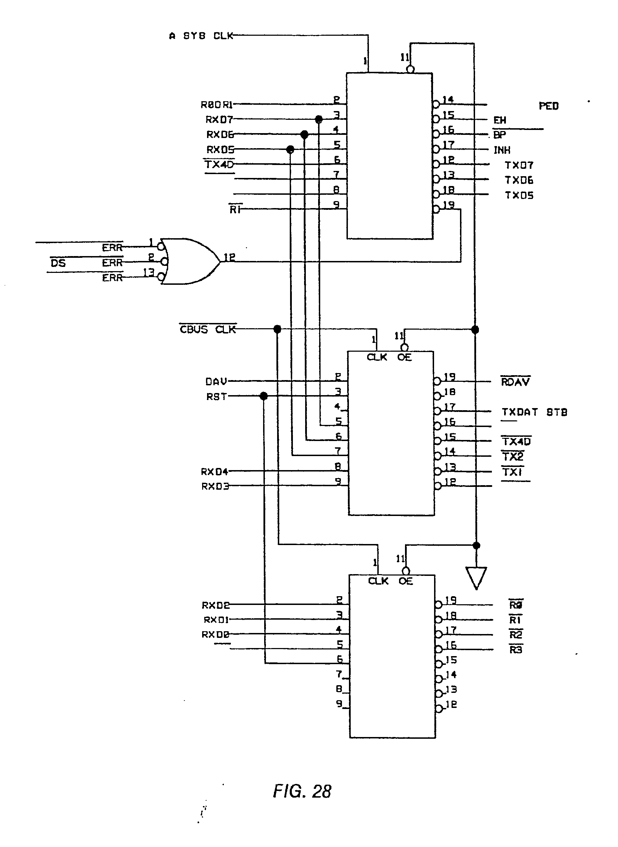

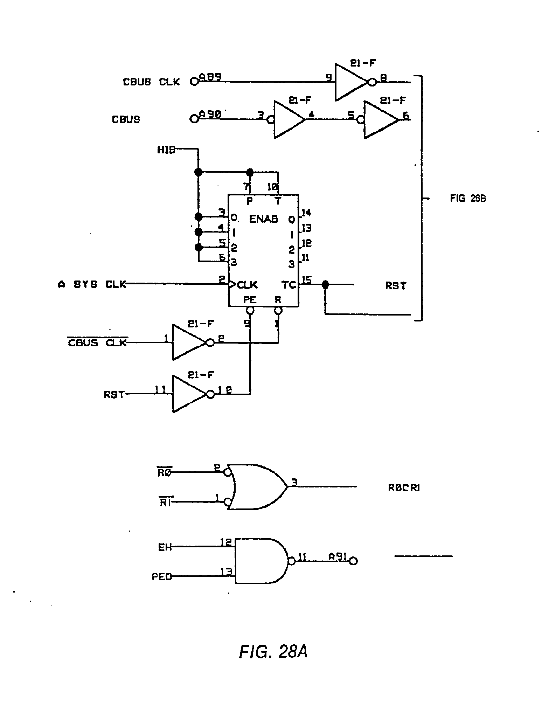

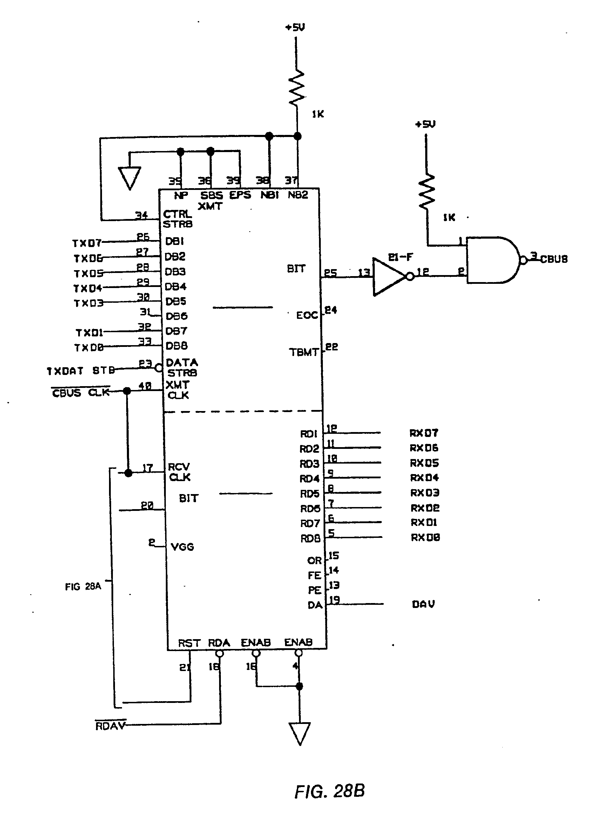

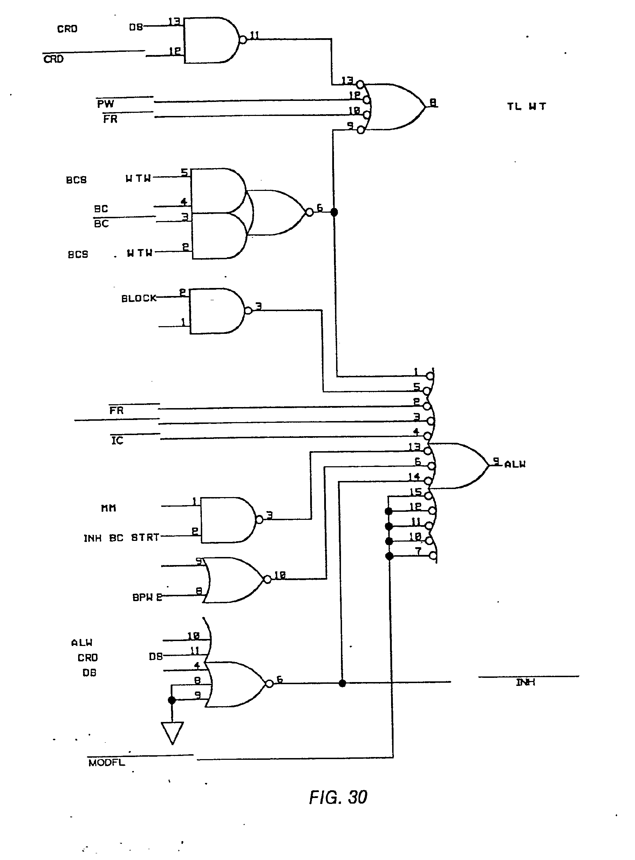

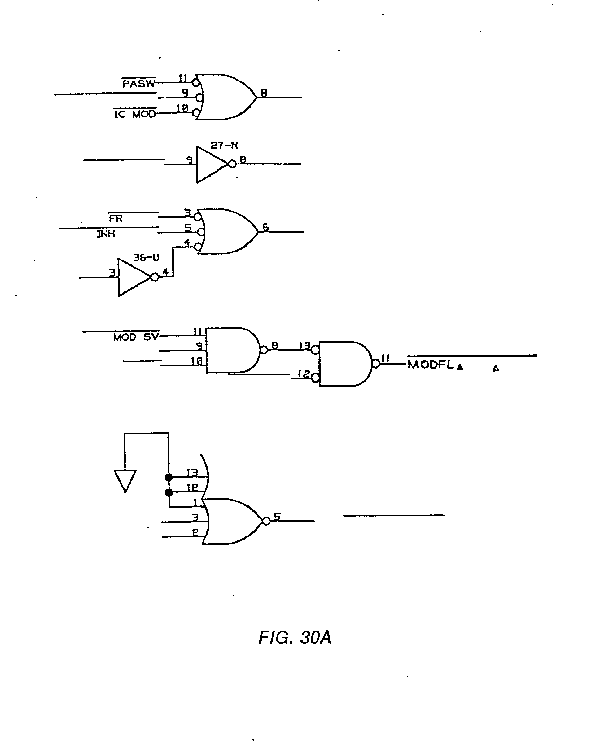

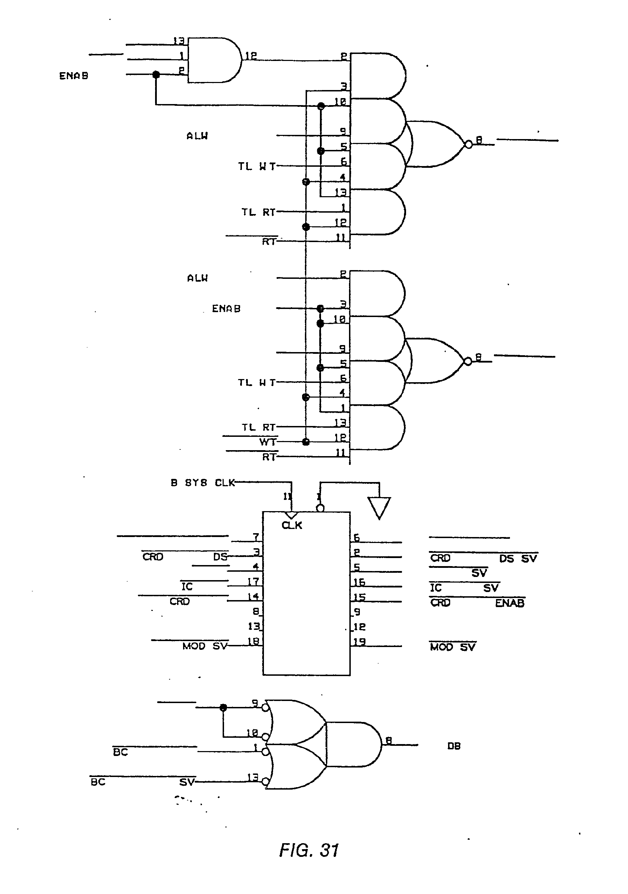

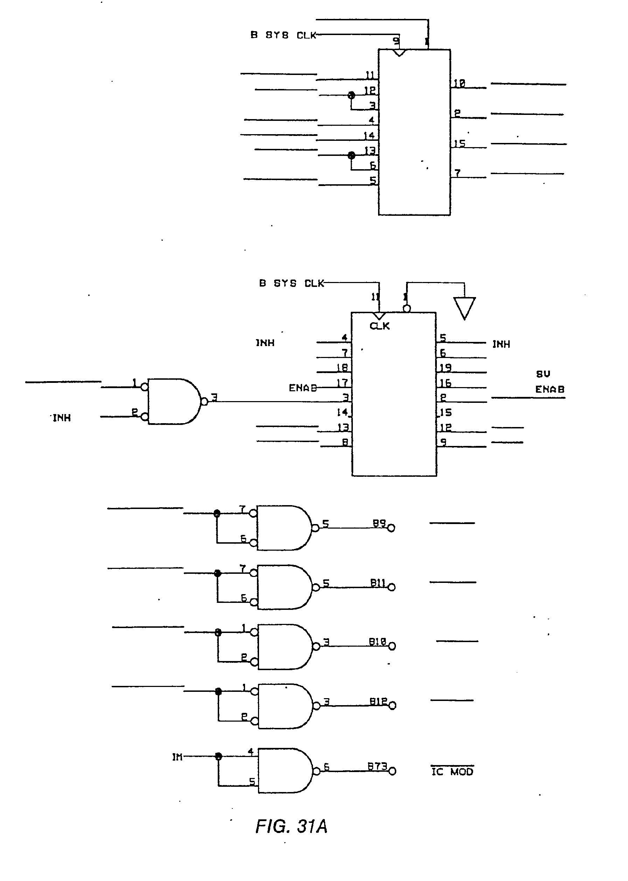

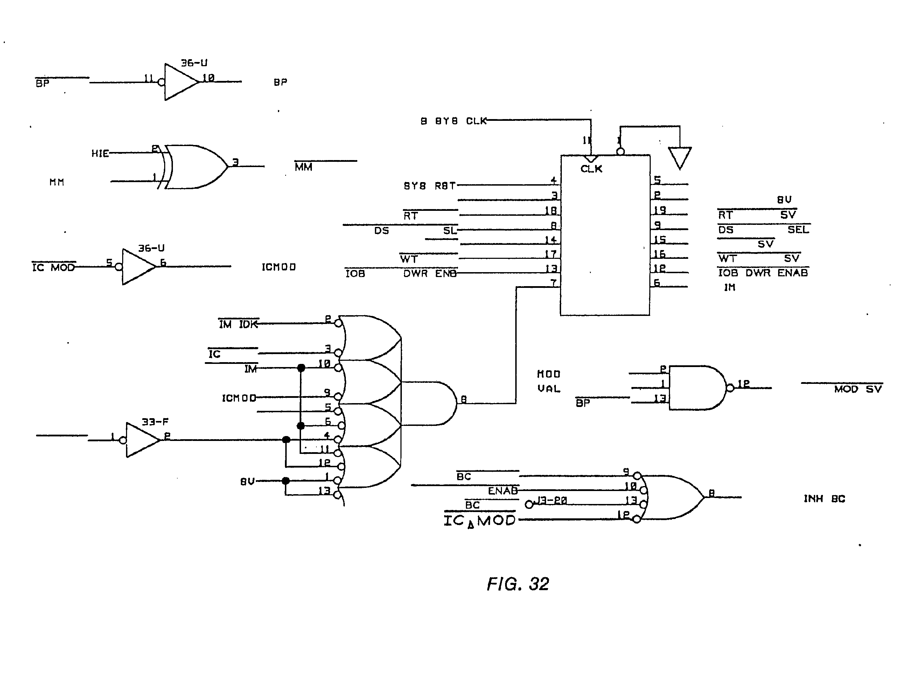

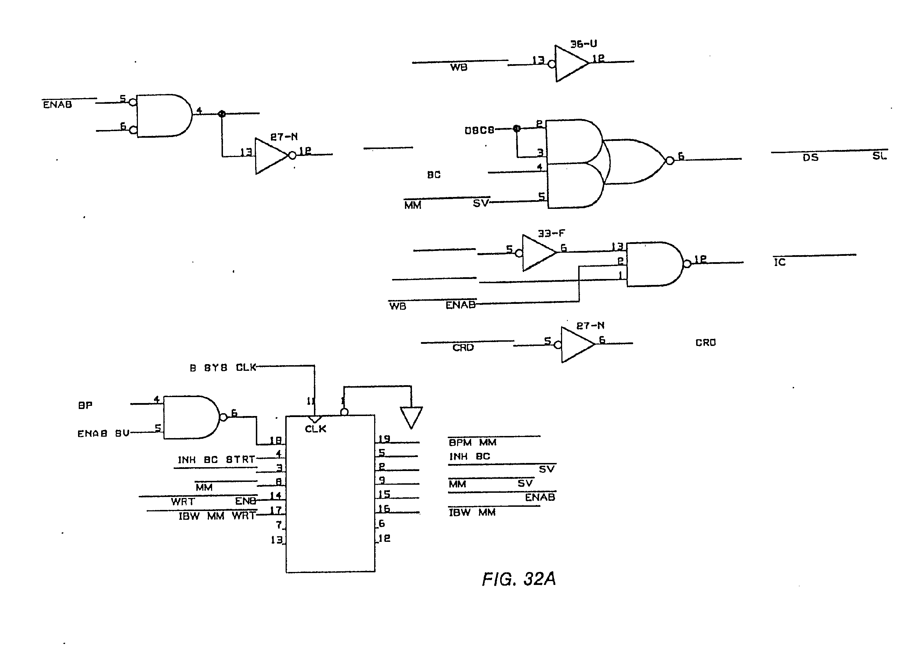

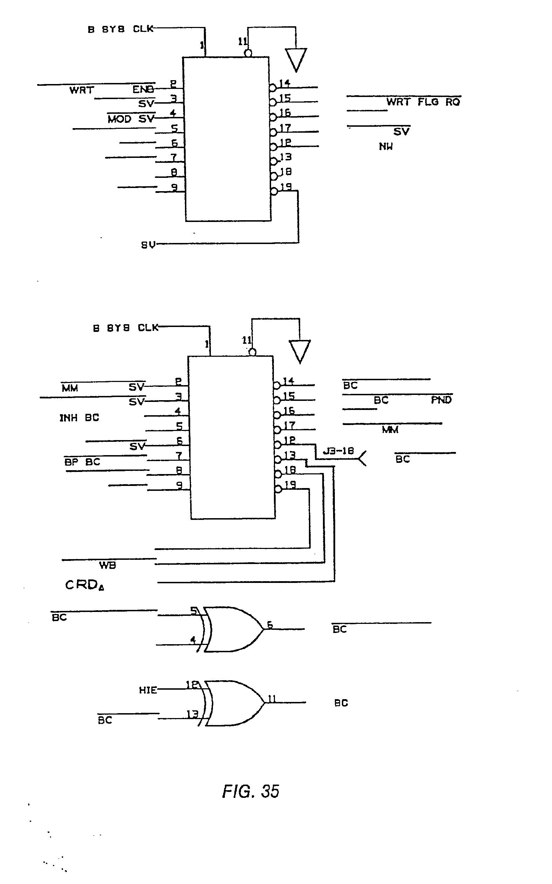

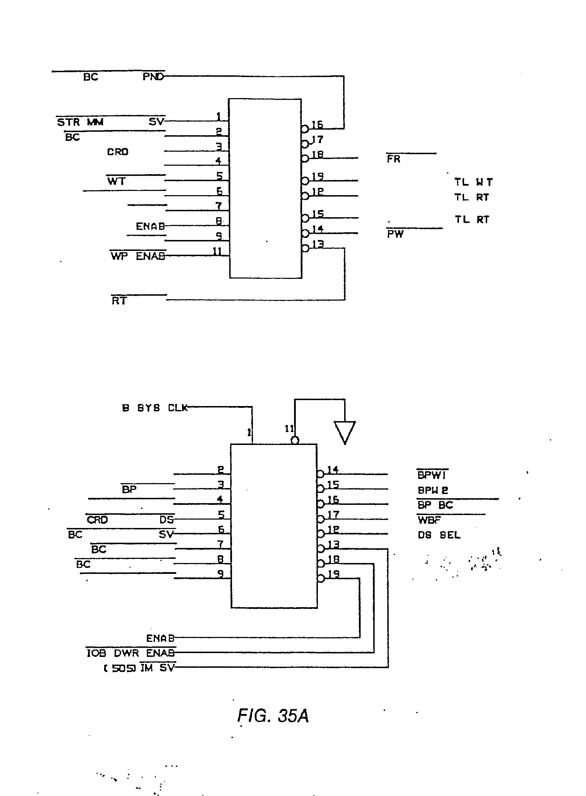

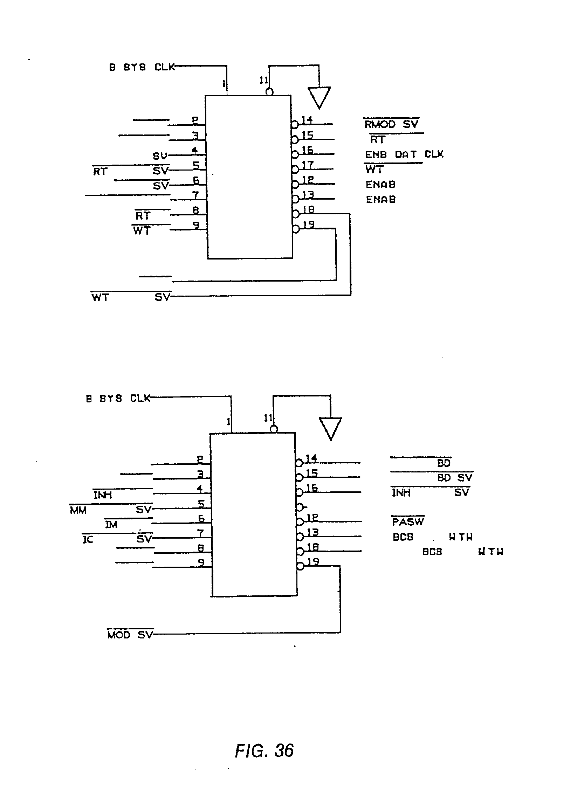

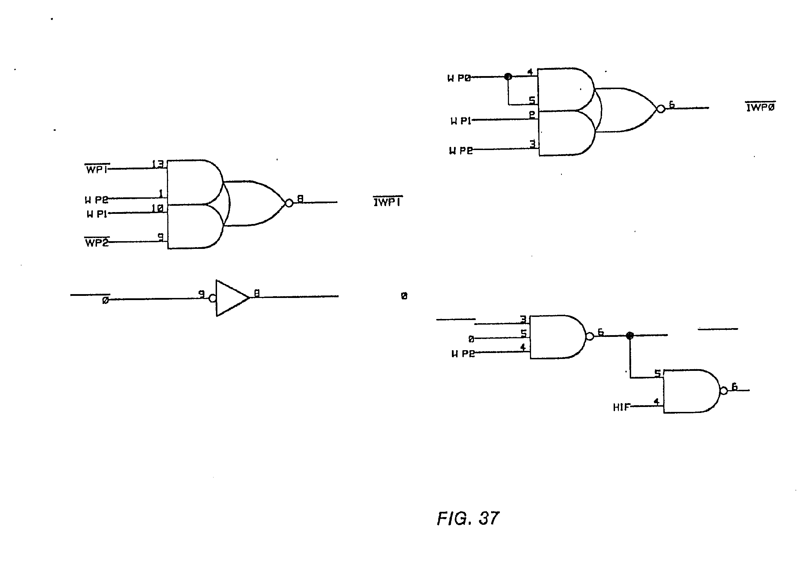

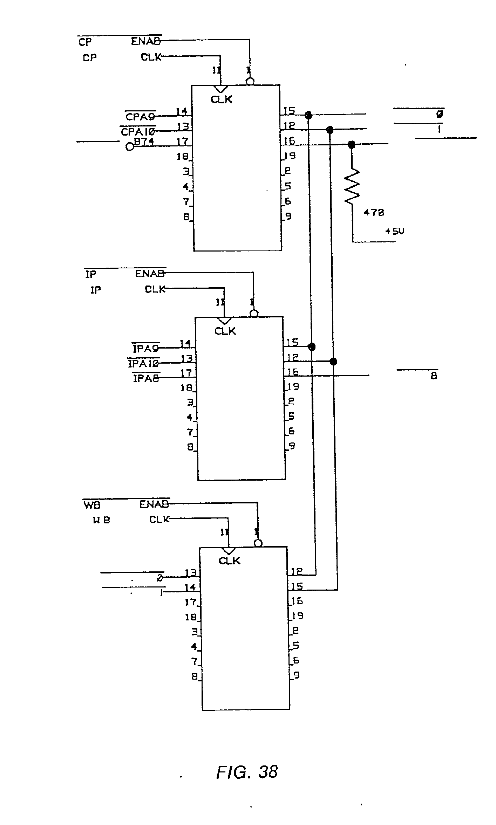

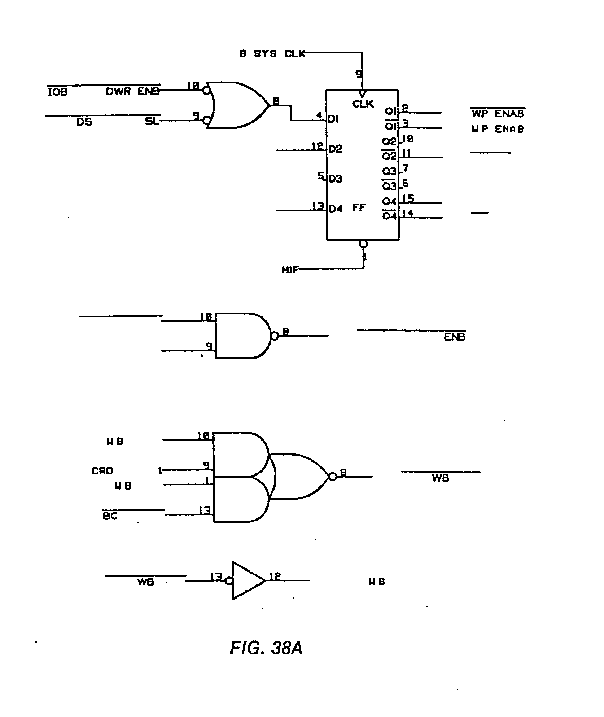

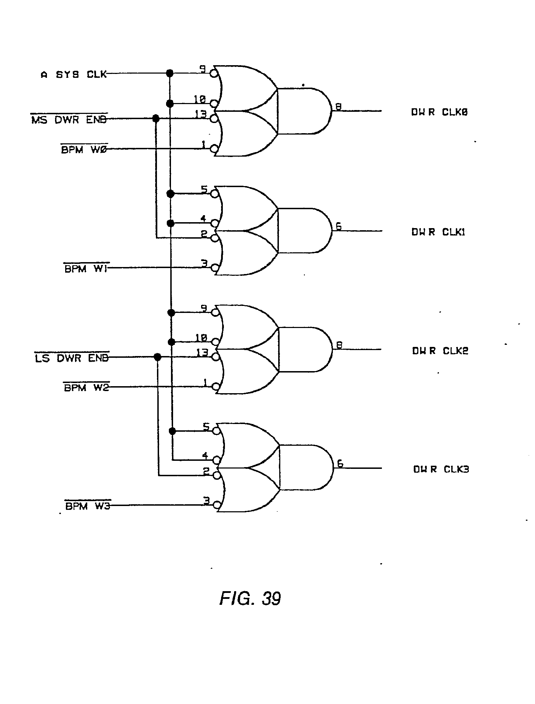

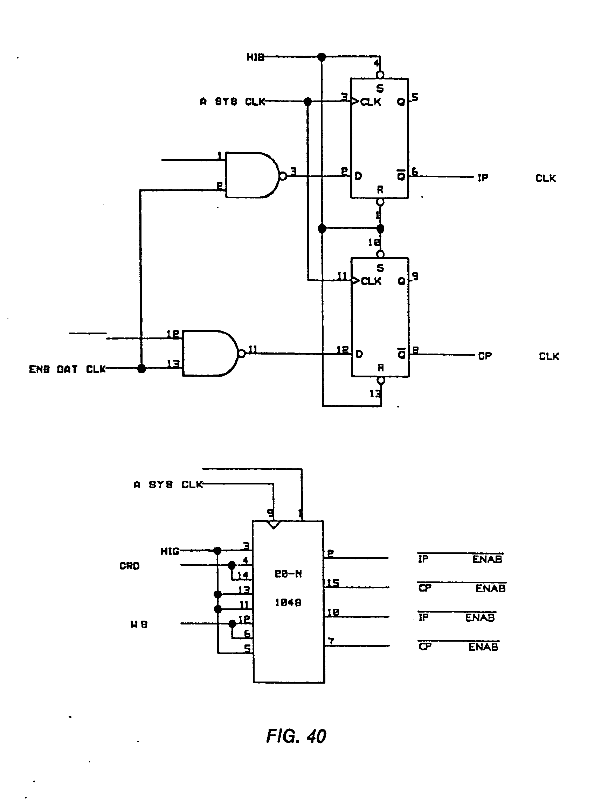

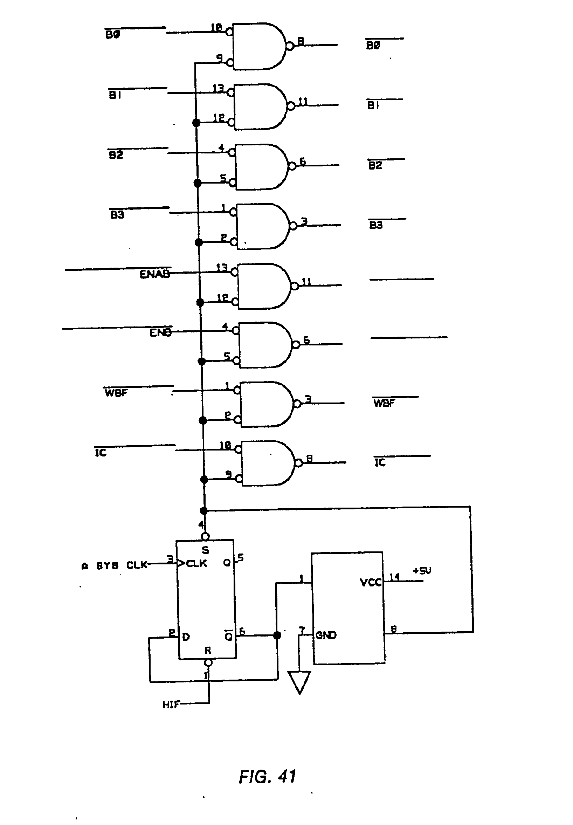

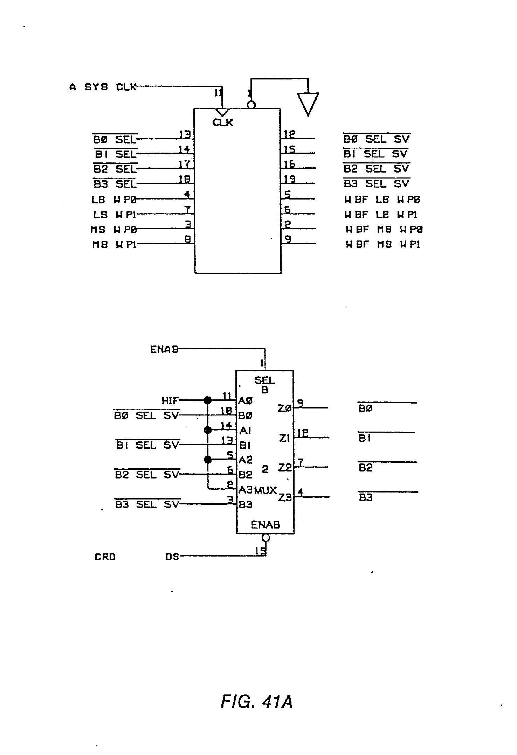

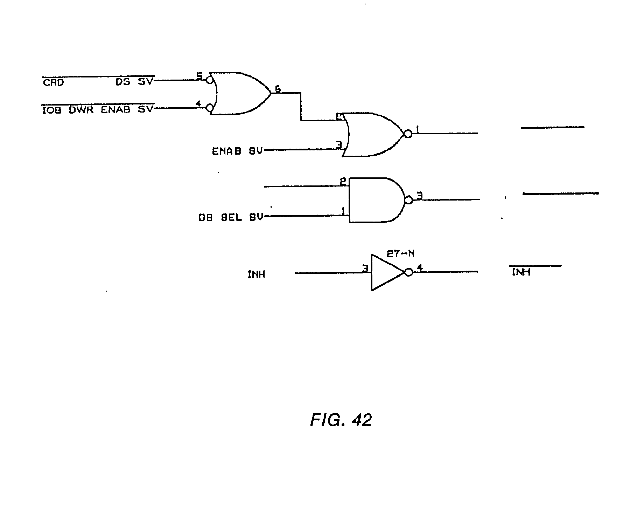

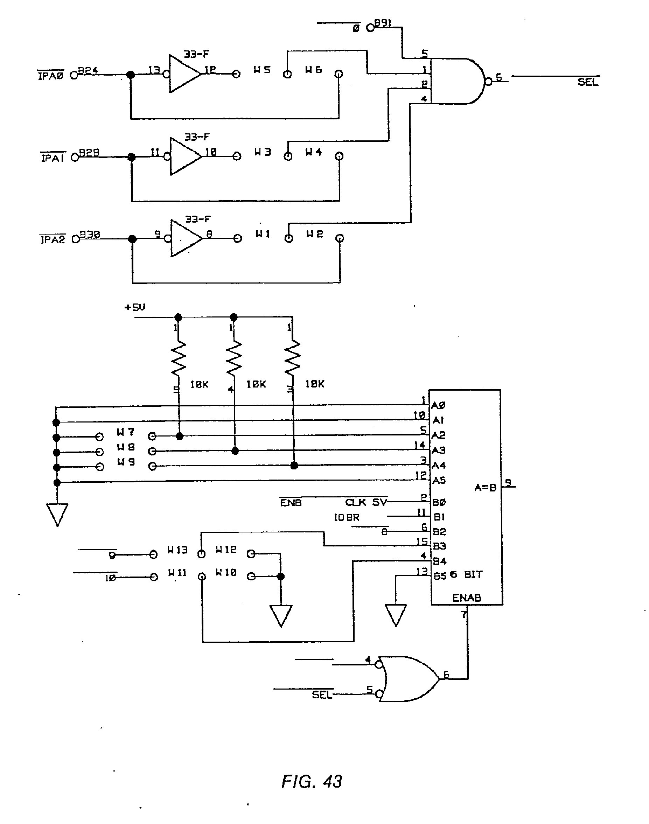

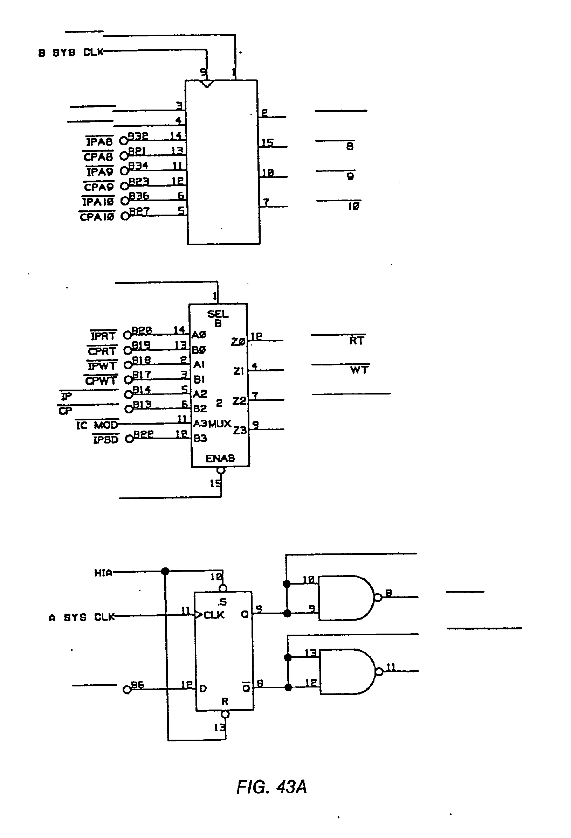

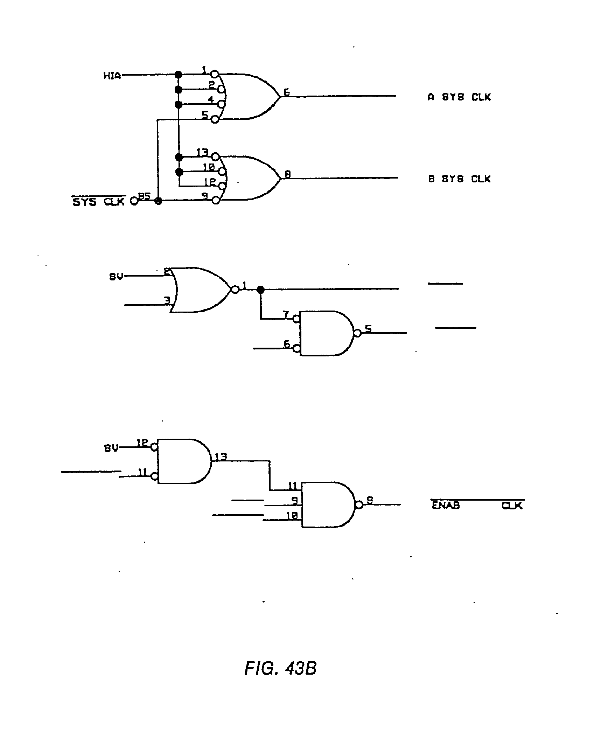

. Specific logic diagrams of the system cache board 17 depicted in FIG. 2 are shown in FIGS. 5-44, which latter figures are appropriately labeled as follows to show more specifically a particular embodiment of the various portions of the system cache 17 depicted therein.

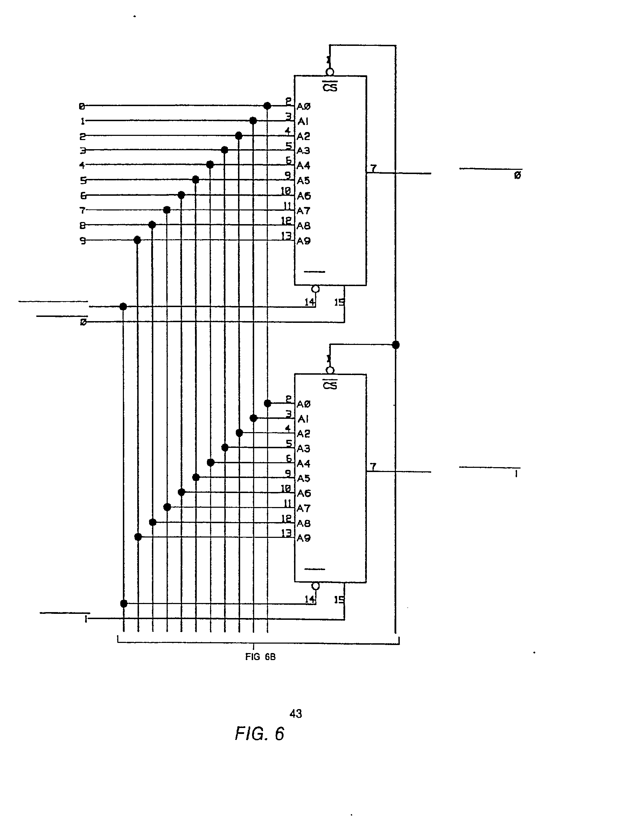

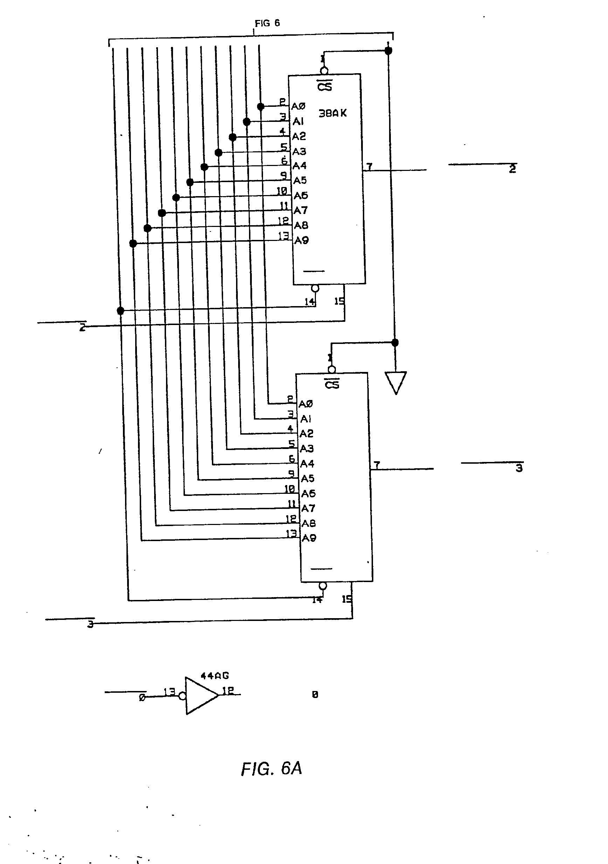

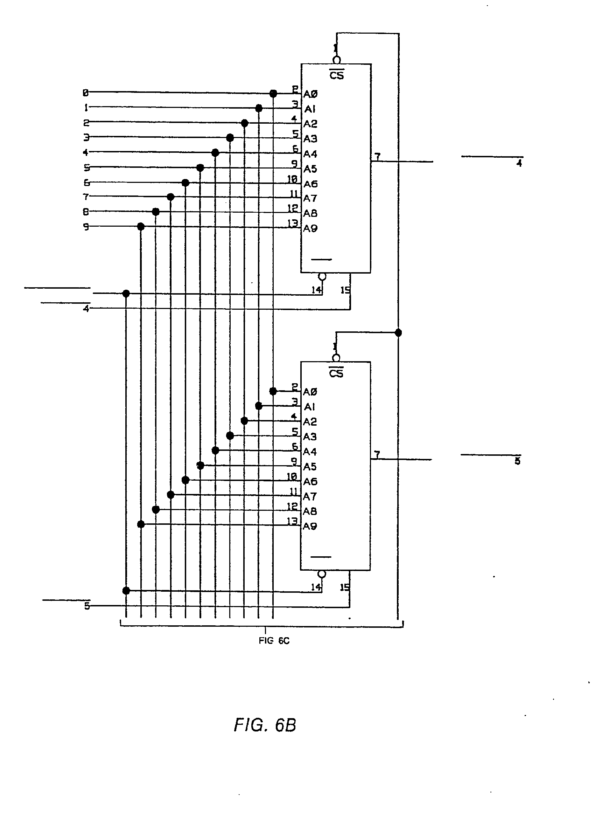

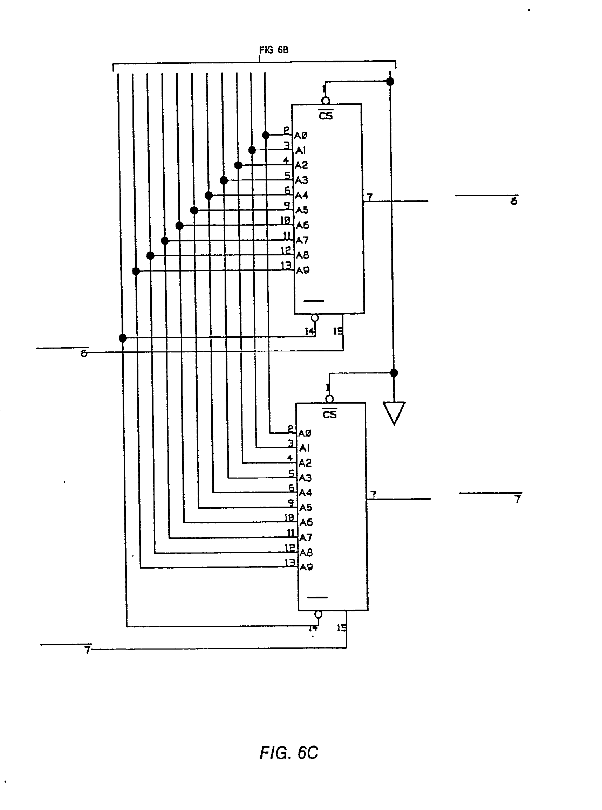

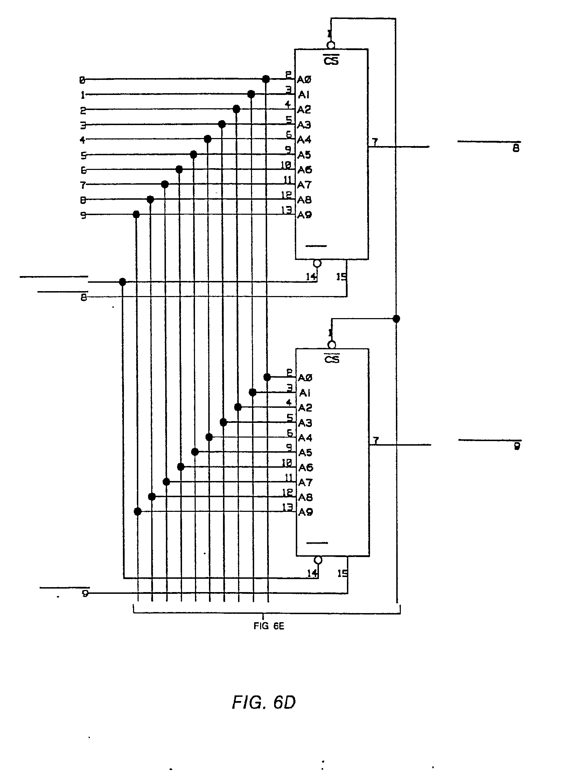

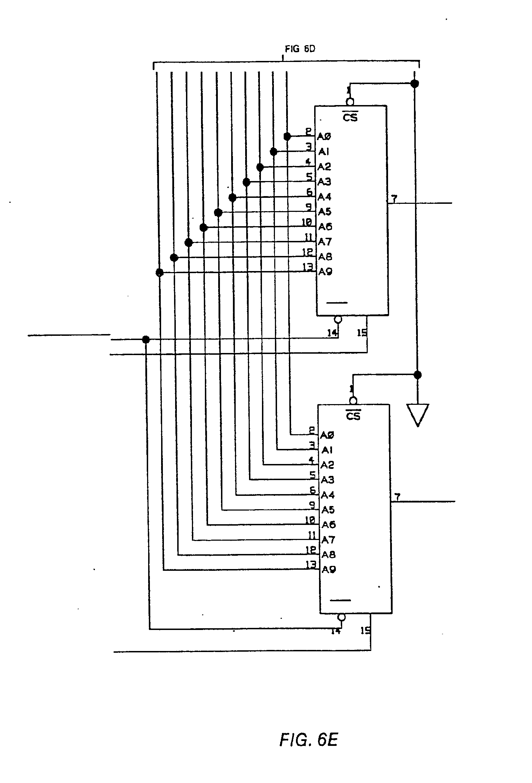

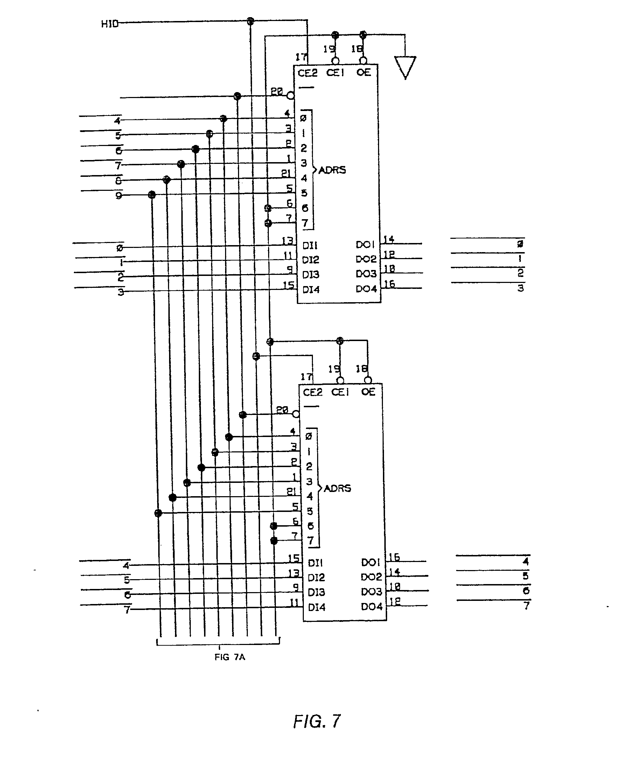

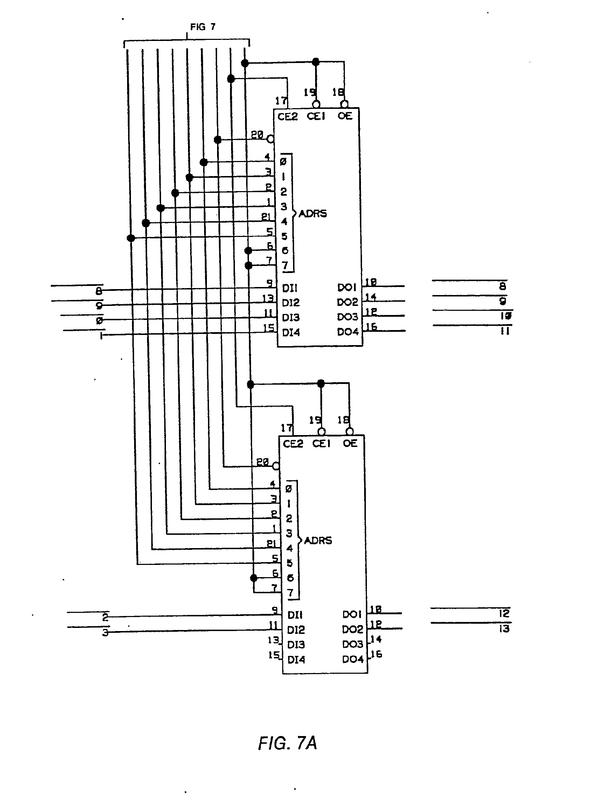

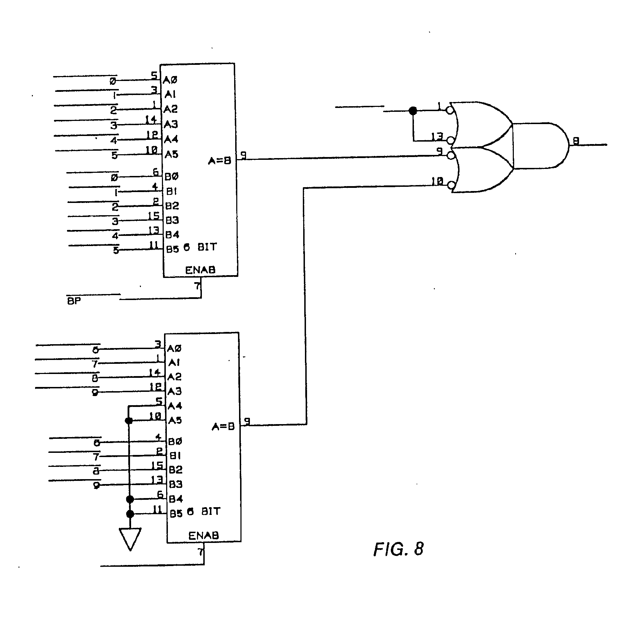

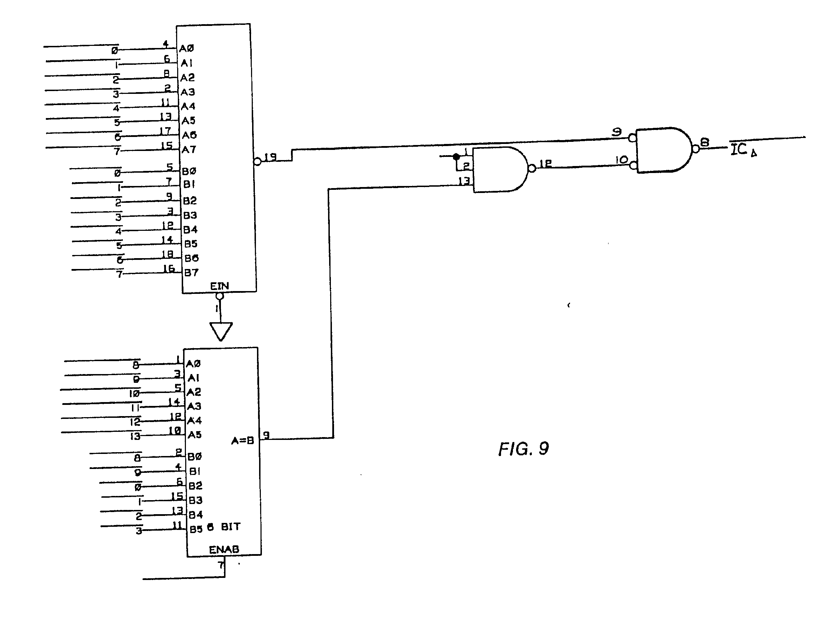

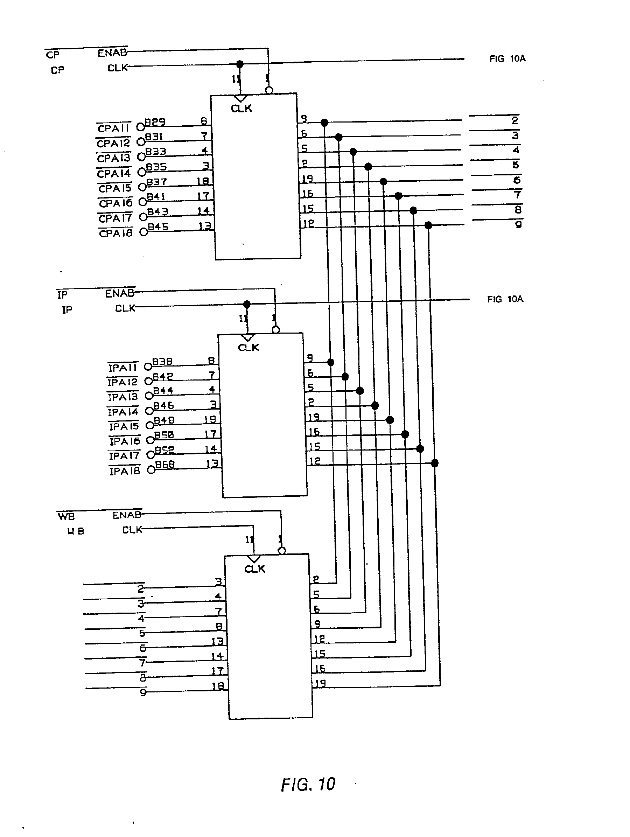

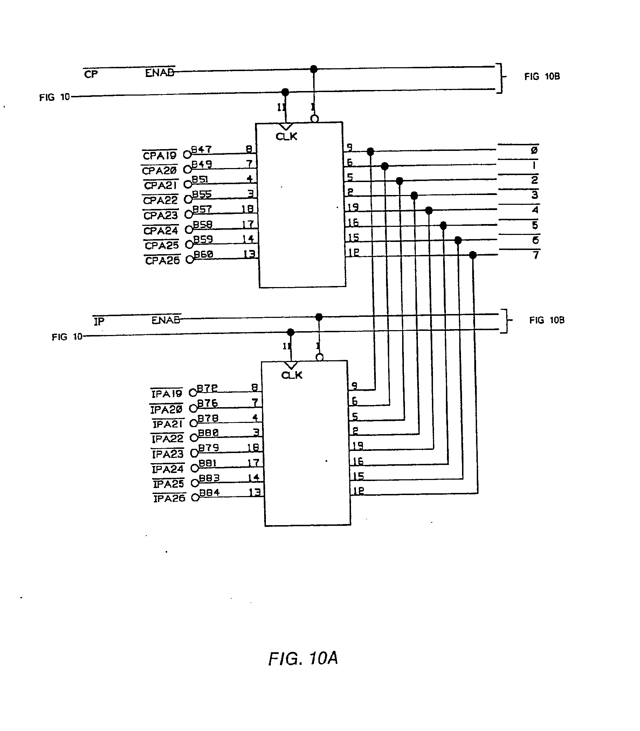

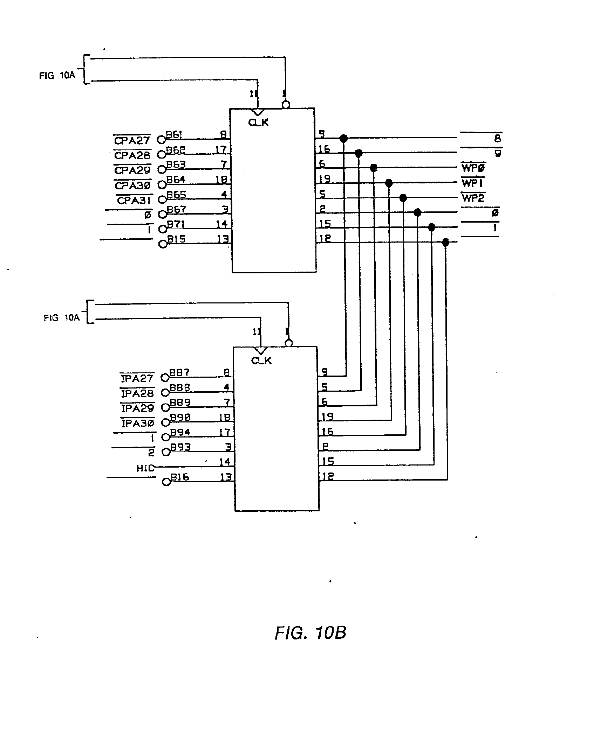

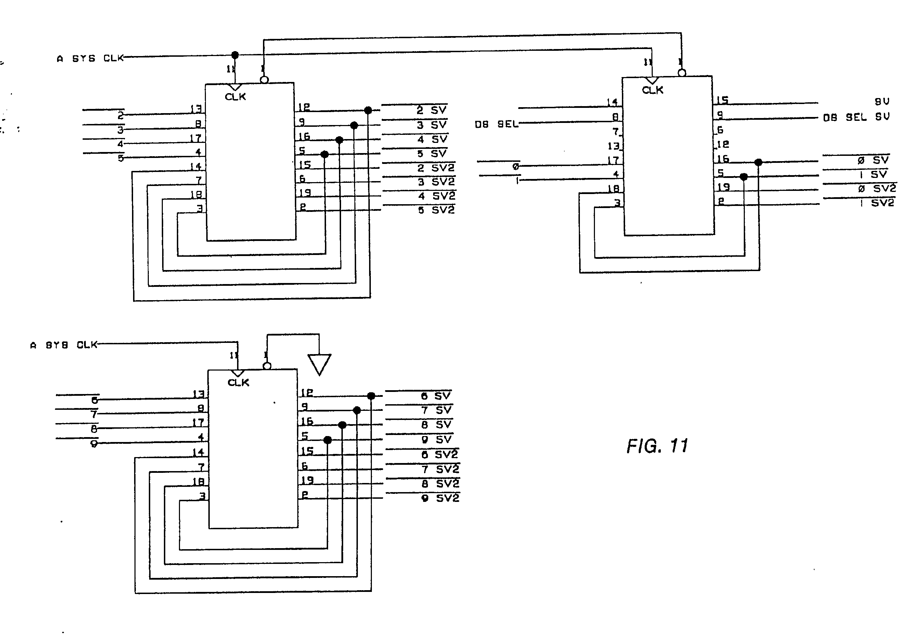

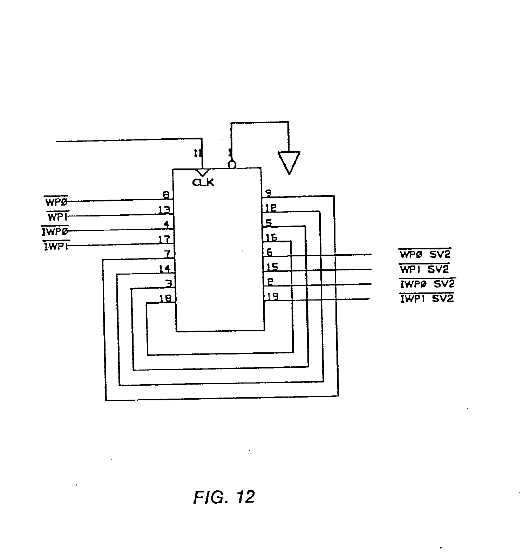

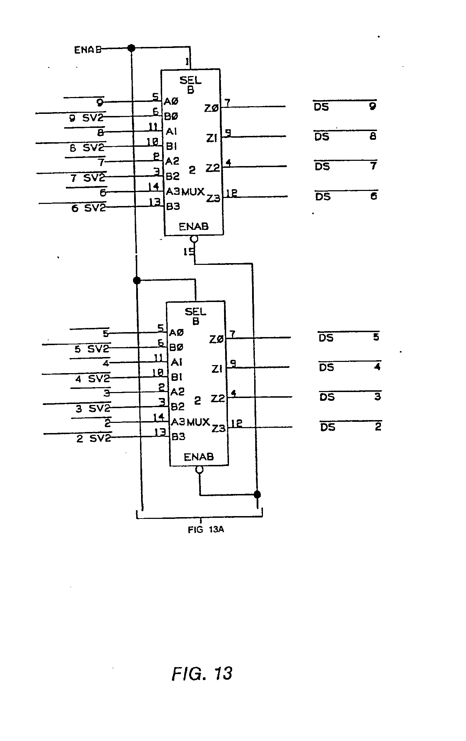

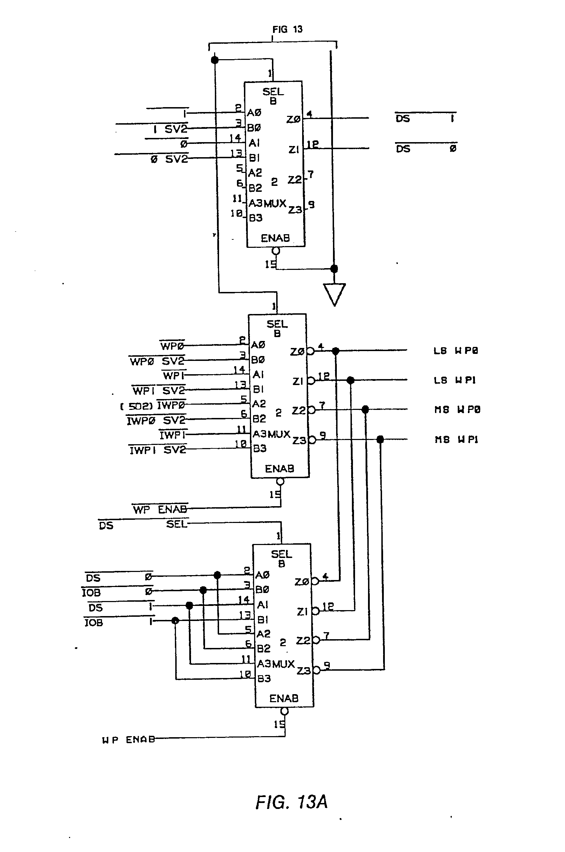

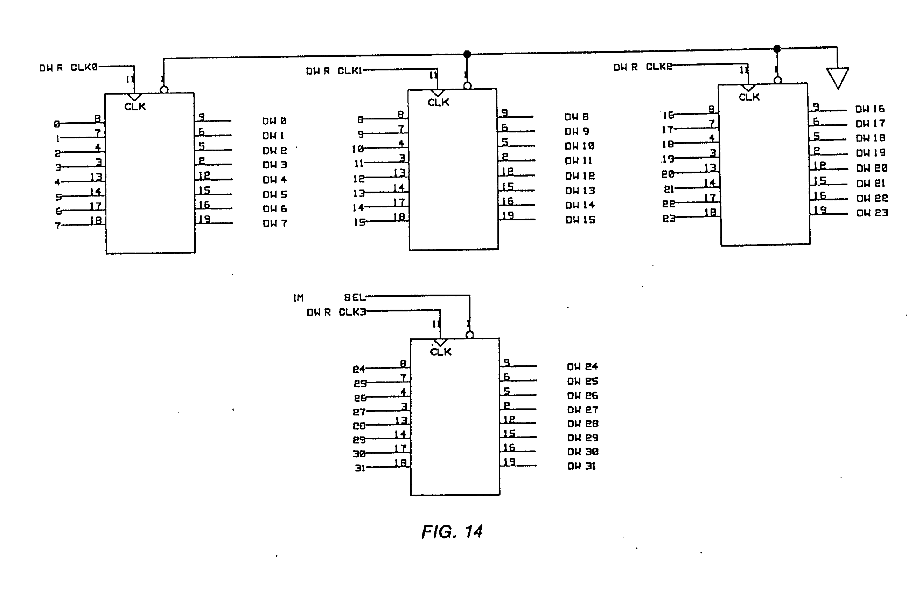

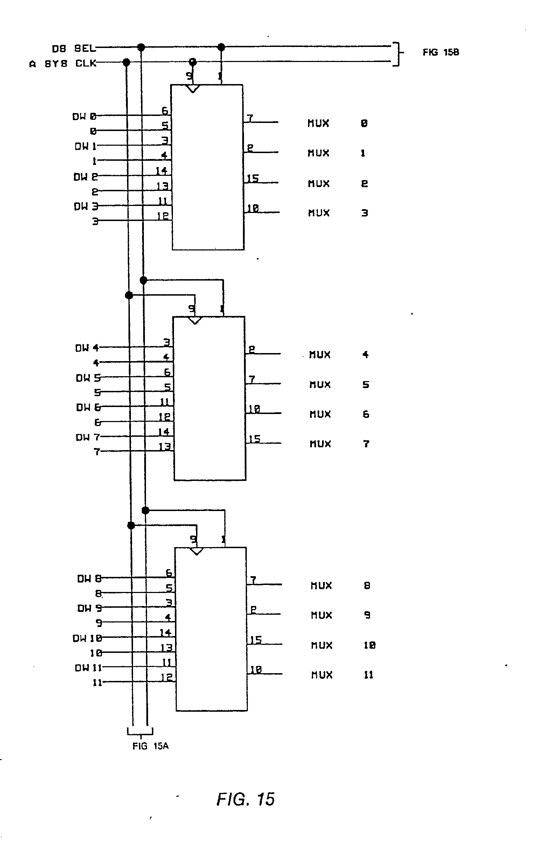

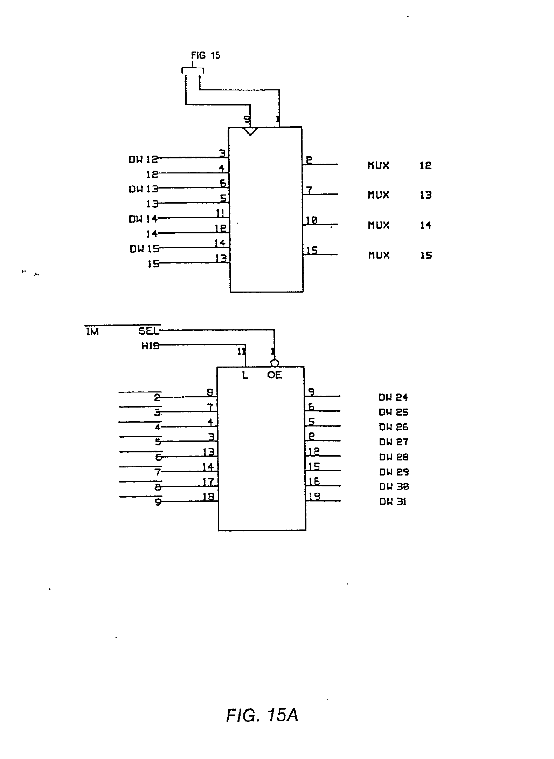

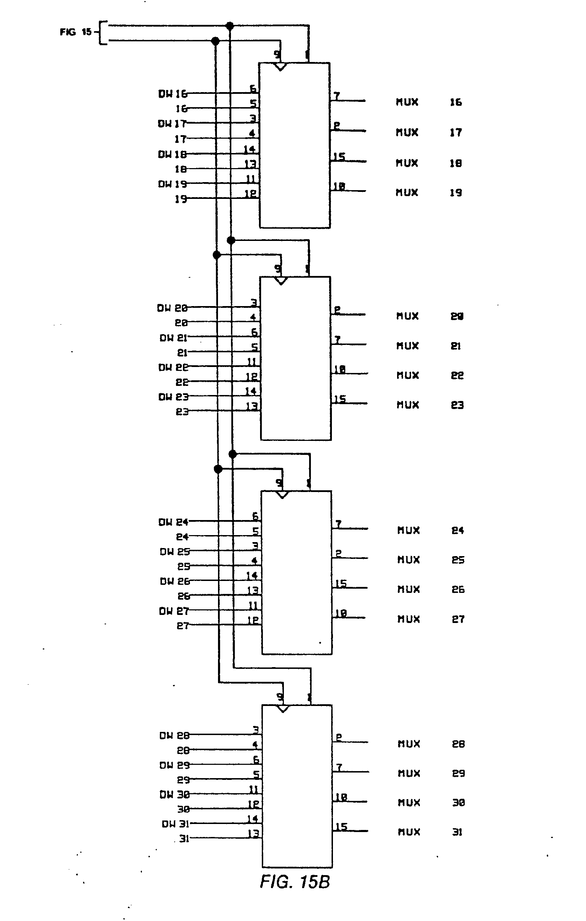

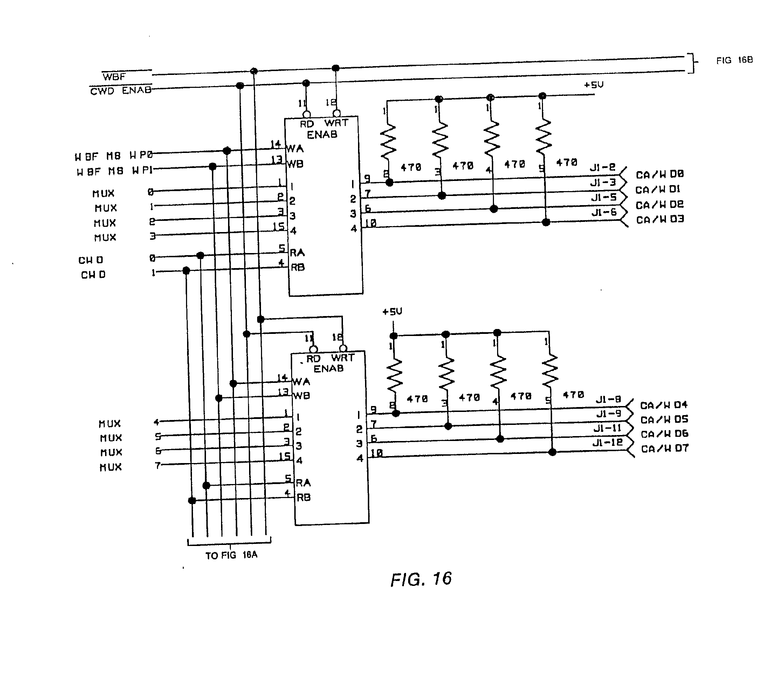

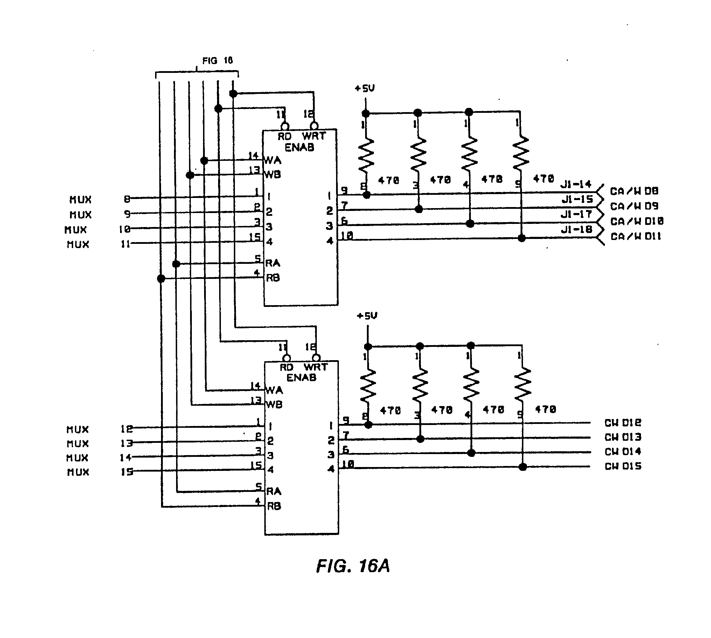

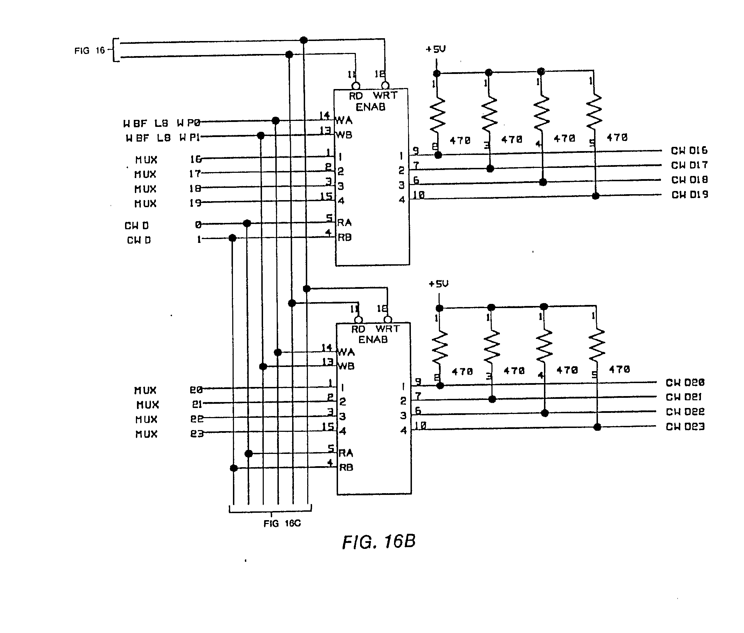

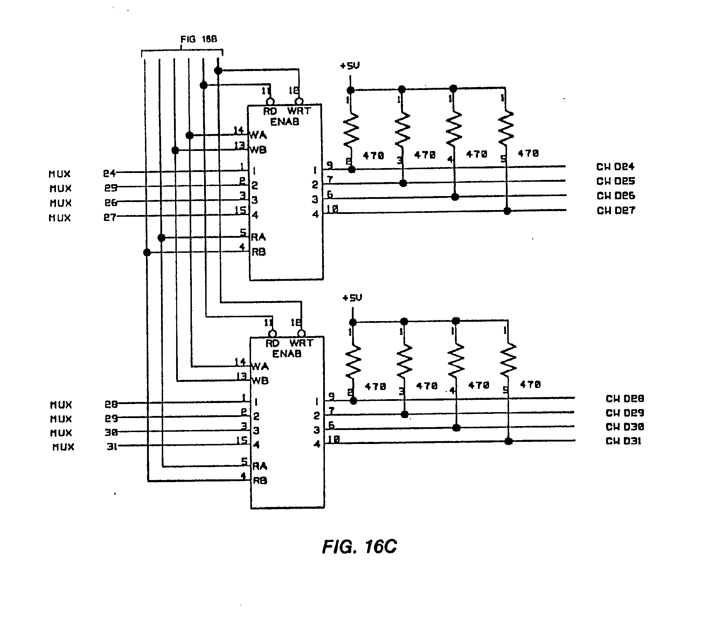

FIG. 5 shows the cache data store 40; FIG. 6 the Tag store 43; FIG. 7 the ICACHE tag store copy unit 44; FIG. 8 the tag store comparator 52; FIG. 9 the ICACHE tag store comparator 45; FIG. 10 the CPORT and IPORT registers 41 and 42 and the write back tag unit; FIGS. 11 and 12 the INDEX SV WP SV unit of FIG. 2; FIG. 13 the INDEX and WP multiplexer units; FIG. 14 data write register 40A; FIG. 15 the multiplexer unit 48 and the index driver unit 48' which supplies an input

to multiplexer 48; FIG. 16 the write data register 46;

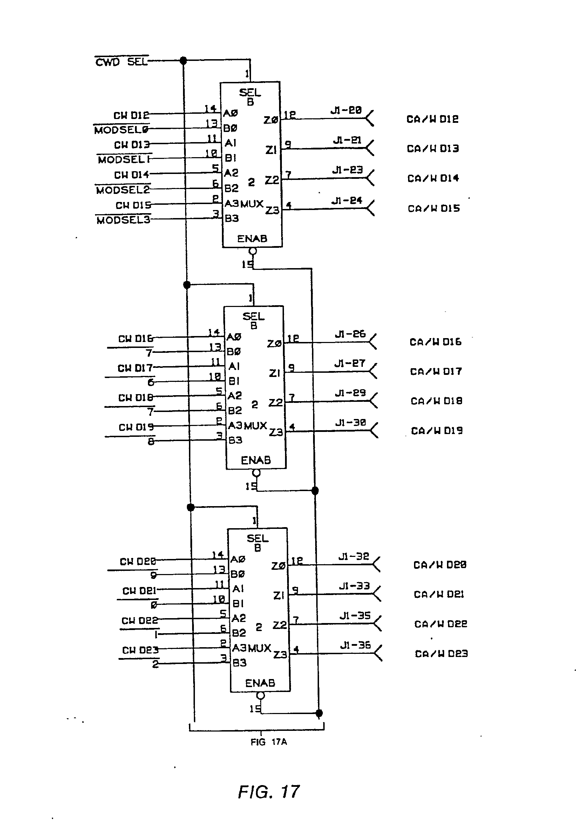

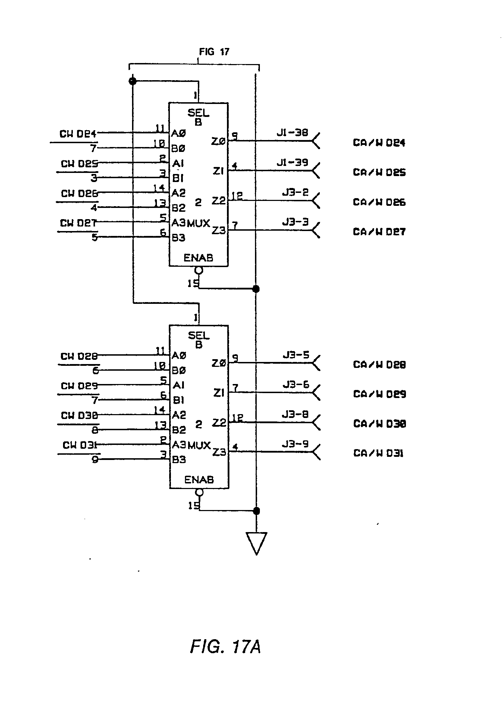

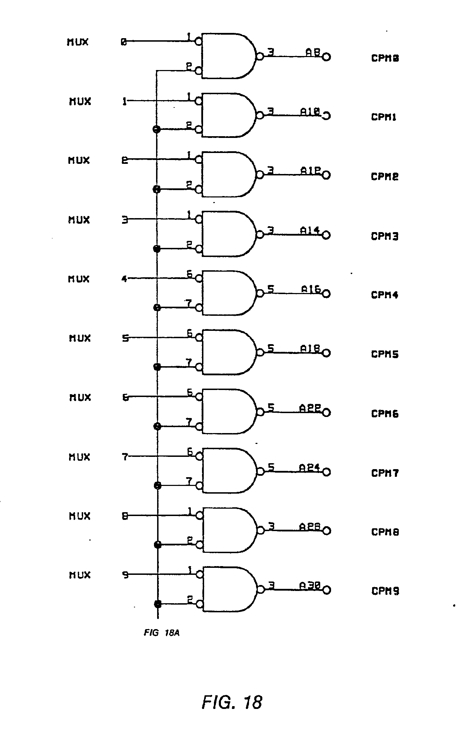

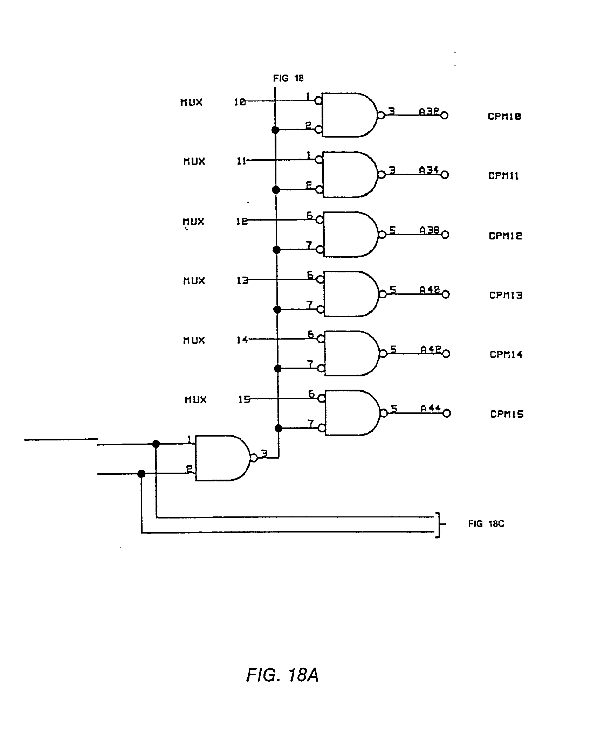

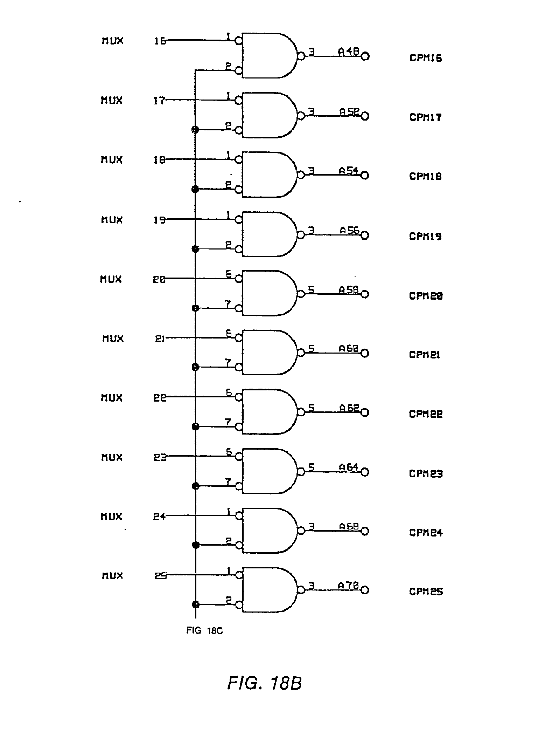

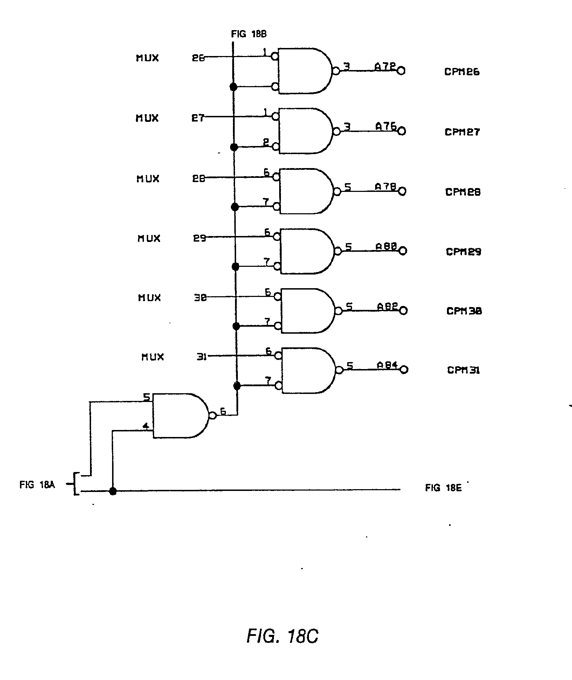

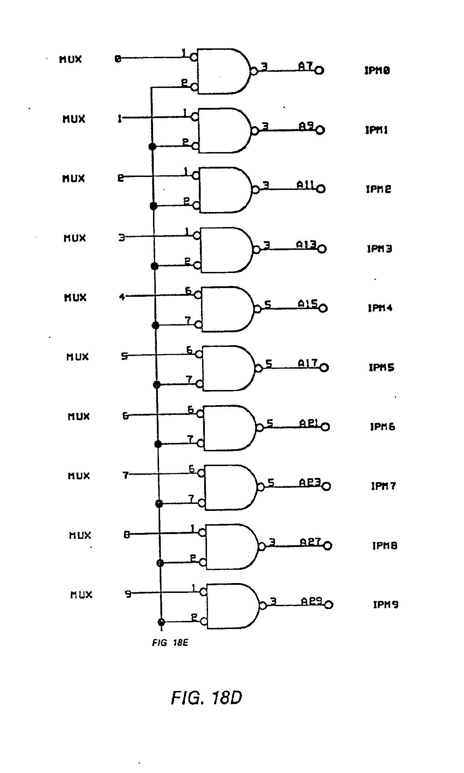

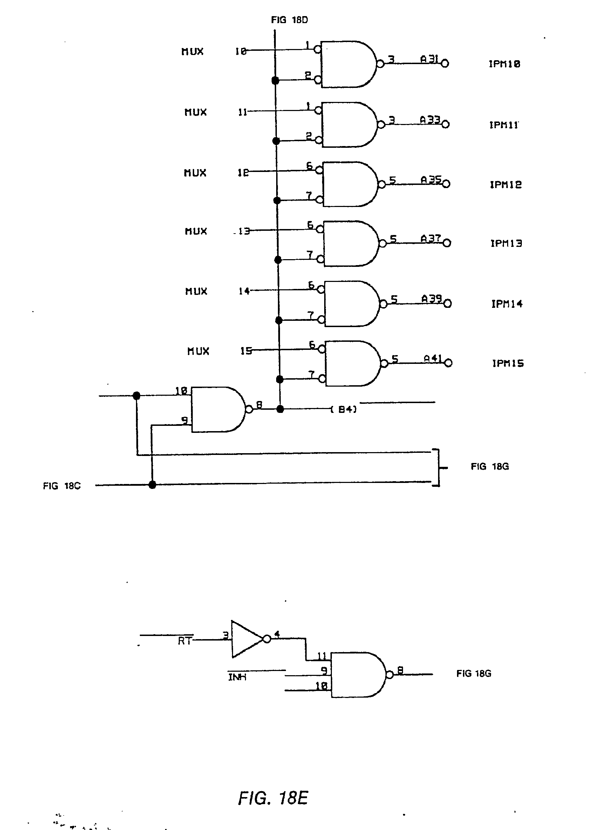

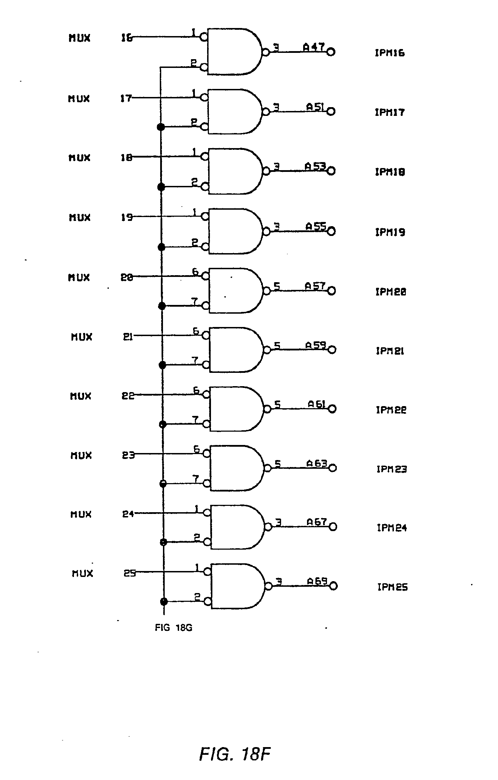

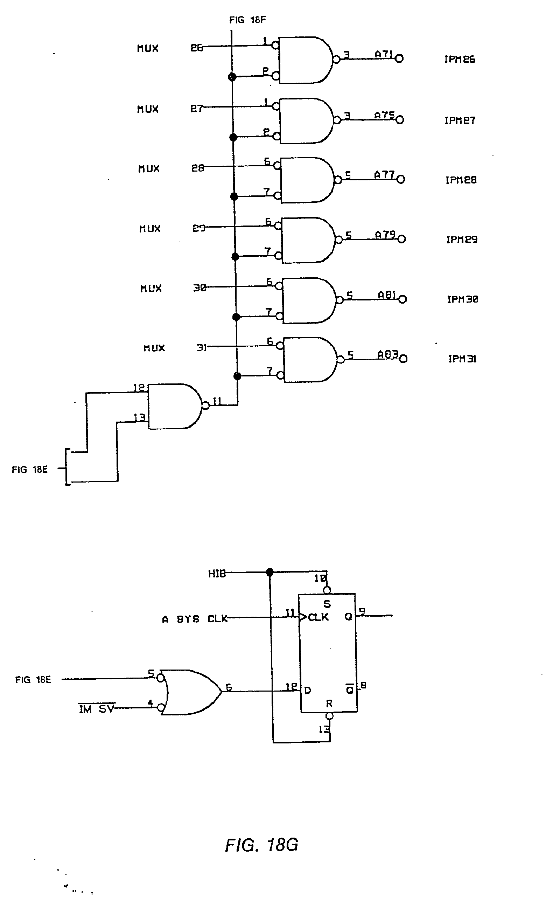

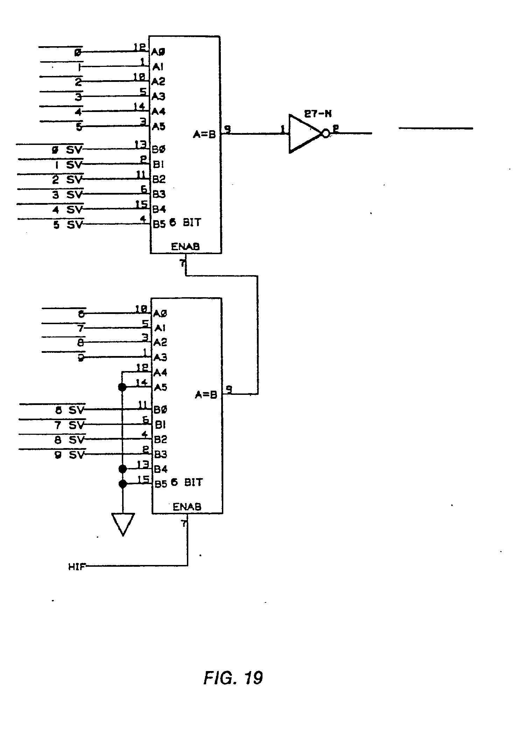

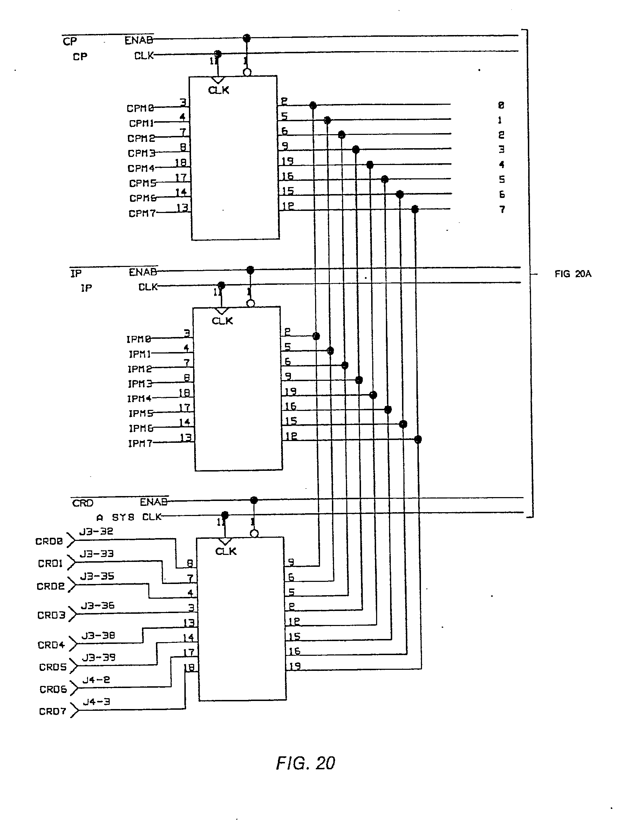

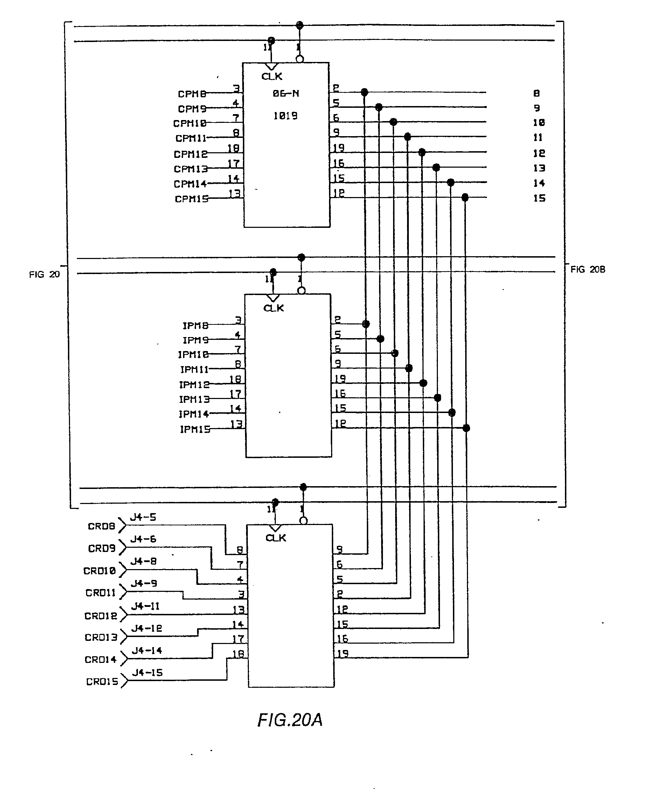

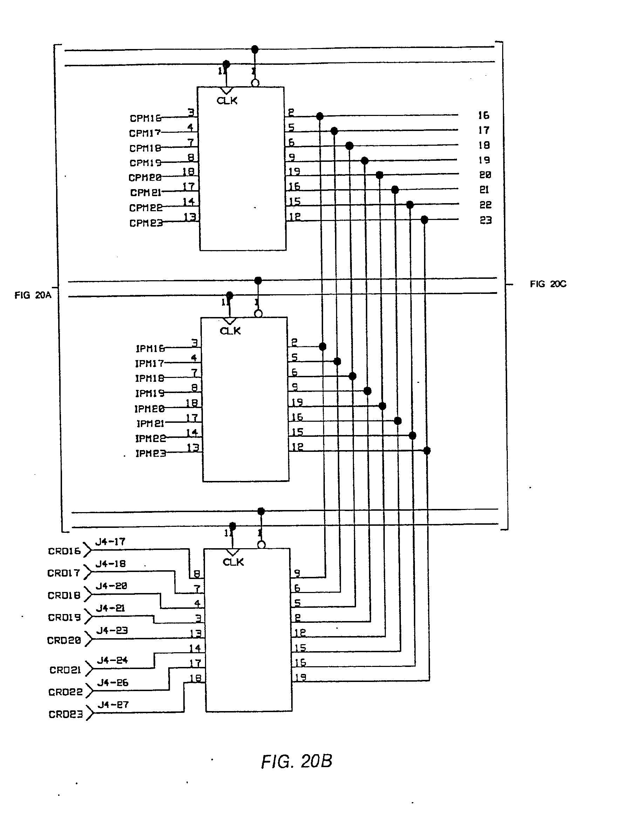

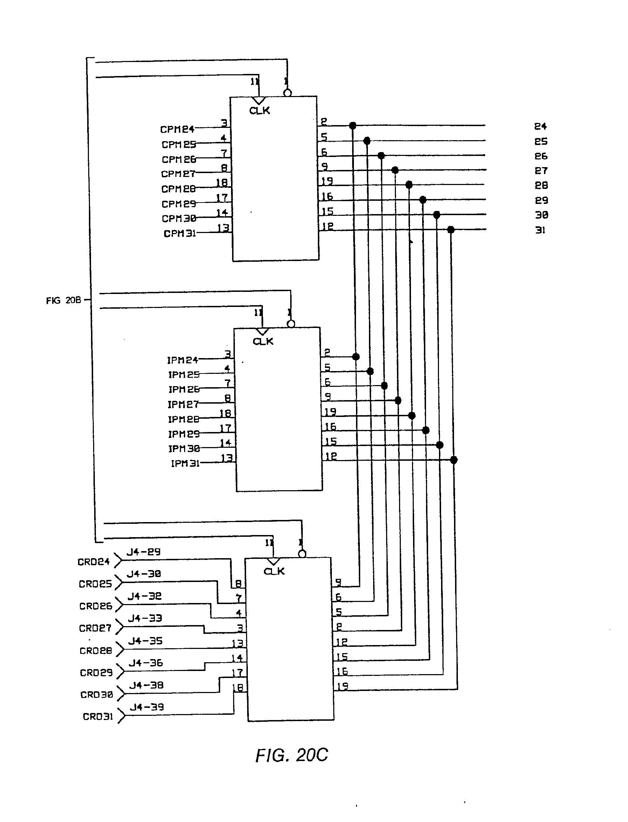

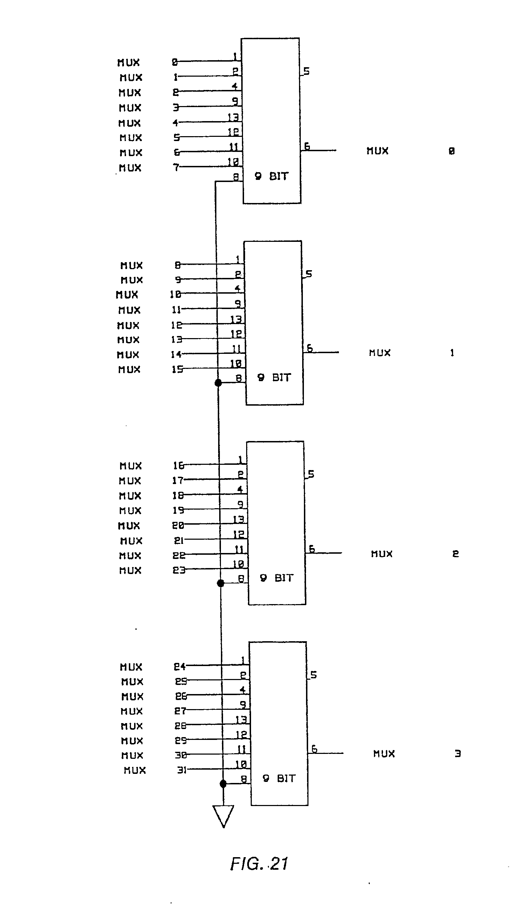

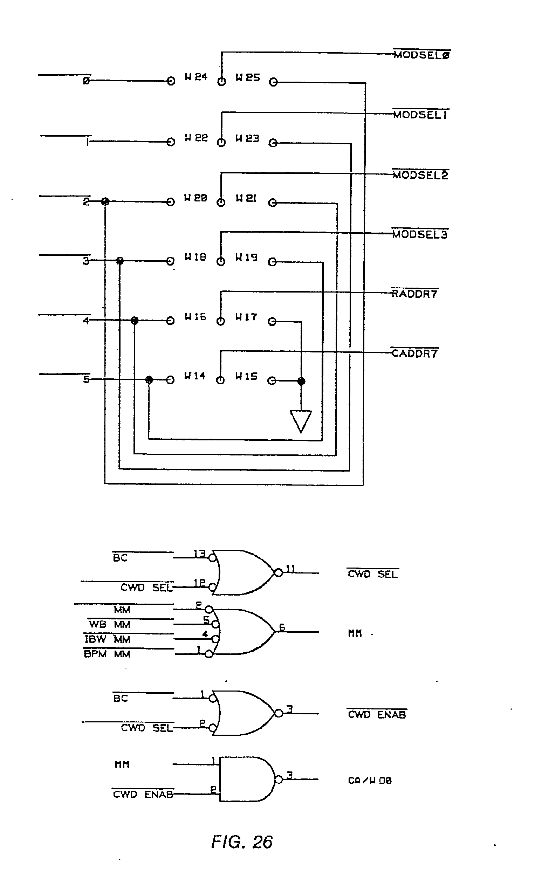

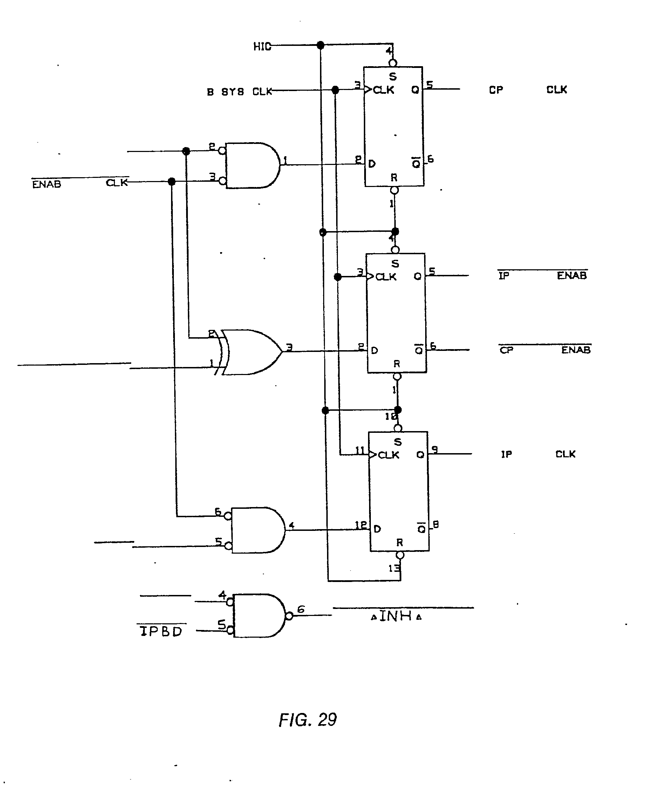

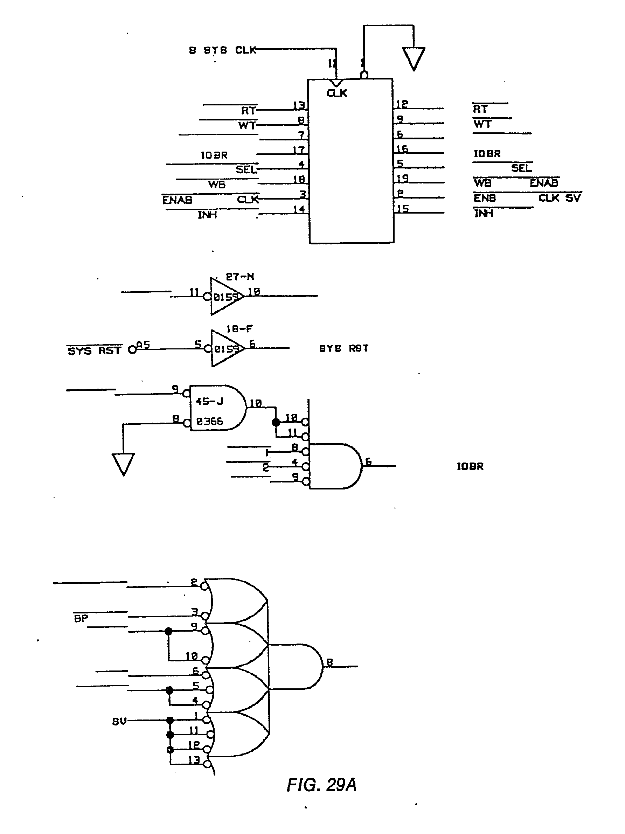

FIG. 17 the multiplexer unit 47; FIG. 18 the driver units 50 and 51 and driver logic associated therewith; FIG. 19 the INDEX/INDEX SV comparator unit; FIG. 20 the CPU buffer data register 54, the I/O buffer data register 55, and the CRD IN register 53.  The specific system cache parity logic is shown in FIGS. 21-25.  The main memory and other interface control logic is shown in FIGS. 26-28.  As in any data processing system board, adequate control signals for the various units thereon must be provided and control logic for the particular embodiments of the system cache board depicted in FIGS. 5-27 are shown in FIGS. 29-43.

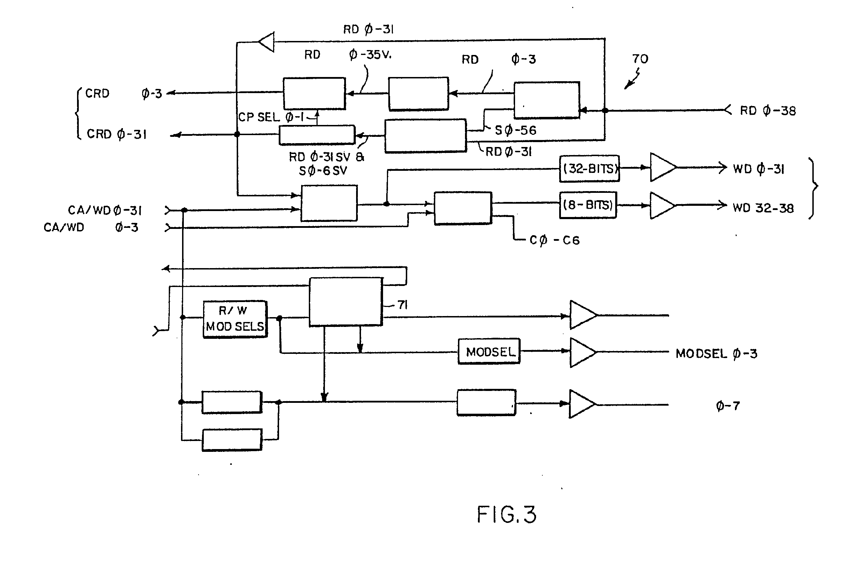

FIG.3 depicts an overall block diagram of the bank controller 18 which interfaces between the system cache at the left hand side of the drawing and the memory modules at the right hand side thereof. Words which are read from the memory modules, identified as RD ∅-38, including 7 parity bits, are supplied to the bank controller for transfer to the system cache, such words being identified as CRD ∅-31 in FIG 3, via the error correction logic 70 which also supplies four parity bits, identified as CRD PAR ∅-3. Address and data words which are to be written into the main memory modules are supplied from the system cache  such words being identified as CA/WD ∅-31, together with the parity bits therefor, identified as CA/WD PAR ∅-3, the data being supplied to the write data bus for the memory modules as WD ∅-31 and parity bits WD 32-38 via error correction logic 70. The addresses therefor are supplied in the form of information which is required to select the desired memory module (MODSEL ∅-3) (to identify up to 16 modules) and to select the desired RAM within the selected module (ADDR∅-7)

Further, the bank controller supplies the following control signals to the main memory which responds thereto as required. The RAS and CAS signals represent the row address and column address strobe signals for the RAM's of the main memory. The LDOUT signal causes the selected module to load its output register at the end of the current cycle and to enable the register to place the contents of the output register on the read data bus during the next cycle. The LDIN signal causes the selected module to accept data from the write bus during the next cycle and to write such data into the RAMs during the following cycle. The REFRESH signal overrides the module selection for the row address strobe (RAS) signal only. During a refresh operation one module is read normally and all others perform an RAS refresh only.

The bank controller also interfaces the system cache to supply 32-bit words (CRD $\emptyset$-31) to the cache along with 4 parity bits (CRD PAR $\emptyset$-3) for byte parity and to receive 32 bit address and data words (CA/WD $\emptyset$-31) from the cache along with byte parity bits (CA/WD PAR $\emptyset$=3). The bank controller also supplies the following control signals to the cache. The BC BUSY signal indicates that the bank controller is not able to accept a BC START (see below) request. The BC ERROR signal indicates that the data word placed on the read data bus during the last cycle contained a correctable error and must be replaced with the corrected word for the data which is on the bus during the current cycle. Once a BC ERROR signal has been asserted all subsequent words of the same block transfer are also passed through the error correction logic. Accordingly, BC ERROR need be asserted only once for each block transfer.

The BC DATABACK signal indicates that the first word of the four word block to be transferred will be at the read data bus in the next cycle. The BC REJECT signal indicates that the bank controller cannot accept the contents of the write data bus at the end of the current cycle. The BC START indicates that a bank controller transfer operation is to commence.

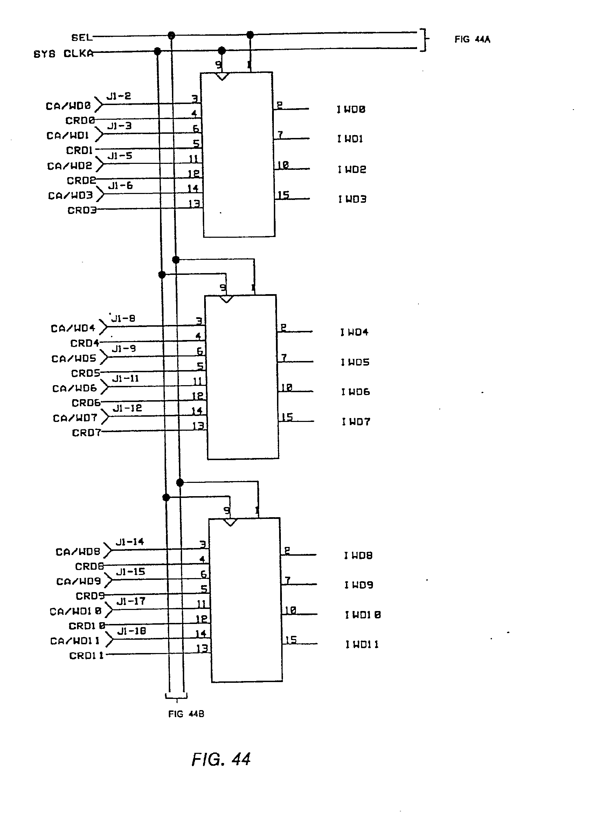

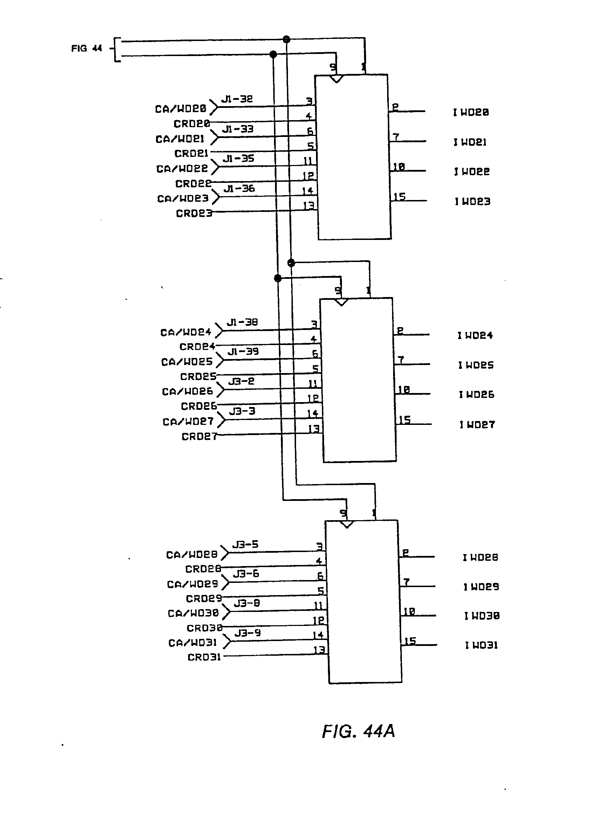

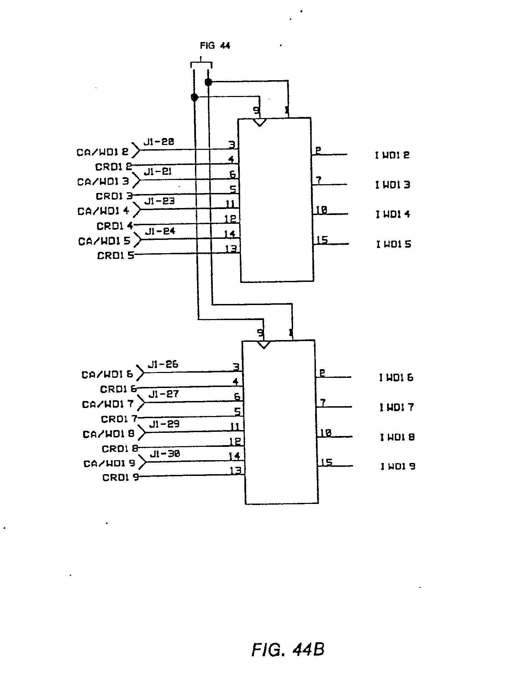

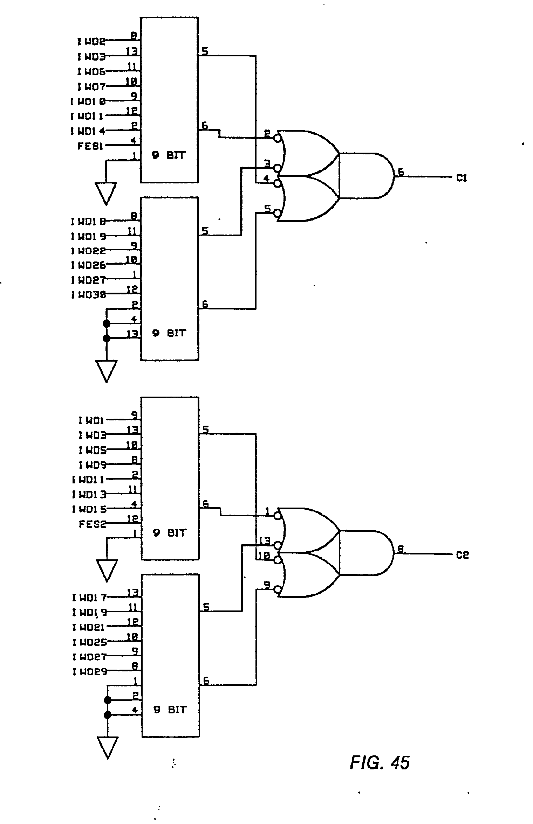

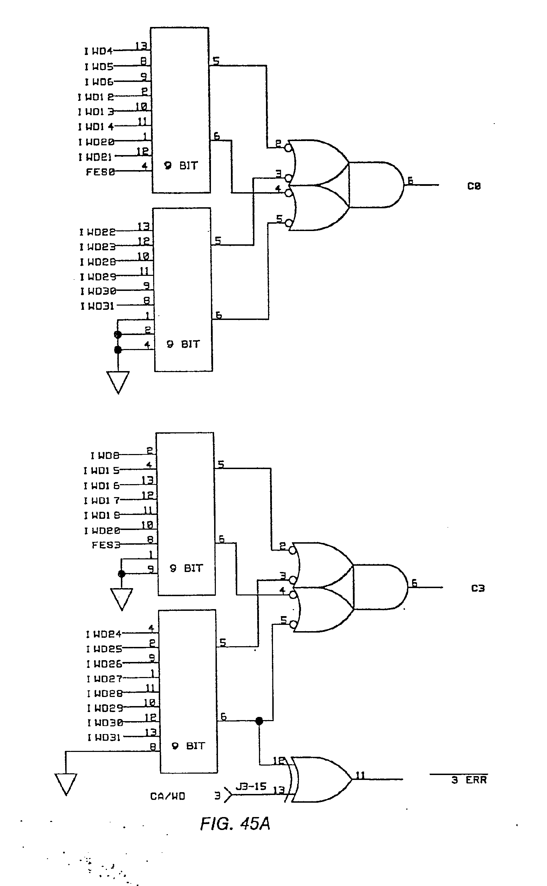

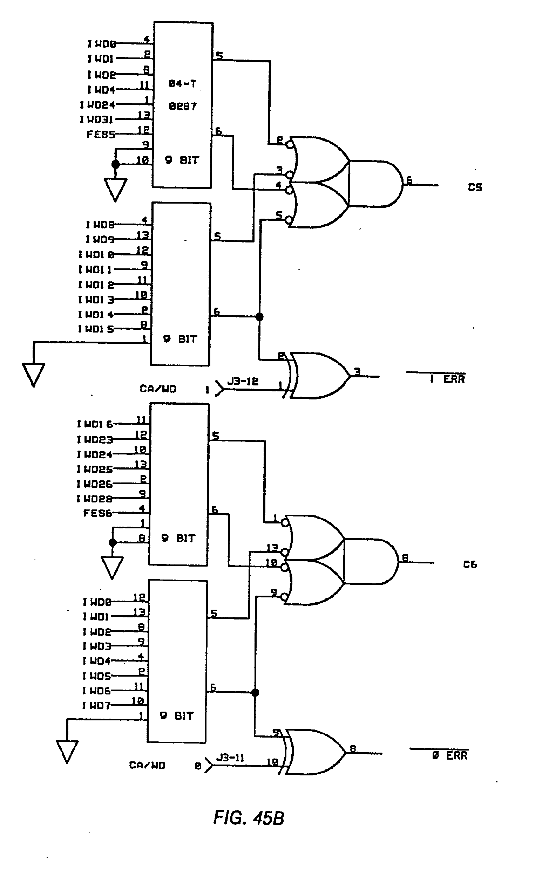

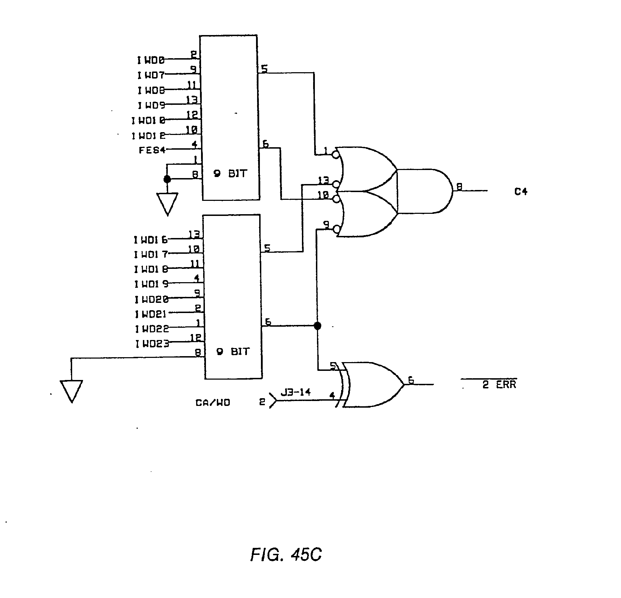

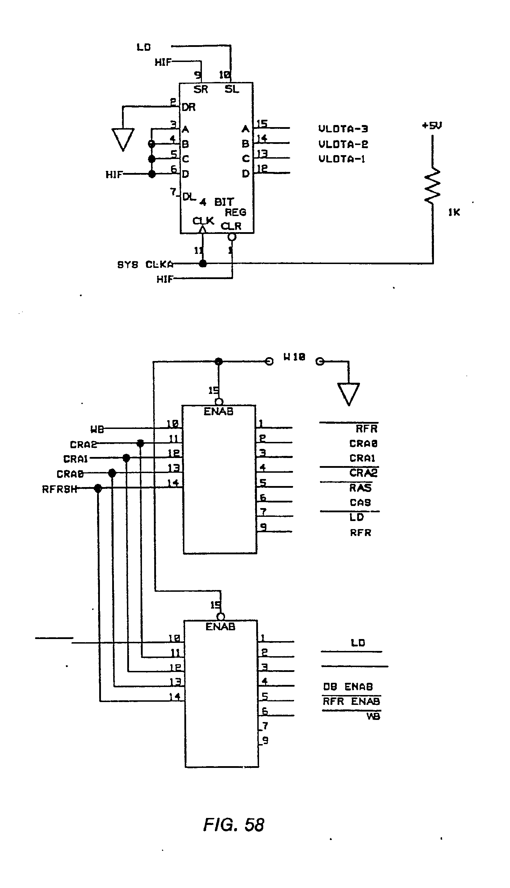

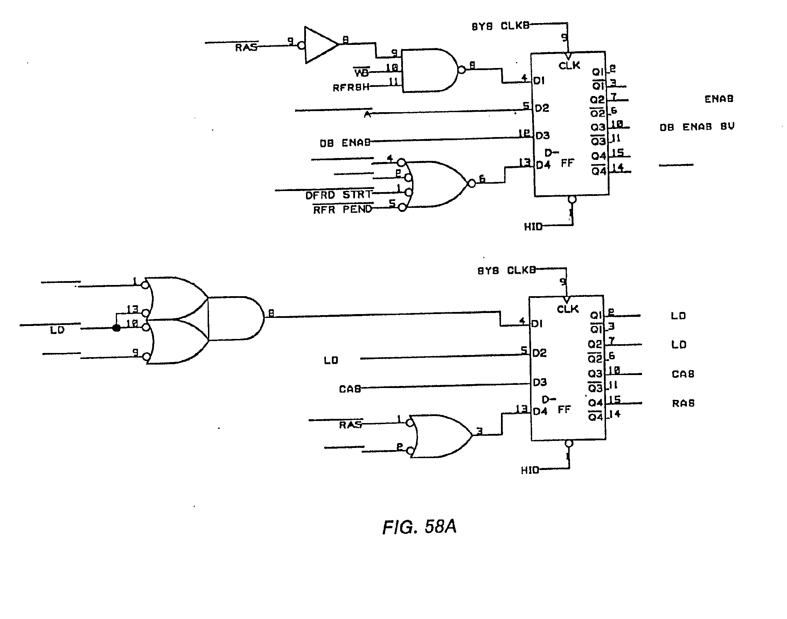

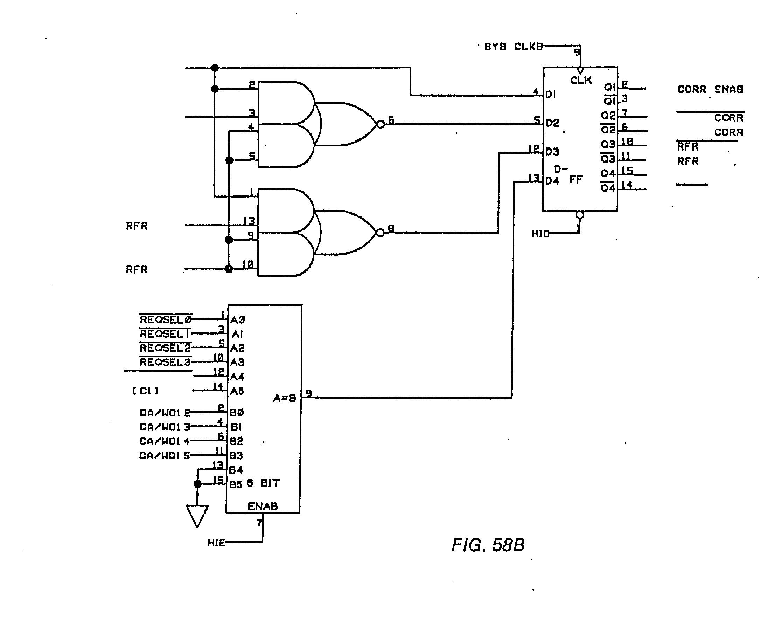

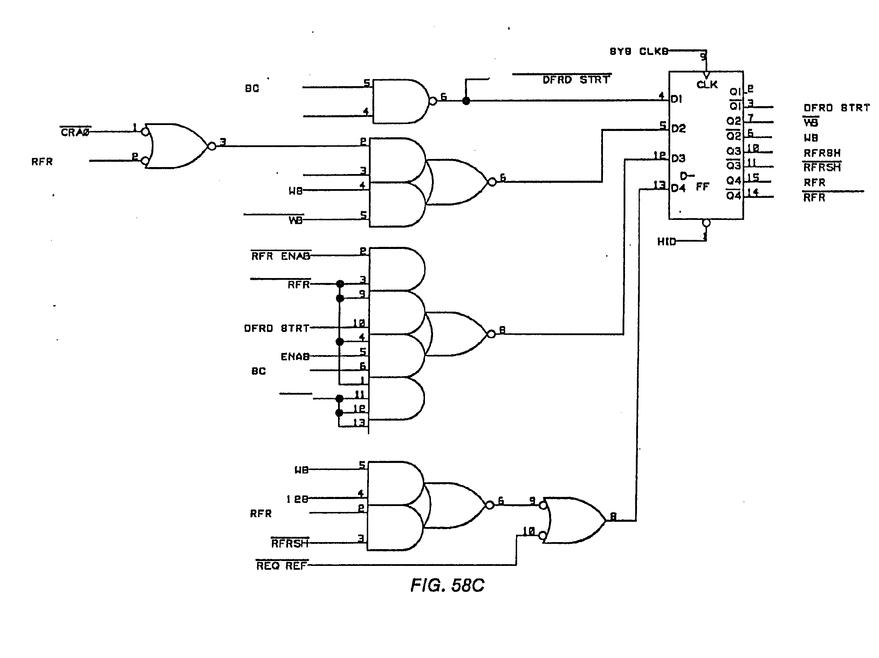

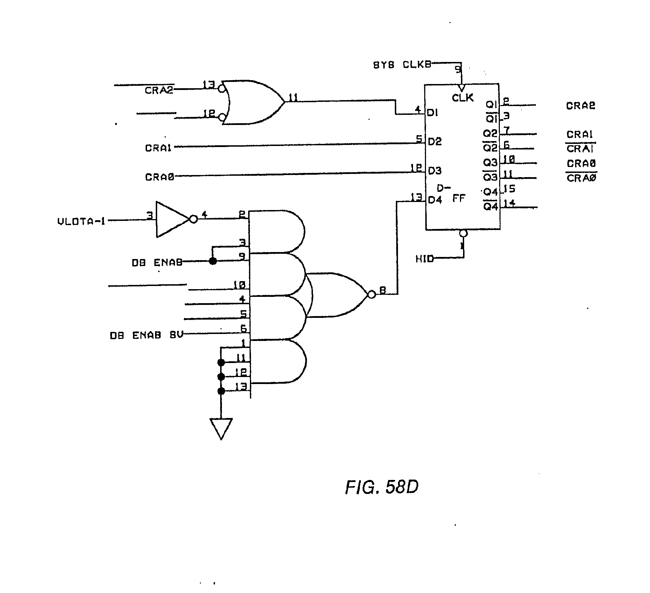

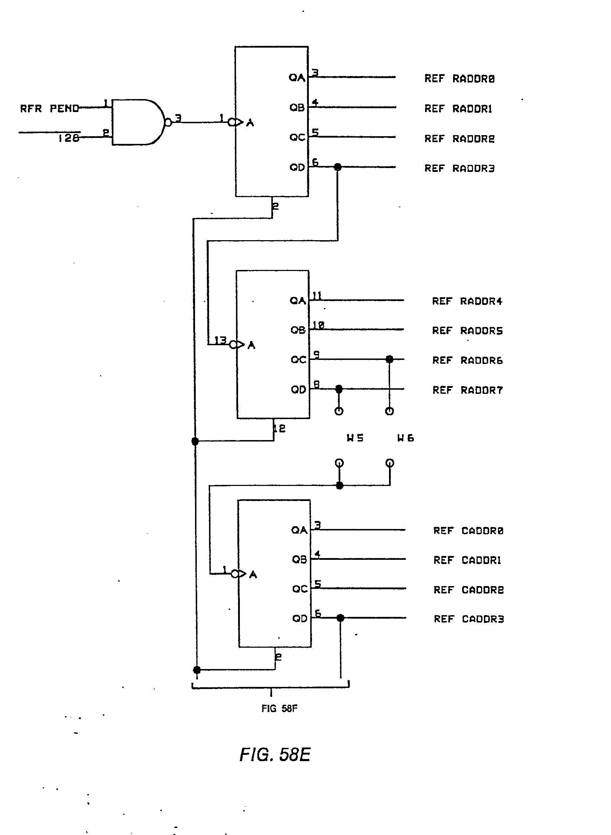

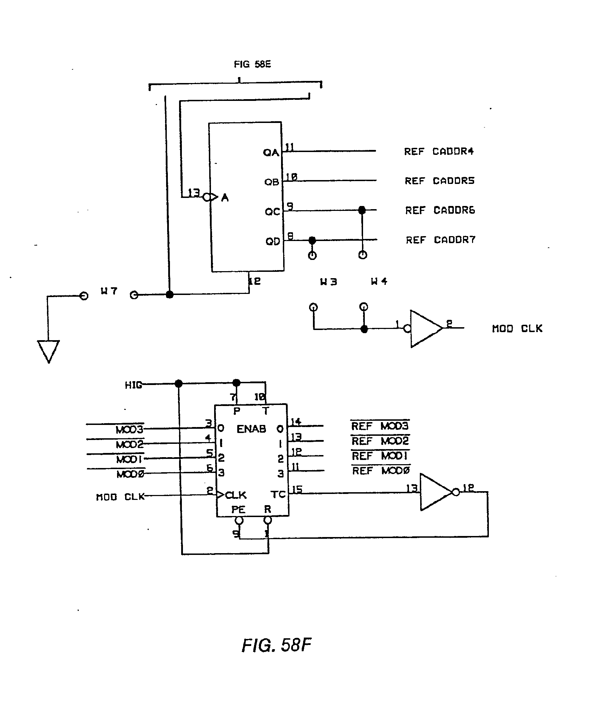

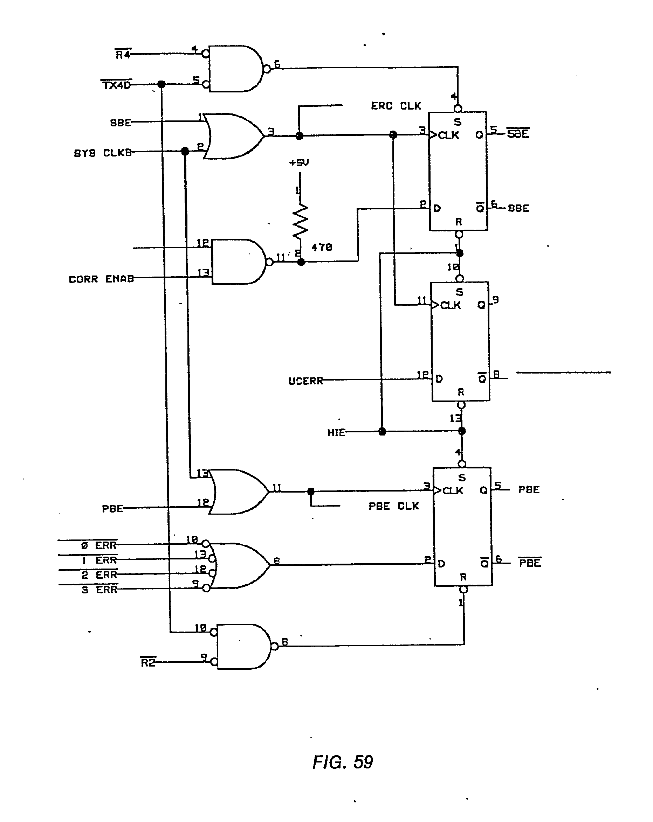

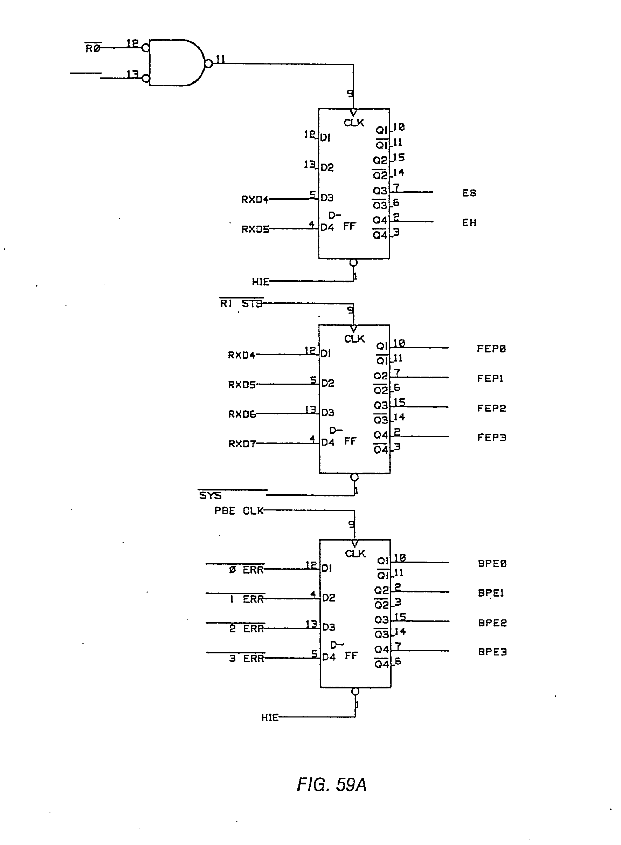

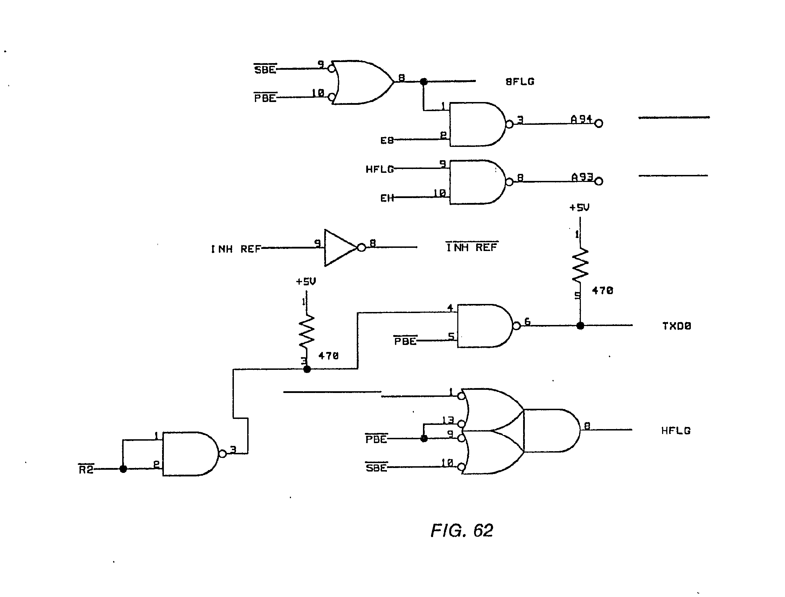

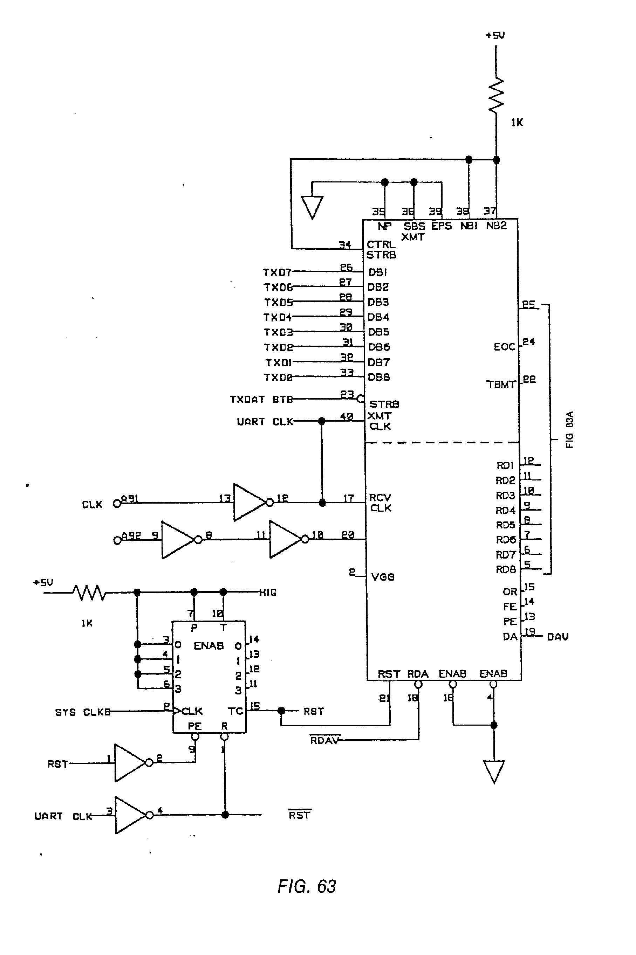

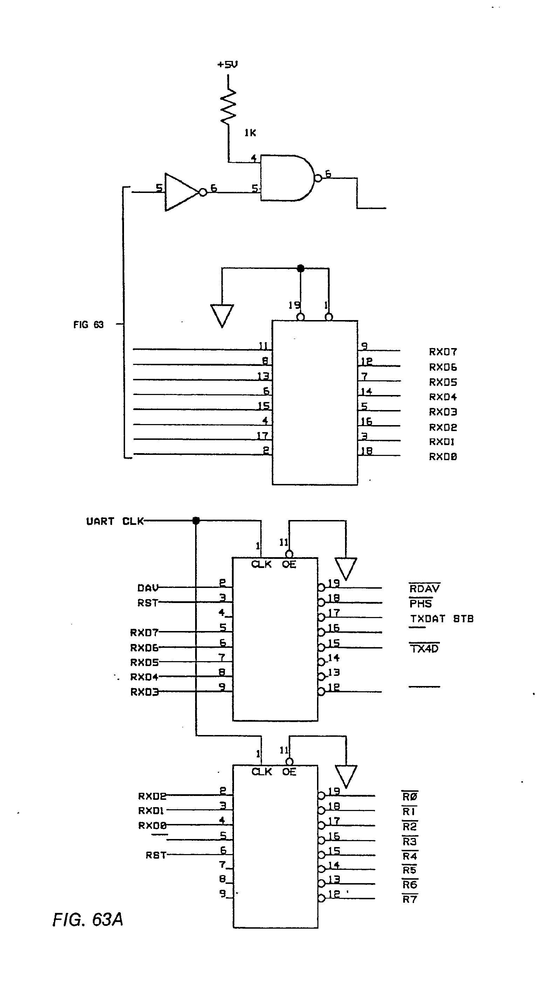

Specific logic diagrams for the particular units of the bank controller board 18 of FIG. 3 are shown in FIGS. 44-63, which latter figures are appropriately labelled as follows to show more specifically a particular embodiment of the various portions of the bank controller 18 depicted therein.

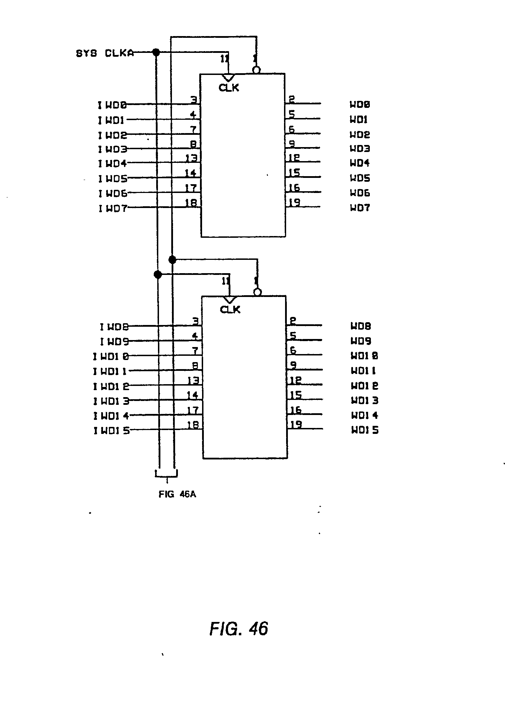

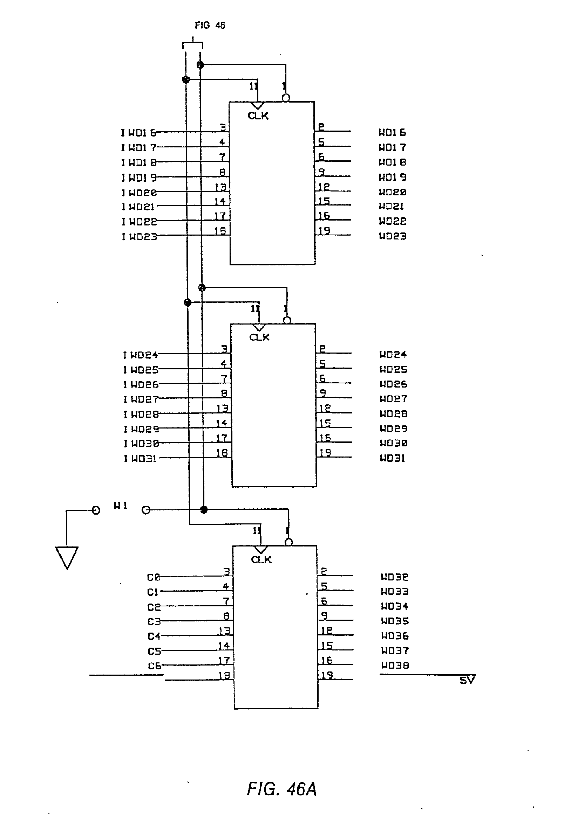

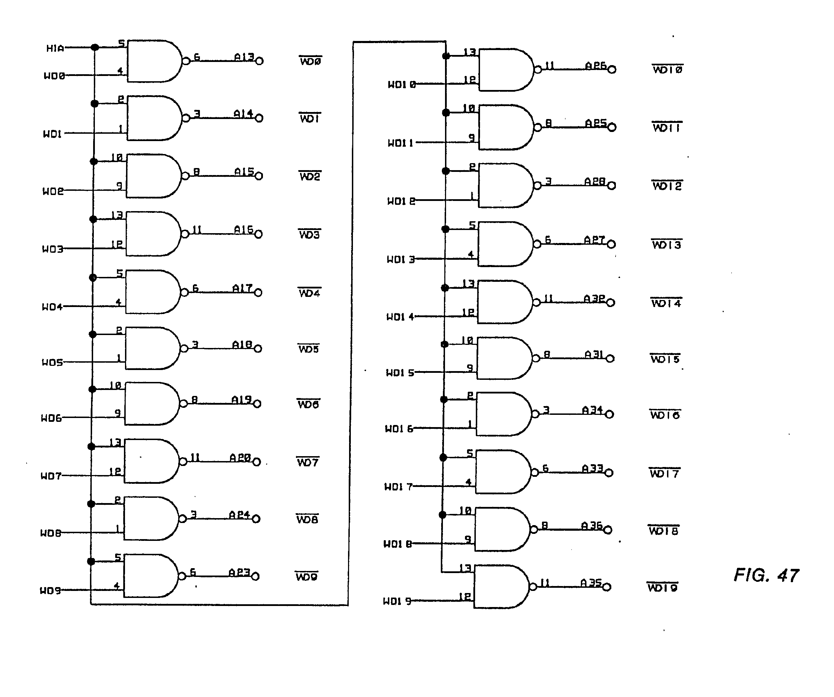

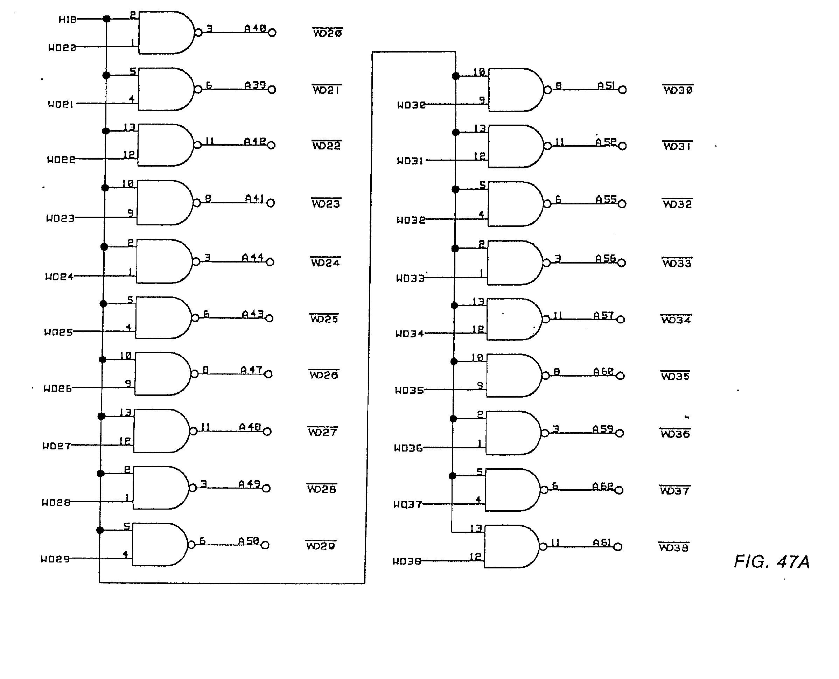

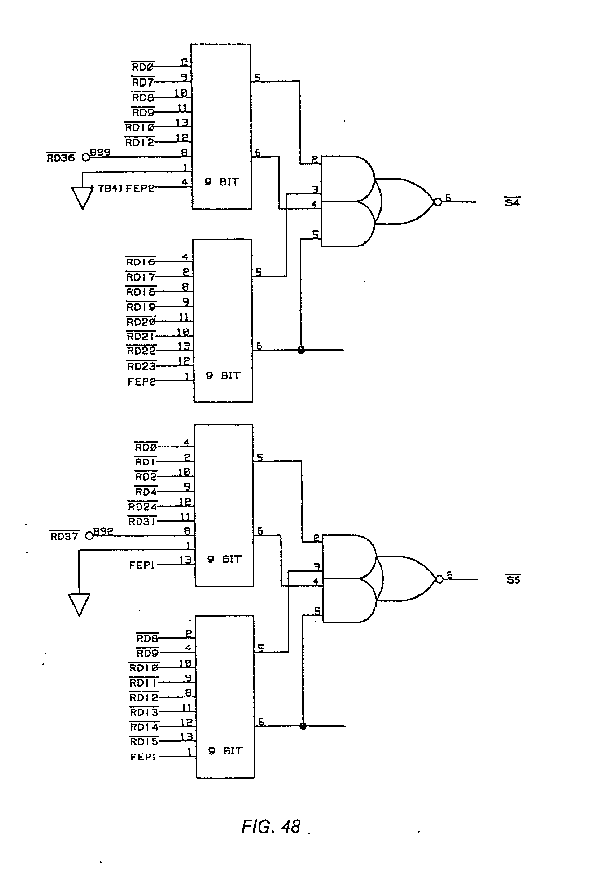

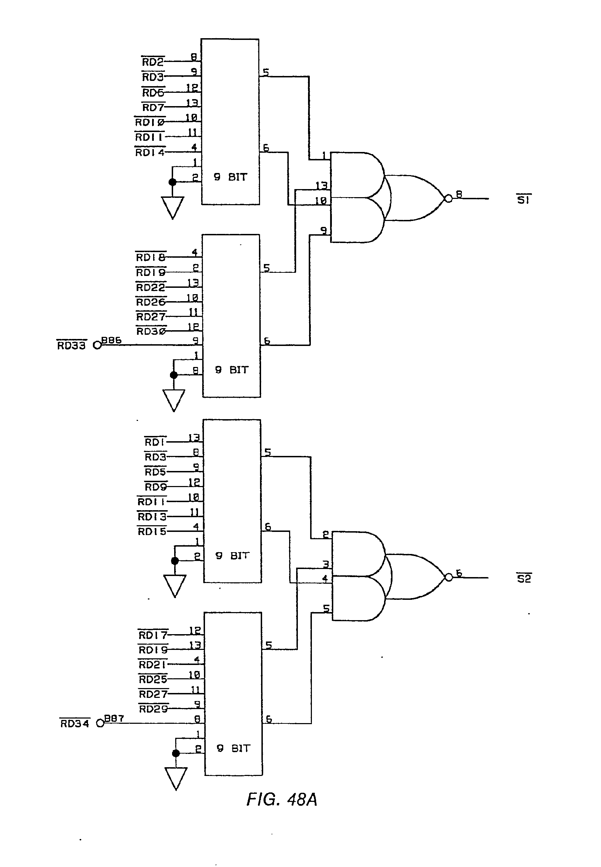

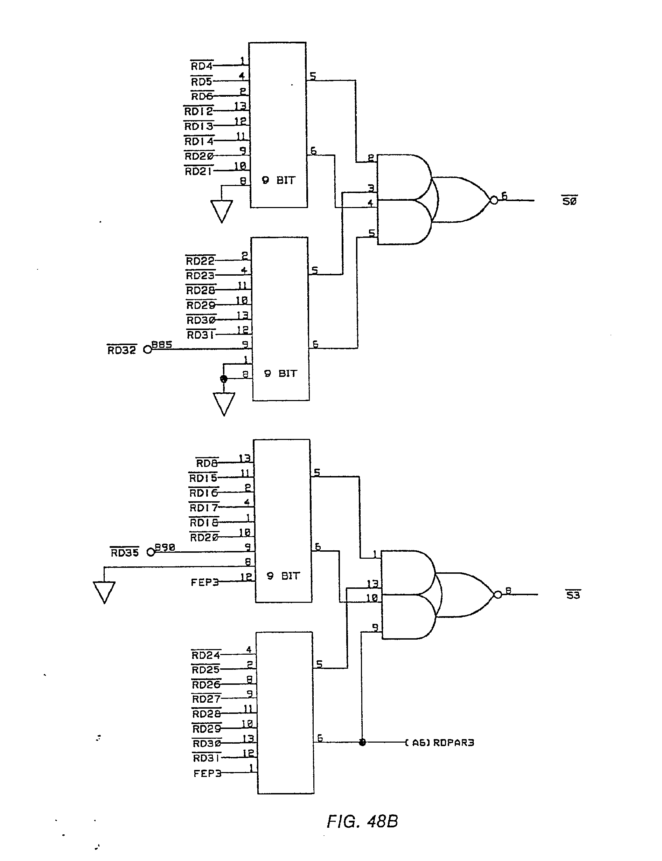

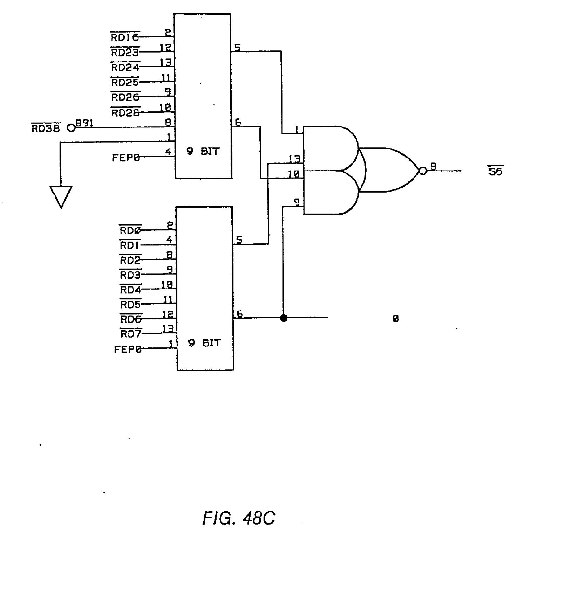

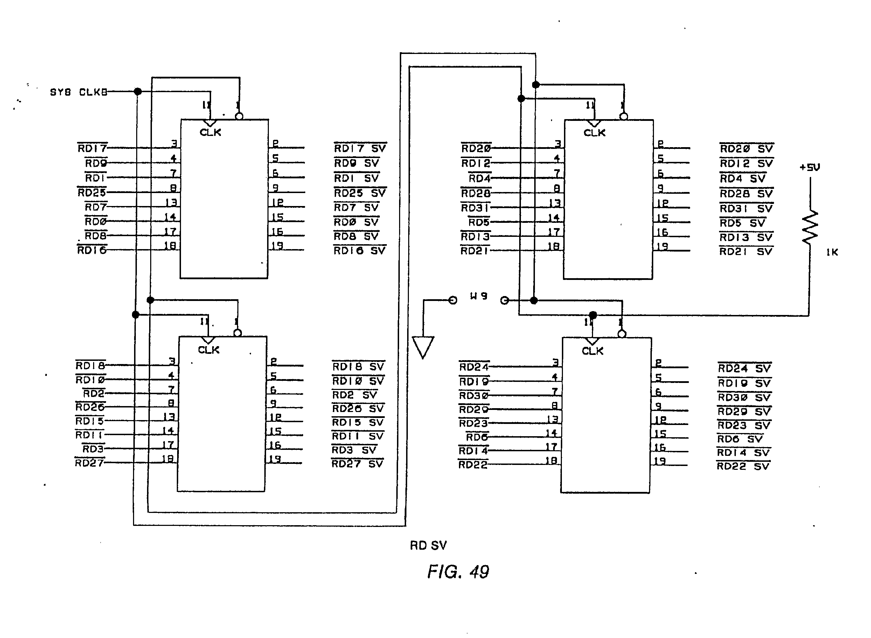

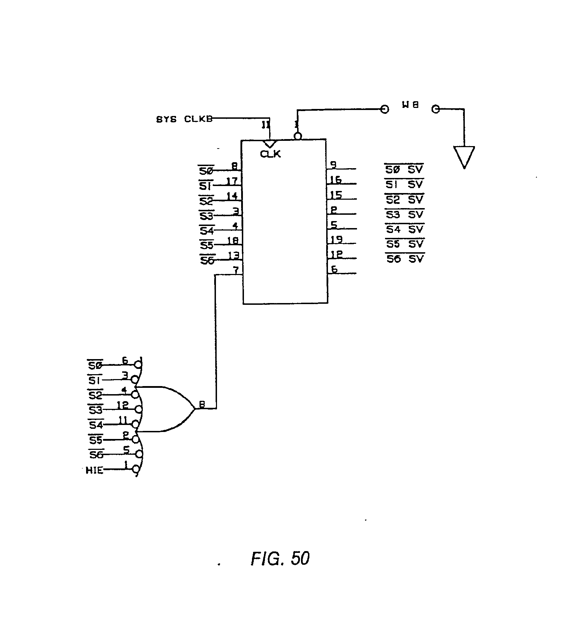

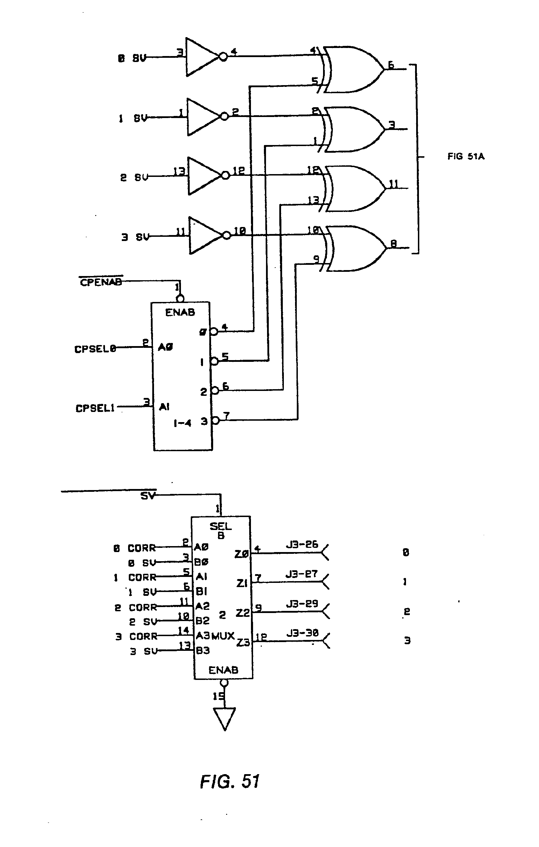

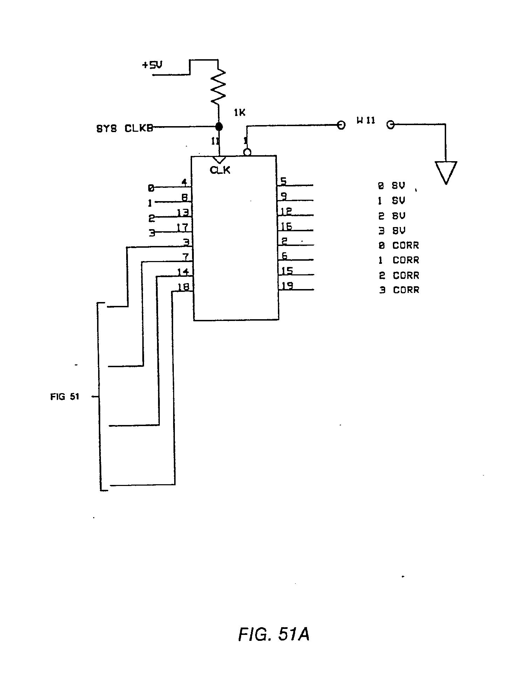

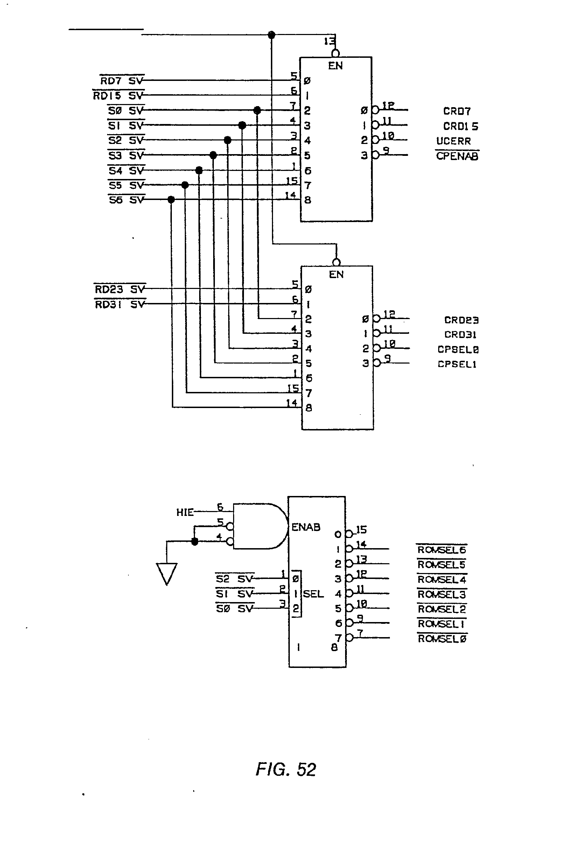

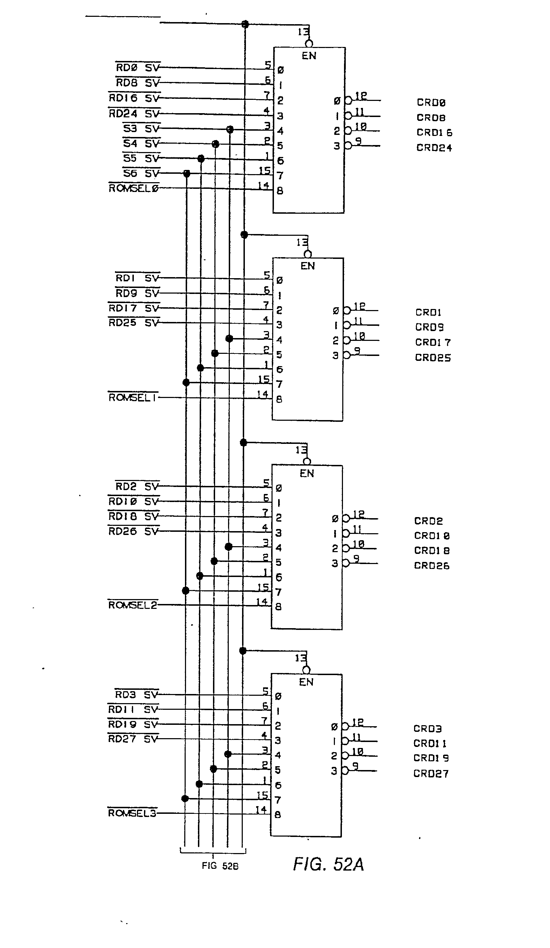

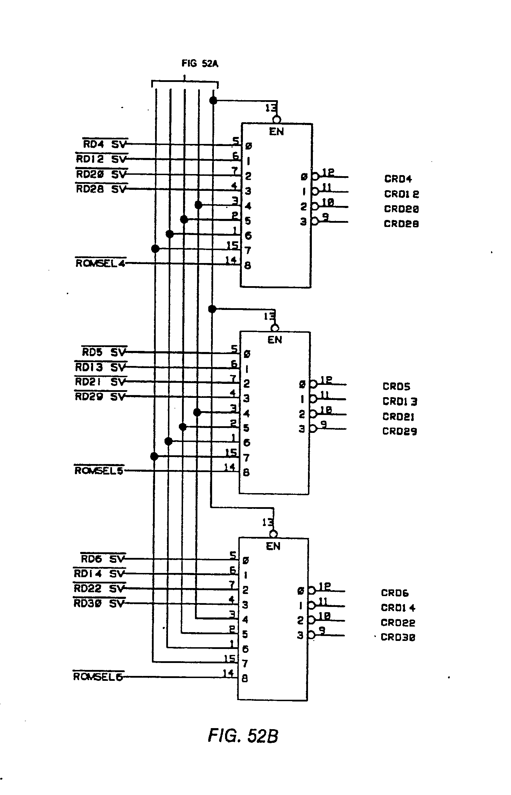

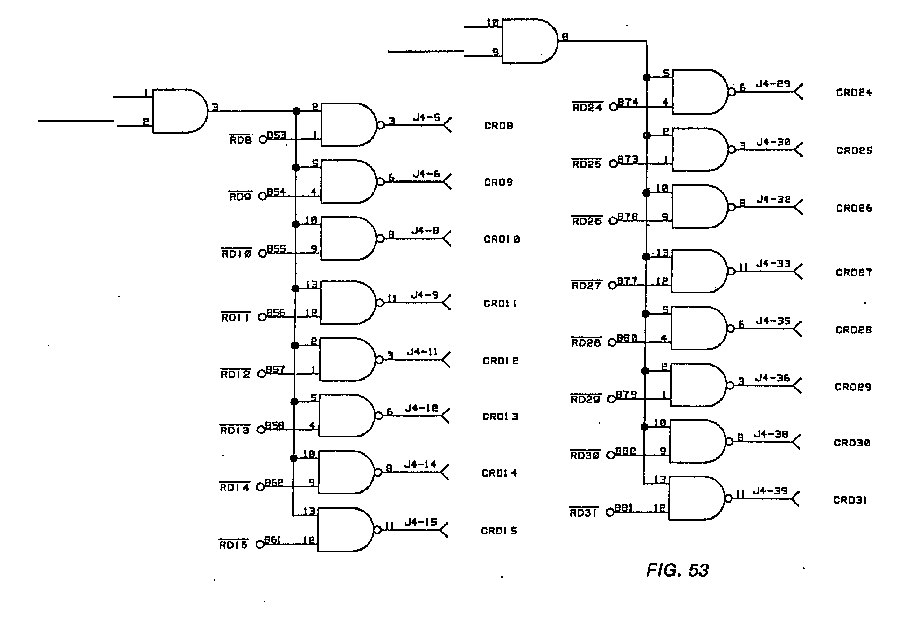

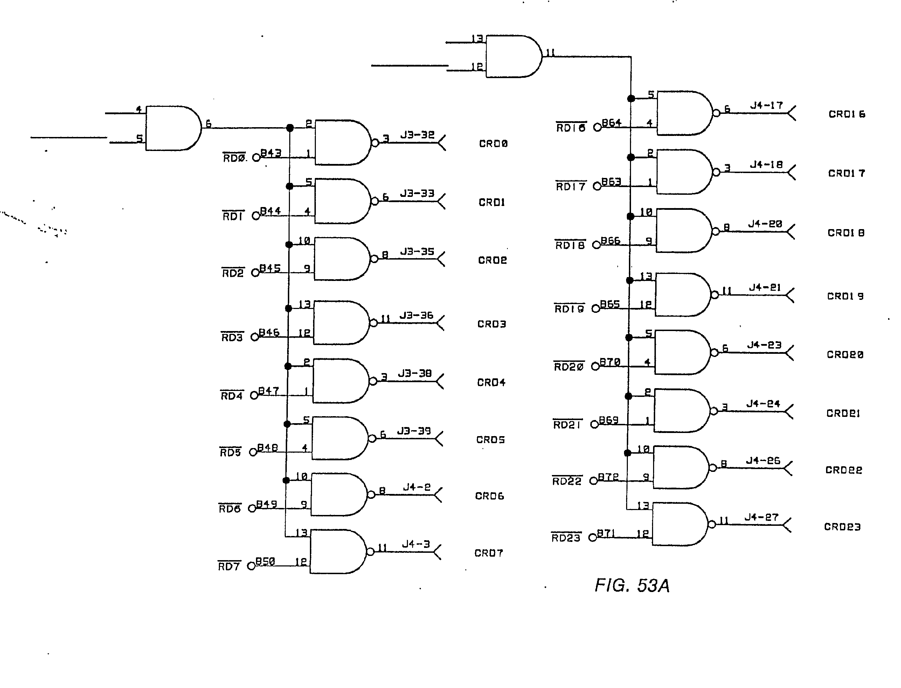

The error correction logic 70 is shown in FIGS. 44-63 and includes the multiplexer store unit shown in FIG. 44; the C-bit generator unit 45; the (32 bits) register and (8 bits) register shown in FIG. 46; the drivers for the write data bus shown in FIG. 47; the S-bit generator shown in FIG. 48. The read save register shown in FIG. 49; the S save register shown in FIG. 50; the read parity save register and parity logic shown in FIG. 51 and the correction logic shown in FIG. 52. The direct read driver unit is shown in FIG. 53.

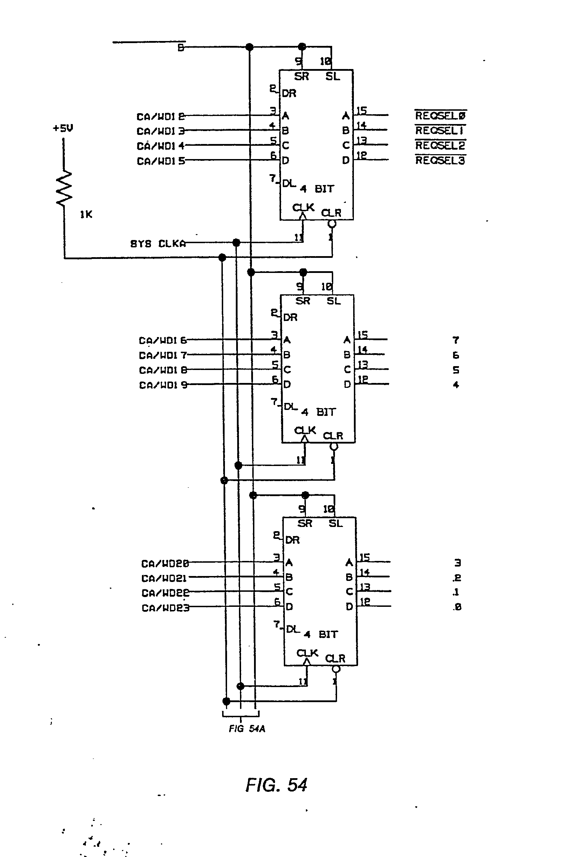

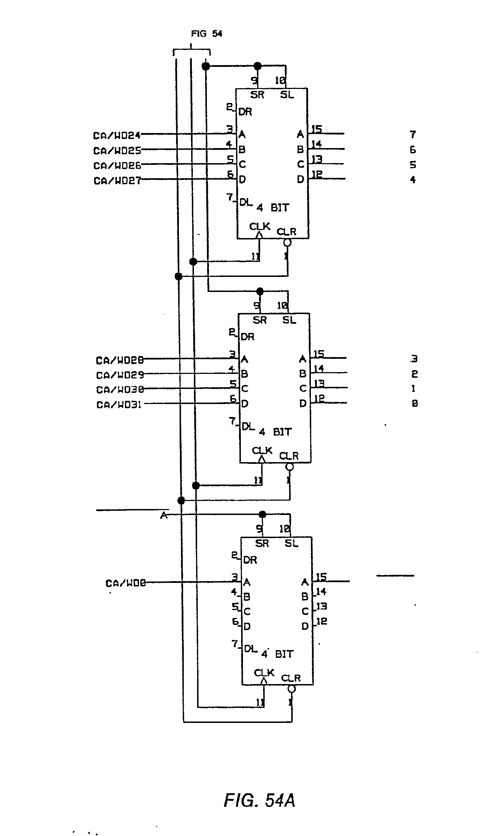

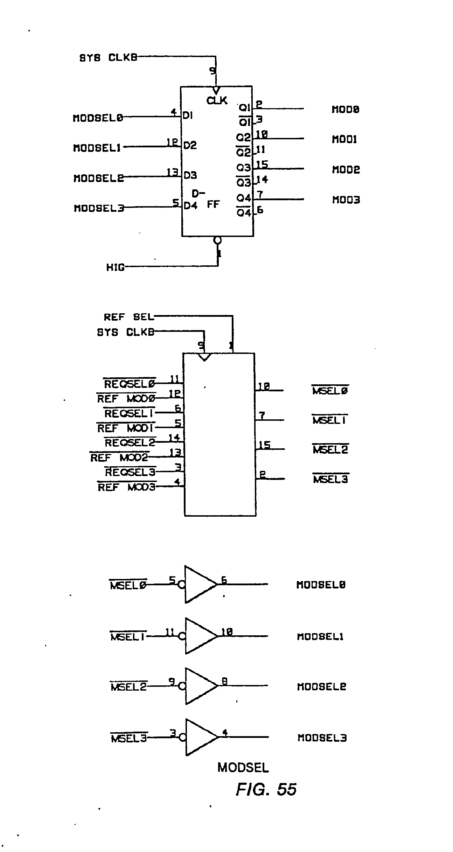

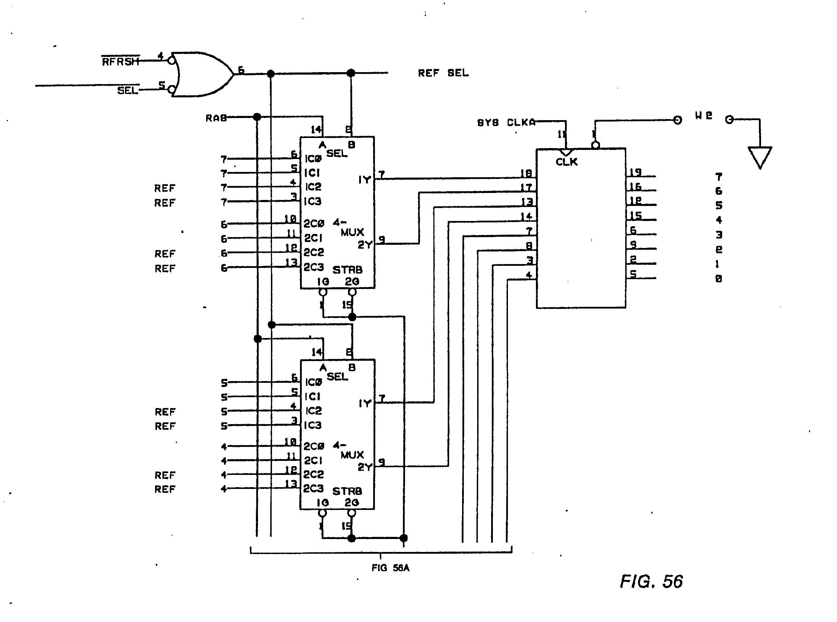

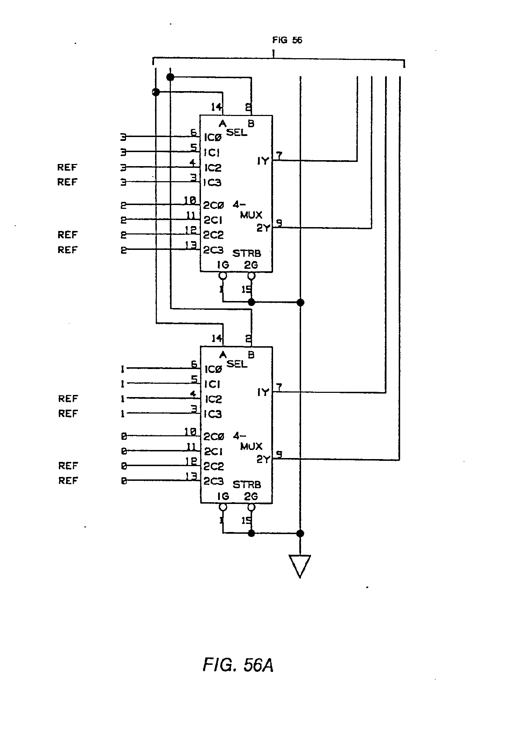

With reference to the control units at the lower part of FIG. 3, the R/W module selection unit and the RADDR and CADDR units are shown in FIG. 54; the MODSEL unit and drivers therefor are shown in FIG. 55; and the ADDRESS unit and driver therefor are shown in FIG. 56.

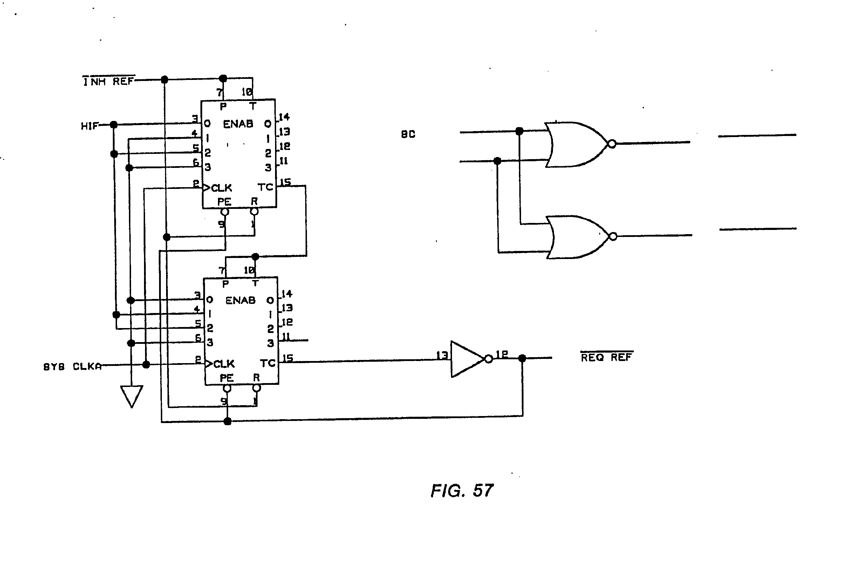

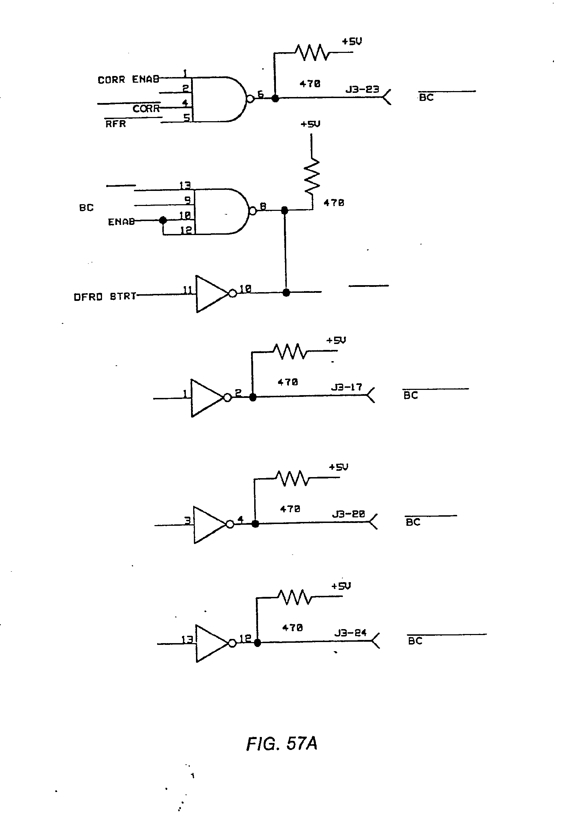

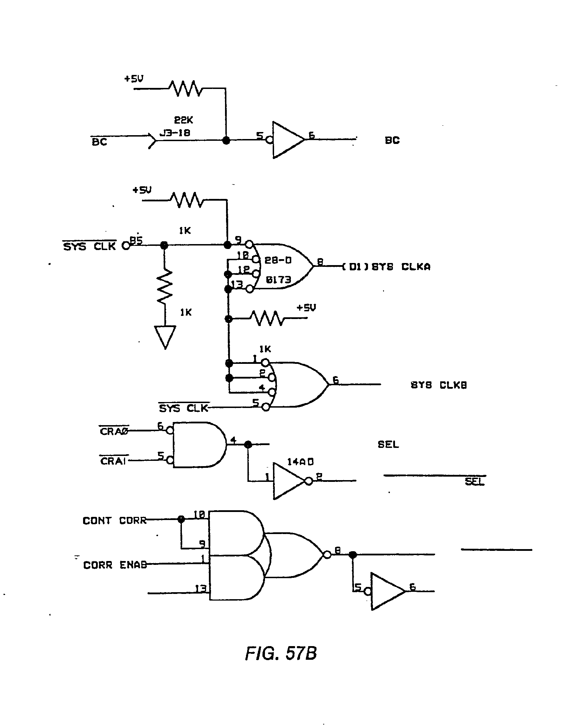

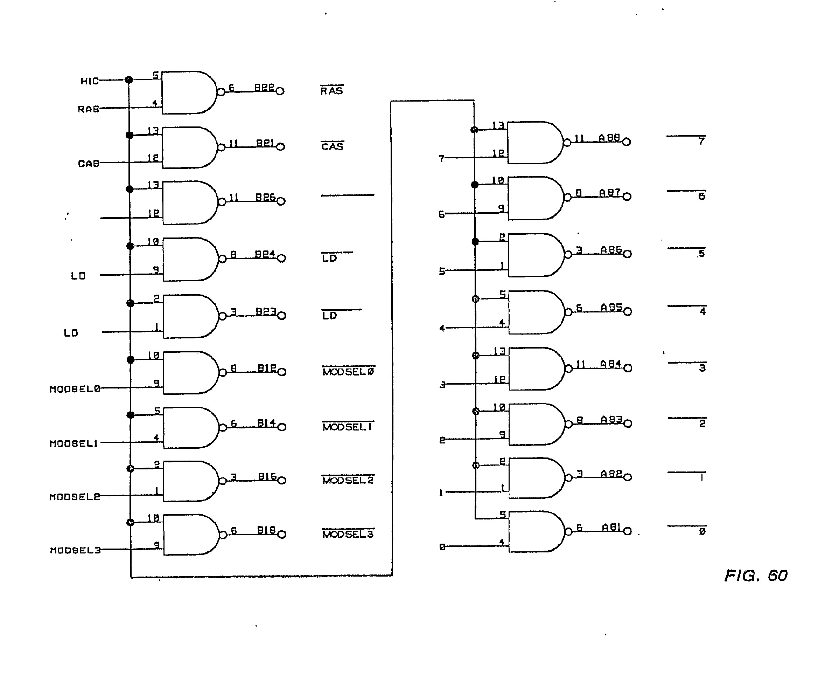

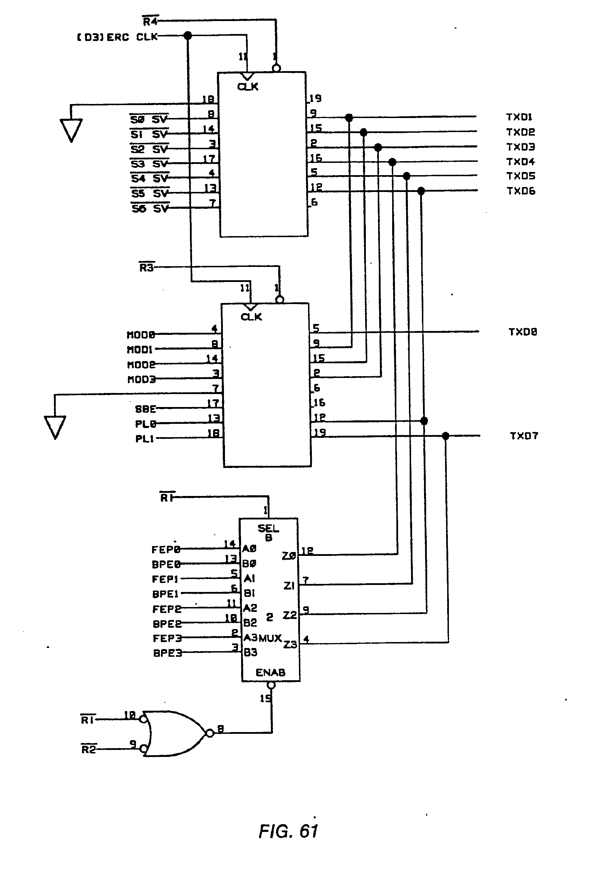

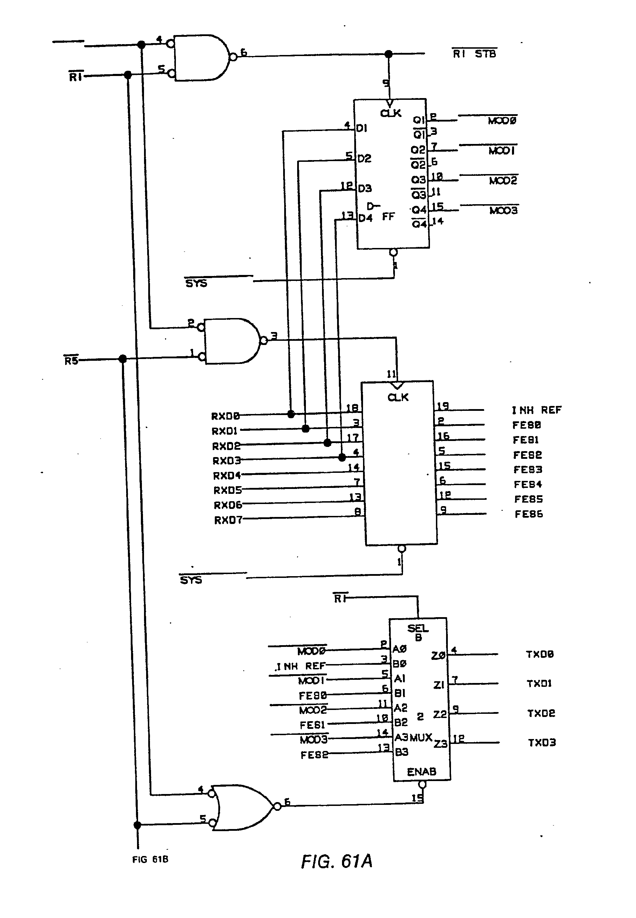

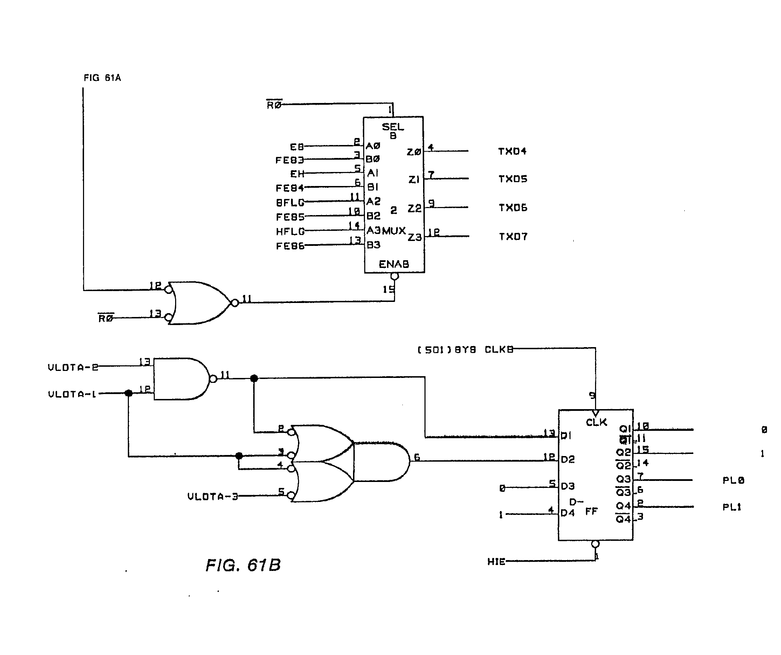

Appropriate timing and control logic both for address and data transfer and for memory refresh operation is shown in FIGS. 57-59, the drivers for the principal control signals supplied to the memory module being shown in FIG. 60; and various bus interface logic as shown in FIGS. 61-63.

FIG. 4 depicts the overall block diagram for a typical memory module of the main memory system of the invention and shows the memory array 60 of dynamic NMOS random access memories (RAM's) organized as four planes of 16K 39-bit words each and identifiable as planes $\emptyset$-3. A word which is to be written into the memory array is received from the bank controller as $\overline{WD\emptyset-38}$ via buffer 62. Words being stored in even planes $\emptyset$ and 2 are stored in even plane data register 63 while words to be stored in odd planes 1 and 3 are stored in odd plane data register 64. The control signals are supplied from the bank controller to control logic 65. The module select code bits MOD SEL$\emptyset$-3 are supplied to a comparator 66 to provide a $\overline{MODSEL}$ signal if the particular module has been selected. Control signals from control logic 65 are supplied to appropriate latching circuitry 67 to provide appropriate signals for controlling the operation of the memory array via drivers 61. The control signals from the memory bank controllers are first clocked into the plane $\emptyset$ latching registers 67A and the outputs thereof drive the plane $\emptyset$ RAMs via drivers 61A. The outputs of the first latch register are those clocked at a fixed time period later into the next latch register set 67B which drives the plane 1 RAMs. Such pipeline operation continues in order to drive the plane 2 and plane 3 RAMs such that all four RAM planes receive the same control signals at fixed intervals, resulting in the transfer of a block of four consecutive 39-bit words. While the RAM address from the bank controller includes eight bits, only seven bits of address are used for the 16K RAMs discussed above, the extra bit allowing for possible future expansion. Thus, addressed bits ADR $\emptyset$-5 are clocked at fixed intervals to each of the latches 67A-67D of the planes $\emptyset$-3 at fixed intervals. ADR 6 is supplied to RAM selection logic 68 together with the plane $\emptyset$ latch signal $\overline{\text{RPL } \emptyset \text{ RAS}}$ to provide the JADR 6 signal for the plane $\emptyset$ latch register 67A. The RAS and CAS signals provide the necessary control signals via the control logic 65 and latch registers 67 for driving the row address strobe (RAS) and the column address strobe (CAS) signals for the RAMs.

The LDOUT signal to the input of control logic 65 causes the module to load its output register at the end of the current cycle and enable it onto the read data bus during the next cycle via the data out register and multiplexer logic 69 and read bus driver 69A. The LDIN signal at the input to control logic 65 causes the module to accept data from the write data bus via registers 63 and 64 for writing into the RAM during the following cycle. The following timing diagrams show the status of the various signals for block read and block write operations at each fixed time interval (in the particular embodiment described, for example, each cycle can be 110 ns). As can be seen, the plane $\emptyset$-3 data is provided in the read operation in sequence and the input data is written into such planes in sequence.

Block Read

| | t0 | t1 | t2 | t3 | t4 | t5 | t6 | t7 |
|---|---|---|---|---|---|---|---|---|
| Control Signals | RAS MODSELS | RAS,CAS MODSELS | RAS,CAS MODSELS | LDOUT MODSELS | <pre-charge> | <next access> | | |
| Address Lines | ROW ADDRESS | COLUMN ADDRESS | COLUMN ADDRESS | | | | | |
| Read Data bus | | | | | | PLANE DATA | PLANE DATA. | <etc.> <etc.> |
| Write Data Bus | | | | | | | | |

Block Write

| | t0 | t1 | t2 | t3 | t4 | t5 | t6 | t7 |
|---|---|---|---|---|---|---|---|---|
| Control Signals | RAS,LDN MODSELS | RAS,CAS MODSELS | RAS,CAS MODSELS | | | | <next access> | |
| Address Lines | ROW ADDRESS | COLUMN ADDRESS | COLUMN ADDRESS | | | | | |
| Read Data Bus | | | | | | | | |
| Write Data Bus | | PLANE 0 DATA | PLANE 1 DATA | PLANE 2 DATA | PLANE 3 DATA | | | |

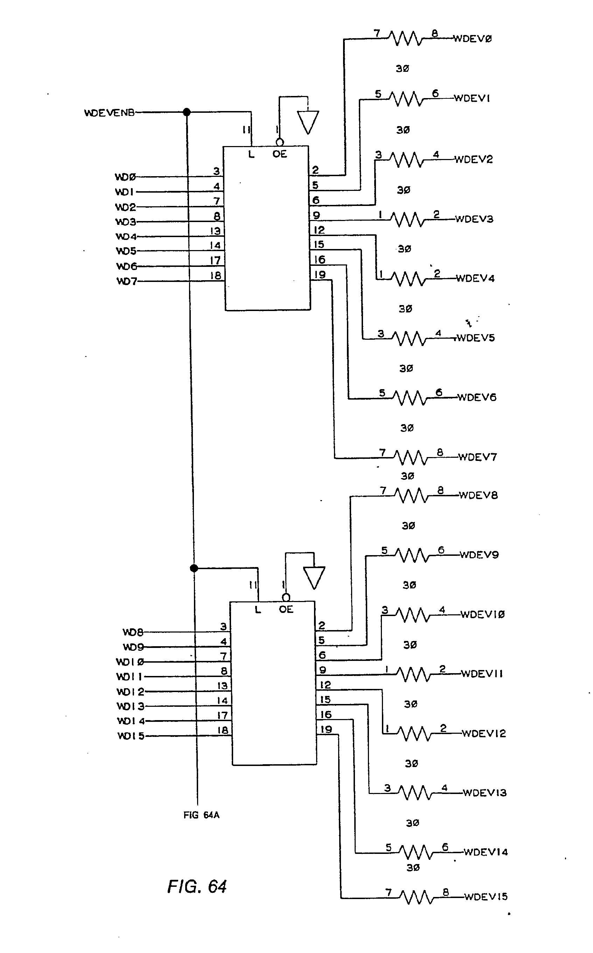

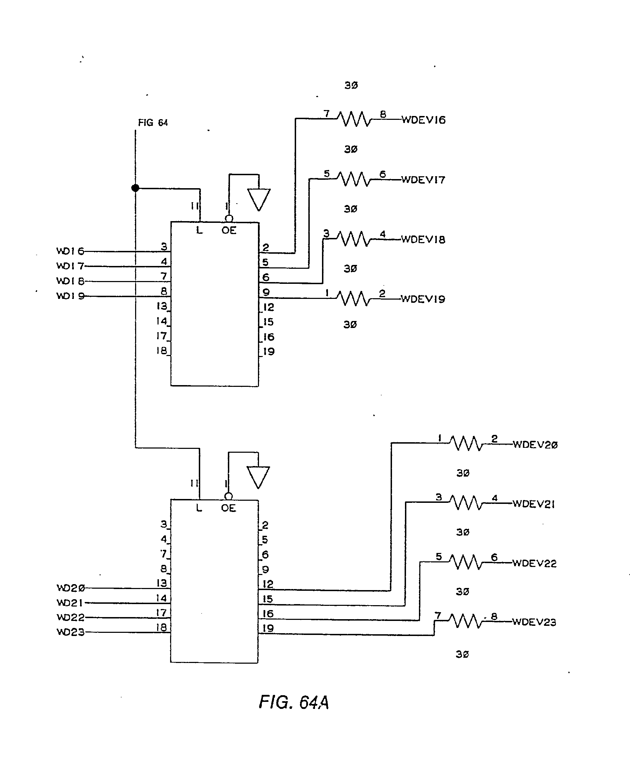

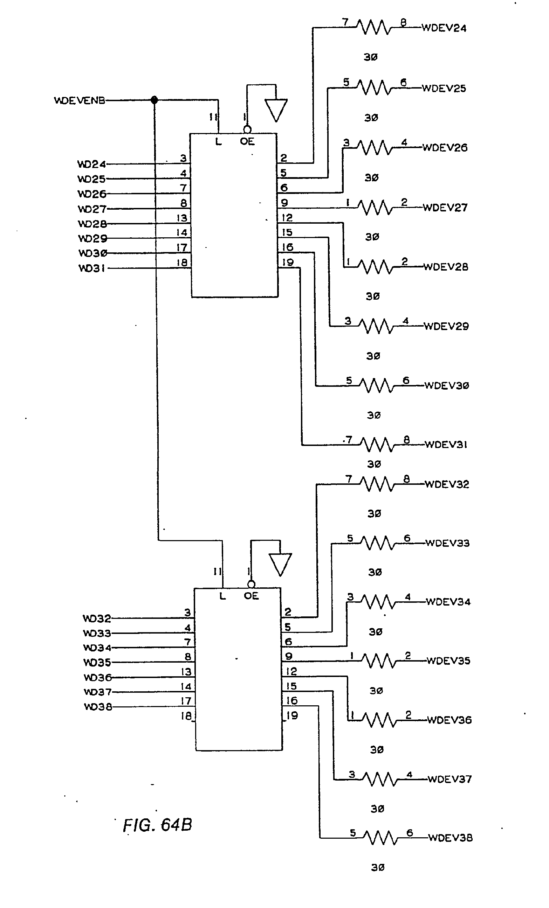

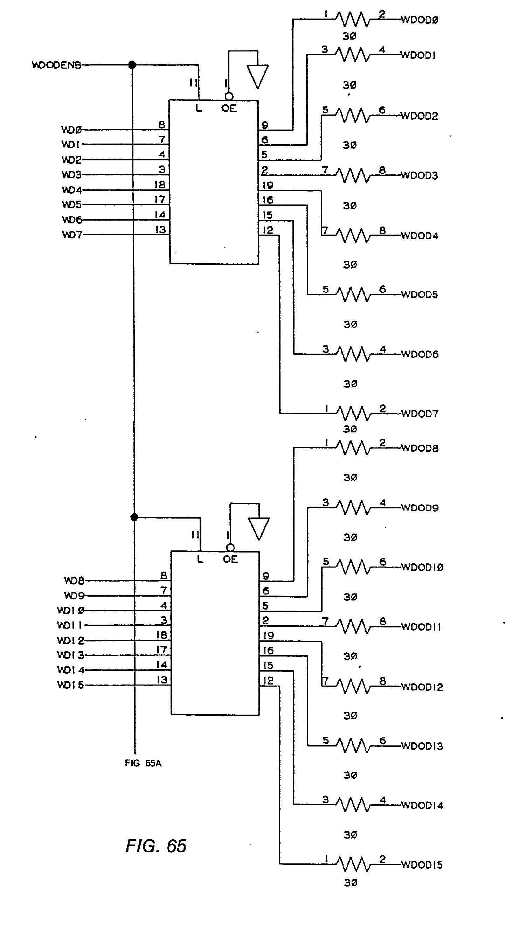

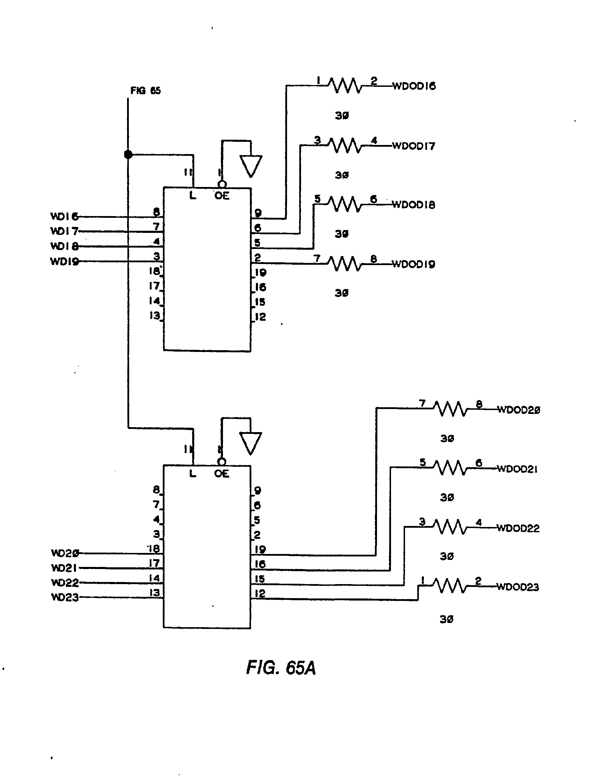

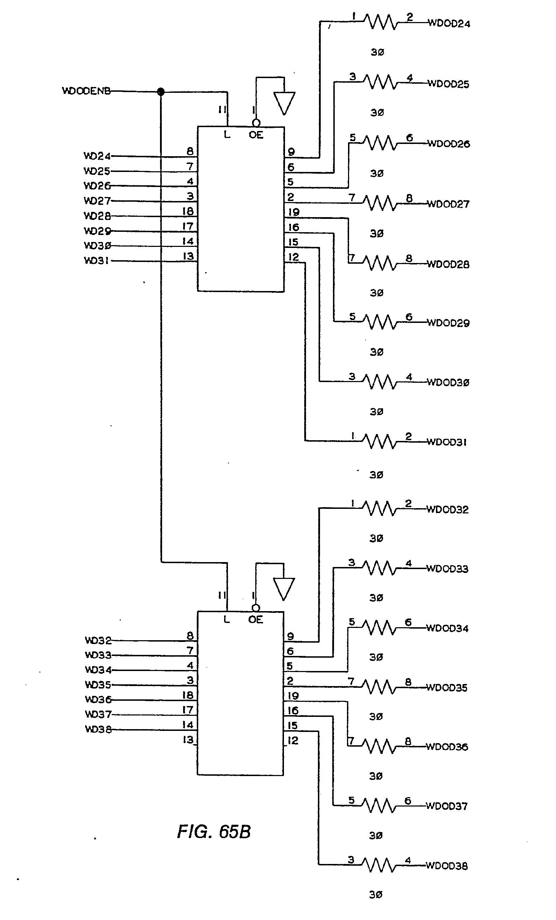

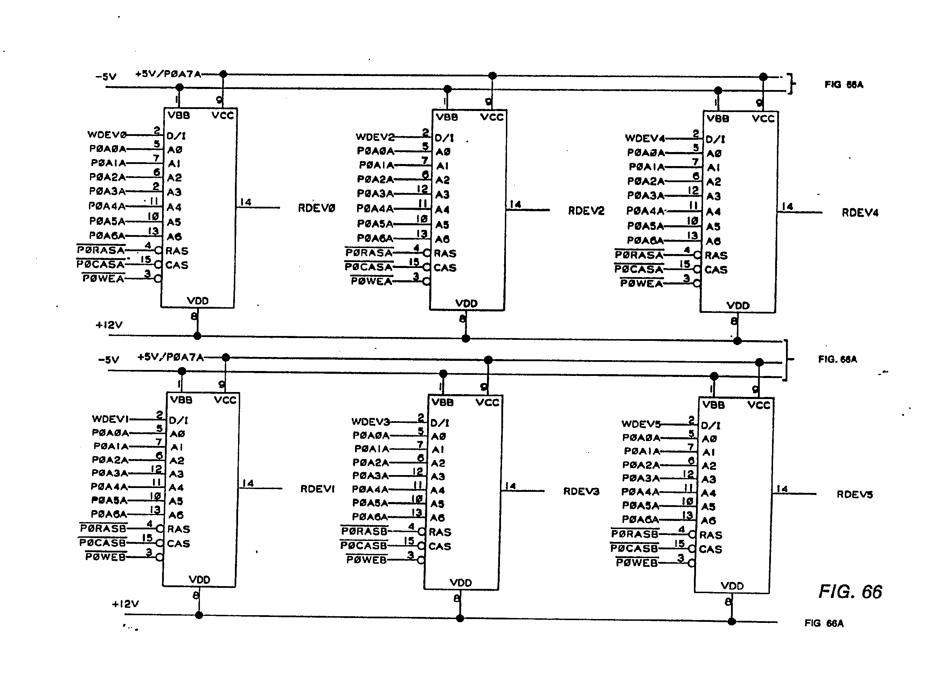

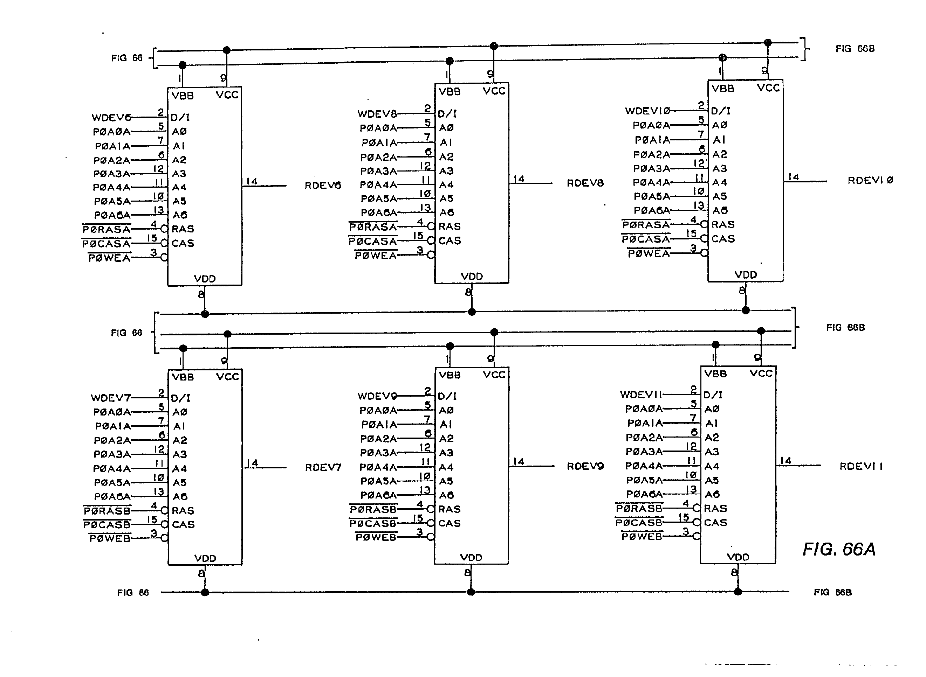

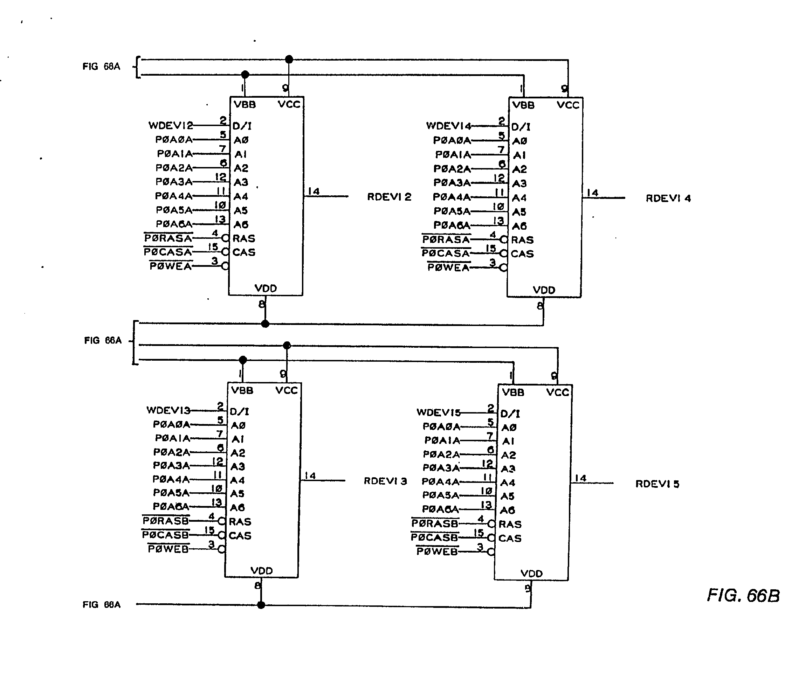

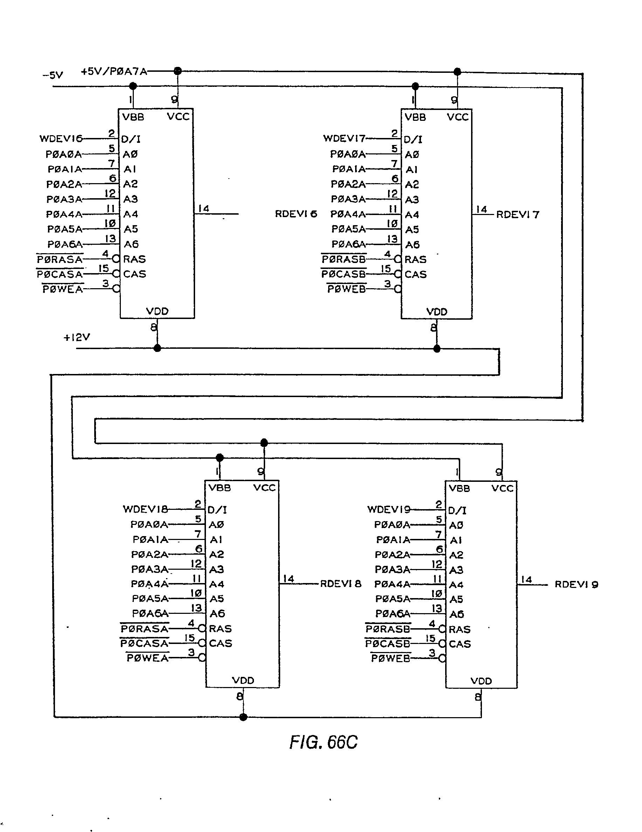

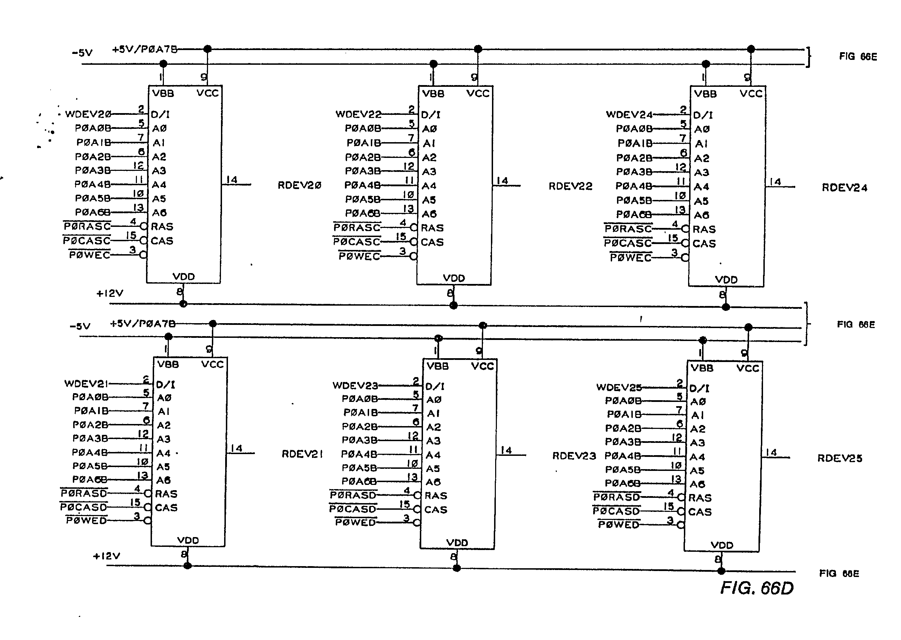

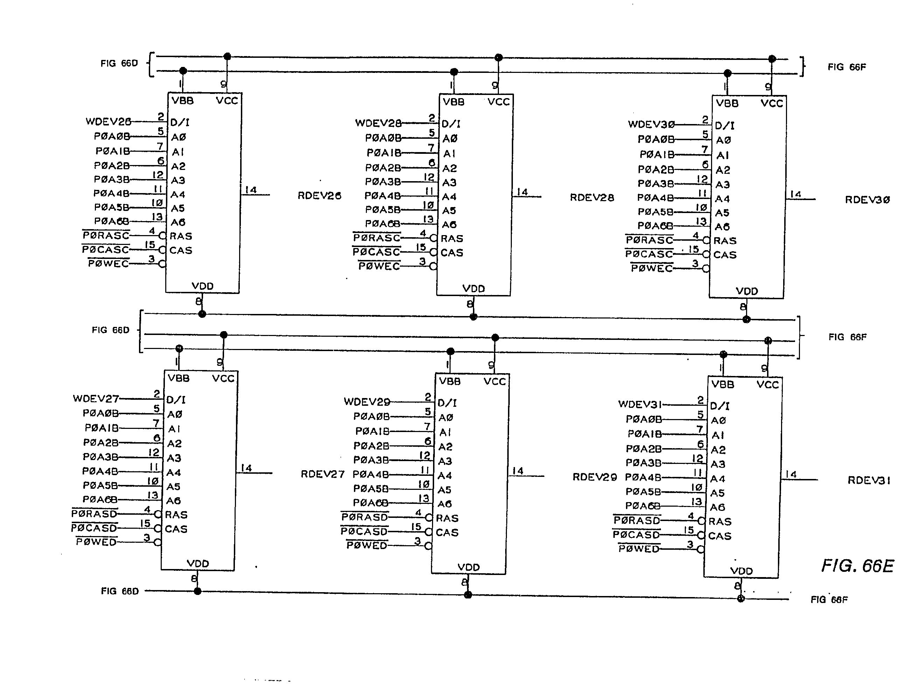

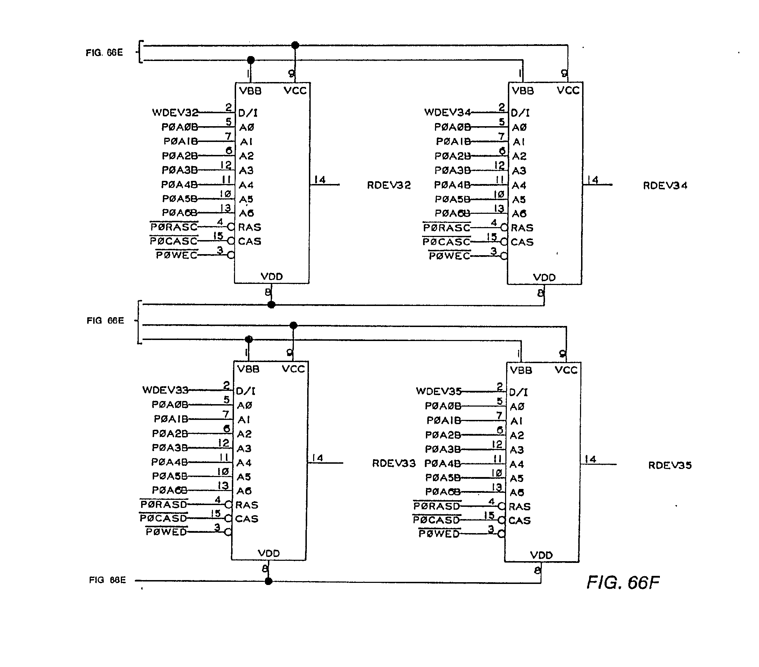

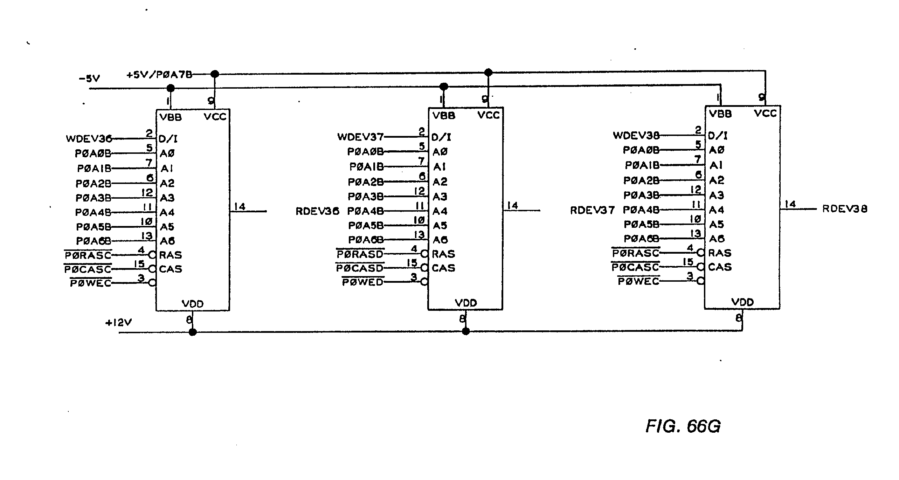

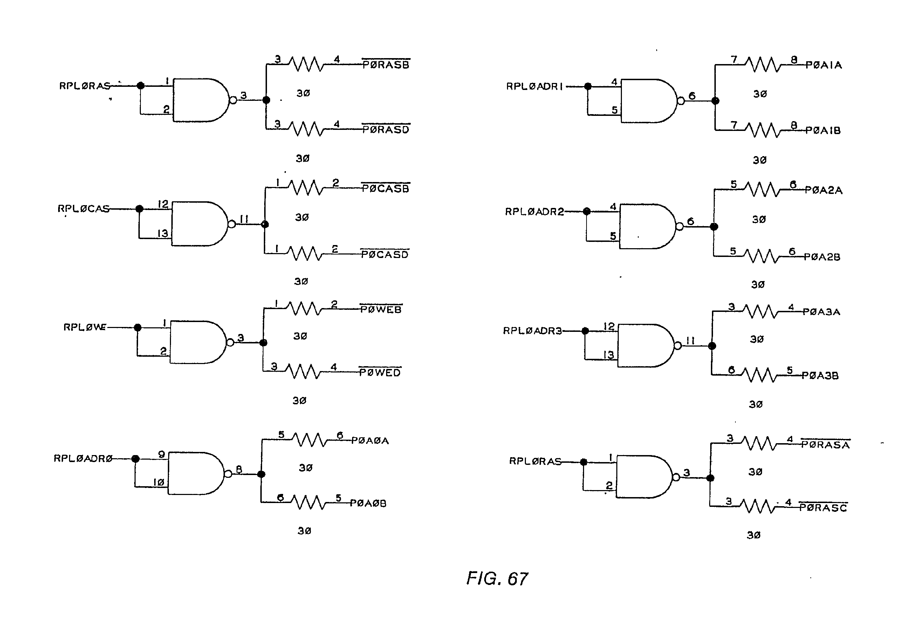

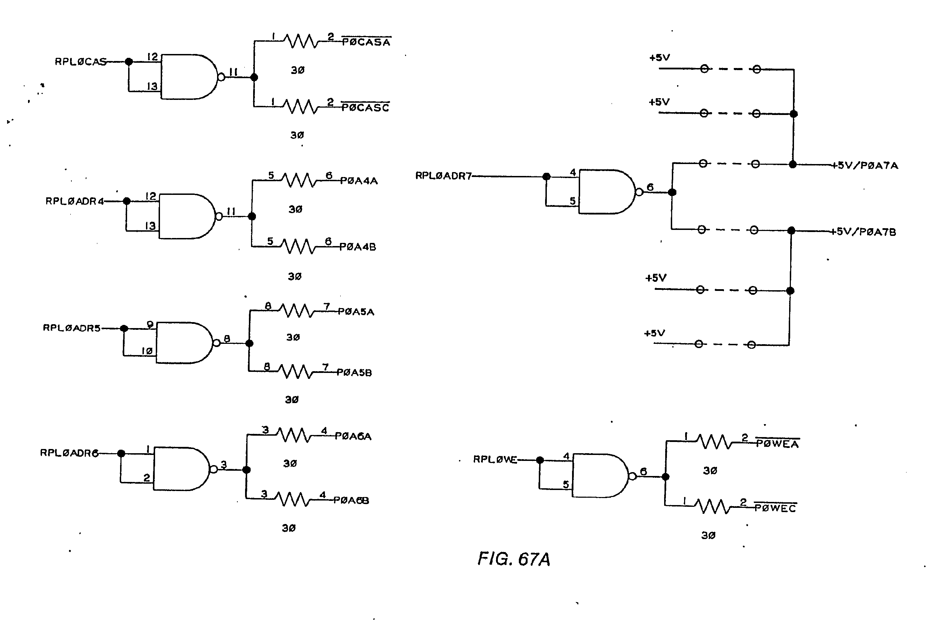

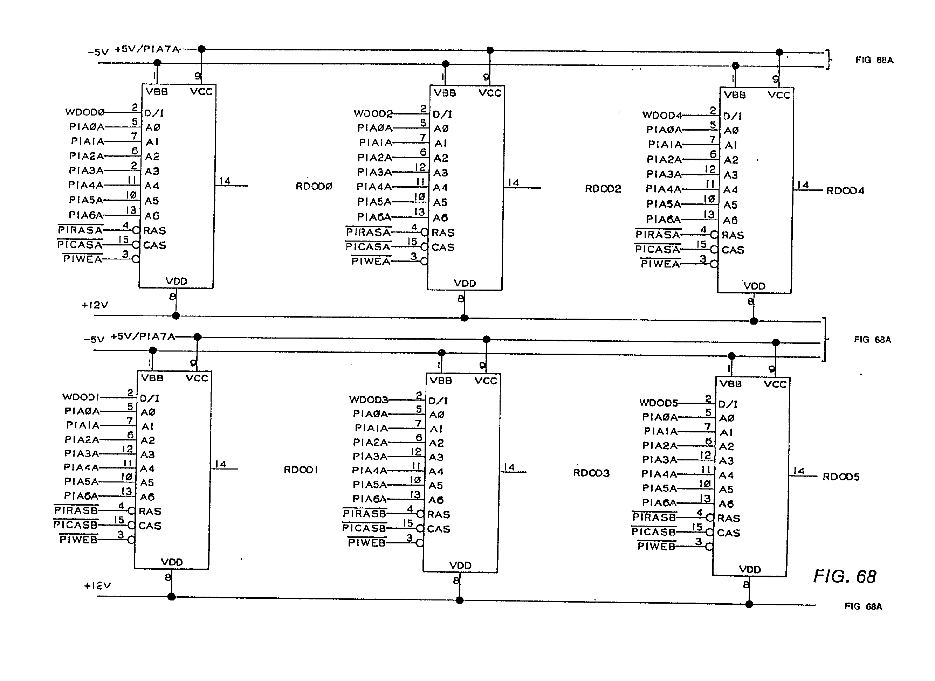

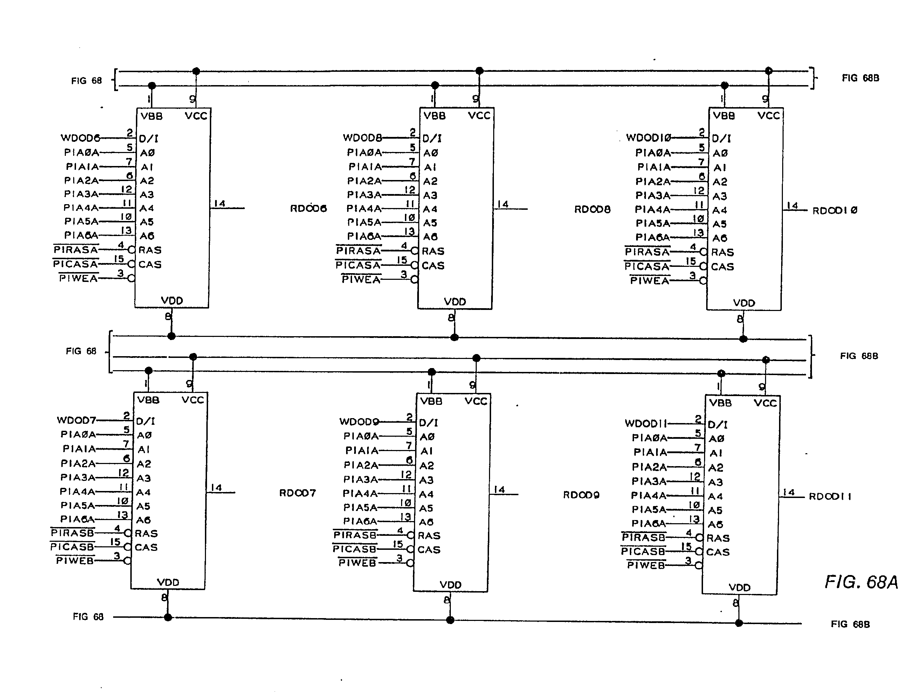

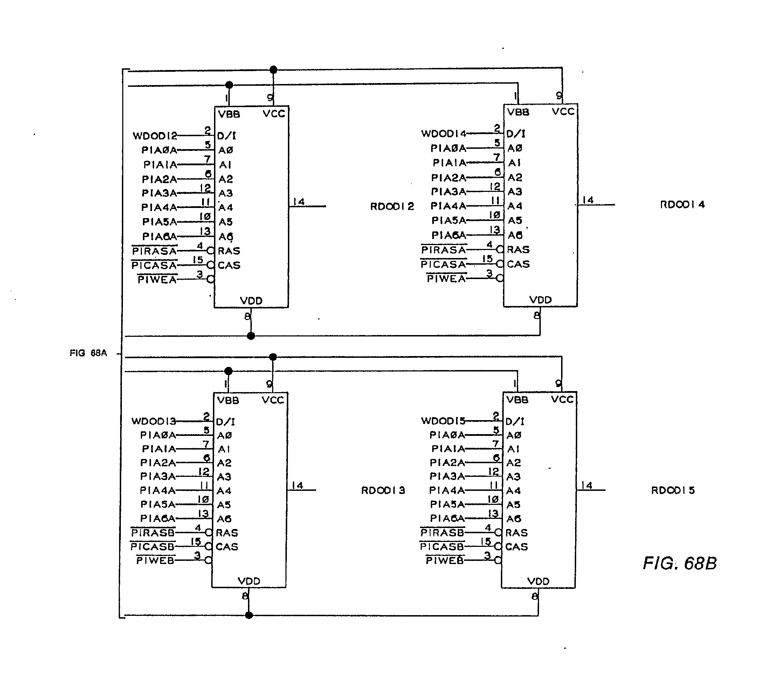

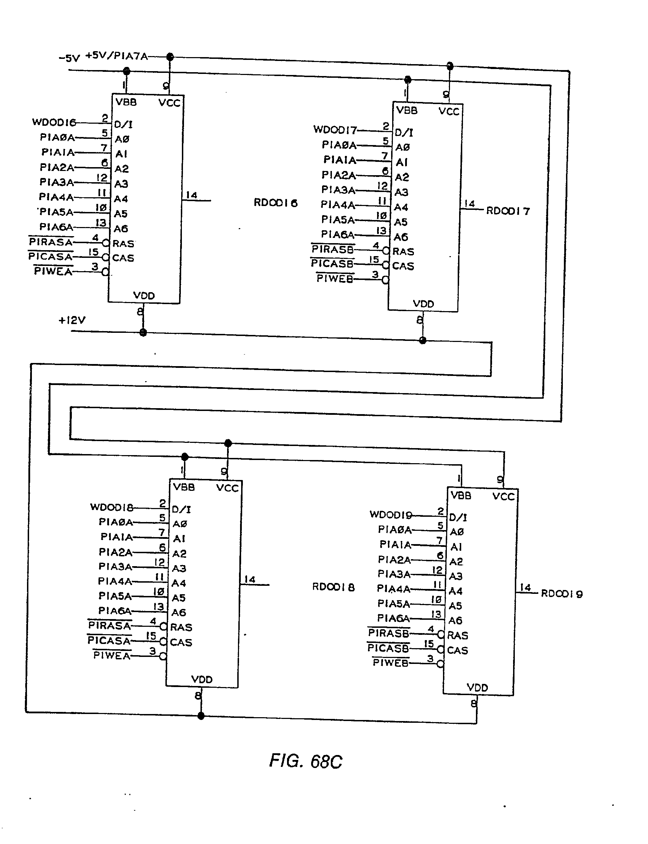

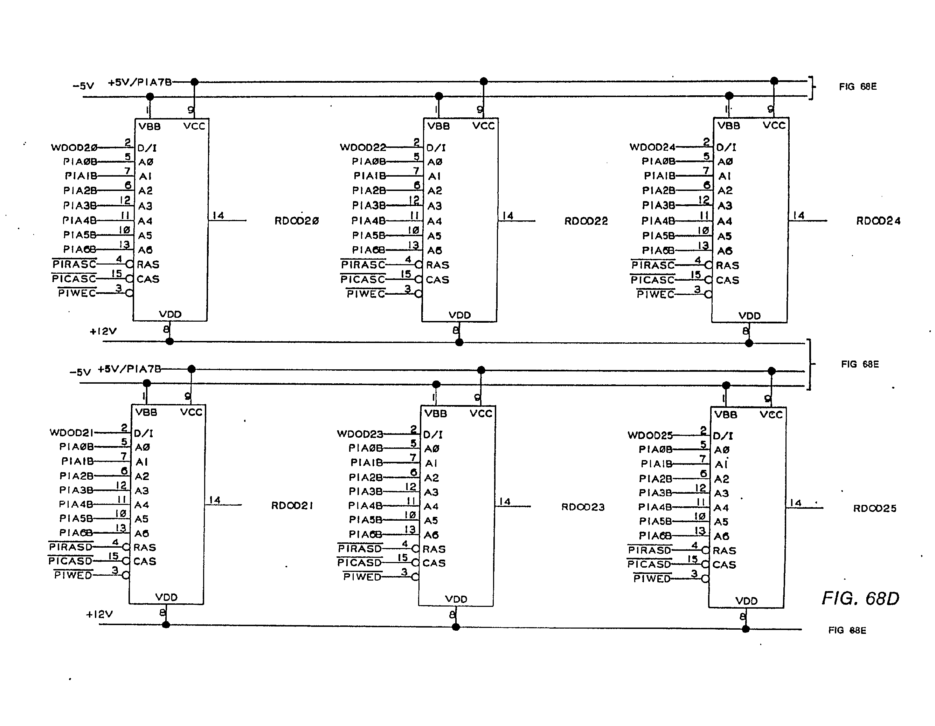

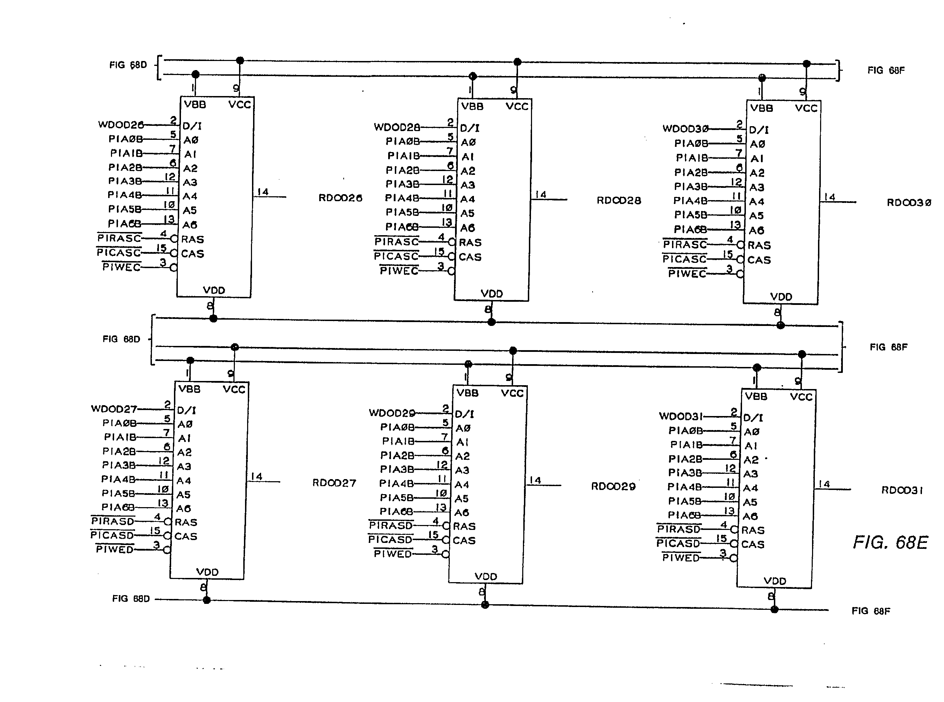

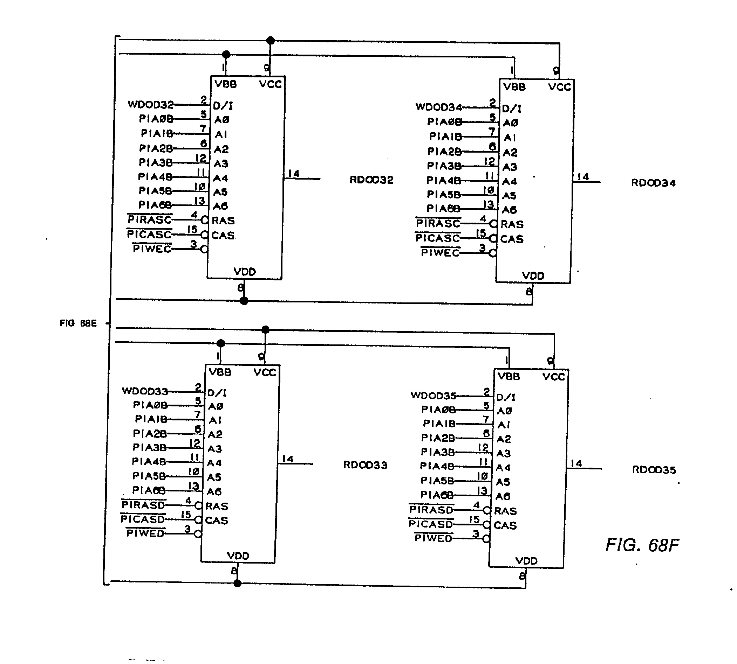

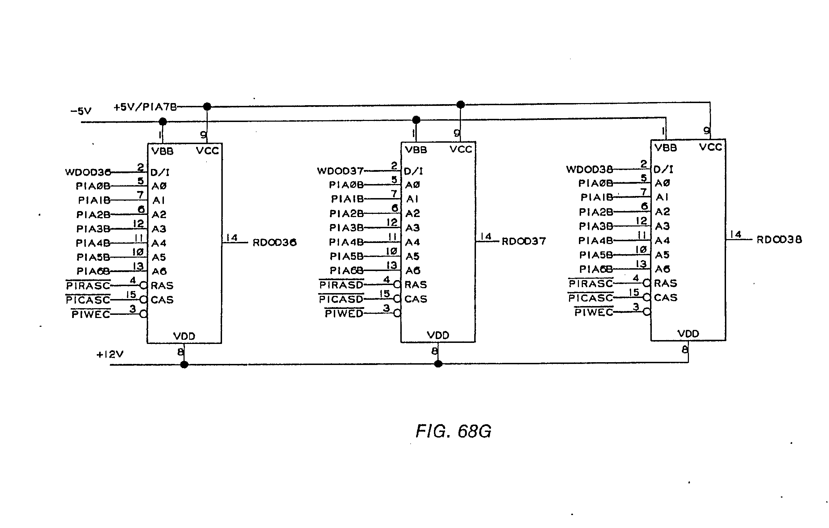

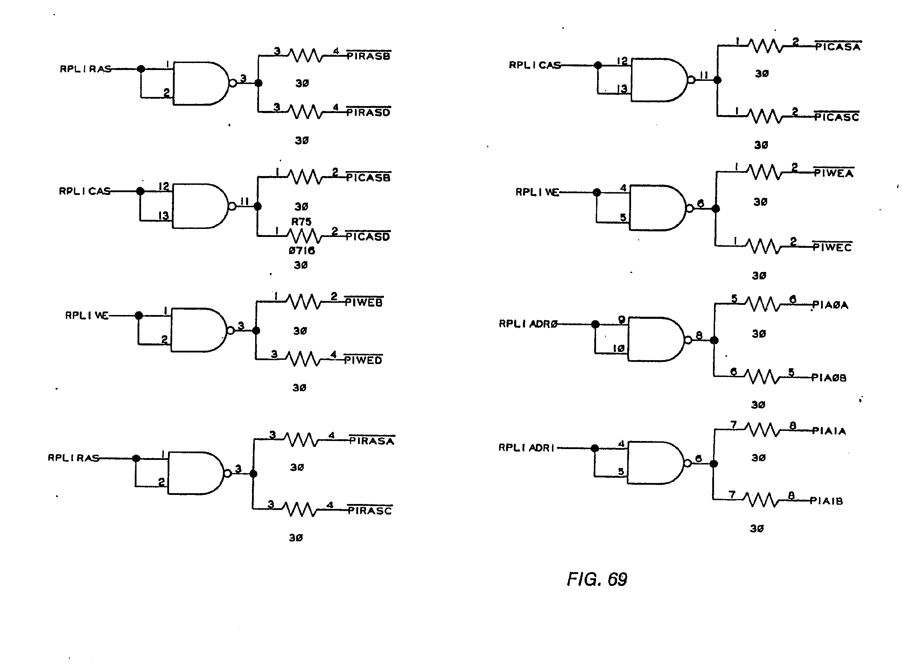

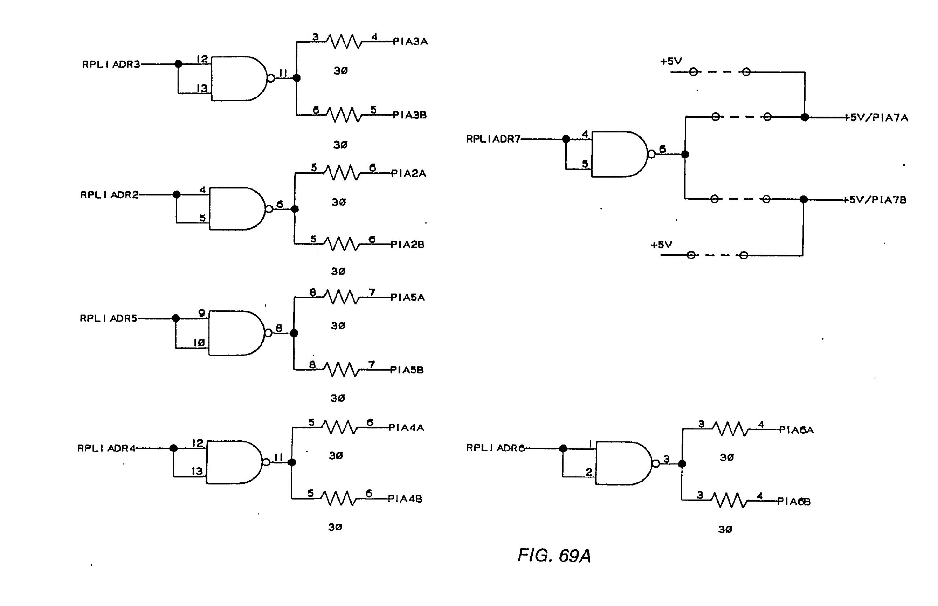

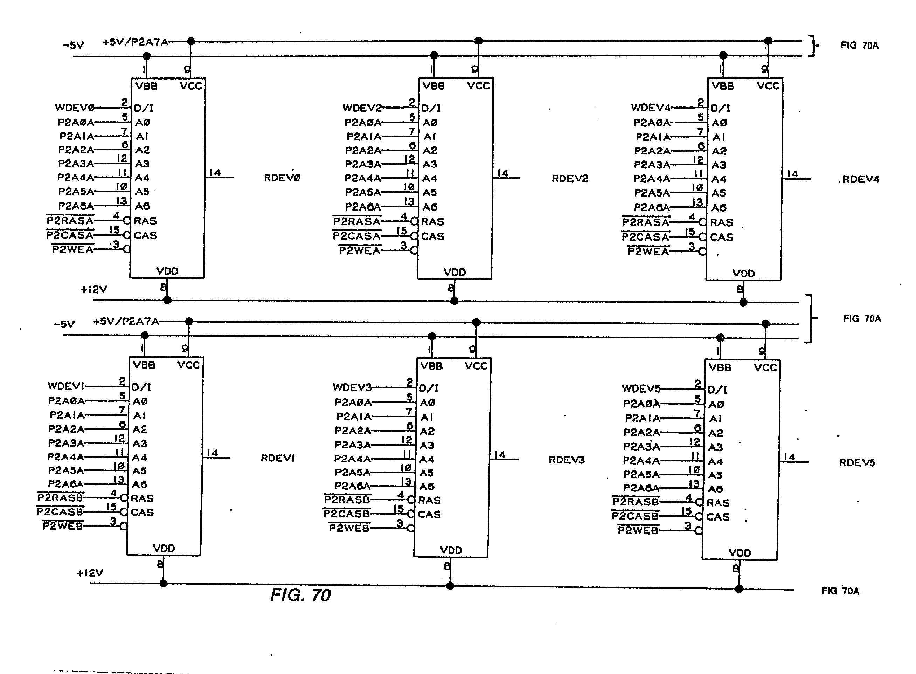

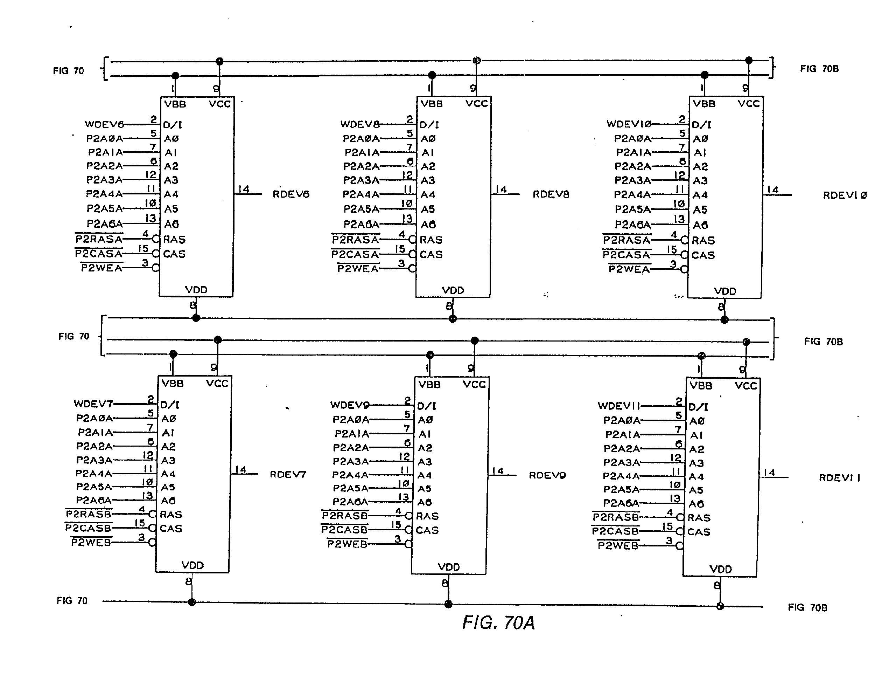

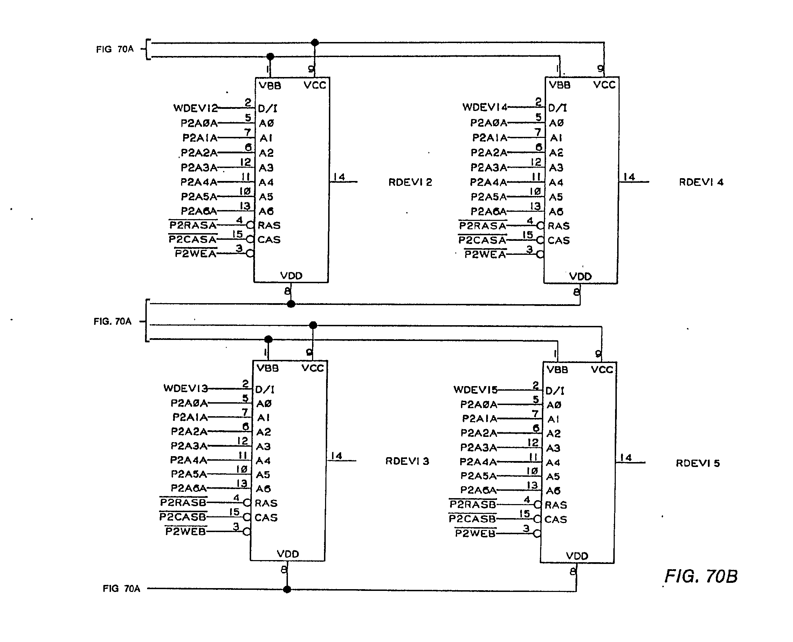

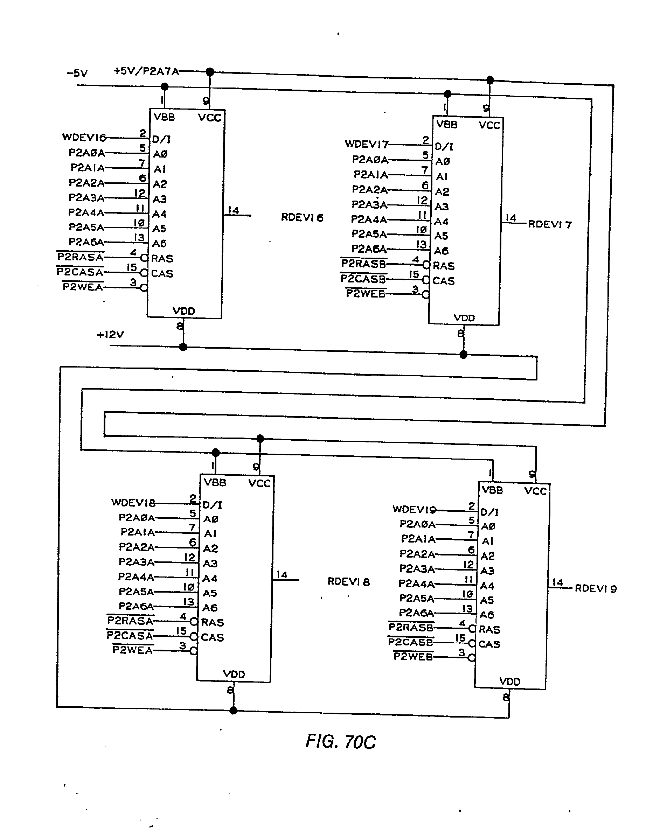

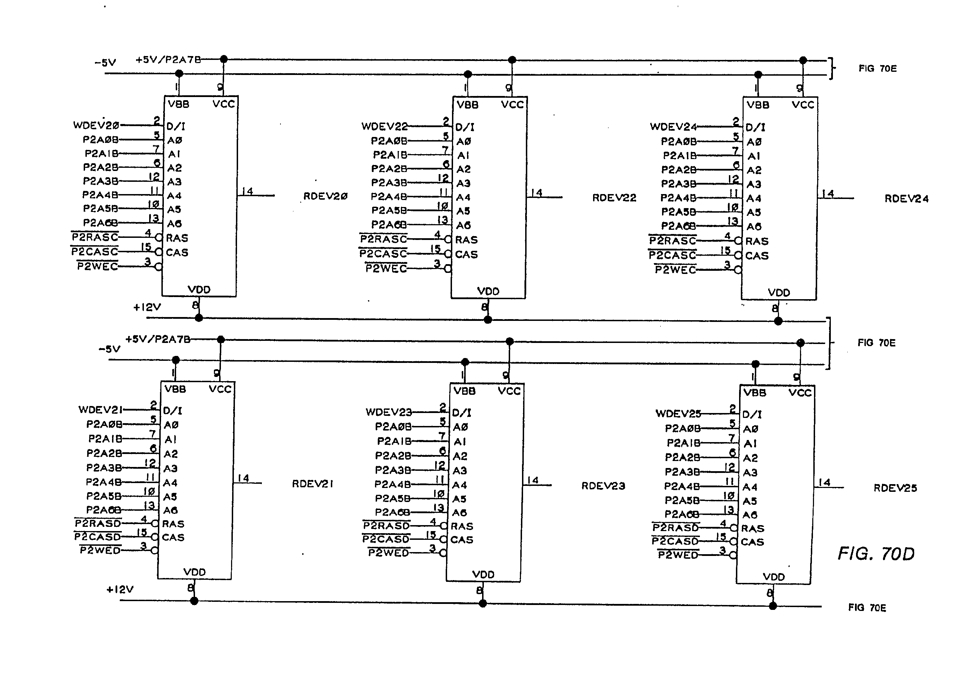

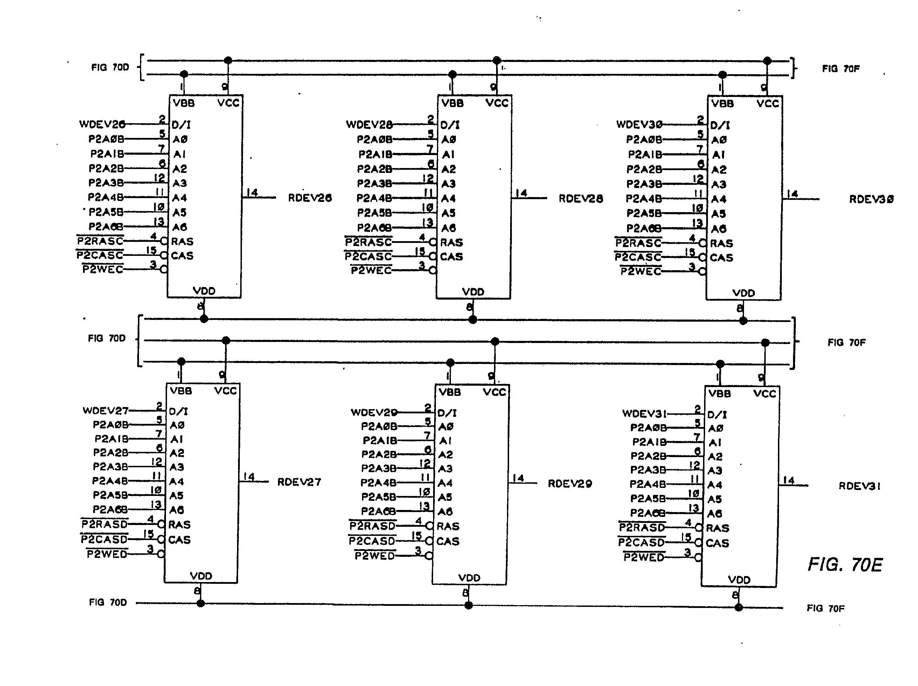

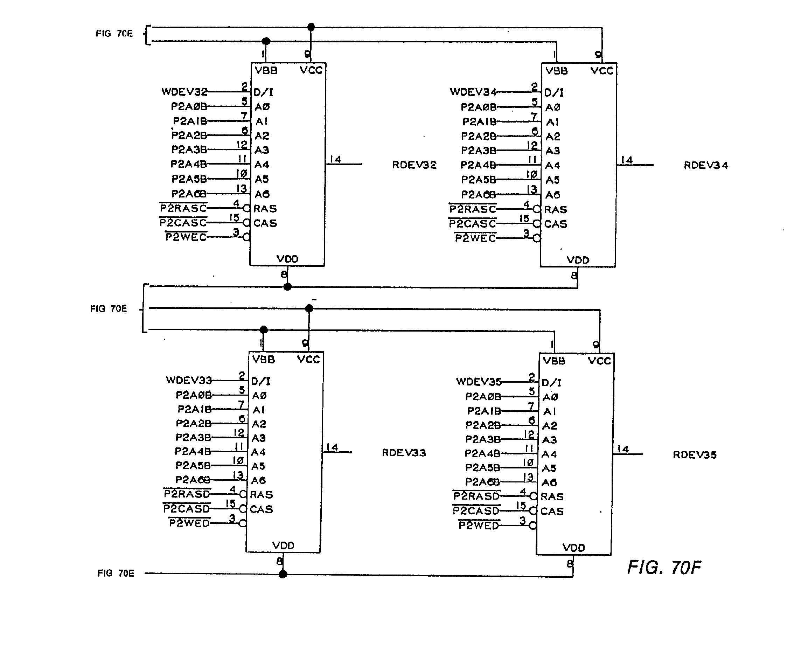

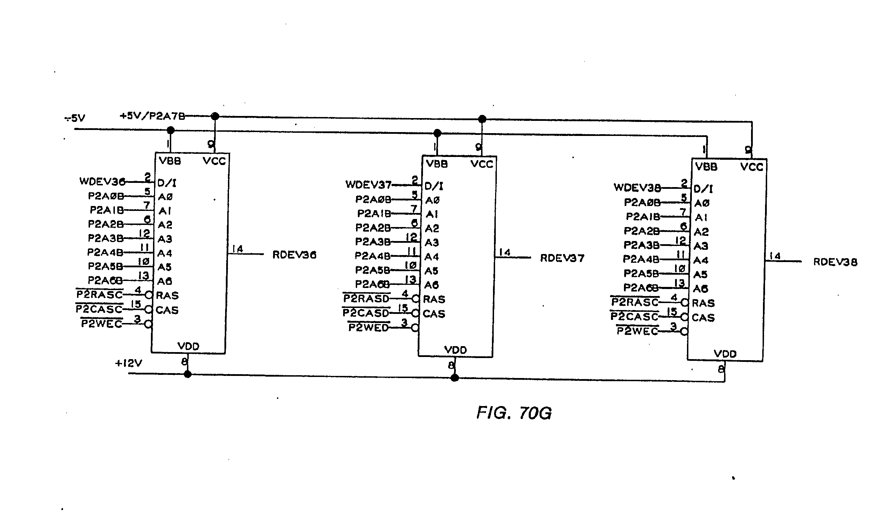

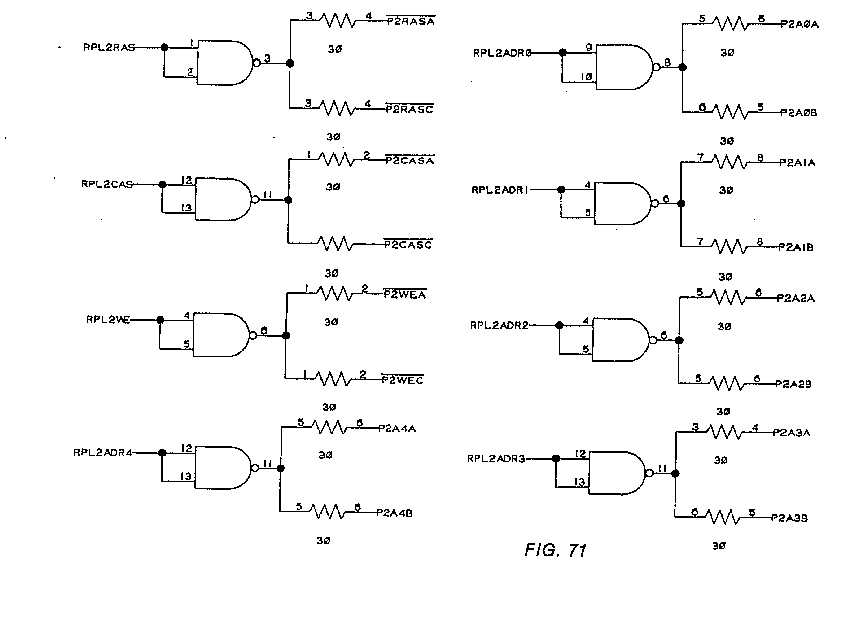

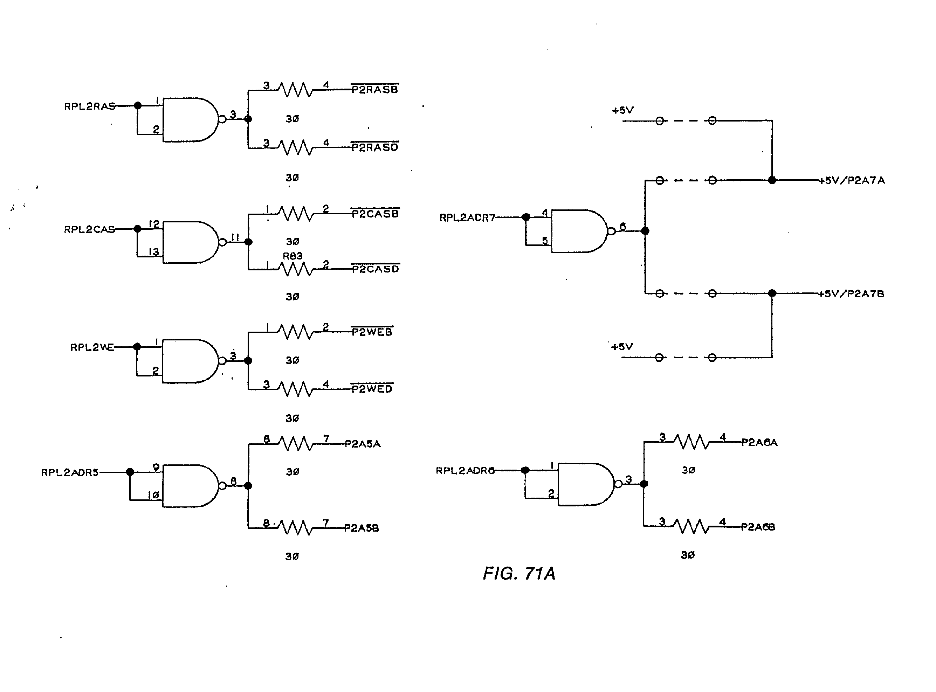

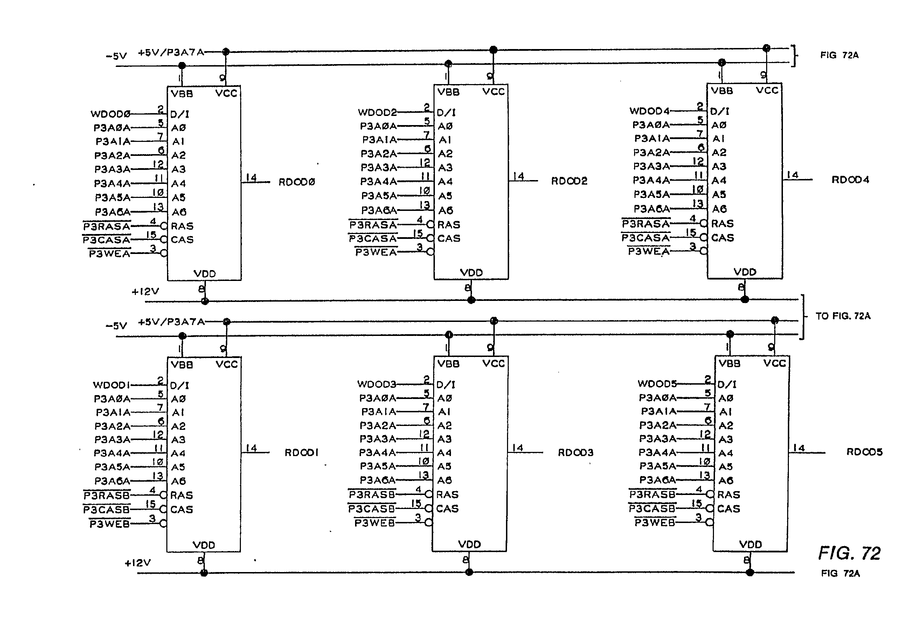

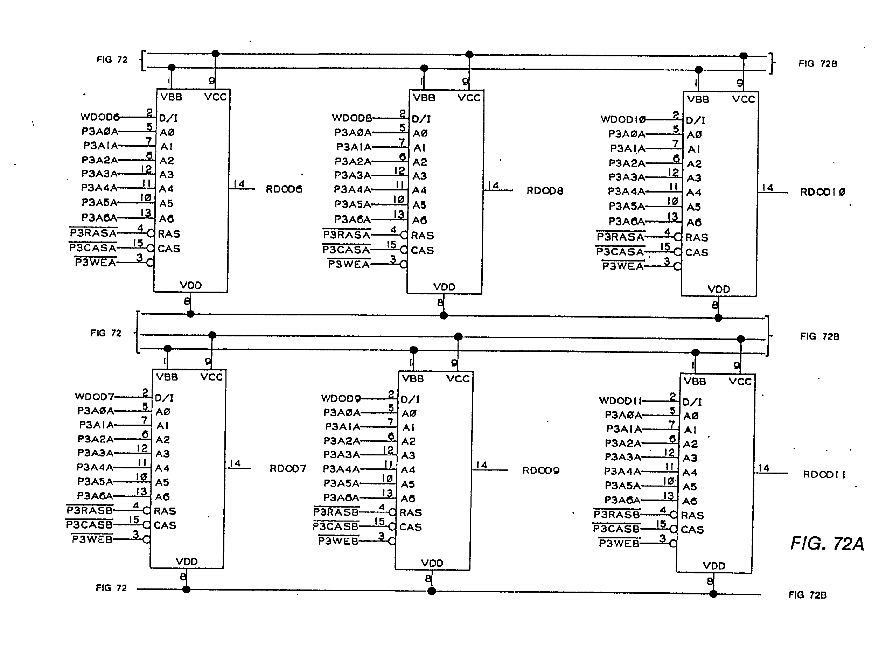

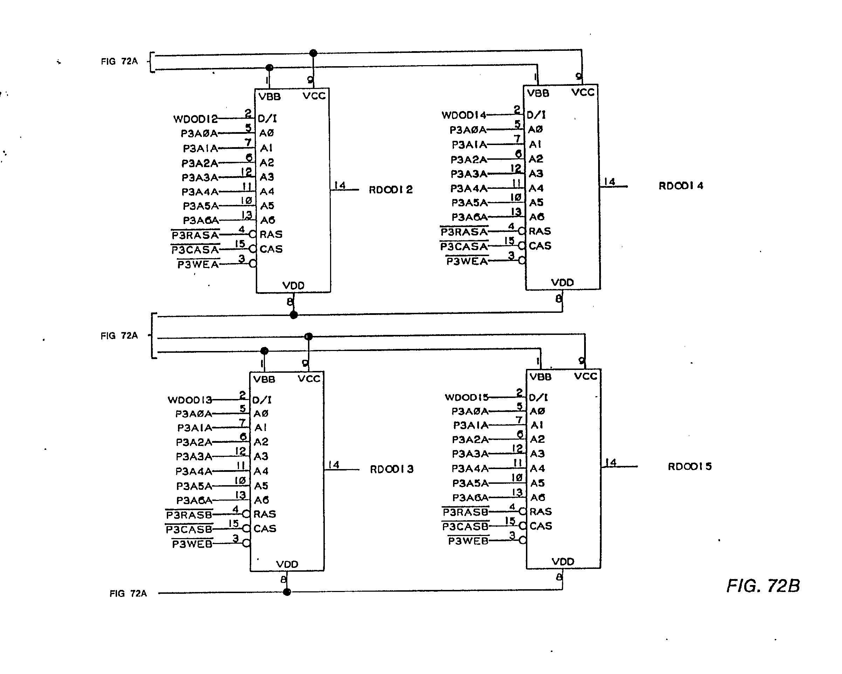

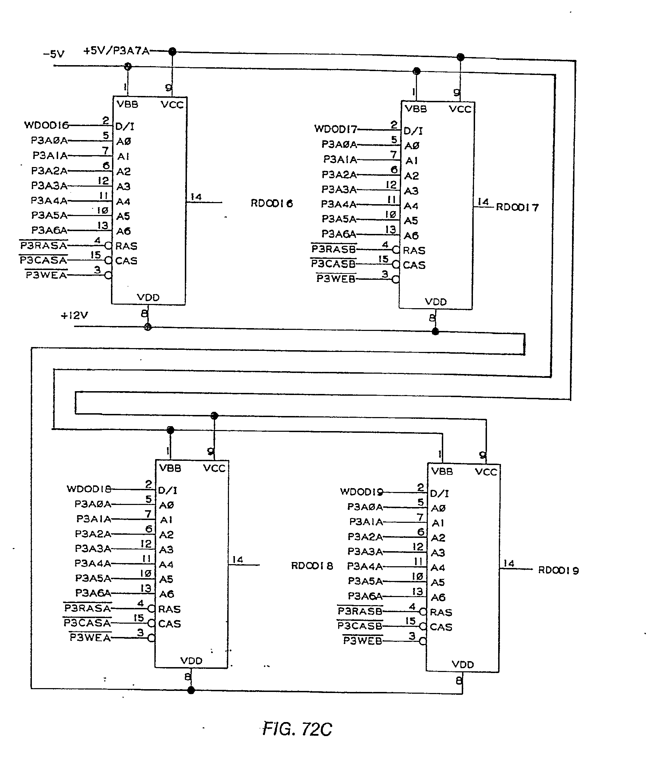

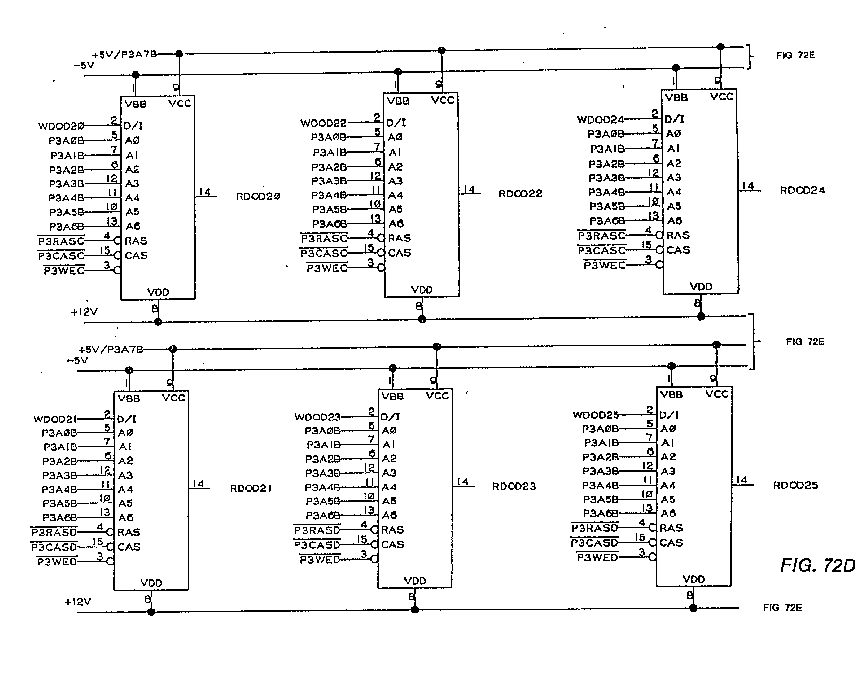

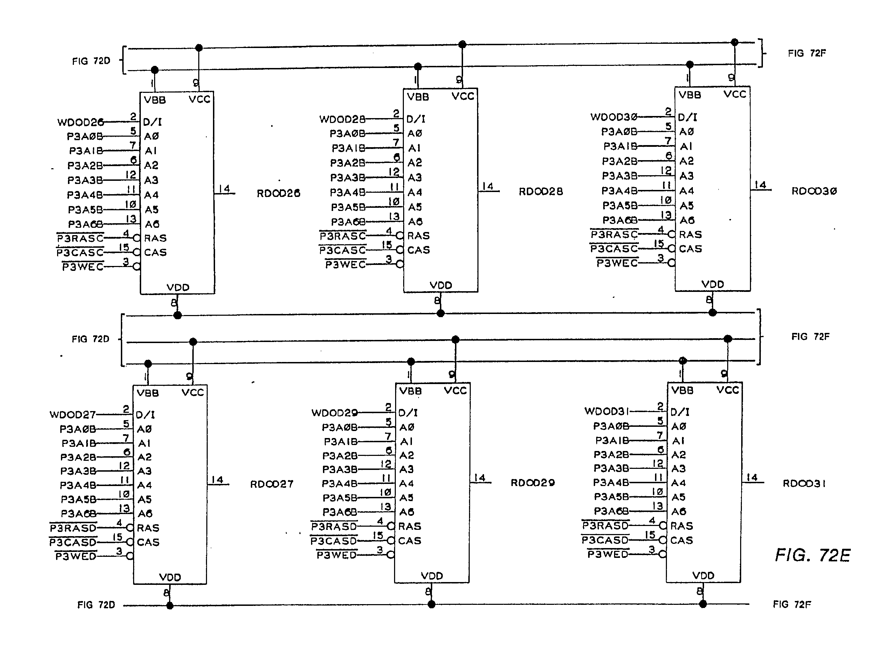

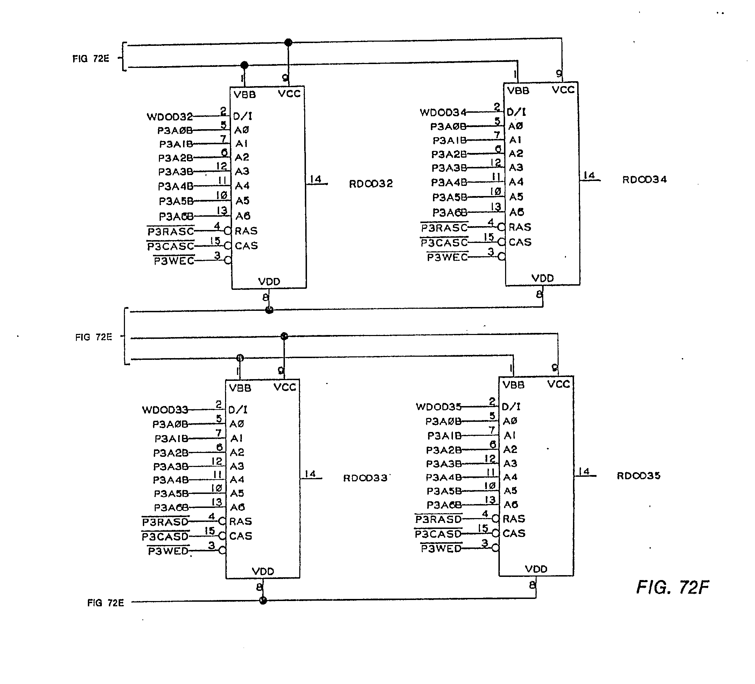

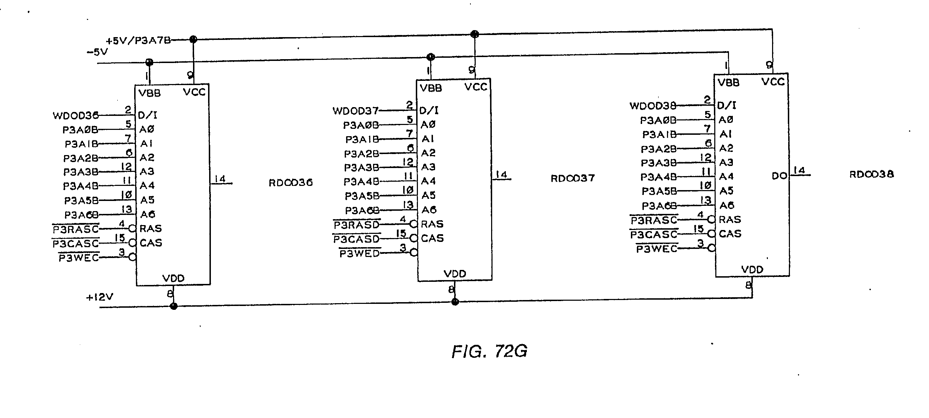

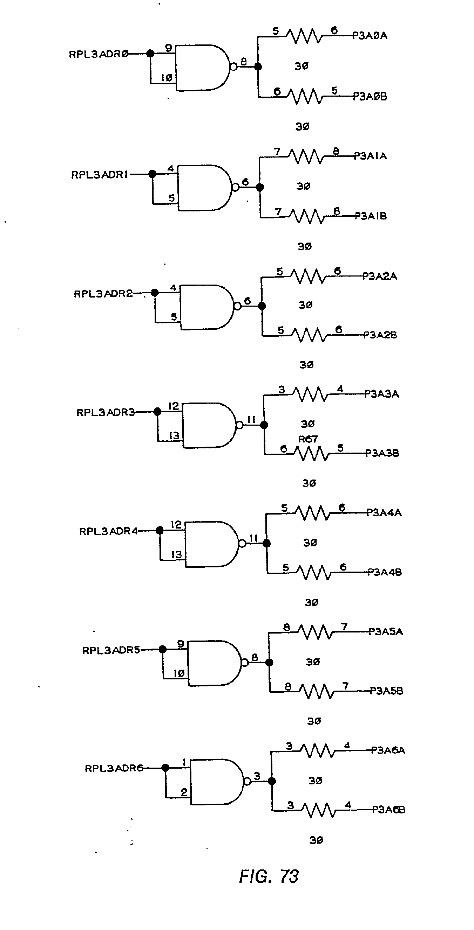

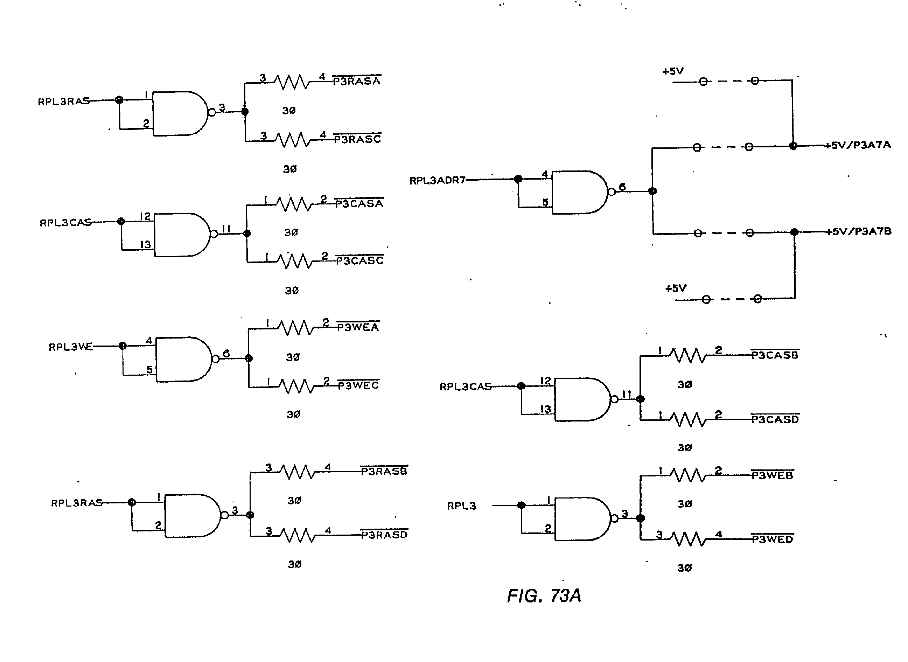

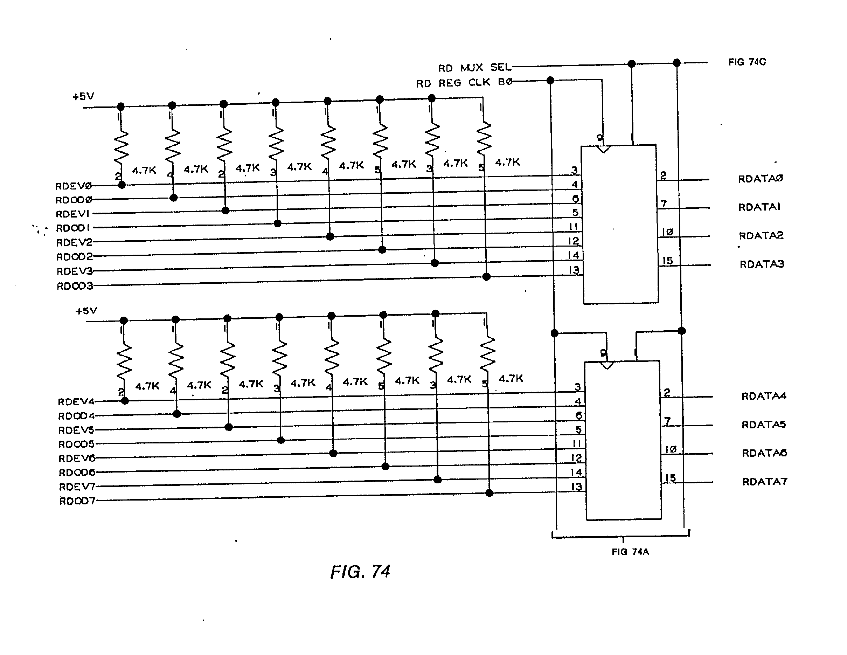

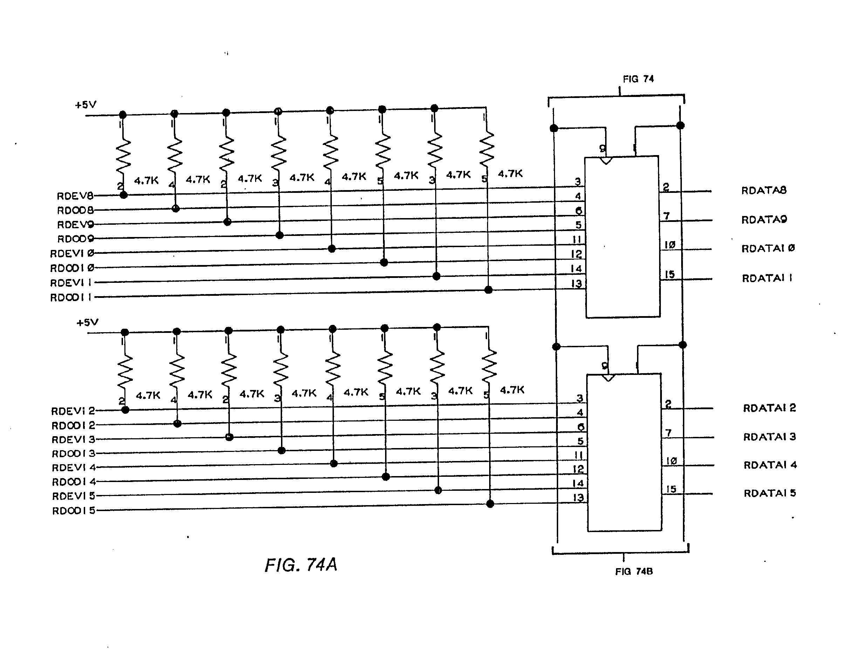

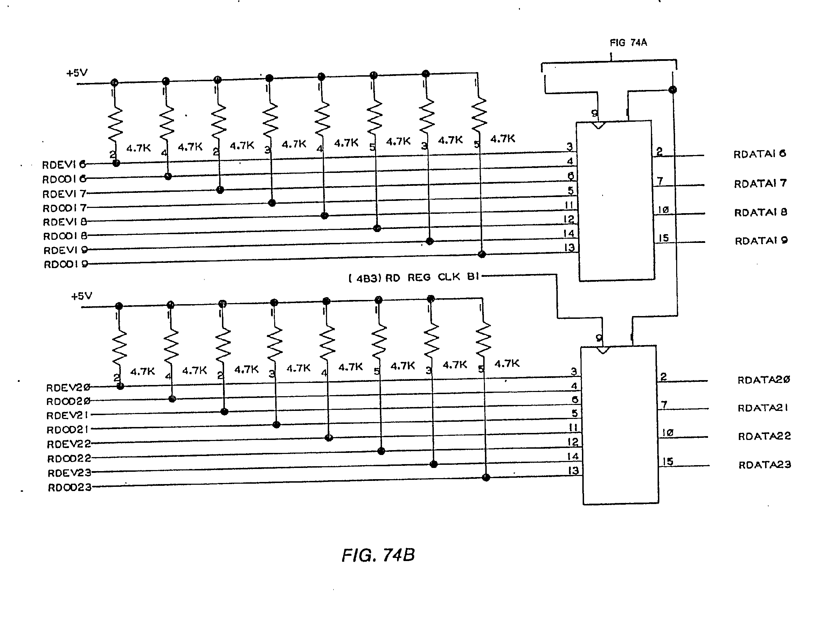

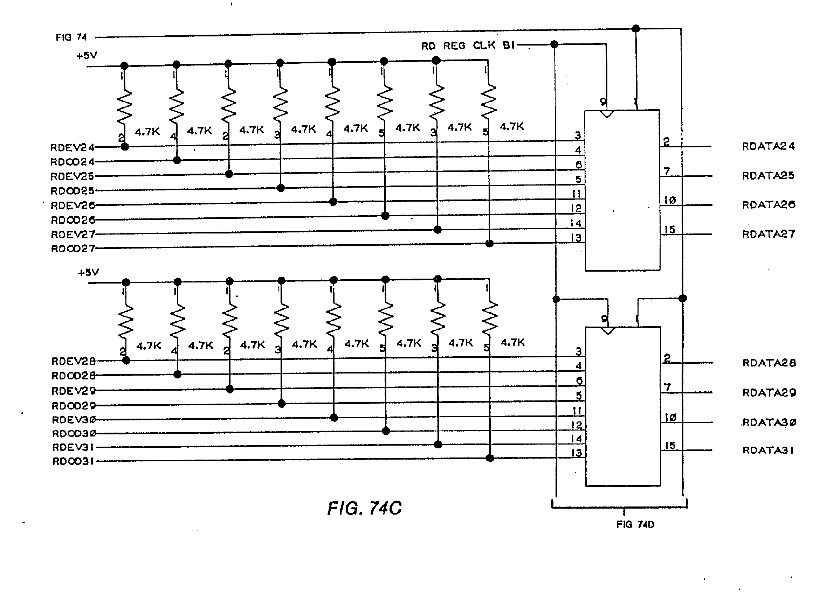

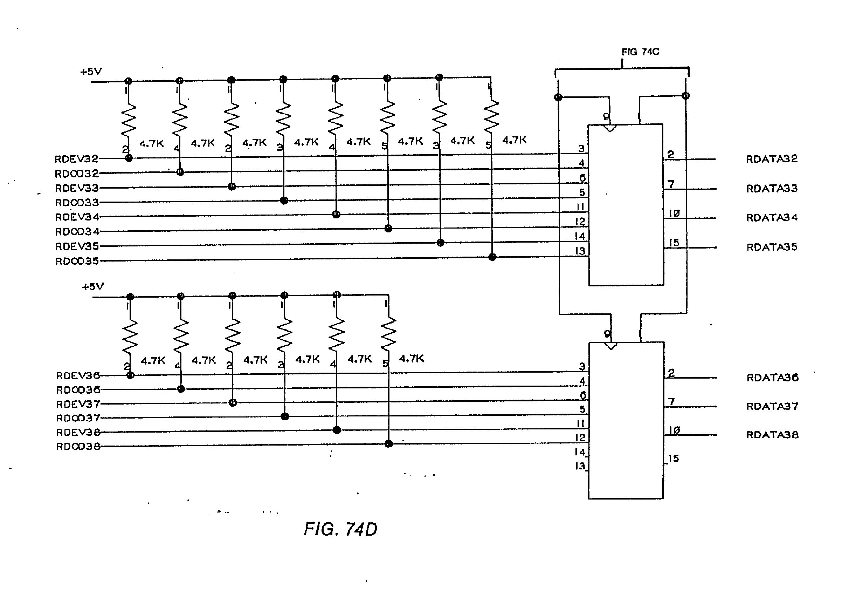

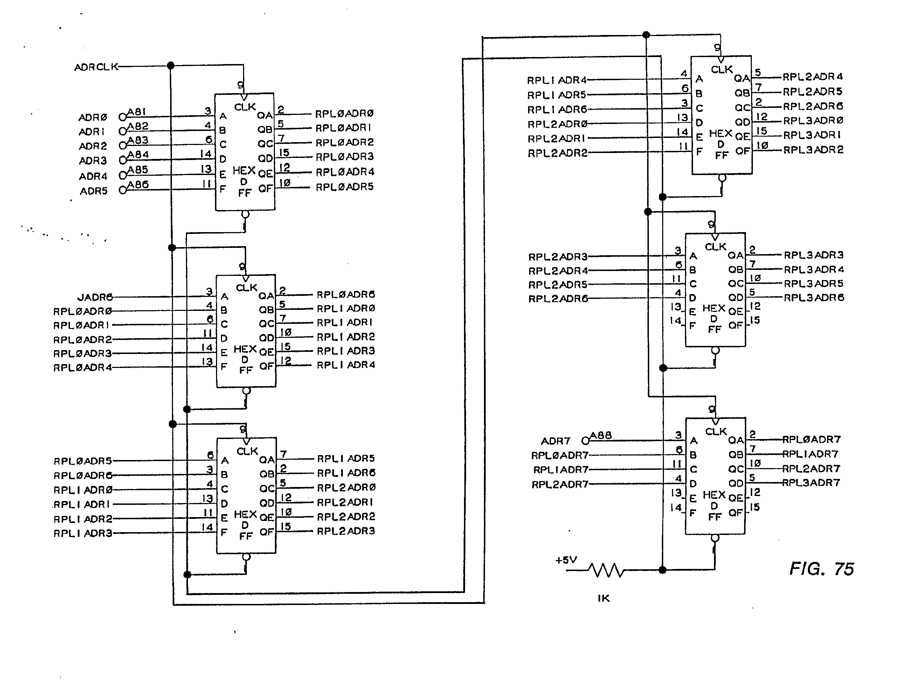

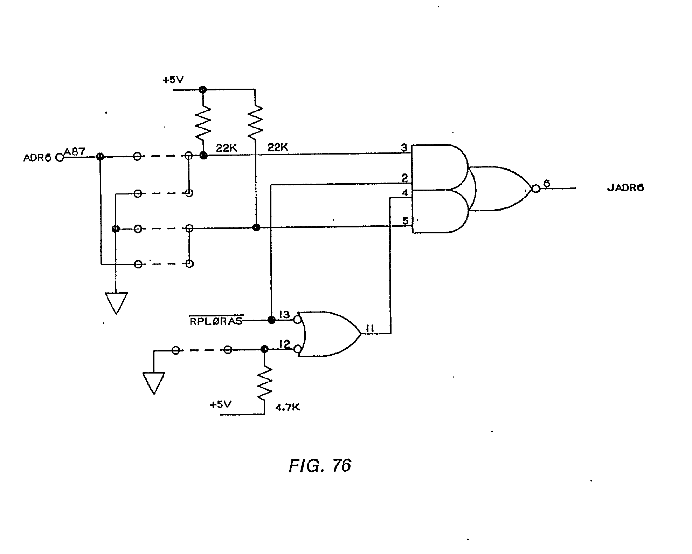

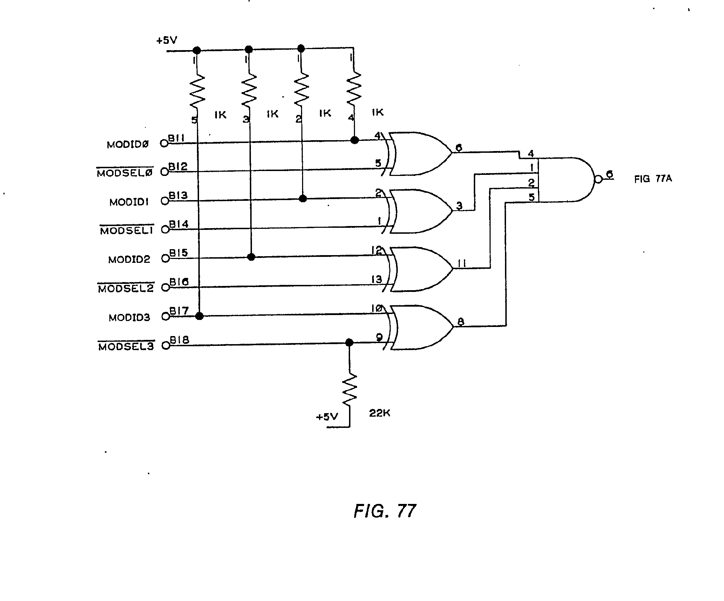

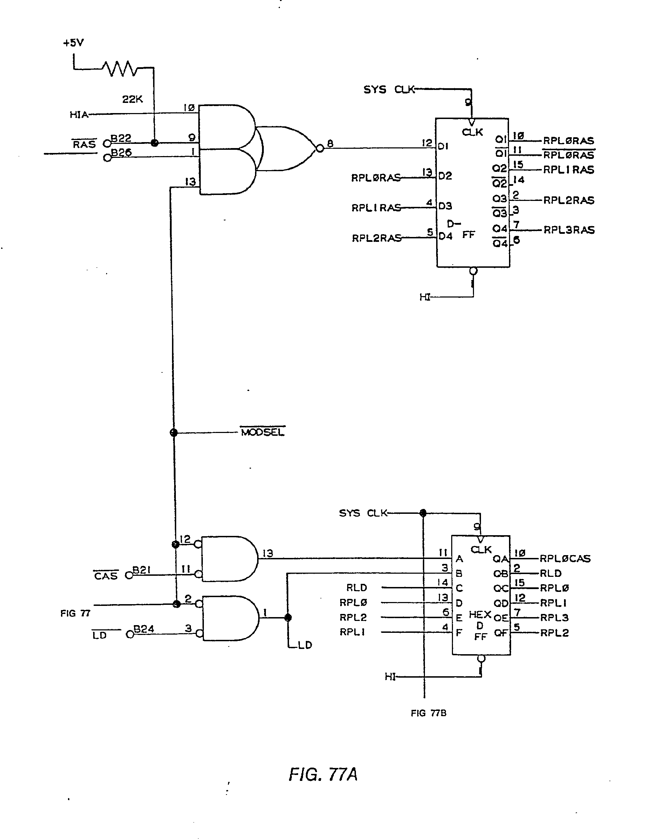

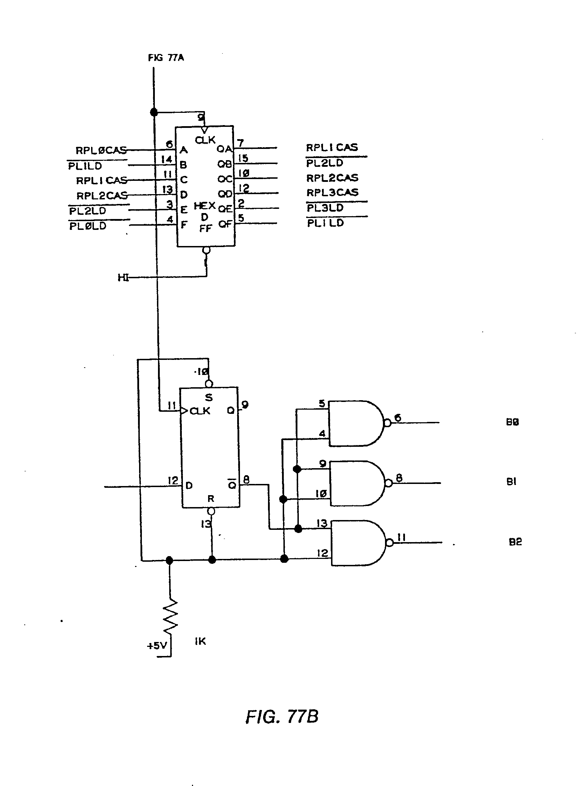

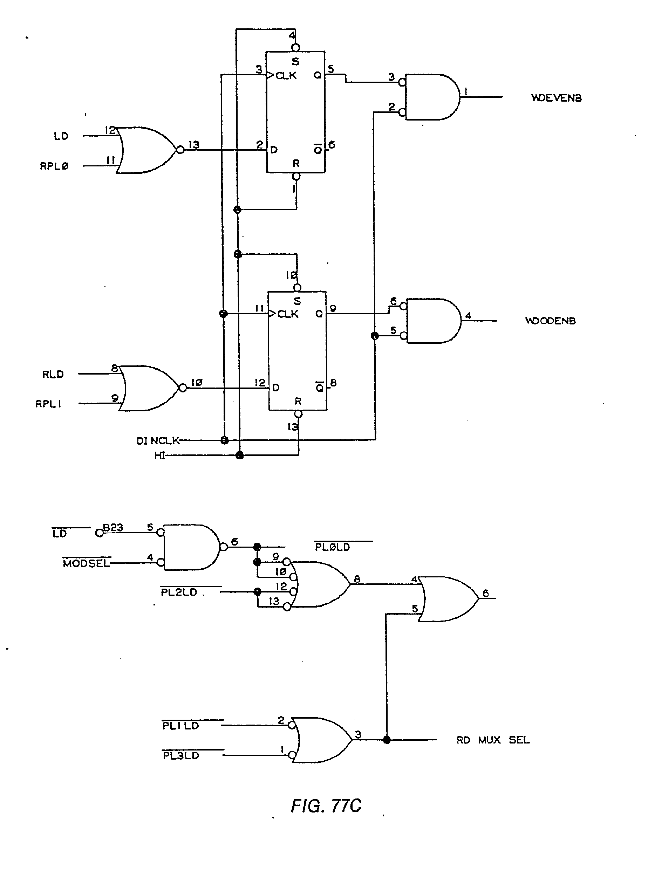

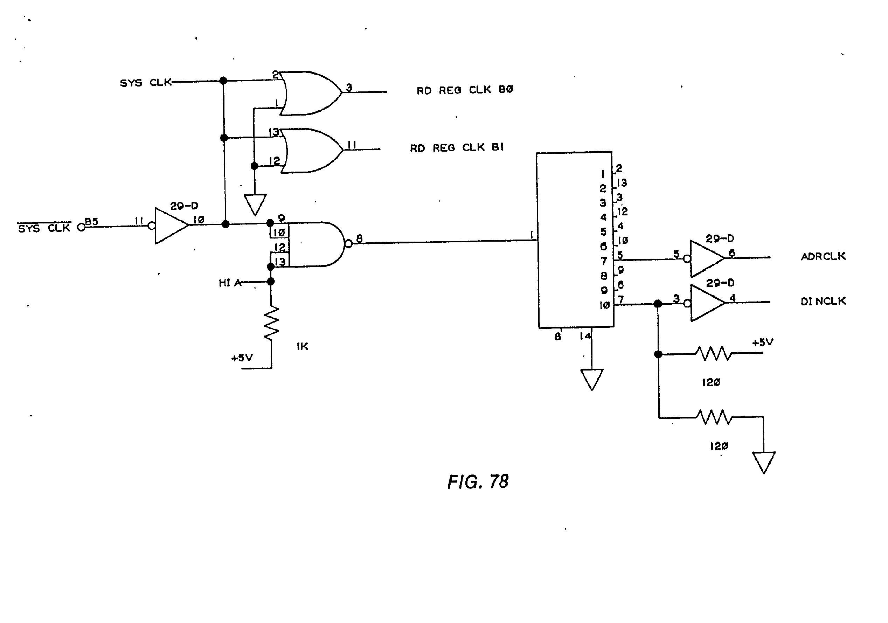

More specific detailed logic circuitry for implementing the units shown in the block diagram of FIG. 4 to achieve the desired operation as described above are shown in FIGS. 64-78. Data in registers 63 and 64 are shown in FIGS. 64 and 65, respectively. The memory array 60 is shown in FIGS. 66-73 wherein plane Ø RAMs and the control input circuitry therefor are shown in FIGS. 66 and 67; plane 1 RAMs and the control input circuitry therefor are shown in FIGS. 68 and 69, plane 2 RAMs and the control input circuitry therefor are shown in FIGS. 70 and 71, and plane 3 RAMs and the control input circuitry therefor are shown in FIGS. 72 and 73. The data out register and multiplexer unit 69 are shown in FIG. 74. Latching and driver logic is shown in 75. The RAM select logic unit (RAMSEL LOGIC) is shown in FIG. 76, while the $\overline{\text{MODSEL}}$ comparator unit 66 and the various control logic units and latching circuitry associated therewith and with the input control signals from bank controller unit 18 are shown in FIG. 77. Memory module timing logic is shown in FIG. 78.

## ADDRESS TRANSLATION UNIT

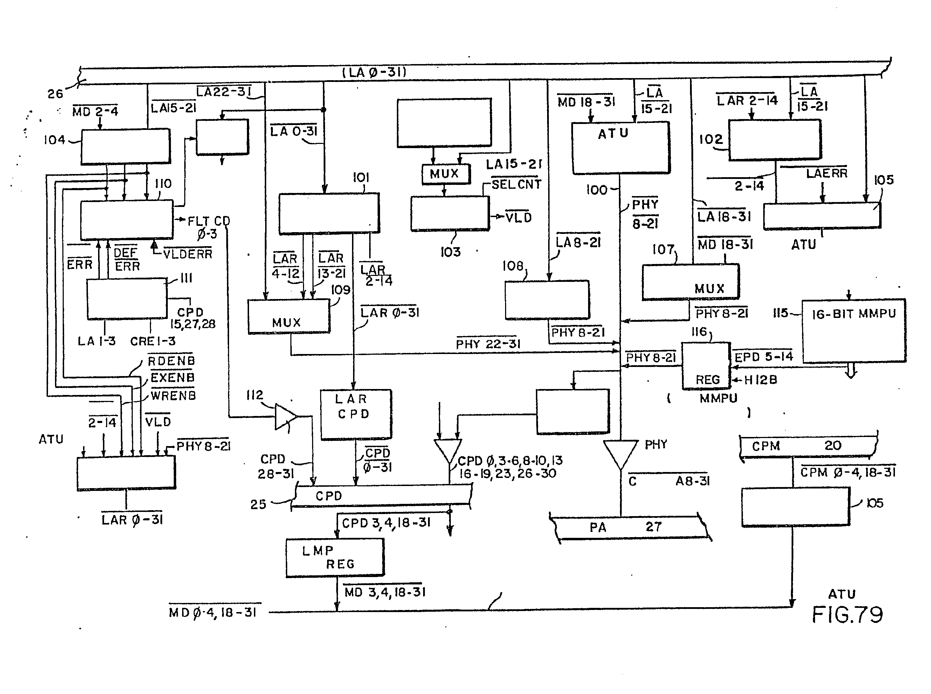

The address translation unit (ATU) 14 is shown broadly in FIGS. 79-81, the primary function of such unit being to translate a user's logical address (LA) into a corresponding physical address (PA) in the physical address space of the processor's memory modules discussed above. Such translation is effectively performed in two ways, one, by accessing a page from the system cache or from main memory at the particular page table entry specified in a field of the logical address and placing the accessed page in a translation store unit for use in performing the address translation, a sequence of operations normally designated as a Long Address Translation (LAT) and, the other, by accessing additional references to a page that has already been selected for access after an LAT has been performed and the page selected by the LAT is already present in the translation store. The latter translation provides an accelerated address reference and can be accomplished by saving, at the end of every Long Address Translation, the address of the physical page which has been accessed. As mentioned, the physical page involved is stored in a high speed random access memory (RAM) file designated in FIG. 79 at ATU translation store 100.

Translations of addresses on the physical page which is stored in the ATU translation store 100 are available to the processor within one operating time cycle of the CPU, while normally the Long Address Trnaslation will take a plurality of such cycles for a reference which requires a single level page table reference (e.g. 3 cycles) or a two-level page table reference (e.g. 5 cycles), where the page in question is available in the system cache memory. Even longer times may be required if the page involved can not be found in the system cache memory and must be accessed from main memory.

A secondary function of the ATU is to emulate all operations of the previous system of which the present system is an extension, e.g., in the system described, to perform all Eclipse memory management processor unit (MMPU1) address translation operations, as described in the above referenced publication for such systems, in an efficient and compatible way, such emulated operations being described in more detail later.

In order to understand more clearly the translation of a logical word address (a byte address when shifted right by one position produces a word address), the logical word address can be defined as shown below:

| 0 | 1 | 3 | 4 | 21 | 22 | 31 |
|---|---|---|---|---|---|---|
| X | SEGMENT | | LOGICAL PAGE ADDRESS | | OFFSET | |

1 ←— INDEX —→ 15   21

2   14
TAG

As seen therein, the segment and logical page address is 21 bits long, the segment and logical page address being divided into two fields, the Tag field and the Index field. The Tag field is defined as bits $\overline{LA\ 2-14}$ while the Index field is defined as bit $\overline{LA\ 1}$ plus bits $\overline{LA\ 15-21}$.

As seen in FIG. 79, when a logical word address $\overline{LA\emptyset-31}$ is received from the arithmetic logic unit (ALU) on the logical address bus 26 it is latched into a logical address register $\overline{(LAR)\ 101}$. The Index bits $\overline{LA\ 15-21}$ are taken directly from the logical address bus to address four RAM stores, the first being a Tag store 102, which retains the tag portions of the logical addresses corresponding to the physical addresses saved in the ATU physical address (PA) translation store 100. The Index bits

$\overline{LA\ 15-21}$ are also supplied to a validity store RAM unit 103 and to a protection store RAM unit 104, as discussed below.

If the physical address translation store 100 contains valid address translations, when a memory access is started the logical address is loaded into the logical address register 101 and the Index (bits $\overline{LA\ 15-21}$) is used to select a location in the store.

In the particular system described, even though there is a valid address translation at such location in translation store 100, it may not be the correct one. Corresponding with each index of the logical addresses (and each address location in the translation store) there are a selected number of possible "tags", each tag corresponding to a unique physical page address.

Only one of such tags and its corresponding physical page address can be saved in the translation store 100 at the location selected by the Index. Therefore the "tag" ($\overline{TAG\ 2-14}$) that corresponds to the Index in question and is currently stored in the tag store 102 is compared at comparator 105 to the "tag" in the logical address register ($\overline{LA\ 2-14}$). If the "tags" correspond, the address translation contained in the translation store 100 is the correct one and can be used to supply the desired physical address (signified by an ATU HIT signal at the output of comparator 105). If they do not match, a Long Address Translation operation must be performed to obtain the desired physical page address from the system cache or main memory. The physical page address which is thereby accessed by such LAT procedure to replace the physical page address previously contained in the ATU translation store 100 is placed on the appropriate transfer bus (CPM bus 20). At the completion of the long address translation, the "tag" taken from the logical address register (LAR 2-14) is written into the tag store 102 at the location selected by the index and the physical page address from the memory data register 106 (MD 18-31) is written into the translation store 100 at the location specified by the index.

The ATU configuration shown in FIG. 79 also contains further components which are used to place the translated physical address of a desired physical page table on the physical page address (PA) bus 27. There are three other possible sources of physical page table addresses, the first of which is bits SBR 18-31 of a segment base register which segment base register can also be located in scratch pad units of the address translation unit. This address is used to reference either a high order page table (HOPT) of a two-level page table or the low order page table (LOPT) of a one-level page table. Since the segment base registers are located at the ATU, such addres can be obtained from the logical address bus 26 as LA 18-31.

The following diagrams depict the results of the control actions initiated by the arithmetic translation unit (ATU) to perform a long address translation in which a physical address is derived from a logical address by traversing the one-and two-level page tables in the main memory. Diagram A depicts a one-level page table traversal, while Diagram B depicts a two-level page table traversal, the physical address bits 3-21 of the final physical address (i.e., the desired memory allocation data) being placed in the translation store 100 so that when the corresponding logical address is subsequently requires a translation, the physical address is available (an ATU HIT occurs) and there is no need for subsequent long address translation.

Logical word address

DIAGRAM A

The logical word address to be translated for a one-level page table translation has the format shown in Diagram A. Bits 1-3 of the word address specify one of the eight segment base registers (SBRs). The ATU uses the contents of this valid SBR to form the physical address of a page table entry (PTE), as shown at point ① of the diagram.

The selected SBR contains a bit (bit 1) which specifies whether the page table traversal is a one-level (bit 1 is zero) or a two-level (bit 1 is a one) page table. In Diagram A a page table entry address comprising the starting address of a selected page table and page table entry offset specifying a page address therein.

To form this physical page address, the ATU begins with the physical address as shown at ② of the diagram. This address becomes bits 3-21 of the PTE address. Bits 13-21 of the logical word address become bits 22-30 of the PTE address. The ATU appends a zero to the right of the PTE address, making a 29-bit word address.

Bits 3-21 of the PTE address (unchanged in the step above) specify the starting address of a page table. Bits 22-31 of the PTE address specify an offset from the start of the table to some PTE (labelled PTEn in Diagram A). This PTE specifies the starting address of a page of memory, as shown at ③ of the diagram.

PTEn bits 13-31, the page address, become bits 3-21 of the physical address, as shown at ④ of Diagram A. The page offset field specified in bits 22-31 of the logical word address becomes bits 22-31 of the physical address. This is the physical word address translated from the original word address. The physical address bits 3-21 are placed in the translation store as the memory allocation data for subsequent use if the same logical word address requires subsequent translation. It should be noted that when using a one-level page table, bits 4-12 of the logical word address must be zero. If they are not zero and bit 1 of the SBR indicates a one-level page table is required, a page fault occurs.

Logical word address

DIAGRAM B

Just as in the one-level page table translation process, in the two-level page table translation depicted in Diagram B, the processor produces a physical address. The logical word address to be translated has the format shown in the diagram, the steps (1) through (4) being substantially the same as in Diagram A except that bits 4-12 of the logical word address become bits 22-30 of the PTE address. The ATU appends a zero to the right of the PTE address, making a 29-bit word address. Bits 1-3 of the word address specify one of the eight segment base registers (SBRs).

Bits 3-21 of the PTE address specify the starting address of a page table. Bits 22-31 of the PTE address specify an offset from the start of the table to some PTE (labelled PTE*n*). The PTE specifies the starting address of a page table. Thus, the ATU now constructs the address of a second PTE from the address at ④. The physical address specified in bits 13-31 of the first (PTE*n*) becomes bits 3-21 of the address of the second PTE*m*. Bits 13-21 of the logical word address become bits 22-30 of the second PTE's address. The ATU appends a zero to the right of the second PTE address to make a 29-bit word address.

Bits 3-21 of the second PTE address specify the starting address of a second page table. Bits 22-31 of the second PTE address specify an offset from the start of the second table to some PTE (labelled PTE*m* in Diagram B). The second PTE specifies the starting address of a page, as shown at ⑤ in Diagram B.

The second PTE*m*'s bits 13-31, the page address, become bits 3-21 of the physical address and the page offset specified in bits 22-31 of the logical word address becomes bits 22-31 of the physical address, as shown at ⑥ in Diagram B. This last value is the final physical word address.

The physical page table address for the low order page table of a two-level page table is in bits 18-31 of the high order page table entry (HOPTE) which must be fetched from the main memory. Thus, the second possible source of the physical page table address is the memory data register (MD) 105 which holds the data that arrives on the physical memory data (CPM) bus 20 as $\overline{\text{MD 18-31}}$. A suitable page table multiplexer 107 is used to select which of the two sources will drive the physical address bus when its outputs are enabled.

The third and final source is to drive the physical page address bus 27 directly through a physical mode buffer 108, such buffer being used to address physical memory directly ($\overline{\text{PHY 8-21}}$) from buts $\overline{\text{LA 8-21}}$ of the logical address bus. Such buffer is enabled while the ATU unit is turned off (i.e., no address translation is required) since the physical address in that mode is the same as the logical address and no translation is necessary.

Bits $\overline{\text{PHY 22-31}}$ of the physical address are offset by displacement bits, there being three possible origins for the offset. The first source of such offset is from bits $\overline{\text{LA 22-31}}$ of the logical address bus which bits are used while in physical mode (no address translation is necessary) as well as the offset in the object page. The second source of the offset is bits $\overline{\text{LAR 4-12}}$ (referred to as two-level page table bits in Diagram B above) of the logical address register which is used as an offset within the high order page table during a long address translation. Since this source is only nine bits long and page table entries are double words aligned on even word boundaries, a ten bit offset (to form $\overline{\text{PHY 22-31}}$) is constructed by appending a zero bit to the least significant bit. The final source for the offset is

bits $\overline{\text{LAR } 13\text{-}21}$ (referred to as one-level page table bits in Diagram B above) of the logical address register which is used as an offset within the low order page table during a long address translation. A zero bit is appended to the least significant bit of this source also. Offset multiplexer 109 is used to select the desired one of such three offset sources.

The following discussion summarizes the address bit sources for forming a low order or high order page table entry address in main memory in making a long address translation. The address of the page table entry is formed from address fields in a segment base register (SBR) and from address fields in the logical address register. The address fields of a segment base register can be depicted as follows:

| 0 | 1 | 2 | 3 | 4　　　　12 | 13　　　　　　　　31 |
|---|---|---|---|---|---|
| V | L | LEF | I/O | RESERVED | PHYSICAL ADDRESS |

SEGMENT BASE REGISTER

Depending on whether a one-level (low order) or a two-level (high order) page table entry is called for, the SBR address field comprising bits 4-12 or the SBR address field comprising bits 13-21 is transferred to the memory data register 105 to form the higher order bits of the page table entry. As mentioned above, the eight SBR registers are located in 8 of the 256 locations of scratch pad registers on the ATU. This use of such scratch pad locations for the segment base registers can be contrasted with prior known systems wherein the segment base register (or registers comparable thereto) in a segment, or ring, protection memory system are all located at specified locations in the main memory. By placing them in a scratch-pad memory located in a processing unit of the system, as in the ATU unit here, the higher order page table entry bits are acquired more rapidly than they would be if it were necessary to fetch them from main memory and, hence, the speed at which page table entries can be made is improved considerably.

One of the bits of an SBR (identified above as "V" bit) is examined to determine whether the SBR contents are valid. Another bit (identified above as "L" bit) is examined to determine whether a 1-level or a 2-level page table entry is required so that the correct field is supplied to the memory data register.

Other bit fields of the SBR are used to determine whether a Load Effective Address (LEF) instruction (such LEF instruction is part of the Eclipse instruction set as explained more fully in the above cited publications therein) or I/O instruction is required. Thus in a selected state the LEF Enable bit will enable an LEF instruction while a selected state of the I/O Protect bit will determine whether an I/O instruction can be permitted. The remaining field of the SBR contains the address offset bits.

As is also seen in FIG. 79 a variety of protection checks are made for each reference to memory, which protection checks are made by the use of protection store unit 104, protection logic unit 110 and ring protection logic unit 111 .for providing appropriate fault code bits $\overline{(FLTCD \ \emptyset-3)}$ which are supplied to the micro-sequencer (described below) via driver 112 on to the CPD bus 25 for initiating appropriate fault micro-code routines depending on which fault has occured.

The following six protection checks can be made:

1. Validity storage protection

2. Read protection

3. Write protection

4. Execute protection

5. Defer protection

6. Ring maximization protection

A validity storage protection check determines whether the corresponding block of memory to which a memory reference is made has been allocated and is accessible to the current user of the system. The validity storage field is a one-bit field which is located, for example, at bit zero of each of the segment base registers (located on an ATU board as discussed above) or at bit zero in each of the high order page table entry addresses and low order page table entry addresses. In a particular embodiment, for example, a "1" indicates that the corresponding block has been so allocated and is accessible whereas a "0" indicates that the user cannot use such a memory block.

Generally when a new user enters the system all pages and segments in the logical address space which are allocated to that user, except those containing the operating system, are marked invalid. Validity bits are then set valid as the system begins allocating logical memory to such new user. If a user makes a memory reference to an invalid page, an invalid page table, or an invalid segment, the memory reference is aborted and a validity storage protection error is then signaled by the fault code bits on the CPD bus.

The read protection field is a one-bit field normally located at a selected bit (bit 2, for example) in each of the low order page table entry addresses and a check thereof determines whether the corresponding object page can or cannot be read by the current user. If the page cannot be read, a read error is signaled by the fault code bits on the CPD bus. In a similar manner a check of the write protection error field determines whether the corresponding object page can be written into by the current user, an appropriate write error being signaled by the fault code bits if the user attempts to write into a page to which he is not allowed.

The execute protection field is a one-bit field which is located at a selected bit (e.g. bit 4) in each of the low order page table entry addresses and a check thereof determines whether instructions from a corresponding object page can or cannot be executed by the current user. If such an instruction fetch is not allowed, an execute error is signaled by the fault code bits on the CPD bus. Execute protection is normally checked only during the first fetch within a page and any
additional instruction fetches are performed using the
physical page address from the first fetch, which for such
purpose is retained by the instruction processor.

When a user is attempting to reference a location in
memory and is utilizing a chain of indirect addresses to do so,
the system will abort the operation if a chain of more than
a selected number of said indirect addresses is encountered.
For example, in the system under discussion if a chain of
more than sixteen indirect addresses is encountered the
operation is appropriately aborted and a defer error is signaled
by the fault code bits on the CPD bus. Such protection is
utilized, for example, normally when the system has performed
a loop operation and the system, because of a fault in the
operation thereof, continues to repeat the indirect loop
addressing process without being able to break free from the
loop operation.

Ring maximization protection is utilized when the user
is attempting to reference a logical location in memory in a
lower ring (segment) than the current ring of execution
(CRE 1-3). Since such operation is not permitted by the system,
the operation must be aborted if the user attempts to reference
a lower ring than currently being used and a ring maximization
error is signaled on the CPD bus. Since the logical address
space is divided into eight rings, or segments, a ring which
the user desires to reference can be indicated by bits 1-3, for
example, of the logical address.

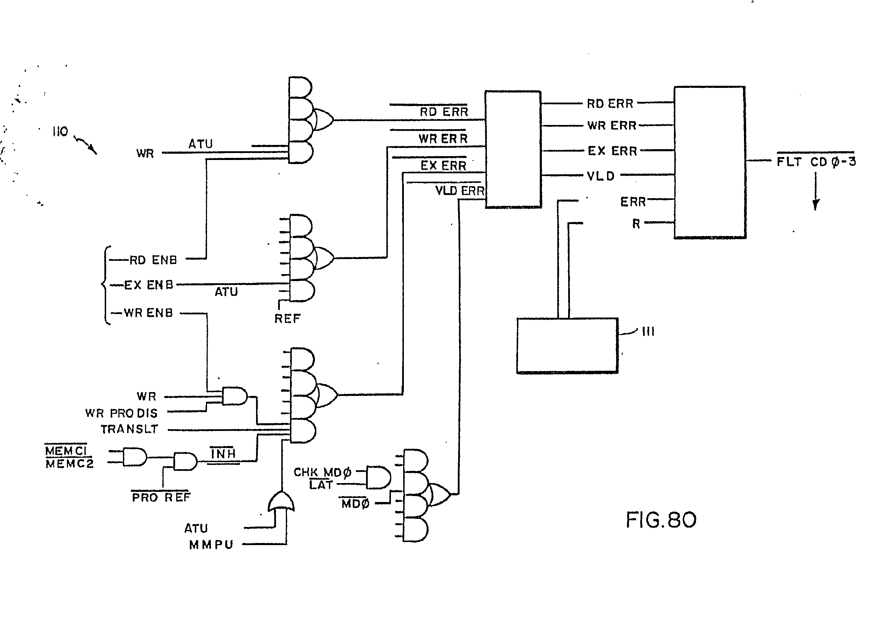

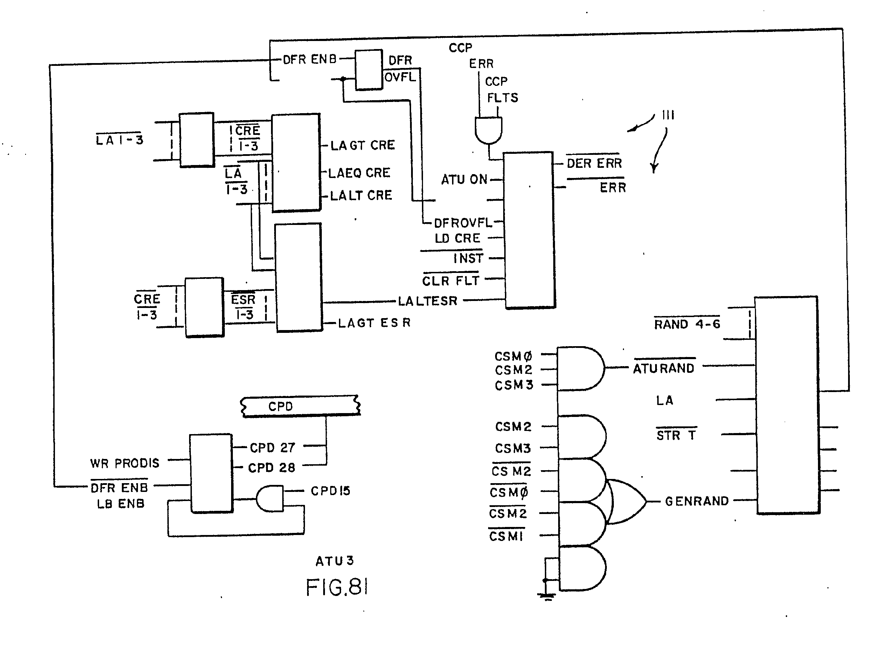

The specific logic circuitry utilized for such protection checks (i.e., the protection store 104 and the protection logic 110 and the protection logic 111 associated therewith) is shown in FIGS. 80 and 81. Thus, logic for the generation of the read error, write error, execution error and validity error signals is shown in FIG. 80 and logic for generating the defer error and ring maximization error signals being shown in FIG. 81.

With respect to the protection system, since logical address space is partitioned into eight hierarchical regions (i.e. the "rings" or "segments") the partitioning can be delineated by the segment field of the logical address. Thus, segment number 0 is always assigned to ring 0 (ring 0 being the ring in which only priviledged instructions can be executed), segment 1 is always assigned to ring 1, and so forth. Such approach differs from previous systems using a segmented hierarchical address space in that the ring number is not independent of the logical address space. In contrast, in the system discussed here, each ring is directly bound in the space so that segment 0 is always allocated to ring 0, segment 1 to ring 1, and so forth.

The access field in a page table entry comprises three bits (MD 2-4) is shown in FIG. 79 and indicates the capabilities of the referenced data item in the logical address space, i.e. as to whether the reference data item is to be a read access, a write access, or an execute access, the protection store 104 responding to such bits to produce either a read enable signal

($\overline{RD\ ENB}$), or a write enable ($\overline{WR\ ENB}$) or an execute enable
($\overline{EX\ ENB}$). The ring protection governs the proper interpretation
of the access privileges of the user to a particular ring,
a user being permitted access only to selected, consecutively
numbered rings. Thus, access can only be made to a bracket
of rings (an access bracket) if the effective source for such
reference is within the appropriate access bracket. For
example, the read bracket of a data reference in any ring is
the ring number. That is, a data address reference to segment 5
(ring 5), for example, can never legitimately originate from
an effective source which is greater than 5. In other words
an effective source in segment 5 can never reference a ring
lower than ring 5 and, therefore, if a reference from an
effective source greater than 5 attempts to access ring 5 a
ring maximum error (MAX ERR) will be signaled as shown by the
logic in FIG. 13. A table showing such ring protection
operation is shown below:

| Effective Source Space \ Target Space | RING 0 | RING 1 | Ring 2 ... | RING 7 |
|---|---|---|---|---|
| RING 0 | Val-R0 | Val-R1 | Val-R2 ... | Val-R7 |
| RING 1 | Fault | Val-R1 | Val-R2 ... | Val-R7 |
| RING 2 | Fault | Fault | Val-R2 ... | Val-R7 |
| . | . | . | . | . |
| . | . | . | . | . |
| . | . | . | . | . |
| RING 7 | Fault | Fault | Fault ... | Val-R7 |

In summary, in order to make a ring access, the ring maximization function is used to determine whether or not the reference is a valid ring reference and, if it is, the page table entry that references the address datum is examined to see if the page is a valid one. Then, if the read protection bit indicates that such valid page can be read, the read can be performed. If any one of the examinations shows a protection error (i.e., ring maximization error, validity error, or read error) the read is aborted and an appropriate fault code routine is called. Similarly, appropriate examination for protection errors for write access and execute access situations can also be performed.

In an hierachical address space such as discussed above, it is desirable to mediate and authenticate any attempt to switch rings, i.e., to obtain access to a ring (segment) other than the ring which is currently being used (a "ring crossing" operation). The performing of a ring crossing operation is authenticated as follows.

Any ring crossing attempts occur only as a result of an explicit attempt to do so by a program control instruction, and such explicit attempt can occur only if the following conditions are satisfied.

(1) The program control instruction is of the form of a subroutine "call", i.e., where access is desired to a subroutine in another ring (LCALL - see Appendix B), or a subroutine "return", i.e., where a subroutine in another ring has been accessed and it is desired to return to the original ring (WRTN and WPOPB - see Appendix B). All other program control instructions (e.g., JUMP) ignore the ring field of the effective address required for the instruction and such instructions can only transfer to locations within the correct segment.

(2)    The direction of a subroutine call crossing must be to a lower ring number (i.e., inwardly toward ring 0) wherein the lower ring has a higher order of protection and the current ring of execution and the direction of a subroutine return crossing must be to a higher ring number (i.e., outwardly away from ring 0) wherein the higher ring has a lower order of protection than the called ring containing the subroutine.  Outward calls and inward returns are trapped as protection faults.

(3)    The target segment of the effective branch address is not in the segment identified by bits 1-3 of the program counter.

In the above conditions are met the return address for outward returns is merely interpreted as a normal word address. However, if the above conditions are met for an inward call, the branch address is interpreted as follows:

| 0 | 1   3 | 4         15 | 16          31 |
|---|-------|-------------|----------------|
| X | SBR   | NOT USED    | GATE NUMBER    |

Inward Call Branch Address

Bits 16-31 are interpreted as a "gate" into the specified segment (SBR of bits 1-3) in the target space.  The gate number is used to verify that the specified gate is in the called segment and, upon verification, to associate on instruction address with the specified gate via a "gate array" in the called segment, as discussed below.

The location of the gate array in any called segment is indicated by a pointer contained in particular locations of the called segment (e.g., in a particular embodiment the pointer locations may be specified as locations 34 and 35 in each segment.  The structure of the gate array is as follows:

| 0 | | 15 16 | | 31 | |
|---|---|---|---|---|---|
| NOT USED | | MAX. NO. OF GATES | | | |
| . X | GATE BRACKET | P C OFFSET | | | GATE 0 |
| | . | . | | | . |
| . | | | | | . |
| . | | | | | . |
| X | GATE BRACKET | P C OFFSET | | | GATE (MAX-1) |

0          3 4                          . 31

Gate Array

The gate number of the pointer which referenced the target segment is compared with bits 16-31 of the first 32 bits of the gate array. If the gate number is greater than or equal to the maximum number of gates in the gate array, the ring crossing call is not permitted and a protection fault occurs (if the maximum number of gares is 0, the segment involved cannot be a valid target of an inward ring crossing call operation).

If the gate number is less than the maximum number of gates, the gate number is then used to index into one of the gates of the gate array which follows the first 32 bits thereof. The contents of the indexed gate are read and are used to control two actions. First, the effective source is compared to the gate bracket bits 1-3 of the indexed gate. The effective source must be less than or equal to the referenced gate bits and, if so, the PC offset bits 4-31 become the least significant 28 bits of the program counter and bits 1-3 of the program counter are set to the segment containing the gate array.

If the gate in a ring crossing operation, as described above, is a permitted entry point to the ring to which the crossing is made, a new stack is constructed. In order to do so a stack switching operation must occur since there is only one stack per ring. Thus, before the new stack can be created, the contents of the current stack management registers must be saved at specified memory locations of the caller's ring.  The callee's stack can then be created, the arguments from the caller's stack being copied onto the newly created callee's stack, the number of such arguments being specified by the X or the LCALL instruction (see Appendix B).  An appropriate check is first made to determine whether copying of all of the arguments would created a stack overflow condition.  If so, a stack fault is signalled, the ring crossing being permitted and the fault being processed in the called ring.

In order to emulate operation of ECLIPSE address translation operations appropriate emulation control signals for placing the ATU in the ECLIPSE operating mode are required as shown by emulation control logic unit 115 which, in response to

coded instructions generated by the microsequencer board 13 produces such signals to permit operation for 16-bit addresses equivalent to the memory management protection unit (MMPU) of ECLIPSE comparators as described in the aforesaid publications thereon.

Specific logic circuitry for implementing the various

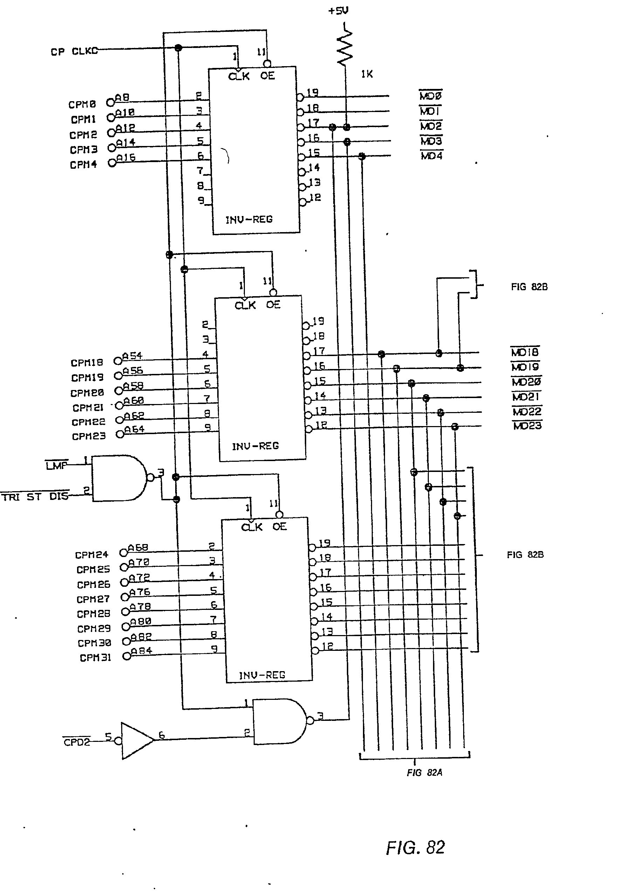

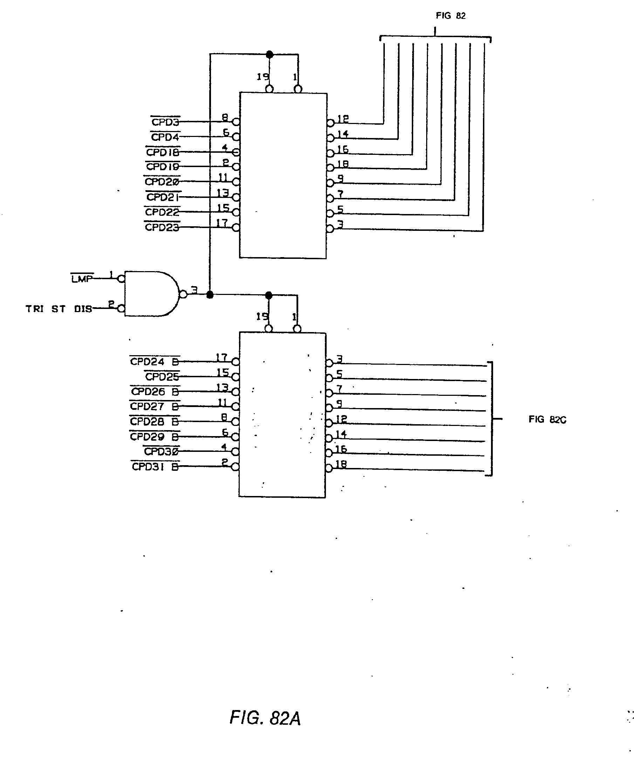

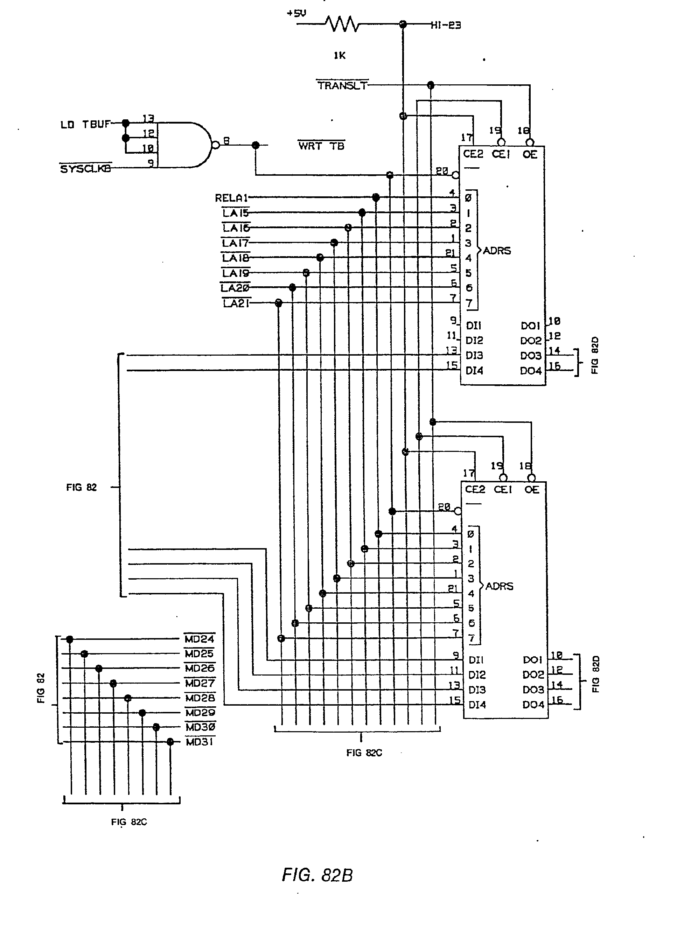

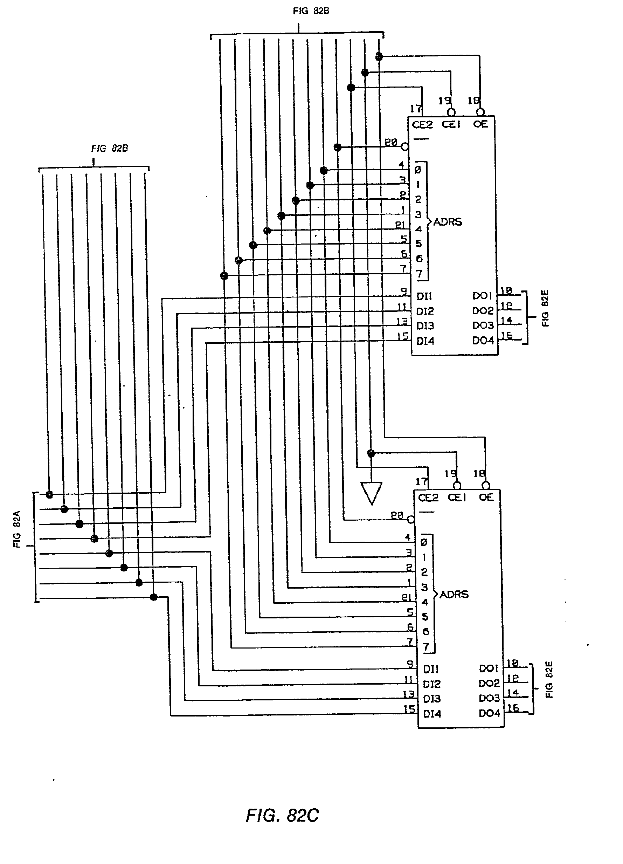

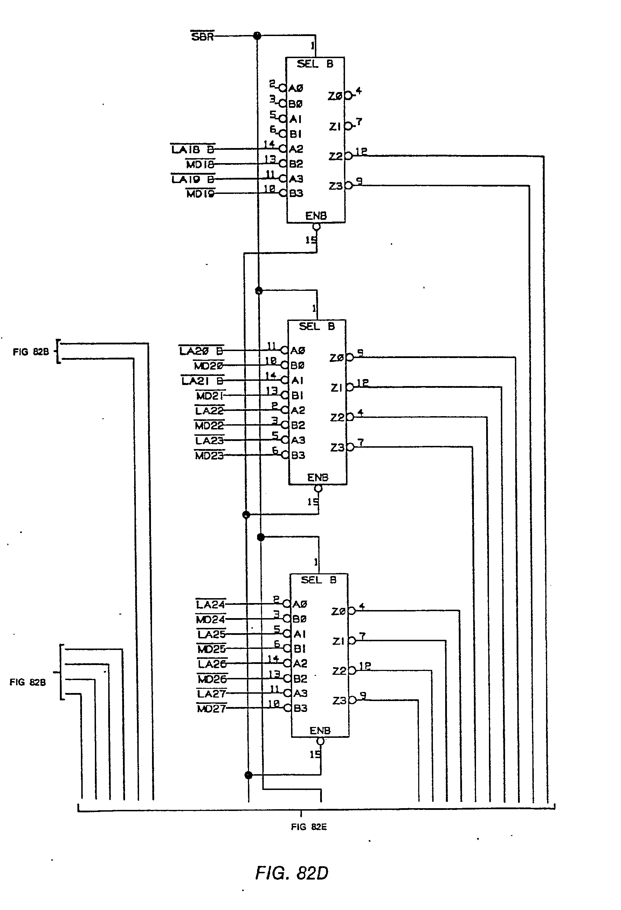

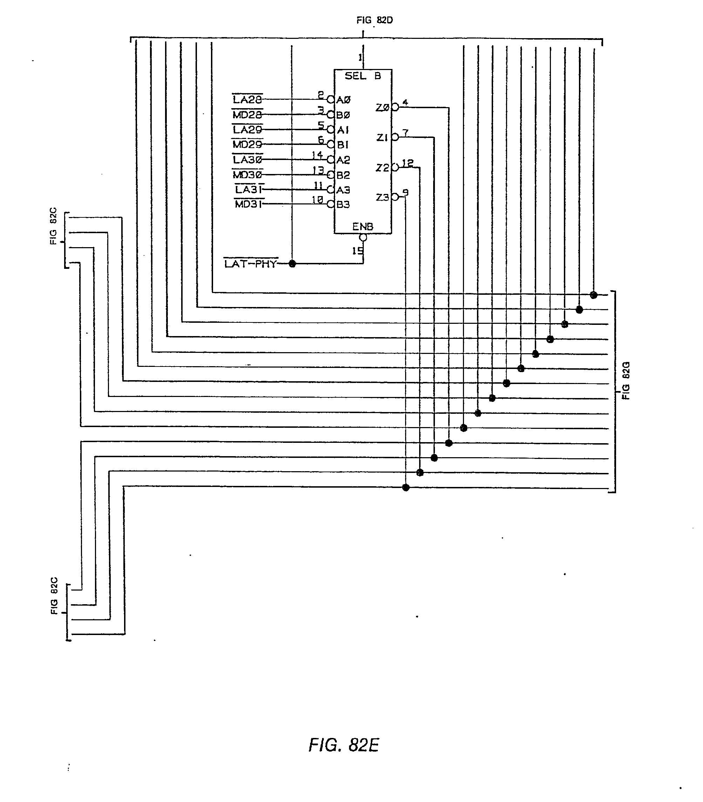

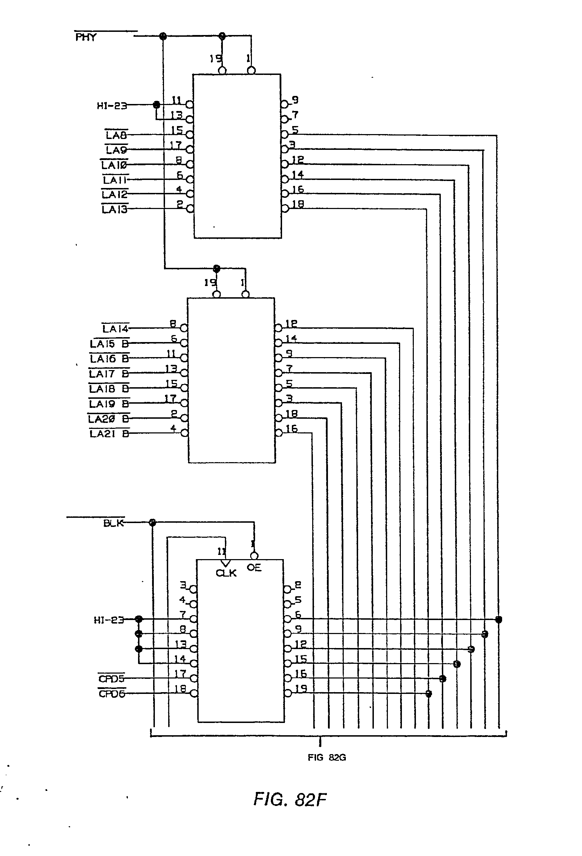

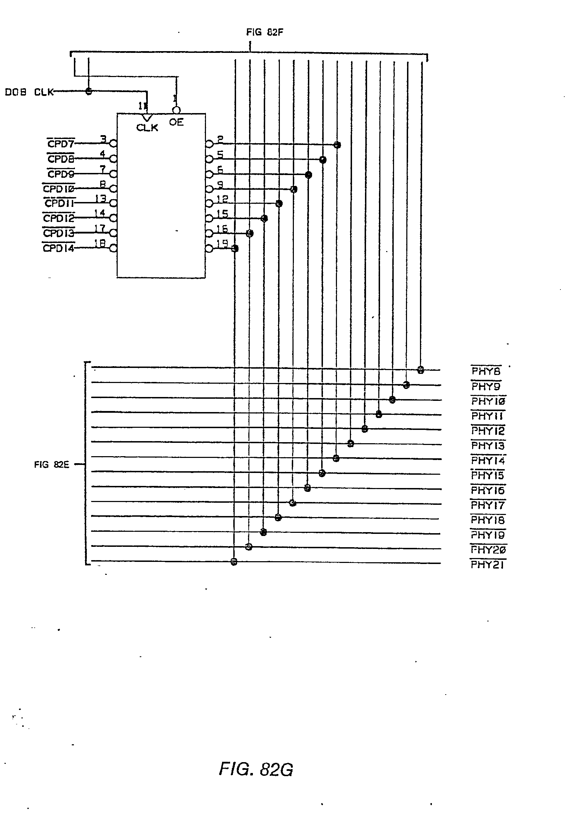

blocks of the address translation unit shown in FIGS. 79-81 are shown in FIGS. 82-100.  FIG. 82 depicts the translation store unit 100 supplied with bits $\overline{MD\ 18-31}$ from the memory data register

105 and in turn supplying the translated physical address bits

8-21 which have resulted from a translation of the logical address

bits $\overline{LA\ 15-21}$.  FIG. 82 also shows the page table address multiplexer unit 107 and physical mode buffer unit 108.  In addition, such figure includes the "last block" register unit 116 which during an ECLIPSE MMPU emulation operation provides the physical

address bits $\overline{PHY\ 8-21}$.  FIG. 82 also shows the LMP Data Register.

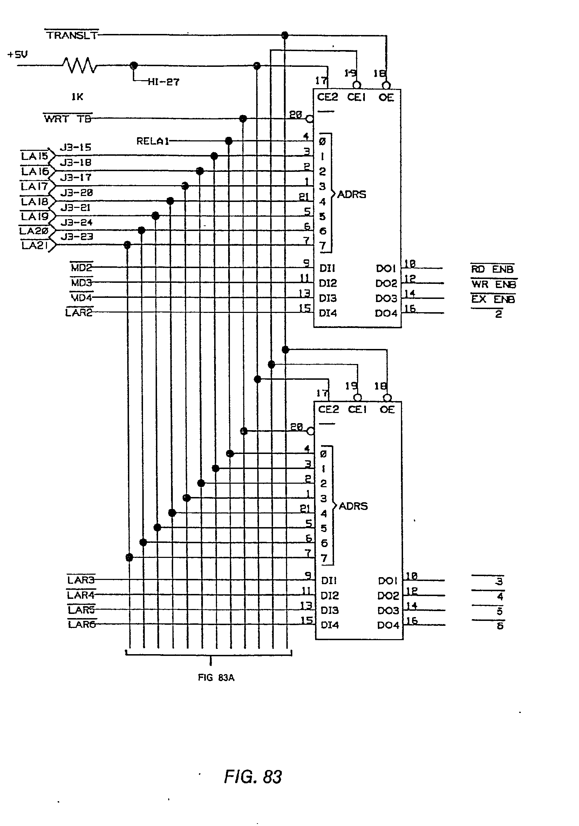

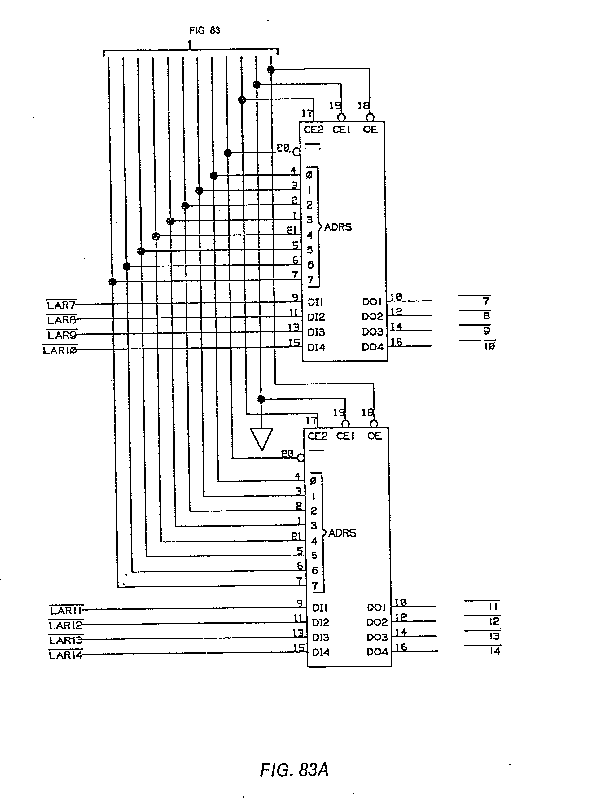

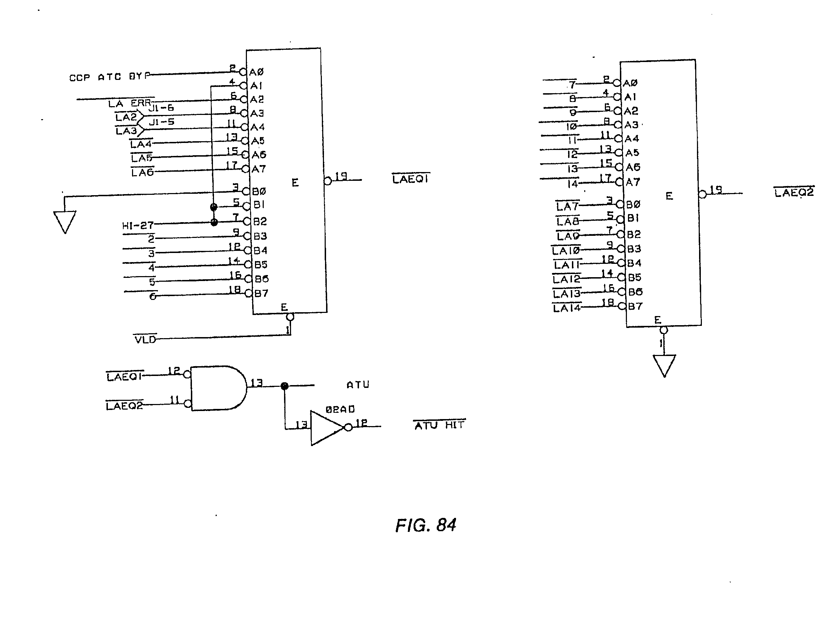

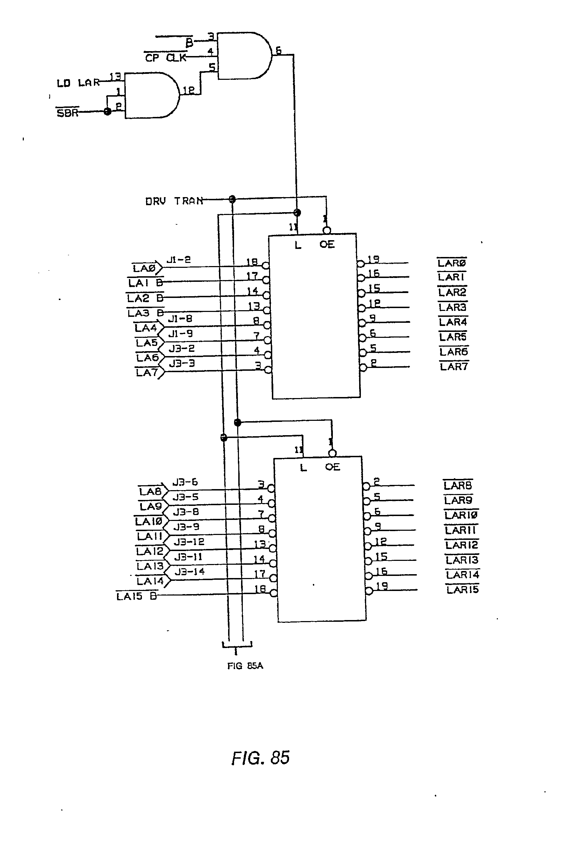

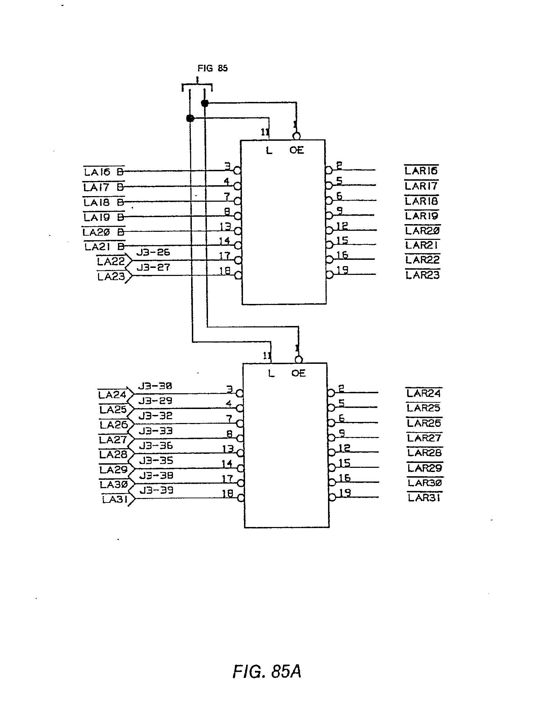

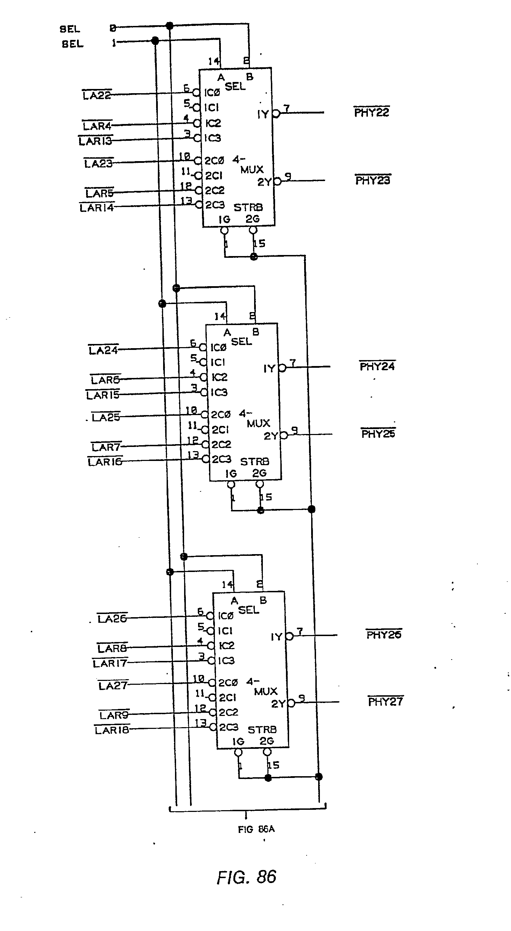

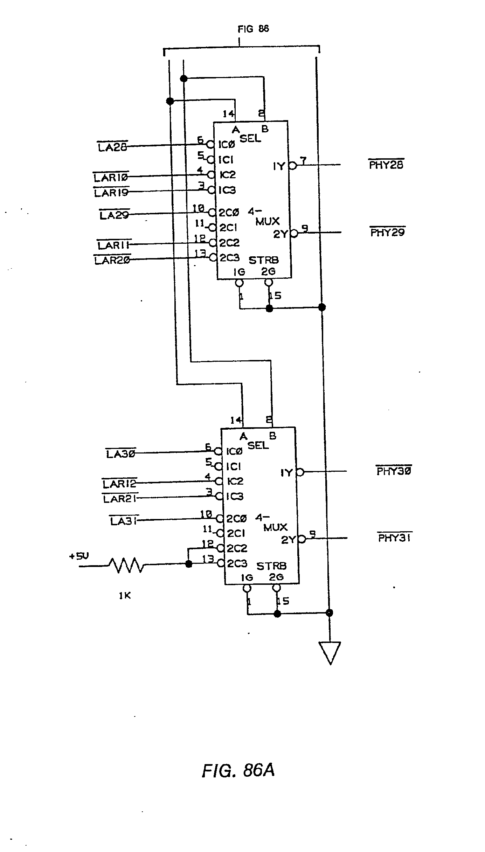

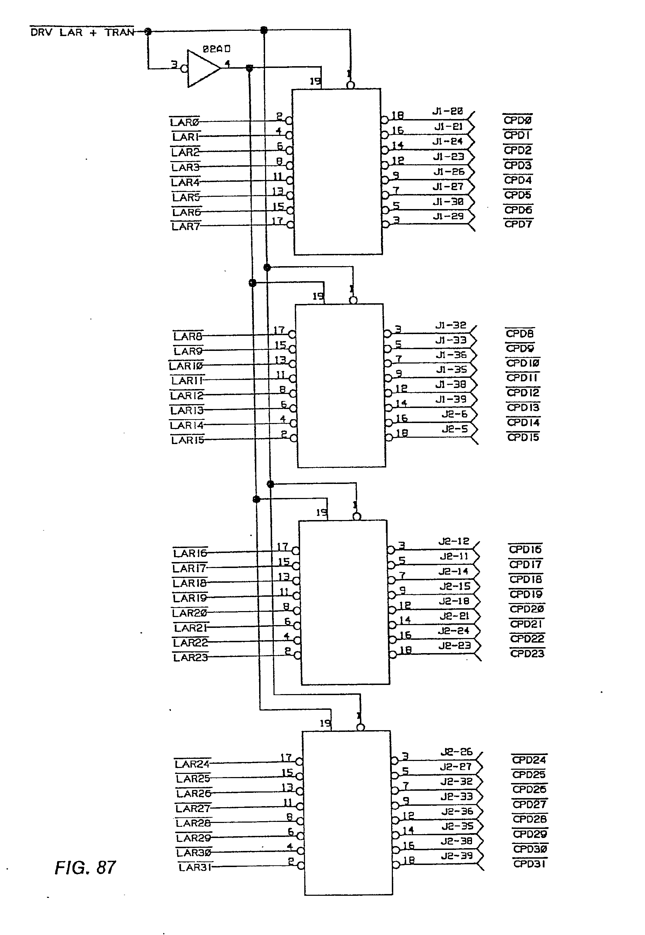

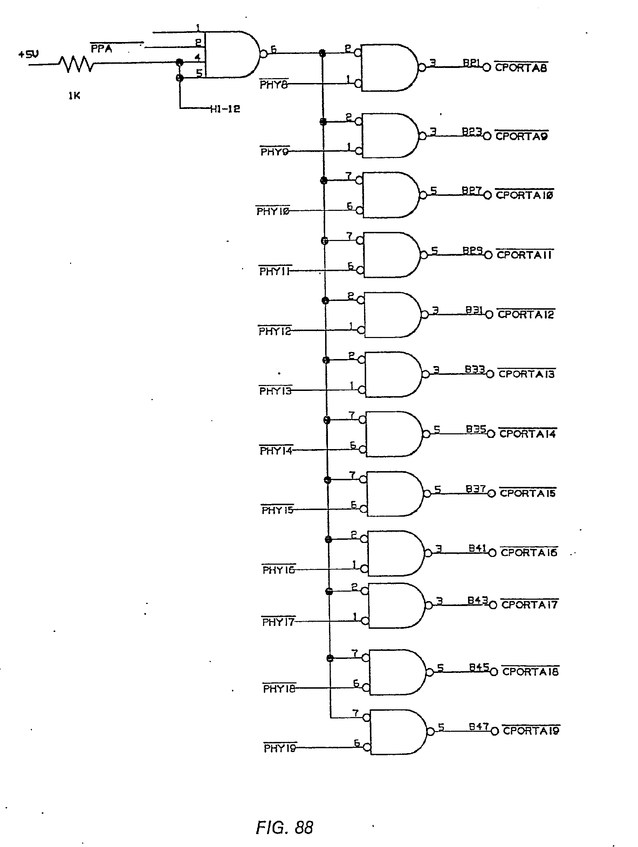

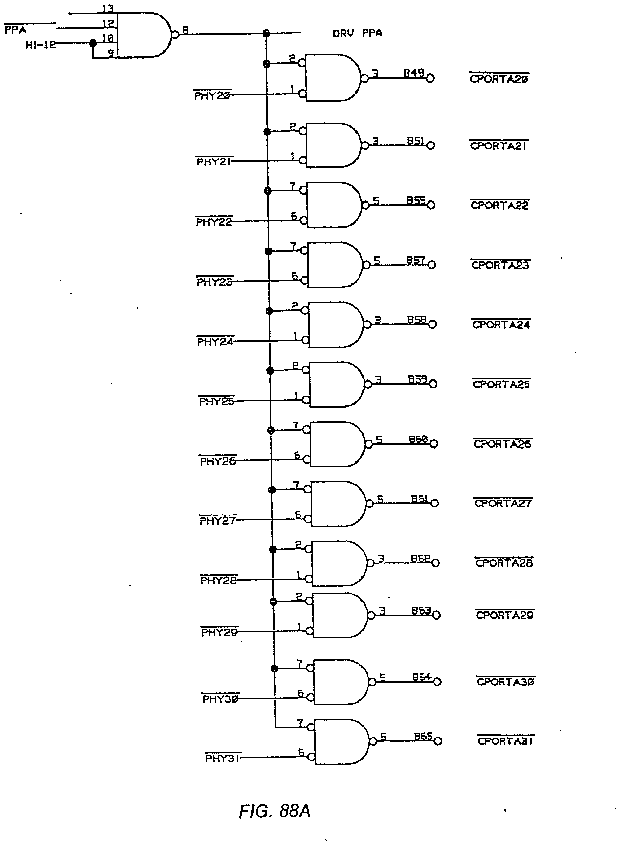

FIG. 83 shows Tag Store 102 and Protection Store 104.  Tag comparator unit 105 is depicted in FIG. 84.  FIG. 85 shows the

logical address register 101, while physical address offset multiplexer 109 and the logical address register CPD bus driver unit are shown in FIGS. 86 and 87, respectively. The physical address bus driver units for filing the appropriate physical

address bit $\overline{PHY~8-21}$ are shown in FIG. 88.

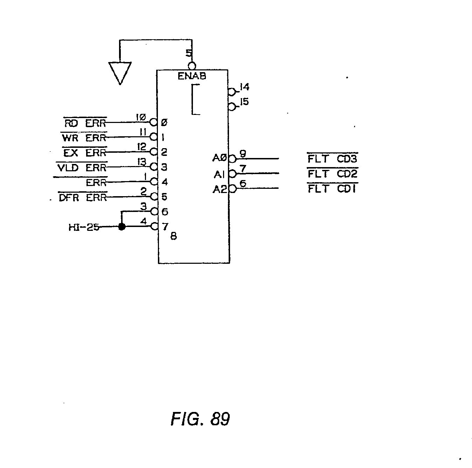

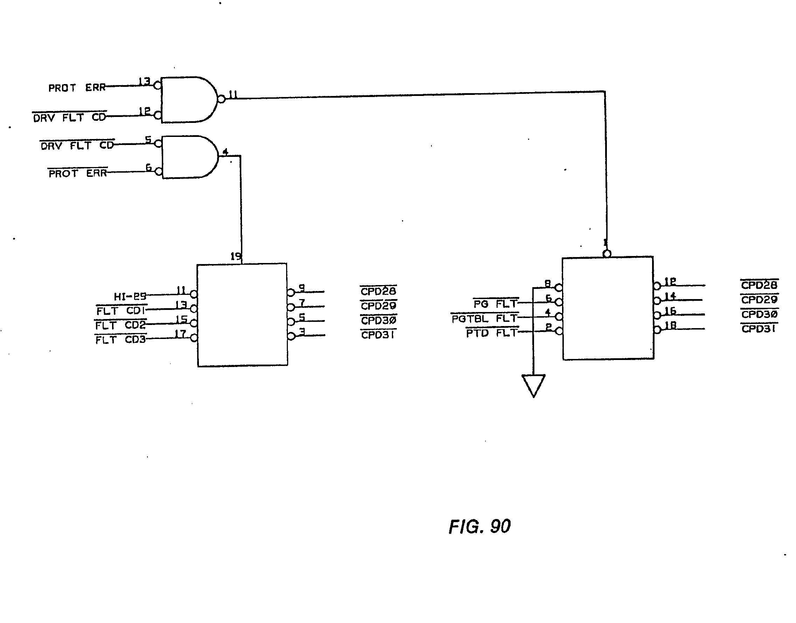

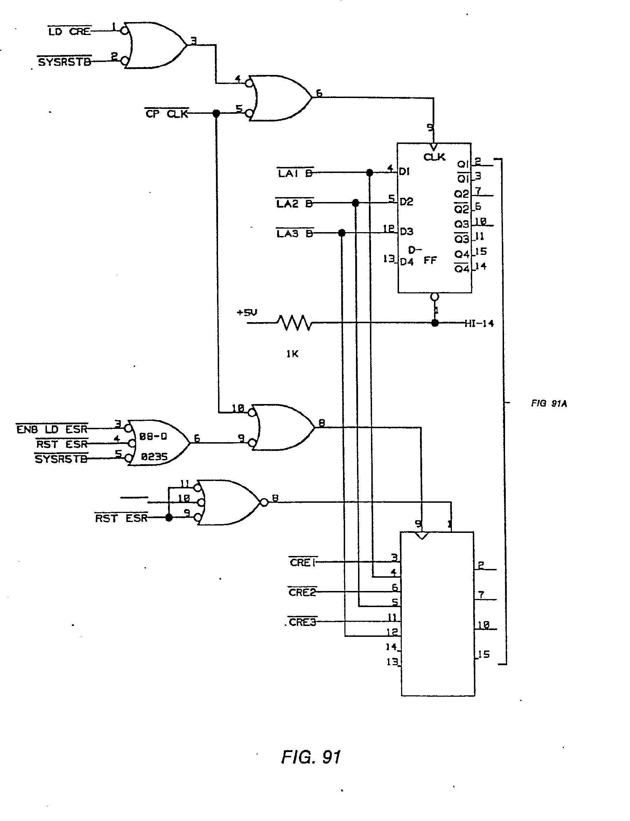

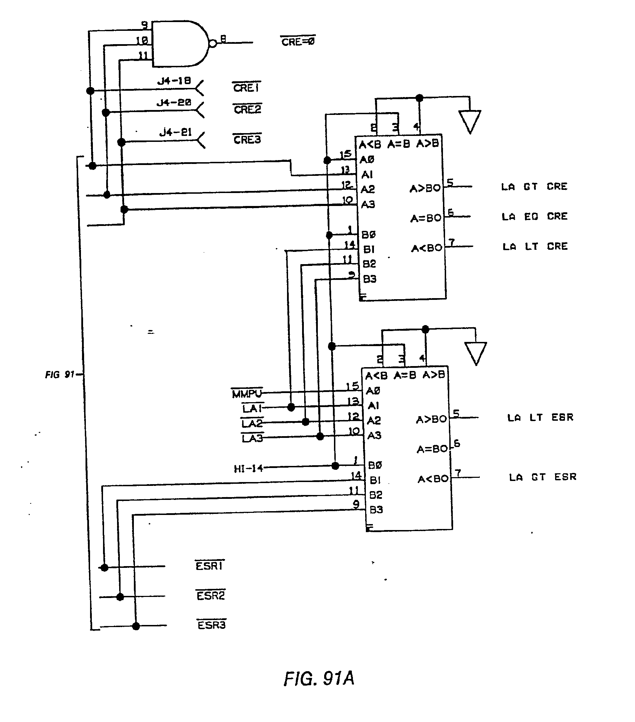

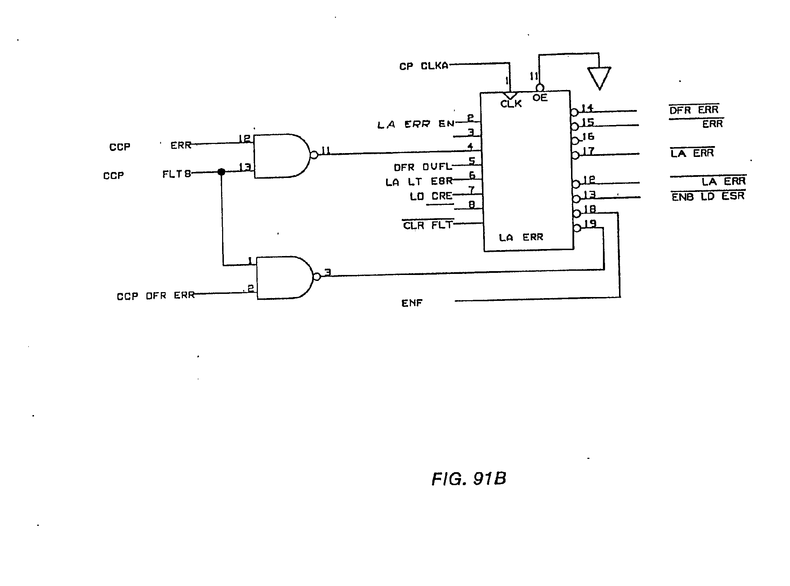

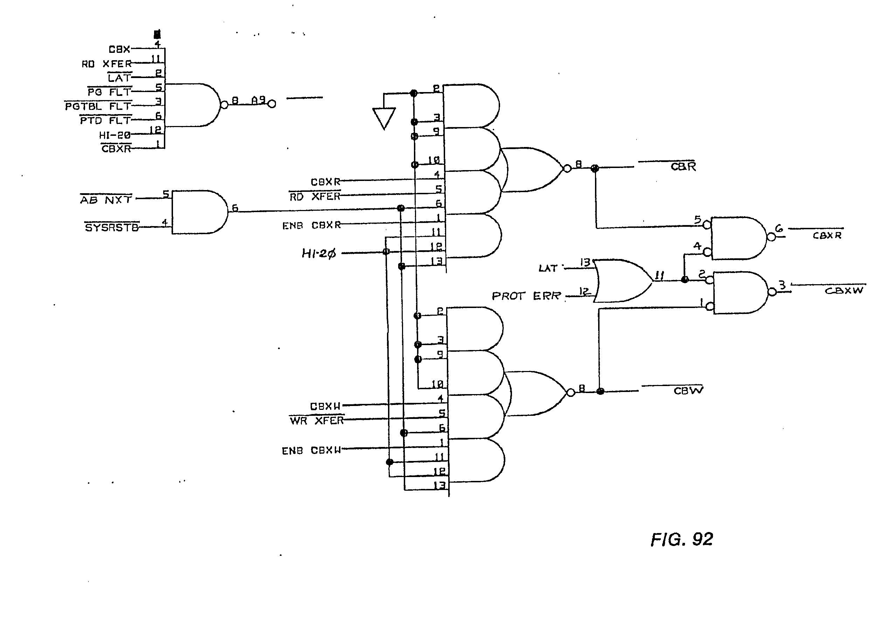

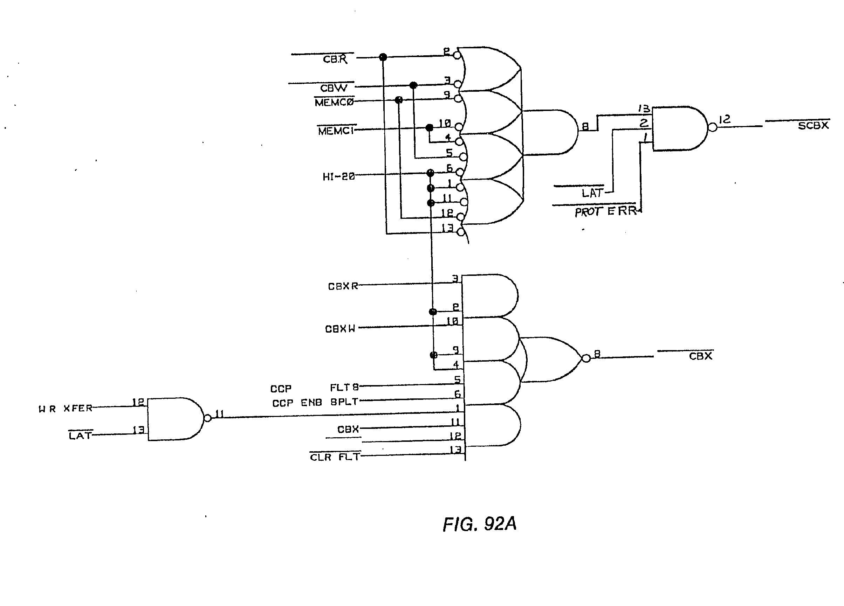

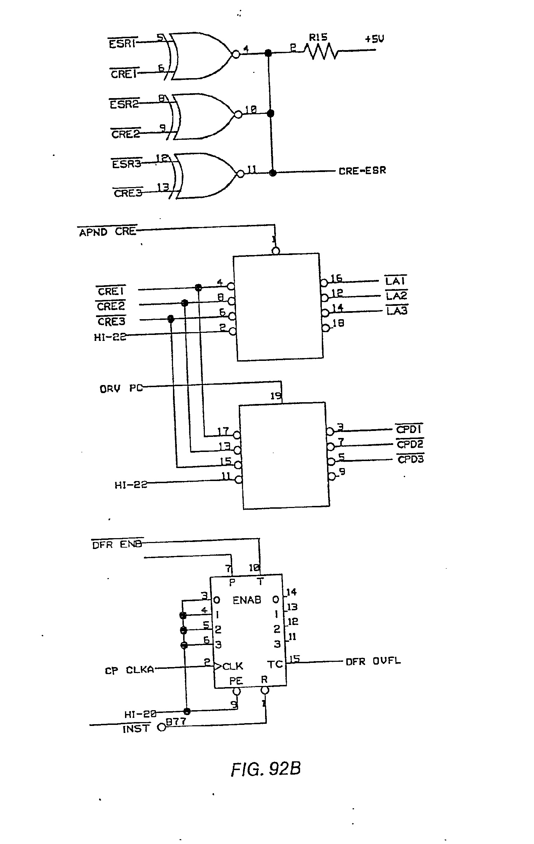

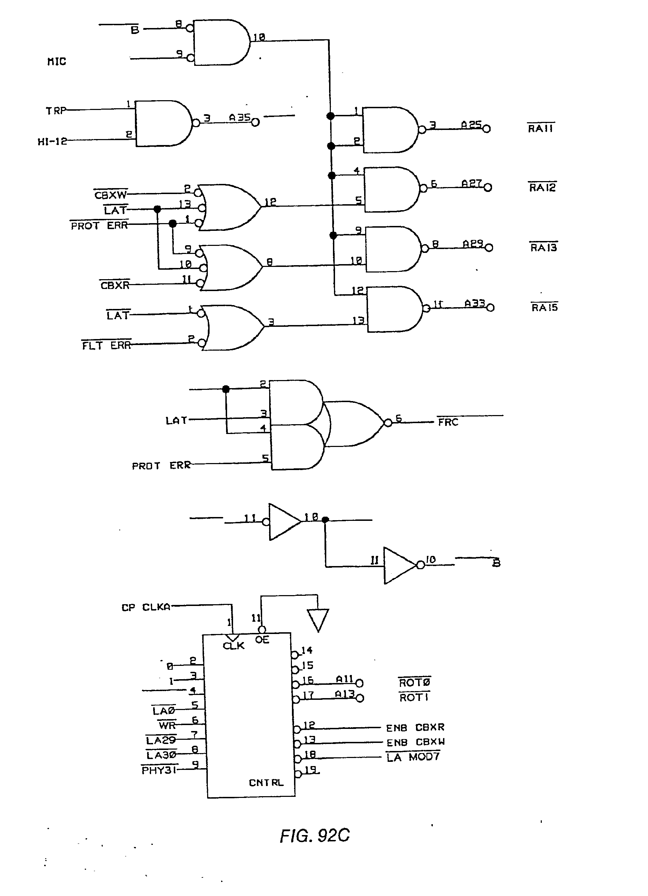

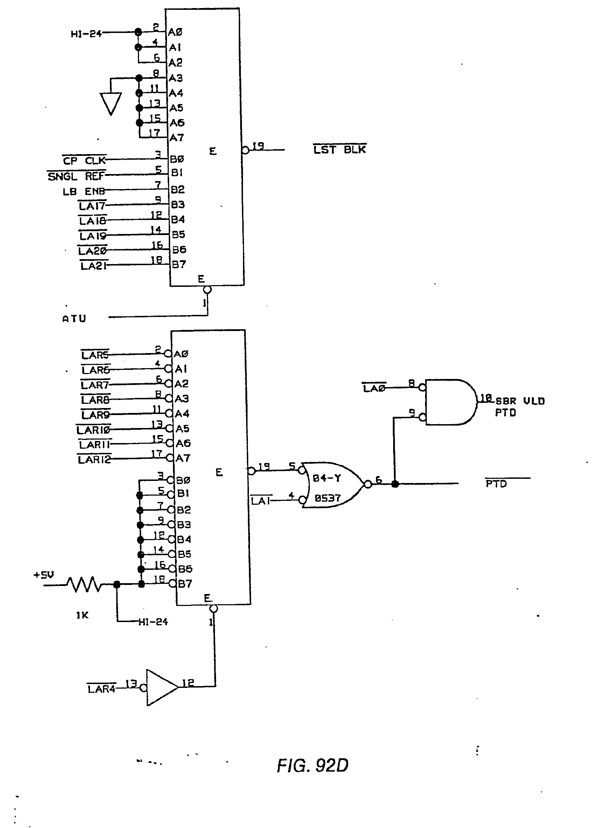

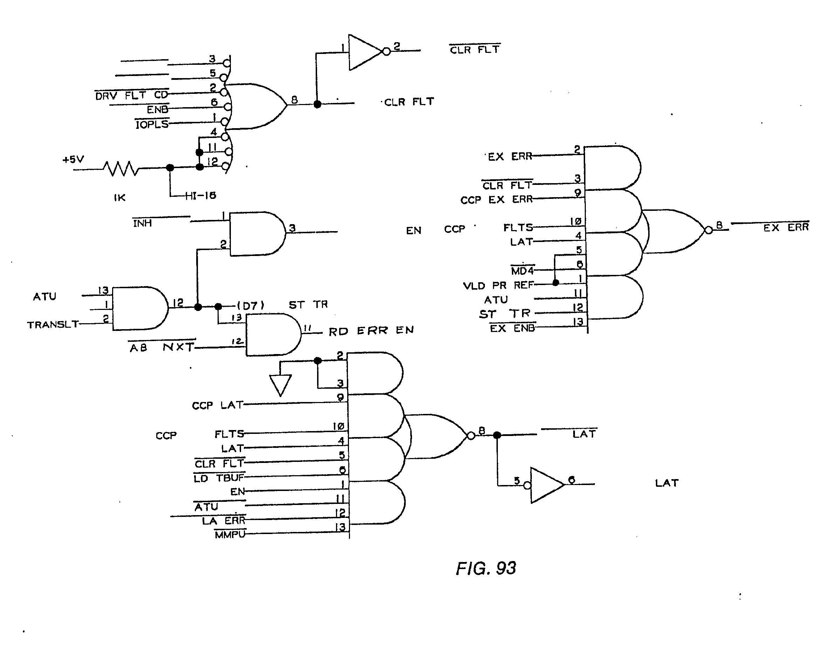

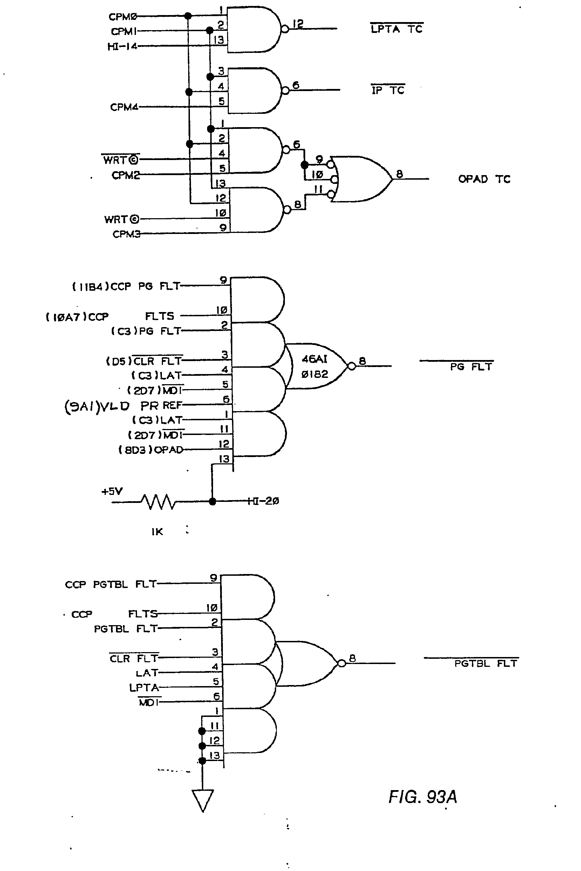

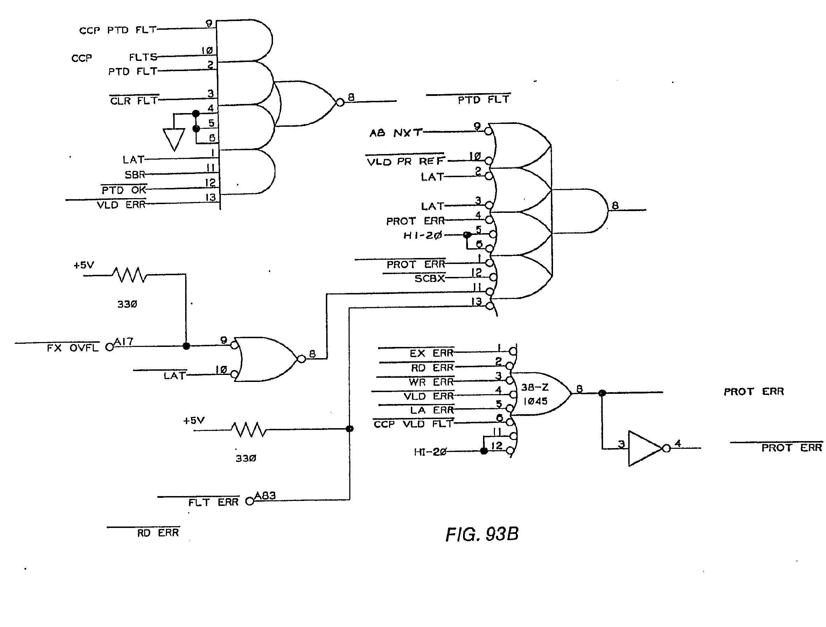

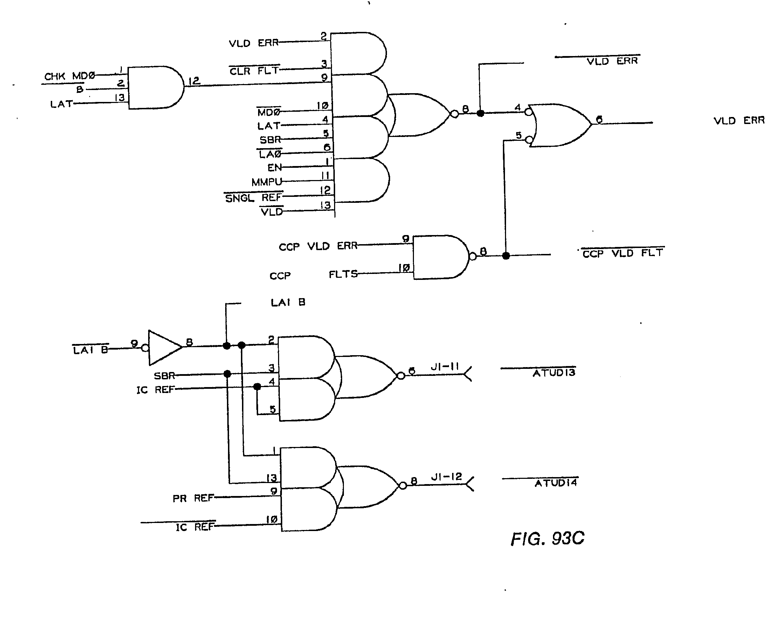

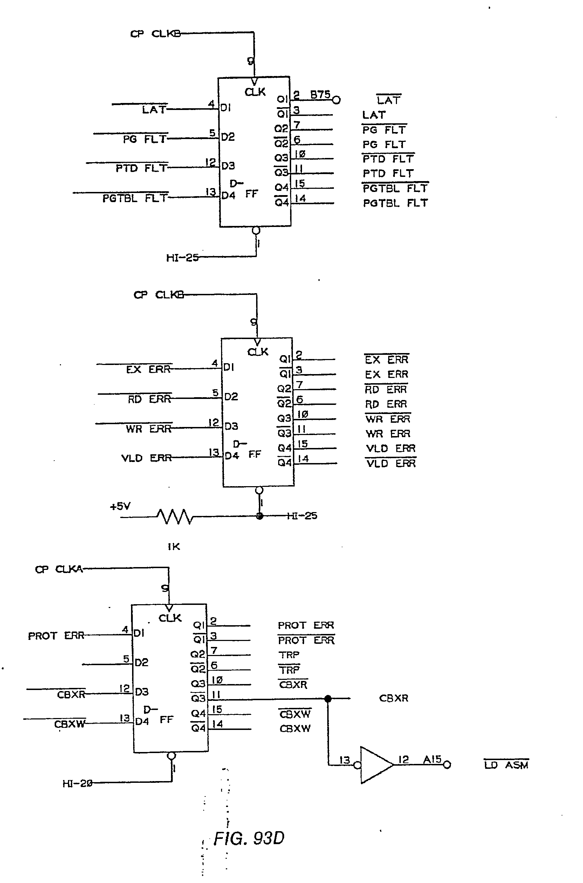

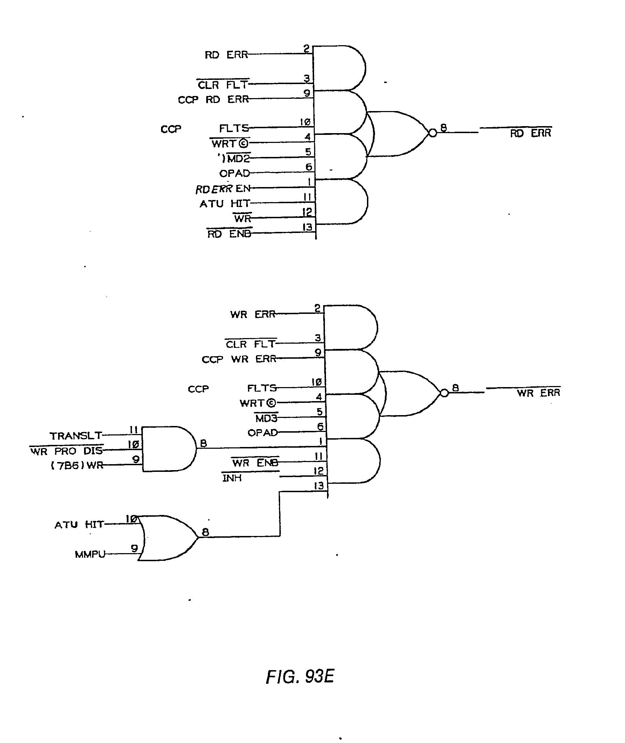

Protection logic including fault detection and cache block crossing trap logic is depicted in FIGS. 89-92, protection logic identification encoder unit 110 being shown in FIG. 89, the fault code bit drive unit 112 being shown in FIG. 90, ring protection logic circuit 111 being shown in FIG. 91 and the fault detection and cache block crossing logic being shown in FIGS. 92 and 93.

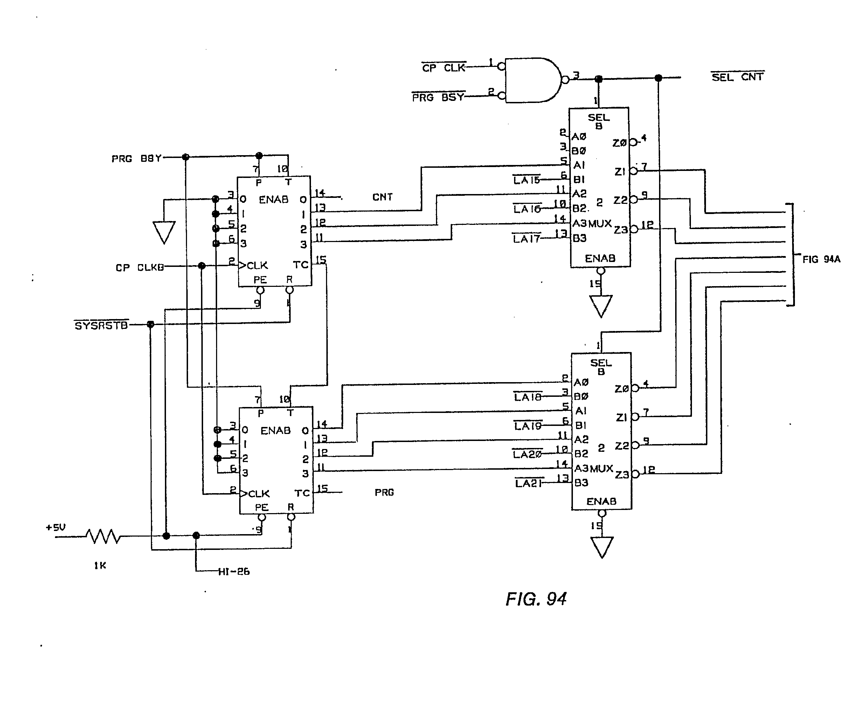

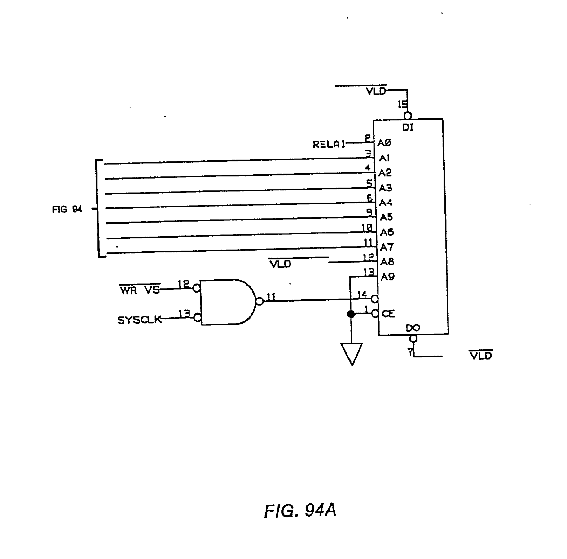

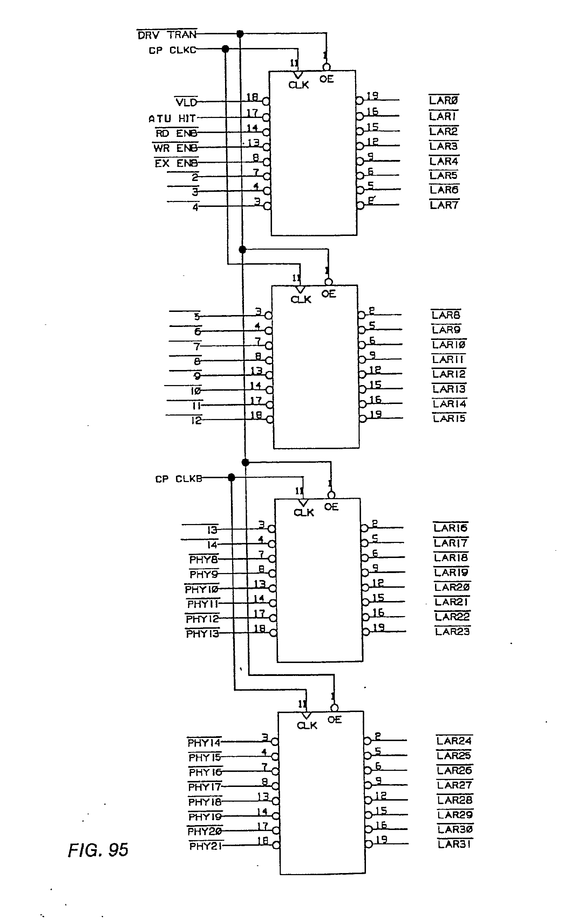

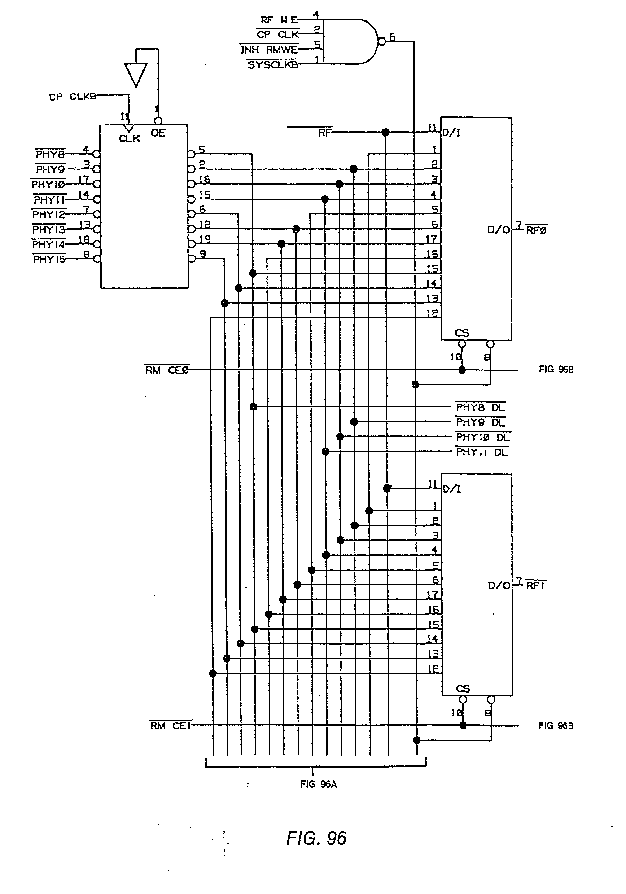

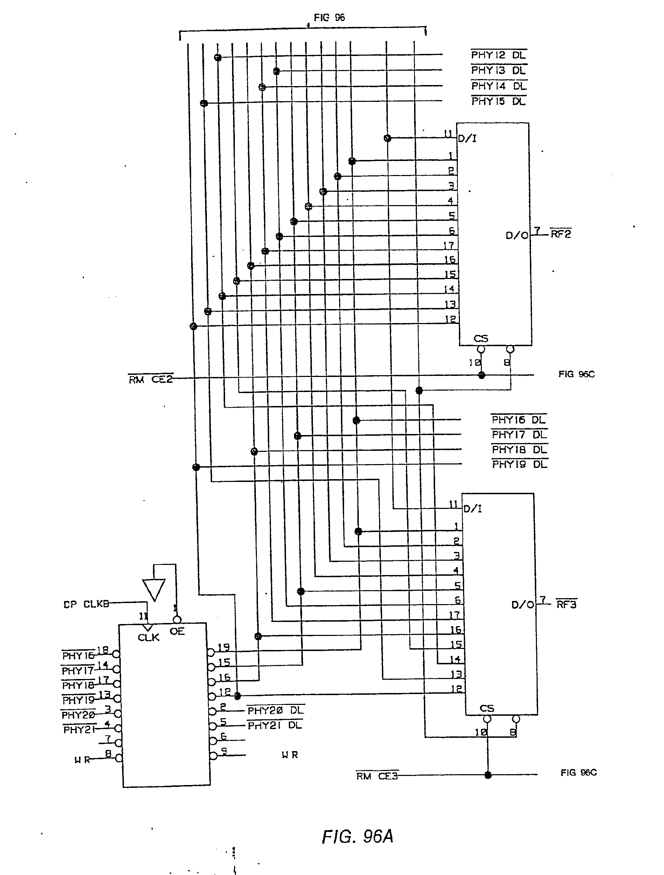

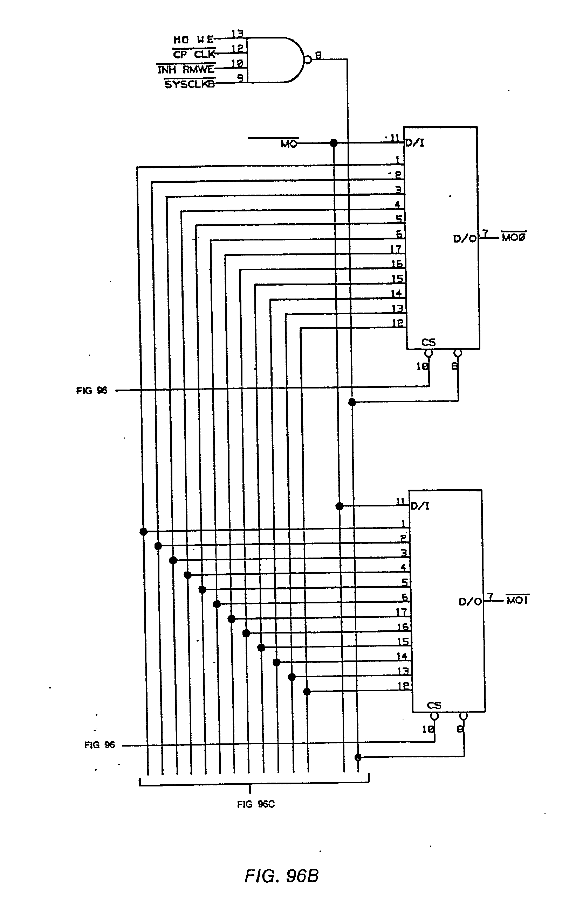

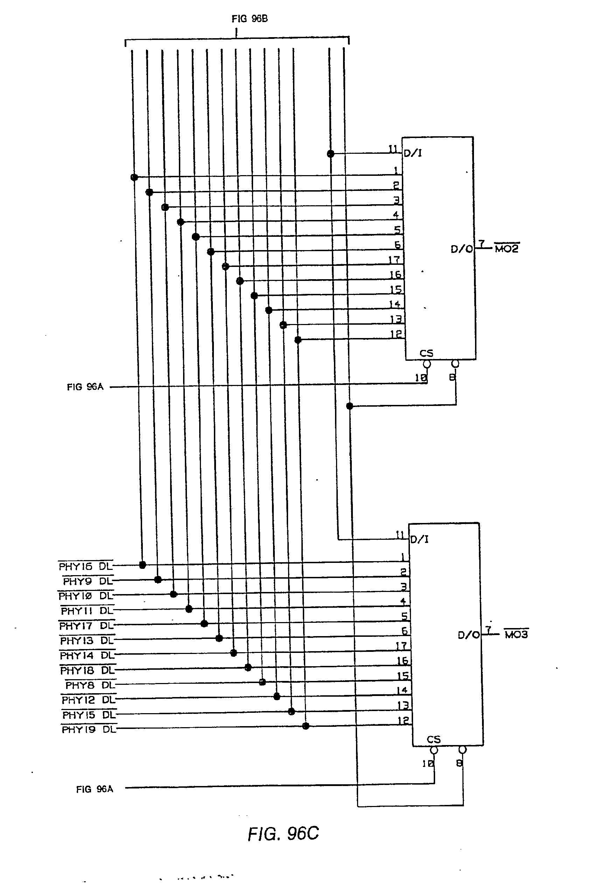

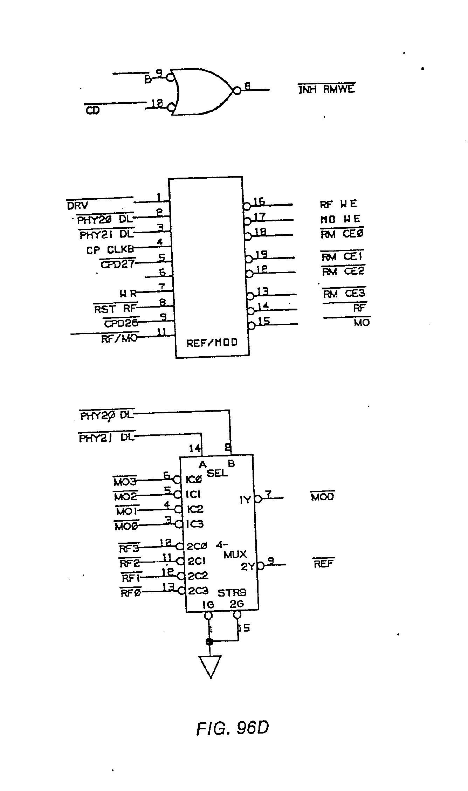

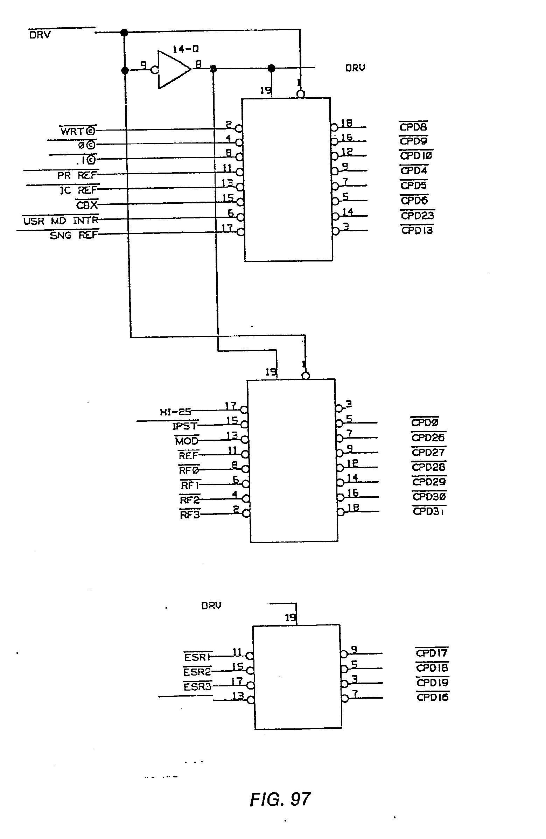

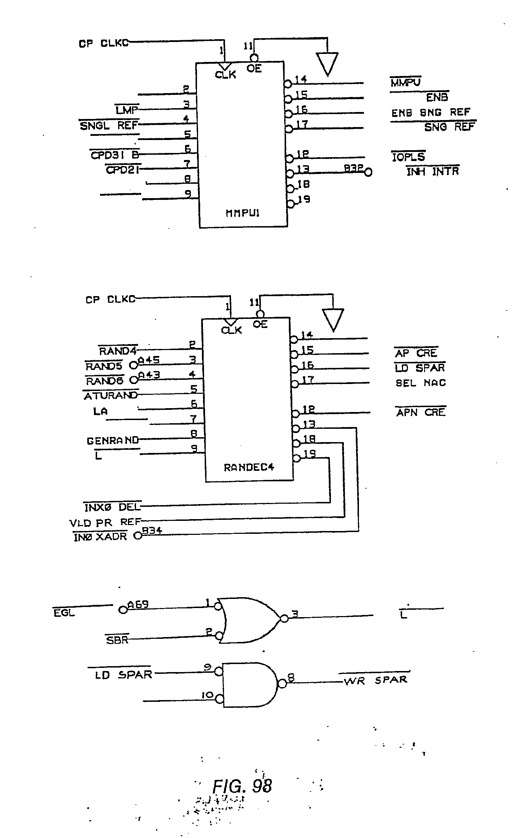

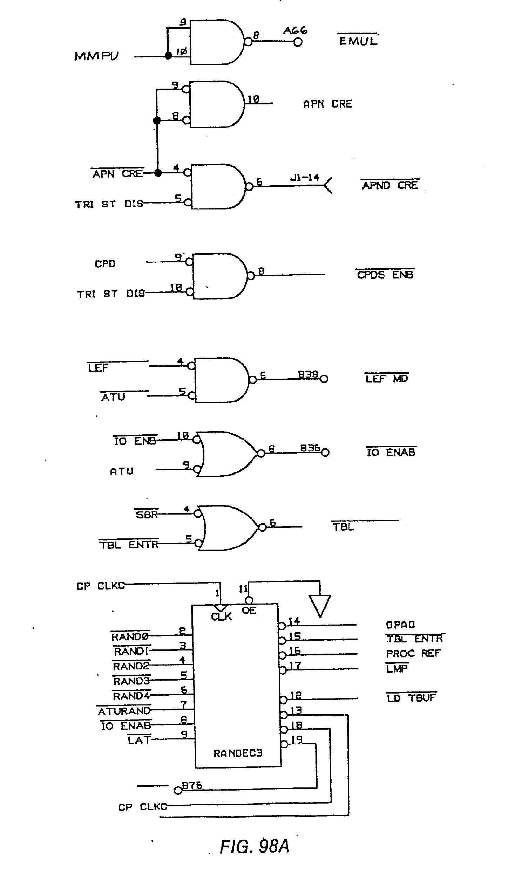

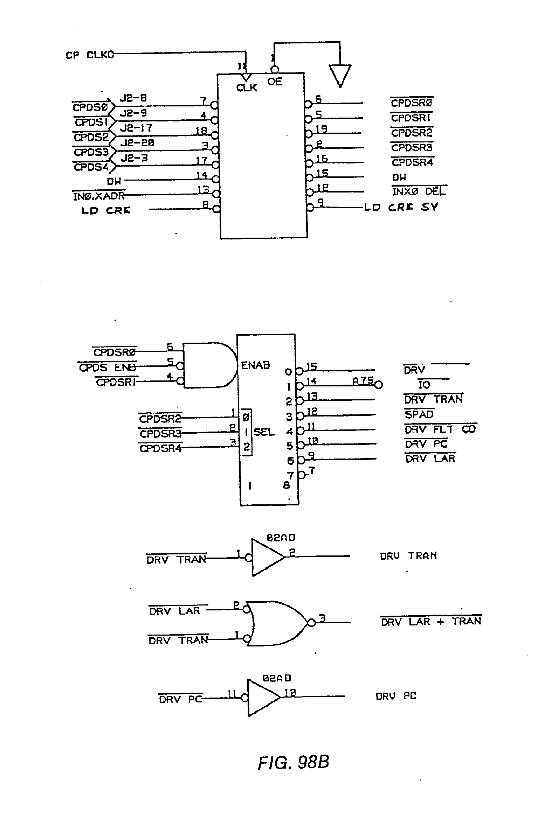

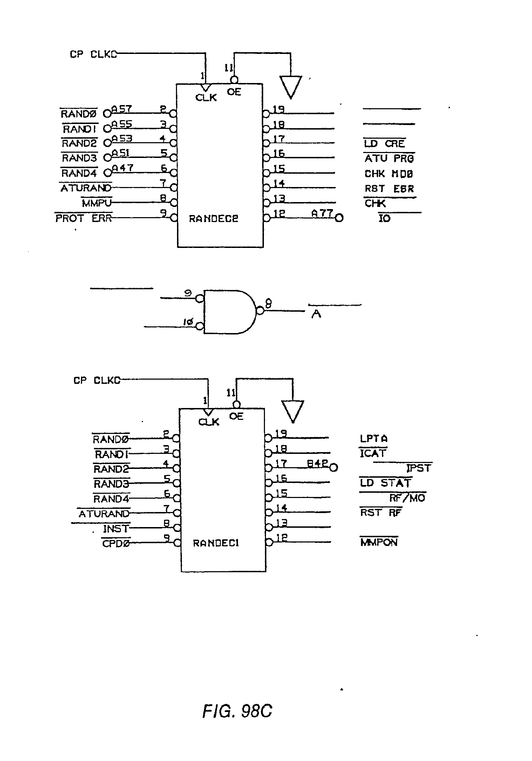

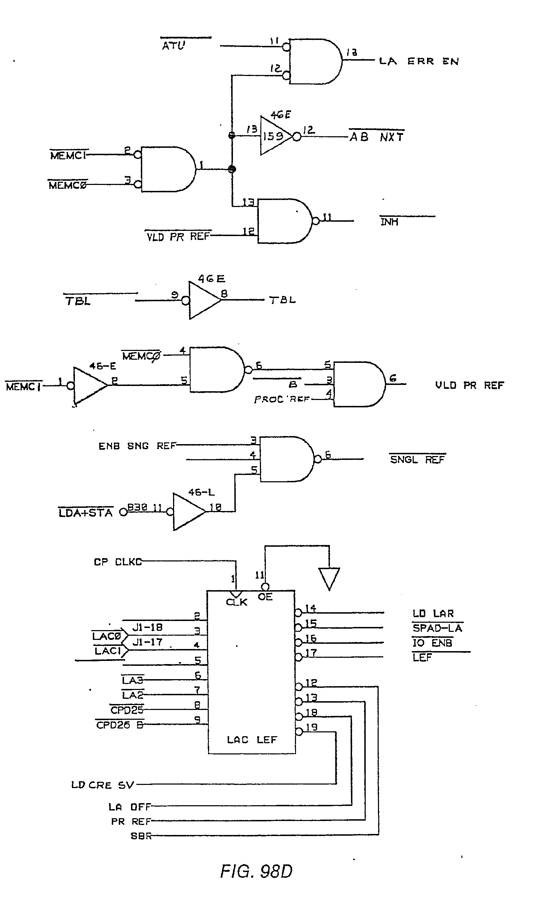

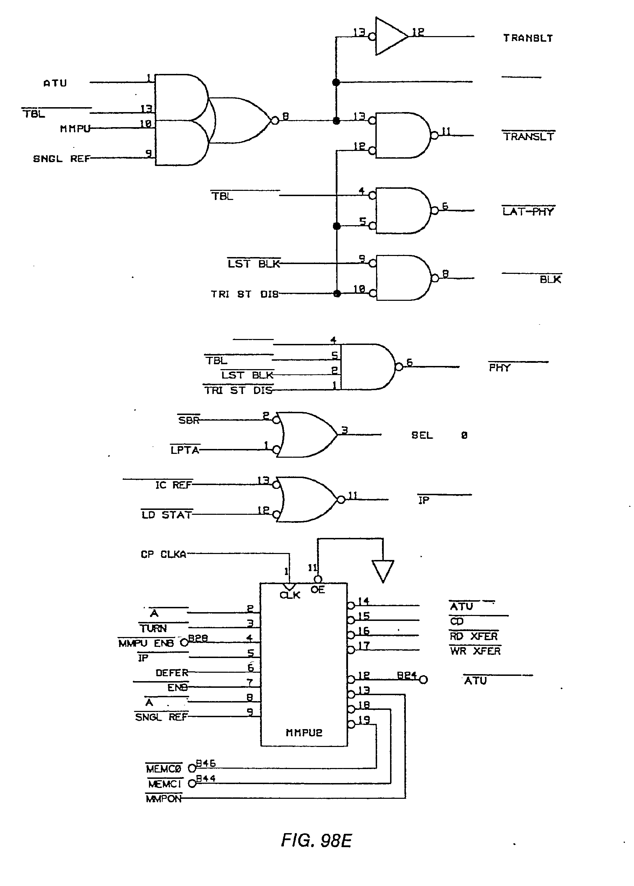

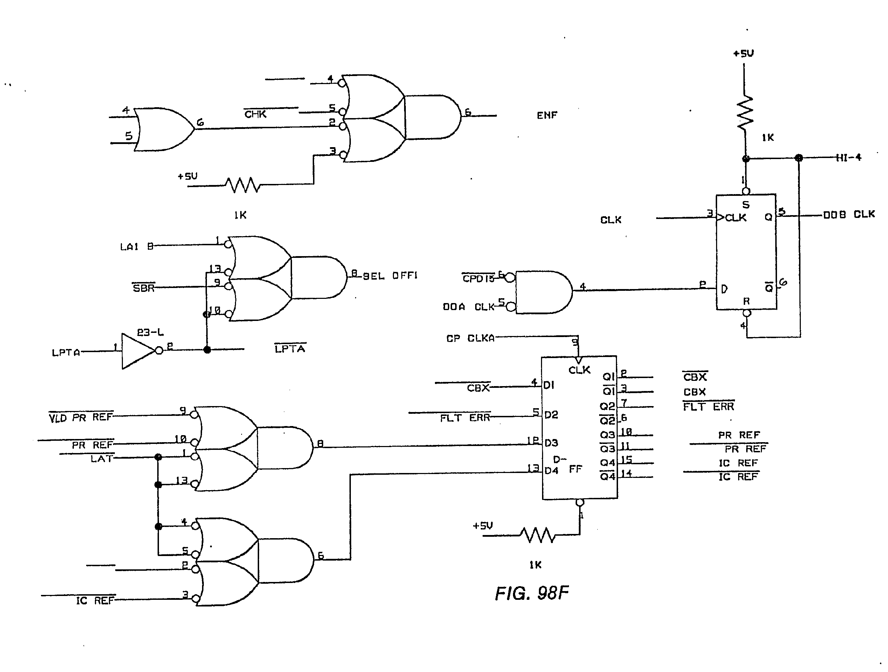

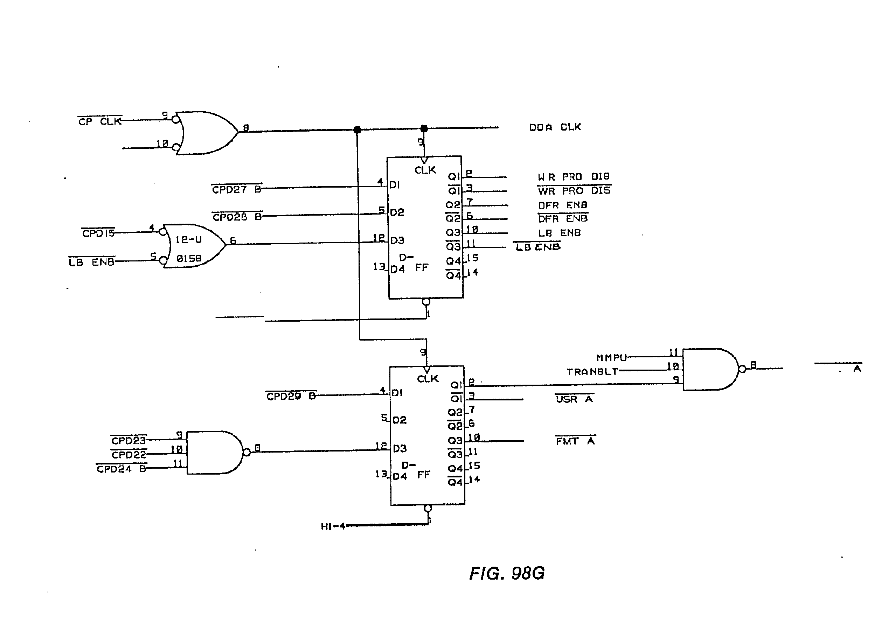

Validity store unit 103 is shown in FIG. 94 together with translation purge logic and the multiplexer associated therewith. The translation register of FIG. 79 is depicted in detail in FIG. 95. The reference/modify storage and control logic unit is shown in FIG. 96, the state save drive unit associated therewith being depicted in FIG. 97. The 16 bit MMPU emulation control logic is shown in FIG. 98.

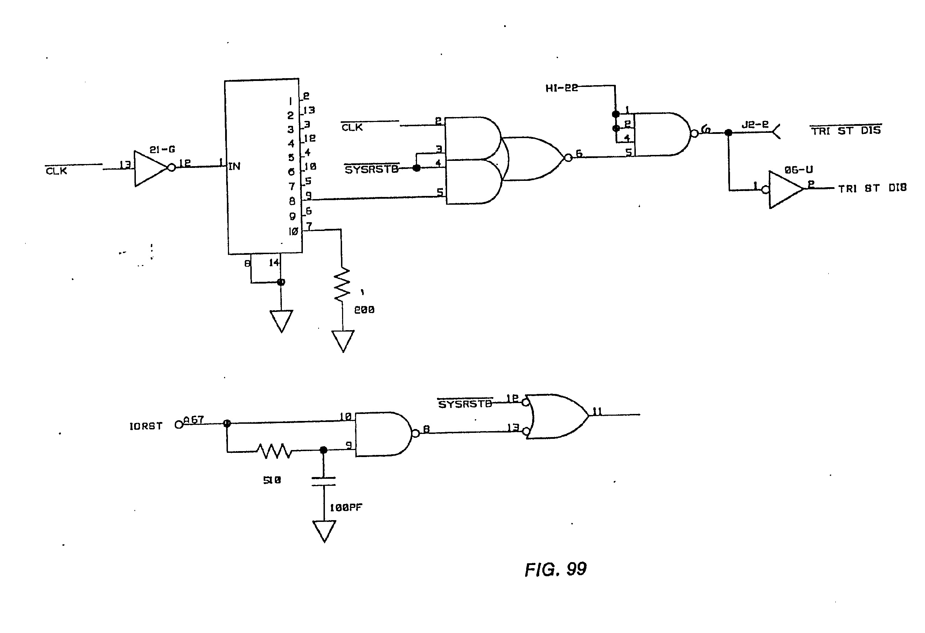

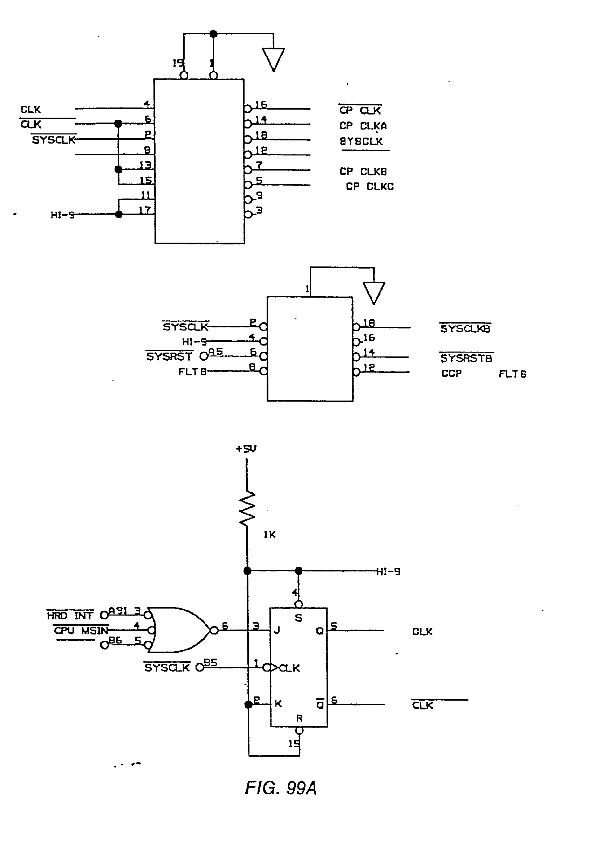

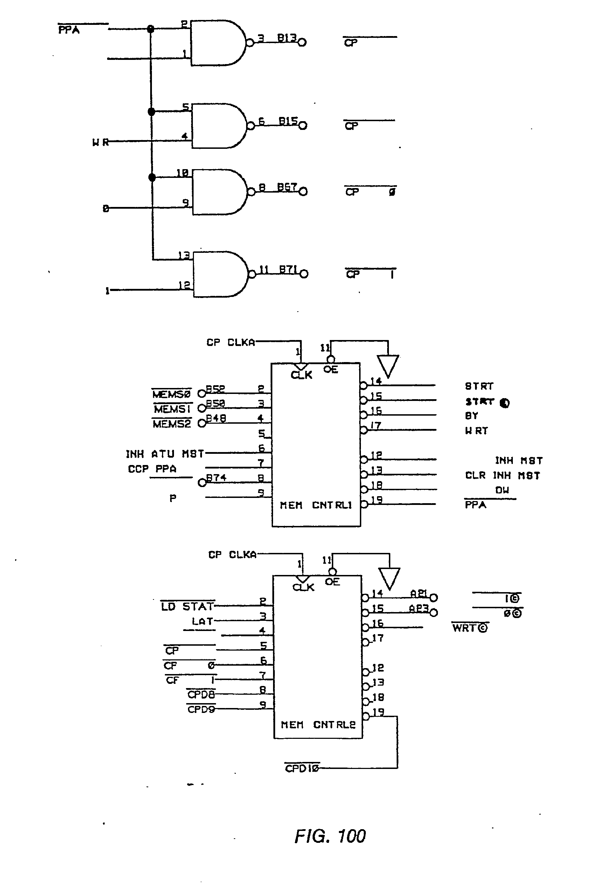

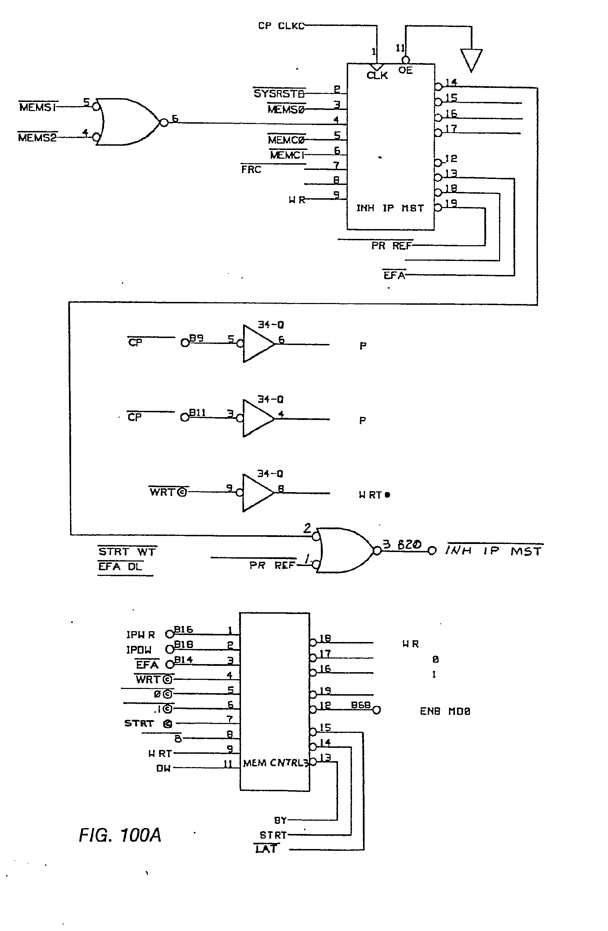

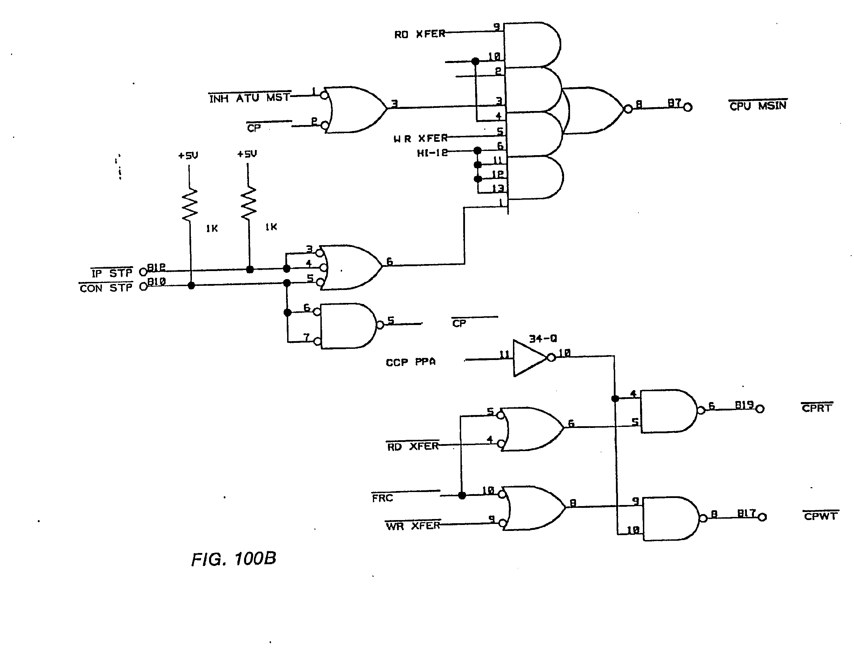

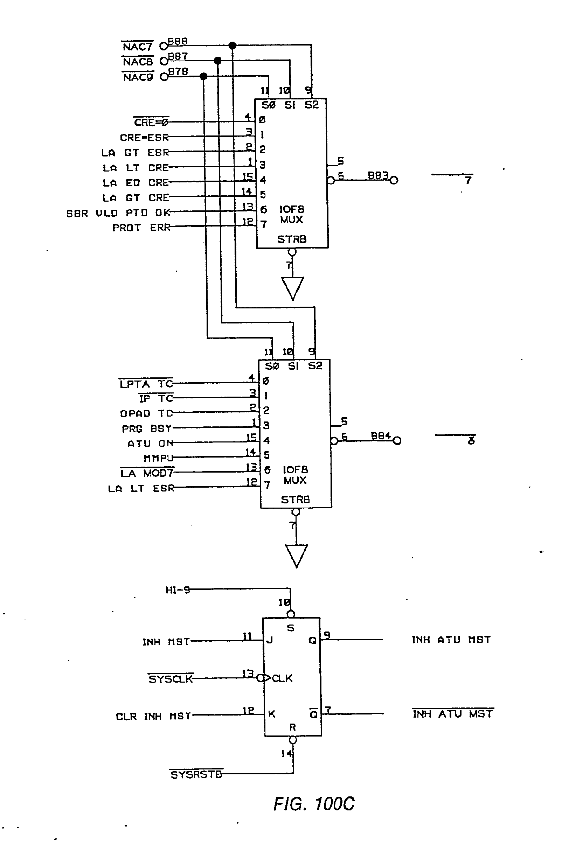

ATU timing logic is shown in FIG. 99 and suitable system code interface logic is shown in FIG. 100.

## INSTRUCTION PROCESSOR

The instruction processor (IP) 12 is utilized to handle the fetching and decoding of macro-instructions for the data processing system of the invention. The instruction processor operates both at and ahead of the program counter and its primary function is to provide a starting microaddress (ST$\mu$AD) for each micro-instruction, which starting microaddress is supplied to the microsequencer unit 13. Subsidiary functions of the instruction processor are (1) to provide the source and destination accumulator designations, (2) to provide the effective address calculation parameters for the arithmetic logic unit and (3) to provide sign or zero extended displacements for making memory references or for in-line literals (immediates) to the arithmetic logic unit (ALU).

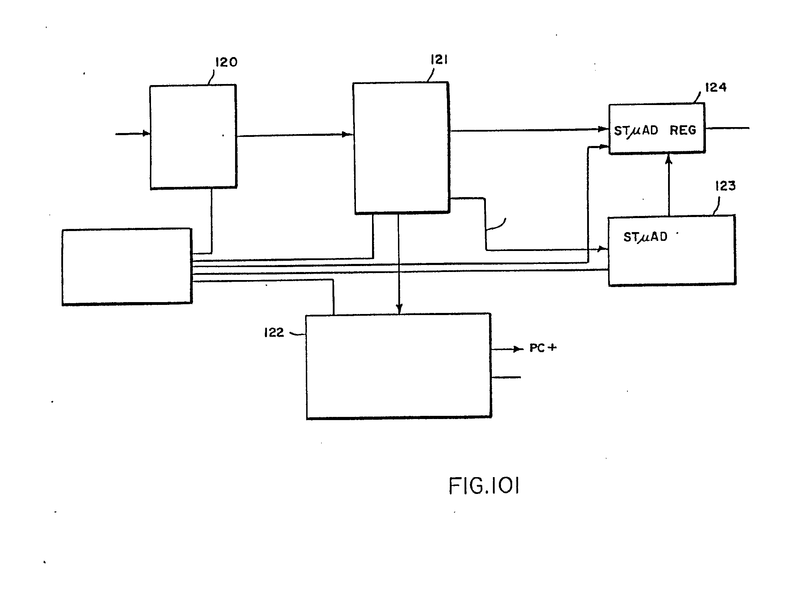

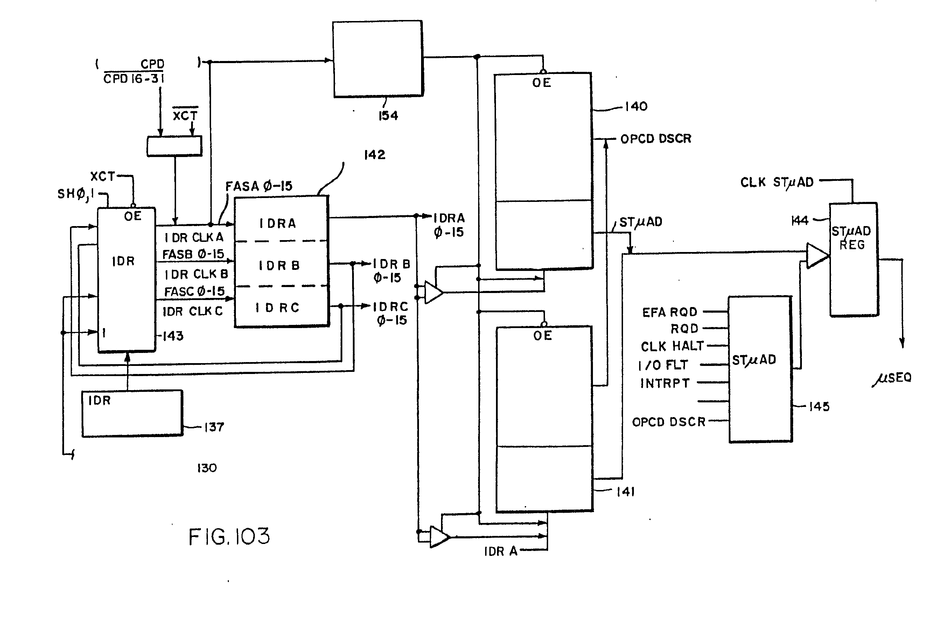

As seen in FIG. 101, the instruction processor includes instruction cache logic 120 (ICACHE), macro-instruction decoding logic 121 (which includes an instruction decode register as shown in FIG. 103) and program counter/displacement logic 122 as described below. The ICACHE logic functions as a pre-fetcher unit, i.e., the instruction cache (ICACHE) thereof obtains a block of subsequent macro-instructions for decoding, which block has been accessed from memory while the previous macro-instructions are being executed. The ICACHE stores the subsequent block of macro-instructions even if such macro-instructions are not immediately going to be used by the microsequencer. The decoding logic 121 of the instruction processor responds to a macro-instruction from ICACHE, decodes the operational code thereof (opcode) to provide the opcode description information for control and status logic 123 and to supply the information needed therefrom to the starting micro-address (STμAD) register 124 (and thence to the micro-sequencer) to identify the starting micro-address of the required micro-instructions.

The displacement logic 122 supplies the displacement data to the ALU if the index for such displacement is on the ALU board. If the index for the displacement is the IP program counter, the displacement logic combines the displacement information with the program counter information available at the instruction processor to form the logical address for supply to the LA bus.

Thus, in an overall IP operating sequence, a macro-instruction is read from an ICACHE storage unit of the ICACHE logic 120 into the decode logic 121 which thereupon decodes the instruction opcode and generates the starting micro-address for the micro-sequencer. During the decoding and starting micro-address generation process, the instruction processor simultaneously reads the next macro-instruction from the ICACHE into the decode logic. While the micro-sequencer is reading the first micro-instruction, the decode logic is decoding the next macro-instruction for generating the next starting micro-address. When the micro-instruction at the starting micro-address is being executed, the micro-sequencer reads the next micro-instruction from the next starting micro-address. Accordingly, a pipeline decoding and execution process occurs.

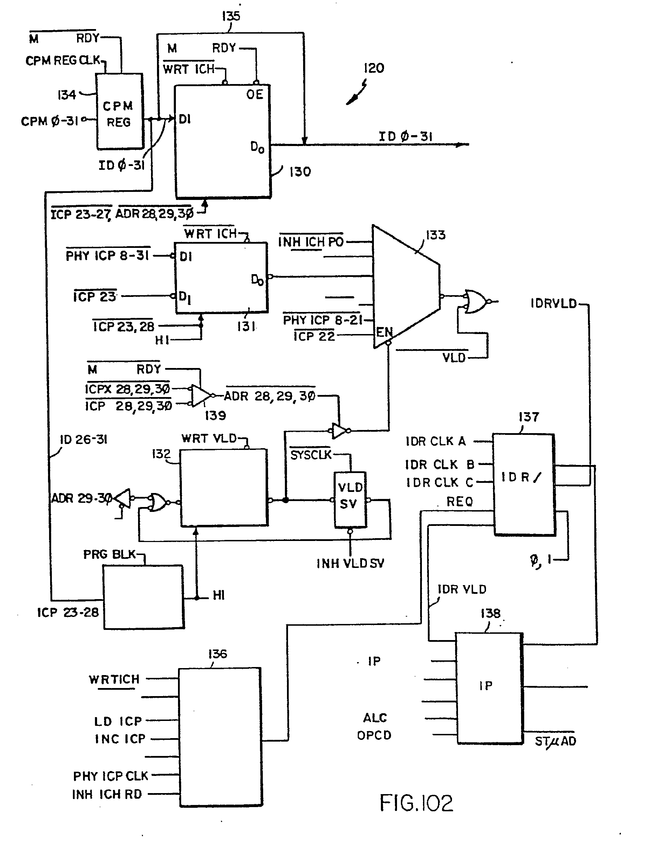

As seen in the more detailed FIG.102, the ICACHE logic 120 includes an ICACHE data store unit 130, a tag store unit 131 and a validity store unit 132. As discussed with reference to the system cache 17 of the memory system, the operation of the ICACHE is substantially similar in that the tag portion ($\overline{PHY}$ $\overline{ICP}$ 8-21) of the address of each desired word of the macro-instruction is compared at comparator 133 with the tag portions of the addresses stored in the TAG store 131 of those words which are stored in the ICACHE data store 130. In addition, the validity store unit demonstrates whether the desired address is a valid one. If the address is valid and if a tag "match" occurs, the 32-bit double word at such address is then supplied from the ICACHE data store 130 to the decode logic 121.

If the required macro-instructions in the appropriate ICACHE block are not present on the current physical page (i.e., the physical page corresponding to the logical page value of the current value of the program counter)which is stored in the ICACHE data store 130 (i.e., a Tag match does not occur) or if the validity bit is not set, an ICACHE "miss" occurs and the cache block containing the macro-instructions must be referenced from memory. Such ICACHE block memory reference may be to the system cache (SYS CACHE) or to the main memory, if the system cache access also misses. When the accessed ICACHE block is fetched, the desired macro instructions thereof are written into the ICACHE data store 130 from CPM register 134 and the block is simultaneously routed directly into the decoding logic through bypass path 135. The ICACHE logic can then continue to prefetch the rest of the macro-instructions from the fetched page  as an instruction block thereof, placing each one into the ICACHE data store 130 as they are accessed. The control logic for the ICACHE logic 120 is ICACHE/ICP control logic unit 136.

The decode logic, shown in more detail in FIG. 103, includes instruction decode units 140 and 141 for decoding the opcode portion of the macro-instructions. Decode unit 140 is used for decoding the opcodes of the original basic instructions for the system of which the present system is an extension. Thus, in a specific embodiment as discussed above, such basic instructions may be the NOVA and ECLIPSE instructions for Data General Corporation's previous NOVA and ECLIPSE system. Decode unit 141 is used for decoding the opcodes of the extended instruction set, e.g. the "Eagle" macro-instructions mentioned above.

The opcodes are supplied from an instruction decode register (IDR) 142 having three storage register sections, each capable of storing a word and identified as IDR A, IDR B and IDR C. The opcode of each macro-instruction is stored in the IDR A section while displacements are stored in the IDR B and C sections. An IDR shifter unit 143 is used to shift the desired opcode portion of the instruction accessed from the ICACHE data store 130 into the IDR A section of IDR 142 and to shift the appropriate displacement words of the instruction, if any, to the IDR B and IDR C sections thereof. The control logic for the IDR and the IDR shifter units is IDR/shifter control unit 137, shown in FIG. 102.

When the macro-instruction has been routed to the decode logic, the decode units 140 or 141, as required, decode the opcode portion thereof to provide opcode description (OPCD DSCR) information, including the length of the instruction (i.e., whether the instruction comprises a single, or double or triple word). When the entire instruction has been supplied to the decode logic (from ICACHE data store 130) a SET IDR VLD signal is generated to produce an IDR VLD signal at IDR/shifter control 137 (FIG.102). Following the decoding process, the starting micro-address is loaded into the STμAD register 144 from either decode PROM 140 or 141 depending on whether the macro-instruction is a basic or an extended instruction. Control of the loading of STμAD register 64 resides in STμAD load control unit 145.

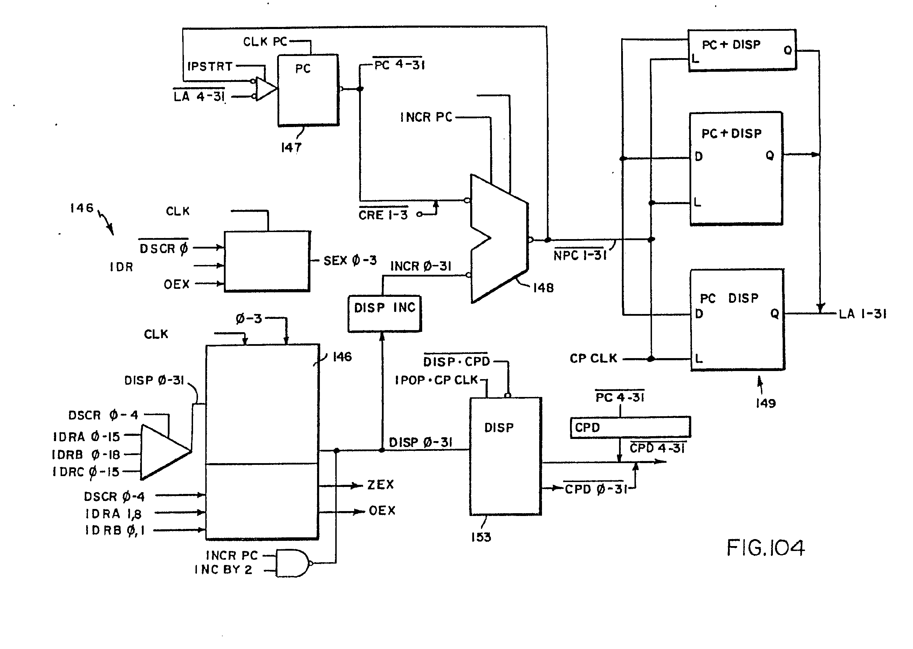

The displacement word or words, if any, are generally present in IDR B or C (for certain NOVA instructions a byte displacement may be extracted from IDRA, although generally for almost all other instructions displacements are extracted from IDRB and IDR), being extracted from the displacement logic 146, as shown in FIG.104. The displacements are sign or zero extended, as necessary, and are clocked into a displacement register thereof so as to be made available either directly to the logical address (LA) bus or to the CPD bus for use at the ALU unit, as discussed below.

When the starting micro-address has been clocked into STμAD register 144, an UPDATE signal is issued by the IP status logic unit 138 (FIG.102) to inform the IDR/shifter control 143 that the decoded information has been used and can be shifted out of IDR 140/141. The decoding of subsequent macro-instructions continues until a discontinuity in the straight-line decoding operation occurs. When a jump in the straight-line operation occurs the micro-sequencer issues an IPSTRT signal to the program counter register 147 of the instruction processor
(FIG. 20) so that a new program counter address ($\overline{\text{LA } 4\text{-}31}$) can
be placed in the program counter register from the logical
address bus.  The starting micro-address register 144 is reset
and the starting micro-address of an appropriate wait routine,
for example, is placed therein until the decoding process for
the instruction associated with the new program counter can
begin.

In some situations the sequence of macro-instructions
which are being decoded are present on more than one physical
page.  Under such conditions when the ICACHE control detects
the end of the page which is stored in the ICACHE data store 130,
a special routine must be invoked in order to fetch the next
page into the ICACHE store 130 so as to continue the prefetching
operation on the new page.  Thus, when the last instruction
of a particular page has been decoded and the decode pipeline
is effectively empty, the starting micro-address register is
loaded with the starting micro-address of a suitable page control
routine which accesses the required new page and permits the
next page to be loaded into ICACHE store 130 via physical page
register 134 so that the instruction processor can continue with
the decoding of the macro-instructions thereon.

If a macro-instruction is not on the page contained in the
ICACHE store 130, the correct page must be accesssd from either
the system cache or main memory because of an ICACHE "miss"
in the instruction processor.  Access to the system cache is
provided at the same system cache input port as that used by the address translation unit (ATU). In the system of the invention, however, the ICACHE is given a lower priority than the ATU so that if the ATU wishes to access the system cache the instruction processor must hold its access request until the ATU has completed its access.

The use of ICACHE logic as described herein becomes extremely advantageous in programs which utilize a short branch backwards. If a macro-instruction branch displacement is less than the number of words in the ICACHE data store there is a good chance that the required macro-instructions will still be stored locally in the ICACHE data store and no additional system cache or main memory references are required.

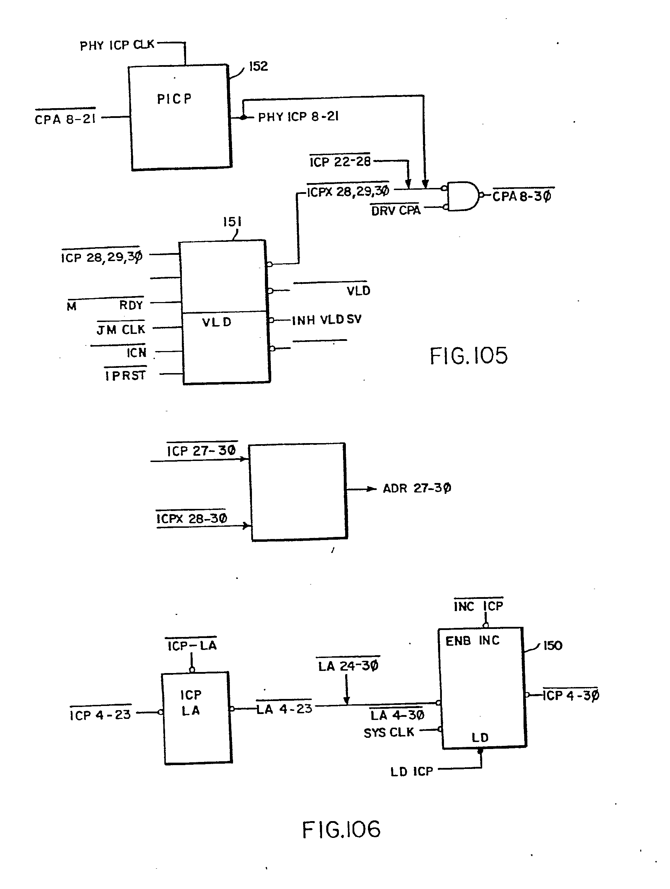

In a particular embodiment, for example, the overall ICACHE logic 120 may comprise a single set, direct mapped array of 256 double words in data store 130 plus Tag and Validity bits in Tag Store 131 and Validity Store 132. Data is entered into the data store as aligned double words and the ICACHE data store is addressed with the eight bits which include bits $\overline{\text{ICP 23-27}}$ from the instruction cache pointer (ICP) unit 150 shown in FIG.105 and bits ADR 28,29,30 from unit 139.

A copy of the Tag store 131 of the instructor processor's ICACHE unit is also kept in the system cache, the latter cache needing such information so that it can inform the instruction processor when data has been written into the ICACHE.

The validity store 132 is arranged, for example, in a particular embodiment, as 64 double words by four validity bits in order to indicate the validity of each double word in the ICACHE data store. Each initial fetch into a new block of instruction words will set the corresponding validity bit for the double words and reset the remaining three validity bits. During a prefetch operation into the same block, the corresponding validity bit for the prefetch double word is set while the remaining three validity bits remain the same.

The prefetching operation stops when the last double word in the block has been prefetched in order to avoid unnecessary system cache faults.

If the ICACHE operation is such that the end of a physical page is reached and it is necessary to obtain the next physical page address for the next logical page of the program counter (PC bits 4-21), the ICACHE control logic unit 136 (FIG.102) asserts a signal (identified as the $\overline{ICAT}$ signal) which is

supplied to the STμAD load control logic 145 (FIG.103) When the last macro-instruction at the end of the current page has been

decoded, the STμAD control logic 145 supplies the starting micro-address for the $\overline{ICAT}$ micro-code routine which thereupon performs the necessary address translation operation for a transfer of the next physical page address for the ICACHE data store 130.

The instruction processor utilizes two pointers to the instruction stream. The first pointer is the program counter register 147 (FIG.104) which holds the logical address of the instruction which is being executed, and the second pointer is the instruction cache pointer (ICP) 150 (FIG.106) which holds the logical address of the next macro-instruction which is needed for the decode logic. A separate register PICP 152 (physical instruction cache pointer) holds the physical page address of the logical page referred to by bits 4-21 of the instruction cache pointer (ICP). Thus the ICP 150 functions as the prefetch logical address pointer and the PICP functions
as the prefetch physical address pointer. The program counter
147 and the ICP 150 are loaded from the logical address bus at
the start of an instruction processor operation. The ICP is
incremented ahead of the program counter as the decoding pipe-
line operation is filled. On an ICACHE fault, or miss, the
PICP physical address is used to reference the memory and
the ICP address is used as a pointer to the next logical
page address for address translations when the end of the
correct page has been reached.

In accordance with the instruction processor operation
the optimum performance is achieved when the instructions are
locally available in the ICACHE, such instructions thereby
becoming substantially immediately available when the micro-
sequencer requests them. Instructions which are not locally
available in the ICACHE take an amount of time which is
dependent on system cache access operation and page fault
routine operations.

The macro-instruction decoding logic utilizes three
16-bit fields identified as the IDR A, IDR B, and IDR C
fields, as mentioned above. The "A" field contains the opcode
while the "B" and "C" contain either the displacement(s) for
the instruction in the "A" field or one or more fields of the
macro-instruction which follows in the instruction stream.
The instruction decode register, IDR 142, is arranged to keep
all three fields full, if possible, by sending word requests
tothe ICACHE (ICP control unit 136) when any of the three

IDR fields is empty. As mentioned above, if the ICACHE word request results in an ICACHE "miss" a system cache fetch is initiated.

The "A" field of the instruction decode register 142 is used by the decode logic PROMs 140 or 141 to decode the opcode of the macro-instruction and, also to provide the starting address of the macro-instruction which is required. The "B" and "C" fields determine the displacements, if any, that are required. Each field is one word in length and therefore the longest instruction that the instruction processor can decode and canonicalize the displacement for has a maximum length of three words.

When the A field of the instruction decode register is full, the decode PROMs 140 or 141 decode the opcode of the instruction. If the entire instruction, including opcode plus displacement, is in the instruction decode register, a signal IDR VLD is asserted by the IDR shifter control logic 137 to inform the IP status logic 138 that an entire instruction is ready to be decoded so as to provide a starting micro-address for STµAD register 144. The displacement logic 146 which extracts the displacement, either sign or zero extends it, as necessary, and then loads it into a displacement register. If the displacement index is on the ALU board the displacement is latched onto the CPD bus via latch unit 153 for supply thereto. If the displacement index is the PC register 147, the displacement is added to the PC bits at adder 148 and supplied to the logical address bus via latches 149, as shown in FIG.104.

During the above loading processes the instruction decode register 142 is shifted by the length of the instruction that has been decoded so as to be ready to receive the next instruction, i.e., a shift of one, two or three words. The IDR shifter unit 143 serves to provide such shift of the contents of the instruction decode register 142. A shift of three words, for example, completely empties the instruction decode register which is then ready to receive the next instruction from the ICACHE (or directly from memory on an ICACHE "miss"). The shifter, for example, allows either word in a double-word instruction which has been accessed from the ICACHE to be directly loaded anywhere into the instruction decode register. The placement in IDR 142 is determined by examination of the validity bits in the IDR. Thus if the "A" field is invalid, the incoming instruction data would be loaded into the "A" field. Whenever any of the three fields in the instruction decode register 142 are empty, a word request is made of the ICACHE via ICACHE control logic 136 for accessing the next instruction as determined by the ICACHE pointer (ICP) 150, bits 23-27 of which uniquely determine which double-word in the ICACHE is to be accessed. If the instruction is a single word instruction, the ICP bits 28-30 and the ICPX bits 28-30 obtained from the fetch request control logic 151 (FIG.105) uniquely determine which word of the double word is to be used as the instruction as shown at word pointer logic 139 (FIG.102).

If the instruction decode register 142 has at least two fields empty and a word pointer points to an even double word, then the double word would be loaded into two empty fields of the IDR. After loading, the ICACHE pointer 150 would be incremented so that it points to the next double word. If the IDR has only one empty field and a word pointer points to an even double word, then the first word would be loaded into the IDR and the word pointer would be sent to point to the second word of the double word and the ICACHE pointer remains the same. When the word pointer points to the second word, only one word can be accessed from the ICACHE and loaded into the instruction decode register.

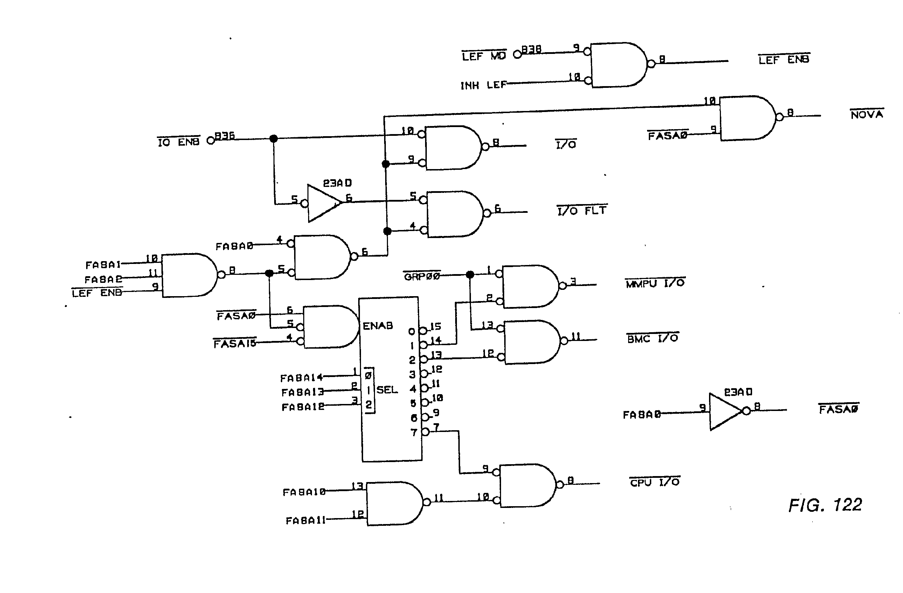

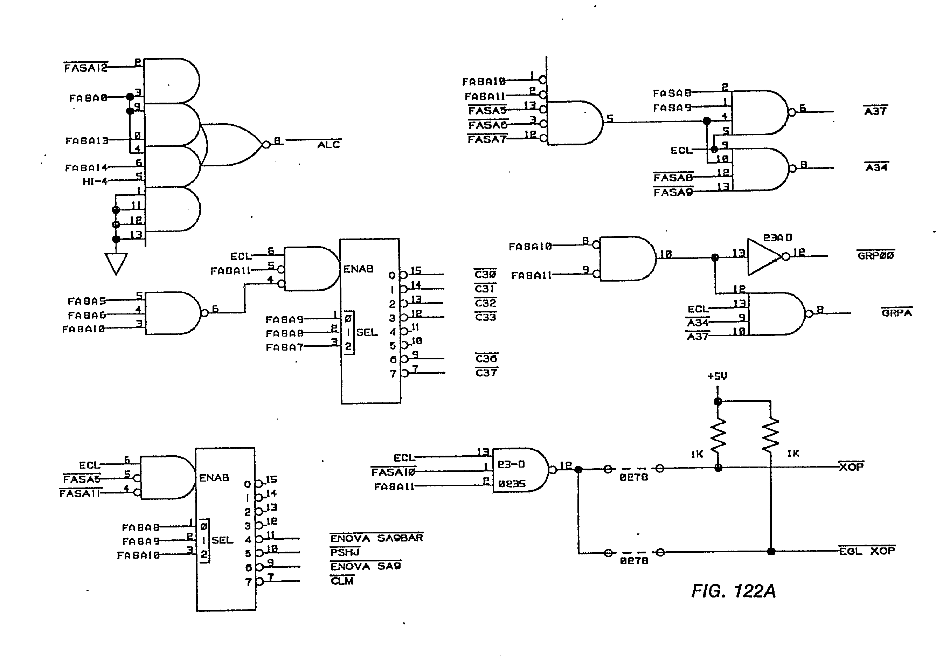

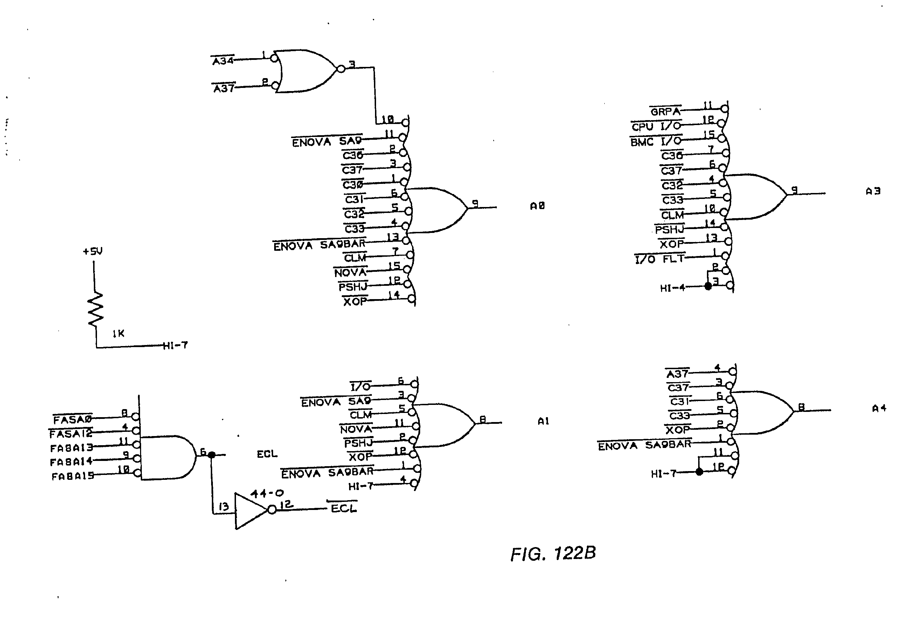

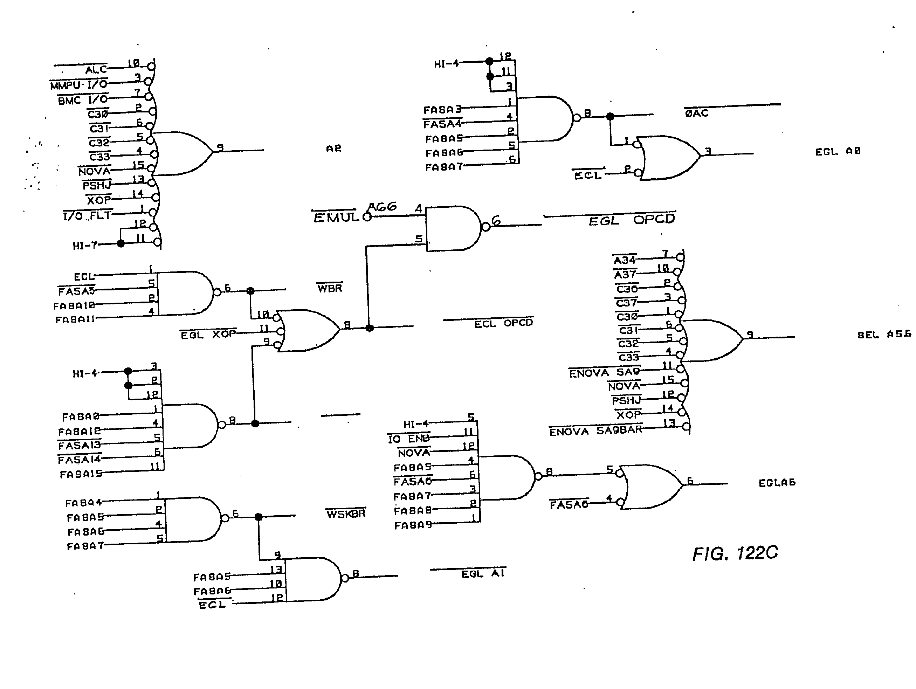

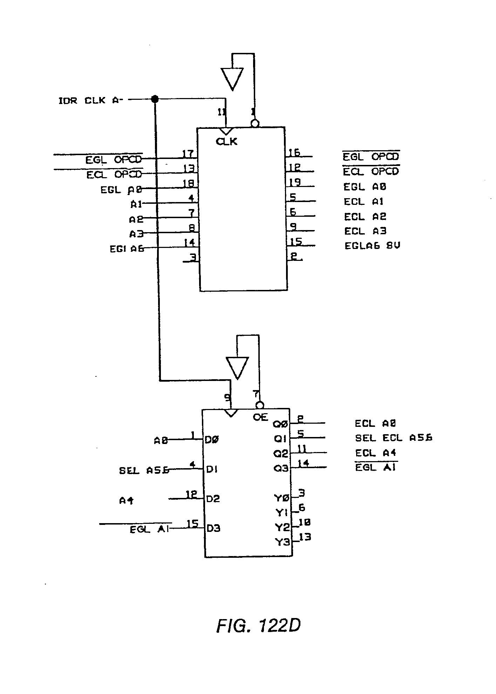

The decode logic utilizes predecode logic 154 (FIG.103) which is used to select the location in one of the two sets of decode PROMs 140 and 141. As mentioned above, one set of PROMs 140 holds a basic set of instructions (e.g., NOVA/ECLIPSE instructions) while the second set of PROMs 141 holds the extended instructions (e.g., EAGLE instructions). The decoding process for the basic set of decode PROMs 140 is performed in two stages, the first level being performed in the predecode logic 154 at the output of the shifter which is used to place the basic macro-instructions into the correct form so that the decode logic 140 can decode the opcode and be ready with the displacement information in the correct form and sequence. Such logic is shown in more detail in FIG.122. The instructions for the extended set are already in the desired form and need not be predecoded before being supplied to the decode PROMs 141. In either case each incoming macro-instruction maps into at least one location of a selected one of the decode PROMs 140 or 141 to produce the required opcode descriptors and the required starting micro-address for supply to the micro-sequencer.

The decision to select the output of decode PROM 140 (e.g., NOVA/ECLIPSE) or decode PROM 141 (e.g., EAGLE) is determined by examining selected bits (e.g., bits $\emptyset$, 12-15 as discussed above) of IDR A. As described above, the selection of the decode PROM is not determined by a separately designated "mode" bit as in previous systems, which prior process causes the decode operation to be mutually exclusive. In contrast, the present system in selecting the appropriate decode operation performs such operation on an instruction by instruction basis since each instruction inherently carries with it the information required to determine such decode selection.

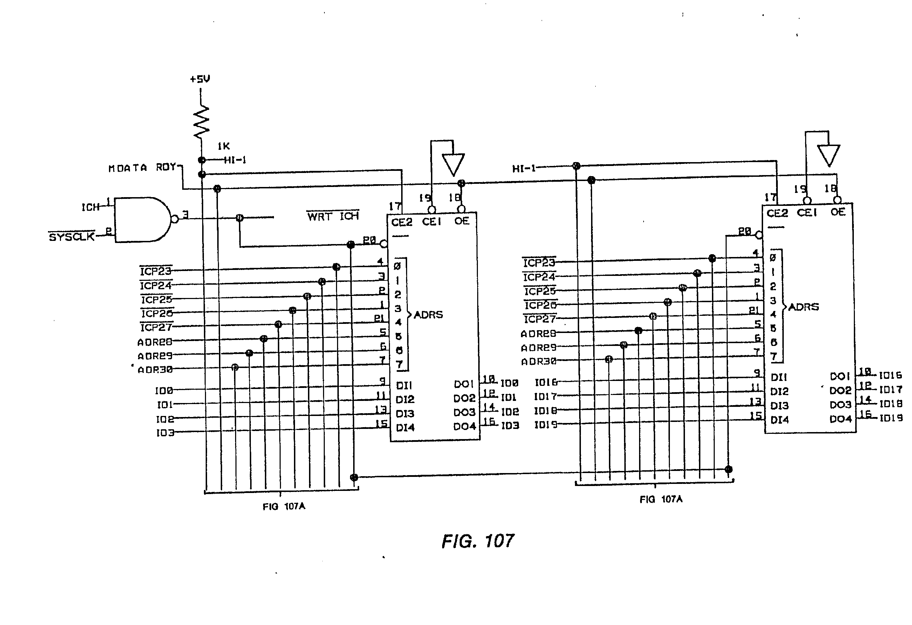

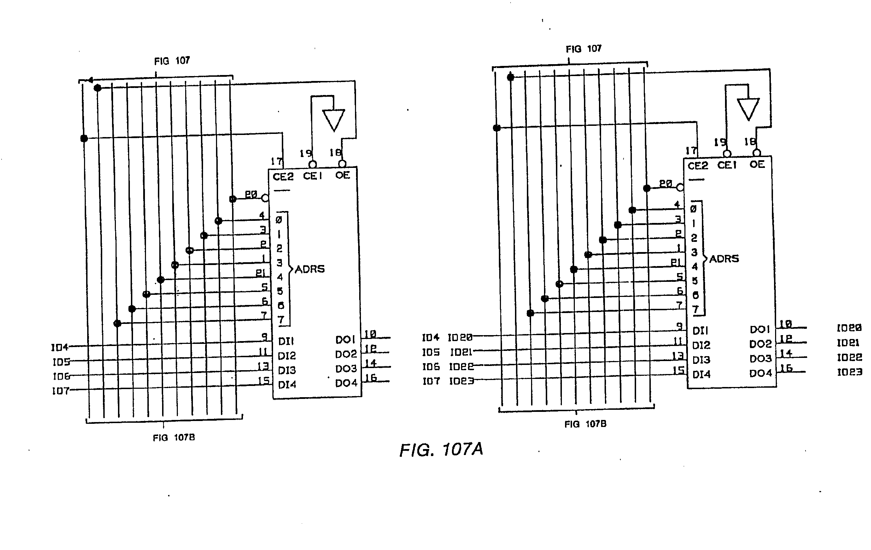

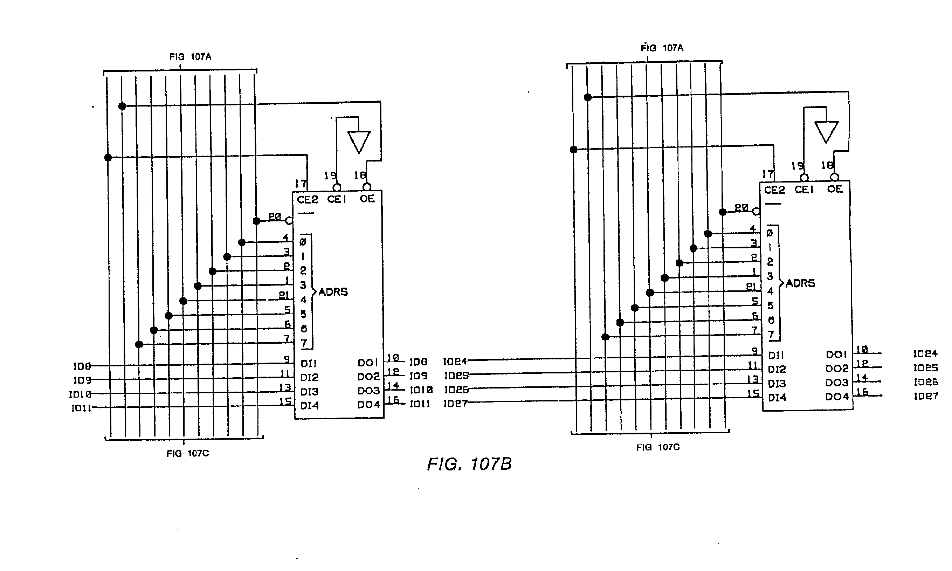

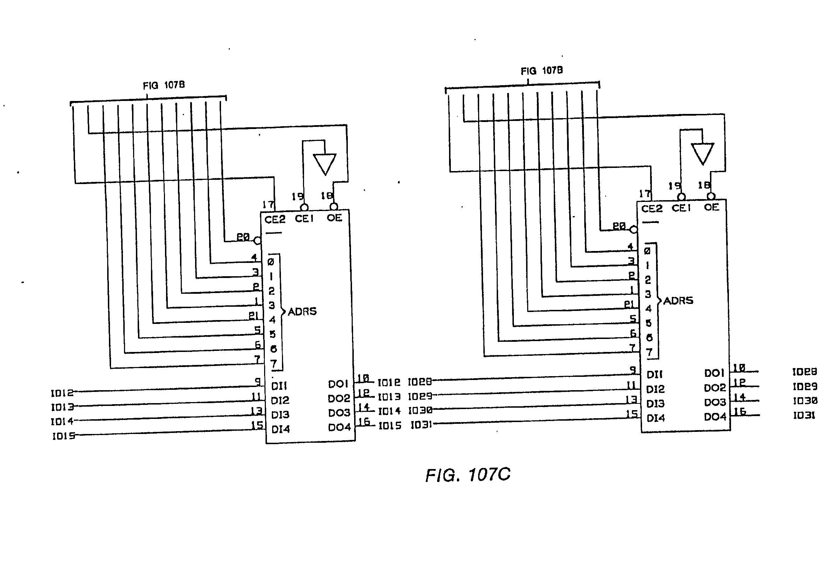

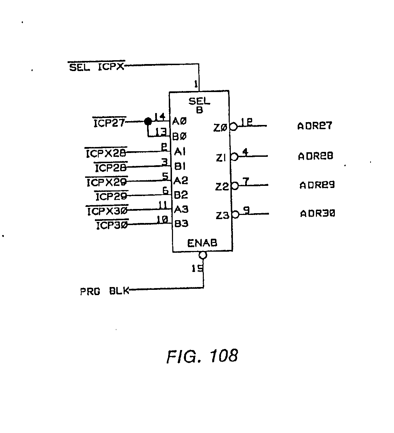

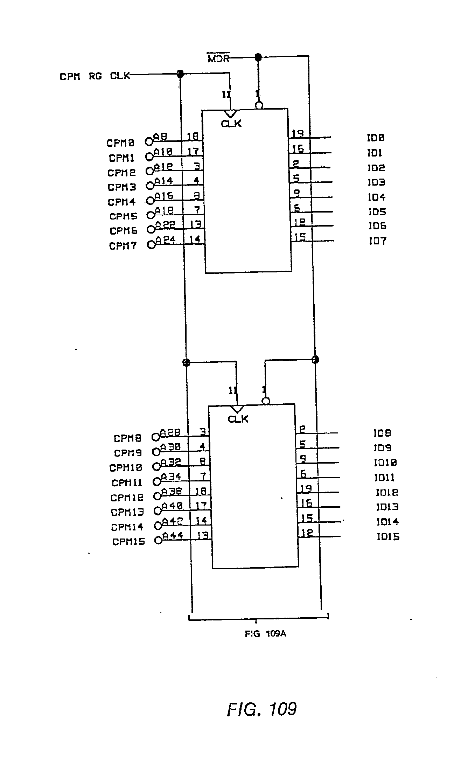

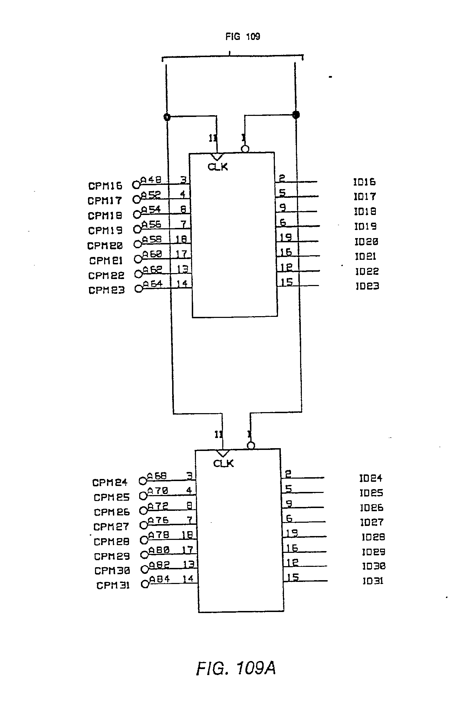

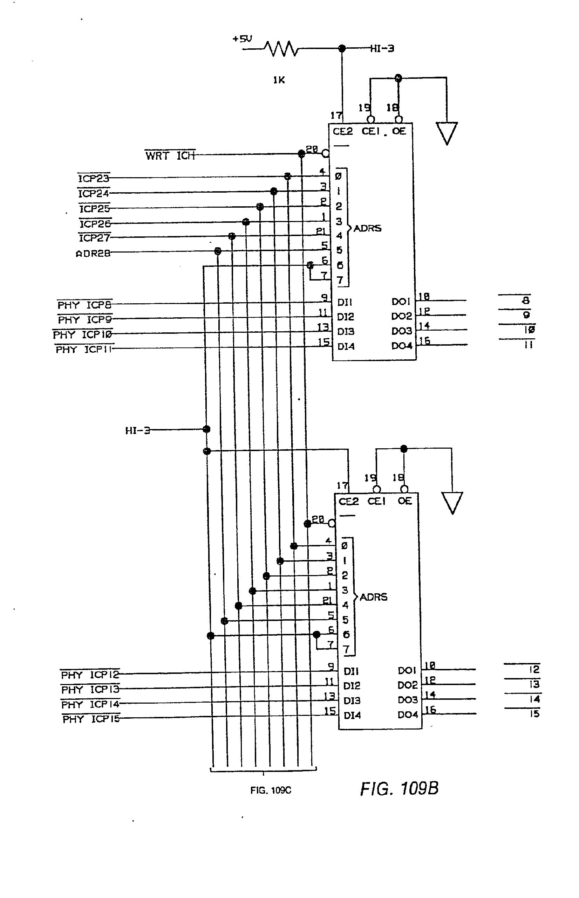

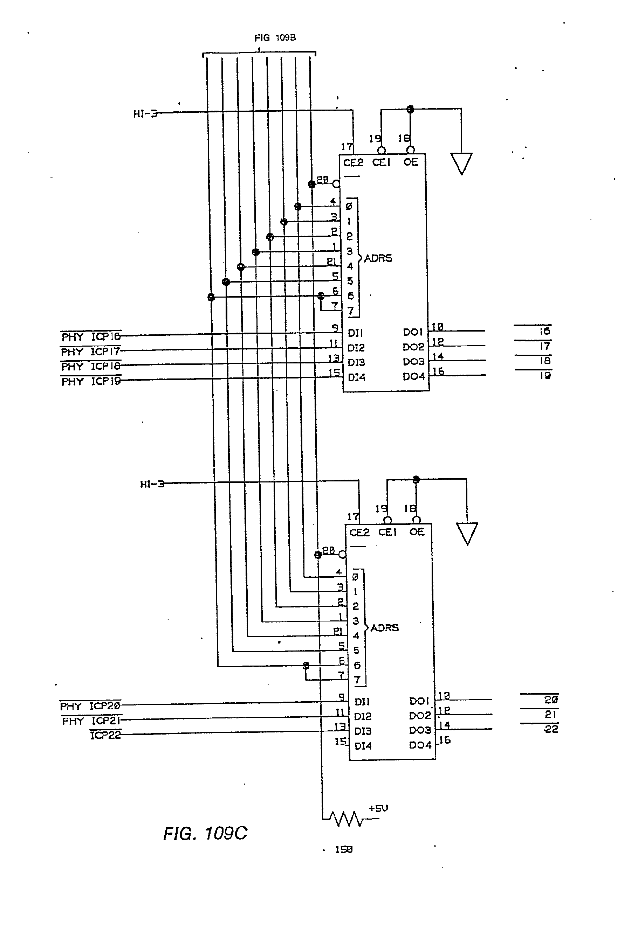

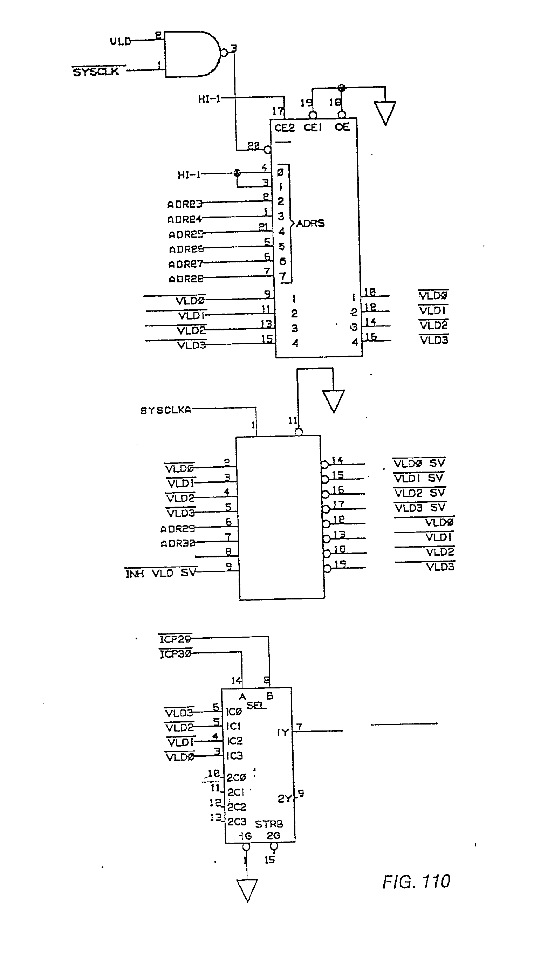

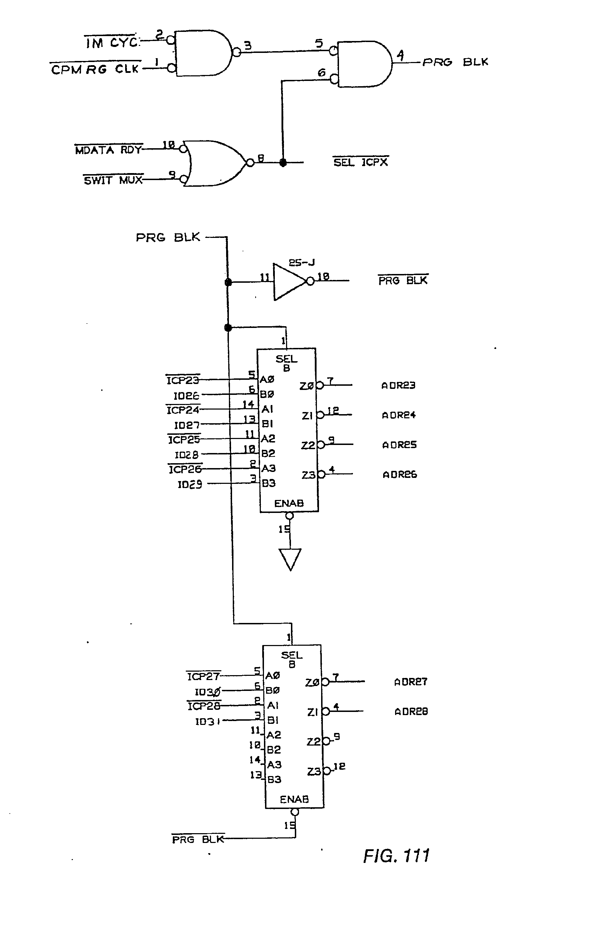

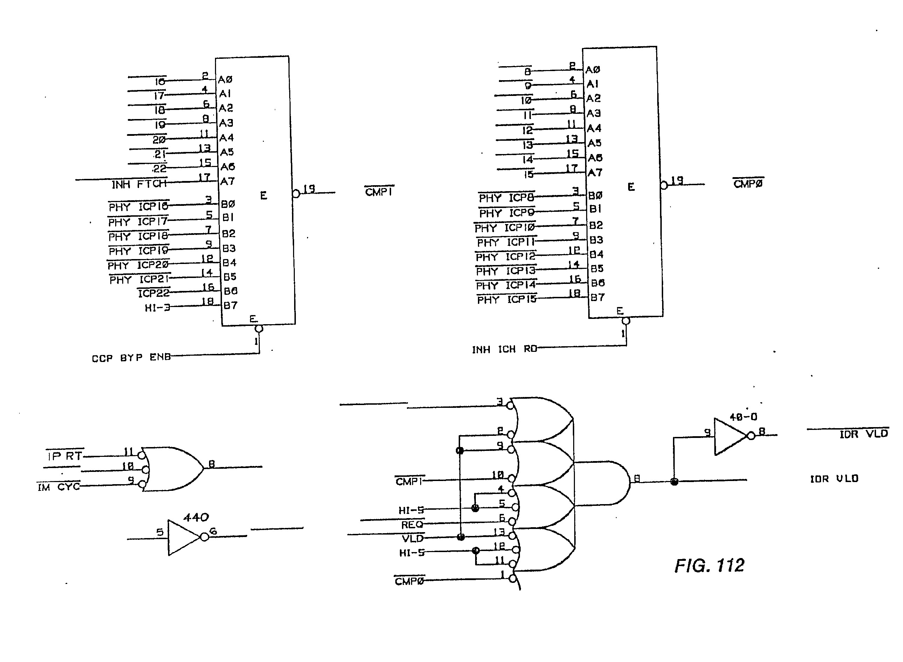

Specific logic circuitry for implementing the block diagram of the instruction processor to provide the operation discussed above with reference to FIGS. 101-106 is shown in FIGS. 107-136. ICACHE data store 130 and the ICACHE data store address input logic are shown in FIGS. 107 and 108, respectively, while CPM register 134 supplying cache block words from memory being shown in FIG. 109 and 109A. ICACHE tag store 131 is also depicted in FIG. 109B and 109C and ICACHE validity store 132, together with the validity store address input is shown in FIGS. 110 and 111, respectively. Comparator 133 and logic for providing the SET IDR VLD signal are shown in FIG. 112.

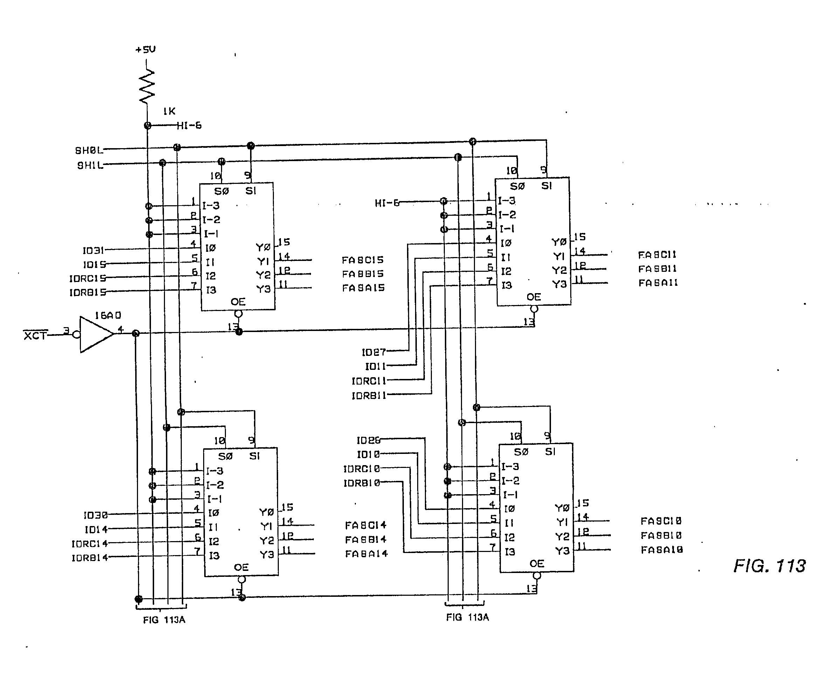

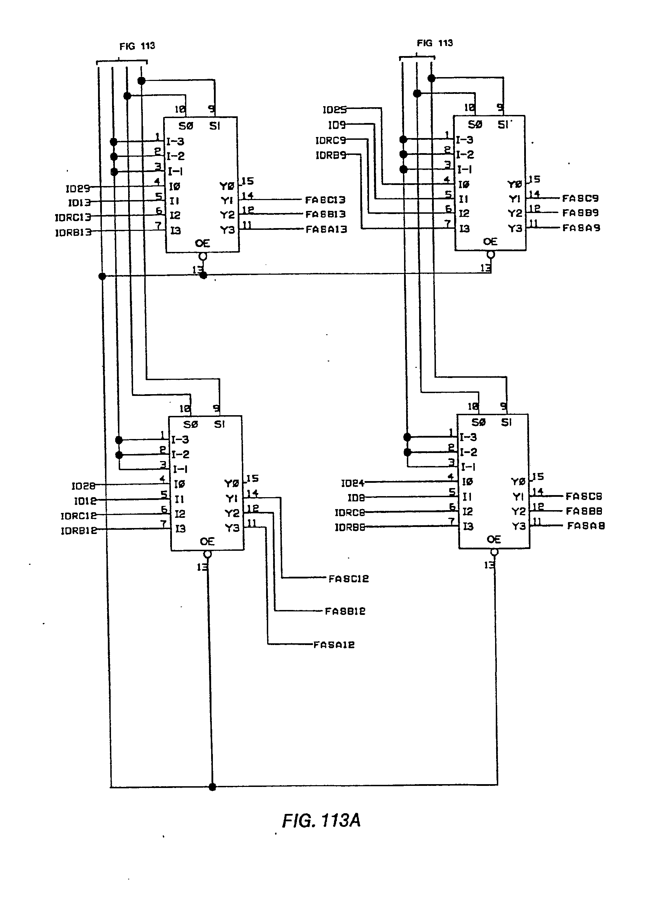

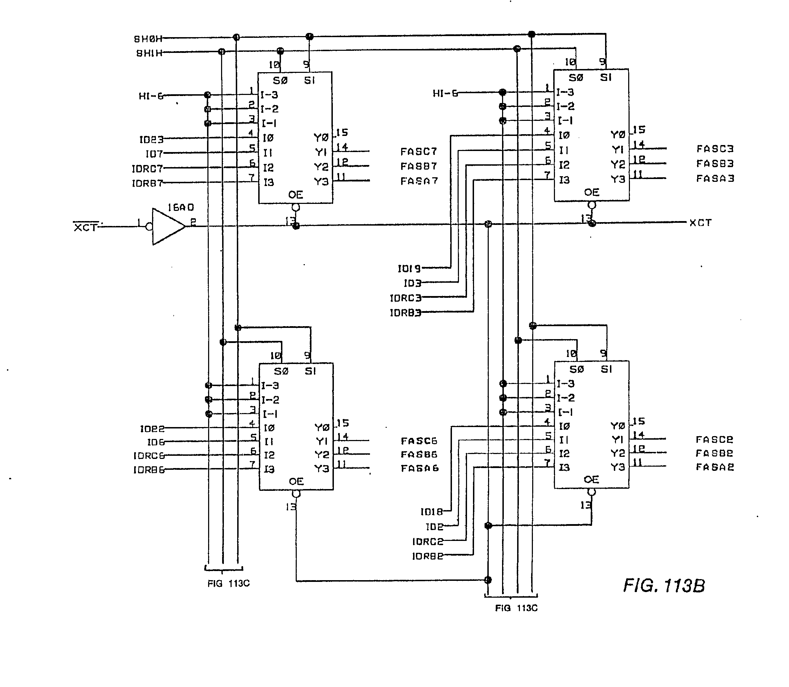

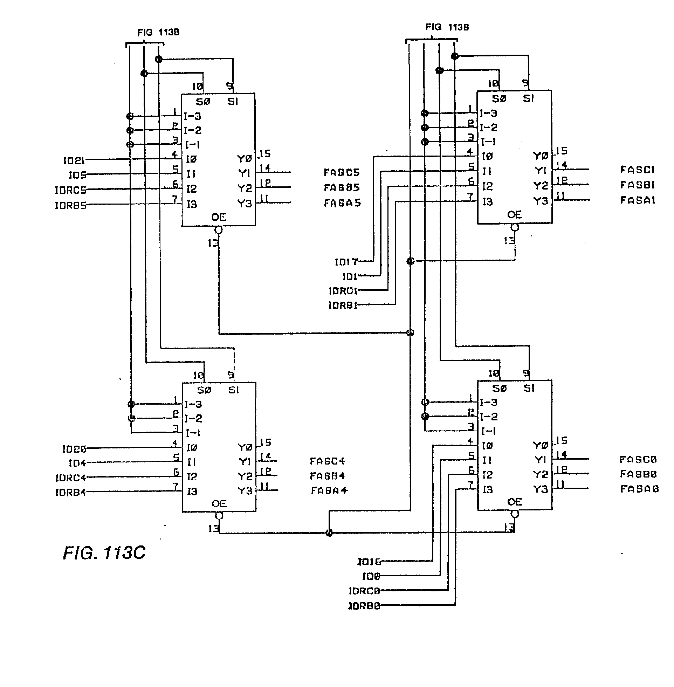

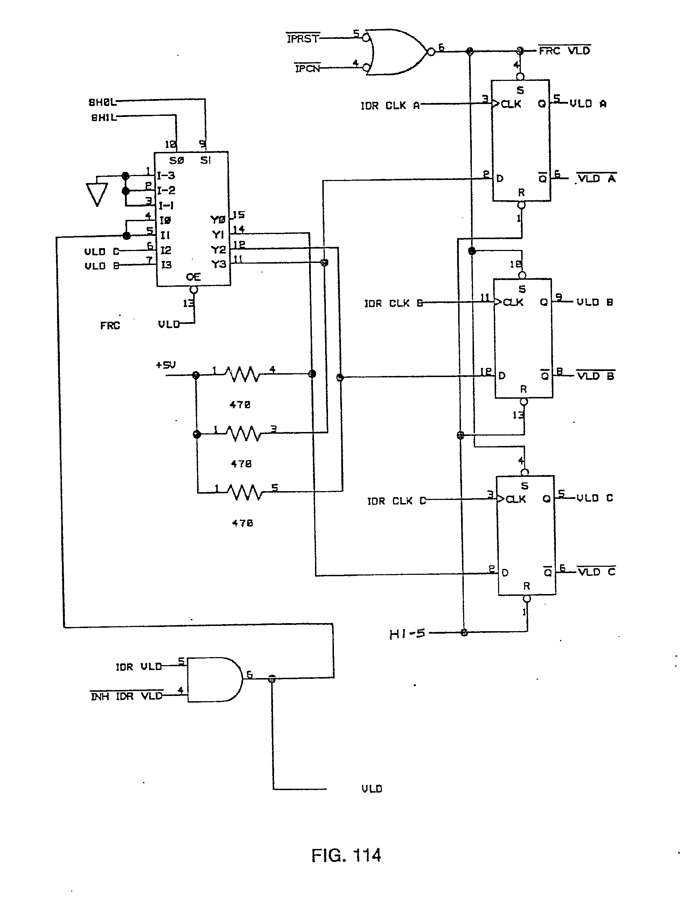

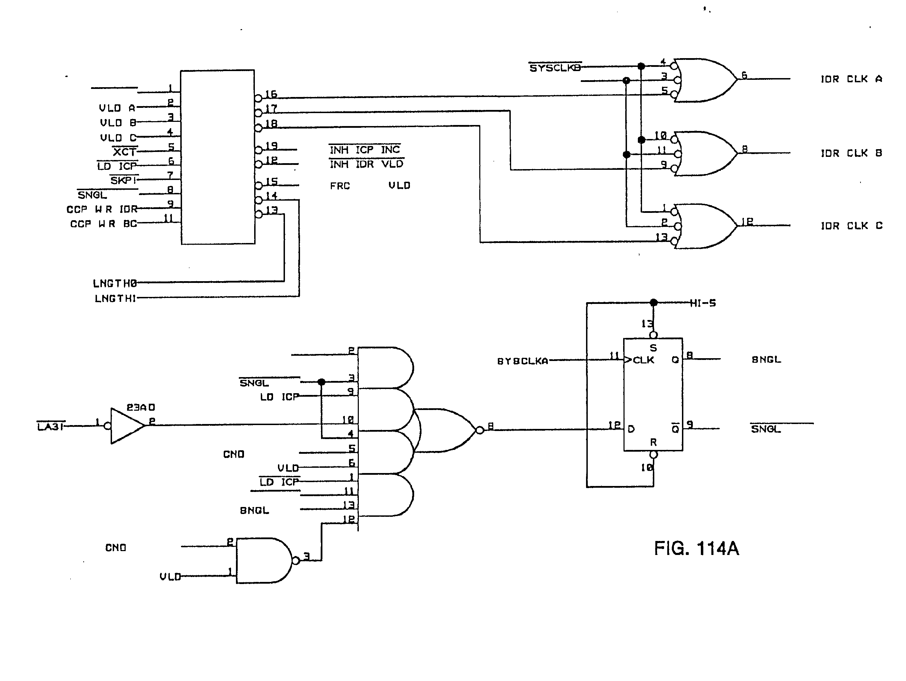

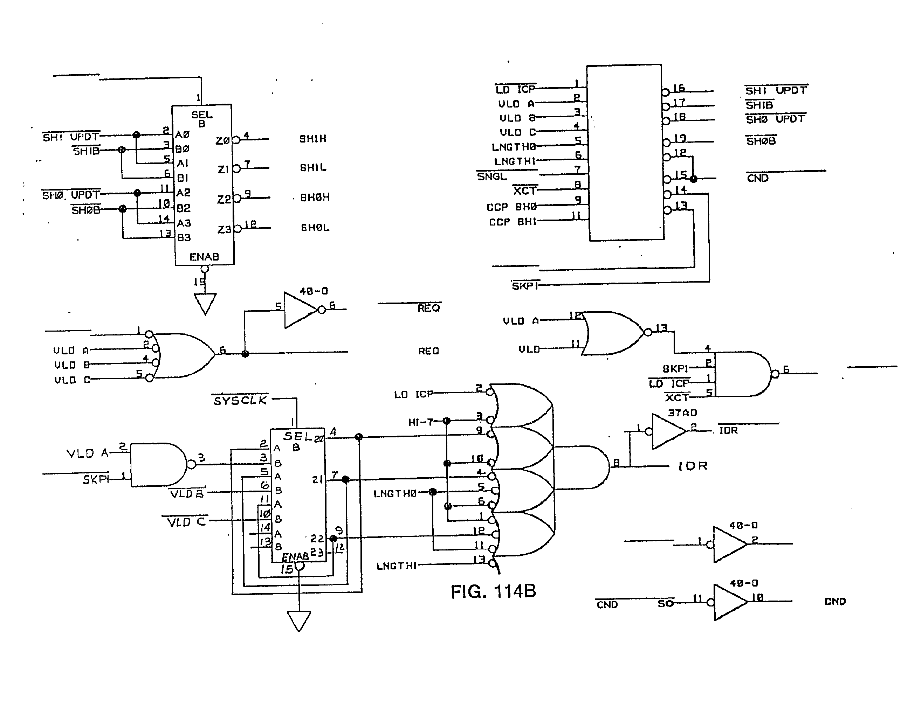

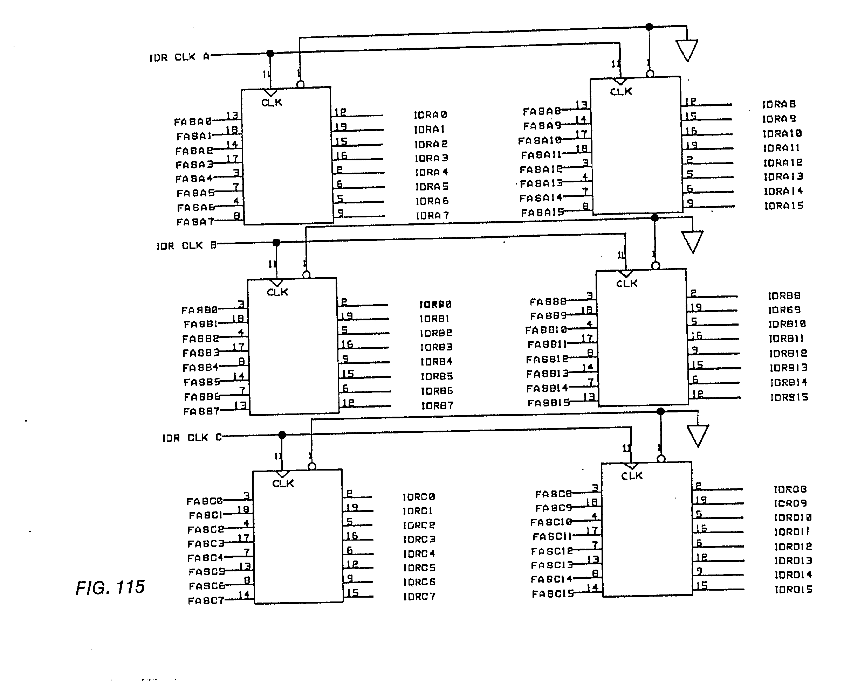

FIG. 113 shows IDR shifter 143, the IDR shifter control logic 137 being shown in FIG. 114. The instruction decode register (IDR) unit 142 is depicted in FIG. 115 and include IDR sections A, B and C as shown.

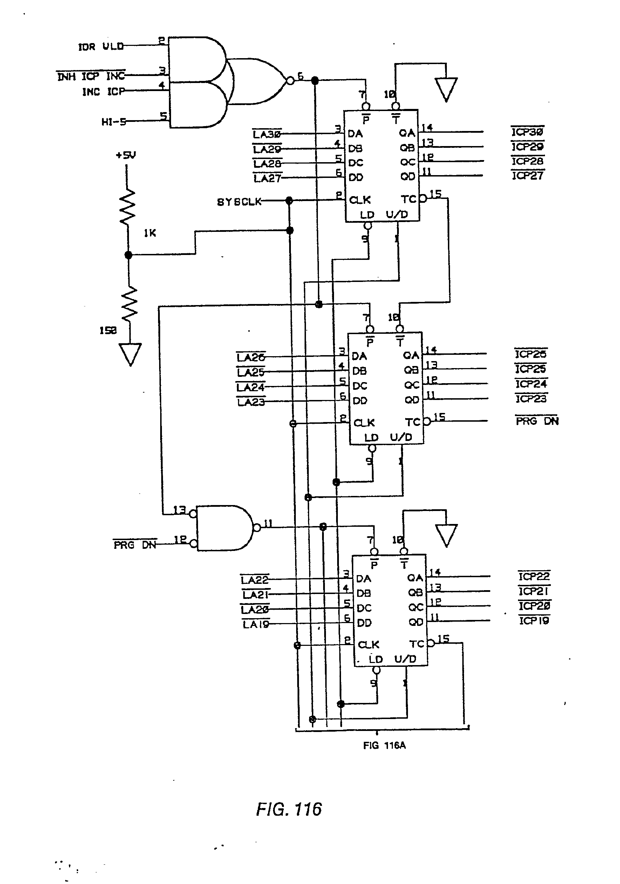

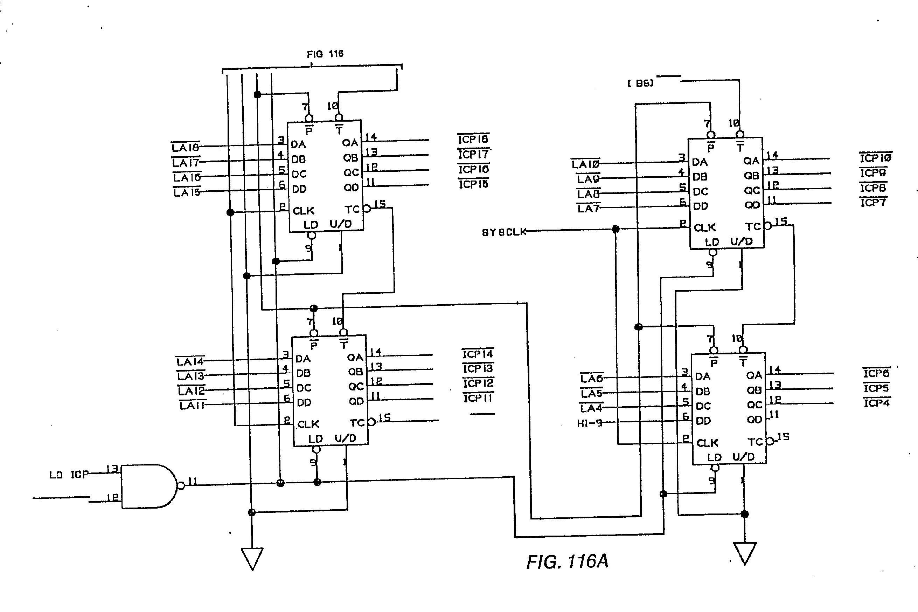

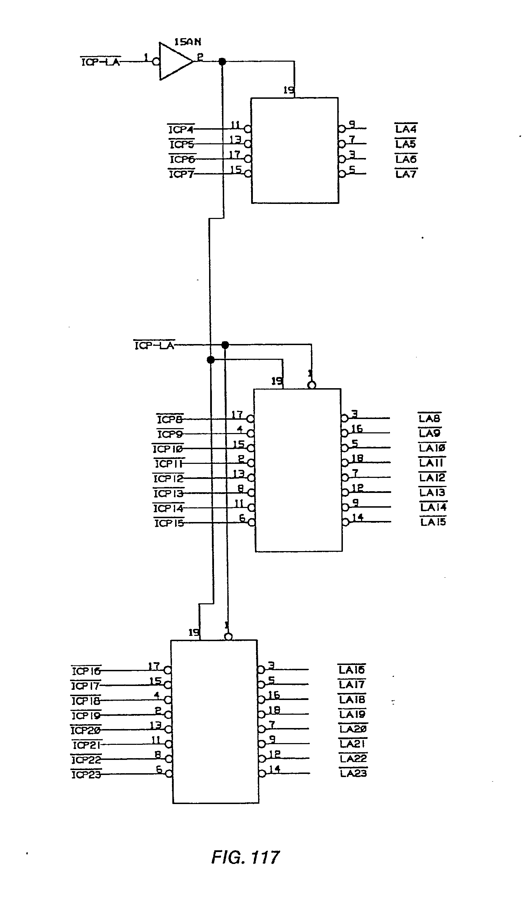

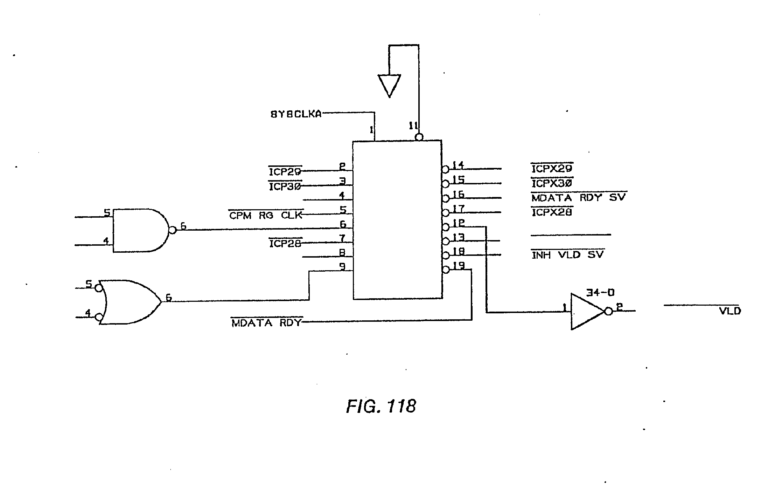

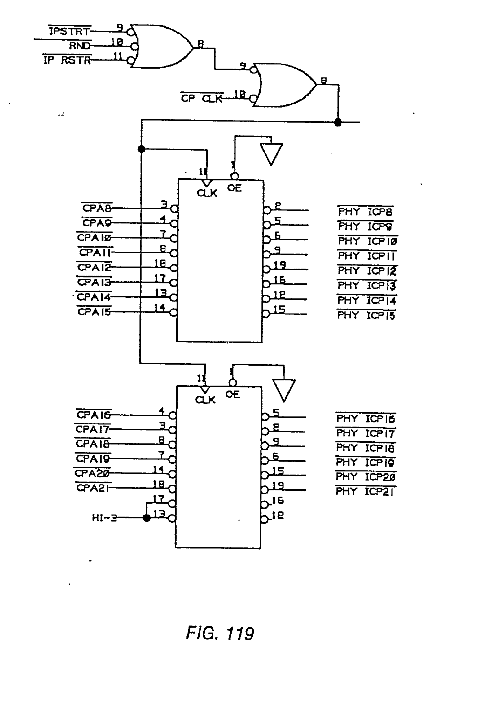

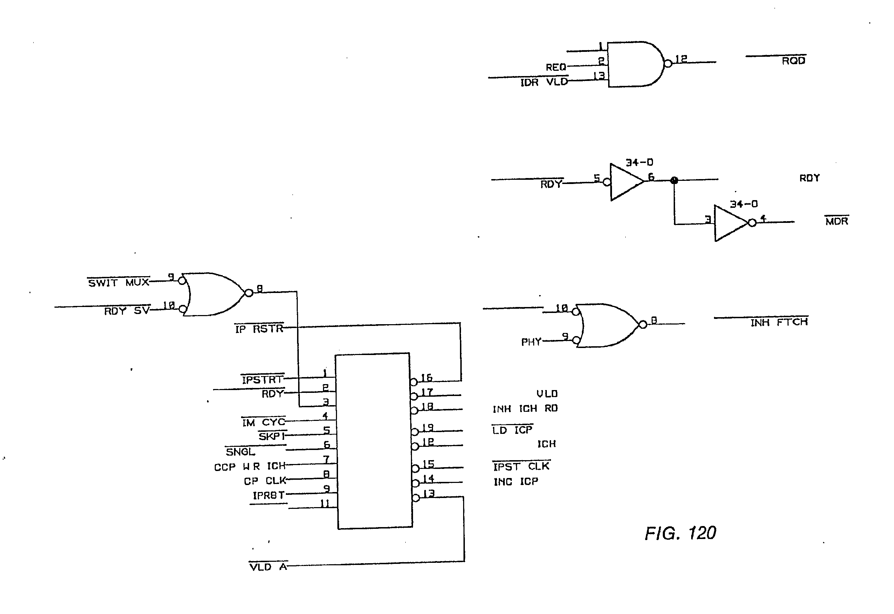

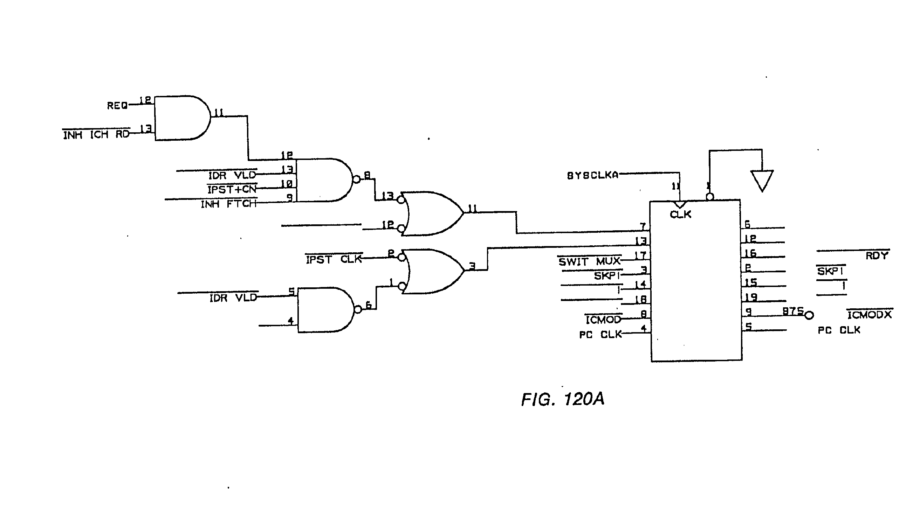

With reference to the ICACHE logic circuitry the ICACHE pointer (ICP) logic 150 and the ICP logical address driver logic of FIG. 106 is shown in more detail in FIGS. 116 and 117, respectively. The ICACHE pointer pre-fetch request control logic 151 and the physical ICP translation register 152 of FIG. 105 is depicted in more detail in FIGS. 118 and 119, respectively. Other general ICACHE control logic is further depicted in FIG. 120.

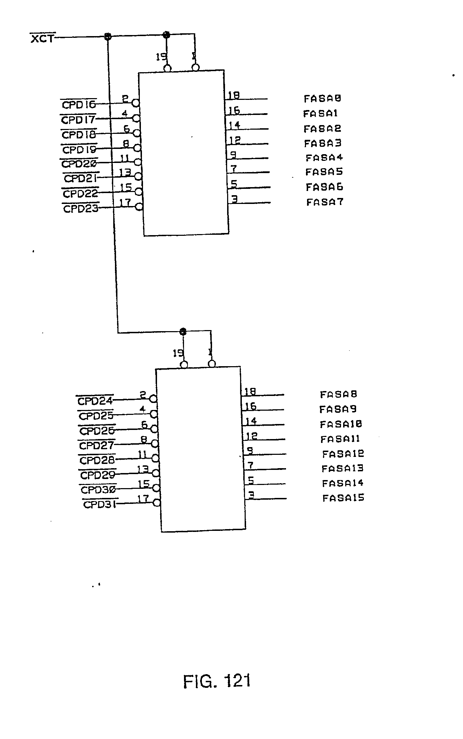

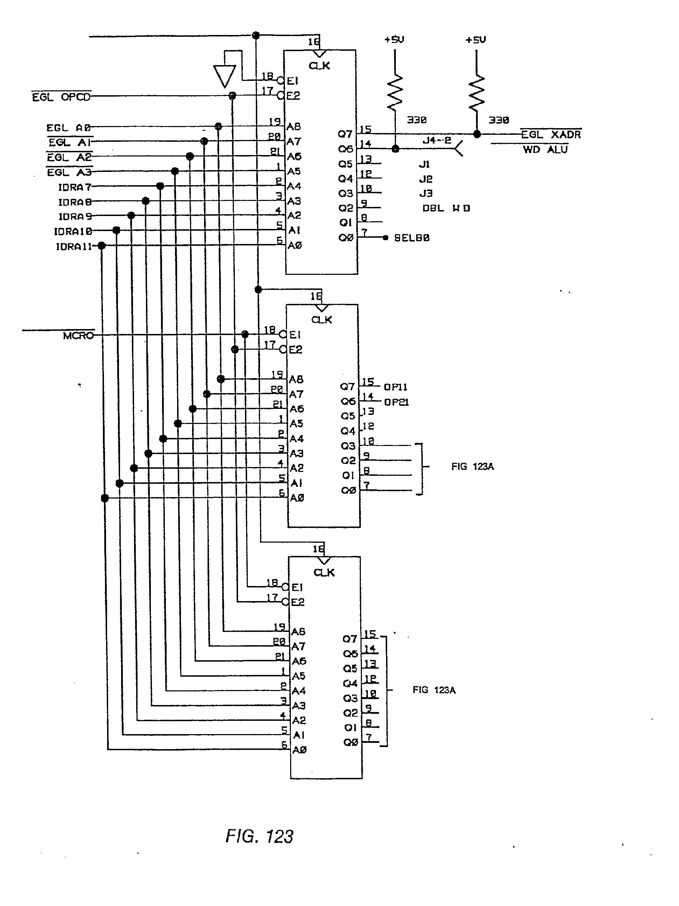

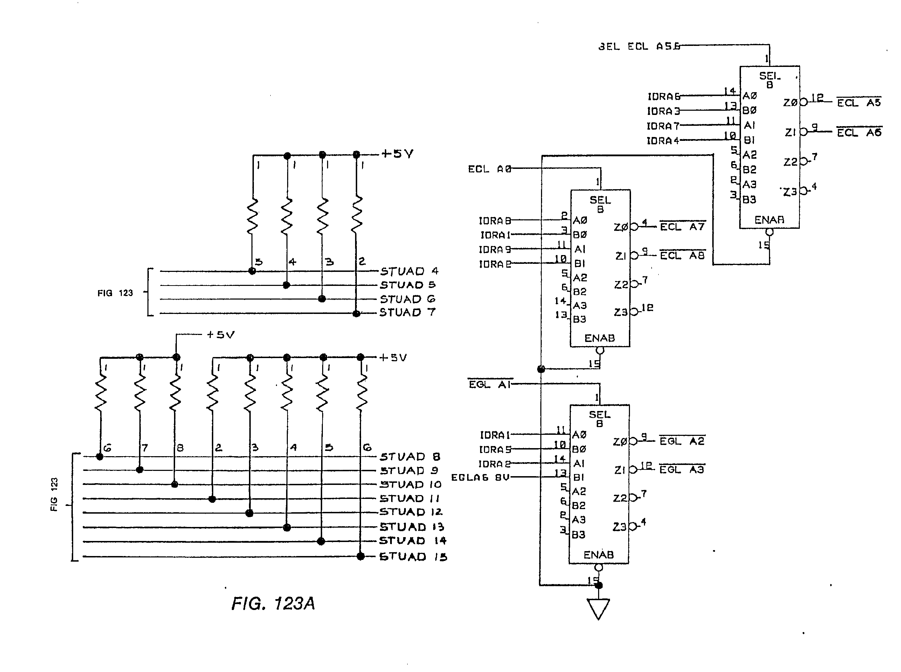

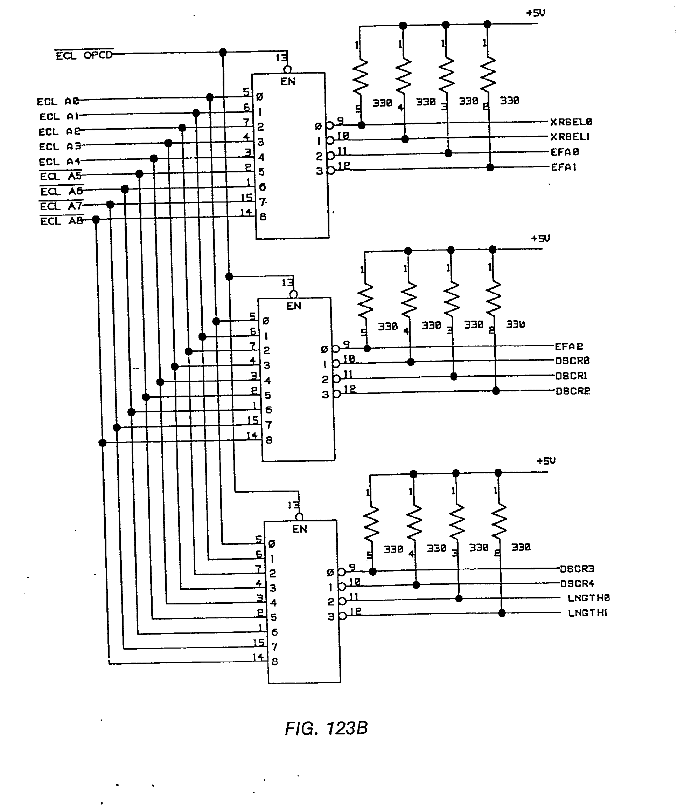

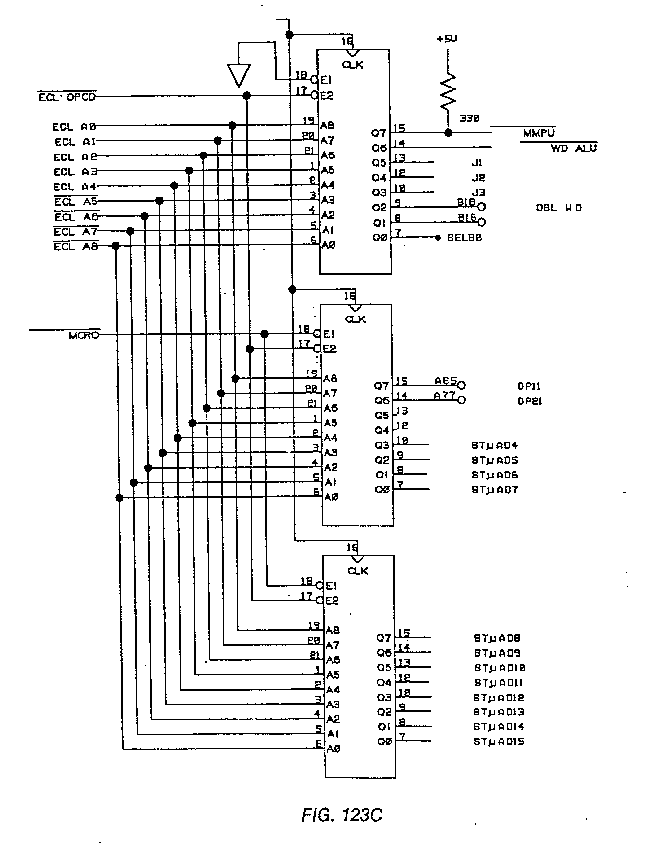

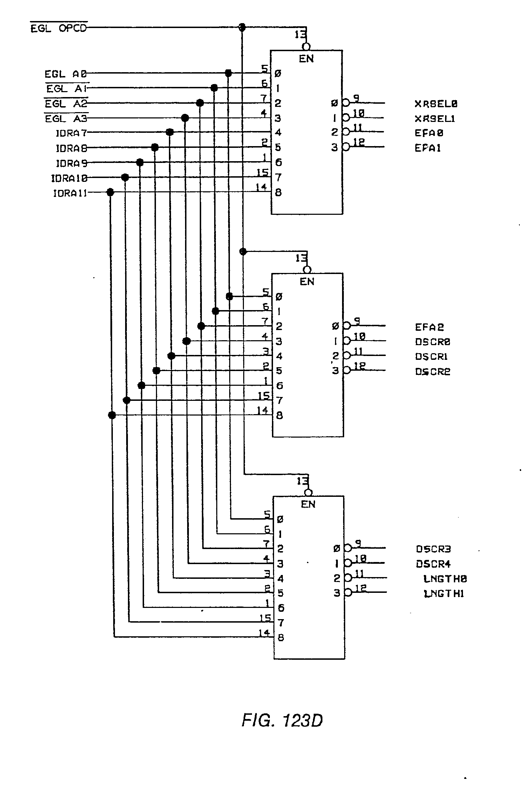

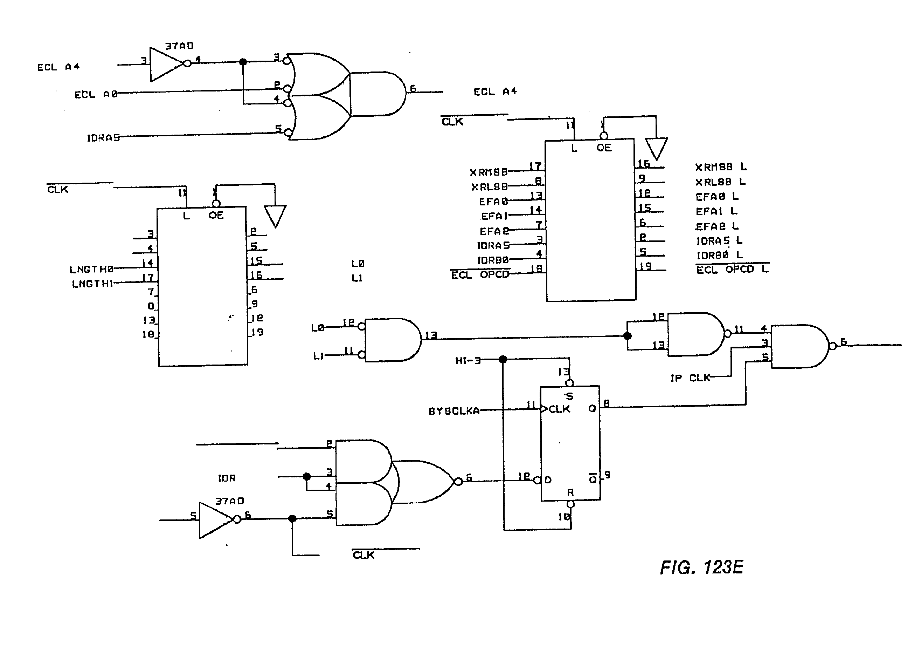

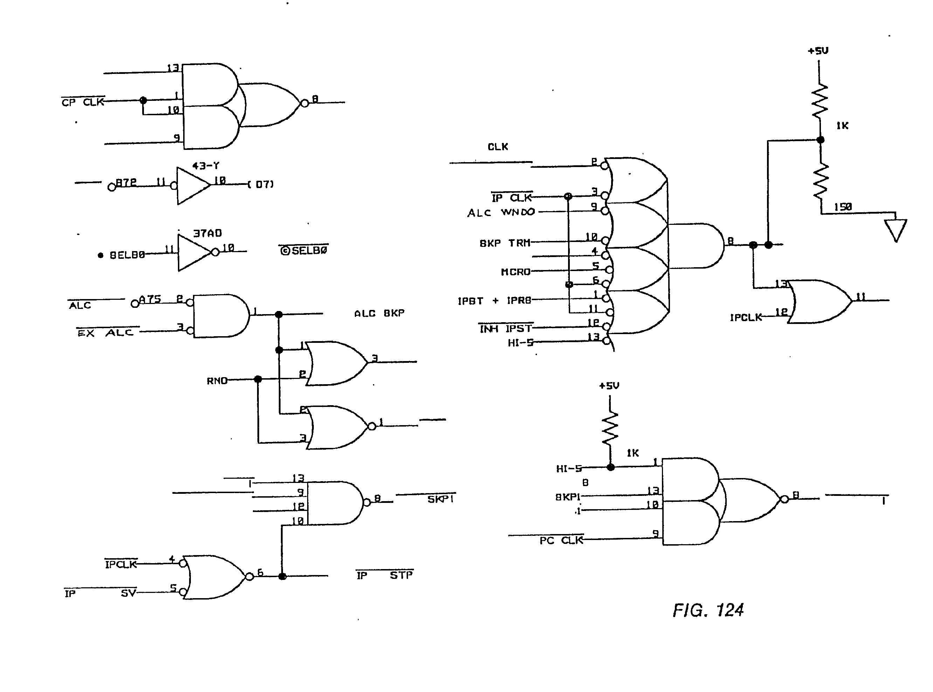

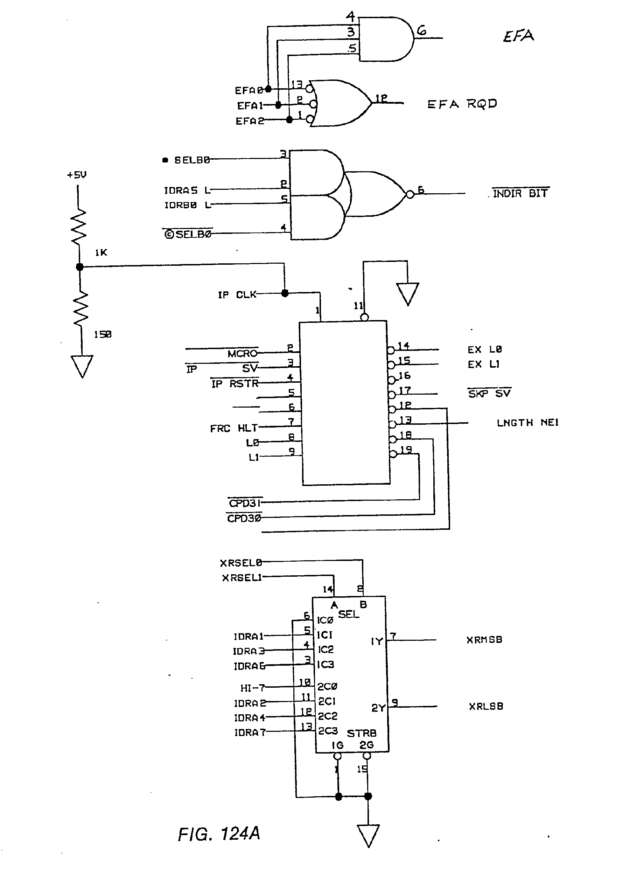

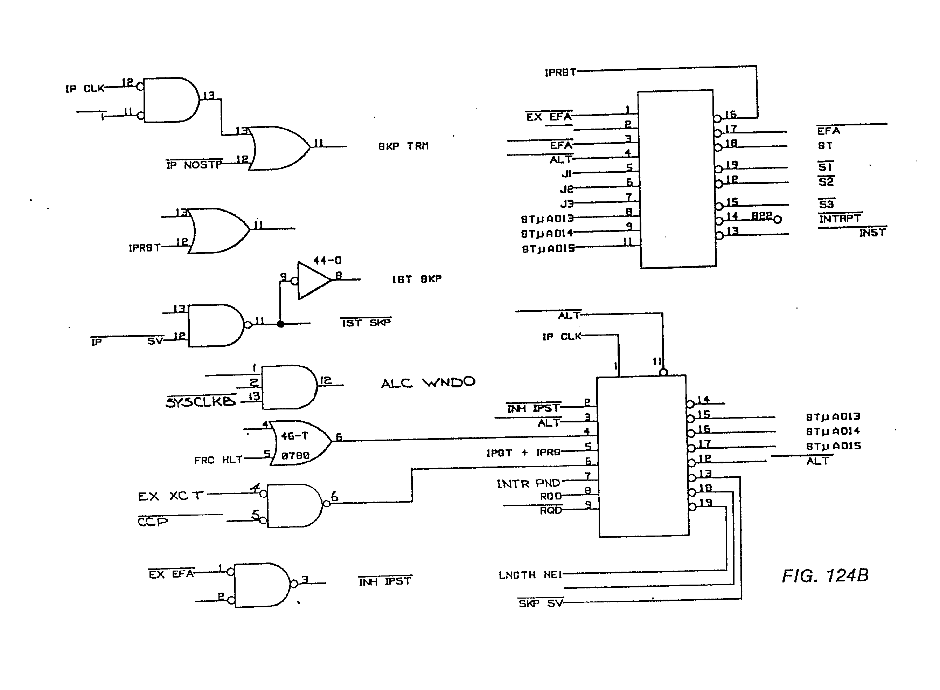

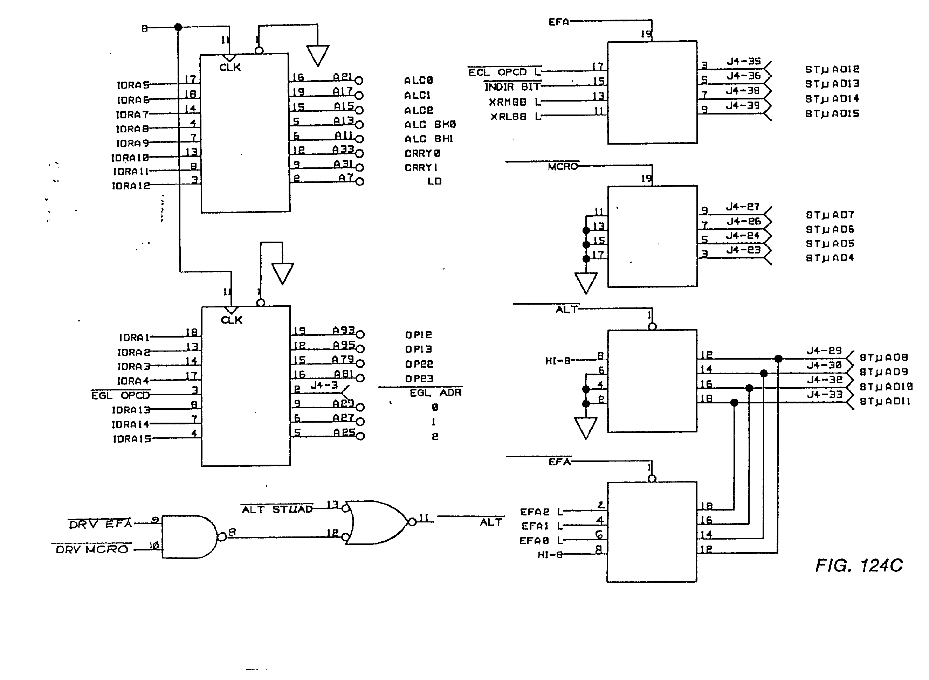

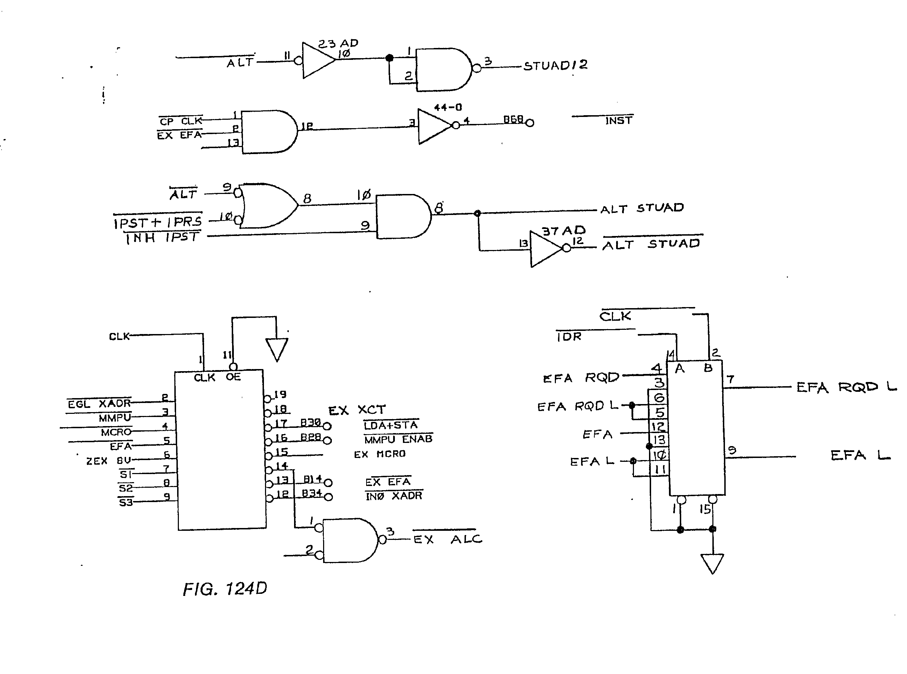

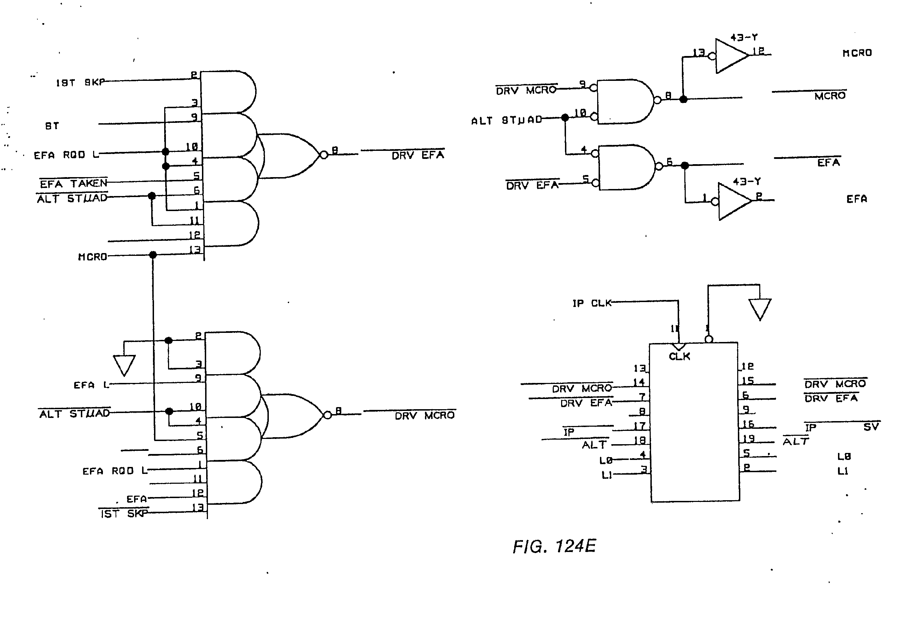

The driver logic which provides inputs FASA$\emptyset$-15 from the CPD bus to IDR A as shown in FIG. 103 is depicted in FIG. 121, while the instruction pre-decode logic and control therefor is shown in FIG. 122. Decode PROMS 140 and 141 which effectively include the ST$\mu$AD register 144, together with the IP status logic 138 are shown in FIG. 123. The starting microaddress control logic 145 is depicted in detail in FIG. 124.

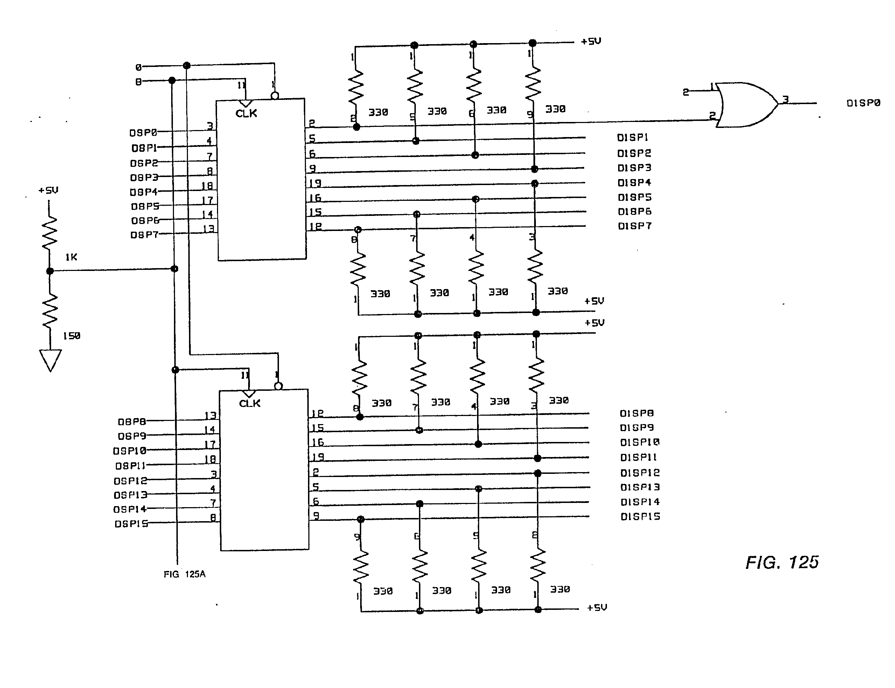

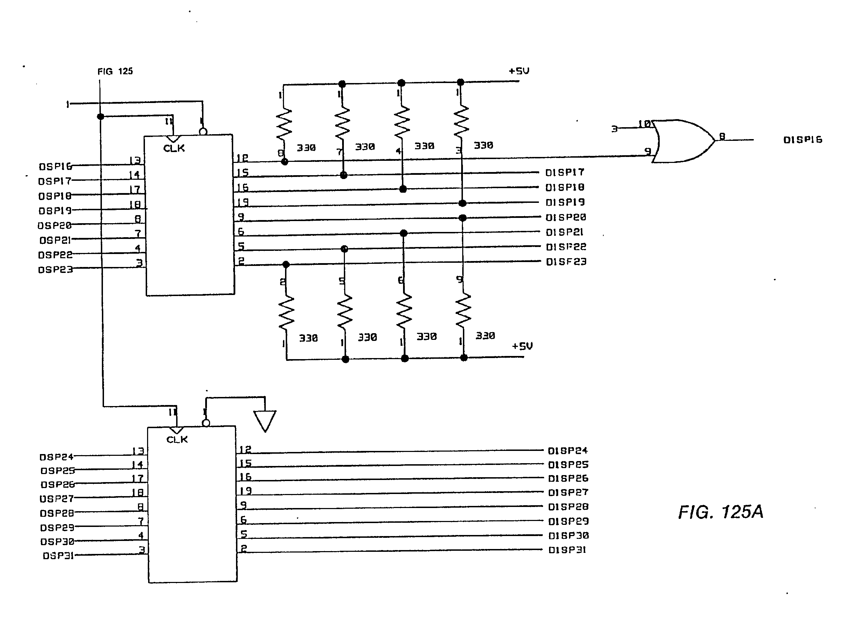

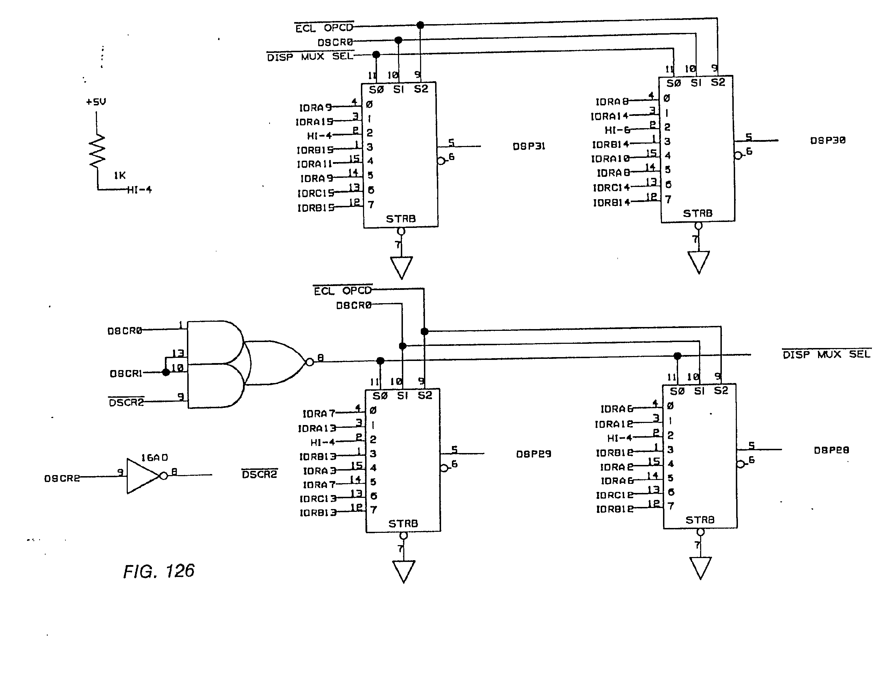

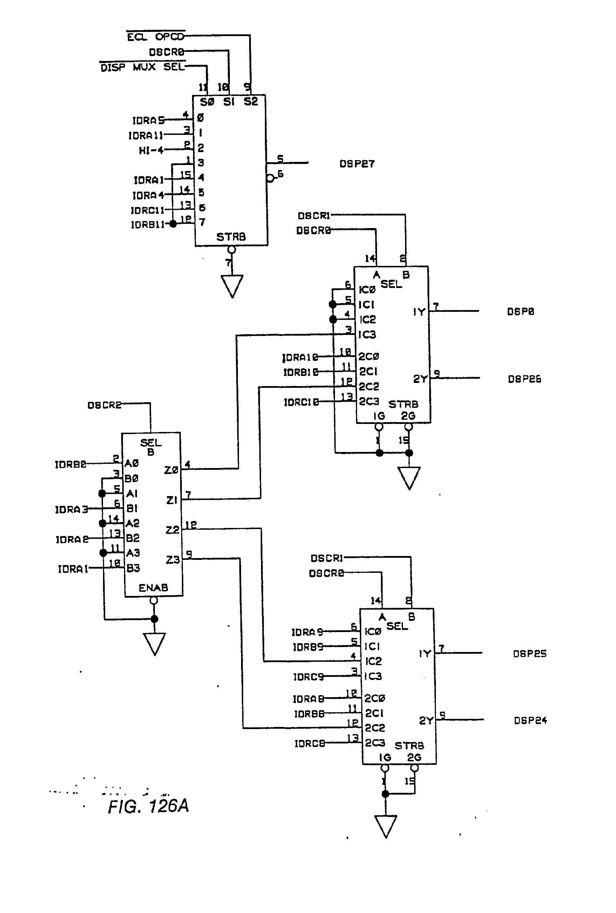

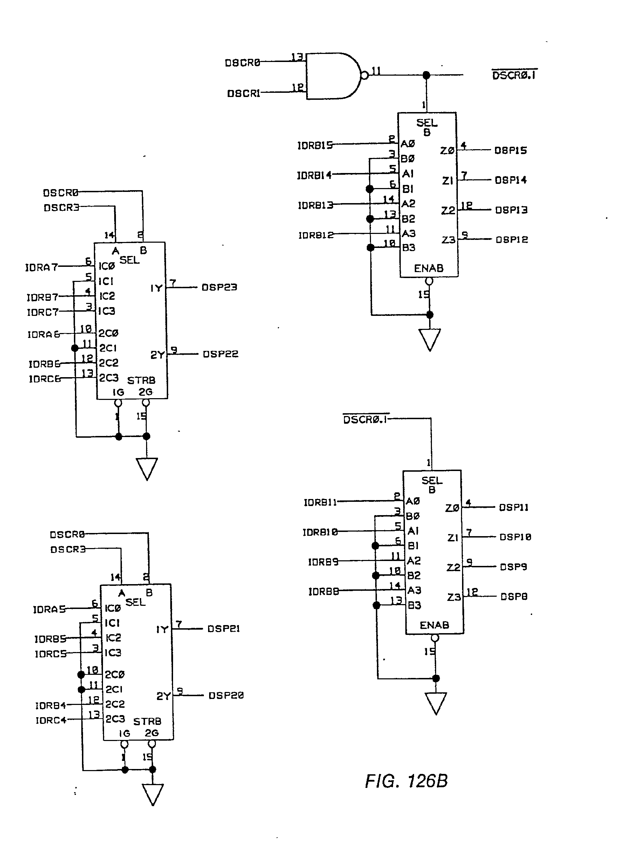

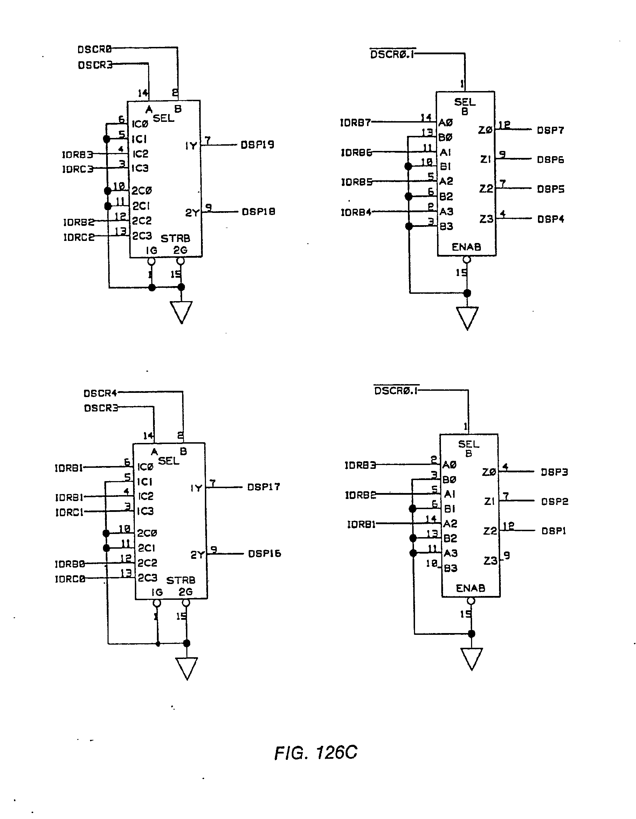

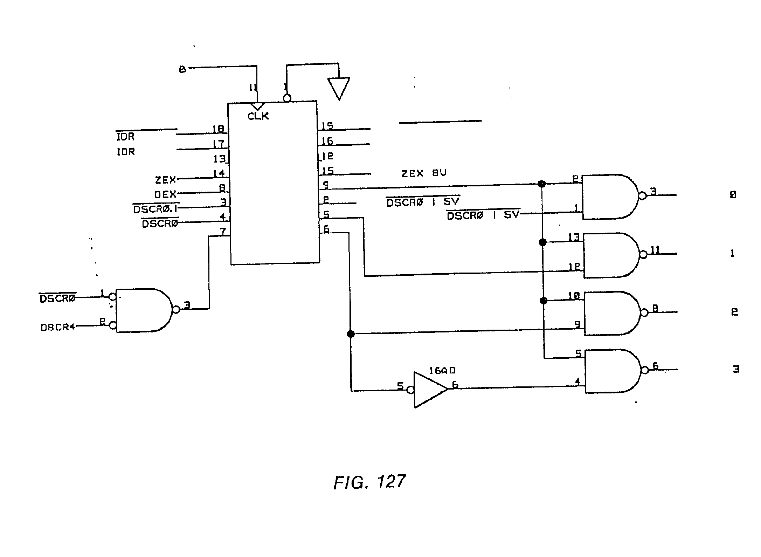

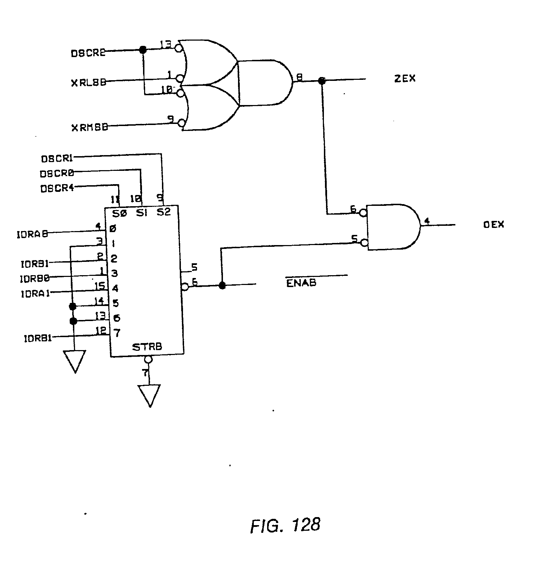

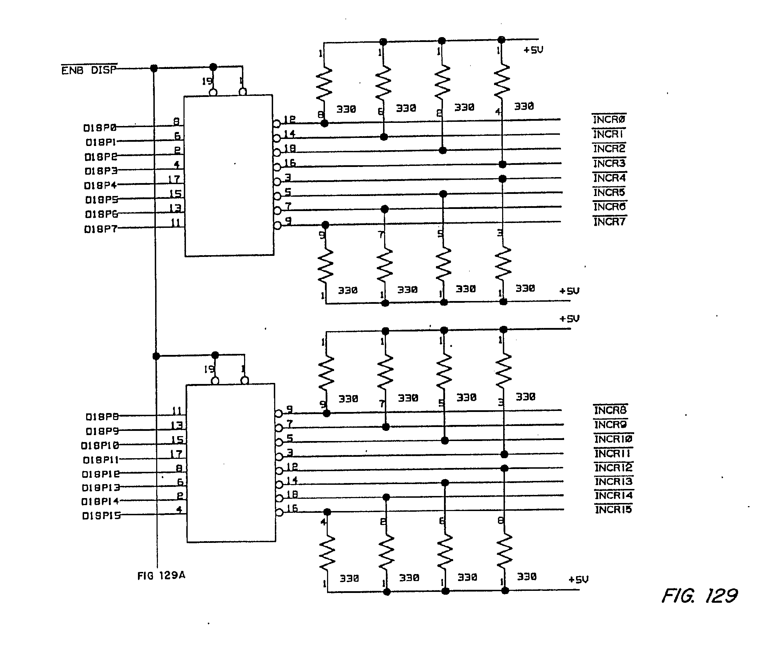

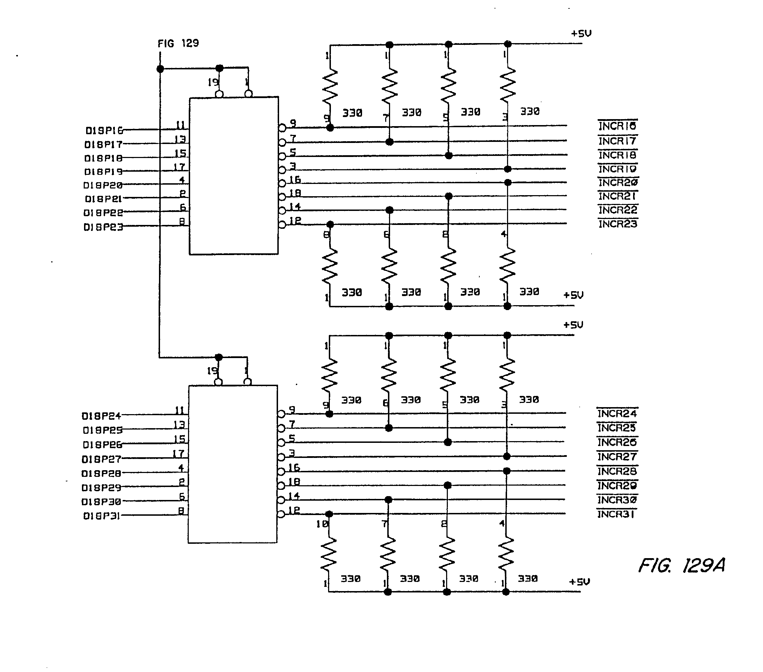

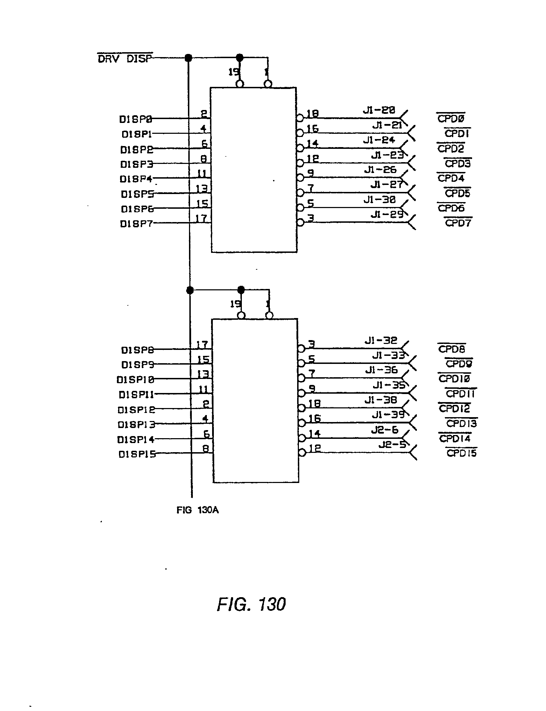

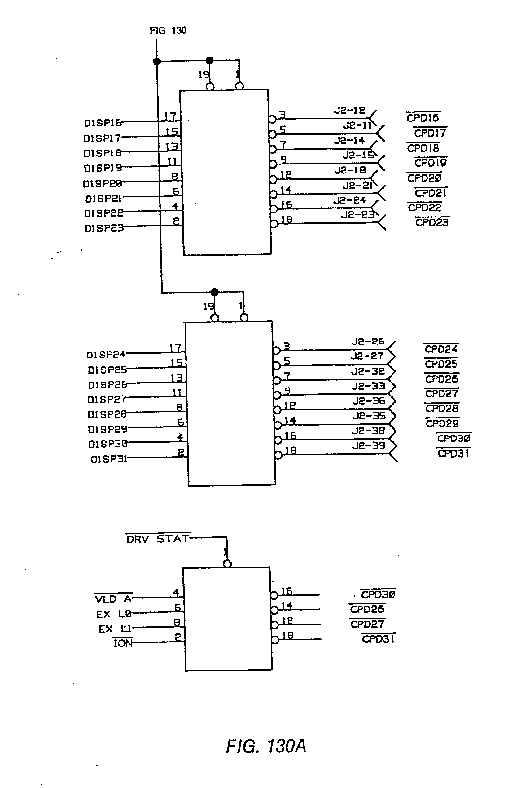

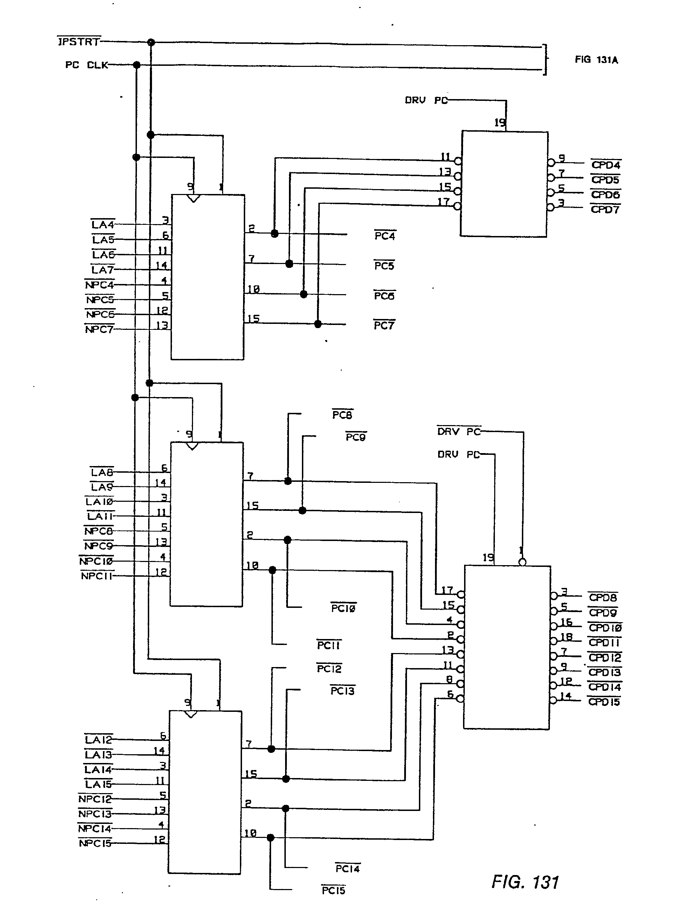

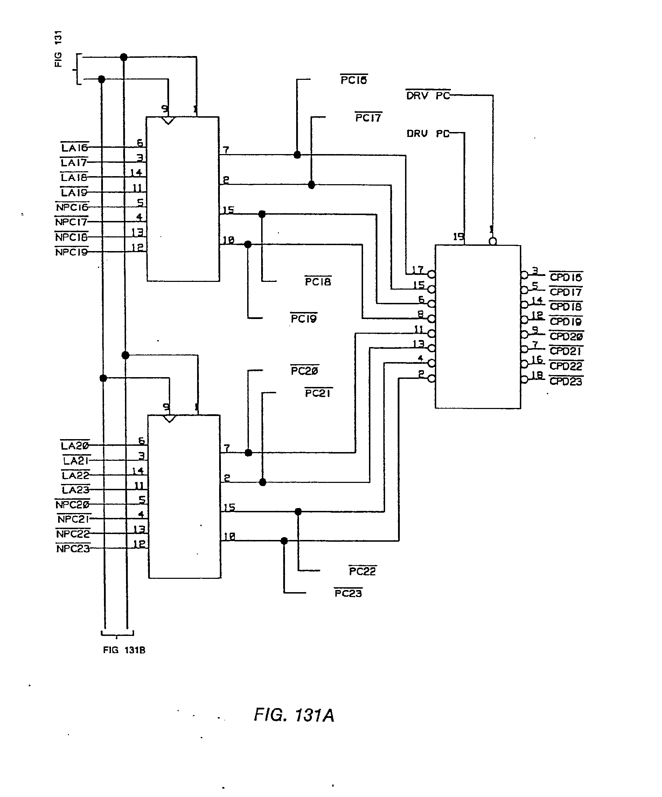

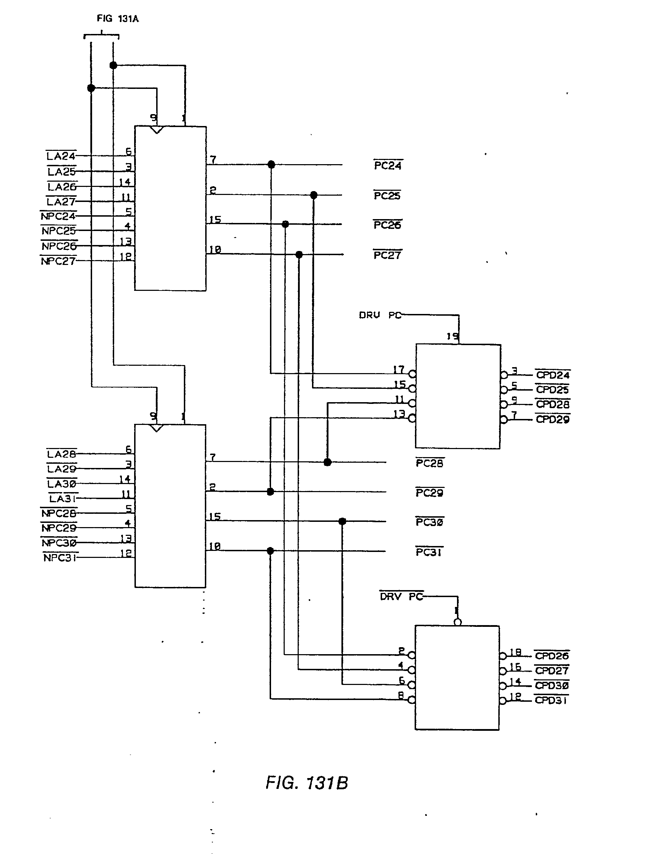

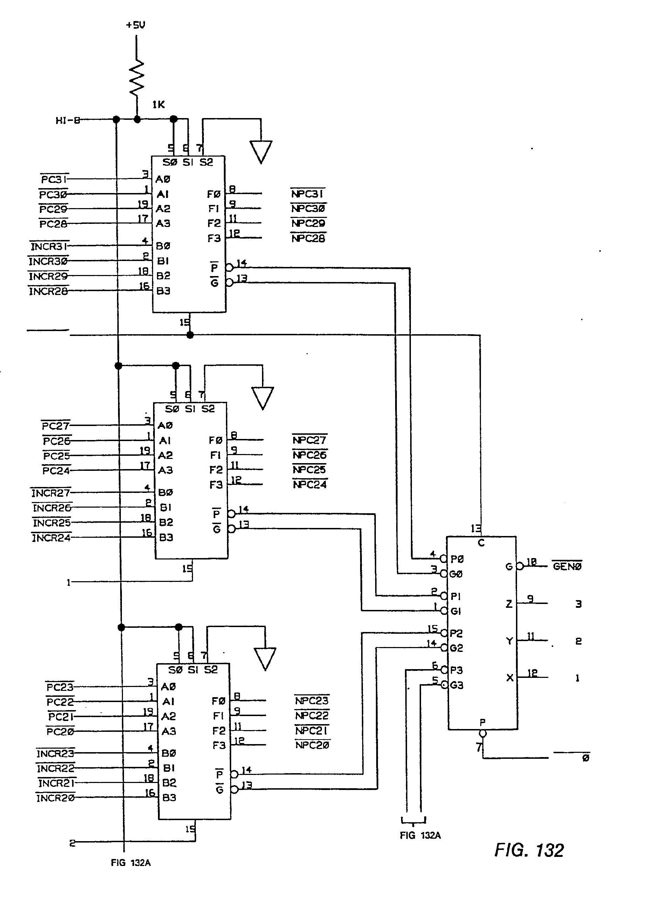

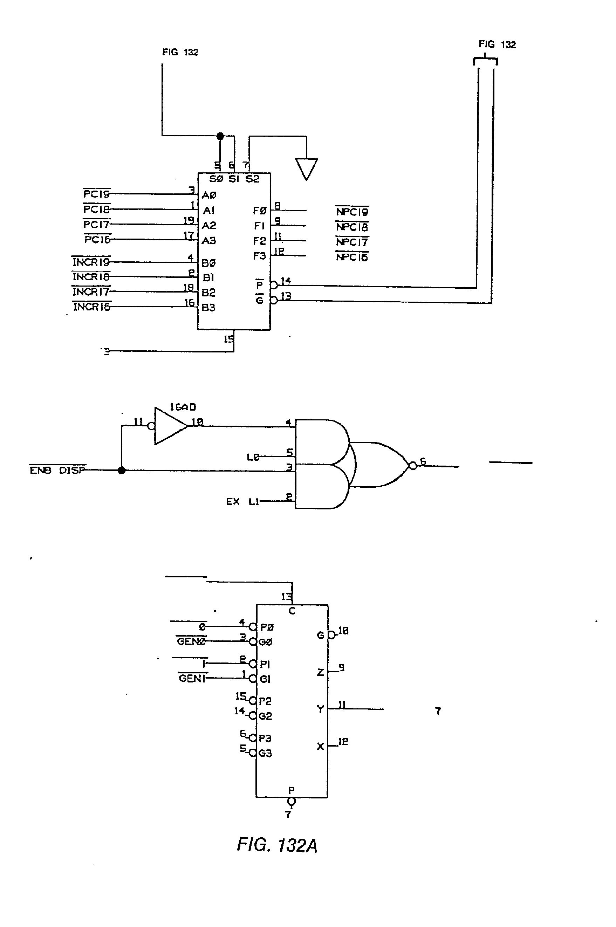

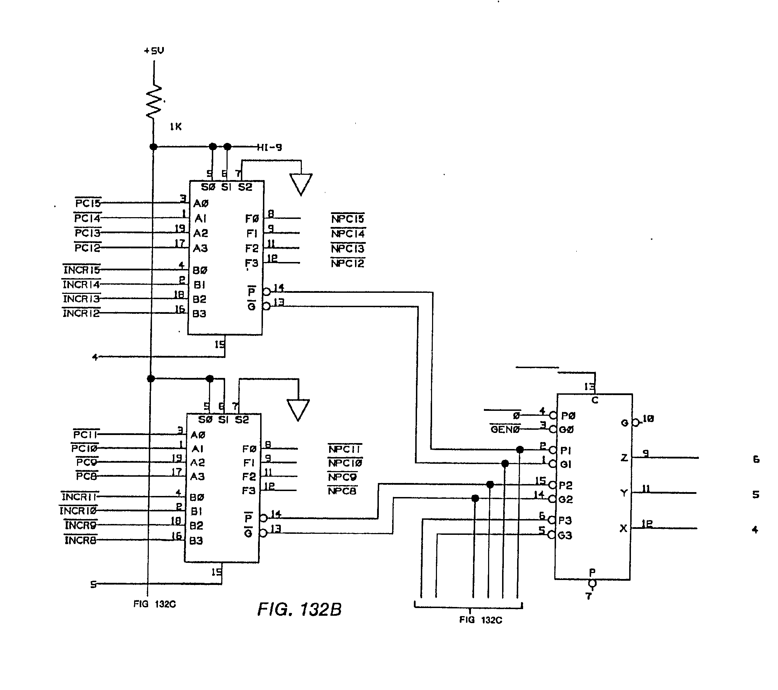

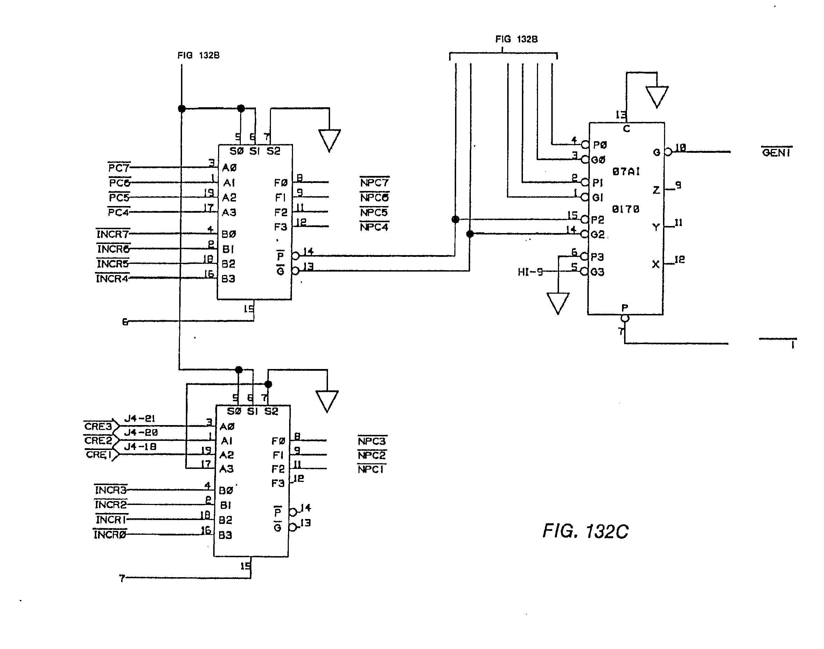

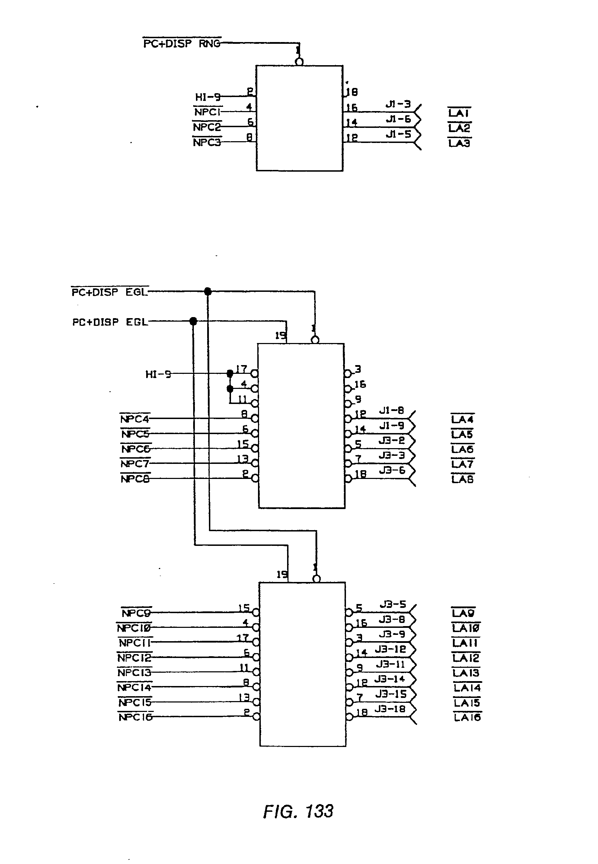

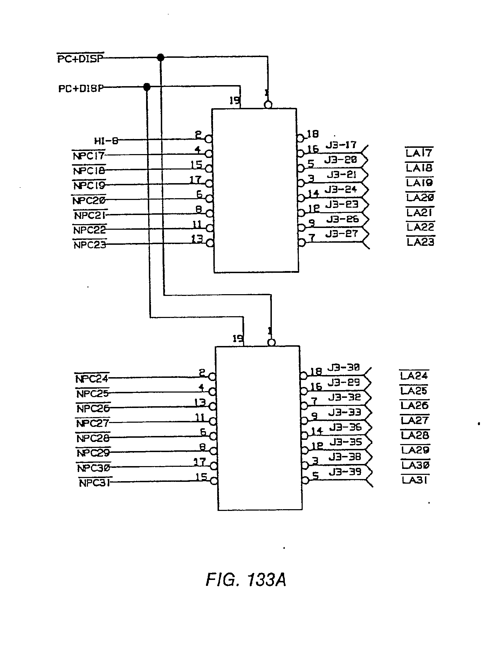

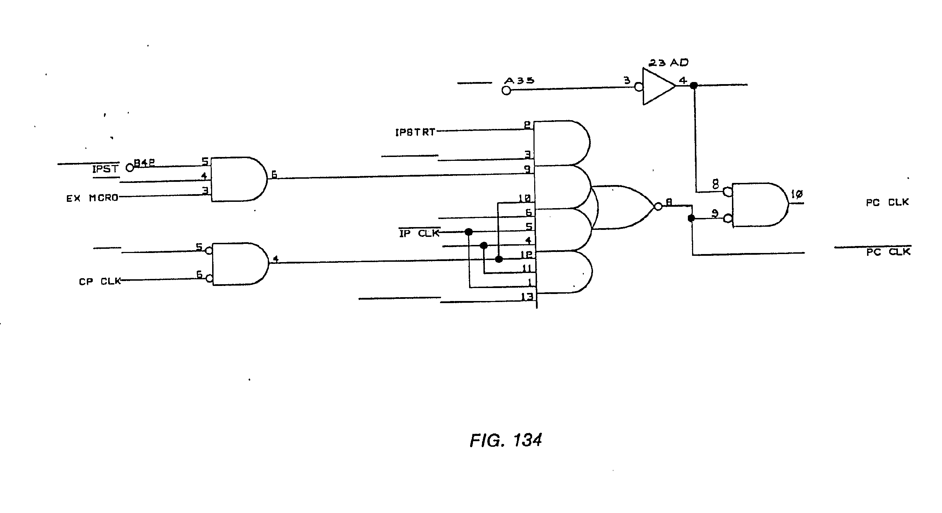

With reference to the displacement and program counter portion of the instruction processor, the displacement logic 146 is shown in FIG. 125, the displacement multiplexer associated therewith being depicted in FIG. 126. The sign extend (SEX) logic is shown in FIG. 127, while the zero/ones extend logic is shown in FIG. 128. FIG. 129 shows the displacement increment buffer of FIG. 104 while the displacement latch and drivers 153 are depicted in FIG. 130. FIG. 131 shows program counter register 147 and the CPD bus driver of FIG. 104, while adder 148 and the PC+DISP latch and driver units 149 are shown in FIGS. 132 and 133, respectively. Program counter clock logic is depicted in FIG. 134.

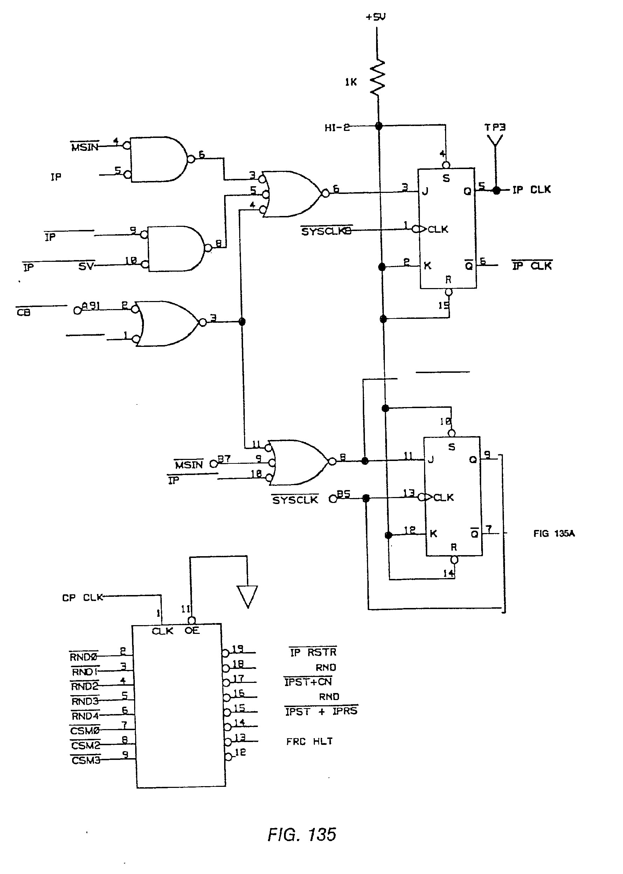

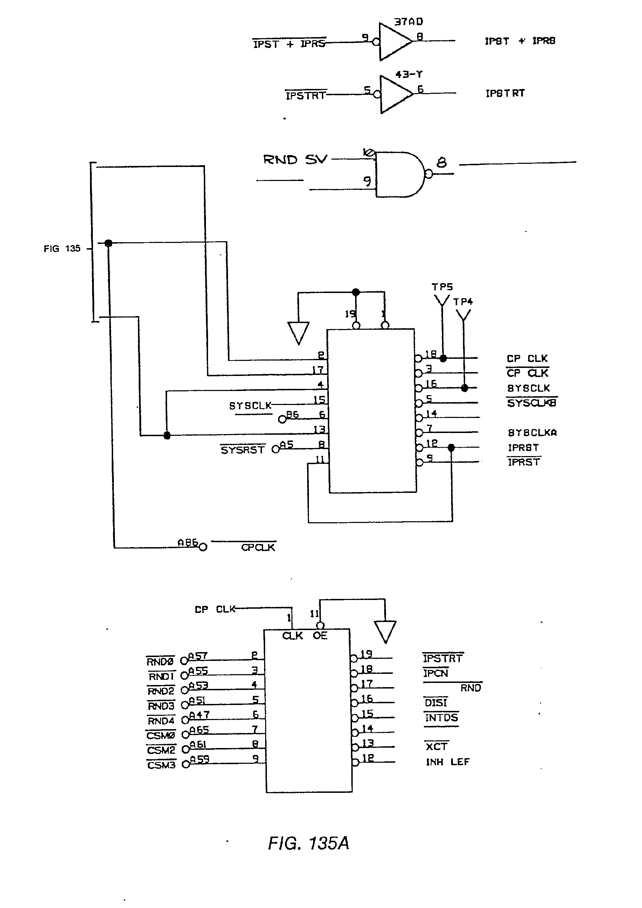

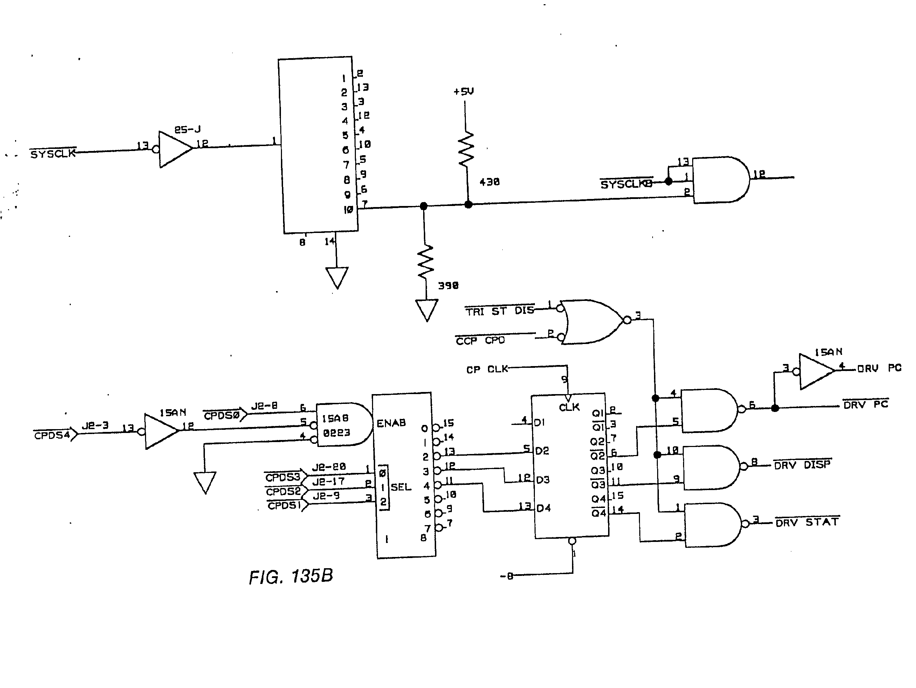

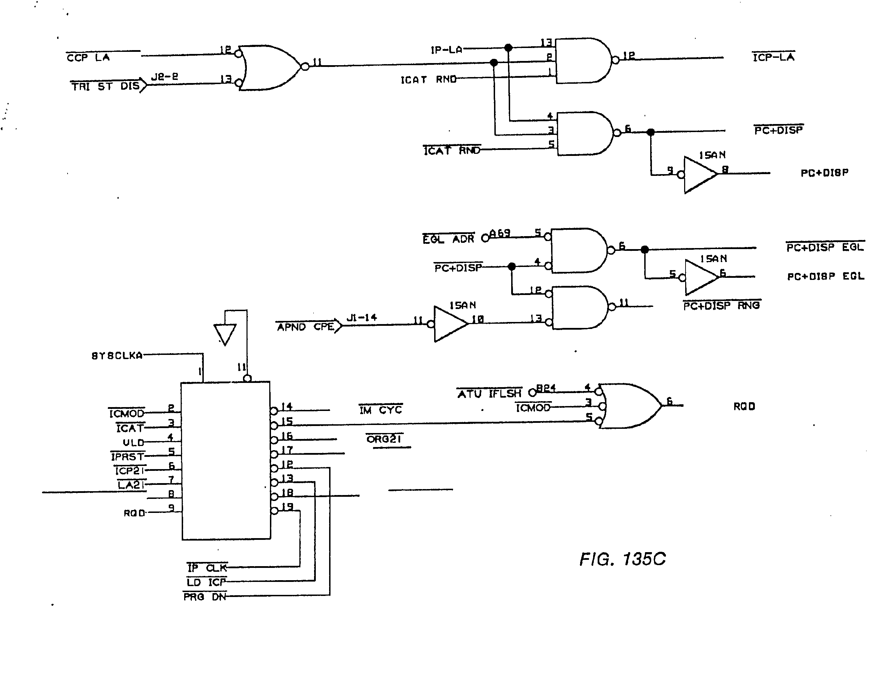

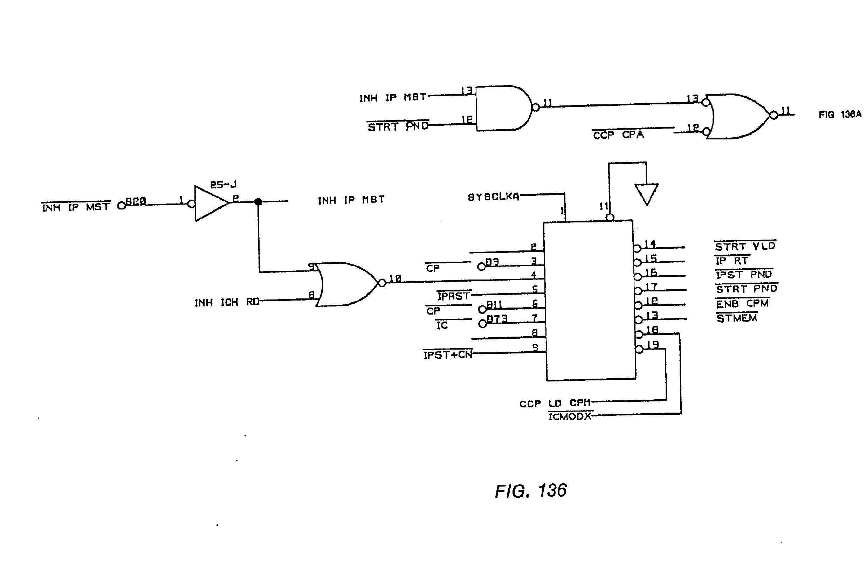

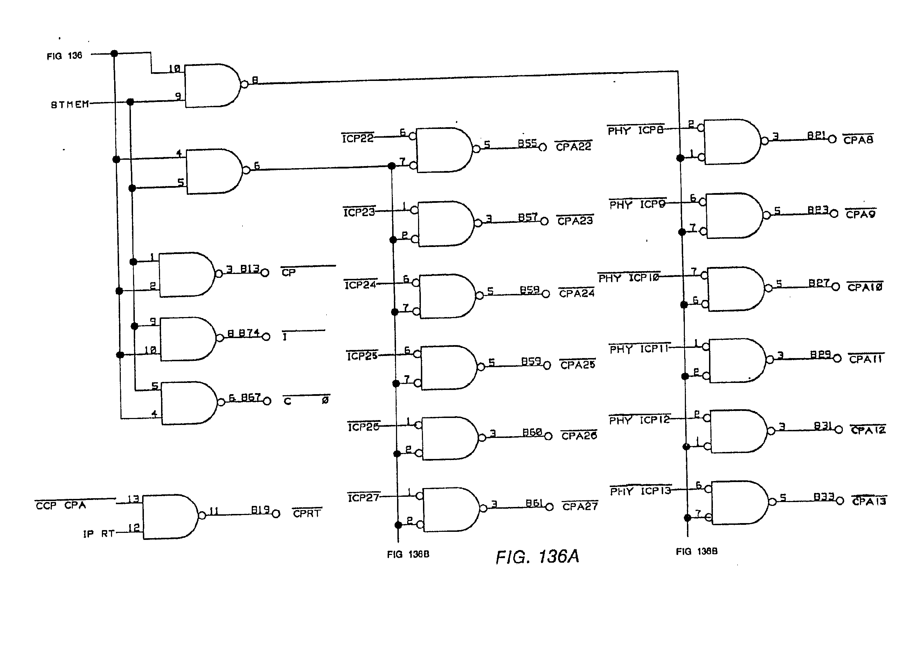

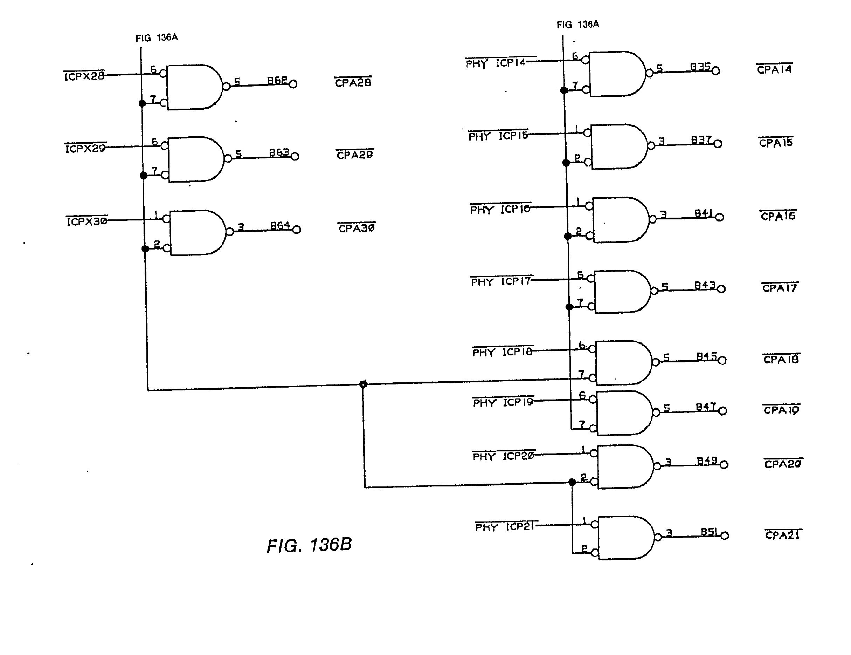

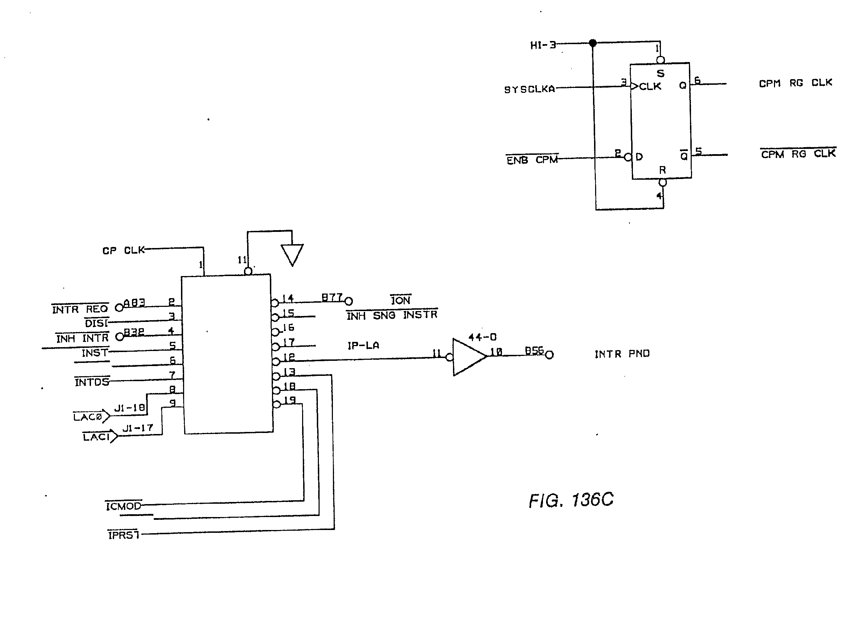

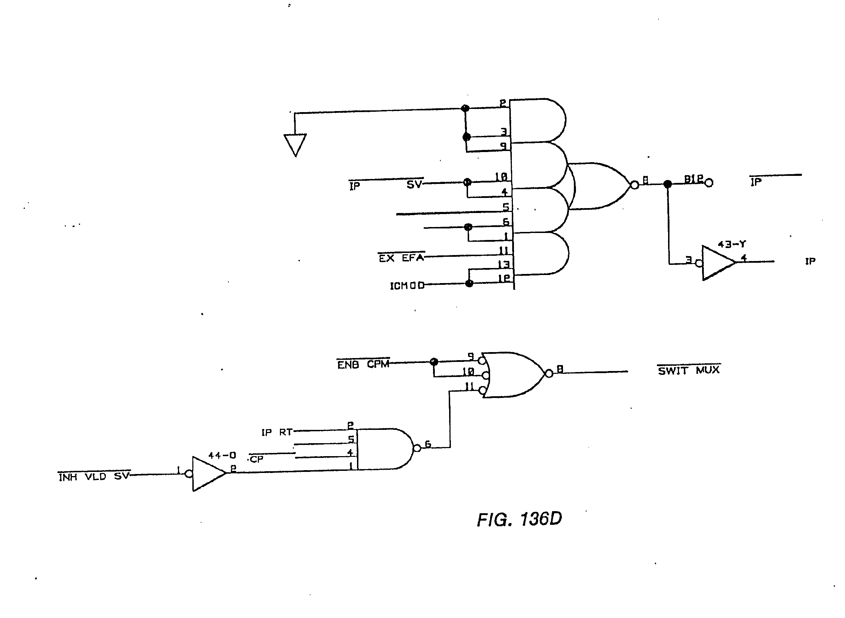

General instruction processor timing and control logic circuitry is shown in FIG. 135, while the system cache interface logic required for the instruction processor 12 to interface the system cache 17 is shown in FIG. 136.

MICRO-SEQUENCER

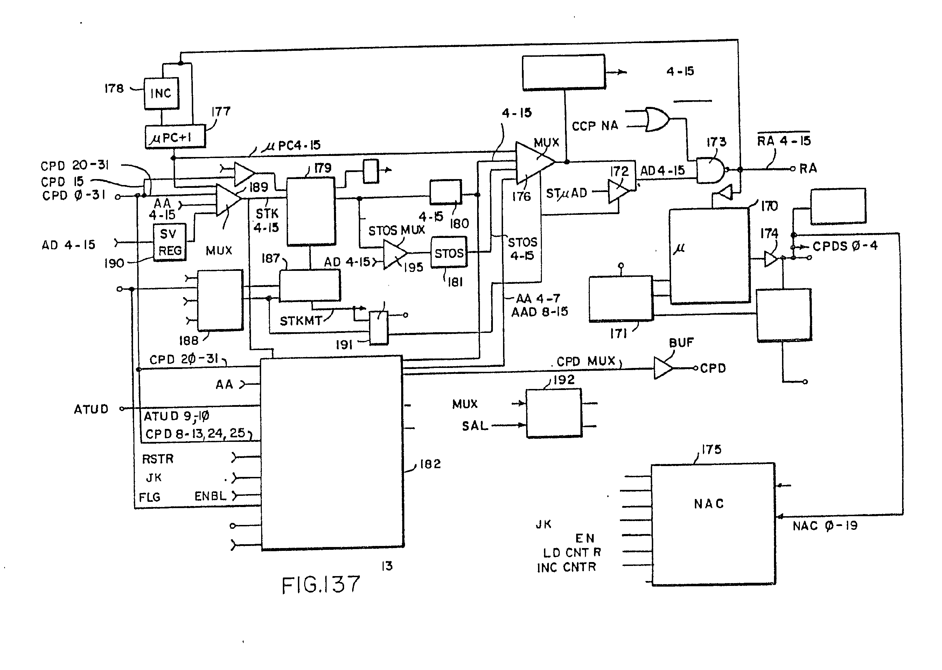

The primary function of the micro-sequencer unit is to generate micro-instructions from the starting micro-address which is supplied to a random-access-memory (RAM) storage unit on the micro-sequencer board. An overall block diagram of the micro-sequencer board for the particular embodiment of the system of the invention described herein is shown in FIGS. 137-138. As can be seen, the RAM storage unit is identified as the micro-control store unit 170 and is capable of storing up to 4-K 80 bit (79 bits plus 1 parity bit) micro instructions and is sufficient to store all of the micro-instructions required for the system being described. The micro-instructions can be appropriately loaded into store unit 170 initially (i.e., prior to the use of the system) through a suitable console via appropriate console interface logic unit 171. Once the entire micro-instruction set has been loaded into the micro-control store unit 170, the console interface logic need no longer be used, unless a micro-instruction is changed or additional micro-instructions are to be stored. Addresses for the micro-instructions are supplied at the RA input to the micro-sequencer board.

Once the entire micro-instruction set has been loaded into the micro-control store 170, the system is ready for performing the micro-instructions, as determined by the instruction processor unit 12 which, as discussed above, supplies the starting micro-address (STµAD) for a micro-instruction routine. As can be seen in FIG. 137, the starting micro-address (STµAD) is supplied via buffer 172 and AND circuitry 173 to the address input of the micro-control store 170. The starting micro-address selects the starting micro-instruction at the appropriate location in the micro-control store and supplies the control signals associated with said instruction via buffer 174 to the appropriate locations within the overall data processing system which are involved in the operations required for such instruction in a manner similar to that which would occur in supplying instructions to any data processing system.

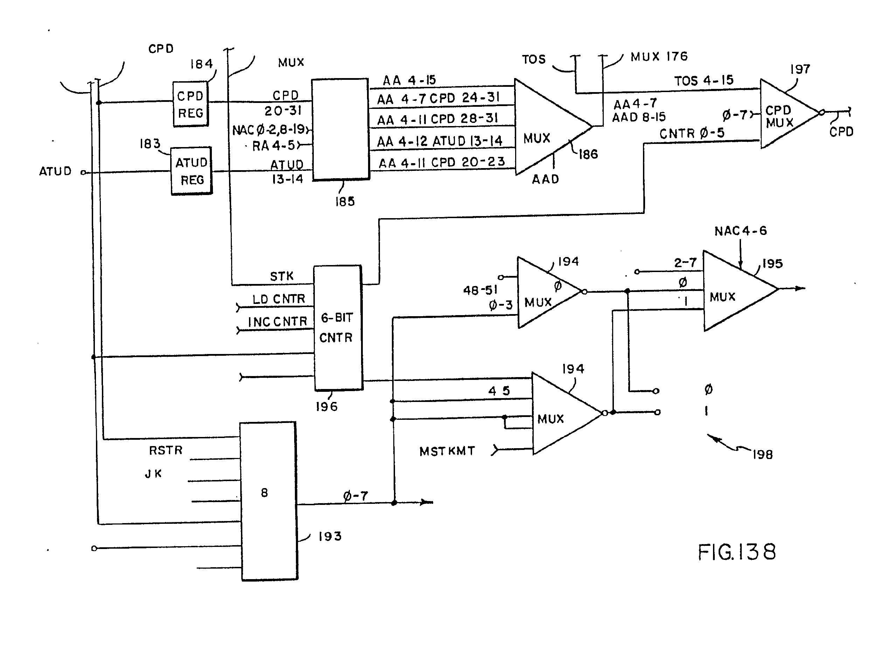

The micro-sequencer must then determine the next address required for the next sequential micro-instruction (if any) via appropriate decoding of the "next address control" field (NAC∅-19) of the current micro-instruction. This field in the particular embodiment described is a 20-bit field of the 80-bit micro-instruction obtained from the micro-control store. The NAC field is suitably decoded by the NAC decode logic 175 to provide the necessary control signals (some of which are identified) required to obtain the next micro-address. The decoding process can in one mode be a conditional one, i.e., wherein the NAC field decoding is conditioned upon one of a plurality of possible conditions which must be appropriately tested to determine which, if any, condition is TRUE. In the particular embodiment described, for example, there are eight test signals (TEST ∅-7) each test representing 8 conditions, for a total of 64 conditions which can be tested. Alternatively, in another mode the selection of the next micro-address may not be conditioned on any of the 64 conditions involved. After appropriate testing the address is selected from one of four sources, as determined by the decoding and condition test logic 182, for supply to the micro-control store 170 via ADDR multiplexer unit 176. Decoding and condition test logic 182 is shown in further detail in FIG. 138.

Thus, the address multiplexer output can be selected from the next sequential program counter address($\mu$PC 4-15) which represents the previous micro-address incremented by one as obtained from the($\mu$PC +1) unit 177 and increment logic 178 which accepts the previous micro-instruction (RA 4-15), increments it by one and supplies it to an input of the address multiplexer unit 176.

Alternatively, the next micro-address may be obtained from a temporary storage of a plurality of micro-addresses for a particular micro-code routine which addresses have been stored in a stack RAM storage unit 179, the next address being supplied directly as the address at the top of the stack (TOS 4-15) via a top of the stack (TOS) register 180. Alternatively, the address at the top of the stack may already have been accessed (popped) from the stack and saved in a previous operation in the Save TOS register 181 (particularly used in restoring the overall context after an interrupt process) so that the next micro-instruction address may alternatively be obtained from the top of the stack data (STOS 4-15) which has previously been saved in the STOS register.

A further source of the next micro-address for the address multiplexer may be an absolute address from decode and condition test logic 182, shown more specifically in FIG.138, which address is specified by the micro-instruction word itself or an absolute address which may be identified by bits from another source external to the micro-sequencer board which other sources dispatch such address to the micro-sequencer, i.e., from the address translation unit (ATU) or from the arithmetic logic unit (ALU) selected bits of which can be suitably concatenated with absolute address bits from the current micro-instruction to form the next micro-address. As see in FIG. 138, the latter bits may be received via suitable registers 183 and 184 (see FIG. 138) from the ATU at the ATU dispatch (ATUD) register 183 or from the ALU on the CPD bus at the CPD register 184. Thus, as seen best in FIG. 138, such bits (ATUD 13-14 and CPD 20-31) can be concatenated with bits from the micro-instruction itself, identified by NAC bits $\emptyset$-2, 8-19, to form five possible micro-addresses by concatenation logic unit 185. One of five concatenated addresses is capable of being selected at Dispatch Multiplexer unit 186 and thereupon supplied to Address Multiplexer 176.

In order to obtain the desired stack data for the next possible micro-address (TOS 4-15 or STOS 4-15) suitable stack pointer logic 187 and stack control logic 188 are used with the stack RAM unit 179. The stack addresses which are supplied via stack pointer logic 187 determine the locations of the sequence of micro-instruction addresses which are required for micro-code routines, which sequence has been previously supplied to the stack via stack multiplexer unit 189, the inputs of which are obtained either as absolute addresses (AA 4-15) from the micro-instruction which is currently being processed or as addresses obtained from the micro-program counter 177 ($\mu$PC + 1), from a dispatched ALU source (CPD 20-31) via the CPD bus, or from an address which has been previously saved (AD 4-15) in save register 190.

When a micro-code routine which has been stored in the stack RAM is completed, the stack is then empty and a STKMT signal from the stack pointer logic 187 produces an appropriate IPOP OUT signal at the output of IPOP detection and latch logic 191 for supply to the instruction processor to indicate that a new starting micro-address (ST$\mu$AD) is required to provide the next micro-instruction or sequence thereof.

As a simple example of the operation of the micro-sequencer to illustrate the same, in a conditional jump instruction (CJMP), let it be assumed that the address of the next micro-instruction is to be supplied either as an absolute address from the dispatch multiplexer to which the micro-program must jump if the condition is TRUE or as the next sequential program address from the micro-program counter ( PC+1) if the condition is not TRUE. For example, if the present micro-address is at a selected location of the $\mu$-control store 170 (e.g. location "100") the next micro-address is to be either the location signified by the next sequential program counter address (e.g., location "101") if the condition is not TRUE, or a jump to specified absolute address (e.g., at location "500") if the condition is TRUE. In order for the micro-sequencer to determine which of the two locations is be be selected, i.e., the absolute address (AAD 4-15) or the micro-program counter address ($\mu$PC 4-15), the conditon must be tested to determine if it is "TRUE".

If testing of the condition provides a TRUE at the condition out logic 192, the absolute address (AAD 4-15) will be selected as the correct address from address multiplexer 176, while if the condition is not TRUE, the next micro-program counter address (µPC 4-15) will be selected. The testing logic 198 is shown in FIG. 138.

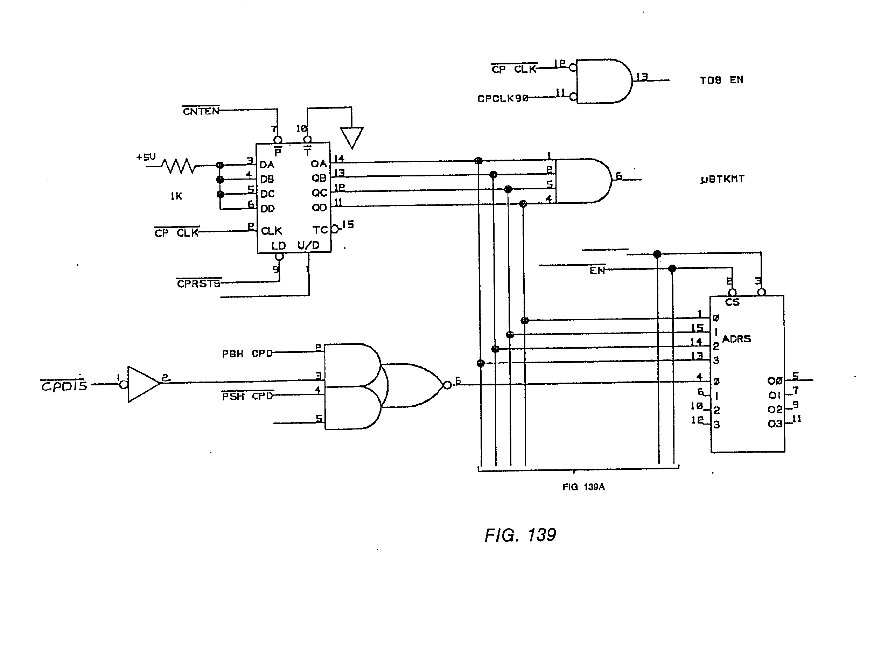

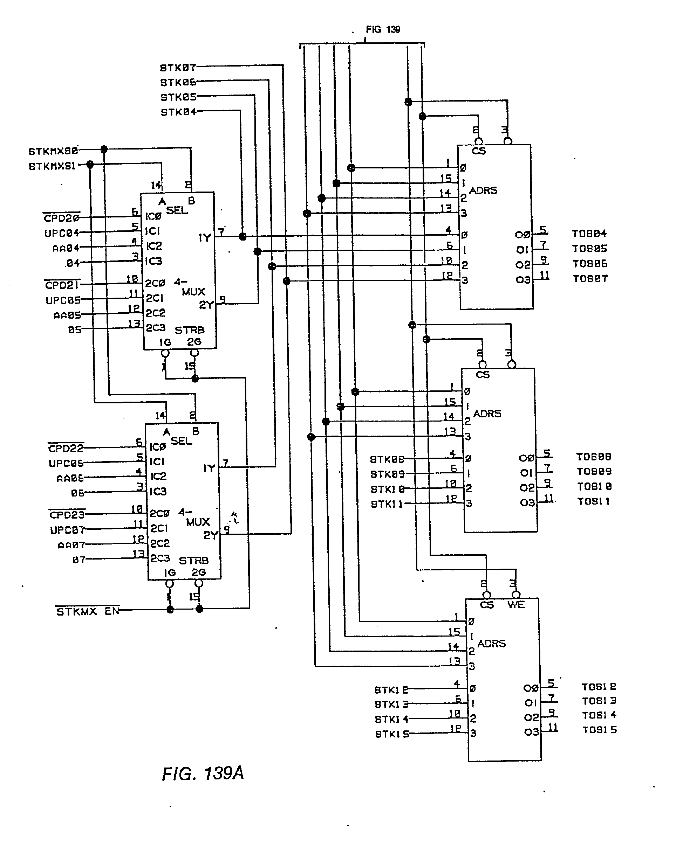

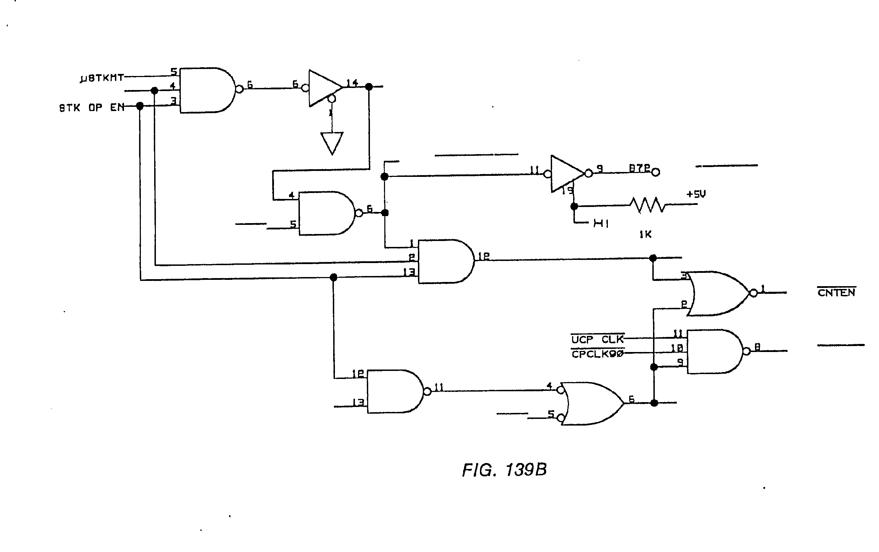

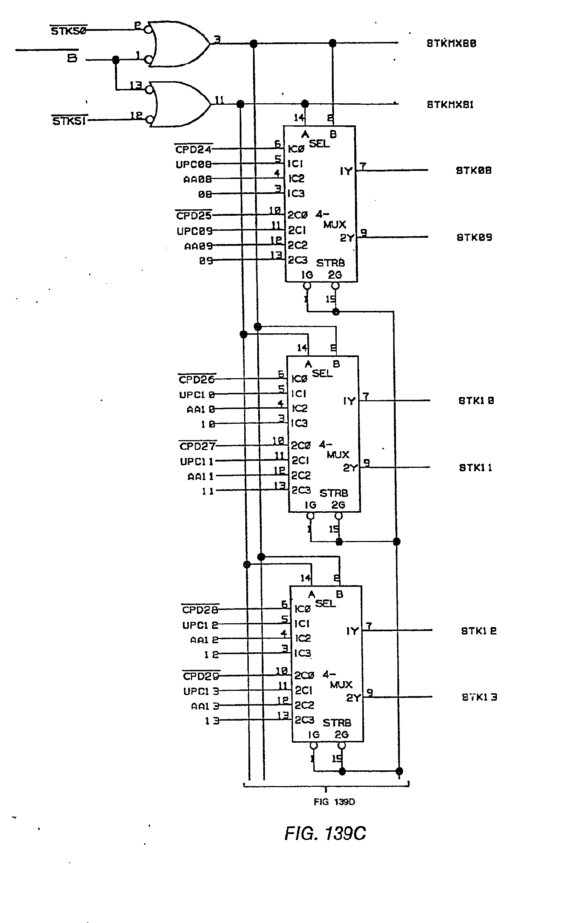

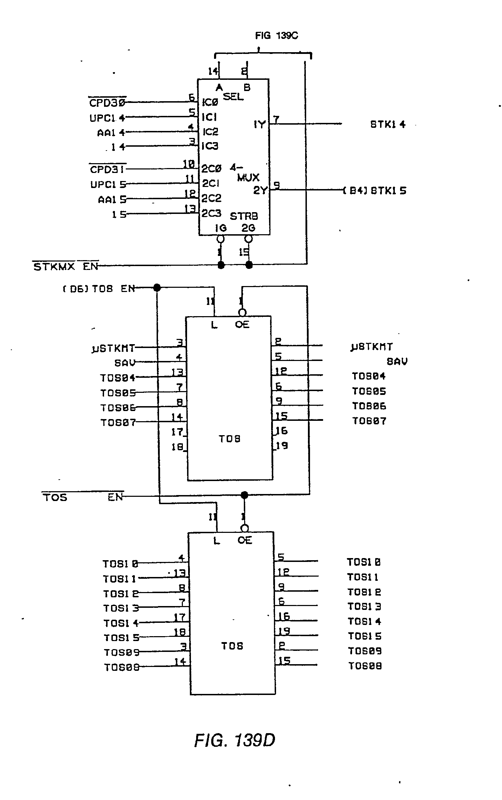

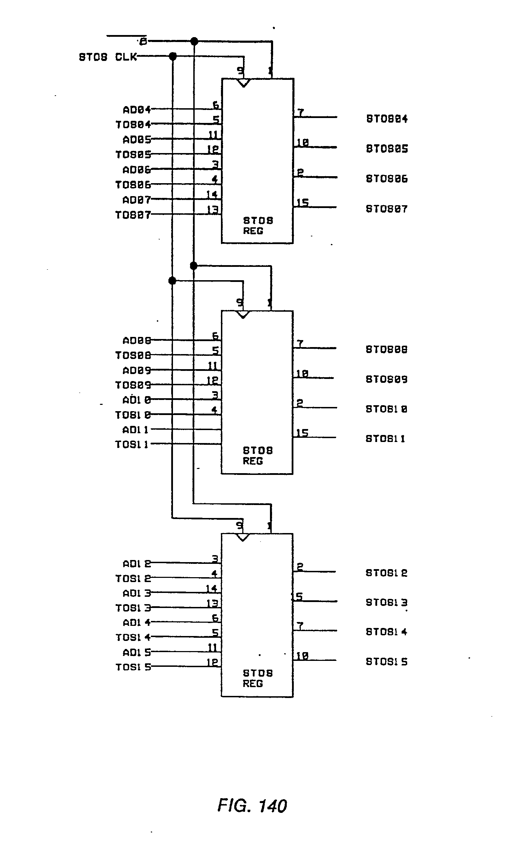

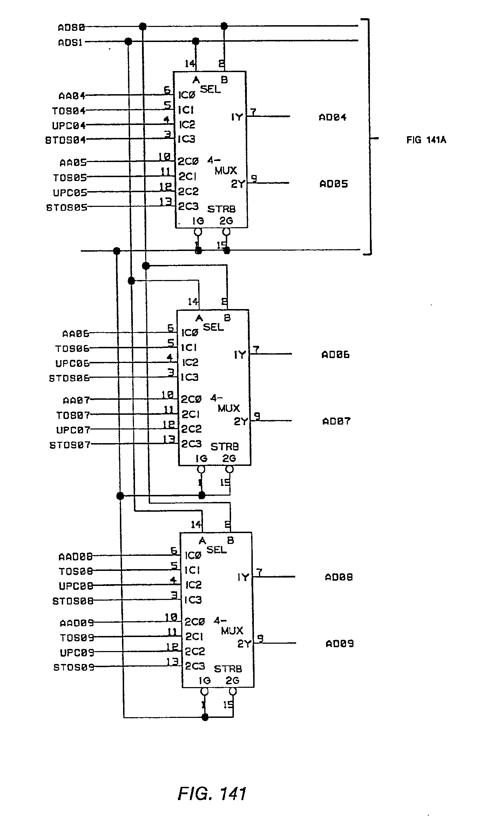

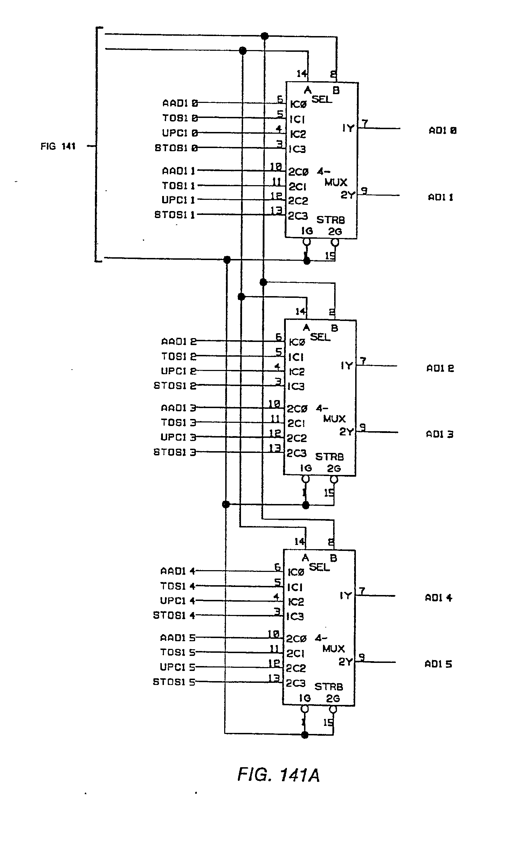

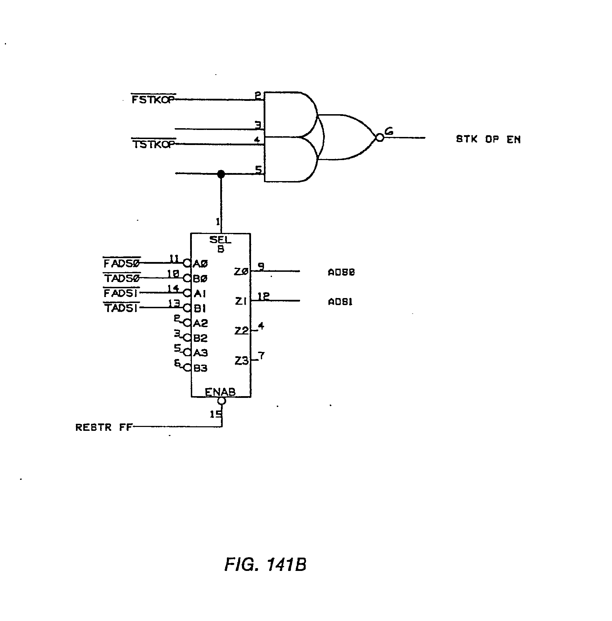

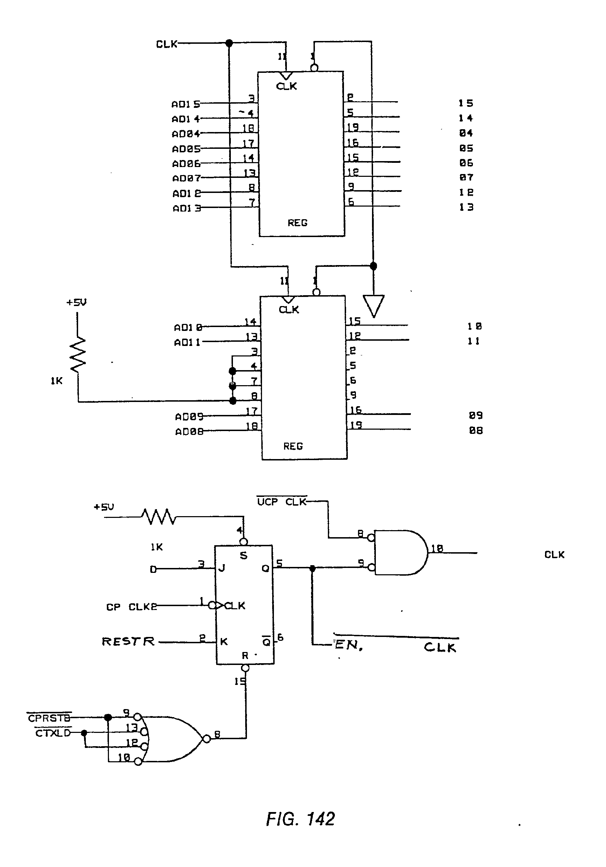

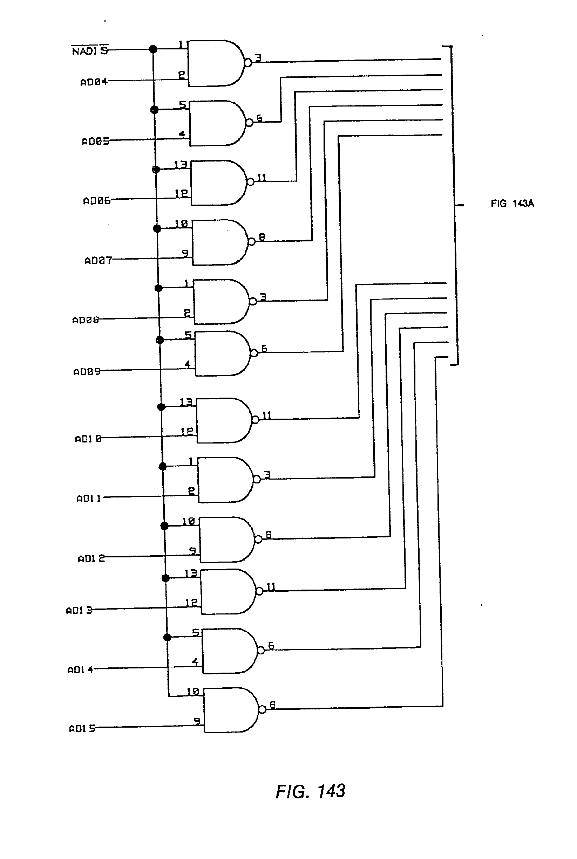

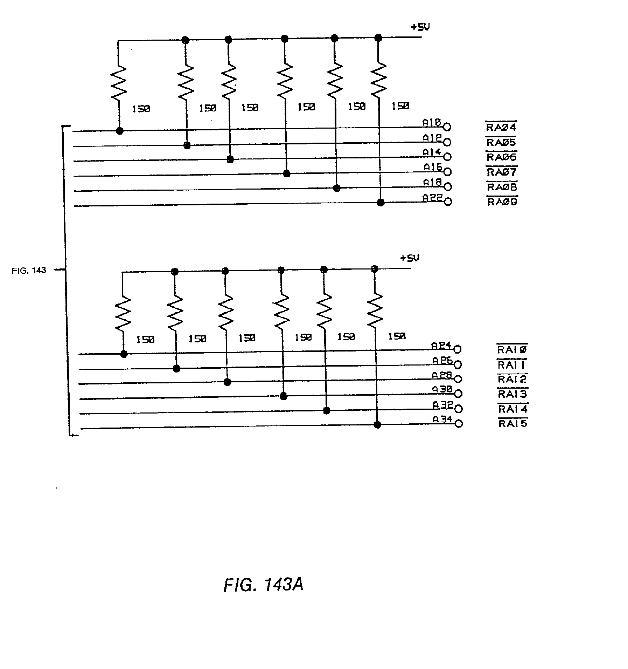

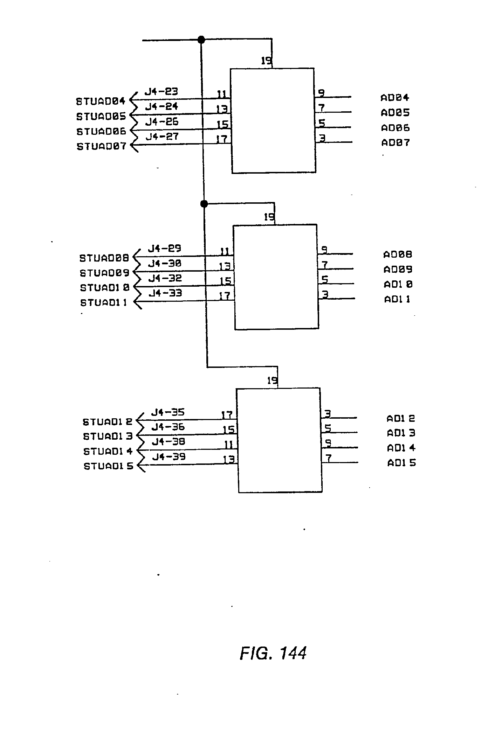

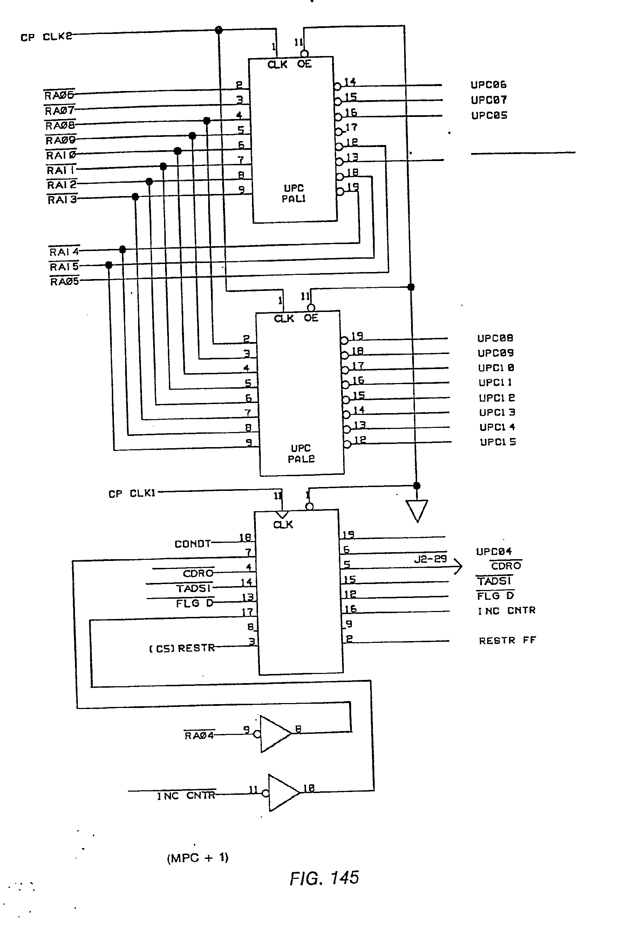

Specific logic circuitry for implementing the micro-sequencer unit 13 as discussed above and shown in the block diagrams of FIGS. 137 and 138 are shown in FIGS. 139-153. Stack logic circuits, including the stack ram 179, the stack multiplexer 189, the stack pointer unit 187 and the top-of-stack unit 180, are specifically shown in FIG. 139. The save-top-of-stack unit 181 is shown in FIG. 140. Address multiplexer 176 is depicted in FIG. 141, while the address save register is shown in FIG. 142 and the address logic 173 for supplying addresses to the microcontrol store 170 is shown in FIG. 143. FIG. 144 depicts the starting microaddress (STµAD) driver unit 172. The imcremented microprogram counter (µPC+1) unit 177 and increment unit 178 are shown in FIG. 145.

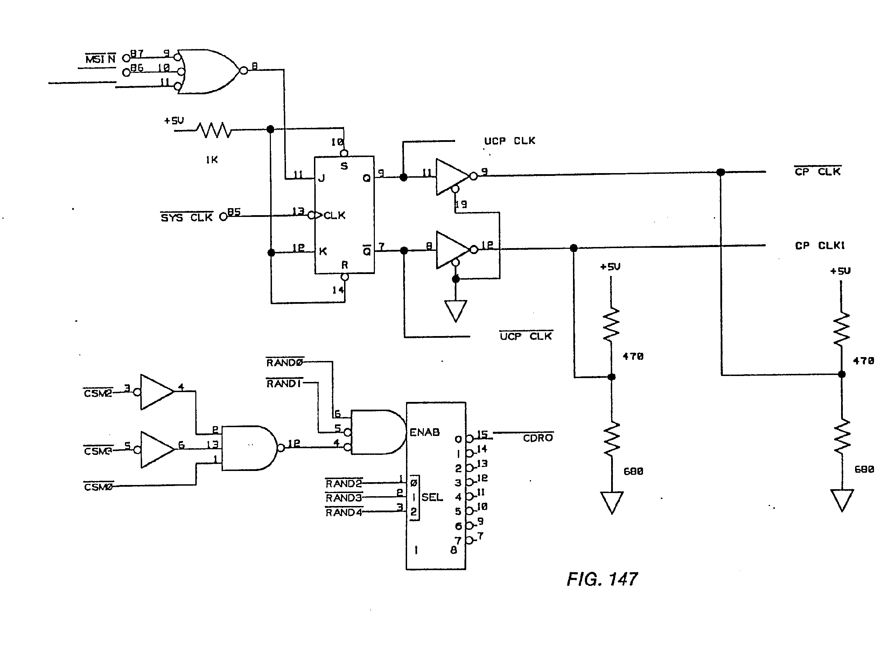

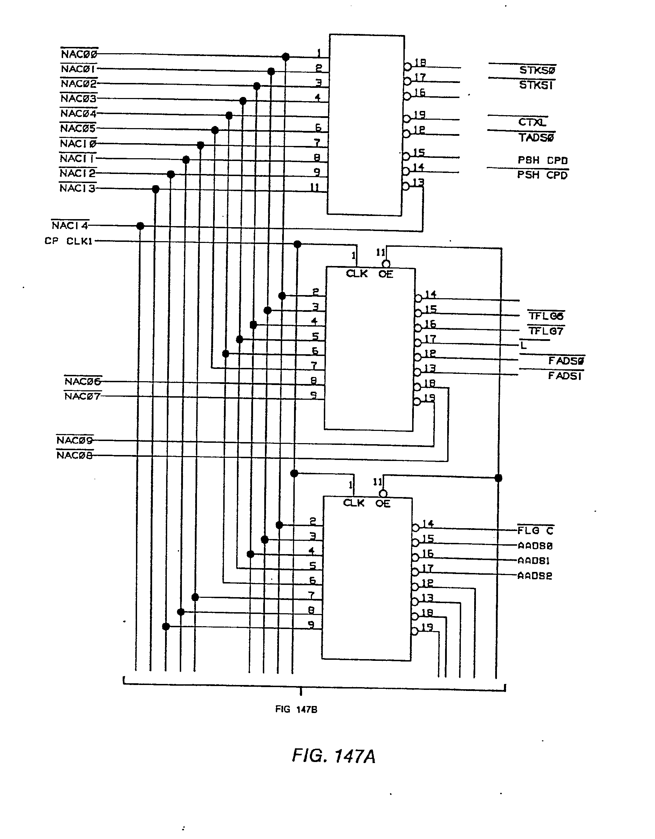

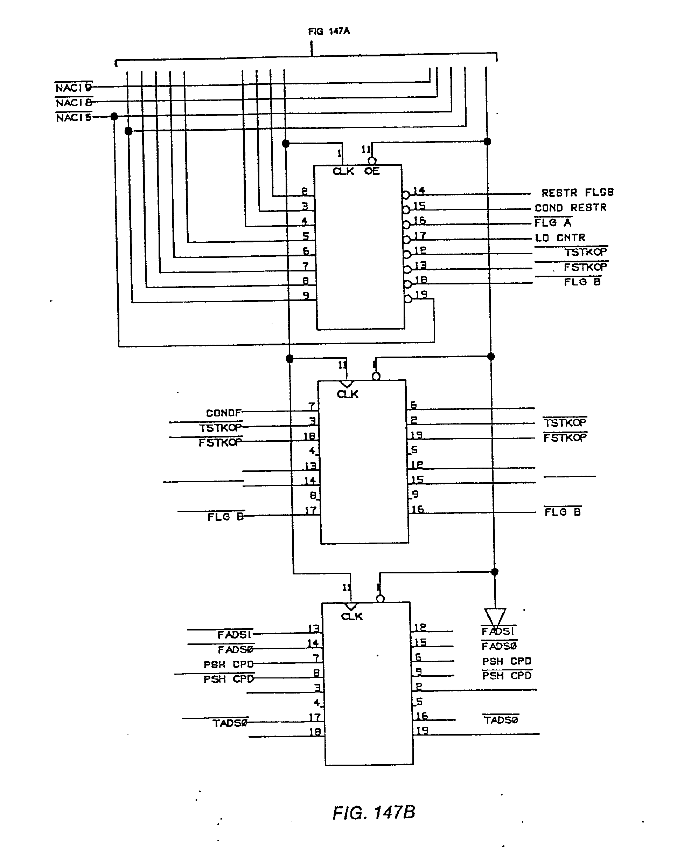

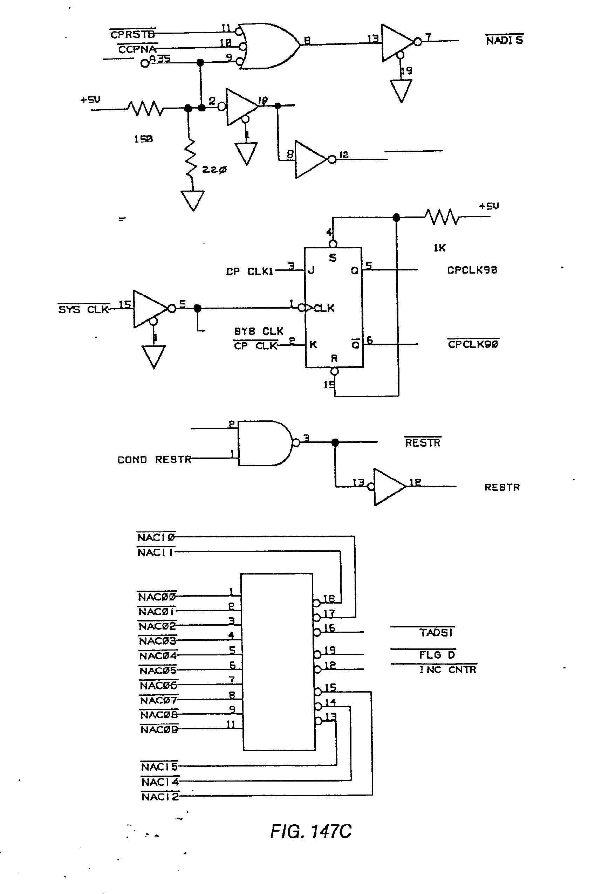

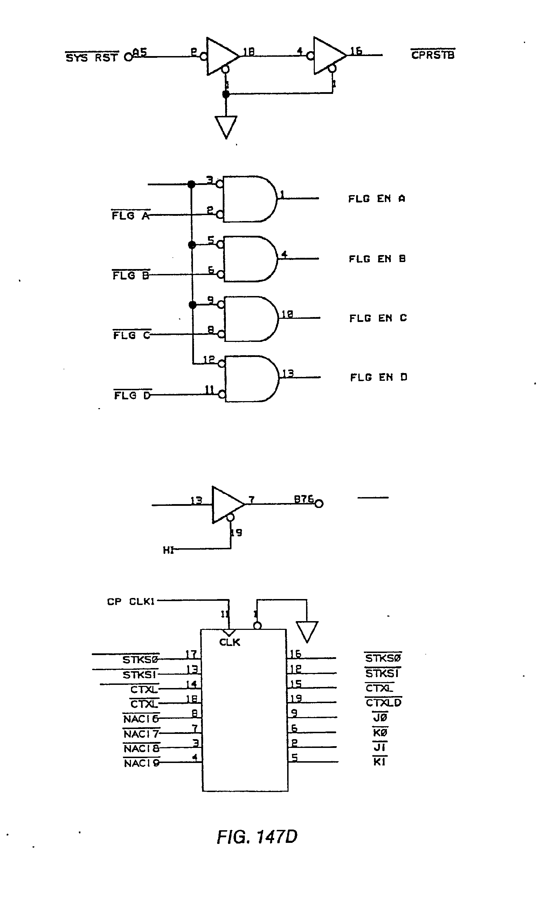

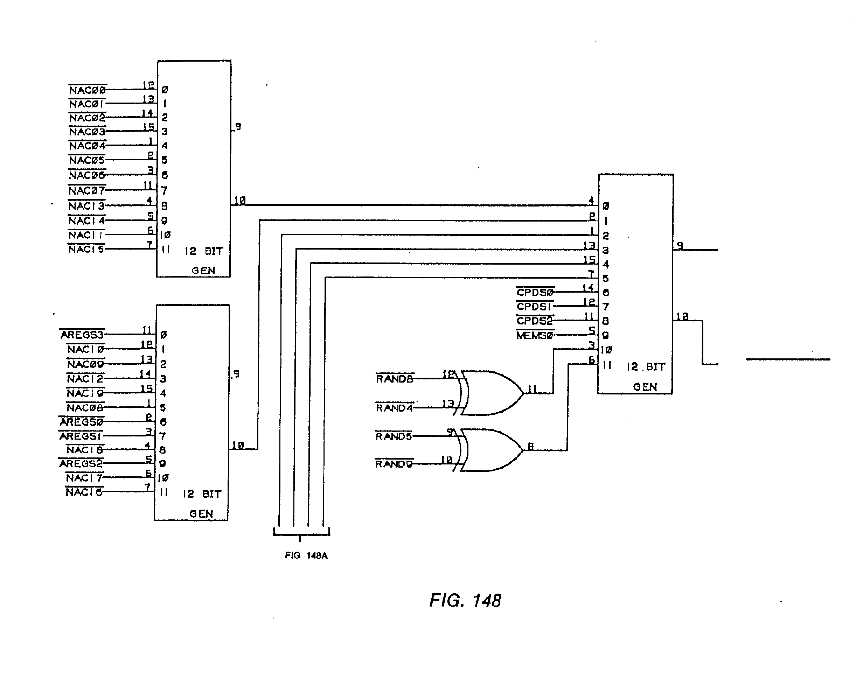

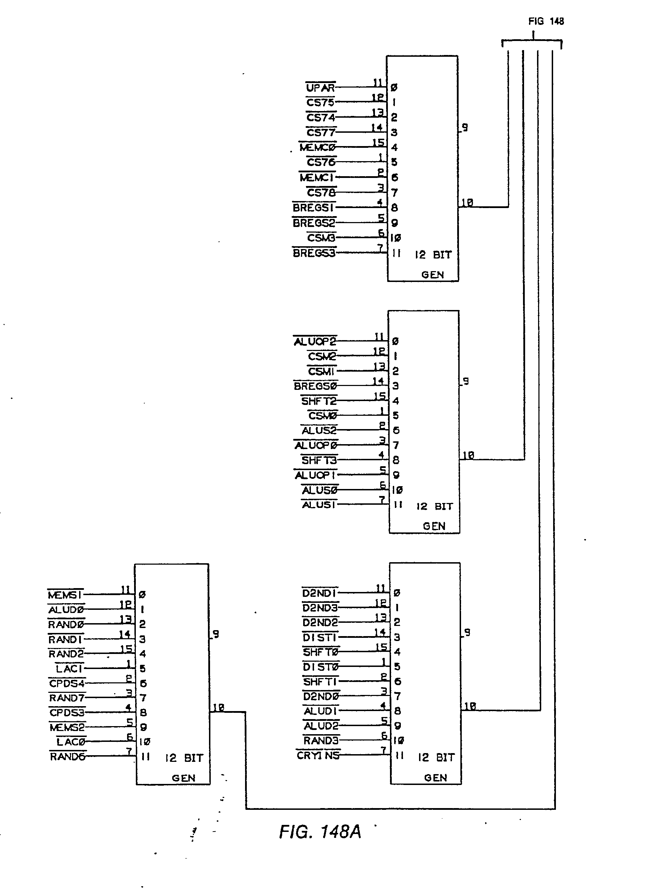

Microcontrol store 170 is specifically depicted in FIG. 146*and the next address control (NAC) decode logic circuitry 175 is specifically shown in FIG. 147. Parity logic is shown in FIG. 148.

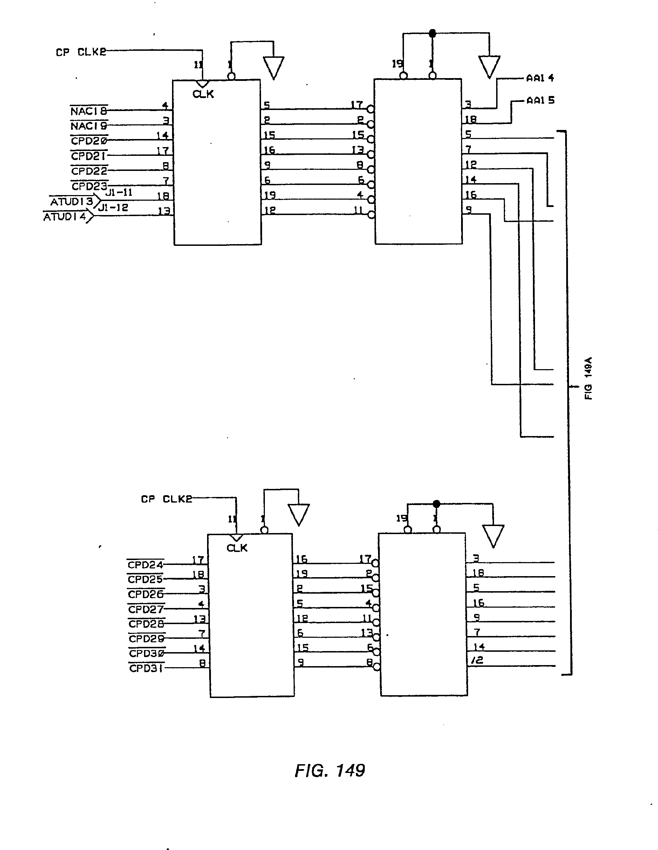

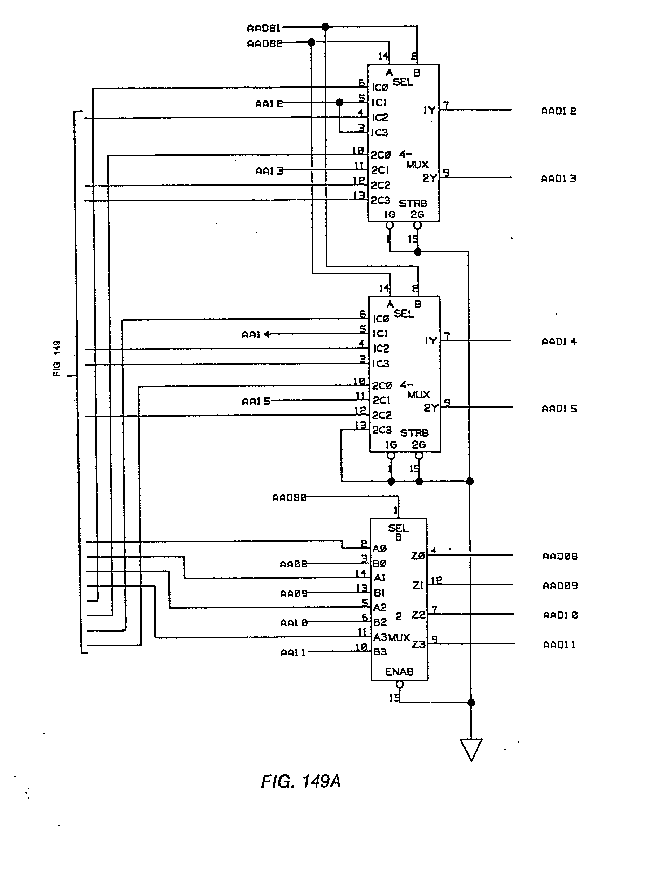

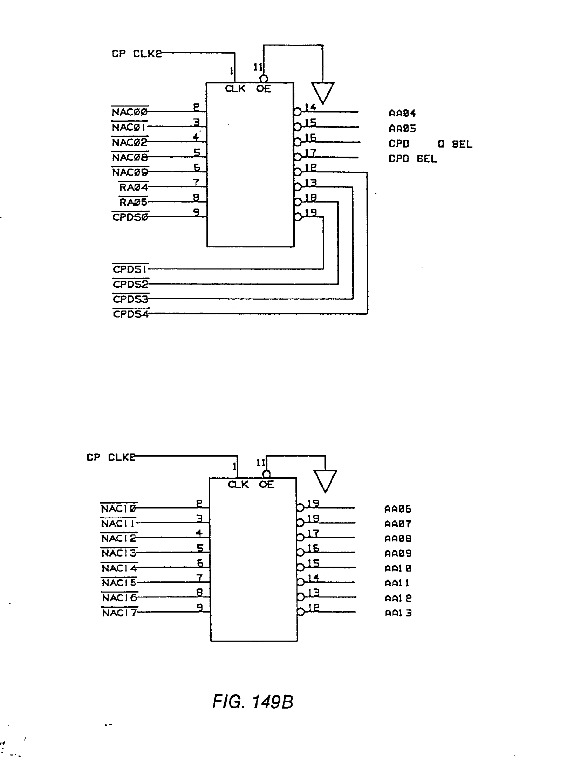

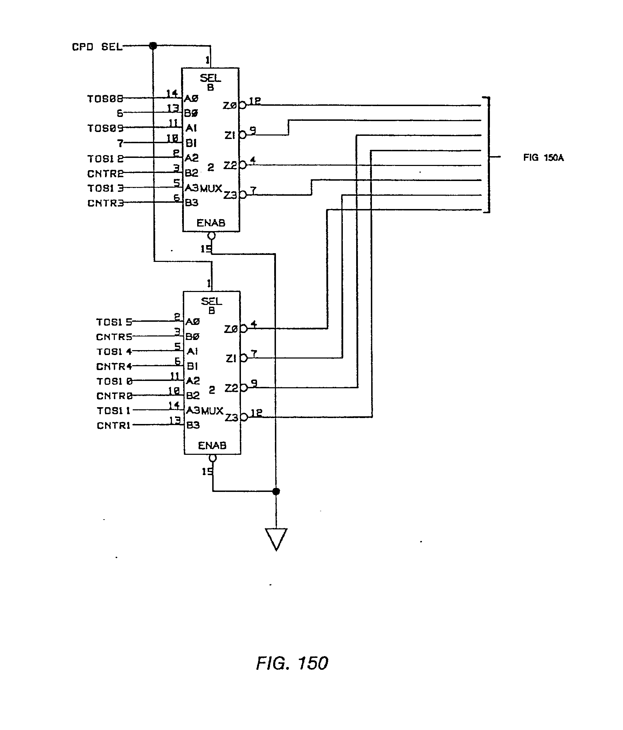

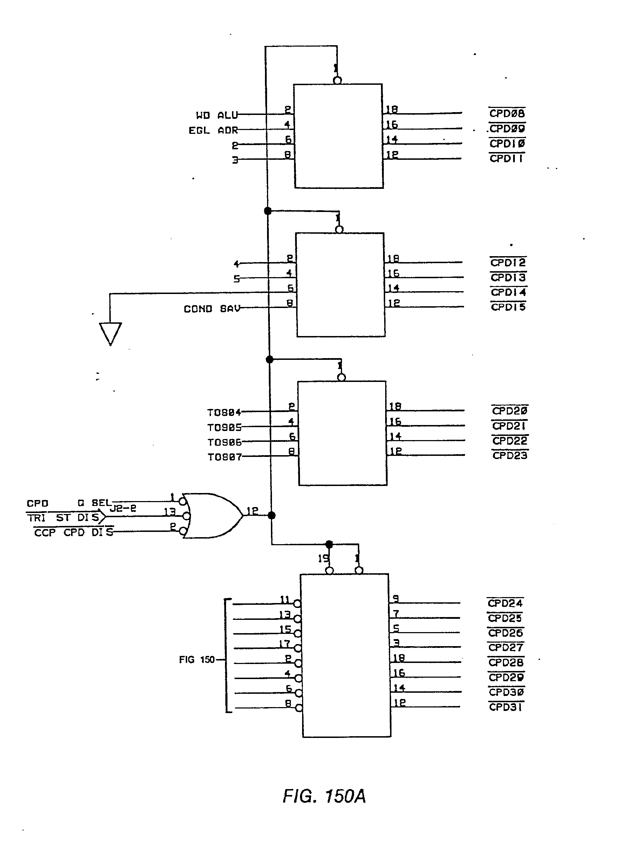

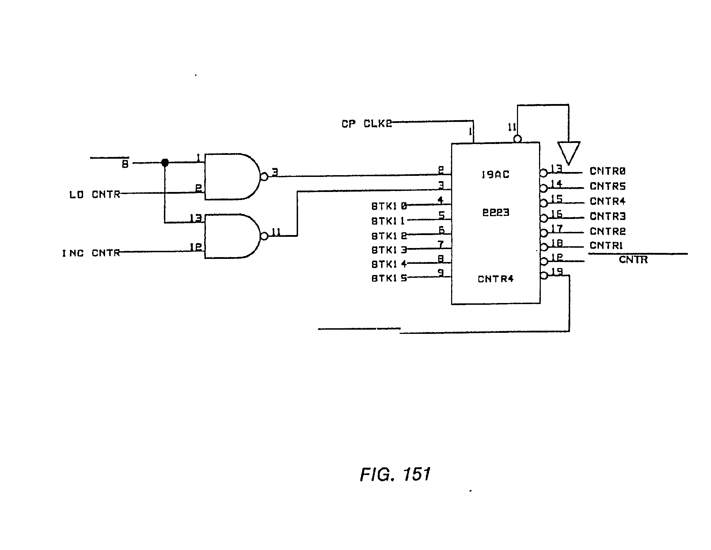

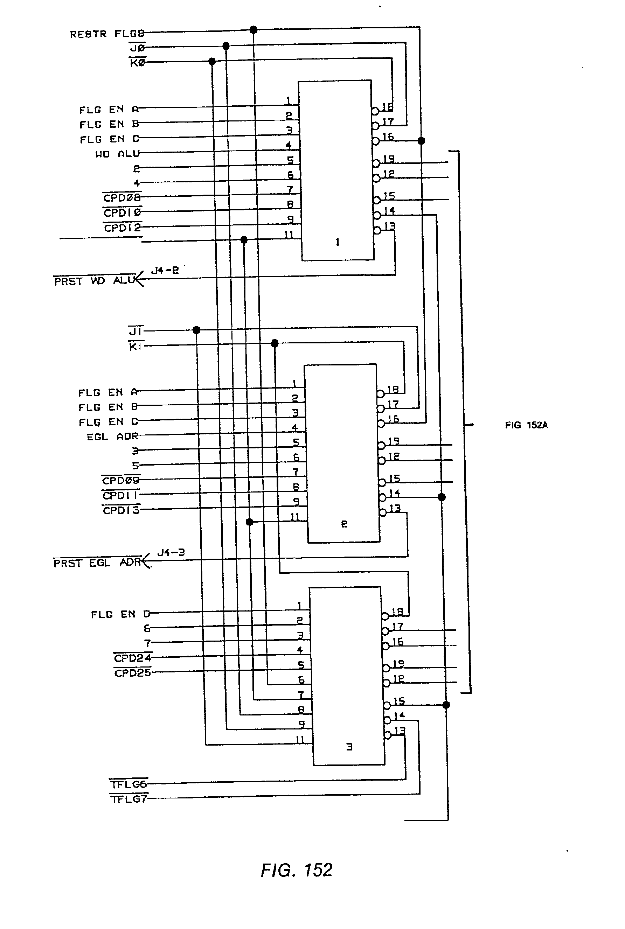

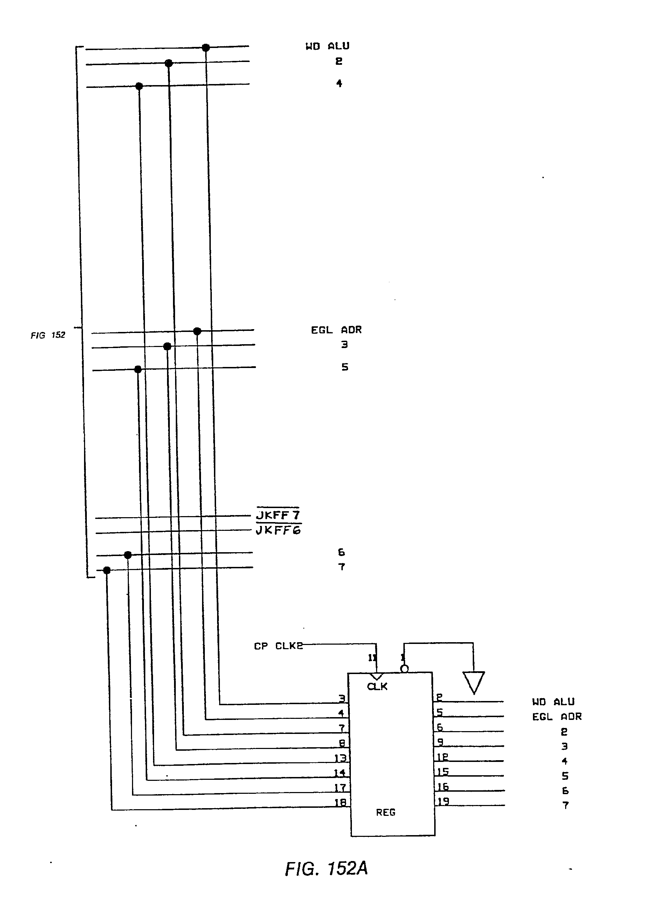

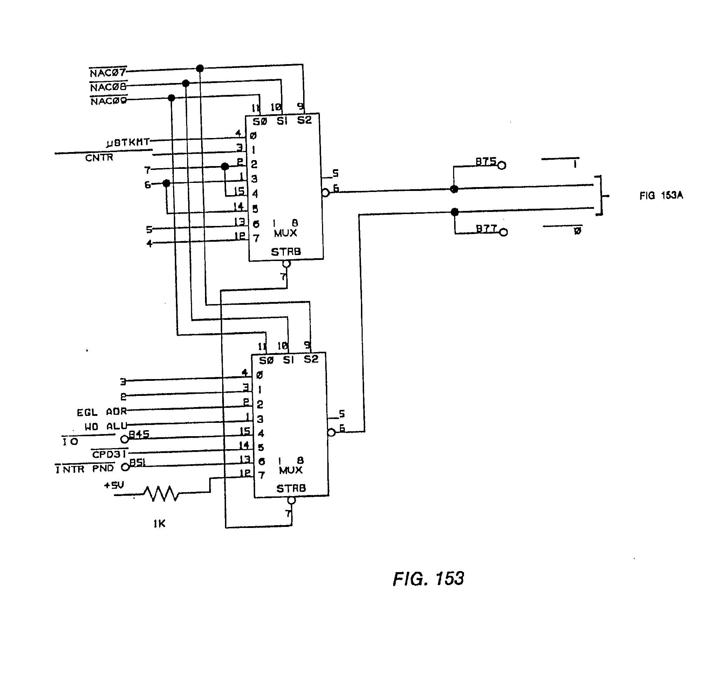

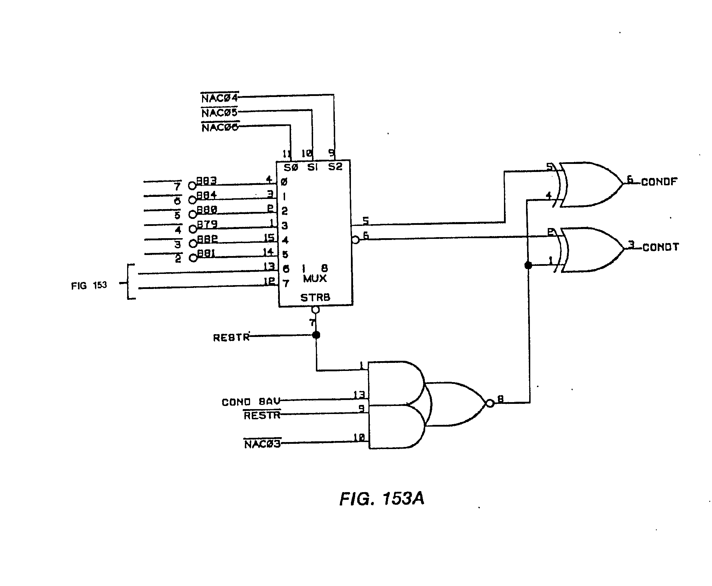

With reference to the decoding and condition test logic circuitry 182, shown particularly in FIG. 138, specific logic circuitry for implementing such circuitry is shown in FIGS. 149-153. Thus, concatenation logic 185 and dispatch multiplexer 186 are depicted in FIG. 149, CPD multiplexer 197 is shown in FIG. 150, 6-bit counter 196 is shown in FIG. 151, 8 flags unit 193 is shown in FIG. 152, and test ∅ and test 1 multiplexers 194 together with condition multiplexer 195 and the condition output unit 192 are all shown in FIG. 153.

*FIG. 146A-F through FIG. 146.7A-F

ARITHMETIC LOGIC UNIT

Before discussing in more detail the format of the micro-
instruction word, it is helpful to discuss FIG.153 which shows a
block diagram of a typical arithmetic logic unit generally having
a configuration known to those in the art.  As can be seen therein
the ALU unit 200, which performs the arithmetic and logical operations, has two inputs, identified as inputs R and S, which are
supplied from a pair of multiplexers 201 and 202, respectively.
The inputs to multiplexer 202 are obtained from the A and B
outputs of a register file 203.  A third input may be obtained from
a source which supplies zeros to the multiplexer at all 31 bit
positions (identified as the "∅" input) and a fourth input may be
obtained from Q register 204.

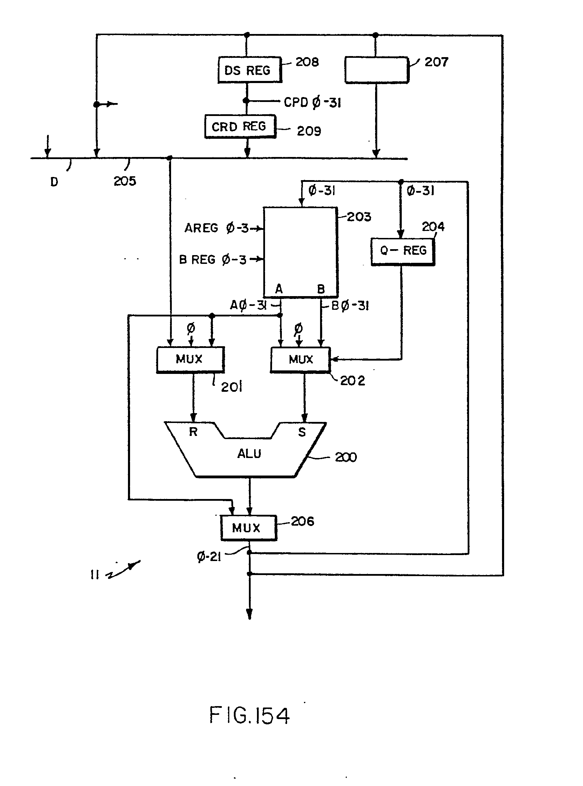

Register file 203 contains 16 and 32 bit registers and
includes four fixed point registers (ACC∅-3), four floating
point registers (FPAC∅-3), and eight general registers (GR∅-7).
The selection of the appropriate registers for supplying the A and
B inputs to ALU 200 is determined by the AREG∅-3 and BREG∅-3
bits of the micro-instruction field, as discussed in more detail
below.  The inputs to multiplexer 201 are obtained from the A
output of the register file, from the D-bus 205 or from an all
zeros input, as discussed with reference to multiplexer 202.
The output of ALU 200 is supplied to a multiplexer 206 which
selects either the output from ALU 200 or an output directly
supplied from the A terminal of register file 203.  The output of
multiplexer 206 can be supplied to the logical address bus if the
calculation is an address calculation, to the register file 203
for writing back into a selected register therein, to Q register
204 or to a plurality of other units on the arithmetic logic board,
significant exemplary ones of which are identified as shifter units 207, a data store register 208 or directly to the D-bus 205
or to the memory data bus.  The shifter outputs are supplied to
the D-bus, while the data store register 208 supplies data to the
CPD bus or to the D-bus via CPD register 209.  Data supplied to
the D-bus can then be used in subsequent arithmetic or logic
operations via multiplexer 201.  Other sources of the system may
also supply data to D-bus 205, if desired.  The general
configuration of the arithmetic logic unit board 11, as shown in
Fig.154, is helpful in understanding the micro-instructions
which are discussed below.

## MICRO-INSTRUCTION FORMAT

As discussed above with reference to the micro-sequencer unit 13, the micro-control store 170 thereof supplies a micro-instruction of 80 bits, the format thereof being depicted below.

| NAC 20 | AREGS 4 | BREGS 4 | CS4 4 | DIST 2 | D2ND 4 | SHFT 4 | ALUS 3 | ALUOP 3 |
|---|---|---|---|---|---|---|---|---|

| ALUD 3 | CRYINS 1 | RAND 10 | LAC 2 | CPDS 5 | MEMS 3 | MEMC 2 | FREE 5 | UPAR 1 |
|---|---|---|---|---|---|---|---|---|

The overall format comprises eighteen fields, one field of which has five bits available as reserve bits for future use. The seventeen fields which are utilized are described below.

The Next Address Control Field (NAC$\emptyset$-19)

As discussed above with reference to the micro-sequencer structure and operation, the first 20 bits of the micro-instruction format comprise the field for controlling the selection of the address for the next micro-instruction which address is either a "conditional" address, i.e. an address the selection of which is dependent on whether a specified condition which is tested is either true or false, or an "unconditional" address, i.e., an address which is selected independently of any conditions.

The NAC field of the micro-instruction for selecting a conditional address carries with it a 6 bit test field which identifies which of up to 64 conditions must be tested to determine whether a specified condition is true or false. The basic format of the NAC field for selecting a conditional address is shown below:

| UP 3 | POL 1 | TEST 6 | PA 10 |
|------|-------|--------|-------|

The conditions which can be tested may relate to conditions with respect to operations of the arithmetic logic unit, the address translation unit, the instruction processor, the micro-sequencer unit itself or input/output (I/O) conditions. As an example of typical conditions, Appendix C lists 53 conditions which can be tested in the particular system design described herein, involving tests relevant to the ALU, ATU, IP and micro-sequencer units, as well as certain I/O tests.

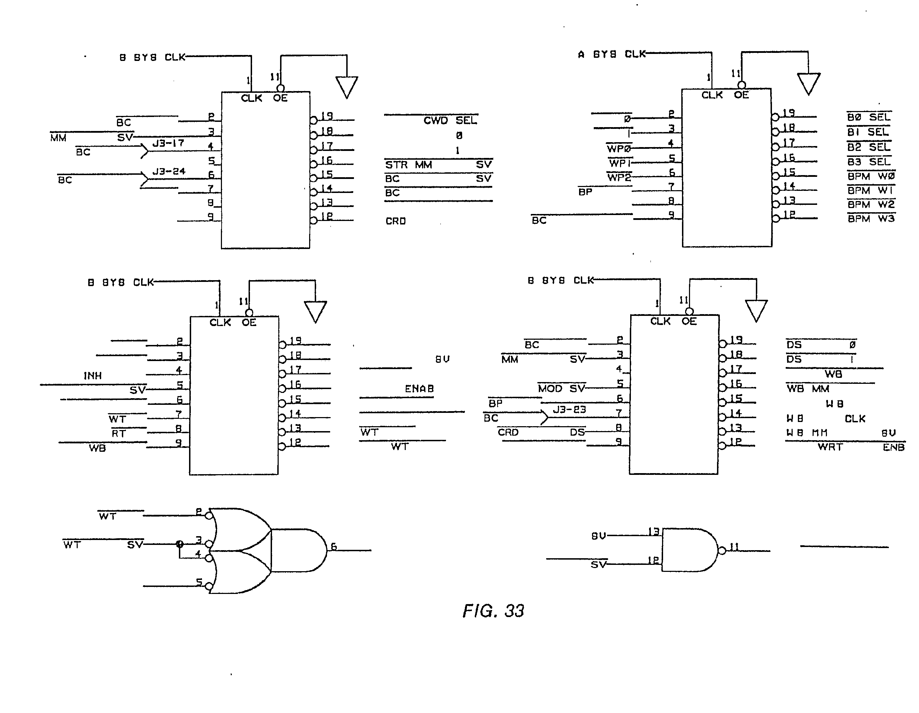

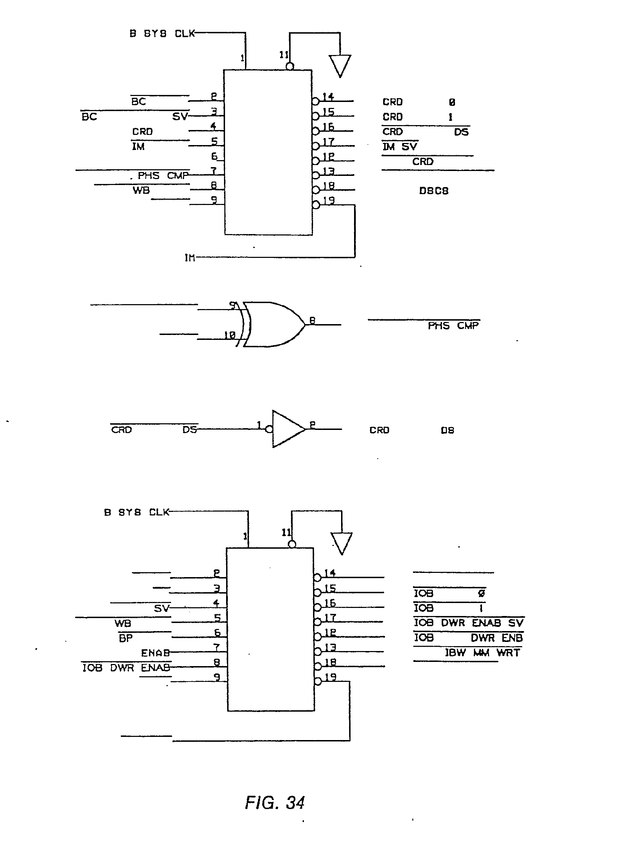

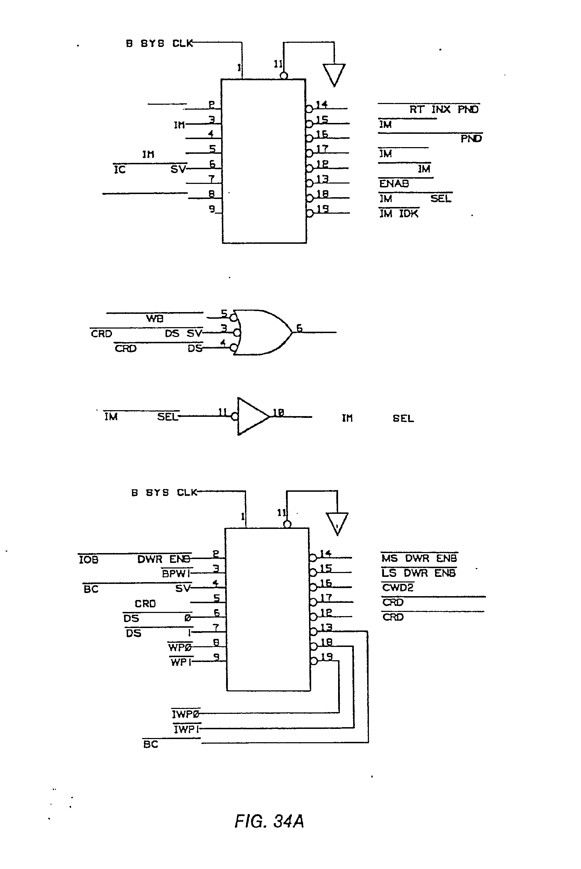

Various types of conditional addresses may be selected as discussed below, it being helpful to consider the following discussion in conjunction with FIGS. 33 and 34 showing broad block designs of the micro-sequencer logic.

A first conditional address may be a conditional absolute address, i.e. an address which uses absolute address bits AA 4-15 appropriately selected and supplied by dispatch multiplexer 186 to the address multiplexer 176, as seen in FIG. 4.

The format for such conditional absolute address utilizes the same format shown above for the mode bits, polarity bit and test bits, with the 10 absolute address bits being extended to a full 12 bits by concatenating the most significant bits of the current micro-program counter as the first two bits thereof (sometimes termed the "page bits"). The conditional absolute address may be utilized in 5 different modes as set forth in Appendix D (see "Absolute Address Conditional" therein). An example

»f one mode such as a "Conditional Jump Code" (CJMP) can be
'llustratively summarized below.

| »de | MneM. | Explanation | True Action | False Action |
|------|-------|-----------------|--------------|--------------|
| »00 | CJMP | Conditional Jump | PC <— AA(10) | PC <— PC + 1 |

For such conditional jump mode, if the specified test
condition is true the 10 absolute address bits concatenated
with the 2 page bits forms the absolute address bits AA 4-15,
which address is then selected at the address multiplexer 176
(FIGS. 33 and 34). If such specified condition is false, the
address which is selected is the current program counter address
incremented by 1 (i.e. $\mu PC+1$). Other modes for an "absolute
address conditional" format are shown in Appendix D.

Another conditional address is a conditional dispatch
address, wherein a portion of the address bits are obtained (or
dispatched) from sources external to the micro-sequencer unit
(such as the arithmetic logic unit or the address translation
unit, for example) which dispatch bits can be concatenated with
some or all first eight absolute address bits (AAØ-7) as shown
in FIG. 34. For such conditional dispatched addresses the following
format is used:

| 0 | 2 | 3 | 4 | 9 | 10 | 16 | 17 | 18 | 19 . |
|---|---|---|---|---|----|----|----|----|------|
| 101 | | POLARITY(1) | TEST(6) | | AA(7) | | X | DSRC(2) | |

The source from which the dispatch bits are obtained are
identified by the two DSRC bits for 4 different source identifications.

Thus, the address may be formed by direct replacement of
the lower 8 bits of the formed absolute address with the lower 8

bits of the CPD bus as shown below.

| 0                   | 2  4         | 11 |
|---------------------|--------------|----|
| Formed AA bits 0-3  | CPD24 - CPD31 |    |

Alternatively, the address may be formed by direct replacement of the lower 4 bits of the formed absolute address with the lower 4 bits of the CPD bus, as shown below:

| 0                  | 7  8          | 11 |
|--------------------|---------------|----|
| Formed AA bits 0-7 | CPD28 - CPD31 |    |

As further alternative, the address may be formed by direct replacement of the lower 4 bits of the formed absolute address with a different 4 bits of the CPD bus as shown below:

| 0                  | 7  8          | 11 |
|--------------------|---------------|----|
| Formed AA bits 0-7 | CPD20 - CPD23 |    |

And as a final alternative, the address can be formed by direct replacement of the lower 3 bits of the formed absolute address with 2 bits from the address translation unit validity dispatch, with a zero in the least significant bit position, as shown below:

| 0                  | 8  9      | 10  | 11 |
|--------------------|-----------|-----|----|
| Formed AA bits 0-8 | ATU VAL(2) |     | 0  |

Certain addresses may require the use either of the incremented program counter address or the top of the stack address (with the top of the stack being appropriately popped, or removed, when the address is used) and for such purposes the lower 12 bits (NAC-19) need not be involved in the address generation process. Accordingly, such 8 bits are available for other purposes as desired. The format therefor is shown below:

| 0 | 2 | 3 | 4 | 9 | 10 | 11 | 12 | 19 |
|---|---|---|---|---|---|---|---|---|
| 110 | POLARITY(1) | TEST(6) | | | Mod2(2) | | OTHER(8) | |

An explanation of such three special condition address selections are shown in more detail in Appendix D, identified as LCNT, CPOP and LOOP.

Certain addresses may be selected in conjunction with the setting of the 8 flags that are involved and such flag control commands can be identified by the NAC field in accordance with the following format:

| 0 | 2 | 3 | 4 | 9 | 10 | 12 | 13 | 14 | 15 | 16 | 17 | 18 | 19 |
|---|---|---|---|---|---|---|---|---|---|---|---|---|---|
| 110 | POLARITY(1) | TEST(6) | | | 110 | | POP(1) | SET(2) | | CNTL1 (2) | | CNTL2 (2) | |

As seen in Appendix D (see Flag Controls set forth therein) such instructions can be divided into two sets each set being identified by the POP bit and each set having four different instructions identified by the two SET bits. Each instruction involves the setting of two flags, each flag being set in accordance with the CNTL1 or CNTL2 fields as follows:

| CNTL1 or CNTL2 | Action |
|---|---|
| 00 | no change |
| 01 | set it FALSE |
| 10 | set it TRUE |
| 11 | Toggle it |

In each of the above flag control cases if the test
condition which is specified is determined to be "True" the
incremented micro-program counter address is used (μPC+1) while
if the condition is "false" the top of the stack address is
utilized and the stack is appropriately popped.  As mentioned
above, a summary of the flag controls is set forth in Appendix D.

Two of the instructions of the NAC field allow the conditional use of the stack without popping it (as opposed to the
use and popping thereof discussed above) in accordance with the
following format:

| 0  2 | 3 | 4      9 | 10  12 | 13  ·14 | 15 | 16  17 | 18  19 |
|---|---|---|---|---|---|---|---|
| 110 | POLARITY(1) | TEST(6) | 111 | Mod3 (2) | FS(1) | CNTL1 (2) | CNTL2 (2) |

Two instructions are involved, flag control being provided for
either the set of flags ∅ and 1 or the set of flags 2 and 3.
A summary of such instructions, identified as the SPLIT instructions, is shown in Appendix D.  As can be seen therein, if the
condition is "false" the top of the stack address is utilized but
the address remains at the top of the stack (i.e. the top of the
stack is not popped).  The final conditional instruction is a
context restore instruction.  Such instruction may be used, for
example, after a fault routine has been implemented and it is
desired to restore the machine to its previous state.  In accordance therewith, not only is the machine state restored but a
decision is made as to the next micro-address which should be
utilized, depending on whether the condition which is tested is
true or false.  The context restore instruction format is shown
below:

| 0  2 | 3 | 4      9 | 10 ·  12 | 13      14 | 15      19 |
|---|---|---|---|---|---|
| 110 | POLARITY(1) | TEST(6) | 111 | Mod3(2) | XXXXX |

0039227

A summary of the two instructions involved is shown in Appendix D identified as Context Restore Instruction.

In addition to the conditional address instructions discussed above, in a particular embodiment of the system discussed, there are also unconditional address instructions (one particular embodiment utilizing eight unconditional instructions are set forth in Appendix D identified as Unconditional Instructions). In accordance with the format thereof there are no conditions to be tested so that for each mode of operation only a single action is specified and no selected choice need be made.

A summary of the unconditional address instructions, which can be divided into unconditional instructions utilizing the 12-bit absolute address or unconditional instructions utilizing the combinations of certain absolute address bits and dispatch source bits (Unconditional Dispatches) is shown in Appendix D.

AREG, BREG Fields

The 8 bits in these two fields identify which register of the register file in the arithmetic logic unit is to be used to provide the A and B inputs of the arithmetic logic unit 200. Thus the register file is capable of selecting one of sixteen registers, namely, the accumulators AC $\emptyset$-3, the floating point registers FPAC $\emptyset$-3 or other general registers GR $\emptyset$-7 in accordance with the following select codes.

| Mnem | Value |
|------|-------|
| AC0 | 0 |
| AC1 | 1 |
| AC2 | 2 |
| AC3 | 3 |
| FPAC0 | 4 |
| FPAC1 | 5 |
| FPAC2 | 6 |
| FPAC3 | 7 |
| GR0 | 8 |
| GR1 | 9 |
| GR2 | A |
| GR3 | B |
| GR4 | C |
| GR5 | D |
| ⍵ACSR | E |
| ⍺ACDR | F |

In the above table the coded value is in hexadecimal notation and in the specific case of coding ACSR or ACDR, the register file control comes from a register that specifies a source accumulator or from a register that specifies a destination accumulator. When the source accumulator ACSR $\emptyset$-3 or the destination accumulator ACDR $\emptyset$-3 equals hex E the general register GR6 will be selected. When ACSR $\emptyset$-3 or ACDR $\emptyset$-3 equal hex F then the general register GR7 will be selected.

The Control Store Mode

The control store mode 4-bit field defines the functionality of six of the other micro-instruction fields, namely, the ALUS, ALUOP, ALUD, DIST. CRYIN, and RAND fields. The following table summarizes the 16 control modes for the control store mode field.

| Mnem | Value | Half-cycle 1 | | | Half-cycle 2 | | | DIST Type | CRYIN | RAND Type |
|------|-------|------|-------|------|------|-------|------|------|-------|------|
| | | ALUS | ALUOP | ALUD | ALUS | ALUOP | ALUD | | | |
| SMATH | 0 | uI | uI | # | DZ | OR | uI | Math | Type0 | Math |
| SFIXP | 1 | uI | uI | # | DZ | OR | uI | Gen | Type1 | Fixp |
| SGEN | 2 | uI | uI | # | DZ | OR | uI | Gen | Type0 | Gen |
| SATU | 3 | uI | uI | # | DZ | OR | uI. | Gen | Type0 | Atu |
| FMATH | 4 | uI | uI | # | uI | uI | uI | Math | Type0 | Math |
| FFIXP | 5 | uI | uI | # | uI | uI | uI | Gen | Type1 | Fixp |
| FGEN | 6 | uI | uI | # | uI | uI | uI | Gen | Type0 | Gen |
| FATU | 7 | uI | uI | # | uI | uI | uI | Gen | Type0 | Atu |
| MPY | 8 | ⓐ | ⓐ | # | ⓐ | ⓐ | # | Math | Type2 | Math |
| DIV | 9 | uI | ⓐ | uI | uI | ⓐ | uI | Math | Type3 | Math |
| BOUT | A | uI | uI | # | ZB | OR | uI | Gen | Type0 | Gen |
| NORM | B | uI | uI | # | DZ | OR | uI | Math | Type0 | Math |
| QDEC | C | ZQ | SUB | GREG | uI | uI | uI | Gen | *Type0 | Gen |
| QINC | D | ZQ | ADD | GREG | uI | uI | uI | Gen | *Type0 | Gen |
| QADD | E | DQ | ADD | GREG | uI | uI | uI | Gen | *Type0 | Gen |
| PRESC | F | ⓐ | uI | # | DZ | OR | uI | Math | Type0 | Math |

In the above table the following abbreviations are used:

uI - Represents the u-order from the appropriate field of the specified u-instruction.

# - No clock takes place.

ⓐ - The u-order will deter to a predecoded or "Forced" value. See notes below for further information.

* - The CRYIN is forced to a zero the first half cycle in modes QDEC and QADD, and to a one during the first half of mode QINC.

As can be seen, operations can occur in either half of the operating time cycle of the system, for example, operations with respect to the CPU occurring in one-half of the cycle and operations with respect to I/O devices occurring in the other half of the cycle. The above table shows that the control modes for the control store mode field must be defined in accordance with the half-cycle which is occurring. Thus certain fields in the overall micro-instruction format will change depending on which half of the cycle is occurring and the CSM field defines how each of such fields is affected during each of the half-cycles involved.

The ALU source inputs (R and S), the ALU operation and the ALU destination as determined by their respective fields are discussed below, the above table providing a definition for the functionality thereof as explained by the above noted abbreviation The source for the D-bus (see ALU in FIG. 53) for the first half cycle is discussed below under the DlST field. The CRYIN definition determines the type of usage for the carry input select field as discussed below and the random field (RAND) type is also defined as discussed below with respect to such field. A more detailed description of the multiply (MPY), divide (DIV), prescaled mantissa (PRESC) and NORM modes is shown in Appendix E.

## The DlST Field

This 2-bit field defines the source for the 31 bits which are placed on the D-bus 205 of the arithmetic logic unit (see FIG. 53) during the first half cycle. The functionality of this field is dependent on what is coded in the CSM field as discussed above. For the two types (identified as MATH or GEN) the following sources are defined depending on the value of the DlST field.

Type Math

| Mnem | Value | Description |
|------|-------|-------------|
| MREG | 0 | D<0-31> = MREG<0-31> |
| MACC | 1 | D<0-31> = MACC<0-31> |
| CPDR | 2 | D<0-31> = CPDR<0-31> |
| AAR | 3 | D<0-23> = zero |
|  |  | D<24-31> = AAR<24-31> |

Type Gen

| Mnem | Value | Description |
|------|-------|-------------|
| MREG | 0 | D<0-31> = MREG<0-31> |
| CPDB | 1 | D<0-31> = CPD<0-31> |
| CPDR | 2 | D<0-31> = CPDR<0-31> |
| AAR | 3 | D<0-23> = zero |
|  |  | D<24-31> = AAR<24-31> |

D2ND Field

The four bits for this field define the source of the 31 bits to be placed on the D-bus during the second half cycle in accordance with the following definitions.

D<0-31> source during second half cycle.

| Mnem | Value | Description |
|------|-------|-------------|
|  | 0 | Unassigned |
| CPDB | 1 | D<0-31> = CPDB<0-31> |
| CPDR | 2 | D<0-31> = CPDR<0-31> |
| AAR | 3 | D<0-23> = zero |
|  |  | D<24-31> = AAR<24-31> |
| CREG | 4 | D<0-31> = MREG<0-31> |
| MACC | 5 | D<0-31> = MACC<0-31> |
|  | 6 | Unassigned |
|  | 7 | Unassigned |
| NSHR | 8 | Right Nipple shifts. See SHFT field |
| NSHL | 9 | Left Nipple shifts.  See SHFT field |
| PASS | A | D<0-31> = TLCH<0-31> |
|  | B | Unassigned |
| PMD | C | Processor memory data.  See note below. |
|  | D | Unassigned |
| ASR | E | D<0-15> = ASR<0-15> |
|  | F | Unassigned |

The SHFT Field

The four bits of the SHFT field define two basic functions, namely, a control of the inputs for bit shifts into the Q-register or the B-register of the arithmetic logic unit (FIG.53) and a control of a 4-bit shift (a "nibble" shift) at the Shifter 207 of the ALU.  The latter shift is controlled by the D2ND field to occur only when such field is coded to produce a right nibble shift (NSHR) or a left nibble shift (NSHL) as indicated above. The bit shift occurs with respect either to the data that is present in the Q-register or to the data which is being placed into the B-register, only if the D2ND field contains something other than a NSHR or NSHL code.  The charts in Appendix F explain more completely how the nibble shift and bit shift hardware are controlled by the SHIFT field.

The ALUS Field, The ALUOP Field and The ALUD Field

The 3 bits of the ALUS field determines which bus is supplied to the R and S input of the arithmetic logic circuit 200 (FIG. 53) in accordance with the following chart.

| ALUS FIELD | (R,S) |
|------------|-------|
| AQ | 0 |
| AB | 1 |
| ZQ | 2 |
| ZB | 3 |
| ZA | 4 |
| DA | 5 |
| DQ | 6 |
| DZ | 7 |

In the above chart, A represents the A output of the register file B represents the B output of the register file, Q represents the Q output from the Q register, Z is the all zeros input and D is the D-bus in FIG. 53. Thus, for an ALUS field of zero, for example, the R input is from the Q register, and so forth.

The three bits of the ALUOP field define the operation which is to be performed by the arithmetic logic circuit 200 in accordance with the following chart.

| ALUOP FIELD | | |
|-------------|---|------------|
| ADD | 0 | (R + S) |
| SUB | 1 | (S - R) |
| RSB | 2 | (R - S) |
| OR | 3 | (R or S) |
| AND | 4 | (R * S) |
| ANC | 5 | (R' * S) |
| XOR | 6 | (R xor S) |
| XNR | 7 | (R xnr S)' |

The 3 bits of the ALUD field defines the destination for the output of the arithmetic logic circuit 200 (i.e. where the result of the arithmetic or logical operation will be placed) in accordance with the following chart.

ALUD FIELD

| Mnem | Value | Description |
|------|-------|-------------|
| NLD | 0 | No load;    $Y<0-31> = ALU<0-31>$ |
| GREG | 1 | Load GREG only;   $Y<0-31> = ALU<0-31>$ |
| BREG | 2 | Load BREG only;   $Y<0-31> = ALU<0-31>$ |
| AOUT | 3 | Load BREG only;   $Y<0-31> = AREG<0-31>$<br>If FLAG0=0, $Y<0-15>=ALU<0-31>$, $Y<16-31>=AREG<16-31>$ |
| RSHB | 4 | Load BREG with ALU shifted right one bit;<br>LINK register := ALU31;   $Y<0-31> = ALU<0-31>$ |
| RSQB | 5 | Load BREG with ALU shifted right one bit;<br>Shift QREG right; $Y<0-31> = ALU<0-31>$<br>LINK register := ALU31 |
| LSHB | 6 | Load BREG with ALU shifted left one bit;<br>$Y<0-31> = ALU<0-31>$<br>LINK gets ALU16, ALU0 for FLAG0 = 0,1 respectively. |
| LSQB | 7 | Load BREG with ALU shifted left one bit;<br>Shift QREG left;   $Y<0-31> = ALU<0-31>$<br>LINK gets ALU16, ALU0 for FLAG0 = 0,1 respectively. |

## The CRYINS Field

This field represents the arithmetic logic unit carry input select field and determines what kind of carry is used. There are 4 types of usage for this field (identified as Types 0-3), the use thereof being governed by the CSM field discussed above and the RAND field discussed below. The charts in Appendix G for each type summarize the determinations to be made by the CRYINS field.

The Rand Field

The 10-bit random field is a multi-functional field and is controlled as discussed above by the CSM field. There are 4 types of usage thereof, identified as MATH, FIXP, GEN, and ATU.

The MATH type of usage has the following format:

| Type Math | ROUND 1 | FPOP 4 | MISC 5 |
|-----------|---------|--------|--------|

which includes 1 bit for controlling the rounding off of the floating point computation and the 4 FPOP bits for defining the floating point operation with regard to the exponent, multiplication and truncation utilized. The remaining 5 bits are available for other arithmetic logic unit operations, if desired. The MATH type usage for the random field is specified in the summary set forth in Appendix H.

The fixed point type usage (FIXP) has the following format:

| Type Fixp | CEXT 1 | MISC1 4 | MISC2 5 |
|-----------|--------|---------|---------|

As can be seen the first bit of the field in this type of usage combines with the CRYINS field Type 1 to form certain micro-orders as set forth below:

| CRYINS Mnem | CRYINS Value | CEXT Mnem | CEST (RAND<0>) Value | Description |
|-------------|--------------|-----------|----------------------|-------------|
| Z | 0 | N | 0 | CRYIN = 0 |
| H | 1 | N | 0 | CRYIN = 0 |
| Z,C· | 0 | Carry | 1 | CRYIN = CARRY |
| H,B | 1 | Carry | 1 | CRYIN = CARRY |

The remaining bits relate to miscellaneous operations, the first 4 miscellaneous bits (MISC 1) relating to ALU loading control and the second 5 miscellaneous bits (MISC 2) relating to various random operations with respect to carry, overflow and status operations, and set forth in Appendix I.

The general type of usage (GEN) utilizes the following format:

Type Gen

| REGS 4 | SPAR 2 | SPAC 4 |
|---|---|---|

The first 4 bits (REGS) deal with general source and destination accumulator operations set forth in Appendix J. The 2 SPAR scratch pad bits deal with operations set forth in Appendix J. The 4 SPAD scratch pad bits deal with various scratch pad operations specified in Appendix J.

The final usage type for the random field is identified as ATU usage dealing with various address translation unit operations and has the following format.

Type ATU

| ATUO 5 | ATU1 2 | AT02 3 |
|---|---|---|

The first 5 bits (ATU 0) deal with the address translation unit operations, the next 2 ATU bits (ATU 1) define further ATU operations, and the final 3 ATU bits (ATU 2) define general operations, all as set forth in Appendix K.

The LAC Field

This 2 bit logical address control field controls the data that will be placed on the logical address bus, i.e. the field specifies the source for LA bits 1-31, in accordance with the following chart:

Specifies the source of LA<1-31>.

| Mnem | Value | Description |
|------|-------|-------------|
| DSN | 0 | LA<0-31> := WDLCH<0-31> or BYLCH<0-31> |
| DS | 1 | LA<0-31> & LAR<0-31>:= WDLCH<0-31> or BYLCH<0-31> |
| SP | 2 | LA = Scratch Pad;  LAR := Scratch Pad |
| IP | 3 | LA = PC + DISP;  LAR = PC + DISP<br>exception: when ICAT coded in ATUO,<br>                    LA = ICP;  LAR = ICP |

## The CPDS Field

This 5-bit CPD source select field determines what is placed on the CPD bus, i.e. the source for the CPD 0-31 bits. This field also controls the loading of the CPDR register on the arithmetic logic unit.

An NCPDR random field (see GEN Type random field) overrides the loading of the CPDR register and prevents such loading. The source select and other control operations for the CPDR field are specified in accordance with the chart shown in Appendix L.

## The MEMS Field

This 3-bit field defines the type of operating cycle which will be started for the memory (e.g. read cycle, a write cycle, a read-modify-write cycle) in accordance with the following chart:

| Mnem | Value | Description |
|------|-------|-------------|
| NOP | 0 | |
| RW | 1 | Start a read cycle for a word. |
| RD | 2 | Start a read cycle for a double-word. |
| RB | 3 | Start a read cycle for a byte. |
| S ③ | 4 | Start per MEMS field of previous non LAT start. During EFA routines, the IP supplies the control. |
| WW | 5 | Start a write or rmod cycle for a word. |
| WD | 6 | Start a write or rmod cycle for a double word. See below. |
| WB | 7 | Start a write or rmod cycle for a byte. |

## The MEMC Field

This 2- bit field defines the completion of a memory operation in accordance with the following chart:

| Mnem | Value | Description |
|------|-------|-------------|
| N | 0 | |
| R | 1 | Read or Rmod operation. |
| W | 2 | Write operation. $PMD<0-31> = DS<0-31>$ |
| A | 3 | Abort operation |

## The UPAR Field

This single bit field contains the odd parity of the micro-word. If an even parity error is detected the overall operation will stop at the current micro-location incremented by +1.

The above discussion summarizes each of the fields of the micro-instruction format in accordance with the invention. It is helpful also to describe below the usage of the 8 flags which can be defined.

Flag 0 is the width flag and defines either a narrow (16 bit) arithmetic logic unit operation or a wide (32 bit) arithmetic logic unit operation. Flag 1 is an address flag and defines whether the logical address is to be driven as a basic instruction address (e.g. for NOVA/ECLIPSE operation) in which case only bits 17-31 of the logical address are driven by the logical address latch on the arithmetic logic unit, the address translation unit or the instruction processor unit. If the flag indicates an instruction expended address than all bits 0-31 of the extended logical address are so driven.

Flags 2-7 are general purpose flags and can be used as desired by the general micro-code in sequencing. For example, flag 4 has been used as a "shift indirect" flag and, when NSH is coded in the SHFT field of the micro-instruction format (see the discussion thereof above), a shift is made either to the left or to the right depending on the setting of flag 4. Further, flag 5 has been used to define whether or not a floating point operation requires a double precision operation.

## UNIQUE MACRO-INSTRUCTIONS
**0039227**

In accordance with the unique extended processor system of the invention, as described above, certain operations are performed by the system which operations are in themselves uniquely indigenous to the overall operating capabilities of the system. Such operations are described in more detail below and can be best understood in conjunction with the system instruction set reproduced in Appendix B.

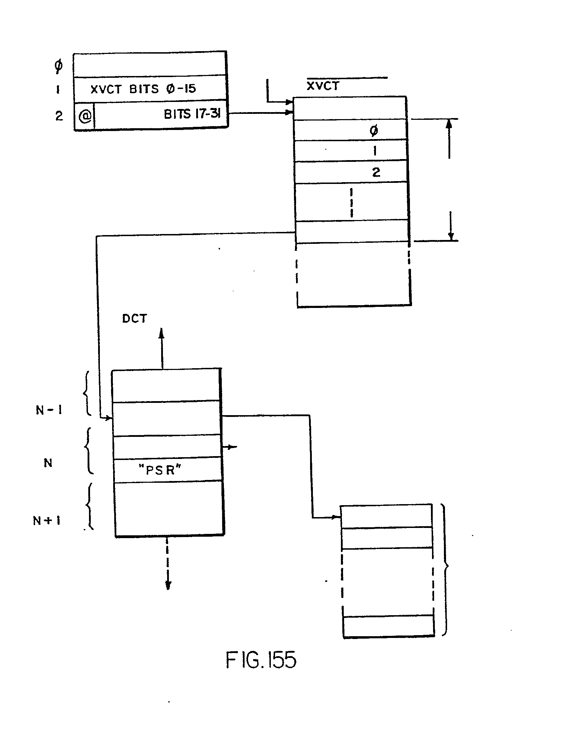

The first operation to be considered involves an interruption of a currently executing program by a peripheral device, for example, and the need to transfer control of the system to the appropriate interrupt operating sequence. One such unique interruption operation is related to the instruction designated as "EAGLE Vector on Interrupting Device" (having the abbreviated mnemonic description XVCT) in Appendix B (the instructions in the instruction set of Appendix B are listed in alphabetical order in accordance with their abbreviated mnemonic designations). An understanding of the XVCT interrupt operation can be obtained with the help of the diagrammatic representation of the memory locations shown in FIG. 155.

Interrupt requests are examined and identified in between the decoding of macroinstructions of a currently executing program and, if an interrupt request occurs, the contents of the stack registers for the current program are first saved in selected locations provided for such purpose in the current ring of execution (e.g. selected locations in Page 0 of the current ring).

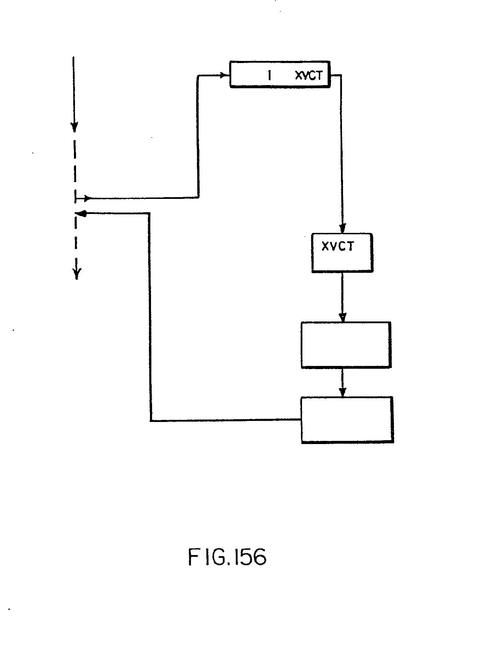

Since ring 0 is the ring reserved for special operations, e.g., interrupt operations, the systems must then cross to ring 0 (change the CRE bits 1-3 of the SBA's to identify ring 0) and load the now empty stack registers with the contents, relating to interrupt procedures, of selected locations in ring 0. Further, a selected location of ring 0, e.g., location 0, for

BAD ORIGINAL

example, is examined to determine if the interrupt is a "base level" interrupt, i.e., an interrupt condition in which no other prior interrupts are being processed, or as a "higher level" interrupt in which one or more other interrupts are already pending. If pending location 0 indicates that the interrupt is a base level interrupt (e.g., location 0 is a "zero"), as seen, for example, in FIG.155, then the interrupt code examines a selected location (e.g., location 1) of ring 0 to determine if such location contains the XVCT code (the first 16 bits of such location 1 corresponds to the first 16 bits of the XVCT code specified in Appendix B). If the interrupt is an XVCT interrupt, the stack registers are then loaded with the XVCT information to set up a XVCT stack, i.e., an XVCT stack "PUSH" as seen in FIG.156 .

The displacement bits 17-31 of location 1 (corresponding to the displacement bits 17-31 of the XVCT instruction shown in Appendix B) then represent an address which points to a selected location in a preloaded XVCT table in the main memory (see FIG.155) The "device code" information (a 16 bit offset code unique to each I/O device from which an interrupt request can be received) is

received from the particular device which has requested the interrupt and offsets to a selected address which points to a particular device control table (DCT) in main memory associated with that particular device (e.g., DCT associated with device N identified in XVCT table). The device control table contains the address which points to macroinstructions in main memory which are required in order to perform the interrupt routine requested by the interrupting device.

The DCT also contains a coded word ("MASK") which ·  ·

identifies which other device can be "masked out" (i.e., prevented from performing an interrupt while the interrupt is pending
for the particular device in question). Certain other devices
which have higher interrupt priority than the device in question
will not be so masked.

The DCT further defines the state of the system by
a PSR (processor status register) word which is loaded into
the PSR of the system and determines whether or not a fixed
point overflow condition is to be enabled.

Once the macroinstructions for the particular interrupt
routine requested by the particular device in question have been
performed, the previously stored contents of the system stack
registers relating to the program currently being executed by
the system prior to the interrupt are restored to the system
stack registers and such program continues its execution. The
overall operation is shown diagrammatically in FIG. 156.

Another operation unique to the system described herein
involves the loading of the segment base registers (SBR) of the
system and related to the LSBRA instruction described in the
instruction set of Appendix B. As explained above, the SBR's
of the systems are not located in main memory but are more
readily available on the ATU board of the system. The eight
segment base registers of the system each contain a double word
of a block of eight double words. The operation described here
relates to the loading of such SBR's with an eight double-word
block from memory, the starting address of which is contained
in a selected accumulator of the system (e.g., AC∅). The LSBRA
operation then loads such block into the SBR's in the manner
shown by the table designated in connection with the LSBRA
instruction in Appendix B.

In another operation indigenous to the system described here the 31-bit value contained in the program counter (PC), as discussed with reference to the instruction processor unit (FIG. 20), is added to the value of the displacement contained in a particular instruction word and the result is placed in the program counter, as shown with reference to address 148 and PC register 147 of FIG. 20. The displacement is contained in the instruction designated as WBR (Wide Branch) in the instruction set in Appendix B. Such operation is in effect a program counter "relative jump" and involves a 16-bit EAGLE address (PC) and an 8-bit offset, the latter contained as bits 1-8 of the WBR instruction.

In connection with EAGLE operation in the extended system of the invention, operations are performed to extend (i.e., to validate) 16-bit data to 32 bits. Such operations will involve either zero-extending (ZEX) or sign-extending (SEX) the 16-bit data, as shown in the ZEX or SEX instruction in Appendix B. Thus, for a zero extend operation the 16-bit integer which is contained in the source accumulator (ACS) identified by bits 1, 2 of the instruction, is zero-extended to 32 bits and the result is loaded into the destination accumulator (ACD), identified by bits 3, 4 of the instruction, with the contents of ACS remaining unchanged, unless such accumulators are the same accumulator. For a sign extend operation the 16-bit integer in the ACS is sign extended and placed in the ACD as above.

A further operation unique to the extended system of the invention involves an operation in which the signed 16-bit integer in bits 16-31 of the ACD is multiplied by the signed 16-bit integer in bits 16-31 of the ACS. Such operation is associated with the Narrow Multiply (NMUL) instruction in Appendix B. Since the system utilizes 32-bit accumulators, when multiplication of 16-bit words (i.e. "narrow" words) is required it is necessary to use only 16 bits of the 32-bit accumulator contents. An overflow occurs if the answer is larger than 16 bits, so that if the overflow bit "OVK" is in a selected state (e.g. OVK is a 1) an overflow indication occurs and the machine operation is stopped (a "trap" occurs) and an overflow handling routine must be invoked.

The above discussed unique operations of the system of the invention are all indigenous to the design and operation thereof and represent operations not required or suggested by other previously known data processing systems.

- 100-

APPENDIX A

| DATA GENERAL CORPORATION MANUAL NO . | TITLE |
|---|---|
| 015-000 009 | HOW TO USE THE NOVA COMPUTER |
| 014-000 092 | ECLIPSE M/600 PRINCIPLES OF OPERATION |
| 014-000 629 | INTERFACE DESIGN'S REFERENCE NOVA AND ECLIPSE LINE COMPUTERS |
| 014-000 617 | PROGRAMMER's REFERENCE NOVA 4 |
| 014-000 648 | ECLIPSE MV/8000 PRINCIPLES OF OPERATION |

APPENDIX B

Jump

JMP

| O | O | O | O | O | @ | INDEX | DISPLACEMENT |
|---|---|---|---|---|---|-------|--------------|

```
0   1   2   3   4   5   6   7   8                   15
```

Computes the effective address, E, and places it in the program counter. Sequential operation continues with the word addressed by the updated value of the program counter.

The 32-bit effective address generated by this instruction is constrained to be within the first 32 Kword of the current segment.

Carry remains unchanged and overflow is O.


Jump to Subroutine

JSR (@) displacement (,index)

| O | O | O | O | 1 | @ | INDEX | DISPLACEMENT |
|---|---|---|---|---|---|-------|--------------|

```
0   1   2   3   4   5   6   7   8               15
```

Increments and stores the value of the program counter in AC3, and then places a new address in the program counter.

Computes the effective address, E; then places the address of the next sequential instruction in bits 16-31 of AC3. Places E in the program counter. Sequential operation continues with the word addressed by the updated value of the program counter.

The 32-bit effective address generated by this instruction is constrained to be within the first 32 Kword of the current segment.

Carry remains unchanged and overflow is O.

NOTE: The instruction computes E before it places the incremented program counter in AC3.

Call Subroutine (Long Displacement)

LCALL opcode, argument count, displacement

| 1 | 0 | 1 | INDEX | 1 | 1 | 0 | 1 | 1 | 0 | 0 | 1 | 0 | 0 | 1 | @ | DISPLACEMENT |
|---|---|---|---|---|---|---|---|---|---|---|---|---|---|---|---|---|

0 1 2 3 4 5 6 7 8 9 10 11 12 13 14 15 16 17             47

| S | ARGUMENT CODE |
|---|---|

48                         63

Evalates the address of a subtroutine call.

If the target address specifies an outward ring crossing, a protection fault (code = 7 in AC1) occurs. Note that the contents of the PC in the return block are undefined.

If the target address specifies an inward ring call, then the instruction assumes the target address has the following format:

| NEW RING | UNUSED | GATE |
|---|---|---|

0 1   3 4             15 16                31

The instruction checks the gate field of the above format for a legal gate. If the specified gate is illegal, a protection (code = 6 in AC1) occurs and no subroutine call is made. Note that the value of the PC in the return block is undefined.

If the specified gate is legal, or if the target address specifies an intra ring crossing, the instruction loads the contents of the PC, plus four, into AC3. The contents of AC3 always references the current ring. If bit 0 of the argument count is 0, the instruction creates a word with the following format:

| OVK | OVR | O | O | O | O | O | O | O | O | O | O | O | O | O | O | O | O | ARGUMENT COUNT |
|-----|-----|---|---|---|---|---|---|---|---|---|---|---|---|---|---|---|---|----------------|

0   1   2  3  4  5  6  7  8  9  10  11  12  13  14  15  16  17                          31

This instruction pushes this word onto the wide stack. If a stack overflow occurs after this push, a stack fault occurs and no subroutine call is made. Note that the value of the PC in the return block is undefined. If bit 0 of the argument count is 1, then the instruction assumes the top word of the wide stack has the following format:

| DON'T CARE | O | ARGUMENT COUNT |
|------------|---|----------------|

0                                  15 16 17                          31

The instruction modifies this word to include the correct settings of OVK and OVR in bits 0 and 1.

Regardless of the setting of bit 0 of the argument count, the instruction next unconditionally sets OVR to 0 and loads the PC with the target address. Control then transfers to the word referenced by the PC.

## Load All Segment Base Registers
LSBRA

| 1 | 1 | O | O | O | 1 | 1 | 1 | 1 | O | 1 | 1 | 1 | O | O | 1 |
|---|---|---|---|---|---|---|---|---|---|---|---|---|---|---|---|

0   1   2   3   4   5   6   7   8   9   10  11  12  13  14  15

Loads the SBRs with new values.

AC0 contains the starting address of an 8 double word block.

The instruction loads a copy of the contents of these words into SRBs as shown in the table below:

| Double Word in Block | Destination | Order Moved |
|---|---|---|
| 1 | SBR1 | First |
| 2 | SBR2 | Second |
| 3 | SBR3 | Third |
| 4 | SBR4 | Fourth |
| 5 | SBR5 | Fifth |
| 6 | SBR6 | Sixth |
| 7 | SBR7 | Seventh |
| 8 | SBR8 | Eighth |

After loading the SBRs, the instruction purges the ATU. If the ATU was disabled at the beginning of this instruction cycle, the processor enables it now.

If an invalid address is loaded in SBR10, the processor disables the ATU and a protection fault occurs (code = 3 in AC1). This means that logical address are identical to physical addresses, and the fault is processed in physical address space.

The instruction leaves AC0 and carry unchanged; overflow is 0.
NOTE: This is a privileged instruction.


Narrow Multiply
NMUL    acs, acd

| 1 | ACS | ACD | 0 | 0 | 0 | 0 | 1 | 1 | 0 | 1 | 0 | 0 | 1 |
|---|---|---|---|---|---|---|---|---|---|---|---|---|---|
| 0 | 1  2 | 3  4 | 5 | 6 | 7 | 8 | 9 | 10 | 11 | 12 | 13 | 14 | 15 |

Multiplies the signed integer contained in bits 16-31 of ACD by the signed integer contained in bits 16-31 of ACS. If the result is outside the range of -32,768 to +32,767 inclusive, sets overflow to 1; otherwise, overflow is 0. Sign extends the lower 16 bits of the result to 32 bits and places these 32 bits in ACD. The contents of ACS and carry remain unchanged.

## Sign Extend

SEX   acs, acd

| 1 | ACS | ACD | 0 | 1 | 1 | 0 | 1 | 0 | 0 | 1 | 0 | 0 | 1 |
|---|---|---|---|---|---|---|---|---|---|---|---|---|---|
| 0 | 1  2 | 3  4 | 5 | 6 | 7 | 8 | 9 | 10 | 11 | 12 | 13 | 14 | 15 |

Sign extends the 16-bit integer contained in ACS to 32 bits and loads the result into ACD.  The contents of ACS remain unchanged, unless ACS and ACD are specified to be the same accumulator. Carry is unchanged and <u>overflow</u> is 0.

## Load PC

WBR   displacement

| 1 | DISP 0-3 | 0 | DISP 4-7 | 1 | 1 | 1 | 0 | 0 | 0 |
|---|---|---|---|---|---|---|---|---|---|
| 0  1   4 | 5 | 6   9 | 10 | 11 | 12 | 13 | 14 | 15 |

Adds the 31-bit value contained in the PC to the value of the displacement and places the results in the PC.  Carry is unchanged and <u>overflow</u> is 0.

NOTE:  The processor always forces the value loaded into the PC to reference a location in the current segment of execution.

## Wide Pop Block

WPOPB

| 1 | 1 | 1 | 0 | 0 | 1 | 1 | 1 | 0 | 1 | 1 | 1 | 1 | 0 | 0 | 1 |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Pops six double words off the wide stack and places them in the appropriate locations.

The popped words and their destinations are as follows:

| Double Word Popped | Destination |
|---|---|
| 1 | Bit 0 to carry; bits 1-31 to PC |
| 2 | AC3 |
| 3 | AC2 |
| 4 | AC1 |
| 5 | AC0 |
| 6 | Bit 0 to OVK; bit 1 to OVR; bit 2 to IRES; bits 17-31 are multiplied by 2 and incremented by 12. This number is subtracted from WSP. WSP is loaded with the result. |

If the instruction specifies an inward ring crossing, then a protection fault occurs and the current wide stack remains unchanged. Note that the return block pushed as a result of the protection fault will contain undefined information. After the fault return block is pushed, AC0 contains the contents of the PC (which point to the instruction that caused the fault) and AC1 contains the code 8.

If the instruction specifies an intra-ring address, it pops the six double word block, then checks for stack underflow. If underflow has occurred, a stack underflow fault occurs. Note that the return block pushed as a result of the stack underflow will contain undefined information. After the fault return block is pushed, AC0 contains the contents of the PC (which point to the instruction that caused the fault) and AC1 contains the code 3. If there is no underflow, execution continues with the location addressed by the program counter.

If the instruction specifies an outward crossing, it pops the six double word return block and checks for stack underflow. If underflow has occurred, a stack underflow fault occurs. Note that the return block pushed as a result of the stack underflow will contain undefined information. After the fault return block is pushed, AC0 contains the contents of the PC (which point to the instruction that caused the fault) and AC1 contains the

code 3. If there is no underflow, the instruction stores WSP and WFP in the appropriate page zero locations of the current segment. It then performs the outward ring crossing and loads the wide stack registers with the contents of the appropriate page zero locations of the new ring. Loads WSP with the value:

(current contents of WSP) - (2 x (argument count))

Checks for stack underflow. If underflow has occurred, a stack underflow fault occurs. Note that the return block pushed as a results of the stack underflow will contain undefined information. After the fault return block is pushed, AC0 contains the contents of the PC (which point to the instruction that caused the fault) and AC1 contains the code 3. If there is no underflow, execution continues with the location addressed by the program counter.

## Wide Return

WRTN

| 1 | 0 | 0 | 0 | 0 | 1 | 1 | 1 | 1 | 0 | 1 | 0 | 1 | 0 | 0 | 1 |
|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 |

Returns control from subroutines that issue a WSAVS or a WSAVR instruction at their entry point. Places the contents of WFP in WSP and executes a WPOPB instruction. Places the popped value of AC3 in WFP.

## Call Subroutine (Extended Displacement)

XCALL    opcode, argument count, displacement

| 1 | 0 | 0 | INDEX | 1 | 1 | 0 | 0 | 0 | 0 | 1 | 0 | 0 | 1 | @ | DISPLACEMENT | S | ARGUMENT COUNT |
|---|---|---|---|---|---|---|---|---|---|---|---|---|---|---|---|---|---|
| 0 | 1 | 2 | 3 | 4 5 6 7 | 8 | 9 | 10 | 11 | 12 | 13 | 14 | 15 | 16 | 17 | | 31 | 32 33    47 |

Evalues the address of a subroutine call.

If the target address specifies an outward ring crossing, a protection fault (code = 7 in AC1) occurs. Note that the contents of the PC in the return block are undefined.

If the target address specifies an inward ring call, then the instruction assumes the target address has the following format:

| NEW RING | UNUSED | GATE |
|---|---|---|
| 0 1   3 | 4                    15 | 16                    31 |

The instruction checks the gate field of the above format for a legal gate. If the specified gate is illegal, a protection fault (code = 6 in AC1) occurs and call is made. Note that the contents of the PC in the return block are undefined.

If the specified gate is legal, or if the target address specifies an intra-ring crossing, then the instruction loads the contents of the PC, + 3, into AC3. The contents of AC3 will always references the current segment. If bit 0 of the argument count is 0, then the instruction creates a word with the following format:

| OVK | OVR | RES | 0 | 0 | 0 | 0 | 0 | 0 | 0 | 0 | 0 | 0 | 0 | 0 | 0 | ARGUMENT COUNT |
|---|---|---|---|---|---|---|---|---|---|---|---|---|---|---|---|---|
| 0 | | | | | | | | | | | | | | | | 31 |

The instruction pushes this word onto the wide stack. If a stack overflow occurs after this push, a stack fault occurs and no call is made. Note that the value of the PC in the return block is undefined. If bit 0 of the argument count is 1, then the instruction assumes the top word of the wide stack has the following format:.

| DON'T CARE | 0 | ARGUMENT COUNT |
|---|---|---|
| 0                    15 | 16 | 17                    31 |

The instruction modifies this word to include the correct settings of OVK and OVR in bits 0 and 1.

Regardless of the setting of the argument count's bit 0, the instruction next unconditionally sets OVR to 0 and loads the PC with target address. Execution continues with the word references by the PC.

Zero Extend

ZEX acs, acd

| 1 | ACS | ACD | 0 | 1 | 1 | 0 | 1 | 0 | 1 | 1 | 0 | 0 | 1 |
|---|---|---|---|---|---|---|---|---|---|---|---|---|---|
| 0 | 1 2 | 3 4 | 5 | 6 | 7 | 8 | 9 | 10 | 11 | 12 | 13 | 14 | 15 |

Zero extends the 16-bit integer contained in ACS to 32 bits and loads the result into the ACD. The contents of ACS remain unchanged, unless ACS equals ACD. Carry is unchanged and overflow is 0.

## APPENDIX C

**ALU TESTS**

| Mnem | Value | Description |
|------|-------|-------------|
| CARRY | 10 | CARRY = 1 |
| LINK | 11 | LINK = 1 |
| RND | 12 | FPSR8 = 1 |
| TE | 13 | FPSR5 = 1 |
| CRY | 14 | CRY0 = 1 if FLAG0 = 1; CRY16 = 1 if FLAG0 = 0 |
| OVFL | 15 | OVR0 = 1 if FLAG0 = 1; OVR16 = 1 if FLAG0 = 0 |
| ALUNZ | 16 | ALU$<$0-31$>$ $<>$ 0 |
| SEQG | 17 | SIGN xor OVFLO.  For SUB, tests S $<$ R<br>For RSB, tests R $<$ S |
| D0 | 18 | D$<$0$>$ = 1 |
| D28 | 19 | D$<$28$>$ = 1 |
| D29 | 1A | D$<$29$>$ = 1 |
| D30 | 1B | D$<$30$>$ = 1 |
| D31 | 1C | D$<$31$>$ = 1 |
| COM1 | 1D | Commerical Test - Velidates date types |
| SEX | 1E | If D2ND = PMD previous cycle,<br>Test (FAU16 or FAU0) equal to 0 if the most<br>previous memory start was a (word or double word)<br>IF D2ND = NSRL & SHFT = SEX, Test TLCH16=0<br>ELSE always true |
| TL31 | 1F | TLCH31 = 1 |
| FNOP | 20 | Result of floating compare if CMPX coded previous:<br>    single precision (FLAG5 = 0): tests BEXP-AEXP $>$7<br>    double precision (FLAG5 = 1): ABS(BEXP-AEXP) $>$15<br>else tests for normalized mantissa on ALU 0-31$>$ |
| D24 | 21 | D$<$24$>$ = 1 |
|  | 22 | Unassigned |
| IOSKP | 23 | Commericial Test - used to detect I/O skips |
| COM2 | 24 | Commericial Test - Validates data types |
| SIGN | 25 | ALU0 = 1 if FLAG0 = 1; ALU16 = 1 if FLAG0 = 0 |
| MR30 | 26 | MREG$<$30$>$ = 1 |
| COMP | 27 | ACSR$<$2,3$>$ = ACDR$<$2,3$>$ (After any inc or dec) |
|  | 28 | Unassigned |
|  | 29 | " |

NOTE:

Conditions reflect state at the conclusion of the previous micro-instruction unless stated otherwise. Exception: Since ZLCH and TOVR LATCH hold data the second half for split cycle modes, then SIGN, CRY, DVFL and ALUNZ are effectively tested at the conclusion of the first half cycle during these modes.

ATU, INSTRUCTION PROCESSOR, AND IOC TESTS

| Mnem | Value | Description |
|------|-------|-------------|
| VWP | 30 | LA $<1-3> <$ ESR |
| CBLK | 31 | LA $<29,30,31> < 7$ |
| MMPU | 32 | MMPU on |
| ATU | 33 | ATU on |
| PURGE | 34 | ATU busy purging |
| PGVLD | 35 | Page valid, resident, not protected (previous start) |
| PGEXT | 36 | Page invalid, non-resident, or execute not allowed |
| PTVLD | 37 | Page Table invalid |
| PROT | 38 | A protection fault has occurred |
| SBVLD | 39 | SBR valid, and page table depth OK |
| GTCRE | 3A | Bits 1-3 of LA greater than CRE |
| EQCRE | 3B | Bits 1-3 of LA equal to CRE |
| LTCRE | 3C | Bits 1-3 of LA less than CRE |
|  | 3D | Reserved |
|  | 3E | Reserved |
| RINGO | 3F | CRE $<> 0$ |

U-SEQUENCER TESTS

| Mnem | Value | Description |
|------|-------|-------------|
| TRUE | 0 | Always true |
| INTR | 1 | Interrupt pending |
| CPD31 | 2 | CPD31 = 0 |
| IOB | 3 | IO not busy. Test the 3rd cycle after the command IOS. Continue testing (and reading if data in) until true |
| FLAG0 | 4 | FLAG0 = 1 |
| FLAG1 | 5 | FLAG1 = 1 |
| FLAG2 | 6 | FLAG2 = 1 |
| FLAG3 | 7 | FLAG3 = 1 |
| FLAG4 | 8 | FLAG4 = 1 |
| FLAG5 | 9 | FLAG5 = 1 |
| FLAG6 | A | FLAG6 = 1 |
| FLAG7 | B | FLAG7 = 1 |
| TFLG6 | C | Test FLAG6 = 1, then Toggle FLAG 6 |
| TFLG7 | D | Test FLAG7 = 1, then Toggle FLAG 7 |
| LCIR | E | Test CNTR$<2-5> <> 0$; then CNTRE$<2-5> :=$ CNTR$<2-5>$ - 1; If LCNT is coded, this test is on the value loaded and no decrement occurs |
| USMT | F | microstack empty |

## APPENDIX D

Absolute Address Conditional

| O | 2 | 3 | 4 | 9 10 | 19 |
|---|---|---|---|---|---|
| MODE (3) | POLARITY (1) | TEST (6) | AA (10) | | |

NOTE: The Absolute Address Field (AA) is extended to a full 12 bit address by concatenating the most significant 2 bits of the current PC (termed the Page bits) to the most significant side (left) of the AA:

| O | 1 2 | 11 |
|---|---|---|
| PAGE (2) | AA (10) | |

Instructions:

| Mode | Mnem | Explanation | True Action | False Action |
|---|---|---|---|---|
| 000 | CJMP | Conditional Jump | PC ← AA (10) | PC ← PC + 1 |
| 001 | CJSR | Cond. Jump Sub routine | PC ← AA (10) Push PC + 1 | PC ← PC + 1 |
| 010 | CRTN | Conditional Return | PC ← TOS Pop | PC ← AA (10) |
| 011 | TWB | Two Way branch | PC ← AA (10) Pop | PC ← TOS Pop |
| 100 | CPD | Load Stack from CPD and jump if True** -primarily used for stack restore after context save | PC ← AA (10) Push CPD* | PC ← PC + 1 Push CPD |

LCNT, CPOP and LOOP

| 0 | 2 | 3 | 4 | 9 10 | 11 12 | 19 |
|---|---|---|---|---|---|---|
| 110 | POLARITY (1) | TEST (6) | | Mod2 (2) | OTHER (8) | |

Instructions:

| Mod2 | Mnem | Explanation | True Action | False Action |
|------|------|-------------|-------------|--------------|
| 00 | LCNT | Load the 4 bit loop Counter with the ones complement of the 4 least significant bits of the OTHER field | PC ← PC+1 | PC ← TOS pop stack |
| 01 | CPOP | Conditional Pop; OTHER field may be used for loading the SPAR (Scratch Pad Addr. Reg) | PC ← PC+1 | PC ← TOS pop stack |
| 10 | LOOP | Conditionally Jump to TOS or continue and pop. OTHER field used as in CPOP | PC ← PC+1 pop stack | PC ← TOS |

Flag Controls

Instructions:

| POP | SET | Mnem | Explanation | True Action | False Action |
|-----|-----|------|-------------|-------------|--------------|
| 0 | 00 | F01 | Control Flag Set 0-1; FLAG 0 and FLAG 1 using CNTL field | PC ← PC+1 | PC ← TOS pop stack |
| 0 | 01 | F23 | Control Flag Set 2-3; FLAG 2 and FLAG 3 using CNTL field | PC ← PC+1 | PC ← TOS pop stack |
| 0 | 10 | F45 | Control Flag Set 4-5; FLAG 4 and FLAG 5 using CNTL field | PC ← PC+1 | PC ← TOS pop stack |
| 0 | 11 | F67 | Control Flag Set 6-7; FLAG 6 and FLAG 7 using CNTL field | PC ← PC+1 | PC ← TOS pop stack |
| 1 | 00 | FP01 | Control Flag Set 0-1: FLAG 0 and FLAG 1 using CNTL field | PC ← PC+1 pop stack | PC ← TOS pop stack |
| 1 | 01 | FP23 | Control Flag Set 2-3; FLAG 2 and FLAG 3 using CNTL field | PC ← PC+1 pop stack | PC ← TOS pop stack |

- 115 -

| POP | SET | Mnem | Explanation | True Action | False Action |
|---|---|---|---|---|---|
| 1 | 10 | FP45 | Control Flag Set 4-5; FLAG 4 and FLAG 5 using CNTL field | PC ← PC+1 pop stack | PC ← TOS pop stack |
| 1 | 11 | FP67 | Control Flag Set 6-7; FLAG 6 and FLAG 7 using CNTL field | PC ← PC+1 pop stack | PC ← TOS pop stack |

SPLIT

| Mod3 | FS | Mnem | Explanation | True Action | False Action |
|---|---|---|---|---|---|
| OO | O | SPLT01 | Conditional branch to TOS pop without pop; also, control flag set 0-1 with CNTL field (see 1.4) | PC ← PC+1 | PC ← TOS |
| OO | 1 | SPLT23 | Conditional branch to TOS pop without pop; also, control flag set 2-3 with CNTL field (see 1.4) | PC ← PC+1 | PC ← TOS |

Context Restore Instructions:

| Mod3 | Mnem | Explanation | True Action | False Action |
|---|---|---|---|---|
| O1 | RCF | Restore 8 bit loop counter and all 6 flaps from CPD bits 28-31 for counter; bits 8-13,24,25 for flags | PC ← PC+1 | PC ← TOS pop stack |
| 1O | REST | If FALSE; Restore after context (sets REST FF) | PC ← PC+1 | PC ← TOS pop stack |

Unconditional instructions:

Unconditional with 12 bit AA:

| O | 23 | | 56 | 78 | 19 |
|---|---|---|---|---|---|
| 111 | Ext Mode (3) | | XX | AA (12) | |

Instructions:

| Ext Mode | Mnem | Description | Actions |
|---|---|---|---|
| 000 | LEAP | 12 bit Jump | PC ← AA (12) |
| 001 | LSR | Leap to subroutine | PC ← AA (12); Push PC+1 |
| 010 | PUSH | Push 12 Bit AA | PC ← PC+1; Push AA (12) |
| 011 | LPOP | Leap and Pop | PC ← AA (12); Pop (STUS is loaded) |
| 100 | LPSH | Leap and Push | PC ← AA(12); Push AA(12) |
| 101 | CTXL | Context Leap | PC ← AA(12); Push SAVE |

Unconditional Dispatches:

```
O   23              56   78    16 17 18      19
┌───┬───────────┬─────┬───────┬──┬──────────┐
│111│Ext Mode(3)│ XX  │ AA(9) │X │ DSRC(2)  │
└───┴───────────┴─────┴───────┴──┴──────────┘
```

NOTE: The Absolute Address Field (AA) is extended to a full 12 bit address by concatenating 3 zeros to the least significant (right hand) side of the AA:

Formed AA:
```
O       8 9    11
┌───────┬────────┐
│ AA(9) │  OOO   │
└───────┴────────┘
```

Instructions:

| Ext Mode | Mnem | Description | Actions |
|---|---|---|---|
| 110 | DSPA | Unconditional Dispatch | PC ← Dispatch* |
| 111 | DSPR | Dispatch to Subroutine | PC ← Dispatch*; Push PC+1 |

APPENDIX E

Description of special modes:

MPY mode:   Code ALUS = DZ, ALUOP = RSB.   The following values
            will be forced:

| Previous half cycle | | forced this cycle | |
| PMR <30, 31> | MLTC | ALUS | ALUOP |
| --- | --- | --- | --- |
| OO | O | DZ | ADD |
| OO | 1 | DA | ADD |
| O1 | O | DA | ADD |
| O1 | 1 | DQ | ADD |
| 1O | O | DQ | RSB |
| 1O | 1 | DA | RSB |
| 11 | O | DA | RSB |
| 11 | 1 | DZ | RSB |

In both unsigned and signed multiply, the first operand (D bus) is sign-extended two bits to 34 bits (Except when CRYINS = U and DBUS<> MACC, in which case it is zero-extended)  The second operand (A, Z, or Q) is zero-extended to 34 bits for unsigned multiply and sign-extended for signed multiply.   (The extension of the second operand is made either from the 32 bit AREG, O, or from the 33 bit QBIT, QREG).   Thus, the result has 34 bits, with DS <X, Y> the two MSB's.

MLTC and PMR are clocked both half cycles in MPY mode.

DIV mode:   The forced value of ALUOP is dependent upon
            TCRYY (loaded with the divide carry) as shown below.
            For all other modes, TCRYY gets O.   ALUOP should be
            coded as SUB.

| TCRYY | ALUOP |
| --- | --- |
| O | ADD |
| 1 | SUB |

The first operand, the dividend, is in BREG.   It is extended one bit by LINK.   The second operand, the divisor in AREG, is zero-extended one bit.   Thus, the result has 33 bits with DS <Y> the MSB.

**0039227**

PRESC mode:    To get prescaled mantissa into QREG, code BREG -
                   AREG → ALU and CMPX during the previous u-instruction
                   to set up prescale hardware, and code + PASS - DZ OR
                   QREG + this cycle.   PRESC hardware forces ZA if
                   FACD >= FACS, else ZB, and right shifts the # of
                   nibbles   equal to ABS(BX - AX) mod 8.

NORM mode:    Code ADNM (MATH:FPOP random) for proper adjustment of
                   the exponent.
                   Code PASS second half for proper shifting of the
                   mantissa.   Shift is RSHN, PASS, LSH1, LSH2, LSH3,
                   LSH4, for MOF, 0, 1, 2, 3, 4 leading nibbles of zero.

All SPLIT CYCLE modes:   TOVR latch, ZLCH, and TLCH latch and hold
                   data during the 2nd cycle.

APPENDIX F

SHFT FIELD

The SHFT field has two basic functions: 1) Control of the inputs
for bit shifts into QREG or BREG, and 2) Control of the nibble
shift hardware which operates upon TLCH and outputs to the D bus.
Which function the SHFT field specifies is also governed by the
D2ND field.

NSHR type shifts

If the D2ND field contains NSHR, then the bit inputs are all one,
and the nibble hardware is controlled by the SHFT field as shown in
the following chart:

| SHFT Field Mnem | Value | TLCH loaded 1st half: A B C D E F G H | | | | | | | |
|---|---|---|---|---|---|---|---|---|---|
| | | D Bus source during second half: | | | | | | | |
| RSH1 | O | O | A | B | C | D | E | F | G |
| RSH2 | 1 | O | O | A | B | C | D | E | F |
| RSH3 | 2 | O | O | O | A | B | C | D | E |
| RSH4 | 3 | O | O | O | O | A | B | C | D |
| RSH5 | 4 | O | O | O | O | O | A | B | C |
| RSH6 | 5 | O | O | O | O | O | O | A | B |
| RSH7 | 6 | O | O | O | O | O | O | O | A |
| BEN6 | 7 | O | O | O | O | O | O | G | H |
| BEN5 | 8 | O | O | O | O | O | O | F | G |
| BEN4 | 9 | O | O | O | O | O | O | E | F |
| BEN3 | A | O | O | O | O | O | O | D | E |
| BEN2 | B | O | O | O | O | O | O | C | D |
| BEN1 | C | O | O | O | O | O | O | B | C |
| RSHN | D | 1 | A | B | C | D | E | F | G |
| EXP | E | (S & EXP) | A | B | C | D | E | F |
| @ACS | F | RIGHT SHIFT (ACSR $<2, 3> + 1$) | | | | | | | |

Notes: Exp − D0 := Fsign, D1 := EXP1$'$, D$<2$−$7>$ := EX$<2$−$7>$, and D$<8$−$31>$ gets TLCH right shifted two nibbles.

@ACS − D$<0$−$31>$ gets TLCH shifted right the number of times indicated by ACSR$<2, 3>$ + 1 with zeroes shifted in.

RSHN only works for split cycles. In Fxxx modes, it will act like RSH1.

NSHL type shifts.

If the D2ND field contains NSHL, then the bit inputs are all one, and the nibble hardware is controlled by the SHFT field as shown in the table below:

| SHFT Field Mnem | Value | TLCH loaded 1st half: A B C D E F G H D Bus source during second half: | | | | | | | |
|---|---|---|---|---|---|---|---|---|---|
| LSH1 | O | B | C | D | E | F | G | H | O |
| LSH2 | 1 | C | D | E | F | G | H | O | O |
| LSH3 | 2 | D | E | F | G | H | O | O | O |
| LSH4 | 3 | E | F | G | H | O | O | O | O |
| SWPB | 4 | C | D | A | B | G | H | E | F |
| SWPW | 5 | E | F | G | H | A | B | C | D |
| ZEXT | 6 | O | O | O | O | E | F | G | H |
| SEX | 7 | S | S | S | S | E | F | G | H |
| BSEX | 8 | S | S | S | S | S | S | G | H |
| ROTL | 9 | C | D | E | F | G | H | A | B |
| reserved | A | | | | | | | | |
| reserved | B | | | | | | | | |
| FPSR | C | (FPSR 0 - 15) | | | | O | O | O | O |
| DECC | D | O | O | O | O | O | O | O | H' |
| @FLG4 | E | @ACS; LEFT, RIGHT FOR FLAG 4 = 0,1 | | | | | | | |
| @ACS | F | LEFT SHIFT (ACSR <2, 3> + 1) | | | | | | | |

Notes: @FLG4 - Does a right or left shift depending upon the value of FLAG4, and shifts the number of nibbles indicated by ACSR <2, 3> + 1.

FPSR - The upper 16 bits of the Floating Point Status Register is placed on D <0-15> , and D <16-31> gets zeroes.

DECC produces a decimal correct on the least significant nibble.

BIT SHIFTS

If the D2ND field contains any value except NSHR or NSHL, then the
SHFT field controls the bit shift inputs as per the following
chart.   If D2ND contains NSHR or NSHL then the bit inputs are as
specified by the "ONE" mnemonic in the following chart.

| ALUD field: | | FLAGO = 1 Wide operation | | | | FLAGO = 0 Narrow operation | | | |
|---|---|---|---|---|---|---|---|---|---|
| | | RSHB or RSQB | RSQB | LSHB or LSQB | LSQB | RSHB or RSQB | RSQB | LSHB or LSQB | LSQB |
| SHFT mnem | Val | ROIO | QOIO | R31IO | Q31IO | R16IO | Q16IO | R31IO | Q31IO |
| ZZ | 0 | 0 | 0 | 0 | 0 | 0 | 0 | 0 | 0 |
| SSH | 1 | 0 | ALU31 | 0 | ALU0 | 0 | ALU31 | 0 | ALU16 |
| DRT | 2 | Q31 | ALU31 | Q0 | ALU0 | NVACRY | ALU31 | NVACRY | ALU16 |
| DSH | 3 | ALU0 | ALU31 | Q0 | 0 | ALU16 | ALU31 | Q16 | 0 |
| LNK | 4 | LINK | ALU31 | LINK | ALU0 | LINK | ALU31 | LINK | ALU16 |
| CAR | 5 | CARRY | ALU31 | CARRY | ALU0 | CARRY | ALU31 | CARRY | ALU16 |
| SRT | 6 | ALU31 | ALU31 | ALU0 | Q0 | ALU31 | ALU31 | ALU16 | Q16 |
| CRY | 7 | CRYO | ALU31 | Q0 | CRYO | CRY16 | ALU31 | Q16 | CRY16 |
| ONE | 8 | 1 | 1 | 1 | 1 | 1 | 1 | 1 | 1 |
| | 9,A | | Resvd. | | | | | | |
| CRYY | B | 1 | ALU31 | Q0 | CRYY | 1 | ALU31 | Q16 | CRYY |
| | C-F | | Resvd. | | | | | | |

Note:    ALC's code DRT in the SHFT field.    NVACRY = ALCCRY
         XOR TCRY16

- 123 -

APPENDIX G

CRYINS FIELD

ALU carry input select field. The use of this field is governed by the CSM RAND fields. There are 4 types of usage.

Type 0.

All modes except SFIXP, FFIXP, MPY, and DIV are type 0.

| Mnem | Value | Description |
|------|-------|-------------|
| Z | 0 | CRYIN = 0 |
| H | 1 | CRYIN = 1 |

Type 1.

Modes SFIXP and FFIXP. This field combines with bit 0 of the rand field. Rand type FIXP is used with type 1 CRYINS.

| CRYINS Mnem | CRYINS Value | CEXT Mnem | CEXT (RAND <0>) Value | Description |
|-------------|--------------|-----------|-----------------------|-------------|
| Z | 0 | N | 0 | CRYIN = 0 |
| H | 1 | N | 0 | CRYIN = 1 |
| Z,C | 0 | CARRY | 1 | CRYIN = CARRY |
| H,B | 1 | CARRY | 1 | CRYIN = CARRY |

Type 2.

MPY mode.

CRYIN = MLTC

| Mnem | Value | Description |
|------|-------|-------------|
| U | 0 | Unsigned multiplication |
| S | 1 | Signed multiplication |

Type 3.

DIV mode.

CRYIN = TCRYY

| Mnem | Value | Description |
|------|-------|-------------|
| | 0 | Unassigned |
| | 1 | Unassigned |

APPENDIX H

Type Maths

ROUND - Floating point Round Control

| Mnem | Value | Description |
|------|-------|-------------|
| NOP | O | |
| FRND | 1 | Add the ROUND BIT to the ALU result by forcing CRY24, and force O's into bits 24-31 of NSHL, NSHR, or PASS |

NOTE: FRND overides TRNC. Do not code FRND with PASS in a full cycle mode. Do not code FRND with NSHR: BEN <1-6 >, or NSHL: ZEXT, SEX, BSEX, FPSR, or DECC.

FPOP - Floating Point exponent, multiplication, and truncation.

| Mnem | Value | Description |
|------|-------|-------------|
| NOP | O | |
| | 1 | Unassigned |
| LDBQ | 2 | QBIT:= TCRYO |
| TRNC | 3 | Truncate. Force O's into bits 28-31 of PASS if FPSR <8> = O. (Only code with PASS & Split cycle) |
| SHMR | 4 | Shift MREG right 2 bits each half-cycle. MLTC and PMR are clocked both half cycles. |
| MSHQ | 5 | LDQB and SHMR |
| MRAX | 6 | LDMR and ADDX |
| LDMR | 7 | Load MREG each half for split cycle, once for full cycle. Do not read MREG concurrently. |
| LDEX | 8 | Load exp. BX<0-1> := EXP <0-1> = TLCH1 <br> BX <2-7> := EXP <2-7> = TLCH <2-7> |
| ADDX | 9 | Add exp. BX< 0-7> := EXP < 0-7> = BX<0-7> + AX<0-7> |
| SUBX | A | Sub exp. BX <0-7> := EXP <0-7> = BX<0-7> - AX <0-7> |

| Mnem | Value | Description |
|------|-------|-------------|
| CMPX | B | Compare exp   EXP$<$0-7$>$ = BX$<$0-7$>$ - AX$<$0-7$>$ |
| MDVX | C | Move exp      BX$<$0-7$>$ := EXP$<$0-7$>$ = AX$<$0-7$>$ |
| ADCN | D | Add Const. BX$<$0-7$>$ := AX$<$0-7$>$ + NAC$<$12-19$>$, EXP$<$0-7$>$ = AX$<$0-7$>$ |
| ADMN | E | Add norm.  BX$<$0-7$>$ := AX$<$0-7$>$ + NORM OFFSET$<$0-7$>$ EXP$<$0-7$>$ = AX$<$0-7$>$ |
| LDCN | F | BX$<$0-7$>$ := NAC$<$12-19$>$ , EXP$<$0-7$>$ := AX$<$0-7$>$ |

Notes:   EXP$<$0-7$>$ defaults to AX if no exponent u-order is coded.

NORM OFFSEI is 1, 0,-1,-2,-3,-4, for MOF, 0,1,2,3, or 4

leading nibbles of zeroes of ALU$<$0-31$>$.  (MOF can not

occur during logical operations).


Type Maths cont.

MISC - Scratchpad, Sign, Normalization and SPAR operations.

| Mnem | Value | Description |
|------|-------|-------------|
| NOP | 0 | |
| RDAA | 1 | SPAD addressed by NAC$<$12-19$>$ |
| RACS | 2 | SPAD addressed by 111000, OP1$<$2-3$>$ Used to address low order half of double precision FPAC's. |
| RACD | 3 | SAPD addressed by 111000, OP2$<$2-3$>$ Used to address low order half of double precision FPAC's. |
| WRSP | 4 | SPAD addressed by SPAR$<$0-7$>$ ; SPAD$<$0-31$>$ := CPD$<$0-31$>$ |
| WRAA | 5 | SPAD addressed by NAC$<$12-19$>$ ; SPAD$<$0-31$>$ := CPD$<$0-31$>$ |
| WANC | 6 | WRAA*NOCR |
| WACD | 7 | SPAD addressed by 111000, OP2$<$2-3$>$; SPAD$<$0-31$>$ := CPD$<$0-31$>$ Used to write low-order half of double precision FPAC's. |
| RSBR | 8 | SPAD addressed by 11101, LAR$<$1-3$>$, no load LAR |
| LDOP | 9 | ATU OP1$<$2-3$>$ := CPD$<$30-31$>$ , OP2$<$2-3$>$:= CPD$<$26-27$>$ |
| | A-F | Unassigned |
| LDSN | 10 | Load sign  Sign (BREG) := FSIGN = TLCHO |

- 126 -

| Mnem | Value | Description |
|------|-------|-------------|
| XORS | 11 | Sign(BREG) := FSIGN = Sign(BREG) XOR Sign (AREG)) |
| SMOV | 12 | Mov sign(BREG):= FSIGN = Sign (AREG) |
| SCOM | 13 | Move complement of sign  Sign(BREG) := FSIGN - Sign (AREG)' |
| NOCR | 14 | Force a zero to the carry input of the normalization prom. |
|      | 15 | Unassigned |
| SMNC | 16 | SMOV and NOCR |
| SCNC | 17 | SCOM and NOCR |
| LDFS | 18 | FPSR1 := (FPSR1 OR OVF); FPSR2 := (FPSR2 OR UNF); LDZN |
| XSFS | 19 | LDFS and XORS |
| SMFS | 1A | LDFS and SMOV |
| SCFS | 1B | LDFS and SCOM |
| LDSS | 1C | LDSN and LDZN |
| LDZN | 1D | FPSR7 := FSIGN: FPSR6 := 1 if ALU = 0, else := 0 |
|      | 1E | Unassigned |
|      | 1F | Unassigned |

APPENDIX I

Type Fixp

MISC1 - ALU loading control

| Mnem | Value | Description |
|------|-------|-------------|
| NOP | 0 | Unassigned |
| DEC1 | 1 | Force loading at least significant nibble of BREG if ALUD = NLD. (By forcing bit 1 of ALUD field to 1) |
| LALC | 2 | ALC conditional load |
| ABSV | 3 | Conditional loading of BREG and QREG<br>a) FLAGO = 1 loading enabled if ALU0 = 0<br>b) FLAGO = 0 loading enabled if ALU16 = 0 |
| NARO | 4 | Override FLAGO (wide Op) and force narrow ALU Status. Affects CRY, SIGN, OVFL, SEQG, ALUNZ tests, and LOVC, LDCY, & LCRY randoms. Does not affect loading CREG or bit shifts |
| | 5-F | Unassigned |

MISC2 - Carry, Overflow and Status randoms, (5 Bits)

| Mnem | Value | Description |
|------|-------|-------------|
| NOP | 0 | . . |
| RDAA | 1 | SPAD addressed by NAC$<$12-19$>$ |
| RACS | 2 | SPAD address by 111000, OP1$<$2-3$>$ Used to address low order half of double precision FPAC's |
| RACD | 3 | SPAD addressed by 111000, OP2$<$2-3$>$ Used to address low order half of double precision FPAC's |
| WRSP | 4 | SPAD addressed to SPAR$<$0-7$>$ ; SPAD $<$0-31$>$ := CPD$<$0-31$>$ |
| WRAA | 5 | SPAD addressed by NAC$<$12-19$>$ ; SPAD$<$0-31$>$ := CPD $<$0-31$>$ |
| | 6 | WRAA |

| Mnem | Value | Description |
|------|-------|-------------|
| WACD | 7 | SPAD addressed by 111000, OP 2<2-3>; SPAD<0-31> := CPD<0-31> Used to write low-order half of double precision FPAC's |
| RSBR | 8 | SAPD addressed by 11101, LAR<1-3>, no load LAR |
| LDOP | 9 | OP1<2-3> := CPD<30-31>, OP 2<2-3> := CPD<26-27> |
|  | A-F | Unassigned |
| LPSR | 10 | PSR<0-2> := D<0-2 >, Do not have uncompleted memory operation, because the next cycle may trap |
| COVR | 11 | PSR1 := 0, Clear OVR |
| SOVR | 12 | PSR1 := 1, Set DVR (see note) |
| LOVC | 13 | If FLAGO = 0, PSR1 := OVR16 + PSR1; CARRY := CRY16 If FLAGO = 1; PSR1 := OVRO + PSR1; CARRY := CRYO |
| COVK | 14 | PSRO := 0    Clear OVK |
| SOVK | 15 | PSRO := 1    Set OVK |
| LDCY | 16 | CARRY := DO, D16 for FLAGO = 1,0 |
| LCRY | 17 | CARRY := CRY |
|  | 18 | Unassigned |
| LFPS | 19 | FPSK <1-9> := DS<1-9> |
| SMOF | 1A | Set mantissa overflow FPSR4 := 1 |
| SDVZ | 1B | Set divide by zero FPSR3 := 1 |
| DCRY | 1C | CARRY := Decimal carry, code NSHL DECC concurrently |
| ALC | 1D | CARRY := ALC shift; Enable ALC skip logic |
| CLRC | 1E | CARRY := 0    Clear CARRY |
| SETC | 1F | CARRY := 1    Set CARRY |

NOTE:  If LSPR, SOVR, LOVC, or SOVK cause both OVR and OVK to be 1, a fixed point overflow trap will occur to uloc 10. At the end of the cycle at uloc 10, OVK will be set to 0.

### APPENDIX J

Type Gen

<u>REGS</u> - General and ACS, ACD Operations

| Mnem | Value | Description |
|------|-------|-------------|
| NOP | 0 | Unassigned |
| | 1 | Unassigned |
| | 2 | Unassigned |
| LDMR | 3 | $MREG<0-31> := D<0-31>$ ; Do not read MREG |
| | 4 | Unassigned |
| NCPDR | 5 | No-load CPDR |
| FRY | 6 | Force CARRY into CPDR if CPDR is loaded |
| | | If FLAG1 = 0  $CPDR<16>$ = CARRY |
| | | If FLAG1 = 1  $CPDR<0>$ = CARRY |
| RPSR | 7 | $CPDR<0-2> = PSR<0-2>$ if CPDR is loaded |
| SGR7 | 8 | $ACSR := GR7$ |
| LACS | 9 | $ACSR<0-3> := D<28-31>$ , SRC = $D<28-31>$ |
| LACD | A | $ACDR<0-3> := D<24-27>$ , DES = $D<24-27>$ |
| LREG | B | LACS & LACD |
| INCS | C | Inc ACSR.  $ACSR<0-3> := ACSR<0-3> + 1 \bmod 4$ |
| DECS | D | Dec ACSR.  $ACSR<0-3> := ACSR<0-3> - 1 \bmod 4$ |
| INCD | E | Inc ACDR.  $ACDR<0-3> := ACDR<0-3> + 1 \bmod 4$ |
| DECD | F | Dec ACDR.  $ACDR<0-3> := ACDR<0-3> - 1 \bmod 4$ |

<u>SPAR</u> - SPAR Operations

| Mnem | Value | Description |
|------|-------|-------------|
| NOP | 0 | |
| APCRE | 1 | $LA<1-3>$ = CRE      Append CRE |
| SCPD | 2 | $SPAR<0-7> := CPD<24-31>$ |
| SPAA | 3 | $SPAR<0-7> := NAC<12-19>$ |

<u>SPAD</u> - Scratchpad operations.  NOP, RDAA, RACS, RACD, WRSP, WRAA, WACD, RSBR, LDOP all as in Appendix I.  Values 6 and A to F unassigned.

APPENDIX K

Type ATU

ATUO - ATU Operations

| Mnem | Value | Description |
|---|---|---|
| NOP | 0 | |
| AON | 1 | ATU on.  Do not code IPOP concurrently |
| AOFF · | 2 | ATU off.  Do not code IPOP concurrently |
| LDCR | 3 | CRE $\angle 1-3>$ & ESR $\angle 1-3> := $ LA $\angle 1-3>$.  Don't start memory.  Code RSBR next cycle to read IO & LEF bits to ATU |
| PRGA | 4 | Purge the ATU translation buffer |
| LATUS | 5 | Restore ATU context from CPD bus.  See note. |
| RESR | 6 | ESR $< 1-3> := $ CRE $\angle 1-3>$, Reset the ESR after DFR loops |
| RMAX | 7 | Ring maximization check on LA (mem start not nec) |
| LPTA | 8 | Low order page table addresses memory Previous read (MD $\angle 18-31>$), LAR $\angle 13-21> \rightarrow$ PHY $\angle 8-31>$ |
| OPAD | 9 | Object page table addresses memory Previous read (MD $\angle 18-31>$), LAR $\angle 22-31> \rightarrow$ PHY $\angle 8-31>$ If test condition true, load ATU Translation buffer Protection $< 0-2>$ , Translation $< 8-21> \leftarrow$ MD $\angle 2-4>, \angle 18-31>$ ;  Set valid; Tag $\angle 2-14> \leftarrow$ LAR $\angle 2-14>$; Buffer addressed by LA $\angle 1, 15-21>$.  Use only during LAT trap |
| SIO | A | Send IO Command or Data |
| LMAP | B | Protection $\angle 0-2>$, Translation $\angle 8-21> \leftarrow$ CPD $\angle 2-4, 18-31>$ Valid $\leftarrow$ CPDO.  Buffer addressed by LA $< 1, 15-21>$ |
| WRRF | C | CPD $\angle 26-27> \rightarrow$ Mod, Ref bits addressed last cycle |
| | D | Unassigned |
| DMAP | E | DDA MAP; Loads the MMPU data from the CPD bus. |
| CDR | F | CCP data; CDR $\angle 0-15> := $ CPD $\angle 16-31>$ |
| MMPON | 10 | If user mode enabled, turn on ATU |

| Mnem | Value | Description |
|------|-------|-------------|
| | 11 | Unassigned |
| | 12 | Unassigned |
| | 13 | Unassigned |
| FHLT | 14 | Force the IP to half state to allow single step or continue.  CCP halt flag must be set. |
| IPRS | 15 | Parse IDR: Used after XCT or to clear an EFA after trap |
| IPLD | 16 | ICP<1-31> := LA <1-31>, LENGTH := CPD <30, 31> |
| PICXT | 17 | XCT and inhibit LEF mode for XCTed opcode |
| IPST | 18 | IP STRT: LA→PC; CPA→IP Physical Page, APCRE |
| IPCN | 19 | IP CANCEL |
| ICAT | 1A | ICP→LA; CPA→IP Physical Page register |
| DISI | 1B | Disable interrupts one instruction Do not code an IPOP concurrently with DISI |
| IOFF | 1C | ION off.  (Do not code IPOP concurrently) |
| ION | 1D | ION on, DISI.  (Do not code IPOP) |
| XCT | 1E | CPD<16-31> is inserted into the instruction stream.  Code IPRS next cycle and IPOP the next. The IP deocde prom must contain O instruction length |
| SKIP | 1F | Skip the next instruction.  Takes 1 cycle to do.  Do not code SKIP after an IPST. Do not code a memory operation after a skip |

ATU1 - More ATU operations

| Mnem | Value | Description |
|------|-------|-------------|
| NOP | O | |
| APCRE | 1 | LA <1-3> = CRE    Append CRE to LA |
| DFR | 2 | Increment Defer counter, ESR := LA <1-3> |
| SPAA | 3 | SPAR <0-7> := NAC <12-19> |

ATU2 - General

| Mnem | Value | Description |
|------|-------|-------------|
| NOP | 0 | |
| BYLCH | 1 | Force BYLCH regardless of memory start type |
| RDAA | 2 | SPAD addressed by NAC<12-19> |
| LDOP | 3 | OP1 := CPD <30-31>, OP2 := CPD <26-27> |
| WRSP | 4 | SPAD addressed by SPAR<0-7> ; SPAD<0-31> := CPD <0-31> |
| WRAA | 5 | SPAD addressed by NAC <12-19> ; SPAD<0-31> := CPD<0-31> |
| . | 6 | Unassigned |
| | 7 | Unassigned |

Note: ATU state for ATUO: LATUS and CPD Source:ATUO

| Bits | | Bits | |
|------|------|------|------|
| 0 | Was IPST* | 13 | Was single reference |
| 1-3 | 0 | 14-15 | 0 |
| 4 | Was PC Ref | 16 | EFA* |
| 5 | Was IC Ref | 17-19 | ESR <1-3>* |
| 6 | Enable Split* | 20-22 | 0 |
| 7 | 0 | 23 | Usr md intr |
| 8 | Write @ | 24,25 | 0 |
| 9-10 | Mode < 0-1> | 26 | Mod* |
| 11,12 | 0 | 27 | Ref* |
| | | 28-31 | RF <0-3 >* |

*ATUO only

APPENDIX L

## CPDS FIELD

| Mnem | Value | Description |
|---|---|---|
| NOP | O | CPD <0-31> = 0, No load CPDR |
| ZERO | 1 | CPDR <0-31> := CPD <0-31> = O |
| FPU1 | 2 | Reserved for future use by Floating Point hardware |
| FPU2 | 3 | Reserved for future use by Floating Point hardware |
| MSB | 4 | ALU Status Buffer |
| | | CPDR <0-31> := CPD <0-31> . CPD <0-23> = 0, CPD <24-27> = ACDR <0-3>, CPD <28-31> = ACSR <0-3> |
| DSPCH | 5 | No load CPDR. Used for dispatches |
| | | CDP <0-31> = O's, PRES <0-3> , DS <24-31> |
| IPS | 6 | CPDR <0-31> := CPD <0-31> ; CPD <0-25,28,29> = O; CPD <26-27> = Length'; CPD 31 = ION, CPD30 = IDRA-VALID |
| DSR | 7 | CPDR <0-31> := CPD <0-31> = DSR <0-31> |
| DISP | 8 | CPDR <0-31> := CPD <0-31> = DISP <0-31> only valid during IPOP |
| SPAD | 9 | CPDR <0-31> := CPD <0-31> = Scratch pad <0-31> |
| PC | A | CPDR <0-31> := CPD <0-31> = O, CRE <0-2>, PC <4-31> |
| IOC | B | I/O Channel Data Register |
| | | CPDR <0-31> := CPD <0-31> = O, IOC <0-15> |
| LAR | C | ATU Logical Address Register |
| | | CPDR <0-31> := CPD <0-31> = LAR <0-31> |
| PHY | D | CPDR <0-31> := CPD <0-31> . CPDO = Validity, 1 = Hit 2-4 = PROT <1-3>, 5-17 = TAG <2-14>, 18-31 = PHY <8-21> |
| ATUF | E | CPDR <0-31> := CPD <0-31> := ATU fault code & SPAR. Clears faults |
| ATUO | F | CPDR <0-31> := CPD <0-31> := R&M Bits of page addressed by LA & ATU state. See note under ATU randoms |
| CIR | 10 | CPDR <0-31> := CPD <0-31> = CCP Command bits 0-17 = 0, 18-30 = CIR <18-30> 31 = con request |
| WIDE | 11 | CPDR <0-31> := CPD <0-31> = CCP Data bits 0-15 = 0, 16-31 = WIDE <10-31> |
| | 12 | Unassigned |

| Mnem | Value | Description |
|------|-------|-------------|
| RACS | 13 | $CPDR <0-31> := CPD <0-31> = 0$'s, $ACSR <0-3>$ |
| UCTR | 14 | Microsequencer Loop Counter. $CPDR <0-31> := CPD <0-31>$ Bits 0-7, 16-19 undefined, 8-18 = $FLAGS <0-5>'$ 14 = 1, 15 - $TOS <0>$, 20-23 = $TOS <4-7>$, 24-25 = $FLAGS <6-7>'$, 26-27 = 0, 28-31 = $CNTR <2-5>'$ |
| UTOS | 15 | Microsequencer Top of Stack. $CPDR <0-31> := CPD <0-31>$ BITS 0-7,16-19 undefined, 8-13 = $FLAGS <0-5>'$ 14 = 1, 15 = $TOS <0>'$, 20-31 = $TOS <4-15>'$ |
|  | 16-1E | Unassigned |

Note: The last u-instruction of each routine must code DISP in CPDS to load CPDR with the displacement for the next instruction.

CLAIMS

1.      A data processing system comprising central processor means responding to macro-instructions to produce microcontrol signals and including arithmetic-logic means responsive to selected ones of the microcontrol signals for performing arithmetic or logical operations, and memory means for storing information for use in the data processing system, characterised by instruction processor means (12) for decoding macro-instructions to produce a starting address of one or more micro-instructions; micro-sequencing means (13) responsive to said starting address for providing a sequence of one or more micro-instructions for producing a plurality of said microcontrol signals, address translation.means (14) responsive to selected ones of said microcontrol signals for converting logical addresses into physical addresses; and in that said memory means include main memory means (16) for storing said information; temporary storage means (17) for storing a selected portion of said information and having at least one set of input and output ports; controller means (18) interconnected between said main memory means and said temporary storage means for controlling the transfer of information between said main memory means and said temporary storage means; and first means (19, 20) for interconnecting said at least one set (17A) of input and output ports with said instruction processor means (12), said arithmetic logic means (11) and said address translation means (14) for transferring information therebetween.

2.      A data processing system in accordance with claim 1, characterised in that said first interconnecting means (19, 20) includes a first address bus (19) for transferring address information; and a first data bus (20) for transferring non-address information.

- 136 -

3. A data processing system in accordance with claim 1 or 2, characterised in that said temporary storage means (19) includes another set (17B) of input and output ports, and by an input/output channel means (23) for communicating with one or more input/output devices external to said data processing system; and second means (21, 22) for interconnecting said another set (17B) of input and output ports with said input/output channel means for transferring information therebetween.

4. A data processing system in accordance with claim 3, characterised in that said second interconnecting means (21, 22) comprises a second address bus (21) for transferring address information; and a second data bus (22) for transferring non-address information.

5. A data processing system in accordance with claim 4, characterised by a further data bus (25) interconnecting said instruction processor means (12), said arithmetic logic means (11), said microsequencing means (13), said address translation unit (14) and said input/output channel means (23) for transferring non-address information among said interconnected means; logical address bus means (25) interconnecting said instruction processor means (12), said arithmetic logic means (11), said microsequencing means (13), said address translation unit (14) and said input/output channel means (23) for transferring logical address information among said interconnected means; and physical address bus means (27) interconnecting said instruction processor means (12), said arithmetic logic means (11), said microsequencing means (13), said address translation unit (14) and said input/output channel means (23) for transferring physical address information among said interconnected means.

6. A data processing system in accordance with claim 5, characterised by means for controlling the transfer of information at said one and said another sets of input and output ports of said temporary storage means so that said first interconnecting means provides for transfer of information at said one set of ports during a first portion of an operating time cycle of said data processing system and for transfer of information at said another set of ports during a second portion of said operating time cycle (Fig 40).


7.          A data processing system which utilizes first logical addresses containing a first number of address bits and second logical addresses containing a second number of address bits, the system comprising means for providing a plurality of instruction words a first plurality of which require the use of said first logical addresses and a second plurality of which require the use of said second logical addresses, said instruction words each including one or more selected bits for identifying the logical addresses used by said instruction words as being either said first logical addresses or said second logical addresses;  decode means-responsive to said instruction words, for decoding said instruction words, the decoding thereof producing address descriptor bits, one or more selected ones of said address descriptor bits signifying which type of logical address is required by the decoded instruction; means for converting logical addresses signified as first logical addresses having said first number of bits into logical addresses containing said second number of bits; and means for translating said converted logical addresses or for translating said second logical addresses into physical addresses containing said second number of address bits.


8.          A system in accordance with claim 7 wherein said first logical addresses have fewer bits than said second logical addresses.


9.          A system in accordance with claim 8 wherein said first logical addresses are logical word addresses which have fifteen bits and said second logical addresses are logical word addresses which have thirty-one bits.

10.     A system in accordance with claim 8 wherein said first logical addresses are logical byte addresses which have sixteen bits and said second logical addresses are logical byte addresses which have thirty-two bits.

11.     A system in accordance with claim 7, 8, 9 or 10 wherein said decode means comprises programmable read-only-memory means.

12.     A system in accordance with claim 11 wherein said programmable read-only-memory means includes a first logic means responsive to said one or more selected bits for decoding only instruction words which use said first logical addresses; and a second logic means responsive to said one or more selected bits for decoding only instruction words which use said second logical addresses,  said first and second logic means being arranged to operate simultaneously in response to said instruction words for decoding said first plurality of instruction words and said second plurality of instruction words on a non-mutually exclusive basis.

13.      A system in accordance with claim 12 wherein said address translation means includes translation storage means capable of storing first memory allocation data for determining physical addresses in response to said converted first logical addresses and further capable of storing second memory allocation data for determining physical addresses in response to either said converted first logical addresses or said second logical addresses; means for selectively supplying said first memory allocation data or said second memory allocation data to said translation storage means, said selectively stored memory allocation data responding to corresponding converted first logical addresses or second logical addresses to produce said physical addresses.

14.     A system in accordance with claim 13 and further including means responsive to at least one bit of said converted first logical addresses or said second logical addresses for identifying whether the address to which said translation storage means responds is a first logical address or a second logical address.

15.     A system in accordance with claim 13 and further including means for determining whether said first memory allocation data or said second memory allocation data is to be used to produce said phusical addresses.

16.     A system in accordance with claim 13 wherein logical addresses to be used in said system are grouped in blocks thereof, each logical address including a plurality of tag bits for identifying in which block the logical address belongs and said translation storage means stores selected memory allocation data for use in translating selected blocks of logical addresses into physical addresses, said system further including tag storage means for storing the tag bits of the selected blocks of logical addresses which correspond.to the memory allocation data stored in said translation storage means; and means for comparing the tag bits of logical addresses stored in said tag storage means with the tag bits of an input logical address to be supplied to said translation storage means for translation thereof into a physical address for identifying whether said input logical address corresponds to a logical address of one of said selected blocks thereof.

17.     A system in accordance with claim 16 wherein the system includes memory means for storing a plurality of page tables each of which contain memory allocation data for use in translating one or more selected blocks of logical addresses; means responsive to an indication from said comparing means that the memory allocation data for translating said input logical address is not available in said.translation storage means for accessing new memory allocation data capable of translating said input logical address from said page tables in said memory means; and means for replacing
memory allocation data currently stored in said translation storage
means with said new accessed memory allocation data.


18.        A system in accordance with claim 17 and further including
means for indicating a page table fault if the page table required
to be accessed from said memory means is not resident therein.


19.        A system in accordance with claim 17 wherein the memory
allocation data to be accessed from a page table in said memory
means can be accessed directly as a one-level page table
access or can be accessed indirectly via an intermediate page table
as a two-level page table access; and further including means for
determining whether said accessing is a one-level page table
access or a two-level page table access.


20.        A system in accordance with claim 19 wherein said system
includes means for providing a one-level page table access in
response to an input logical address, said means comprising means
responsive to a selected field of said input logical address for
obtaining a first address identifying the starting address of a
selected page table in said memory means; means responsive to
another selected field of said input logical address representing
a selected offset from the starting address of said selected page
table to provide a page table entry address at said offset; and
means for extracting a selected field of said page table entry
address requesting the memory allocation data for said input logical
address and for placing said memory allocation data in said
translation storage means.


21.        A system in accordance with claim 17 wherein said system
includes means for providing a two-level page table access in
response to an input logical address, said means comprising means
responsive to a selected field of said input logical address for
obtaining a first address identifying the starting address of a
first selected page table in said memory means; means responsive to
another selected field of said input logical address representing a first selected offset from the starting address of said first
selected page table to provide a first page table entry address at
said first offset; means responsive to a selected field of said
first page table entry address for obtaining a second address
identifying the starting address of a second selected page table
in said memory means; means responsive to still another field of
said input logical address representing a second selected offset
from the starting address of said second selected page table to
provide a second page table entry address at said second offset;
and means for extracting a selected field of said second page
table entry address representing the memory allocation data for
said input logical address and for placing said memory allocation
data in said translation storage means.

22.      A system in accordance with claim 19 wherein the bits
of a further selected field of said input logical address are all
zero when a one-level page table access is required for said
input logical address; and means for indicating a further page table
fault when said one-level or two-level page table determining
means determines that said page table access is a one-level access
and said further selected field of said input logical address
includes one or more non-zero bits.

23.      A data processing system which utilizes memory storage
means for storing a plurality of different groups of data, said
memory storage means being capable of storing said different groups
. of data at different designated locations thereof, said designated
locations being identifiable as storage segment locations having a
descending order of protection with respect to data reference accesses
by an operator, the addresses of data in each group thereof having
a plurality of selected segment bits which identify the storage
segment location in which said data is stored, said system
comprising means for responding to said selected segment bits of an address which identify the storage segment location at which a data reference access is requested to compare said selected segment bits with a plurality of previously selected segment bits which identify the storage segment location at which a requested data reference access has already been provided with respect to a preceding address; and means responsive to said comparing means for prohibiting a data reference access to an address at a storage segment location which said selected segment bits identify as a segment location having a lower order of protection than the segment location identified by said previously selected segment bits.

24.     A system in accordance with claim 23 wherein said comparing means includes means for providing a plurality of selected segment bits which correspond to the selected segment bits of an accessed address which identify the storage segment in which the data reference corresponding to said accessed address is stored; means responsive to the segment bits of an accessed address and to the segment bits of the next address to be accessed to determine the order of protection of the storage segment of said next address relative to the previously accessed address to provide a segment control signal when said next address corresponds to a data reference stored in a sotrage segment location having a lower order of protection than the storage segment location of a data reference at the previously accessed address.

25.     A system in accordance with claim 24 wherein said data reference access prohibiting means includes means responsive to said segment control signal for producing a coded error protection signal which indicates that the data reference at said next address is in a storage segment location which is prohibited from access; and means responsive to said coded error signal for producing a coded fault signal identifying that a specified fault has occurred due to the presence of said coded error protection signal.

26.         A system in accordance with claim 23 and further
including means for providing access to data references in a current
storage segment; means for providing program control instructions
which call for access to subroutines stored in a storage segment
location different from the storage location currently being used
for data references; means responsive to said program control
instructions for determining whether a specified called storage
segment in which a subroutine is located has a higher order of
protection than said current storage segment; and means further
responsive to said program control instruction when said called
storage segment has said higher order of protection for providing
entry into said called storage segment and access to a subroutine
therein. .

27.         A system in accordance with claim 26 and further
including means for indicating a subroutine call fault condition
when said called storage segment has a lower order of protection
than said current storage segment.

28.         A system in accordance with claim 26 and further
including means for providing a program control instruction which
requires a return from operation with respect to a called storage
segment to operation with respect to a previously used current
storage segment;  means for determining whether said previously
used current storage segment has a lower order of protection than
said called storage segment; and means responsive to a return
address in said previously used current storage segment for providing
access to said return address when said previously used current
storage segment has said lower order of protection.

29.         A system in accordance with claim 28 and further
including means for indicating a return fault condition when said
previously used current storage segment has a higher order of
protection than said called storage segment.

30.    A system in accordance with claim 26 wherein said entry providing means includes means responsive to said program control instruction to provide a branch address including a first field identifying the called storage segment and a second field specifying a coded gate number; said called storage segment having a storage location which identifies an array of gate numbers resident in said called storage segment; means for comparing the coded gate numbers of said branch address with the maximum gate number resident in said called storage segment; means for permitting said entry into said called storage segment and access to the subroutine therein when said coded gate number is determined to be less than said maximum gate number.

31.    A system in accordance with claim 30 and further including means for indicating a call fault condition when said coded gate number is determined to be equal to or greater than said maximum gate number.

32.    A data processing system having a memory system, said memory system comprising a main memory storage means capable of storing a first plurality of blocks of data words; an intermediate cache storage means capable of storing a second plurality of blocks of data words corresponding to a selected number of said first plurality of blocks of data words stored in said main memory storage means; and control means connected between said main memory storage means and said intermediate cache storage means for controlling the transfer of blocks of data words between said main memory storage means and said intermediate cahce storage means.

33.    A data processing system in accordance with claim 32 wherein said intermediate cache storage means is capable of accepting an address which includes a first plurality of tag bits, a second plurality of index bits, and a third plurality of word pointer bits; and further including tag store means for storing a block of tag bits combinations, each combination identifying one of the second plurality of blocks of data words stored in said intermediate cahce storage means which correspond to said selected number of said first plurality of blocks of data words in said main memory storage means; and tag identifying means responsive to the gat bits of an incoming address signal which is supplied to said intermediate cache storage means for comparing the tag bits of said incoming address to the tag bit combinations stored in said tag store means for supplying a tag comparison signal which signifies whether or not said incoming address corresponds to an address in the plurality of blocks of data words stored in said intermediate cache means.

34.     A system in accordance with claim 33 and further including means responsive to said tag comparison signal for indicating a cache fault condition if the tag bits of said incoming address do not so correspond and for indicating a cache operate condition if the tag bits of said incoming address do so correspond.

35.     A system in accordance with claim 34 and further including index identifying means responsive to the index bits of an incoming address for identifying a selected one of said second plurality of blocks of data words stored in said intermediate cache storage means.

36.     A system in accordance with claim 35 and further including word identifying means responsive to the word pointer bits of an incoming address for identifying the location of a selected one of the data words in said selected one of said second plurality of blocks of data words stored in said intermediate cache storage means; and means for accessing the selected one of data words in said intermediate cache storage means when said tag comparison signal indicates a cache operate condition.

37.     A system in accordance with claim 26 wherein said tag identifying means, said index identifying means, said word identifying means, and said accessing means are arranged to permit the overlapping of the identification and accessing operations with respect to a data word with the identification and accessing operations with respect to a successive data word.

38.     A system in accordance with claim 37 and further including means for providing a direct data transmission path for transferring a block of data words directly to said main memory storage means via said control means without storing said directly transferred block of data words in said intermediate cache storage means.

39.     A data processing system in accordance with claim 32 wherein said control means includes means for transferring blocks of data words in sequence from said main memory storage means to said intermediate cache storage means, each block of data words having a selected number of data words therein; means for detecting all single-bit errors in the selected number of data words of a block thereof which is being so transferred prior to the correction of any of said detected single-bit errors; and means for correcting all single-bit errors in said selected number of data words of said block thereof which is being so transferred prior to detecting single-bit errors in a subsequent block of data words which is to be subsequently transferred.

40.     A data processing system in accordance with claim 32 wherein said intermediate cache storage means includes first address and data ports providing access to said intermediate cache storage means by first selected data request sources during an operating time cycle of said data processing system; and second address and data ports providing access to said intermediate cache storage means by second selected data request sources during an operating time cycle of said data processing system.

41. A data processing system in accordance with claim 40 and further including means for enabling said first address and data ports for providing access to said intermediate cache storage means by a first selected data request source only during a first portion of any data processing operating time cycle and for enabling said second address and data ports for providing access to said intermediate cache storage means by a second selected data request source only during a second portion of any data processor operating time cycle.

42. A data processing system in accordance with claim 32 wherein said intermediate cache storage myans is arranged to store portions of data words within successive bounded locations within said intermediate cache storage means, said stored data words being capable of having a portion thereof stored in a first bounded location and the remaining portion thereof in a second subsequent bounded _ocation of said intermediate cache storage means so that when said data word is accessed from said intermediate cache storage means the location of said data word portions which form said accessed data word are incorrect; and means for rotating the locations of said data word portions for said incorrectly formed accessed words so that the accessed data word is correctly formed, said rotating means performing the rotating of said locations without interrupting the overall data word accessing operation.

43. A data processing system having one or more processor units and a memory interface control means, and a memory system comprising one or more memory modules for storing data, the location of the data bits of said data being identified by a row and column designation for each such module; means responsive to a select control signal from said interface control means, said select control signal identifying a selected module of said one or more memory modules; means responsive to a row control signal from said interfact control means, said row control signal identifying a row of said selected memory module; and means responsive to a column control signal from said interface control means, said column control signal identifying a column of said selected module.

44.     A data processing system in accordance with claim 43 said memory system further including means responsive to a load control signal from said interface control means, said load control signal controlling the loading of data being supplied for storage into said selected memory module; and means responsive to an access control signal from said interface control system, said access control signal controlling the supplying of data which is being accessed from storage in said selected memory module.

45.     A data processing system in accordance with claim 43 or 44 said memory system further including means responsive to a refresh control signal from said interface control system, said refresh control signal controlling the refreshing of data which is stored in said selected module.

46.     A data processing system in accordance with claim 45 and further wherein each of said memory modules includes a memory array which comprises a plurality of memory storage planes for storing data; means responsive to said select, row, column, load and access control signals for providing row and column addresses in sequence for data in each of said memory storage planes whereby data can be stored or accessed in sequence in to or from, respectively, said plurality of memory storage planes.

47.     A data processing system in accordance with claim 46 where said row and column address providing means include a plurality of latch and driver logic means; and time means for providing operation of said latch and driver logic means in a selected sequence.

48.        A data processing system capable of handling a first plurality of instructions forming a first designated basic set thereof and a plurality of second instructions forming a second designated extended set thereof, each of said first or second instructions including an operating code portion thereof and being capable of including at least one displacement portion thereof, said system including instruction processor means comprising instruction decode register means having at least two register regions, a first of said regions designated to temporarily store said operating code portion of an instruction and said at least one other region designated to temporarily store said at least one displacement portion; instruction decode shifter means responsive to an incoming instruction of said basic instruction set or said extended instruction set for entering said instruction into said instruction decode register means so that the operating code portion thereof is temporarily stored in said first designated region and said at least one displacement portion, if included, is temporarily stored in said at least one other designated region.

49.        A data processing system in accordance with claim 48 said instruction processor means further including instruction decoding means for decoding the operating code portion of an instruction supplied thereto from said instruction decode register means to produce a plurality of operating code descriptors associated with said decoded instructions and for producing a starting address of one or more microinstructions associated with said decoded instruction.

50.        A data processing system in accordance with claim 49 and further including displacement handling means responsive to a displacement portion of an instruction, if any, supplied thereto from said instruction decode register means to provide displacement data to said data processing system.

51.     A data processing system in accordance with claim 50
wherein said displacement handling means includes sign extend
logic means for extending the displacement portion of an
instruction supplied thereto by sign extended data, if necessary.

52.     A data processing system in accordance with claim 50
or 51 wherein said displacement handling means includes zero
extend logic means for extending the displacement portion of
an instruction supplied thereto by a selected number of zero
bits, if necessary.

53.     A data processing system in accordance with claim 52
wherein said displacement handling means includes ones extend logic
means for extending the displacement portion of an instruction
supplied thereto by a selected number of one bits, if necessary.

54.     A data processing system in accoreance with claim 53
wherein said displacement handling means further includes means
responsive to said displacement data for supplying said data in
the form of a logical address to provide a memory reference for
said system.

55.     A data processing system in accordance with claim 48
or 49 and further including instruction cache storage means for
storing a plurality of instructions; means for identifying when a
requested instruction is stored in said instruction cache
storage means; said instruction cache storage means being
responsive to the address of a requested instruction stored therein
when said identifying means indicates that said requested
instruction is stored in said instruction cache storage means for
supplying said requested instruction to said instruction decode
shifter means.

56.      A data processing system in accordance with claim 55 and further including means for accessing said requested instruction from a main memory storage means when said identifying means indicates that said requested instruction is not stored in said instruction cache storage means.

57.      A data processing system in accordance with claim 56 and further including means for providing a direct transmission path to said instruction decode shifter means for a requested instruction which has been accessed from said main memory storage means.

58.      A data processing system in accordance with claim 48 or 49 wherein said instruction decoding means is an array of programmable read-only-memories.

59.      A data processing system in accordance with claim 58 wherein said instruction decoding means includes first programmable read-only-memory means for decoding instructions of said basic instruction set and second programmable read-only-memory means for decoding instructions of said extended instruction set.

60.      A data processing system in accordance with claim 59 wherein each of said instructions to be decoded have selected bit code combinations for identifying whether said instruction is from said basic instruction set or from said extended instruction set and further including means for examining the selected bit code combination of an instruction to be decoded to determine whether said instruction is from said basic instruction set or from said extended instruction set; and means responsive to said selected bit code combination for enabling a selected one of said first or second programmable read-only-memory means to decode said instruction depending on whether the instruction to be decoded is from said basic instruction set or from said extended instruction set.

61.      A data processing system in accordance with claim 60
wherein said selected bit code combination comprises a 1 in bit
∅ .and 1001 in bits 12-15 of said instruction for selected
instructions from said extended instruction set.

62.      A data processing system in accordance with claim 60
wherein said selected bit code combination comprises a 1 in
bit ∅ and 011000 in bits 10-15 of said instruction for other
selected instructions from said extended instruction set.

63.      A data processing system in accordance with claim 60
wherein said selected bit code combination comprises a 1 in bit ∅,
a 0 in bit 5 and 111000 in bits 10-15 of said instruction for
still other selection instructions from said extended
instruction set.

64.      A data processing system in accordance with claim 60
wherein said selected bit code combination comprises 0 in bit ∅
and 1000 in bits 12-15 of said instruction for selected
instructions from said basic instruction set.

65.      A data processing system having a central processor
responsive to macro-instructions for determining starting
microaddresses of micro-instructions, and a microsequencing means
for providing one or more successive micro-instructions for use by
said central processor, said microsequencing means comprising
microcontrol store means for storing a plurality of micro-
instructions; means for decoding said macro-instructions to produce
a starting microaddress of one of said micro-instructions; said
microcontrol store means being responsive to said starting
microaddress for accessing a current micro-instruction stored at
said microaddress of said microcontrol store means; micro-
instruction decoding means responsive to selected bits of said
currently accessed micro-instruction for determining the micro-
address of the next successive micro-instruction; a plurality of microaddress sources capable of supplying the microaddress of the
next successive micro-instruction; and means responsive to said
microaddress determining means for selecting the microaddress of the
next micro-instruction from one of said microaddress sources.

66.     A data processing system in accordance with claim 65
wherein said plurality of microaddress sources includes microprogram
counter means capable of providing the microaddress of the next
successive micro-instruction stored in said microcontrol store
means, said next successive microaddress being made available to
said microaddress selecting means from said microprogram counter
means.

67.     A data processing system in accordance with claim 65
or 66 wherein said plurality of microaddress sources includes
stack storage means for storing a plurality of microaddresses of
micro-instructions stored in said microcontrol store means, the
last stored microaddress in said stack storage means being
made available to said microaddress selecting means from said
stack storage means.

68.     A data processing system in accordance with claim 67
wherein said plurality of microaddress sources includes micro-
address forming means responsive to selected bits derived from
said currently accessed micro-instruction and to selected bits
received from sources external to said microsequencing means
capable of forming a plurality of concatenated microaddresses; and
means for selecting one of said plurality of concatenated
microaddresses, said selected concatenated microaddress being made
available to said microaddress selecting means.

69.      A data processing system in accordance with claim 65 wherein said micro-instruction decoding means is further responsive to other selected bits of said currently accessed micro-instruction for determining whether the selection of the microaddress of the next successive micro-instruction is dependent upon a specified condition or is independent of any conditions.

70.      A data processing system in accordance with claim 69 and further including means for testing a plurality of conditions to provide a plurality of corresponding test flag bits, the state of said flag bits indicating whether one or more conditions tested are present; and means responsive to said test flag bits for providing a condition output signal which signifies that the selection of the microaddress of the next successive micro-instruction is dependent upon a condition when one or more of said flag bits is in a state which indicates that one or more of said conditions is present or is not dependent on a condition when one of said test flag bits is in said latter state.

71.      A data processing system in accordance with claim 70 wherein said condition output signal providing means includes multiplexer means responsive to said plurality of test flag bits and responsive to a selected number of bits from said current micro-instruction for selectively providing a test condition bit corresponding to one of said plurality of test flag bits; and condition logic means responsive to said selected test condition but for providing said condition output signal.

72.      A data processing system having a central processor, a memory means, an arithmetic logic unit having first and second inputs capable of performing arithmetic or logical operations upon data supplied at said first and second inputs to produce an output thereform, said first and second inputs being selectively supplied to said arithmetic logic unit by multiplexer means, a register file comprising a plurality of registers capable of storing data and having said data written into and read out thereform, a

logical address bus for transferring logical addresses within
said data processing system, a central processor data bus for
transferring data within said data processing system, said central
processor including timing means for providing a timing signal for
controlling the operating time cycle of said data processing system,
said central processor being responsive to macro-instructions for
determining starting microaddresses of micro-instructions, a micro-
sequencing means for providing one or more successive micro-
instructions for use by said central processor, said microsequencing
means comprising; microcontrol store means for storing a plurality
of microinstructions; means for decoding said macro-instructions to
produce a starting microaddress of one of said micro-instructions;
said microcontrol store means being responsive to said starting
microaddress for providing a micro-instruction having at least
fourteen control fields stored at said microaddress of said
microcontrol store means; micro-instruction decoding means
responsive to said accessed micro-instruction for decoding said
at least fourteen control fields, said micro-instruction decoding
means comprising: means responsive to a first control field of
twenty bits for generating control signals for selecting the
microaddress of a next successive micro-instruction; means
responsive to a second control field of four btis for generating
control signals for providing output data from a selected register
of said register file, which output data can be used as a first
input to said arithmetic logic unit; means responsive to a third
control field of four bits for generating control signals for
providing output data from a selected register of said register
file, which output data can be used as a second input to said
arithmetic logic unit; means responsive to a fourth control field
of four bits for generating control signals for controlling the
supply of data from a source other than said register file during a
first selected portion of said operating time cycle, which data
can be used to supply an input to said arithmetic logic unit;
means responsive to a fifth control field of two bits for
generating control signals for controlling the supplying of data
from a source other than said register file furing a second
selected portion of said operating time cycle, which data can be
used to supply a selected input to said arithmetic logic unit;

means responsive to a sixth control field of four bits for
generating control signals for controlling the shifting of
selected data being operated upon by said arithmetic logic unit;
means responsive to a seventh control field of three bits for
generating control signals for controlling the operation of said
multiplexer means to select the data to be supplied to the
inputs of said arithmetic logic unit; means responsive to an
eighth control field of three bits for generating control signals
for controlling the logical and arithmetic operations of said
arithmetic logic unit; means responsive to a ninth control field
of three bits for generating control signals for controlling the
destination of the output from said arithmetic logic unit;
means responsive to a tenth control field of a single bit for
generating control signals for controlling the type of carry
operation to be used by said arithmetic logic unit; means
responsive to an eleventh control field of two bits for generating
control signals for controlling the source of data to be placed
on said logical address bus; means responsive to a twelfth control
field of five bits for generating control signals for controlling
the source of data to be placed on said central processor data
bus; means responsive to a thirteenth control field of three bits
for generating signals for controlling the reading and writing
operations of said memory means; and means responsive to a
fourteenth control field of two bits for generating control
signals for controlling the completion of an operation with respect
to said memory means.

73.      A data processing system in accordance with claim 72,
which system further involves a plurality of scratch pad registers
and an address translation means for converting logical addresses
to physical addresses, said microcontrol store means providing a
micro-instruction having at least two further control fields and
said micro-instruction decoding means further including:
means responsive to a fifteenth control field of ten bits for
generating a control signal for controlling arithmetic floating
point and fixed point computations by said arithmetic logic unit,
for controlling operations with respect to said scratch pad

74.       A data processing system in accordance with claim 72 or 73 said microcontrol store means providing a micro-instruction having at least one other field of one bit and said micro-instruction decoding means further including: means responsive to said one other control field for detecting the odd or even parity of the micro-instruction word.

75.       A data processing system in accordance with claim 74 wherein said microcontrol store providing a micro-instruction having at least five additional bits which are reserved for use in providing one or more additional control fields.

76.       A data processing system in accordance with claim 75 wherein said microcontrol store means provides a micro-instruction word having a format of 80 bits, bits 0-19 defining said first control field, bits 20-23 defining said second control field, bits 24-27 defining said third control field, bits 28-31 defining said sixteenth control field, bits 32 and 33 defining said fourth control fields, bits 34-37 defining said fifth control field, bits 38-41 defining said sixth control field, bits 42-45 defining said seventh control field, bits 46;48 defining said eighth control field, bits 49-51 defining said ninth control field, bit 52 defining said tenth control field, bits 53-62 defining said fifteenth control field, bits 63 and 64 defining said eleventh control field, bits 65-69 defining said twelveth control field, bits 70-72 defining said thirteenth control field, bits 73 and 74 defining said fourteenth control field, bits 75-79 being reserved for said one or more additional control fields, and bit 80 defining said seventeenth control field.

77.       A data processing system capable of use with one or more external devices, said system comprising memory means including a first storage region containing a plurality of instruction routines, each routine for performing one of a plurality of selectable interrupt operations; a second storage region containing a plurality of device control tables, each said table being
associate with one of said external devices and including an
interrupt routine address pointing to a selected one of said
interrupt routines in said first storage region; a third storage
region containing a plurality of device control table addresses
each of said addresses being associated with one of said external
devices and pointing to a selected one of said device control
tables in said second storage region; means responsive to an
interrupt request from an external device for supplying an
address pointing to a selected location in said third storage
region when the interrupt requested by said external device is
an interrupt which requires transfer of control of said data
processing system to a selected one of said interrupt routines in
said first storage region; and means responsive to coded information
from said external device requesting said interrupt for providing
an address offset from said selected location in said third storage
region, the address at said offset location being the address
pointing to said selected one of said device control tables in
said second storage region.

78.      A data processing system in accordance with claim 77
wherein the device control table in said second storage region
includes coded masking information for preventing other external
devices from requesting interrupts when an interrupt has already
been requested by said external device.

79.      A data processing system having a main memory containing
a plurality of segment storage regions, said system including
a plurality of memory management registers each associated with one
of said segment storage regions and capable of storing a 32-bit
double word, said memory management registers being located
externally of said main memory; accumulator storage means for
storing a starting address of a block of double words stored in
main memory; instruction decode means responsive to one instruction
requiring the storage of said block of data words into said memory
management system for providing selected control signals; means
responsive to said selected control signals for accessing the first
word of said block of double words at said starting address in said main memory and for loading the double words in said block into said plurality of memory management registers, said double words being loaded sequentially into said registers in a preselected order.

80.      A data processing system having a main memory containing a plurality of segment storage regions, said system including an instruction processor unit comprising a program counter register, said program counter register containing a 32-bit double word representing the current program count in a sequence of operation being performed by said data processing system; instruction decode means responsive to an instruction occurring in said sequence of operation for requiring a program counter relative primary operation providing a plurality of decoded bits, a selected number of which formed a displacement value; and means for adding said displacement bits to the current double word in said program counter register and for placing the result into said program counter register, said result providing a reference to a specified location in the currently used segment storage region of said main memory displaced relative to the location specified by the current program count.

81.      A data processing system for handling first data words having a first selected number of bits and second data words having a second selected number of bits less than said first number of bits; a plurality of accumulator storage means capable of storing said first or said second data words; means responsive to a second data word in a source accumulator storage means of said plurality of accumulator storage means for extending the number of bits thereof so that the number of bits of said extended data words is equal to said first selected number of bits, said extended data words being capable of storage in a destination accumulator storage means of said plurality of accumulator storage means; instruction decode means responsive to an instruction requiring the extending of said second data words for providing first selected bits of an instruction word for identifying said source accumulator storage means and second selected bits of an instruction word for for identifying said destination accumulator storage means and for providing control signals; and means responsive to said control signals for extending said second data word and for storing said extended second data word in said destination or accumulator storage means.

82.        A data processing system in accordance with claim 81 wherein said extending means includes means for zero-extending said second data words.

83.        A data processing system in accordance with claim 82 wherein said extending means includes means for sign-extending said second data words.

84.        A data processing system comprising a first destination accumulator storage means capable of storing a first selected number of bits of which only a first word having a second selected number of bits is required for an arithmetic operation; a second source accumulator storage means capable of storing a first selected number of bits of which only a second word having a second selected number of bits is required for said arithmetic operation; instruction decode means responsive to an instruction requiring multiplication of said first and second words for providing control signals for multiplying the second selected number of bits of said destination accumulator storage means and the second selected number of bits of said source accumulator storage means to produce a result having said second selected number of bits, for sign-extending said result to form a double word having said first selected number of bits, and storing said sign extended double word in said destination accumulator storage means without changing the contents of said source accumulator storage means.

FIG. 1

FIG.2

FIG.3

EP 0039227

FIG.4

FIG. 5

0039227

FIG. 5A

FIG. 5B

7/427

FIG. 5C

FIG. 5D

FIG. 5E

FIG. 5F

FIG 5G

FIG 5G

11 / 427

0039227

FIG. 5G

FIG 6B

43

*FIG. 6*

0039227

14 / 427

FIG 6

*FIG. 6A*

FIG 6C

FIG. 6B

FIG 6B

CS

2 AØ
3 AI
4 A2
5 A3
6 A4
9 A5
1Ø A6
11 A7
12 A8
13 A9

7

6

6

14    15

1

CS

2 AØ
3 AI
4 A2
5 A3
6 A4
9 A5
1Ø A6
11 A7
12 A8
13 A9

7

7

7

14    15

7

FIG. 6C

FIG 6E

FIG. 6D

FIG. 6E

19 / 427

FIG 7A

FIG. 7

FIG. 7A

FIG. 8

21 / 427

0039227

22 / 427

FIG. 9

FIG. 10

FIG. 10A

FIG. 10B

FIG. 11

FIG. 12

FIG 13A

FIG. 13

FIG. 13A

FIG. 14

0039227

31 / 427

FIG. 15

0039227

32 / 427

FIG. 15A

FIG. 15B

FIG. 16

FIG. 16A

35 / 427

00392227

FIG. 16B

*FIG. 16C*

0039227

38 / 427

FIG 17A

FIG. 17

0039227

FIG 17

SEL
B

| | | |
|---|---|---|
| CH D24 | 11 A0 | Z0 9 | J1-38 | CA/H D24 |
| 7 | 10 B0 | | |
| CH D25 | 2 A1 | Z1 4 | J1-39 | CA/H D25 |
| 3 | 3 B1 | | |
| CH D26 | 14 A2 | Z2 12 | J3-2 | CA/H D26 |
| 4 | 13 B2 | 2 | |
| CH D27 | 5 A3 MUX | Z3 7 | J3-3 | CA/H D27 |
| 5 | 6 B3 | | |

ENAB
15

SEL
B

| | | |
|---|---|---|
| CH D28 | 11 A0 | Z0 9 | J3-5 | CA/H D28 |
| 6 | 10 B0 | | |
| CH D29 | 5 A1 | Z1 7 | J3-6 | CA/H D29 |
| 7 | 6 B1 | | |
| CH D30 | 14 A2 | Z2 12 | J3-8 | CA/H D30 |
| 8 | 13 B2 | 2 | |
| CH D31 | 2 A3 MUX | Z3 4 | J3-9 | CA/H D31 |
| 9 | 3 B3 | | |

ENAB
15

*FIG. 17A*

FIG 18A

FIG. 18

FIG. 18A

42 / 427

FIG 18C

*FIG. 18B*

43 / 427

**FIG. 18C**

FIG 18E

FIG. 18D

FIG 18D

MUX    10 ----|1  \
                |   )o--3---A31o        IPM10
                |2  /

MUX    11 ----|1  \
                |   )o--3---A33o        IPM11
                |2  /

MUX    12 ----|6  \
                |   )o--5---A35o        IPM12
                |7  /

MUX    13 ----|6  \
                |   )o--5---A37o        IPM13
                |7  /

MUX    14 ----|6  \
                |   )o--5---A39o        IPM14
                |7  /

MUX    15 ----|6  \
                |   )o--5---A41o        IPM15
                |7  /

        10 ----|  \
                |   )o--8---( B4)
         9 ----|  /

FIG 18C

FIG 18G

RT ----|3 >o4 ----|11 \
                    |    )o--8---   FIG 18G
INH -------------|9   /
            ----|10

FIG. 18E

FIG 18G

*FIG. 18F*

FIG 18F

| MUX | 26 | | 1 | | 3 | A71 | IPM26 |
| MUX | 27 | | 1 | | 3 | A75 | IPM27 |
| MUX | 28 | | 6 | | 5 | A77 | IPM28 |
| MUX | 29 | | 6 | | 5 | A79 | IPM29 |
| MUX | 30 | | 6 | | 5 | A81 | IPM30 |
| MUX | 31 | | 6 | | 5 | A83 | IPM31 |

12
13
11

FIG 18E

HI8          10
          S
A SYS CLK    11  CLK    Q    9

FIG 18E    5
                  6        12  D    Q̄    8
IM SV    4                    R
                              13

*FIG. 18G*

FIG. 19

FIG. 20

*FIG.20A*

FIG. 20B

FIG. 20C

FIG. 21

0039227

54 / 427

FIG 22A

FIG. 22

FIG. 22A

FIG. 23

FIG. 24

FIG. 24A

FIG. 25

FIG. 26

FIG 27A

*FIG. 27*

FIG 27

*FIG. 27A*

FIG. 28

0039227

64 / 427

FIG. 28A

FIG. 28B

FIG. 29

0039227

67 / 427

FIG. 29A

FIG. 30

FIG. 30A

FIG. 31

0039227

71 / 427

FIG. 31A

FIG. 32

FIG. 32A

F/G. 33

FIG. 34

FIG. 34A

FIG. 35

FIG. 35A

0039227

79 / 427

FIG. 36

FIG. 37

FIG. 38

82 / 427

FIG. 38A

FIG. 39

84 / 427

FIG. 40

FIG. 41

86 / 427

FIG. 41A

FIG. 42

FIG. 43

FIG. 43A

FIG. 43B

FIG. 44

FIG 44

CA/WD20 J1-32 3
CRD20 4
CA/WD21 J1-33 6
CRD21 5
CA/WD22 J1-35 11
CRD22 12
CA/WD23 J1-36 14
CRD23 13

9 1
2 IWD20
7 IWD21
10 IWD22
15 IWD23

CA/WD24 J1-38 3
CRD24 4
CA/WD25 J1-39 6
CRD25 5
CA/WD26 J3-2 11
CRD26 12
CA/WD27 J3-3 14
CRD27 13

9 1
2 IWD24
7 IWD25
10 IWD26
15 IWD27

CA/WD28 J3-5 3
CRD28 4
CA/WD29 J3-6 6
CRD29 5
CA/WD30 J3-8 11
CRD30 12
CA/WD31 J3-9 14
CRD31 13

9 1
2 IWD28
7 IWD29
10 IWD30
15 IWD31

*FIG. 44A*

FIG 44

| | | |
|---|---|---|
| CA/WDI 2 | J1-20 | 3 |
| CRDI 2 | | 4 |
| CA/WDI 3 | J1-21 | 6 |
| CRDI 3 | | 5 |
| CA/WDI 4 | J1-23 | 11 |
| CRDI 4 | | 12 |
| CA/WDI 5 | J1-24 | 14 |
| CRDI 5 | | 13 |

2   I WDI 2
7   I WDI 3
10  I WDI 4
15  I WDI 5

| | | |
|---|---|---|
| CA/WDI 6 | J1-26 | 3 |
| CRDI 6 | | 4 |
| CA/WDI 7 | J1-27 | 6 |
| CRDI 7 | | 5 |
| CA/WDI 8 | J1-29 | 11 |
| CRDI 8 | | 12 |
| CA/WDI 9 | J1-30 | 14 |
| CRDI 9 | | 13 |

2   I WDI 6
7   I WDI 7
10  I WDI 8
15  I WDI 9

FIG. 44B

FIG. 45

95 / 427

FIG. 45A

FIG. 45B

FIG. 45C

0039227

98 / 427

FIG 46A

FIG. 46

0039227

99 / 427

FIG 46

CLK

| I WD1 6 | 3 | | 2 | WD1 6 |
| I WD1 7 | 4 | | 5 | WD1 7 |
| I WD1 8 | 7 | | 6 | WD1 8 |
| I WD1 9 | 8 | | 9 | WD1 9 |
| I WD20 | 13 | | 12 | WD20 |
| I WD21 | 14 | | 15 | WD21 |
| I WD22 | 17 | | 16 | WD22 |
| I WD23 | 18 | | 19 | WD23 |

CLK

| I WD24 | 3 | | 2 | WD24 |
| I WD25 | 4 | | 5 | WD25 |
| I WD26 | 7 | | 6 | WD26 |
| I WD27 | 8 | | 9 | WD27 |
| I WD28 | 13 | | 12 | WD28 |
| I WD29 | 14 | | 15 | WD29 |
| I WD30 | 17 | | 16 | WD30 |
| I WD31 | 18 | | 19 | WD31 |

H1

CLK

| C0 | 3 | | 2 | WD32 |
| C1 | 4 | | 5 | WD33 |
| C2 | 7 | | 6 | WD34 |
| C3 | 8 | | 9 | WD35 |
| C4 | 13 | | 12 | WD36 |
| C5 | 14 | | 15 | WD37 |
| C6 | 17 | | 16 | WD38 |
| | 18 | | 19 | SV |

FIG. 46A

FIG. 47

FIG. 47A

101/427

0039227

FIG. 48

0039227

103 / 427

FIG. 48A

FIG. 48B

105 / 427

*FIG. 48C*

FIG. 49

RD 5V

SYB CLK8

FIG. 50

FIG. 51

FIG. 51A

*FIG. 52*

FIG. 52A

FIG. 52B

FIG. 53

113/427

0039227

FIG. 53A

FIG. 54

FIG. 54A

MODSEL

*FIG. 55*

*FIG. 56*

FIG 56A

REF SEL

8Y8 CLKA

CLK

RFRSH

SEL

RAB

REF REF   REF REF   REF REF   REF REF

4-MUX   4-MUX
SEL   SEL

FIG. 56A

FIG. 57

FIG. 57A

FIG. 57B

003922ᵢ

FIG. 58

FIG. 58A

124/427

0039227

FIG. 58B

*FIG. 58C*

FIG. 58D

FIG. 58E

FIG 58E

QA 11 — REF CADDR4

QB 10 — REF CADDR5

13 — A

QC 9 — REF CADDR6

QD 8 — REF CADDR7

W7

W3    W4

MOD CLK

HIG

P    T
7    10

MOD3 — 3   0   ENAB   0   14 — REF MOD3
MOD2 — 4   1          1   13 — REF MOD2
MOD1 — 5   2          2   12 — REF MOD1
MOD0 — 6   3          3   11 — REF MOD0

MOD CLK — CLK      TC   15                13

PE    R

*FIG. 58F*

FIG. 59

FIG. 59A

FIG. 60

FIG. 61

FIG. 61A

FIG. 61B

FIG. 62

FIG. 63

FIG. 63A

FIG. 64

FIG. 64A

FIG. 64B

**0039227**

FIG 65A

*FIG. 65*

FIG. 65A

WDODENB

WD24 8
WD25 7
WD26 4
WD27 3
WD28 18
WD29 17
WD30 14
WD31 13

11
L    OE

9
6
5
2
19
16
15
12

1 ∿ 2 WDOD24
30

3 ∿ 4 WDOD25
30

5 ∿ 6 WDOD26
30

7 ∿ 8 WDOD27
30

7 ∿ 8 WDOD28
30

5 ∿ 6 WDOD29
30

3 ∿ 4 WDOD30
30

1 ∿ 2 WDOD31
30

WD32 8
WD33 7
WD34 4
WD35 3
WD36 18
WD37 17
WD38 14
13

11
L    OE

9
6
5
2
19
16
15
12

1 ∿ 2 WDOD32
30

3 ∿ 4 WDOD33
30

5 ∿ 6 WDOD34
30

7 ∿ 8 WDOD35
30

7 ∿ 8 WDOD36
30

5 ∿ 6 WDOD37
30

3 ∿ 4 WDOD38
30

FIG. 65B

FIG. 66

FIG 66

**RDEV6** block:
VBB — I
VCC — 9
WDEV6 — 2 — D/I
PØAØA — 5 — AØ
PØAIA — 7 — AI
PØA2A — 6 — A2
PØA3A — 12 — A3
PØA4A — 11 — A4
PØA5A — 1Ø — A5
PØA6A — 13 — A6
PØRASA — 4 — RAS
PØCASA — 15 — CAS
PØWEA — 3
14 — RDEV6
VDD — 8

**RDEV8** block:
VBB — I
VCC — 9
WDEV8 — 2 — D/I
PØAØA — 5 — AØ
PØAIA — 7 — AI
PØA2A — 6 — A2
PØA3A — 12 — A3
PØA4A — 11 — A4
PØA5A — 1Ø — A5
PØA6A — 13 — A6
PØRASA — 4 — RAS
PØCASA — 15 — CAS
PØWEA — 3
14 — RDEV8
VDD — 8

**RDEV1Ø** block:
VBB — I
VCC — 9
WDEV1Ø — 2 — D/I
PØAØA — 5 — AØ
PØAIA — 7 — AI
PØA2A — 6 — A2
PØA3A — 12 — A3
PØA4A — 11 — A4
PØA5A — 1Ø — A5
PØA6A — 13 — A6
PØRASA — 4 — RAS
PØCASA — 15 — CAS
PØWEA — 3
14 — RDEV1Ø
VDD — 8

FIG 66

**RDEV7** block:
VBB — I
VCC — 9
WDEV7 — 2 — D/I
PØAØA — 5 — AØ
PØAIA — 7 — AI
PØA2A — 6 — A2
PØA3A — 12 — A3
PØA4A — 11 — A4
PØA5A — 1Ø — A5
PØA6A — 13 — A6
PØRASB — 4 — RAS
PØCASB — 15 — CAS
PØWEB — 3
14 — RDEV7
VDD — 8

**RDEV9** block:
VBB — I
VCC — 9
WDEV9 — 2 — D/I
PØAØA — 5 — AØ
PØAIA — 7 — AI
PØA2A — 6 — A2
PØA3A — 12 — A3
PØA4A — 11 — A4
PØA5A — 1Ø — A5
PØA6A — 13 — A6
PØRASB — 4 — RAS
PØCASB — 15 — CAS
PØWEB — 3
14 — RDEV9
VDD — 8

**RDEV11** block:
VBB — I
VCC — 9
WDEV11 — 2 — D/I
PØAØA — 5 — AØ
PØAIA — 7 — AI
PØA2A — 6 — A2
PØA3A — 12 — A3
PØA4A — 11 — A4
PØA5A — 1Ø — A5
PØA6A — 13 — A6
PØRASB — 4 — RAS
PØCASB — 15 — CAS
PØWEB — 3
14 — RDEV11
VDD — 8

FIG 66

*FIG. 66A*

FIG 68A

VBB    VCC

WDEV12 — 2 — D/I
PØAØA — 5 — AØ
PØA1A — 7 — A1
PØA2A — 6 — A2
PØA3A — 12 — A3
PØA4A — 11 — A4
PØA5A — 10 — A5
PØA6A — 13 — A6
$\overline{PØRASA}$ — 4 — RAS
$\overline{PØCASA}$ — 15 — CAS
$\overline{PØWEA}$ — 3 —

VDD

14    RDEV12

VBB    VCC

WDEV14 — 2 — D/I
PØAØA — 5 — AØ
PØA1A — 7 — A1
PØA2A — 6 — A2
PØA3A — 12 — A3
PØA4A — 11 — A4
PØA5A — 10 — A5
PØA6A — 13 — A6
$\overline{PØRASA}$ — 4 — RAS
$\overline{PØCASA}$ — 15 — CAS
$\overline{PØWEA}$ — 3 —

VDD

14    RDEV14

FIG 66A

VBB    VCC

WDEV13 — 2 — D/I
PØAØA — 5 — AØ
PØA1A — 7 — A1
PØA2A — 6 — A2
PØA3A — 12 — A3
PØA4A — 11 — A4
PØA5A — 10 — A5
PØA6A — 13 — A6
$\overline{PØRASB}$ — 4 — RAS
$\overline{PØCASB}$ — 15 — CAS
$\overline{PØWEB}$ — 3 —

VDD

14    RDEV13

VBB    VCC

WDEV15 — 2 — D/I
PØAØA — 5 — AØ
PØA1A — 7 — A1
PØA2A — 6 — A2
PØA3A — 12 — A3
PØA4A — 11 — A4
PØA5A — 10 — A5
PØA6A — 13 — A6
$\overline{PØRASB}$ — 4 — RAS
$\overline{PØCASB}$ — 15 — CAS
$\overline{PØWEB}$ — 3 —

VDD

14    RDEV15

FIG 66A

FIG. 66B

FIG. 66C

FIG. 66D

FIG. 66E

FIG. 66E

VBB    VCC

WDEV32 — 2 D/I
P0A0B — 5 A0
P0A1B — 7 A1
P0A2B — 6 A2
P0A3B — 12 A3
P0A4B — 11 A4
P0A5B — 10 A5
P0A6B — 13 A6
$\overline{P0RASC}$ — 4 RAS
$\overline{P0CASC}$ — 15 CAS
$\overline{P0WEC}$ — 3

VDD

14    RDEV32

VBB    VCC

WDEV34 — 2 D/I
P0A0B — 5 A0
P0A1B — 7 A1
P0A2B — 6 A2
P0A3B — 12 A3
P0A4B — 11 A4
P0A5B — 10 A5
P0A6B — 13 A6
$\overline{P0RASC}$ — 4 RAS
$\overline{P0CASC}$ — 15 CAS
$\overline{P0WEC}$ — 3

VDD

14    RDEV34

FIG 66E

VBB    VCC

WDEV33 — 2 D/I
P0A0B — 5 A0
P0A1B — 7 A1
P0A2B — 6 A2
P0A3B — 12 A3
P0A4B — 11 A4
P0A5B — 10 A5
P0A6B — 13 A6
$\overline{P0RASD}$ — 4 RAS
$\overline{P0CASD}$ — 15 CAS
$\overline{P0WED}$ — 3

VDD

14    RDEV33

VBB    VCC

WDEV35 — 2 D/I
P0A0B — 5 A0
P0A1B — 7 A1
P0A2B — 6 A2
P0A3B — 12 A3
P0A4B — 11 A4
P0A5B — 10 A5
P0A6B — 13 A6
$\overline{P0RASD}$ — 4 RAS
$\overline{P0CASD}$ — 15 CAS
$\overline{P0WED}$ — 3

VDD

14    RDEV35

FIG 66E

FIG. 66F

0039227

*FIG. 66G*

0039227

FIG. 67

153/427

0039227

FIG. 67A

154/427

0039227

FIG. 68

0039227

FIG. 68A

156/427

0039227

FIG. 68B

0039227

FIG. 68C

FIG. 68D

0039227

FIG. 68E

FIG. 68F

FIG. 68G

FIG. 69

FIG. 69A

FIG. 70

165 / 427

0039227

FIG. 70A

FIG. 70B

FIG. 70C

FIG. 70D

0039227

FIG. 70E

FIG. 70F

FIG. 70G

FIG. 71

FIG. 71A

174/427

0039227

FIG. 72

175/427

0039227

FIG 72 ⟦ FIG 72B

VBB    VCC
WDOD6 —2— D/I
P3A0A —5— A0
P3A1A —7— A1
P3A2A —6— A2
P3A3A —12— A3
P3A4A —11— A4    —14—  RDOD6
P3A5A —10— A5
P3A6A —13— A6
P3RASA —4—○ RAS
P3CASA —15—○ CAS
P3WEA —3—○
VDD

VBB    VCC
WDOD8 —2— D/I
P3A0A —5— A0
P3A1A —7— A1
P3A2A —6— A2
P3A3A —12— A3
P3A4A —11— A4    —14—  RDOD8
P3A5A —10— A5
P3A6A —13— A6
P3RASA —4—○ RAS
P3CASA —15—○ CAS
P3WEA —3—○
VDD

VBB    VCC
WDOD10 —2— D/I
P3A0A —5— A0
P3A1A —7— A1
P3A2A —6— A2
P3A3A —12— A3
P3A4A —11— A4    —14—  RDOD10
P3A5A —10— A5
P3A6A —13— A6
P3RASA —4—○ RAS
P3CASA —15—○ CAS
P3WEA —3—○
VDD

FIG 72    FIG 72B

VBB    VCC
WDOD7 —2— D/I
P3A0A —5— A0
P3A1A —7— A1
P3A2A —6— A2
P3A3A —12— A3
P3A4A —11— A4    —14—  RDOD7
P3A5A —10— A5
P3A6A —13— A6
P3RASB —4—○ RAS
P3CASB —15—○ CAS
P3WEB —3—○
VDD

VBB    VCC
WDOD9 —2— D/I
P3A0A —5— A0
P3A1A —7— A1
P3A2A —6— A2
P3A3A —12— A3
P3A4A —11— A4    —14—  RDOD9
P3A5A —10— A5
P3A6A —13— A6
P3RASB —4—○ RAS
P3CASB —15—○ CAS
P3WEB —3—○
VDD

VBB    VCC
WDOD11 —2— D/I
P3A0A —5— A0
P3A1A —7— A1
P3A2A —6— A2
P3A3A —12— A3
P3A4A —11— A4    —14—  RDOD11
P3A5A —10— A5
P3A6A —13— A6
P3RASB —4—○ RAS
P3CASB —15—○ CAS
P3WEB —3—○
VDD

FIG 72    FIG 72B

*FIG. 72A*

FIG. 72B

FIG. 72C

FIG. 72D

FIG 72D

FIG 72F

| | | |
|---|---|---|
| VBB VCC | VBB VCC | VBB VCC |
| WDOD26 —2— D/I | WDOD28 —2— D/I | WDOD30 —2— D/I |
| P3A0B —5— A0 | P3A0B —5— A0 | P3A0B —5— A0 |
| P3A1B —7— A1 | P3A1B —7— A1 | P3A1B —7— A1 |
| P3A2B —6— A2 | P3A2B —6— A2 | P3A2B —6— A2 |
| P3A3B —12— A3 | P3A3B —12— A3 | P3A3B —12— A3 |
| P3A4B —11— A4    —14— RDOD26 | P3A4B —11— A4    —14— RDOD28 | P3A4B —11— A4    —14— RDOD30 |
| P3A5B —10— A5 | P3A5B —10— A5 | P3A5B —10— A5 |
| P3A6B —13— A6 | P3A6B —13— A6 | P3A6B —13— A6 |
| P3RASC —4— RAS | P3RASC —4— RAS | P3RASC —4— RAS |
| P3CASC —15— CAS | P3CASC —15— CAS | P3CASC —15— CAS |
| P3WEC —3— | P3WEC —3— | P3WEC —3— |
| VDD | VDD | VDD |

FIG 72D

FIG 72F

| | | |
|---|---|---|
| VBB VCC | VBB VCC | VBB VCC |
| WDOD27 —2— D/I | WDOD29 —2— D/I | WDOD31 —2— D/I |
| P3A0B —5— A0 | P3A0B —5— A0 | P3A0B —5— A0 |
| P3A1B —7— A1 | P3A1B —7— A1 | P3A1B —7— A1 |
| P3A2B —6— A2 | P3A2B —6— A2 | P3A2B —6— A2 |
| P3A3B —12— A3 | P3A3B —12— A3 | P3A3B —12— A3 |
| P3A4B —11— A4    —14— RDOD27 | P3A4B —11— A4    —14— RDOD29 | P3A4B —11— A4    —14— RDOD31 |
| P3A5B —10— A5 | P3A5B —10— A5 | P3A5B —10— A5 |
| P3A6B —13— A6 | P3A6B —13— A6 | P3A6B —13— A6 |
| P3RASD —4— RAS | P3RASD —4— RAS | P3RASD —4— RAS |
| P3CASD —15— CAS | P3CASD —15— CAS | P3CASD —15— CAS |
| P3WED —3— | P3WED —3— | P3WED —3— |
| VDD | VDD | VDD |

FIG 72D

FIG 72F

FIG. 72E

FIG. 72F

FIG 72E

RDOD32

RDOD34

RDOD33

RDOD35

181/427

0039227

FIG. 72G

RPL3ADRØ — 9 10 — 8 — 5 ∿∿ 6 — P3AØA
30
6 ∿∿ 5 — P3AØB
30

RPL3ADR1 — 4 5 — 6 — 7 ∿∿ 8 — P3A1A
30
7 ∿∿ 8 — P3A1B
30

RPL3ADR2 — 4 5 — 6 — 5 ∿∿ 6 — P3A2A
30
5 ∿∿ 6 — P3A2B
30

RPL3ADR3 — 12 13 — 11 — 3 ∿∿ 4 — P3A3A
30
R67
6 ∿∿ 5 — P3A3B
30

RPL3ADR4 — 12 13 — 11 — 5 ∿∿ 6 — P3A4A
30
5 ∿∿ 6 — P3A4B
30

RPL3ADR5 — 9 10 — 8 — 8 ∿∿ 7 — P3A5A
30
8 ∿∿ 7 — P3A5B
30

RPL3ADR6 — 1 2 — 3 — 3 ∿∿ 4 — P3A6A
30
3 ∿∿ 4 — P3A6B
30

*FIG. 73*

FIG. 73A

184 / 427

0039227

FIG. 74

185 / 427

0039227

FIG. 74A

FIG 74

FIG 74B

186/427

0039227

FIG. 74B

FIG 74A

187 / 427

0039227

FIG 74

RD REG CLK BI

+5V

4.7K  4.7K  4.7K  4.7K  4.7K  4.7K  4.7K  4.7K

RDEV24
RDOD24
RDEV25
RDOD25
RDEV26
RDOD26
RDEV27
RDOD27

3
4
6
5
11
12
14
13

2        RDATA24
7        RDATA25
10       RDATA26
15       RDATA27

+5V

4.7K  4.7K  4.7K  4.7K  4.7K  4.7K  4.7K  4.7K

RDEV28
RDOD28
RDEV29
RDOD29
RDEV30
RDOD30
RDEV31
RDOD31

3
4
6
5
11
12
14
13

2        RDATA28
7        RDATA29
10       RDATA30
15       RDATA31

FIG. 74C

FIG 74D

188 / 427

0039227

FIG. 74D

FIG. 75

190/427

0039227

+5V

ADR6 ○A87

22K    22K

3
2
4
5

6    JADR6

RPLØRAS    13
11
12

+5V    4.7K

*FIG. 76*

FIG. 77

FIG. 77A

0039227

194 / 427

FIG 77A

RPLØCAS — 6 A  CLK 9  QA 7 — RPLI CAS
PLIILD — 14 B  QB 15 — PL2LD
RPLI CAS — 11 C  QC 10 — RPL2CAS
RPL2CAS — 13 D  QD 12 — RPL3CAS
PL2LD — 3 E  HEX  QE 2 — PL3LD
PLØLD — 4 F  D  QF 5 — PLI LD
       FF

HI

·10
S
11 CLK  Q 9          5
              6 — BØ
              4

12 D  Q̄ 8      9
R              8 — BI
13            10

              13
              11 — B2
              12

+5V  IK

FIG. 77B

FIG. 77C

FIG. 78

ADRCLK

DINCLK

20-D 6

20-D 4

+5V

120

120

RD REG CLK BØ

RD REG CLK BI

SYS CLK

20-D 10

SYS CLK B5

HI A

IK

+5V

(LA Ø-31)

26

MD 2-4
LAI5-21
LA22-31
LA 0-31

104

110

FLT CD Ø-3

ERR  DEF ERR  VLDERR

CPD 15,27,28

III

LA 1-3  CRE 1-3

RDENB
EXENB
WRENB

ATU

2-14  VLD  PHY 8-21

LAR Ø-31

101

LAR 4-12  LAR 13-21  LAR 2-14

109

MUX

112

LAR Ø-31

LAR CPD

CPD 28-31  CPD Ø-31

25  CPD

CPD 3,4,18-31

LMP REG

MD 3,4,18-31

MD Ø-4,18-31

MUX

LA 15-21  SEL CNT  VLD

103

108  LA 8-21

PHY 22-31  PHY 8-21

CPD Ø,3-6,8-10,13 16-19,23,26-30

C  A8-31

PA  27

MD 18-31  LA 15-21

ATU

100  PHY 8-21

107  MD 18-31

MUX

PHY 8-21

PHY 8-21  EPD 5-14

116  REG  H12B

MMPU

PHY

LAR 2-14  LA 15-21

102

2-14  LAERR  105

LA 18-31

ATU

115  16-BIT MMPU

CPM  20

CPM Ø-4,18-31

105

ATU

FIG.79

197/427

0039227

FIG.80

198/427

0039227

ATU 3

FIG.81

FIG. 82

201 / 427

FIG 82

CPD3 — 8
CPD4 — 6
CPD18 — 4
CPD19 — 2
CPD20 — 11
CPD21 — 13
CPD22 — 15
CPD23 — 17

19    1

12
14
16
18
9
7
5
3

LMP — 1
TRI ST DIS — 2
3

19    1

CPD24 B — 17
CPD25 — 15
CPD26 B — 13
CPD27 B — 11
CPD28 B — 8
CPD29 B — 6
CPD30 — 4
CPD31 B — 2

3
5
7
9
12
14
16
18

FIG 82C

*FIG. 82A*

FIG. 82B

FIG. 82C

FIG. 82D

FIG 82D

SEL B

1

LA28 ──── 2 ──○A∅        Z∅○─ 4

MD28 ──── 3 ──○B∅

LA29 ──── 5 ──○AI        ZI○─ 7

MD29 ──── 6 ──○BI

LA3∅ ──── 14 ──○A2       Z2○─ 12

MD3∅ ──── 13 ──○B2

LA3I ──── 11 ──○A3       Z3○─ 9

MD3I ──── 10 ──○B3

ENB

LAT-PHY ──●         15

FIG 82C

FIG 82G

FIG 82C

*FIG. 82E*

FIG 82G

FIG. 82F

FIG. 82G

FIG. 83

FIG 83

LAR7
LAR8
LAR9
LARIØ

LARII
LARI2
LARI3
LARI4

FIG. 83A

FIG. 84

FIG. 85

FIG 85

L    OE

| LA16 B | 3 | | 2 | LAR16 |
| LA17 B | 4 | | 5 | LAR17 |
| LA18 B | 7 | | 6 | LAR18 |
| LA19 B | 8 | | 9 | LAR19 |
| LA20 B | 13 | | 12 | LAR20 |
| LA21 B | 14 | | 15 | LAR21 |
| LA22  J3-26 | 17 | | 16 | LAR22 |
| LA23  J3-27 | 18 | | 19 | LAR23 |

L    OE

| LA24  J3-30 | 3 | | 2 | LAR24 |
| LA25  J3-29 | 4 | | 5 | LAR25 |
| LA26  J3-32 | 7 | | 6 | LAR26 |
| LA27  J3-33 | 8 | | 9 | LAR27 |
| LA28  J3-36 | 13 | | 12 | LAR28 |
| LA29  J3-35 | 14 | | 15 | LAR29 |
| LA30  J3-38 | 17 | | 16 | LAR30 |
| LA31  J3-39 | 18 | | 19 | LAR31 |

*FIG. 85A*

FIG 86A

FIG. 86

0039227

FIG. 86A

DRV LAR + TRAN

FIG. 87

81301836·3

0039227

216 / 427

FIG. 88

FIG. 88A

FIG. 89

FIG. 90

220 / 427

FIG. 91

FIG. 91A

222 / 427

*FIG. 91B*

FIG. 92

223 / 427

00392227

FIG. 92A

224 / 427

0039227

FIG. 92B

226 / 427

FIG. 92C

FIG. 92D

FIG. 93

FIG. 93A

FIG. 93B

FIG. 93C

FIG. 93D

FIG. 93E

FIG. 94

235 / 427

FIG. 94A

FIG. 95

FIG. 96

FIG. 96A

FIG. 96B

FIG. 96C

FIG. 96D

FIG. 97

FIG. 98

FIG. 98A

0039227

FIG. 98B

FIG. 98C

FIG. 98D

FIG. 98E

FIG. 98F

FIG. 98G

250 / 427

0039227

FIG. 99

FIG. 99A

FIG. 100

FIG. 100A

FIG. 100B

FIG. 100C

FIG.101

FIG.102

FIG. 103

259/427

0039227

FIG.104

PHY ICP CLK

PICP  152

$\overline{CPA\ 8-21}$ ——  PHY ICP 8-21

$\overline{ICP\ 22-28}$

$\overline{ICPX\ 28,29,30}$  —— CPA 8-30
$\overline{DRV\ CPA}$

151

$\overline{ICP\ 28,29,30}$

$\overline{M\quad RDY}$  VLD

VLD  INH VLD SV

$\overline{JM\ CLK}$

$\overline{ICN}$

$\overline{IPRST}$

FIG.105

$\overline{ICP\ 27-30}$

ADR 27-30

$\overline{ICPX\ 28-30}$

$\overline{INC\ \ ICP}$

ENB INC  150

$\overline{ICP-LA}$

$\overline{ICP\ 4-23}$  ICP LA  $\overline{LA\ 4-23}$  $\overline{LA\ 24-30}$  $\overline{ICP\ 4-30}$

$\overline{LA\ 4-30}$

SYS CLK  LD

LD ICP

FIG.106

FIG. 107

262/427

0039227

FIG. 107A

FIG. 107B

0039227

FIG 107B

FIG 107B

FIG. 107C

FIG. 108

FIG 109A

FIG. 109

FIG 109

| | | |
|---|---|---|
| CPM16 | A48 | 3 |
| CPM17 | A52 | 4 |
| CPM18 | A54 | 8 |
| CPM19 | A56 | 7 |
| CPM20 | A58 | 18 |
| CPM21 | A60 | 17 |
| CPM22 | A62 | 13 |
| CPM23 | A64 | 14 |

CLK

| | |
|---|---|
| 2 | ID16 |
| 5 | ID17 |
| 9 | ID18 |
| 6 | ID19 |
| 19 | ID20 |
| 16 | ID21 |
| 12 | ID22 |
| 15 | ID23 |

CLK

| | | |
|---|---|---|
| CPM24 | A68 | 3 |
| CPM25 | A70 | 4 |
| CPM26 | A72 | 8 |
| CPM27 | A76 | 7 |
| CPM28 | A78 | 18 |
| CPM29 | A80 | 17 |
| CPM30 | A82 | 13 |
| CPM31 | A84 | 14 |

| | |
|---|---|
| 2 | ID24 |
| 5 | ID25 |
| 9 | ID26 |
| 6 | ID27 |
| 19 | ID28 |
| 16 | ID29 |
| 12 | ID30 |
| 15 | ID31 |

FIG. 109A

FIG. 109C

*FIG. 109B*

FIG. 109C

FIG. 110

0039227

272 / 427

FIG. 111

FIG. 112

FIG. 113

274/427

0039227

0039227

275 / 427

FIG. 113A

FIG. 113B

FIG. 113C

FIG. 114

FIG. 114A

279 / 427

0039227

FIG. 114B

FIG. 115

282/427

FIG. 116A

FIG. 116

FIG 116

FIG. 116A

283 / 427

0039227

FIG. 117

FIG. 118

FIG. 119

FIG. 120

FIG. 120A

289 / 427

XCT

| | | |
|---|---|---|
| CPD16 | 2 | 18 FASA0 |
| CPD17 | 4 | 16 FASA1 |
| CPD18 | 6 | 14 FASA2 |
| CPD19 | 8 | 12 FASA3 |
| CPD20 | 11 | 9 FASA4 |
| CPD21 | 13 | 7 FASA5 |
| CPD22 | 15 | 5 FASA6 |
| CPD23 | 17 | 3 FASA7 |

19

| | | |
|---|---|---|
| CPD24 | 2 | 18 FASA8 |
| CPD25 | 4 | 16 FASA9 |
| CPD26 | 6 | 14 FASA10 |
| CPD27 | 8 | 12 FASA11 |
| CPD28 | 11 | 9 FASA12 |
| CPD29 | 13 | 7 FASA13 |
| CPD30 | 15 | 5 FASA14 |
| CPD31 | 17 | 3 FASA15 |

19

FIG. 121

FIG. 122

FIG. 122A

FIG. 122B

FIG. 122C

FIG. 122D

FIG. 123

FIG. 123A

FIG. 123B

FIG. 123C

FIG. 123D

FIG. 123E

FIG. 124

FIG. 124A

FIG. 124B

FIG. 124C

FIG. 124D

FIG. 124E

FIG. 125

FIG 125A

307 / 427

0039227

FIG. 125A

ECL OPCD

DSCRØ

DISP MUX SEL

+5V

1K

HI-4

IDRA9 — 4 — Ø
IDRA15 — 3 — 1
HI-4 — 2 — 2
IDRB15 — 1 — 3
IDRA11 — 15 — 4
IDRA9 — 14 — 5
IDRC15 — 13 — 6
IDRB15 — 12 — 7
SØ SI S2 — 11 10 9
5
6
STRB
DSP31

IDRA8 — 4 — Ø
IDRA14 — 3 — 1
HI-6 — 2 — 2
IDRB14 — 1 — 3
IDRA10 — 15 — 4
IDRA8 — 14 — 5
IDRC14 — 13 — 6
IDRB14 — 12 — 7
SØ SI S2 — 11 10 9
5
6
STRB
DSP30

ECL OPCD

DSCRØ

DSCRØ — 1
DSCR1 — 13, 10
DSCR2 — 9
8

DISP MUX SEL

16AD
DSCR2 — 9 — 8 — DSCR2

IDRA7 — 4 — Ø
IDRA13 — 3 — 1
HI-4 — 2 — 2
IDRB13 — 1 — 3
IDRA3 — 15 — 4
IDRA7 — 14 — 5
IDRC13 — 13 — 6
IDRB13 — 12 — 7
SØ SI S2 — 11 10 9
5
6
STRB
DSP29

IDRA6 — 4 — Ø
IDRA12 — 3 — 1
HI-4 — 2 — 2
IDRB12 — 1 — 3
IDRA2 — 15 — 4
IDRA6 — 14 — 5
IDRC12 — 13 — 6
IDRB12 — 12 — 7
SØ SI S2 — 11 10 9
5
6
STRB
DSP28

FIG. 126

FIG. 126A

FIG. 126B

FIG. 126C

FIG. 127

314 / 427

FIG. 128

FIG. 129

FIG 129A

FIG. 129A

316/427

0039227

317 / 427

DRV DISP

| DISP0 | 2 |
| DISP1 | 4 |
| DISP2 | 6 |
| DISP3 | 8 |
| DISP4 | 11 |
| DISP5 | 13 |
| DISP6 | 15 |
| DISP7 | 17 |

| 18 | J1-28 | CPD0 |
| 16 | J1-21 | CPD1 |
| 14 | J1-24 | CPD2 |
| 12 | J1-23 | CPD3 |
| 9 | J1-26 | CPD4 |
| 7 | J1-27 | CPD5 |
| 5 | J1-30 | CPD6 |
| 3 | J1-29 | CPD7 |

| DISP8 | 17 |
| DISP9 | 15 |
| DISP10 | 13 |
| DISP11 | 11 |
| DISP12 | 2 |
| DISP13 | 4 |
| DISP14 | 6 |
| DISP15 | 8 |

| 3 | J1-32 | CPD8 |
| 5 | J1-33 | CPD9 |
| 7 | J1-36 | CPD10 |
| 9 | J1-35 | CPD11 |
| 18 | J1-38 | CPD12 |
| 16 | J1-39 | CPD13 |
| 14 | J2-6 | CPD14 |
| 12 | J2-5 | CPD15 |

FIG 130A

FIG. 130

*FIG. 130A*

FIG 131A

FIG. 131

FIG. 131A

FIG. 131B

FIG. 132

FIG 132

FIG 132

| | | |
|---|---|---|
| PC19 | 3 | A0 |
| PC18 | 1 | A1 |
| PC17 | 19 | A2 |
| PC16 | 17 | A3 |

S0 S1 S2

| | | |
|---|---|---|
| F0 | 8 | NPC19 |
| F1 | 9 | NPC18 |
| F2 | 11 | NPC17 |
| F3 | 12 | NPC16 |

| | | |
|---|---|---|
| INCR19 | 4 | B0 |
| INCR18 | 2 | B1 |
| INCR17 | 18 | B2 |
| INCR16 | 16 | B3 |

P̄ 14

Ḡ 13

15

3

15A0

11 → 10

4

ENB DISP

L0 — 5

3

EX L1 — 2

6

13

C

| | | |
|---|---|---|
| 0 | 4 | P0 |
| GEN0 | 3 | G0 |
| 1 | 2 | P1 |
| GEN1 | 1 | G1 |
| | 15 | P2 |
| | 14 | G2 |
| | 6 | P3 |
| | 5 | G3 |

G 10

Z 9

Y 11

X 12

7

P

7

FIG. 132A

FIG. 132B

FIG 132C

FIG. 132C

325/427

0039227

FIG. 133

327 / 427

FIG. 133A

FIG. 134

329 / 427

0039227

FIG. 135

330 / 427

**FIG. 135A**

FIG. 135B

FIG. 135C

332/427

0039227

FIG. 136

FIG 136A

333 / 427

0039227

FIG. 136A

FIG 136A

FIG 136A

$\overline{ICPX28}$ — 6, 7 — 5 — B62 — $\overline{CPA28}$

$\overline{ICPX29}$ — 6, 7 — 5 — B63 — $\overline{CPA29}$

$\overline{ICPX30}$ — 1, 2 — 3 — B64 — $\overline{CPA30}$

$\overline{PHY\ ICP14}$ — 6, 7 — 5 — B35 — $\overline{CPA14}$

$\overline{PHY\ ICP15}$ — 1, 2 — 3 — B37 — $\overline{CPA15}$

$\overline{PHY\ ICP16}$ — 1, 2 — 3 — B41 — $\overline{CPA16}$

$\overline{PHY\ ICP17}$ — 6, 7 — 5 — B43 — $\overline{CPA17}$

$\overline{PHY\ ICP18}$ — 6, 7 — 5 — B45 — $\overline{CPA18}$

$\overline{PHY\ ICP19}$ — 6, 7 — 5 — B47 — $\overline{CPA19}$

$\overline{PHY\ ICP20}$ — 1, 2 — 3 — B49 — $\overline{CPA20}$

$\overline{PHY\ ICP21}$ — 1, 2 — 3 — B51 — $\overline{CPA21}$

FIG. 136B

335/427

0039227

HI-3

SYSCLKA

ENB CPM

S
CLK    Q    CPM RG CLK
D
R    $\overline{Q}$    $\overline{CPM\ RG\ CLK}$

CP CLK

INTR REQ    A83
DISI
INH INTR    B38
INST
INTDS
LAC0    J1-18
LAC1    J1-17

B77    $\overline{ION}$
$\overline{INH\ SNG\ INSTR}$

IP-LA    44-0    B56    INTR PND

ICMOD
IPRS1

FIG. 136C

*FIG. 136D*

FIG.137

FIG.138

FIG. 139

341 / 427

FIG. 139A

FIG. 139B

FIG. 139C

0039227

344 / 427

FIG 139C

FIG. 139D

FIG. 140

FIG. 141

FIG. 141A

FIG. 141B

FIG. 142

FIG 143A

FIG. 143

351 / 427

FIG. 143A

FIG. 144

0039227

(MPC + 1)

FIG. 145

FIG. 146

355 / 427

FIG. 146A

FIG. 146B

FIG. 146C

FIG. 146D

FIG. 146E

360 / 427

FIG. 146F

FIG. 146.1

FIG 146.1A

362 / 427

FIG. 146.1A

FIG. 146.1B

364 / 427

FIG. 146.1C

FIG. 146.1D

FIG. 146.1E

FIG. 146.1F

FIG. 146.2

369 / 427

FIG. 146.2A

FIG. 146.2B

FIG. 146.2C

372 / 427

FIG. 146.2D

FIG. 146.2E

FIG. 146.2F

FIG. 146.3

376 / 427

FIG. 146.3A

FIG. 146.3B

FIG. 146.3C

FIG. 146.3D

FIG. 146.3E

FIG. 146.3F

FIG. 146.4

FIG 146.4A

FIG 146.4B

FIG 146.4

FIG. 146.4A

FIG. 146.4B

FIG. 146.4C

FIG. 146.4D

FIG. 146.4E

FIG. 146.5

FIG. 146.5A

FIG. 146.5B

391 / 427

FIG 146.5B

FIG. 146.5C

FIG. 146.5D

FIG. 146.5E

FIG. 146.6

FIG 146.6

RXD6 — 11 D/I
1
2
3
4
5
6
17
16
15
14
13
12

D/O 7 — 30

CS
10    8

RWE3

19  1

RA08 — 2
RA09 — 17
RA10 — 4
RA11 — 15
RA12 — 6
RA13 — 13
RA14 — 8
RA15 — 11

18
3
16
5
14
7
12
9

FIG 146.6C

FIG. 146.6A

FIG. 146.6B

FIG. 146.6C

FIG. 146.6D

FIG. 146.6E

FIG. 146.6F

FIG. 146.7

402 / 427

FIG. 146.7A

0039227

403 / 427

FIG. 146.7B

404 / 427

FIG 146.7B

RX07 — 11 D/I

1
2
3
4
5
6
17
16
15
14
13
12

D/O 7 — 63

CS

10 B

RWE7 —

FIG 146.7A

FIG 146.7E

*FIG. 146.7C*

FIG. 146.7D

406 / 427

FIG. 146.7E

FIG. 146.7F

FIG. 147

FIG. 147A

*FIG. 147B*

FIG. 147C

0039227

412 / 427

FIG. 147D

FIG 148A

FIG. 148

414 / 427

FIG. 148A

FIG. 149

416 / 427

FIG. 149A

417 / 427

CP CLK2

11

CLK  OE

NAC00  2      14  AA04
NAC01  3      15  AA05
NAC02  4      16  CPD    0 SEL
NAC08  5      17  CPD SEL
NAC09  6      12
RA04   7      13
RA05   8      18
CPDS0  9      19

CPDS1
CPDS2
CPDS3
CPDS4

CP CLK2

11

CLK  OE

NAC10  2      19  AA06
NAC11  3      18  AA07
NAC12  4      17  AA08
NAC13  5      16  AA09
NAC14  6      15  AA10
NAC15  7      14  AA11
NAC16  8      13  AA12
NAC17  9      12  AA13

FIG. 149B

418 / 427

FIG. 150

FIG. 150A

FIG. 151

FIG. 152

FIG. 152A

FIG. 153

FIG. 153A

425 / 427

FIG.154

FIG.155

427 / 427

FIG.156